(19) **Europäisches Patentamt / European Patent Office / Office européen des brevets**

(11) **EP 4 745 613 A1**

(12) **EUROPEAN PATENT APPLICATION**

(43) Date of publication:
20.05.2026 Bulletin 2026/21

(21) Application number: 25216473.6

(22) Date of filing: 17.11.2025

(51) International Patent Classification (IPC):
*G01S 7/00* (2006.01)    *G01S 13/76* (2006.01)
*G01S 13/82* (2006.01)

(52) Cooperative Patent Classification (CPC):
G01S 7/006; G01S 13/765; G01S 13/825

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 15.11.2024 US 202463721406 P
22.12.2024 US 202418991629
22.12.2024 US 202418991634
22.12.2024 US 202418991632
28.12.2024 US 202419004301
02.05.2025 US 202563799327 P
06.07.2025 US 202519260558
20.10.2025 US 202563902471 P
15.11.2025 US 202519390548
16.11.2025 US 202519390664

(71) Applicants:
- **Zhu, Guozhen**
 Greenbelt, MD 20770 (US)
- **Hu, Yuqian**
 Sunnyvale CA 94085 (US)
- **Wang, Beibei**
 McLean, VA 22101 (US)
- **Jayaweera, Sakila**
 Atlanta, GA 30318 (US)
- **Ozturk, Muhammed Zahid**
 University Park, MD 20782 (US)
- **Wang, Wei-Hsiang**
 Winterville, NC 28590 (US)
- **Gao, Weihang**
 Rockville, MD 20850 (US)
- **Zhang, Jiaxuan**
 Rockville, MD 20850 (US)
- **Liu, K.J. Ray**
 Potomac, MD 20854 (US)
- **Au, Oscar Chi-Lim**
 San Jose, CA 95136 (US)
- **ORIGIN RESEARCH WIRELESS, INC.**
 Rockville, MD 20852 (US)
- **Regani, Sai Deepika**
 Hyattsville, MD 20783 (US)

- **Wu, Chenshu**
 Hong Kong (HK)
- **Lai, Hung-Quoc Duc**
 Parkville, MD 21234 (US)
- **Chen, Chun-I**
 Brookeville, MD 20833 (US)
- **Claffey, David**
 Somerville, MA 02143 (US)
- **Gwin, Joseph**
 Concord, MA 01742 (US)
- **Xi, Simon**
 Bethesda, MD 20817 (US)
- **Bugos, Dan**
 Washington, DC 20010 (US)
- **Stoller, Mike**
 Silver Spring, MD 20910 (US)

(72) Inventors:
- **ZHU, Guozhen**
 Rockville, 20852 (US)
- **HU, Yuqian**
 Sunnyvale, 94085 (US)
- **WANG, Beibei**
 McLean, 22101 (US)
- **OZTURK, Muhammed Zahid**
 Rockville, 20852 (US)
- **JAYAWEERA, Sakila**
 Atlanta, 30318 (US)
- **WANG, Wei-Hsiang**
 Winterville, 28590 (US)
- **GAO, Weihang**
 Rockville, 20850 (US)
- **ZHANG, Jiaxuan**
 Rockville, 20850 (US)
- **LIU, K.J. Ray**
 Potomac, 20854 (US)
- **CHI-LIM AU, Oscar**
 Rockville, 20852 (US)

(74) Representative: **Boult Wade Tennant LLP**
**Salisbury Square House**
**8 Salisbury Square**
**London EC4Y 8AP (GB)**

**(Cont. next page)**

(54)   **WIRELESS SENSING USNIG A FOUNDATION MODEL**

(57)   Examples for wireless sensing, tracking, imaging and occupancy detection are described. In one example, a described method comprises: obtaining channel information (CI) data generated based on at least one wireless channel; generating a training dataset based on the CI data, wherein the training dataset comprises: a plurality of CI pairs, original CI data and a mask; training a foundation model using the training dataset based on an aggregate of a contrastive loss function and a reconstruction loss function; training a plurality of task-specific models; and performing a plurality of wireless sensing tasks based on the foundation model and the plurality of task-specific models. Each of the plurality of task-specific models is used to perform a corresponding one of the plurality of wireless sensing tasks together with the foundation model.

**Description**

**TECHNICAL FIELD**

The present teaching generally relates to wireless sensing, tracking, imaging and occupancy detection. More specifically, the present teaching relates to: wireless sensing based on a foundation model; wireless sensing in network of networks with coded addresses; wireless sensing using measurement enhancement, classifier probing and refinement; wireless sensing for in-vehicle child presence detection; wireless human imaging; passive tracking using wireless signals; and wireless based occupancy detection and activity monitoring.

**BACKGROUND**

With the proliferation of Internet of Things (IoT) devices, indoor intelligent applications such as security surveillance, intruder detection, occupancy monitoring, and activity recognition have gained significant attention. However, these applications frequently suffer from an elevated rate of false alarms due to the inability to recognize human and non-human subjects, such as pets, robotic vacuum cleaners, and electrical appliances. This ability to differentiate is essential, especially for applications related to security, health monitoring, automation and energy management. Misidentification can lead to user frustration, erode trust and hamper the practical and widespread adoption of these technologies. Given the prevalence of pets, robotic vacuum cleaners, and electrical appliances, especially in residential environments, it is crucial to develop a reliable system that can accurately recognize human and non-human subjects.

The accurate differentiation of human and various nonhuman movements still remains a challenge nowadays. For instance, camera-based methods and thermal-sensor based approaches can only detect moving subjects within the Line-Of-Sight (LOS). Additionally, camera-based systems raise privacy issues. Strategies leveraging radar to differentiate pets from humans based on vital signs expect pets to remain stationary, which is unrealistic. In addition, these methods have strict device placement requirements, often limited to LOS, and presume the subject is moving within a predetermined area.

With the development of IoT applications, billions of household appliances, phones, smart devices, security systems, environment sensors, vehicles and buildings, and other radio-connected devices will transmit data and communicate with each other or people, and everything will be able to be measured and tracked all the time. Among the various approaches to measure what is happening in the surrounding environment, wireless sensing has received an increasing attention in recent years because of the ubiquitous deployment of wireless radio devices. In addition, human activities affect wireless signal propagations, therefore understanding and analyzing the way how wireless signals react to human activities can reveal rich information about the activities. As more bandwidth becomes available in the new generation of wireless systems, wireless sensing will make many smart IoT applications only imagined today possible in the near future. That is because when the bandwidth increases, one can see many more multipaths, in a rich-scattering environment such as in indoors or metropolitan area, which can be treated as hundreds of virtual antennas/sensors. Because there may be many IoT devices available for wireless sensing, an efficient and effective method for making use multiple devices for wireless sensing is desirable.

Object imaging (e.g. objects such as human, animal, pet, furniture, machine, vehicle, etc.) using radio frequency (RF) is an emerging area of research fueled by the increasing availability of RF-radar wireless devices. Even though existing works achieve object reconstruction (e.g. human body reconstruction for pose estimation purposes), object (e.g. human) identification with imaging has not been feasible due to its limited resolution.

The rapid growth of IoT devices has driven the development of indoor tracking systems. Existing indoor tracking systems mostly employ vision, acoustics, infrared or radar technologies. However, these technologies have limitations that can hinder their effectiveness and scalability. Vision-based systems can invade privacy and fail in poor lighting conditions, while acoustic systems are often prone to background noise. Infrared systems require LOS to function properly, while radar-based systems require expensive specialized hardware and cover limited areas.

WiFi's affordability and widespread availability make it a popular choice for indoor tracking research and applications, due to its cost-effectiveness and ubiquity. Many WiFi-based indoor tracking systems require specific arrangements of the devices and the complexity of these systems are very high. Some systems require extensive training. In addition, most systems require the tracking target to carry a dedicated device during tracking, which may not be practical or convenient for everyday use.

Occupancy detection, e.g. human in-house occupancy detection, has become an essential technology in modern society aimed at improving energy efficiency and occupant comfort. This technology enables the control of heating, ventilation, and air conditioning (HVAC) systems, lighting, and other smart energy and resource optimization applications, thereby reducing energy consumption and costs. In addition, occupancy detection can enhance security and safety measures by identifying unauthorized presence. Conventional approaches for occupancy detection, such as cameras, PIR sensors, RFID sensors, and motion sensors, are often not cost-effective due to the need for additional installation. They are also privacy-invasive and suffer from low accuracy.

With the ubiquitous availability of IoT smart devices, using WiFi for occupancy detection has become a popular solution due to its convenience, cost-effectiveness, privacy- preserving capabilities, and extensive coverage. However, existing WiFi sensing applications cannot identify static humans, such as people in sleep, as detection is only based on motion characteristics. Even though breathing detection in the absence of motion can be used to detect static human targets, detecting breathing requires high-quality CSI, usually extracted from 5 GHz devices with at least 40 MHz bandwidth. However, many IoT devices do not provide the necessary CSI quality for accurate breathing detection. Moreover, model-based WiFi sensing approaches based on interpretable statistics such as motion and breathing cannot work well in increasingly complex environments due to other motion sources creating noise and interference.

## SUMMARY

The present teaching generally relates to wireless sensing, tracking, imaging and occupancy detection. More specifically, the present teaching relates to: wireless sensing based on a foundation model; wireless sensing in network of networks with coded addresses; wireless sensing using measurement enhancement, classifier probing and refinement; wireless sensing for in-vehicle child presence detection; wireless human imaging; passive tracking using wireless signals; and wireless based occupancy detection and activity monitoring.

In one embodiment, a method for wireless sensing is described. The method comprises: obtaining channel information (CI) data generated based on at least one wireless channel; generating a training dataset based on the CI data comprising multiple pairs of CI samples and associated masks; training a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function; training a plurality of task-specific models; and performing a plurality of wireless sensing tasks based on the foundation model and the plurality of task-specific models, wherein each of the plurality of task-specific models is used to perform a corresponding one of the plurality of wireless sensing tasks together with the foundation model.

In another embodiment, a device for wireless sensing is described. The device comprises: at least one processor; and at least one memory storing instructions, which when executed, cause the at least one processor to perform operations comprising: obtaining channel information (CI) data generated based on at least one wireless channel, generating a training dataset based on the CI data, wherein the training dataset comprises: a plurality of CI pairs, original CI data and a mask, training a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function, training a plurality of task-specific models, and performing a plurality of wireless sensing tasks based on the foundation model and the plurality of task-specific models, wherein each of the plurality of task-specific models is used to perform a corresponding one of the plurality of wireless sensing tasks together with the foundation model.

In yet another embodiment, a system for wireless sensing is described. The system comprises: at least one local device and a cloud server. The at least one local device is configured to: obtain channel information (CI) data generated based on at least one wireless channel; and generate a training dataset based on the CI data, wherein the training dataset comprises: a plurality of CI pairs, original CI data and a mask. The cloud server is configured to: train a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function, and train a plurality of task-specific models. The at least one local device and the cloud server are further configured to perform a plurality of wireless sensing tasks based on the foundation model and the plurality of task-specific models. Each of the plurality of task-specific models is used to perform a corresponding one of the plurality of wireless sensing tasks together with the foundation model.

In a different embodiment, a method for wireless sensing using coded addresses to identify originating devices is described. The method comprises: associating a plurality of Type1 devices in a venue with a Type2 device in the venue, wherein: each of the plurality of Type1 devices is a heterogeneous wireless device having a first type, the Type2 device is a heterogeneous wireless device having a second type different from the first type, the Type2 device has a plurality of coded addresses each of which is associated with a respective Type1 device of the plurality of Type1 devices; transmitting, by the Type2 device, a plurality of time series of wireless trigger signals through a wireless channel in the venue to the plurality of Type1 devices to trigger wireless sounding, wherein: each respective time series of wireless trigger signals is transmitted to a respective Type1 device with a coded address of the Type2 device associated with the respective Type1 device, the coded address is embedded as a source address in each wireless trigger signal of the respective time series of wireless trigger signals; transmitting, by each Type1 device in response to each respective wireless trigger signal, a respective wireless sounding signal to the Type2 device with a respective associated coded address of the Type2 device, wherein the respective associated coded address is embedded as a destination address in the respective wireless sounding signal; receiving, by the Type2 device, a plurality of wireless sounding signals from the plurality of Type1 devices addressed to any of the coded addresses of the Type2 device; for each received wireless sounding signal: obtaining, by a processor of the Type2 device, a respective channel information (CI) of the wireless channel in the venue based on the received wireless sounding signal, comparing, by the processor, a received coded address of the Type2 device embedded as a destination address in the received wireless sounding signal with the plurality of coded addresses stored in a database, and identifying, by the processor, a respective Type1 device, whose associated stored coded address of the Type2 device matching the received coded address, as an originating device of the received wireless sounding signal and the respective CI; assembling, by the processor, a plurality of time series of CI (TSCI) associated with the plurality of Type1 devices, wherein each TSCI associated with a respective Type1 device comprises all CI originated from the respective Type1 device; and performing, by the processor, a wireless sensing task based on the plurality of TSCI associated with the plurality of Type1 devices.

In another embodiment, a wireless device in a venue is described. The wireless device comprises: a data storage storing a plurality of coded addresses of the wireless device, a transmitter, a receiver, and a processor communicatively coupled to the data storage, the transmitter and the receiver. The wireless device is associated a plurality of Type1 devices in the venue. Each of the plurality of Type1 devices is a heterogeneous wireless device having a first type. The wireless device is a Type2 device having a second type different from the first type. Each of the plurality of coded addresses is associated with a respective Type1 device of the plurality of Type1 devices. The transmitter is configured to transmit a plurality of time series of wireless trigger signals through a wireless channel in the venue to the plurality of Type1 devices to trigger wireless sounding. Each respective time series of wireless trigger signals is transmitted to a respective Type1 device with a coded address of the Type2 device associated with the respective Type1 device. The coded address is embedded as a source address in each wireless trigger signal of the respective time series of wireless trigger signals. The receiver is configured to receive a plurality of wireless sounding signals from the plurality of Type1 devices addressed to any of the coded addresses of the Type2 device. A respective wireless sounding signal is received, from each Type1 device in response to each respective wireless trigger signal, with a respective associated coded address of the Type2 device. The respective associated coded address is embedded as a destination address in the respective wireless sounding signal. The processor is configured to: for each received wireless sounding signal: obtain a respective channel information (CI) of the wireless channel in the venue based on the received wireless sounding signal, compare a received coded address of the Type2 device embedded as a destination address in the received wireless sounding signal with the plurality of coded addresses stored in the data storage, and identify a respective Type1 device, whose associated stored coded address of the Type2 device matching the received coded address, as an originating device of the received wireless sounding signal and the respective CI; assemble a plurality of time series of CI (TSCI) associated with the plurality of Type1 devices, wherein each TSCI associated with a respective Type1 device comprises all CI originated from the respective Type1 device; and perform a wireless sensing task based on the plurality of TSCI associated with the plurality of Type1 devices.

In yet another embodiment, a system for wireless sensing is described. The system comprises: a plurality of Type1 devices in a venue, wherein each of the plurality of Type1 devices is a heterogeneous wireless device having a first type; and a Type2 device in the venue. The Type2 device is a heterogeneous wireless device having a second type different from the first type. The Type2 device has a plurality of coded addresses each of which is associated with a respective Type1 device of the plurality of Type1 devices. The Type2 device is configured to transmit a plurality of time series of wireless trigger signals through a wireless channel in the venue to the plurality of Type1 devices to trigger wireless sounding. Each respective time series of wireless trigger signals is transmitted to a respective Type1 device with a coded address of the Type2 device associated with the respective Type1 device. The coded address is embedded as a source address in each wireless trigger signal of the respective time series of wireless trigger signals. Each Type1 device is configured to transmit, in response to each respective wireless trigger signal, a respective wireless sounding signal to the Type2 device with a respective associated coded address of the Type2 device. The respective associated coded address is embedded as a destination address in the respective wireless sounding signal. The Type2 device is configured to: receive a plurality of wireless sounding signals from the plurality of Type1 devices addressed to any of the coded addresses of the Type2 device; for each received wireless sounding signal: obtain a respective channel information (CI) of the wireless channel in the venue based on the received wireless sounding signal, compare a received coded address of the Type2 device embedded as a destination address in the received wireless sounding signal with the plurality of coded addresses stored in a database, and identify a respective Type1 device, whose associated stored coded address of the Type2 device matching the received coded address, as an originating device of the received wireless sounding signal and the respective CI;

assemble a plurality of time series of CI (TSCI) associated with the plurality of Type1 devices, wherein each TSCI associated with a respective Type1 device comprises all CI originated from the respective Type1 device; and perform a wireless sensing task based on the plurality of TSCI associated with the plurality of Type1 devices.

In a different embodiment, a method for wireless sensing with transformed component selection is described. The method comprises: receiving, by a receiver, a wireless signal transmitted by a transmitter through a wireless multipath channel of a venue, wherein the received wireless signal differs from the transmitted wireless signal due to the wireless multipath channel and a motion of an object in the venue; obtaining a time series of channel information (TSCI) of the wireless multipath channel based on the received wireless signal, wherein each channel information (CI) comprises N1 CI components (CIC); for each respective CI having N1 CIC of the TSCI, computing a respective enhanced CI (ECI) having N2 CIC by: computing a transformation of the N1 CIC of the respective CI in a first domain to a respective transformed CI (TCI) with N2 transformed CIC (TCIC) in a second domain, wherein N1<=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation; computing a motion information (MI) based on the ECI of the TSCI; and performing a sensing task based on the MI.

In another embodiment, a wireless device in a venue is described. The wireless device comprises: a receiver configured to receive a wireless signal transmitted by a transmitting device through a wireless multipath channel of the venue, wherein the received wireless signal differs from the transmitted wireless signal due to the wireless multipath channel and a motion of an object in the venue; a memory; and a processor communicatively coupled to the memory. The processor is configured to: obtain a time series of channel information (TSCI) of the wireless multipath channel based on the received wireless signal, wherein each channel information (CI) comprises N1 CI components (CIC); for each respective CI having N1 CIC of the TSCI, compute a respective enhanced CI (ECI) having N2 CIC by: computing a transformation of the N1 CIC of the respective CI in a first domain to a respective transformed CI (TCI) with N2 transformed CIC (TCIC) in a second domain, wherein N1 <=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation; compute a motion information (MI) based on the ECI of the TSCI; and perform a sensing task based on the MI.

In yet another embodiment, a system for wireless sensing is described. The system comprises: a transmitter configured to transmit a wireless signal through a wireless multipath channel of a venue; and a receiver. The receiver is configured to: receive the wireless signal through the wireless multipath channel of the venue, wherein the received wireless signal differs from the transmitted wireless signal due to the wireless multipath channel and a motion of an object in the venue; obtain a time series of channel information (TSCI) of the wireless multipath channel based on the received wireless signal, wherein each channel information (CI) comprises N1 CI components (CIC); for each respective CI having N1 CIC of the TSCI, compute a respective enhanced CI (ECI) having N2 CIC by: computing a transformation of the N1 CIC of the respective CI in a first domain to a respective transformed CI (TCI) with N2 transformed CIC (TCIC) in a second domain, wherein N1 <=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation; compute a motion information (MI) based on the ECI of the TSCI, and perform a sensing task based on the MI.

In a different embodiment, a method performed by a system for wireless sensing with classifier probing and refinement is described. The method comprises: in a probing phase of the system: obtaining a plurality of raw measurement data by a sensing device of the system, processing the plurality of raw measurement data by a processor of the system to construct a plurality of input data for a classifier, performing a classification by the processor using the classifier by inputting each of the plurality of input data to the classifier, computing a plurality of output analytics by the classifier based on the plurality of input data, each output analytics computed by the classifier based on a respective input data, mapping the plurality of output analytics to a plurality of mapped outcome, each output analytics mapped to a respective mapped outcome, identifying at least one reference input data each associated with a reference output analytics and a reference mapped outcome, each reference input data being one of the plurality of input data for the classifier for which a respective reference outcome is available and is different from the reference mapped outcome, and for each reference input data for the classifier: constructing a respective plurality of perturbed input data for the classifier by perturbing the reference input data, each perturbed input data constructed based on a respective perturbation of the reference input data, performing the classification using the classifier by inputting each of the plurality of perturbed input data to the classifier, computing a respective plurality of perturbed output analytics by the classifier based on the plurality of perturbed input data, each perturbed output analytics computed by the classifier based on a respective perturbed input data, mapping the plurality of perturbed output analytics to a plurality of perturbed mapped outcome, each perturbed output analytics mapped to a respective perturbed mapped outcome, comparing each perturbed mapped outcome with the reference outcome associated with the reference input data which is different from the reference mapped outcome, and when at least one perturbed mapped outcome deviates from the reference mapped outcome such that it is the same as the reference outcome, selecting at least one selected perturbed input data each being one of the respective plurality of perturbed input data associated with one of the at least one perturbed mapped outcome as selected perturbed input data for re-training the classifier; and in a re-training phase of the system: re-training the classifier based on each of the at least one selected perturbed input data and the associated reference outcome.

In another embodiment, a device for wireless sensing with classifier probing and refinement is described. The device comprises: a receiver configured to obtain a plurality of raw measurement data in a probing phase of the device; and a classifier comprising a memory and a processor. The processor is configured in the probing phase of the device to: process the plurality of raw measurement data to construct a plurality of input data, perform a classification using each of the plurality of input data as input to the classifier, compute a plurality of output analytics based on the plurality of input data, each output analytics computed based on a respective input data, map the plurality of output analytics to a plurality of mapped outcome, each output analytics mapped to a respective mapped outcome, identify at least one reference input data each associated with a reference output analytics and a reference mapped outcome, each reference input data being one of the plurality of input data for the classifier for which a respective reference outcome is available and is different from the reference mapped outcome, and for each reference input data for the classifier: construct a respective plurality of perturbed input data for the classifier by perturbing the reference input data, each perturbed input data constructed based on a respective perturbation of the reference input data, perform the classification using each of the plurality of perturbed input data as input to the classifier, compute a respective plurality of perturbed output analytics based on the plurality of perturbed input data, each perturbed output analytics computed based on a respective perturbed input data, map the plurality of perturbed output analytics to a plurality of perturbed mapped outcome, each perturbed output analytics mapped to a respective perturbed mapped outcome, compare each perturbed mapped outcome with the reference outcome associated with the reference input data which is different from the reference mapped outcome, and when at least one perturbed mapped outcome deviates from the reference mapped outcome such that it is the same as the reference outcome, select at least one selected perturbed input data each being one of the respective plurality of perturbed input data associated with one of the at least one perturbed mapped outcome as selected perturbed input data for re-training the classifier. The processor is configured to re-train the classifier based on each of the at least one selected perturbed input data and the associated reference outcome in a re-training phase of the device.

In yet another embodiment, a system for wireless sensing with classifier probing and refinement is described. The system comprises: a sensing device configured to obtain a plurality of raw measurement data in a probing phase of the system; and a classifier comprising a memory and a processor. The processor is configured in the probing phase of the system to: process the plurality of raw measurement data to construct a plurality of input data, perform a classification using each of the plurality of input data as input to the classifier, compute a plurality of output analytics based on the plurality of input data, each output analytics computed based on a respective input data, map the plurality of output analytics to a plurality of mapped outcome, each output analytics mapped to a respective mapped outcome, identify at least one reference input data each associated with a reference output analytics and a reference mapped outcome, each reference input data being one of the plurality of input data for the classifier for which a respective reference outcome is available and is different from the reference mapped outcome, and for each reference input data for the classifier: construct a respective plurality of perturbed input data for the classifier by perturbing the reference input data, each perturbed input data constructed based on a respective perturbation of the reference input data, perform the classification using each of the plurality of perturbed input data as input to the classifier, compute a respective plurality of perturbed output analytics based on the plurality of perturbed input data, each perturbed output analytics computed based on a respective perturbed input data, map the plurality of perturbed output analytics to a plurality of perturbed mapped outcome, each perturbed output analytics mapped to a respective perturbed mapped outcome, compare each perturbed mapped outcome with the reference outcome associated with the reference input data which is different from the reference mapped outcome, and when at least one perturbed mapped outcome deviates from the reference mapped outcome such that it is the same as the reference outcome, select at least one selected perturbed input data each being one of the respective plurality of perturbed input data associated with one of the at least one perturbed mapped outcome as selected perturbed input data for re-training the classifier. The processor is configured to re-train the classifier based on each of the at least one selected perturbed input data and the associated reference outcome in a re-training phase of the system.

In one embodiment, a method for in-vehicle child presence detection is described. The method comprises: transmitting a wireless signal by a transmitting device through a wireless channel in a vehicle; receiving the wireless signal by a receiving device in the vehicle, wherein the received wireless signal differs from the transmitted wireless signal due to the wireless channel and a motion of a user in the vehicle; obtaining a time series of channel information (TSCI) of the wireless channel based on the received wireless signal; computing a motion statistics (MS) based on N5 channel information (CI) of the TSCI in a time period; detecting the motion of the user in the time period by comparing the motion statistics with a first threshold, wherein the motion of the user is detected when the motion statistics exceed the first threshold; for each of N9 sliding time windows in the time period, computing a respective 1-dimensional (1D) transform of CI of the TSCI in the sliding time window associated with a respective time stamp; constructing a 2-dimensional (2D) transform matrix by assembling and concatenating the N9 1D transforms as columns of the 2D transform matrix in an increasing order of the associated time stamps; detecting a number of horizontal streaks of the 2D transform matrix; detecting a breathing motion of the user in the time period based on the number of detected horizontal streaks of the 2D transform matrix and an associated criterion; computing an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; computing a combined CS (CCS) as a first aggregate of the oscillation CS, the DTW CS and the peak CS; computing a final confidence score (FCS) as a moving second aggregate of the CCS and a number of temporally adjacent CCS associated with adjacent time periods of the time period; rejecting any detection of the breathing motion in the time period when the FCS is less than a second threshold; detecting a presence of the user in the time period when: (a) the motion of the user is detected or (b) the breathing motion of the user is detected and not rejected; and when the presence of the user is detected, determining whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

In another embodiment, a device for in-vehicle child presence detection is described. The device comprises: a receiver configured to receive a wireless signal transmitted by a transmitter through a wireless channel in a vehicle, wherein the received wireless signal differs from the transmitted wireless signal due to the wireless channel and a motion of a user in the vehicle; and a processor. The processor is configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

In yet another embodiment, a system for in-vehicle child presence detection is described. The system comprises: a transmitting device configured to transmit a wireless signal through a wireless channel in a vehicle; a receiving device configured to receive the wireless signal, wherein the received wireless signal differs from the transmitted wireless signal due to the wireless channel and a motion of a user in the vehicle; and a processor. The processor is configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

In still another embodiment, a vehicle is described. The vehicle comprises: a transmitting device configured to transmit a wireless signal through a wireless channel in the vehicle; a receiving device configured to receive the wireless signal, wherein the received wireless signal differs from the transmitted wireless signal due to the wireless channel and a motion of a user in the vehicle; and a processor. The processor is configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

In one embodiment, a method for encoder-decoder-based high resolution imaging is described. The method comprises: assembling a k1-dimensional (k1-D) imaging matrix by a processor based on arranging and concatenating a plurality of k2-dimensional (k2-D) input imaging matrices; encoding the k1-D imaging matrix by an encoder, which is a k1-D encoding neural network, to generate a (k1+k3)-D first intermediate matrix; generating a (k2+k3)-D second intermediate matrix based on the (k1+k3)-D first intermediate matrix; and decoding the (k2+k3)-D second intermediate matrix by a decoder, which is a k2-D decoding neural network, to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

In another embodiment, a device for encoder-decoder-based high resolution imaging is described. The device comprises: a processor; and a memory storing instructions, which when executed, cause the processor to perform operations comprising: assembling a k1-dimensional (k1-D) imaging matrix by arranging and concatenating a plurality of k2-dimensional (k2-D) input imaging matrices, encoding the k1-D imaging matrix using an encoder, which is a k1-D encoding neural network, to generate a (k1+k3)-D first intermediate matrix, generating a (k2+k3)-D second intermediate matrix based on the (k1+k3)-D first intermediate matrix, and decoding the (k2+k3)-D second intermediate matrix using a decoder, which is a k2-D decoding neural network, to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

In yet another embodiment, a system for encoder-decoder-based high resolution imaging is described. The system comprises: a processor configured to assemble a k1-dimensional (k1-D) imaging matrix by arranging and concatenating a plurality of k2-dimensional (k2-D) input imaging matrices; an encoder, which is a k1-D encoding neural network, configured to encode the k1-D imaging matrix to generate a (k1+k3)-D first intermediate matrix, wherein the processor is further configured to generate a (k2+k3)-D second intermediate matrix based on the (k1+k3)-D first intermediate matrix; and a decoder, which is a k2-D decoding neural network, configured to decode the (k2+k3)-D second intermediate matrix to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

In one embodiment, a method for wireless tracking is described. The method comprises: transmitting, by at least one transmitter, a wireless signal through a wireless channel of a venue; receiving, by a receiver, the wireless signal through the wireless channel of the venue, wherein the received wireless signal differs from the transmitted wireless signal due to the wireless channel and a motion of an object in the venue, wherein neither the at least one transmitter nor the receiver moves with the object; obtaining a time series of channel information (TSCI) of the wireless channel in a time window, wherein the TSCI is generated based on the received wireless signal; generating a plurality of features based on the TSCI over the time window, wherein the plurality of features includes at least: a proximity metric (PM) feature, a motion statistics (MS) feature, and a spatial feature; obtaining a signature map of the venue from a database, wherein each location on the signature map is assigned one or more location signatures representing unique features associated with the location when there is any object at the location; identifying, for each time stamp in the time window, an estimated location of the object in the venue based on the signature map and the plurality of features, and generating a trajectory of the object in the venue over the time window based on the estimated locations of the object.

In another embodiment, a device for wireless tracking is described. The device comprises: a receiver and a processor. The receiver is configured to receive a wireless signal from at least one transmitter through a wireless channel of a venue. The received wireless signal differs from the transmitted wireless signal due to the wireless channel and a motion of an object in the venue. Neither the at least one transmitter nor the receiver moves with the object. The processor is configured to: obtain a time series of channel information (TSCI) of the wireless channel in a time window, wherein the TSCI is generated based on the received wireless signal, generate a plurality of features based on the TSCI over the time window, wherein the plurality of features includes at least: a proximity metric (PM) feature, a motion statistics (MS) feature, and a spatial feature, obtain a signature map of the venue from a database, wherein each location on the signature map is assigned one or more location signatures representing unique features associated with the location when there is any object at the location, identify, for each time stamp in the time window, an estimated location of the object in the venue based on the signature map and the plurality of features, and generate a trajectory of the object in the venue over the time window based on the estimated locations of the object.

In yet another embodiment, a system for wireless tracking is described. The system comprises: at least one transmitter, a receiver and a processor. The at least one transmitter is configured to transmit a wireless signal through a wireless channel of a venue. The receiver is configured to receive the wireless signal through the wireless channel of the venue. The received wireless signal differs from the transmitted wireless signal due to the wireless channel and a motion of an object in the venue. Neither the at least one transmitter nor the receiver moves with the object. The processor is configured to: obtain a time series of channel information (TSCI) of the wireless channel in a time window, wherein the TSCI is generated based on the received wireless signal, generate a plurality of features based on the TSCI over the time window, wherein the plurality of features includes at least: a proximity metric (PM) feature, a motion statistics (MS) feature, and a spatial feature, obtain a signature map of the venue from a database, wherein each location on the signature map is assigned one or more location signatures representing unique features associated with the location when there is any object at the location, identify, for each time stamp in the time window, an estimated location of the object in the venue based on the signature map and the plurality of features, and generate a trajectory of the object in the venue over the time window based on the estimated locations of the object.

In one embodiment, a method for wireless based occupancy detection is described. The method comprises: transmitting, by each of a plurality of transmitters, a respective wireless signal through a wireless channel of a venue; receiving, by a receiver, the respective wireless signal from each of the plurality of transmitters through the wireless channel of the venue, wherein the received wireless signal differs from the transmitted wireless signal due to the wireless channel and a motion of a user when the user is present in the venue; obtaining a plurality of time series of channel information (TSCI) of the wireless channel, wherein each of the plurality of TSCI is generated based on the received wireless signal from a respective transmitter of the plurality of transmitters; computing a plurality of autocorrelation function (ACF) segments based on the plurality of TSCI, wherein each of the plurality of ACF segments is computed based on CI of a respective TSCI of the plurality of TSCI; generating a plurality of feature maps using a first deep learning model that is shared by the plurality of ACF segments, wherein each of the plurality of ACF segments is input into the first deep learning model individually to generate a respective feature map of the plurality of feature maps; inputting the plurality of feature maps together into a second deep learning model to generate an aggregate representation that is independent of a quantity and locations of the plurality of transmitters; computing a probability of user presence based on the aggregate representation; and detecting a presence of the user in the venue based on a threshold and the probability of user presence.

In another embodiment, a device for wireless based occupancy detection is described. The device comprises: a receiver and a processor. The receiver is configured to receive a respective wireless signal from each of a plurality of transmitters through a wireless channel of a venue. The received wireless signal differs from the transmitted wireless signal due to the wireless channel and a motion of a user when the user is present in the venue. The processor is configured to: obtain a plurality of time series of channel information (TSCI) of the wireless channel, wherein each of the plurality of TSCI is generated based on the received wireless signal from a respective transmitter of the plurality of transmitters, compute a plurality of autocorrelation function (ACF) segments based on the plurality of TSCI, wherein each of the plurality of ACF segments is computed based on CI of a respective TSCI of the plurality of TSCI, generate a plurality of feature maps using a first deep learning model that is shared by the plurality of ACF segments, wherein each of the plurality of ACF segments is input into the first deep learning model individually to generate a respective feature map of the plurality of feature maps, input the plurality of feature maps together into a second deep learning model to generate an aggregate representation that is independent of a quantity and locations of the plurality of transmitters, compute a probability of user presence based on the aggregate representation, and detect a presence of the user in the venue based on a threshold and the probability of user presence.

In yet another embodiment, a system for wireless based occupancy detection is described. The system comprises: a plurality of transmitters each of which is configured to transmit a respective wireless signal through a wireless channel of a venue, a receiver and a processor. The receiver is configured to receive the respective wireless signal from each of the plurality of transmitters through the wireless channel of the venue. The received wireless signal differs from the transmitted wireless signal due to the wireless channel and a motion of a user when the user is present in the venue. The processor is configured to: obtain a plurality of time series of channel information (TSCI) of the wireless channel, wherein each of the plurality of TSCI is generated based on the received wireless signal from a respective transmitter of the plurality of transmitters, compute a plurality of autocorrelation function (ACF) segments based on the plurality of TSCI, wherein each of the plurality of ACF segments is computed based on CI of a respective TSCI of the plurality of TSCI, generate a plurality of feature maps using a first deep learning model that is shared by the plurality of ACF segments, wherein each of the plurality of ACF segments is input into the first deep learning model individually to generate a respective feature map of the plurality of feature maps, input the plurality of feature maps together into a second deep learning model to generate an aggregate representation that is independent of a quantity and locations of the plurality of transmitters, compute a probability of user presence based on the aggregate representation, and detect a presence of the user in the venue based on a threshold and the probability of user presence.

Other concepts relate to software for implementing the present teaching on wireless sensing, tracking, imaging and occupancy detection. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.

**BRIEF DESCRIPTION OF DRAWINGS**

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.

FIG. 1 illustrates an example framework of a system for wireless sensing using a foundation model, according to some embodiments of the present disclosure.
FIG. 2 illustrates example processes for training and executing a foundation model for wireless sensing, according to some embodiments of the present disclosure.
FIG. 3 illustrates an example method for combing decisions for a wireless sensing task based on multiple links, according to some embodiments of the present disclosure.
FIG. 4 illustrates another example method for combing decisions for a wireless sensing task based on multiple links, according to some embodiments of the present disclosure.

FIG. 5 illustrates an example process for multi-task learning based on a foundation model, according to some embodiments of the present disclosure.

FIG. 6 illustrates an example mask used for contrastive loss, according to some embodiments of the present disclosure.

FIG. 7 illustrates an example architecture of an auto-encoder, according to some embodiments of the present disclosure.

FIG. 8 illustrates an example process for applying a mask, according to some embodiments of the present disclosure.

FIG. 9 illustrates a flow chart of an example method for wireless sensing using a foundation model, according to some embodiments of the present disclosure.

FIG. 10 illustrates an example scenario for wireless sensing in a venue, according to some embodiments of the present disclosure.

FIG. 11 illustrates an example floor plan and placement of wireless devices for wireless sensing, according to some embodiments of the present disclosure.

FIG. 12 illustrates a flow chart of an example method for hybrid radio-plus-aux fall-down detection based on wireless sensing, according to some embodiments of the present disclosure.

FIG. 13 illustrates an example system for performing wireless sensing in a venue with multiple groups of devices with a per-room deployment, according to some embodiments of the present disclosure.

FIG. 14 illustrates an example system for performing wireless sensing in a venue with multiple groups of devices with a whole-home deployment, according to some embodiments of the present disclosure.

FIG. 15 illustrates a flow chart of an example method for performing wireless sensing in a venue with multiple groups of devices, according to some embodiments of the present disclosure.

FIG. 16 illustrates an example floor plan for wireless sensing to display sensing motion statistics and analytics, according to some embodiments of the present disclosure.

FIG. 17 illustrates a flow chart of an example method of a wireless sensing presentation system, according to some embodiments of the present disclosure.

FIG. 18 illustrates a flow chart of an example method for performing a selective sensing-by-proxy procedure, according to some embodiments of the present disclosure.

FIG. 19 illustrates an example system for performing wireless sensing in network of networks with inter-network sounding, according to some embodiments of the present disclosure.

FIG. 20 illustrates a flow chart of an example method for performing inter-network sounding, according to some embodiments of the present disclosure.

FIG. 21 illustrates a flow chart of an example method for performing wireless sensing in network of networks with inter-network sounding, according to some embodiments of the present disclosure.

FIG. 22A and FIG. 22B illustrate a flow chart of an example method for performing wireless sensing with coded addresses, according to some embodiments of the present disclosure.

FIG. 23 illustrates an example scenario for wireless sensing in a venue, according to some embodiments of the present disclosure.

FIG. 24 illustrates an example framework of a system for wireless localization, according to some embodiments of the present disclosure.

FIG. 25A and FIG. 25B illustrate an example multipath selection filtering, according to some embodiments of the present disclosure.

FIG. 26A and FIG. 26B illustrate example performances of moving variances of PCA components over CSI packets, according to some embodiments of the present disclosure.

FIG. 27 illustrates a flow chart of an example method for performing wireless sensing with transformed component selection, according to some embodiments of the present disclosure.

FIG. 28 illustrates a flow chart of an example method for transforming N1-component CI to N2-component TCI, according to some embodiments of the present disclosure.

FIG. 29 illustrates a flow chart of an example method for selecting N3 TCIC from N2 components of TCI, according to some embodiments of the present disclosure.

FIG. 30 illustrates a flow chart of an example method for emphasizing N3 selected TCIC and deemphasizing N2-N3 un-selected TCIC, according to some embodiments of the present disclosure.

FIG. 31A and FIG. 31B illustrate a flow chart of an example method for computing task results using enhanced CI, according to some embodiments of the present disclosure.

FIG. 32 illustrates a flow chart of an example method for computing task results based on multiple domain-based analytics, according to some embodiments of the present disclosure.

FIG. 33 illustrates a flow chart of an example method for constructing a spatially-diverse vector to generate spatial-domain analytics, according to some embodiments of the present disclosure.

FIG. 34 illustrates an example scenario for wireless sensing in a venue, according to some embodiments of the present disclosure.

FIG. 35 illustrates an example floor plan and placement of wireless devices for wireless sensing, according to some embodiments of the present disclosure.

FIG. 36 illustrates an example framework of a system for fall detection, according to some embodiments of the present disclosure.

FIG. 37 illustrates an example method for iterative distortion - class activation map (ID-CAM), according to some embodiments of the present disclosure.

FIG. 38 illustrates a flow chart of an example method for performing wireless sensing with classifier probing and refinement, according to some embodiments of the present disclosure.

FIG. 39 illustrates a flow chart of an example method for generating at least one selected perturbed input data, according to some embodiments of the present disclosure.

FIG. 40 illustrates a flow chart of an example method for selecting a particular selected perturbed input data, according to some embodiments of the present disclosure.

FIG. 41 illustrates a flow chart of an example method for re-training a classifier based on supplementary selected perturbed input data, according to some embodiments of the present disclosure.

FIG. 42 illustrates a flow chart of an example method for constructing input data, according to some embodiments of the present disclosure.

FIG. 43 illustrates a flow chart of an example method for constructing perturbed input data based on reference input data, according to some embodiments of the present disclosure.

FIG. 44 illustrates a flow chart of an example method for modifying a respective marked component of the reference input data, according to some embodiments of the present disclosure.

FIG. 45 illustrates a flow chart of another example method for modifying a respective marked component of the reference input data, according to some embodiments of the present disclosure.

FIG. 46 illustrates a flow chart of an example method for generating a subset of marked components, according to some embodiments of the present disclosure.

FIG. 47 illustrates an example framework of a wireless sensing system for in-vehicle child presence detection, according to some embodiments of the present disclosure.

FIG. 48 illustrates an example configuration and placement of wireless devices for in-vehicle wireless sensing, according to some embodiments of the present disclosure.

FIG. 49 illustrates an example classification network based on a convolutional neural network, according to some embodiments of the present disclosure.

FIGS. 50A, 50B and 50C illustrate example antenna configurations for in-vehicle wireless sensing, according to some embodiments of the present disclosure.

FIG. 51A and FIG. 51B illustrate a flow chart of an example method for performing wireless sensing for in-vehicle child presence detection, according to some embodiments of the present disclosure.

FIG. 52 illustrates a flow chart of an example method for computing an oscillation confidence score (CS), a dynamic time warping (DTW) CS and a peak CS, according to some embodiments of the present disclosure.

FIG. 53 illustrates a flow chart of an example method for detecting a number of horizontal streaks of a 2D transform matrix, according to some embodiments of the present disclosure.

FIG. 54A and FIG. 54B illustrate a flow chart of an example method for detecting a breathing motion of a user in a time period, according to some embodiments of the present disclosure.

FIG. 55 illustrates a flow chart of an example method for computing oscillation rate in transform domain, according to some embodiments of the present disclosure.

FIG. 56 illustrates a flow chart of an example method for computing DTW cost, according to some embodiments of the present disclosure.

FIG. 57 illustrates a flow chart of an example method for computing 2D matrices, according to some embodiments of the present disclosure.

FIG. 58A and FIG. 58B illustrate a flow chart of an example method for generating output probability scores for a fully-connected network, according to some embodiments of the present disclosure.

FIG. 59A and FIG. 59B illustrate a flow chart of an example method for wireless sensing for intruder detection with human-nonhuman detection, according to some embodiments of the present disclosure.

FIG. 60 illustrates a flow chart of an example method for running a neural network, according to some embodiments of the present disclosure.

FIG. 61 illustrates a flow chart of an example method for detecting human action and nonhuman action, according to some embodiments of the present disclosure.

FIG. 62 illustrates an example framework of a system for encoder-decoder-based high resolution imaging, according to some embodiments of the present disclosure.

FIG. 63 illustrates an example architecture of a generator in a system for encoder-decoder-based high resolution imaging, according to some embodiments of the present disclosure.

FIG. 64 illustrates an example architecture of a discriminator in a system for encoder-decoder-based high resolution imaging, according to some embodiments of the present disclosure.

FIG. 65 illustrates an example diagram of a system for CSI evaluation, according to some embodiments of the present disclosure.

FIG. 66 illustrates a flow chart of an example method for encoder-decoder-based high resolution imaging, according to some embodiments of the present disclosure.

FIG. 67 illustrates a flow chart of an example method for generating output matrices for different layers of an encoder, according to some embodiments of the present disclosure.

FIG. 68 illustrates a flow chart of an example method for generating an output imaging matrix, according to some embodiments of the present disclosure.

FIG. 69 illustrates a flow chart of an example method for processing a skip connection, according to some embodiments of the present disclosure.

FIG. 70 illustrates a flow chart of an example method for quality evaluation of channel measurements for wireless sensing, according to some embodiments of the present disclosure.

FIG. 71A and FIG. 71B illustrate a flow chart of an example method for task-specific qualification, according to some embodiments of the present disclosure.

FIG. 72 illustrates a flow chart of an example method for computing a task-specific CI-timing rate score, according to some embodiments of the present disclosure.

FIG. 73 illustrates a flow chart of an example method for computing a CI-timing regularity score, according to some embodiments of the present disclosure.

FIG. 74 illustrates a flow chart of an example method for computing an aggregate of a plurality of CI-timing variations, according to some embodiments of the present disclosure.

FIG. 75 illustrates a flow chart of an example method for computing a CI-amplitude score, according to some embodiments of the present disclosure.

FIG. 76 illustrates an example framework of a system for wireless tracking, according to some embodiments of the present disclosure.

FIG. 77 illustrates an example position estimator in a system for wireless tracking, according to some embodiments of the present disclosure.

FIG. 78 illustrates an example trajectory refinement module in a system for wireless tracking, according to some embodiments of the present disclosure.

FIG. 79 illustrates a scenario of indoor tracking based on wireless signals, according to some embodiments of the present disclosure.

FIG. 80 illustrates an example walking scenario and corresponding proximity metrics, according to some embodiments of the present disclosure.

FIG. 81 illustrates an example floor plan and corresponding location signature matching over time, according to some embodiments of the present disclosure.

FIG. 82 illustrates an overview of a system for wireless tracking, according to some embodiments of the present disclosure.

FIG. 83 illustrates example floor plans of various scenarios, according to some embodiments of the present disclosure.

FIG. 84 illustrates a flow chart of an example method for wireless tracking, according to some embodiments of the present disclosure.

FIG. 85 illustrates an example framework of a system for wireless based occupancy detection, according to some embodiments of the present disclosure.

FIG. 86 illustrates an example system for child presence detection, according to some embodiments of the present disclosure.

FIG. 87 illustrates example antenna configurations for child presence detection, according to some embodiments of the present disclosure.

FIG. 88 illustrates an example antenna configuration and data collection setup, according to some embodiments of the present disclosure.

FIG. 89 illustrates an example confusion matrix for child, adult, and empty classification, according to some embodiments of the present disclosure.

FIG. 90 illustrates example ROC curves generated from different baseline network architectures, according to some embodiments of the present disclosure.

FIG. 91 illustrates an example system for occupancy detection based on deep learning, according to some embodiments of the present disclosure.

FIG. 92 illustrates an example process for training and re-training a deep learning model, according to some embodiments of the present disclosure.

FIG. 93 illustrates an example block diagram of a first wireless device of a system for wireless sensing, tracking, imaging and occupancy detection, according to some embodiments of the present disclosure.

FIG. 94 illustrates an example block diagram of a second wireless device of a system for wireless sensing, tracking, imaging and occupancy detection, according to some embodiments of the present disclosure.

FIG. 95 illustrates a flow chart of an example method for wireless based occupancy detection, according to some embodiments of the present disclosure.

FIG. 96 illustrates a flow chart of another example method for wireless based occupancy detection, according to some embodiments of the present disclosure.

FIG. 97 illustrates an example process for intrusion detection, according to some embodiments of the present disclosure.

FIG. 98 illustrates an example Long Short-Term Memory (LSTM) neural network for intrusion detection, according to some embodiments of the present disclosure.

FIG. 99 illustrates an example few-shot learning process, according to some embodiments of the present disclosure.

FIG. 100 illustrates an example data input preparation process for motion source recognition, according to some embodiments of the present disclosure.

## DETAILED DESCRIPTION

The symbol "/" disclosed herein means "and/or". For example, "A/B" means "A and/or B." In some embodiments, a method/device/system/software of a wireless monitoring system is disclosed. A time series of channel information (CI) of a wireless multipath channel is obtained using a processor, a memory communicatively coupled with processor and a set of instructions stored in memory. The time series of CI (TSCI) may be extracted from a wireless (sounding) signal transmitted from a Type1 heterogeneous wireless device (e.g. wireless transmitter (TX), "Bot" device) to a Type2 heterogeneous wireless device (e.g. wireless receiver (RX), "Origin" device) in a venue through the channel. The channel is impacted by an expression/motion of an object in venue. A characteristics/spatial-temporal information (STI)/motion information (MI) of object/expression/motion may be computed/monitored based on the TSCI. A task (e.g. sensing goal) may be performed based on the characteristics/STI/MI. A task-related presentation may be generated in a user-interface (UI) on a device of a user. The characteristics/STI/MI may be motion indicator value(MIV)/activity data (AD)/motion data(MD)/motion sensing data(MSD)/motion detection data(MDD)/motion score(MS)/motion statistics(MS2).

Expression may comprise placement, placement of moveable parts, location/speed/ acceleration/position/ orientation/direction/identifiable place/region/presence/spatial coordinate, static expression/presentation/state/size/ length/width/height/angle/scale/curve/surface/area/ volume/pose/posture/manifestation/body language, dynamic expression/motion/sequence/ movement/activity/behavior/gesture/gait/extension/contraction/distortion/deformation, body expression (e.g. head/face/eye/mouth/tongue/hair/voice/neck/limbs/arm/hand/leg/foot/ muscle/moveable parts), surface expression/shape/texture/material/color/electromagnetic (EM) characteristics/visual pattern/wetness/reflectance/ translucency/flexibility, material property (e.g. living tissue/hair/fabric/metal/wood/leather/plastic/artificial material/solid/liquid/gas/ temperature), expression change, and/or some combination.

Wireless multipath channel may comprise: communication channel, analog frequency channel (e.g. with carrier frequency near 700/800/900MHz, or 1.8/1.9/2.4/3/5/6/ 27/60/70+ GHz), coded channel (e.g. in CDMA), and/or channel of wireless/cellular network/system (e.g. WLAN, WiFi, mesh, 4G/LTE/5G/6G/7G/8G/9G/10G, Bluetooth, Zigbee, UWB, RFID, microwave). It may comprise multiple channels, which may be consecutive (e.g. adjacent/overlapping bands) or non-consecutive (e.g. non-overlapping bands, 2.4GHz/5GHz). While channel is used to transmit wireless signal and perform sensing measurements, data (e.g. TSCI/feature/component/characteristics/STI/MI/analytics/task outputs, auxiliary/non-sensing data/network traffic) may be communicated/transmitted in channel.

Wireless signal may comprise a series of probe signals. It may be any of: EM radiation, radio frequency (RF)/light/bandlimited/baseband signal, signal in licensed/ unlicensed/ISM band, MIMO transmission, sensing transmission, wireless/mobile/cellular/optical communication/network/mesh/downlink/uplink/unicast/multicast/broadcast signal. It may be compliant to standard/protocol (e.g. WLAN, WWAN, WPAN, WBAN, international/national/industry/defacto, IEEE/802/802.11/15/16, WiFi, 802.11n/ac/ax/be/bf, 3G/4G/LTE/5G/6G/7G/8G/9G/10G, 3GPP/Bluetooth/BLE/ Zigbee/NFC/RFID/ UWB/WiMax). A probe signal may comprise any of: protocol/standard/beacon/pilot/sounding/ excitation/illumination/handshake/synchronization/reference/source/motion probe/detection/ sensing/management/ control/-data/null-data/beacon/pilot/request/response/association/ reassociation/disassociation/authentication/action/ report/-poll/announcement/extension/enquiry/acknowledgement	frame/packet/signal,	and/or	null-data-frame (NDP)/RTS/CTS/QoS/CF-Poll/CF-Ack/block acknowledgement/reference/training/synchronization. It may comprise line-of-sight (LOS)/non-LOS components (or paths/links). It may have data embedded. Probe signal may be replaced by (or embedded in) data signal. Each frame/packet/signal may comprise: preamble/header/payload. It may comprise: training sequence, short (STF)/long (LTF) training field, L-STF/L-LTF/L-SIG/HE-STF/HE-LTF/HE-SIG-A/HE-SIG-B, channel estimation field (CEF). It may be used to transfer power wirelessly from Typel device to Type2 device. Sounding rate of signal may be adjusted to control amount of transferred power. Probe signals may be sent in burst.

TSCI may be extracted/obtained (e.g. by IC/chip) from wireless signal at a layer of Type2 device (e.g. layer of OSI reference model, PHY/MAC/data link/logical link control/ network/transport/session/presentation/application layer, TCP/IP/internet/link layer). It may be extracted from received wireless/derived signal. It may comprise wireless sensing measurements obtained in communication protocol (e.g. wireless/cellular communication standard/network, 4G/LTE/5G/6G/7G/8G/9G/10G, WiFi, IEEE 802.11/11bf/15/16). Each CI may be extracted from a probe/sounding signal, and may be associated with time stamp. TSCI may be associated with starting/stopping time/duration/amount of CI/sampling/sounding frequency/period. A motion detection/sensing signal may be recognized/identified base on probe signal. TSCI may be stored/retrieved/accessed/preprocessed/processed/postprocessed/conditioned/analyzed/ monitored. TSCI/features/components/characteristics/STI/MI/analytics/task outcome may be communicated to edge/cloud server/Type1/Type2/hub/data aggregator/another device/system/network.

Type1/Type2 device may comprise components (hardware/software) such as electronics/chip/integrated circuit (IC)/RF circuitry/antenna/modem/TX/RX/transceiver/RF interface (e.g. 2.4/5/6/27/60/70+ GHz radio/front/back haul radio)/network/interface/processor/ memory/module/circuit/board/software/firmware/connectors/structure/enclosure/-housing/ structure. It may comprise access point (AP)/base-station/mesh/router/repeater/hub/wireless station/client/terminal/"Origin Satellite"/"Tracker Bot", and/or internet-of-things (IoT)/appliance/ wearable/accessory/peripheral/furniture/amenity/ gadget/vehicle/module/wireless-enabled/ unicast/multicast/broadcasting/node/hub/target/sensor/portable/mobile/ cellular/communication/ motion-detection/source/destination/standard-compliant device. It may comprise additional attributes such as auxiliary functionality/network connectivity/purpose/brand/model/ appearance/form/shape/color/material/specification. It may be heterogeneous because the above (e.g. components/device types/additional attributes) may be different for different Type1 (or Type2) devices.

Type1/Type2 devices may/may not be authenticated/associated/collocated. They may be same device. Type1/-Type2/portable/nearby/another device, sensing/measurement session/link between them, and/or object/expression/motion/characteristics/STI/MI/task may be associated with an identity/identification/identifier (ID) such as UUID, associated/unassociated STA ID (ASID/USID/AID/UID). Type2 device may passively observe/monitor/receive wireless signal from Type1 device without establishing connection (e.g. association/authentication/ handshake) with, or requesting service from, Typel device. Type1/Type2 device may move with object/another object to be tracked.

Type1 (TX) device may function as Type2 (RX) device temporarily/sporadically/ continuously/repeatedly/ interchangeably/alternately/simultaneously/contemporaneously/ concurrently; and vice versa. Type1 device may be Type2 device. A device may function as Type1/Type2 device temporarily/sporadically/continuously/repeatedly/simultaneously/ concurrently/contemporaneously. There may be multiple wireless nodes each being Type1/Type2 device. TSCI may be obtained between two nodes when they exchange/communicate wireless signals. Characteristics/STI/MI of object may be monitored individually based on a TSCI, or jointly based on multiple TSCI.

Motion/expression of object may be monitored actively with Type1/Type2 device moving with object (e.g. wearable devices/automated guided vehicle/AGV), or passively with Type1/Type2 devices not moving with object (e.g. both fixed devices).

Task may be performed with/without reference to reference/trained/initial database/ profile/baseline that is trained/collected/processed/computed/transmitted/stored in training phase. Database may be re-training/updated/reset.

Presentation may comprise UI/GUI/text/message/form/webpage/visual/image/video/ graphics/animation/graphical/symbol/emoticon/sign/color/shade/sound/music/speech/audio/ mechanical/gesture/vibration/haptics presentation. Time series of characteristic/STI/MI/task outcome/another quantity may be displayed/presented in presentation. Any computation may be performed/shared by processor (or logic unit/chip/IC)/Type1/Type2/user/nearby/another device/local/edge/cloud server/hub/data/signal analysis subsystem/sensing initiator/response/SBP initiator/responder/-AP/non-AP. Presentation may comprise any of: monthly/weekly/daily/simplified/detailed/cross-sectional/small/large/-form-factor/color-coded/comparative/summary/web view, animation/voice announcement/another presentation related to periodic/repetition characteristics of repeating motion/expression.

Multiple Typel (or Type 2) devices may interact with a Type2 (or Type1) device. The multiple Type1 (or Type2) devices may be synchronized/asynchronous, and/or may use same/different channels/sensing parameters/settings (e.g. sounding frequency/bandwidth/ antennas). Type2 device may receive another signal from Type1/another Type1 device. Type1 device may transmit another signal to Type2/another Type2 device. Wireless signals sent (or received) by them may be sporadic/temporary/continuous/repeated/synchronous/ simultaneous/concurrent/contemporaneous. They may operate independently/collaboratively. Their data (e.g. TSCI/feature/characteristics/STI/MI/intermediate task outcomes) may be processed/monitored/analyzed independently or jointly/collaboratively.

Any devices may operate based on some state/internal state/system state. Devices may communicate directly, or via another/nearby/portable device/server/hub device/cloud server. Devices/system may be associated with one or more users, with associated settings. Settings may be chosen/selected/pre-programmed/changed/adjusted/modified/-varied over time. The method may be performed/executed in shown order/another order. Steps may be performed in parallel/iterated/repeated. Users may comprise human/adult/older adult/man/woman/juvenile/ child/baby/pet/animal/-creature/machine/computer module/software. Step/operation/processing may be different for different devices (e.g. based on locations/orientation/direction/roles/user-related characteristics/settings/configurations/available resources/-bandwidth/power/network connection/hardware/software/processor/coprocessor/memory/battery life/antennas/directional antenna/power setting/device parameters/characteristics/conditions/ status/state). Any/all device may be controlled/coordinated by a processor (e.g. associated with Type1/Type2/nearby/portable/ another device/server/designated source). Some device may be physically in/of/attached to a common device.

Type1 (or Type2) device may be capable of wirelessly coupling with multiple Type2 (or Type1) devices. Type1 (or Type2) device may be caused/controlled to switch/establish wireless coupling (e.g. association/authentication) from Type2 (or Type1) device to another Type2 (or another Type1) device. The switching may be controlled by server/hub device/processor/Type1 device/Type2 device. Radio channel may be different before/after switching. A second wireless signal may be transmitted between Type1 (or Type2) device and second Type2 (or second Type1) device through the second channel. A second TSCI of second channel may be extracted/obtained from second signal. The first/second signals, first/second channels, first/second Type1 device, and/or first/second Type2 device may be same/similar/co-located.

Type1 device may transmit/broadcast wireless signal to multiple Type2 devices, with/without establishing connection (association/authentication) with individual Type2 devices. It may transmit to a particular/common MAC address, which may be MAC address of some device (e.g. dummy receiver). Each Type2 device may adjust to particular MAC address to receive wireless signal. Particular MAC address may be associated with venue, which may be recorded in an association table of an Association Server (e.g. hub device). Venue may be identified by Type1 device/Type2 device based on wireless signal received at particular MAC address.

For example, Type2 device may be moved to a new venue. Type1 device may be newly set up in venue such that Type1 and Type2 devices are not aware of each other. During set up, Type1 device may be instructed/guided/caused/-controlled (e.g. by dummy receiver, hardware pin setting/connection, stored setting, local setting, remote setting, downloaded setting, hub device, and/or server) to send wireless signal (e.g. series of probe signals) to particular MAC address. Upon power up, Type2 device may scan for probe signals according to a table of MAC addresses (e.g. stored in designated source, server, hub device, cloud server) that may be used for broadcasting at different locations (e.g. different MAC address used for different venue such as house/office/enclosure/floor/multi-storey building/store/airport/-mall/stadium/hall/station/ subway/lot/area/zone/region/district/city/country/continent). When Type2 device detects wireless signal sent to particular MAC address, it can use the table to identify venue.

Channel may be selected from a set of candidate/selectable/admissible channels. Candidate channels may be associated with different frequency bands/bandwidth/carrier frequency/modulation/wireless standards/coding/encryption/payload characteristics/network/ ID/SSID/characteristics/settings/parameters. Particular MAC address/selected channel may be changed/adjusted/varied/modified over time (e.g. according to time table/rule/policy/mode/ condition/-situation/change). Selection/change may be based on availability/collision/traffic pattern/co-channel/inter-channel interference/effective bandwidth/random selection/pre-selected list/plan. It may be done by a server (e.g. hub device). They may be communicated (e.g. from/to Type1/Type2/hub/another device/local/edge/cloud server).

Wireless connection (e.g. association/authentication) between Type1 device and nearby/portable/another device may be established (e.g. using signal handshake). Type1 device may send first handshake signal (e.g. sounding frame/probe signal/request-to-send RTS) to the nearby/portable/another device. Nearby/portable/another device may reply to first signal by sending second handshake signal (e.g. command/clear-to-send/CTS) to Type1 device, triggering Type1 device to transmit/broadcast wireless signal to multiple Type2 devices without establishing connection with the Type2 devices. Second handshake signals may be response/acknowledge (e.g. ACK) to first handshake signal. Second handshake signal may contain information of venue/Type1 device. Nearby/portable/another device may be a dummy device with purpose (e.g. primary purpose, secondary purpose) to establish wireless connection with Type1 device, to receive first signal, or send second signal. Nearby/portable/another device may be physically attached to Type1 device.

In another example, nearby/portable/another device may send third handshake signal to Typel device triggering Type1 device to broadcast signal to multiple Type2 devices without establishing connection with them. Typel device may reply to third signal by transmitting fourth handshake signal to the another device.

Nearby/portable/another device may be used to trigger multiple Type1 devices to broadcast. It may have multiple RF circuitries to trigger multiple transmitters in parallel. Triggering may be sequential/partially sequential/partially/fully parallel. Parallel triggering may be achieved using additional device (s) to perform similar triggering in parallel to nearby/portable/another device. After establishing connection with Type1 device, nearby/portable/another device may suspend/stop communication with Type1 device. It may enter an inactive/hibernation/sleep/stand-by/low-power/OFF/-power-down mode. Suspended communication may be resumed. Nearby/portable/another device may have the particular MAC address and Type1 device may send signal to particular MAC address.

The (first) wireless signal may be transmitted by a first antenna of Type1 device to some first Type2 device through a first channel in a first venue. A second wireless signal may be transmitted by a second antenna of Type1 device to some second Type2 device through a second channel in a second venue. First/second signals may be transmitted at first/second (sounding) rates respectively, perhaps to first/second MAC addresses respectively. Some first/second channels/signals/rates/MAC addresses/antennas/Type2 devices may be same/different/synchronous/asynchronous. First/second venues may have same/different sizes/shape/multipath characteristics. First/second venues/immediate areas around first/second antennas may overlap. First/second channels/signals may be WiFi+LTE (one being WiFi, one being LTE), or WiFi+WiFi, or WiFi (2.4GHz)+WiFi (5GHz), or WiFi (5GHz, channel=a1, BW=a2)+WiFi (5GHz/channel=b1, BW=b2). Some first/second items (e.g. channels/signals/ rates/MAC addresses/antennas/Type1/Type2 devices) may be changed/adjusted/varied/modified over time (e.g. based on time table/rule/policy/mode/condition/situation/another change).

Each Type1 device may be signal source of multiple Type2 devices (i.e. it sends respective probe signal to respective Type2 device). Each respective Type2 device may choose asynchronously the Type1 device from among all Type1 devices as its signal source. TSCI may be obtained by each respective Type2 device from respective series of probe signals from Type1 device. Type2 device may choose Type1 device from among all Type1 devices as its signal source (e.g. initially) based on identity/identification/identifier of Type1/Type2 device, task, past signal sources, history, characteristics, signal strength/quality, threshold for switching signal source, and/or information of user/account/profile/access info/parameters/input/requirement/criteria.

Database of available/candidate Type1 (or Type2) devices may be initialized/ maintained/updated by Type2 (or Type1) device. Type2 device may receive wireless signals from multiple candidate Type1 devices. It may choose its Type1 device (i.e. signal source) based on any of: signal quality/strength/regularity/channel/traffic/characteristics/properties/-states/task requirements/training task outcome/MAC addresses/identity/identifier/past signal source/history/user instruction/another consideration.

An undesirable/bad/poor/problematic/unsatisfactory/unacceptable/intolerable/ faulty/demanding/undesirable/-inadequate/ lacking/inferior/unsuitable condition may occur when (1) timing between adjacent probe signals in received wireless signal becomes irregular, deviating from agreed sounding rate (e.g. time perturbation beyond acceptable range), and/or (2) processed/signal strength of received signal is too weak (e.g. below third threshold, or below fourth threshold for significant percentage of time), wherein processing comprises any lowpass/bandpass/highpass/median/moving/ weighted average/linear/nonlinear/smoothing filtering. Any thresholds/percentages/parameters may be time-varying. Such condition may occur when Type1/Type2 device become progressively far away, or when channel becomes congested.

Some settings (e.g. Type1-Type2 device pairing/signal source/network/association/ probe signal/sounding rate/scheme/channel/bandwidth/system state/TSCI/TSMA/task/task parameters) may be changed/varied/adjusted/modified. Change may be according to time table/rule/policy/mode/condition (e.g. undesirable condition)/another change. For example, sounding rate may normally be 100Hz, but changed to 1000Hz in demanding situations, and to 1Hz in low power/standby situation.

Settings may change based on task requirement (e.g. 100 Hz normally and 1000 Hz momentarily for 20 seconds). In task, instantaneous system may be associated adaptively/ dynamically to classes/states/conditions (e.g. low/normal/high priority/emergency/critical/ regular/privileged/non-subscription/subscription/paying/non-paying). Settings (e.g. sounding rate) may be adjusted accordingly. Change may be controlled by: server/hub/Type1/Type2 device. Scheduled changes may be made according to time table. Changes may be immediate when emergency is detected, or gradual when developing condition is detected.

Characteristics/STI/MI may be monitored/analyzed individually based on a TSCI associated with a particular Type1/Type2 device pair, or jointly based on multiple TSCI associated multiple Type1/Type2 pairs, or jointly based on any TSCI associated with the particular Type2 device and any Type1 devices, or jointly based on any TSCI associated with the particular Type1 device and any Type2 devices, or globally based on any TSCI associated with any Type1/Type2 devices.

A classifier/classification/recognition/detection/estimation/projection/feature extraction/processing/filtering may be applied (e.g. to CI/CI-feature/characteristics/STI/MI), and/or trained/re-trained/updated. In a training stage, training may be performed based on multiple training TSCI of some training wireless multipath channel, or characteristic/STI/MI computed from training TSCI, the training TSCI obtained from training wireless signals transmitted from training Type1 devices and received by training Type2 devices. Re-training/updating may be performed in an operating stage based on training TSCI/current TSCI. There may be multiple classes (e.g. groupings/categories/events/motions/expression/activities/ objects/locations) associated with venue/regions/zones/location/environment/home/office/ building/warehouse/facility object/expression/motion/movement/ process/event/manufacturing/ assembly-line/maintenance/repairing/navigation/object/emotional/mental/state/condition/stage/ gesture/gait/action/motion/presence/movement/daily/activity/history/event.

Classifier may comprise linear/nonlinear/binary/multiclass/Bayes classifier/Fisher linear discriminant/logistic regression/Markov chain/Monte Carlo/deep/neural network/ perceptron/self-organization maps/boosting/meta algorithm/decision tree/random forest/genetic programming/kernel learning/KNN/support vector machine (SVM).

Feature extraction/projection may comprise any of: subspace projection/principal component analysis (PCA)/independent component analysis (ICA)/vector quantization/singular value decomposition (SVD)/eigen-decomposition/eigenvalue/time/frequency/orthogonal/non-orthogonal decomposition, processing/preprocessing/postprocessing. Each CI may comprise multiple components (e.g. vector/combination of complex values). Each component may be preprocessed to give magnitude/phase or a function of such.

Feature may comprise: output of feature extraction/projection, amplitude/magnitude/ phase/energy/power/strength /intensity, presence/absence/proximity/likelihood/histogram, time/ period/duration/frequency/component/decomposition/ projection/band, local/global/maximum (max)/minimum (min)/zero-crossing, repeating/periodic/typical/habitual/one-time/atypical/ abrupt/mutually-exclusive/evolving/transient/changing/time/related/correlated feature/pattern/trend/profile/events/tendency/inclination/behavior, cause-and-effect/short-term/long-term/ correlation/statistics/ frequency/period/duration, motion/movement/location/map/coordinate/ height/speed/acceleration/angle/rotation/size/volume, suspicious/dangerous/alarming event/ warning/belief/proximity/collision, tracking/breathing/heartbeat/gait/ action/event /statistical/ hourly/daily/weekly/monthly/yearly parameters/statistics/analytics, well-being/health/disease/ medical statistics/analytics, an early/instantaneous/contemporaneous/delayed indication/ suggestion/sign/indicator/verifier/detection/ symptom of a state/condition/situation/disease/ biometric, baby/patient/machine/device/temperature/vehicle/parking lot/venue/lift/elevator/ spatial/road/fluid flow/home/room/office/house/building/warehouse/storage/system/ventilation/ fan/pipe/duct/people/human/car/boat/truck/airplane/drone/downtown/crowd/impulsive event/ cyclo-stationary/environment/vibration/material/surface/3D/2D/local/global, and/or another measurable quantity/variable. Feature may comprise monotonic function of feature, or sliding aggregate of features in sliding window.

Training may comprise AI/machine/deep/supervised/unsupervised/discriminative training/auto-encoder/linear discriminant analysis/regression/clustering/tagging/labeling/Monte Carlo computation.

A current event/motion/expression/object in venue at current time may be classified by applying classifier to current TSCI/characteristics/STI/MI obtained from current wireless signal received by Type2 device in venue from Type1 devices in an operating stage. If there are multiple Type1/Type2 devices, some/all (or their locations/antenna locations) may be a permutation of corresponding training Type1/Type2 devices (or locations/antenna locations). Type1/Type2 device/signal/channel/venue/ object/motion may be same/different from corresponding training entity. Classifier may be applied to sliding windows. Current TSCI/characteristics/STI/MI may be augmented by training TSCI/characteristics/-STI/MI (or fragment/extract) to bootstrap classification/classifier.

A first section/segment (with first duration/starting/ending time) of a first TSCI (associated with first Type1-Type2 device pair) may be aligned (e.g. using dynamic time warping/DTW/matched filtering, perhaps based on some mismatch/distance/similarity score/cost, or correlation/autocorrelation/cross-correlation) with a second section/segment (with second duration/starting/ending time) of a second TSCI (associated with second Type1-Type2 device pair), with each CI in first section mapped to a CI in second section. First/second TSCI may be preprocessed. Some similarity score (component/item/link/ segment-wise) may be computed. The similarity score may comprise any of: mismatch/distance/-similarity score/cost. Component-wise similarity score may be computed between a component of first item (CI/feature/-characteristics/STI/MI) of first section and corresponding component of corresponding mapped item (second item) of second section. Item-wise similarity score may be computed between first/second items (e.g. based on aggregate of corresponding component-wise similarity scores). An aggregate may comprise any of: sum/weighted sum, product/-weighted product, weighted average/robust/trimmed mean/arithmetic/geometric/harmonic mean, median/mode, percentile or another aggregate of any of the above. Link-wise similarity score may be computed between first/second items associated with a link (TX-RX antenna pair) of first/second Type1-Type2 device pairs (e.g. based on aggregate of corresponding item-wise similarity scores). Segment-wise similarity score may be computed between first/second segments (e.g. based on aggregate of corresponding link-wise similarity scores). First/second segment may be sliding.

In DTW, a function of any of: first/second segment, first/second item, another first (or second) item of first (or second) segment, or corresponding timestamp/duration/difference/ differential, may satisfy a constraint. Time difference between first/second items may be constrained (e.g. upper/lower bounded). First (or second) section may be entire first (or second) TSCI. First/second duration/starting/ending time may be same/different.

In one example, first/second Type1-Type2 device pairs may be same and first/second TSCI may be same/-different. When different, first/second TSCI may comprise a pair of current/reference, current/current or reference/reference TSCI. For "current/reference", first TSCI may be current TSCI obtained in operating stage and second TSCI may be reference TSCI obtained in training stage. For "reference/reference", first/second TSCI may be two TSCI obtained during training stage (e.g. for two training events/states/classes). For "current/current", first/second TSCI may be two TSCI obtained during operating stage (e.g. associated with two different antennas, or two measurement setups). In another example, first/second Type1-Type2 device pairs may be different, but share a common device (Type1 or Type2).

Aligned first/second segments (or portion of each) may be represented as first/second vectors. Portion may comprise all items (for "segment-wise"), or all items associated with a TX-RX link (for "link-wise"), or an item (for "item-wise"), or a component of an item (for "component-wise"). Similarity score may comprise combination/aggregate/function of any of: inner product/correlation/autocorrelation/correlation indicator/covariance/discriminating score/distance/Euclidean/absolute/L_k/weighted distance (between first/second vectors). Similarity score may be normalized by vector length. A parameter derived from similarity score may be modeled with a statistical distribution. A scale/location/another parameter of the statistical distribution may be estimated.

Recall there may be multiple sliding segments. Classifier may be applied to a sliding first/second segment pair to obtain a tentative classification result. It may associate current event with a particular class based on one segment pair/tentative classification result, or multiple segment pairs/tentative classification results (e.g. associate if similarity scores prevail (e.g. being max/min/dominant/matchless/most significant/excel) or significant enough (e.g. higher/lower than some threshold) among all candidate classes for N consecutive times, or for a high/low enough percentage, or most/least often in a time period).

Channel information (CI) may comprise any of: signal strength/amplitude/phase/timestamp/spectral power measurement/modem parameters/dynamic beamforming information/beamforming report/dynamic imaging information/channel representation information(CRI)/spatial map from dynamic beaming/transfer function components/radio state/measurable variables/sensing data/measurement/coarse/fine-grained layer information(e.g. PHY/MAC/datalink layer)/digital gain/RF filter/frontend-switch/DC offset/correction/IQ-compensation settings/environment effect on wireless signal propagation/channel input-to-output transformation/stable behavior of environment/state profile/wireless channel measurements/received signal strength indicator (RSSI)/channel state information (CSI)/channel impulse response (CIR)/channel frequency response (CFR)/channel response(CR)/characteristics of frequency components (e.g. subcarriers)/channel characteristics/channel filter response, auxiliary information, data/meta/user/account/access/ security/session/status/supervisory /device/network/household/ neighborhood/environment/real-time/sensor/stored/encrypted/compressed/protected data, identity/identifier/identification.

Each CI may be associated with timestamp/arrival time/frequency band/signature/ phase/amplitude/trend/characteristics, frequency-like characteristics, time/frequency/time-frequency domain element, orthogonal/non-orthogonal decomposition characteristics of signal through channel. Timestamps of TSCI may be irregular and may be corrected (e.g. by interpolation/resampling) to be regular, at least for a sliding time window.

TSCI may be/comprise a link-wise TSCI associated with an antenna of Type1 device and an antenna of Type2 device. For Type1 device with M antennas and Type2 device with N antennas, there may be MN link-wise TSCI.

CI/TSCI may be preprocessed/processed/postprocessed/stored/retrieved/ transmitted/received. Some modem/radio state parameter may be held constant. Modem parameters may be applied to radio subsystem and may represent radio state. Motion detection signal (e.g. baseband signal, packet decoded/demodulated from it) may be obtained by processing (e.g. downconverting) wireless signal (e.g. RF/WiFi/LTE/5G/6G signal) by radio subsystem using radio state represented by stored modem parameters. Modem parameters/radio state may be updated (e.g. using previous modem parameters/radio state). Both previous/updated modem parameters/radio states may be applied in radio subsystem (e.g. to process signal/decode data). In the disclosed system, both may be obtained/compared/analyzed/-processed/monitored.

Each CI may comprise N1 CI components (CIC) (e.g. time/frequency domain component, decomposition components), each with corresponding CIC index. Each CIC may comprise a real/imaginary/complex quantity, magnitude/phase/Boolean/flag, and/or some combination/subset. Each CI may comprise a vector/matrix/set/collection of CIC. CIC of TSCI associated with a particular CIC index may form a CIC time series. TSCI may be divided into N1 time series of CIC (TSCIC), each associated with respective CIC index. Characteristics/STI/MI may be monitored based on TSCIC. Some TSCIC may be selected based on some criteria/cost function/signal quality metric (e.g. SNR, interference level) for further processing.

Multi-component characteristics/STI/MI of multiple TSCIC (e.g. two components with indices 6 and 7, or three components indexed at 6, 7, 10) may be computed. In particular, k-component characteristics may be a function of k TSCIC with k corresponding CIC indices. With k=1, it is single-component characteristics which may constitute/form a one-dimensional (1D) function as CIC index spans all possible values. For k=2, two-component characteristics may constitute/form a 2D function. In special case, it may depend only on difference between the two indices. In such case, it may constitute 1D function. A total characteristics may be computed based on one or more multi-component characteristics (e.g. weighted average/aggregate). Characteristics/STI/MI of object/motion/expression may be monitored based on any multi-component characteristics/total characteristics.

Characteristics/STI/MI may comprise: instantaneous/short-/long-term/historical/ repetitive/repeated/repeatable/recurring/ periodic/pseudoperiodic/regular/habitual/incremental/ average/initial/final/current/past/future/predicted/-changing/ deviational/change/time/frequency/ orthogonal/non-orthogonal/transform/decomposition/deterministic/stochastic/probabilistic/ dominant/key/prominent/representative/characteristic/significant/insignificant/indicative/ common/averaged/shared/typical/ prototypical/persistent/abnormal/abrupt/impulsive/sudden/ unusual/unrepresentative/atypical/suspicious/ dangerous/alarming/ evolving/transient/one-time quantity/characteristics/analytics/feature/information, cause-and-effect, correlation indicator/ score, auto/cross correlation/covariance, autocorrelation function (ACF), spectrum/spectrogram/ power spectral density, time/frequency function/transform/projection, initial/final/temporal/ change/-trend/pattern/tendency/inclination/behavior/activity/history/ profile/event, location/ position/localization/spatial coordinate/change on map/path/navigation/tracking, linear/ rotational/ horizontal/vertical/location/distance/displacement/height/-

speed/velocity/acceleration/ change/angular speed, direction/orientation, size/length/width/height/azimuth/area/volume/ capacity, deformation/transformation, object/motion direction/angle/shape/ form/shrinking/ expanding, behavior/-activity/movement, occurrence, fall-down/accident/security/event, period/frequency/rate/ cycle/rhythm/count/quantity, timing/duration/interval, starting/initiating/ ending/current/past/next time/quantity/information, type/grouping/classification/composition, presence/absence/proximity/approaching/receding/entrance/exit, identity/identifier, head/mouth/ eye/-breathing/heart/hand/handwriting/arm/body/gesture/leg/gait/organ characteristics, tidal volume/depth of breath/airflow rate/inhale/exhale time/ratio, gait/walking/tool/machine/complex motion, signal/motion characteristic/information/ feature/statistics/parameter/magnitude/phase/ degree/dynamics/anomaly/variability/detection/estimation/recognition/ identification/indication, slope/derivative/higher order derivative of function/feature/mapping/transformation of another characteristics, mismatch/distance/similarity score/cost/metric, Euclidean/statistical/weighted distance, L1/L2/Lk norm, inner/outer product, tag, test quantity, consumed/unconsumed quantity, state/physical/health/well-being/emotional/mental state, output responses, any composition/combination, and/or any related characteristics/information/combination.

Test quantities may be computed. Characteristics/STI/MI may be computed/ monitored based on CI/TSCI/features/similarity scores/test quantities. Static (or dynamic) segment/profile may be identified/computed/analyzed/ monitored/extracted/obtained/marked/ presented/indicated/highlighted/stored/communicated by analyzing CI/TSCI/features/functions of features/test quantities/characteristics/STI/MI (e.g. target motion/movement presence/ detection/estimation/recognition/identification). Test quantities may be based on CI/TSCI/features/functions of features/characteristics/-STI/MI. Test quantities may be processed/tested/analyzed/compared.

Test quantity may comprise any/any function of: data/vector/matrix/structure, characteristics/STI/MI, CI information (CII, e.g. CI/CIC/feature/magnitude/phase), directional information (DI, e.g. directional CII), dominant/representative/ characteristic/indicative/key/ archetypal/exemplary/paradigmatic/prominent/ common/shared/typical/prototypical/averaged/ regular/persistent/usual/normal/atypical/unusual/abnormal/unrepresentative data/vector/matrix/ structure, similarity/mismatch /distance score/cost/metric, auto/cross correlation/covariance, sum/mean/average/weighted/-trimmed/ arithmetic/geometric /harmonic mean, variance/deviation/ absolute/square deviation/averaged/median/total/-standard deviation/derivative/slope/ variation/ total/absolute/square variation/spread/dispersion/variability, divergence/skewness/kurtosis/range/ interquartile range/coefficient of variation/dispersion/L-moment/quartile coefficient of dispersion/mean absolute/square difference/Gini coefficient/relative mean difference/entropy/ maximum (max)/minimum (min)/median/percentile/quartile, variance-to-mean ratio, max-to-min ratio, variation/regularity/similarity measure, transient event/behavior, statistics/mode/likelihood/histogram/ probability distribution function (pdf)/moment generating function/expected function/value, behavior, repeatedness/periodicity/ pseudo-periodicity, impulsiveness/suddenness/occurrence/recurrence, temporal profile/characteristics, time/timing/duration/ period/frequency/trend/history, starting/initiating/ending time/quantity/count, motion classification/type, change, temporal/frequency/cycle change, etc.

Identification/identity/identifier/ID may comprise: MAC address/ASID/USID/AID/ UID/UUID, label/tag/index, web link/address, numeral/alphanumeric ID, name/password/ account/account ID, and/or another ID. ID may be assigned (e.g. by software/firmware/user/ hardware, hardwired, via dongle). ID may be stored/retrieved (e.g. in database/memory/cloud/ edge/local/hub server, stored locally/remotely/permanently/temporarily). ID may be associated with any of: user/customer/ household/information/data/address/phone number/social security number, user/customer number/record/account, timestamp/ duration/timing. ID may be made available to Type1/Type2 device/sensing/SBP initiator/responder. ID may be for registration/ initialization/communication/identification/verification/detection/recognition/authentication/ access control/cloud access/ networking/social networking/logging/recording/cataloging/ classification/tagging/association/pairing/ transaction/ electronic transaction/intellectual property control (e.g. by local/cloud/server/hub, Type1/Type2/nearby/user/another device, user).

Object may be person/pet/animal/plant/machine/user, baby/child/adult/older person, expert/specialist/leader/-commander/manager/personnel/staff/officer/doctor/nurse/worker/teacher/ technician/serviceman/ repairman/passenger/patient/customer/student/traveler/inmate/high-value person/, object to be tracked, vehicle/car/AGV/drone /robot/-wagon/transport/remote-controlled machinery/cart/moveable objects/goods/items/material/parts/components/machine/ lift/elevator, merchandise/goods/cargo/people/items/food/package/luggage/equipment/cleaning tool in/on workflow/assembly-line/warehouse/factory/store/supermarket/distribution/logistic/transport/ manufacturing/retail/wholesale/business center/facility/hub, phone/computer/laptop/tablet/ dongle/plugin/companion/tool/peripheral/accessory/wearable/ furniture/ appliance/amenity/gadget, IoT/networked/smart/portable devices, watch/glasses/speaker/toys/stroller/keys/-wallet/purse/ handbag/backpack, goods/cargo/luggage/equipment/motor/machine/utensil/table/chair/air-conditioner/-door/window/heater/fan, light/fixture/stationary object/television/camera/audio/ video/surveillance equipment/parts, ticket/parking/toll/airplane ticket, credit/plastic/access card, object with fixed/changing/no form, mass/solid/liquid/gas/fluid/smoke/fire/flame, signage, electromagnetic (EM) source/medium, and/or another object.

Object may have multiple parts, each with different movement (e.g. position/ location/direction change). Object may be a person walking forward. While walking, his left/right hands may move in different directions, with different instantaneous motion/speed/ acceleration.

Object may/may not be communicatively coupled with some network, such as WiFi, MiFi, 4G/LTE/5G/6G/7G/8G, Bluetooth/NFC/BLE/WiMax/Zigbee/mesh/adhoc network. Object may be bulky machinery with AC power supply that is moved during installation/cleaning/ maintenance/renovation. It may be placed on/in moveable platforms such as elevator/conveyor/ lift/pad/belt/robot/drone/forklift/car/boat/vehicle. Type1/Type2 device may attach to/move with object. Type1/Type2 device may be part of/embedded in portable/another device (e.g. module/ device with module, which may be large/sizeable/small/heavy/bulky/light, e.g. coin-sized/ cigarette-box-sized). Type1/Type2/portable/another device may/-may not be attached to/move with object, and may have wireless (e.g. via Bluetooth/BLE/Zigbee/NFC/WiFi) or wired (e.g. USB/micro-USB/Firewire/HDMI) connection with a nearby device for network access (e.g. via WiFi/cellular network). Nearby device may be object/phone/AP/IoT/device/appliance/peripheral/ amenity/furniture/vehicle/gadget/wearable/networked/computing device. Nearby device may be connected to some server (e.g. cloud server via network/internet). It may/may not be portable/moveable, and may/may not move with object. Type1/Type2/portable/nearby/another device may be powered by battery/solar/DC/AC/other power source, which may be replaceable/non-replaceable, and rechargeable/non-rechargeable. It may be wirelessly charged.

Type1/Type2/portable/nearby/another device may comprise any of: computer/laptop/tablet/pad/phone/printer/ monitor/ battery/antenna, peripheral/accessory/socket/ plug/charger/switch/adapter/dongle, internet-of-thing (IoT), TV/sound bar/ HiFi/speaker/set-top box/remote control/panel/gaming device, AP/cable/broadband/router/repeater/extender, appliance/utility/ fan/refrigerator/washer/dryer/microwave/oven/stove/range/light/lamp/tube/pipe/tap/lighting/air-conditioner/heater/smoke detector, wearable/watch/glasses/goggle/button/ bracelet/chain/jewelry/ring/belt/clothing/garment/fabric/shirt/pant/ dress/glove/ handwear/shoe/footwear/hat/headwear/bag/purse/wallet/makeup/cosmetic/ornament/book/magazine/paper/stationary/signage/pos ter/display/printed matter, furniture/fixture/table/desk/chair/sofa/-bed/cabinet/shelf/ rack/storage/box/bucket/basket/packaging /carriage/tile/shingle/brick/block/mat/panel/curtain/cushion/pad/carpet/material/building material/glass, amenity/ sensor/clock/ pot/pan/ware/container/ bottle/can/utensil/plate/-cup/bowl/toy/ball/tool/pen/racket/lock/bell/ camera/ microphone/ painting/ frame/mirror/coffee-maker/door/window, food/pill/medicine, embeddable/implantable/gadget/ instrument/equipment/device/ apparatus/machine/controller/mechanical tool, garage-opener, key/plastic/payment/credit card/ticket, solar panel, key tracker, fire-extinguisher, garbage can/bin, WiFi-enabled device, smart device/machine/machinery/system/house/office/building/ warehouse/facility/vehicle/car/bicycle/motorcycle/boat/vessel/airplane/cart/wagon, home/vehicle/office/factory/building/manufacturing/production/computing/security/another device.

One/two/more of Type1/Type2/portable/nearby/another device/server may determine an initial characteristics/-STI/MI of object, and/or may share intermediate information. One of Type1/Type2 device may move with object (e.g. "Tracker Bot"). The other one of Type1/Type2 device may not move with object (e.g. "Origin Satellite", "Origin Register"). Either may have known characteristics/STI/MI. Initial characteristics/STI/MI may be computed based on known characteristics/STI/MI.

Venue may be any space such as sensing area, room/house/home/office/workplace/ building/facility/warehouse/factory/ store/vehicle/property, indoor/outdoor/enclosed/semi-enclosed/open/semi-open/closed/over-air/floating/underground space/area/ structure/enclosure, space/area with wood/glass/metal/material/structure/frame/beam/panel/column/wall/floor/door/ ceiling/ window/cavity/gap/opening/reflection/refraction medium/fluid/construction material/ fixed/adjustable layout/shape, human /animal/plant body/cavity/organ/bone/blood/vessel/air-duct/windpipe/teeth/soft/hard/rigid/non-rigid tissue, manufacturing/repair/ maintenance/mining/ parking/storage/transportation/shipping/logistic/-sports/entertainment/amusement/public/recreational/ government/community/seniors/elderly care/geriatric/space facility/terminal/hub, distribution center/store, machine/engine/ device/assembly line/workflow, urban/rural/suburban/metropolitan area, staircase/escalator/elevator/hallway/walkway/tunnel/ cave/cavern/channel/duct/pipe/tube/ lift/well/-pathway/roof/basement/den/alley/road/path/highway/sewage/ventilation system/ network, car/truck/bus/van/container/ship/boat/submersible/train/tram/airplane/mobile home, stadium/city/playground/park/field/ track/court/gymnasium/hall/mart/market/supermarket/plaza/ square/construction site/hotel/museum/school/hospital/university/ garage/mall/airport/train/bus station/terminal/hub/platform, valley/forest/wood/terrain/landscape/garden/park/-patio/land, and/or gas/oil/water pipe/line. Venue may comprise inside/outside of building/facility. Building/facility may have one/multiple floors, with a portion underground.

A event may be monitored based on TSCI. Event may be object/motion/gesture/gait related, such as fall-down, rotation/hesitation/pause, impact (e.g. person hitting sandbag/door/bed/ window/chair/table/desk/cabinet/box/another person/animal/bird/fly/ball/bowling/tennis/ soccer/volley ball/football/baseball/basketball), two-body action (e.g. person releasing balloon/catching fish/molding clay/writing paper/typing on computer), car moving in garage, person carrying smart phone/walking around venue, autonomous/moveable object/machine moving around (e.g. vacuum cleaner/utility/self-driving vehicle/car/drone).

Task may comprise: (a) sensing task, any of: monitoring/sensing/detection/ recognition/estimation/verification/ identification/authentication/classification/locationing/ guidance/navigation/tracking/counting of/in any of: object/objects/ vehicle/machine/tool/human/ baby/elderly/patient/intruder/pet presence/proximity/activity/daily-activity/well-being/-breathing/ vital sign/heartbeat/health condition/sleep/sleep stage/walking/location/distance/speed/ acceleration/navigation/tracking/ exercise/safety/danger/fall-down/intrusion/security/life-threat/emotion/movement/motion/degree/pattern/-

periodic/repeated/cyclo-stationary/stationary/ regular/transient/sudden/suspicious motion/irregularity/trend/change/-breathing/human biometrics/ environment informatics/gait/gesture/room/region/zone/venue, (b) computation task, any of: signal processing/preprocess/ postprocessing/conditioning/denoising/calibration/analysis/ feature extraction/transformation/mapping/ supervised/unsupervised/ semi-supervised/ discriminative/machine/deep learning/training/clustering/training/PCA/eigen-decomposition/ frequency/time/ functional decomposition/neural network/map-based/model-based processing/ correction/geometry estimation/analytics computation, (c) IoT task, any of: smart task for venue/user/object/human/pet/house/home/office/workplace/building/ facility/warehouse/factory / store/vehicle/property/structure/assembly-line/IoT/device/system, energy/power management/ transfer, wireless power transfer, interacting/engage with user/object/intruder/human/animal (e.g. presence/motion/gesture/ gait/activity/behavior/voice/command/instruction/query/music/sound/image/video/location/movement/danger/threat detection/recognition/monitoring/analysis/ response/execution/synthesis, generate/retrieve/play/display/render/synthesize dialog/exchange/ response/presentation/experience/media/multimedia/expression/sound/speech/music/image/ imaging/video/animation/webpage/text/message/notification/reminder/enquiry/warning, detect/recognize/monitor/interpret/ analyze/record/store user/intruder/object input/motion/gesture/ location/activity), activating/controlling/configuring (e.g. turn on/off/control/lock/unlock/open/ close/adjust/configure) a device/system (e.g. vehicle/drone/electrical/mechanical/air-conditioning/heating/lighting/ventilation/clearning/entertainment/IoT/security/siren/access system/device/door/ window/garage/lift/elevator/escalator/-speaker/television/light/peripheral/ accessory/wearable/furniture/appliance/amenity/ gadget/alarm/camera/gaming/coffee/cooking/heater/fan/housekeeping/home/office machine/device/robot/vacuum cleaner/ assembly line), (d) miscellaneous task, any of: transmission/coding/encryption/storage/analysis of data/parameters/ analytics/derived data, upgrading/administration/configuration/coordination/broadcasting/ synchronization/networking/ encryption/communication/-protection/compression/storage/ database/archiving/query/cloud computing/presentation/ augmented/virtual reality/-other processing/task. Task may be performed by some of: Type1/Type2/nearby/portable/another device, and/or hub/local/edge/cloud server.

Task may also comprise: detect/recognize/monitor/locate/interpret/analyze/record/ store user/visitor/intruder/-object/pet, interact/engage/converse/dialog/exchange with user/object/ visitor/intruder/human/baby/pet, detect/locate/-localize/recognize/ monitor/analyze/interpret/learn/ train/respond/execute/synthesize/generate/record/store/summarize health/well-being/daily-life/activity/behavior/pattern/exercise/food-intake/restroom visit/work/play/rest/sleep/relaxation/ danger/routine/timing/ habit/trend/normality/normalcy/anomaly/regularity/irregularity/change/ presence/motion/gesture/gait/expression/emotion/state/ stage/voice/command/instruction/question/query/music/sound/location/movement/fall-down/threat/discomfort/ sickness/ environment/, generate/retrieve/play/display/render/synthesize dialog/exchange/response/presentation/report/ experience/media/ multimedia/expression/sound/speech/music/image/imaging/-video/animation/webpage/text/message/notification/reminder/enquiry /warning, detect/recognize/monitor/interpret/ analyze/record/store user/intruder/object input/motion/gesture/location/activity), detect/check/ monitor/locate/manage/-control/adjust/configure/lock/unlock/arm/disarm/open/close/fully/partially/activate/turn on/off some system/device/object (e.g. vehicle/robot/drone/electrical/mechanical/ air-conditioning/heating/ventilation/HVAC/ lighting/cleaning/entertainment/IoT/security/siren/ access systems/devices/items/components, door/window/garage/lift/elevator /escalator/-speaker/ television/light/peripheral/accessory/wearable/furniture/appliance/amenity/gadget/alarm/camera/gaming/ coffee/cooking/heater/fan/housekeeping/home/office machine/device/vacuum cleaner/ assembly line/window/garage/ door/blind/curtain/panel/solar panel/sun shade), detect/monitor/ locate user/pet do something (e.g. sitting/sleeping on sofa/in bedroom/running on treadmill/ cooking/watching TV/eating in kitchen/dining room/going upstairs/downstairs/outside/inside/ using rest room), do something (e.g. generate message/response/warning/clarification/ notification/report) automatically upon detection, do something for user automatically upon detecting user presence, turn on/off/wake/control/adjust/dim light/music/radio/TV/HiFi/STB/ computer/speaker/smart device/air-conditioning/ventilation/heating system/curtains/light shades, turn on/off/pre-heat/control coffee-machine/hot-water-pot/cooker/oven/microwave oven/another cooking device, check/manage temperature/setting/weather forecast/telephone/message/mail/ system check, present/interact/engage/dialog/converse (e.g. through smart speaker/display/screen; via webpage/email/messaging system/notification system).

When user arrives home by car, task may be to, automatically, detect user/car approaching, open garage/door upon detection, turn on driveway/garage light as user approaches garage, and/or turn on air conditioner/heater/fan. As user enters house, task may be to, automatically, turn on entrance light/off driveway/garage light, play greeting message to welcome user, turn on user's favorite music/radio/news/channel, open curtain/blind, monitor user's mood, adjust lighting/sound environment according to mood/current/imminent event (e.g. do romantic lighting/music because user is scheduled to eat dinner with girlfriend soon) on user's calendar, warm food in microwave that user prepared in morning, do diagnostic check of all systems in house, check weather forecast for tomorrow/news of interest to user, check calendar/to-do list, play reminder, check telephone answering/messaging system/email, give verbal report using dialog system/-speech synthesis, and/or remind (e.g. using audible tool such as speakers/HiFi/speech synthesis/sound/field/voice/music/song/dialog system, using visual tool such as TV/entertainment system/computer/notebook/tablet/display/light/color/brightness/ patterns symbols, using haptic/virtual reality/gesture/tool, using smart device/appliance/material/ furniture/fixture, using server/hub device/cloud/fog/edge server/home/mesh network, using messaging/notification/communication/scheduling/email tool, using UI/GUI, using scent/smell/ fragrance/taste, using neural/nervous system/tool, or any combination) user of someone's birthday/call him, prepare/give report. Task may turn on air conditioner/heater/ventilation system in advance, and/or adjust temperature setting of smart thermostat in advance. As user moves from entrance to living room, task may be to turn on living room light, open living room curtain, open window, turn off entrance light behind user, turn on TV/set-top box, set TV to user's favorite channel, and/or adjust an appliance according to user's preference/conditions/states (e.g. adjust lighting, choose/play music to build romantic atmosphere).

When user wakes up in morning, task may be to detect user moving around in bedroom, open blind/curtain/-window, turn off alarm clock, adjust temperature from night-time to day-time profile, turn on bedroom light, turn on restroom light as user approaches restroom, check radio/streaming channel and play morning news, turn on coffee machine, preheat water, and/or turn off security system. When user walks from bedroom to kitchen, task may be to turn on kitchen/hallway lights, turn off bedroom/restroom lights, move music/message/reminder from bedroom to kitchen, turn on kitchen TV, change TV to morning news channel, lower kitchen blind, open kitchen window, unlock backdoor for user to check backyard, and/or adjust temperature setting for kitchen.

When user leaves home for work, task may be to detect user leaving, play farewell/have-a-good-day message, open/close garage door, turn on/off garage/driveway light, close/lock all windows/doors (if user forgets), turn off appliance (e.g. stove/microwave/oven), turn on/arm security system, adjust light/air-conditioning/heating/ventilation systems to "away" profile to save energy, and/or send alerts/reports/updates to user's smart phone.

Motion may comprise any of: no-motion, motion sequence, resting/non-moving motion, movement/change in position/location, daily/weekly/monthly/yearly/repeating/activity/ behavior/action/routine, transient/time-varying/fall-down/repeating/repetitive/periodic/pseudo-periodic motion/breathing/heartbeat, deterministic/non-deterministic/probabilistic/ chaotic/ random motion, complex/combination motion, non-/pseudo-/cyclo-/stationary random motion, change in electromagnetic characteristics, human/animal/plantlbody/machine/mechanical/ vehicle/drone motion, air-/wind-/weather-/water-/fluid-/ground/sub-surface/seismic motion, man-machine interaction, normal/abnormal/dangerous/warning/suspicious motion, imminent/ rain/fire/flood/tsunami/explosion/collision, head/facial/eye/mouth/tongue/-neck/finger/hand/arm/ shoulder/upper/lower/body/chest/abdominal/hip/leg/foot/joint/knee/elbow/skin/below-skin/ subcutaneous tissue/blood vessel/intravenous/organ/heart/lung/stomach/intestine/bowel/eating/ breathing/talking/singing/-dancing/coordinated motion, facial/eye/mouth expression, and/or hand/arm/gesture/gait/UI/keystroke/typing stroke.

Type1/Type2 device may comprise heterogeneous IC, low-noise amplifier (LNA), power amplifier, transmit-receive switch, media access controller, baseband radio, and/or 2.4/3.65/4.9/5/6/sub-7/over-7/28/60/76 GHz/another radio. Heterogeneous IC may comprise processor/memory/software/firmware/instructions. It may support broadband/-wireless/ mobile/mesh/cellular network, WLAN/WAN/MAN, standard/IEEE/3GPP/WiFi/4G/LTE/5G/ 6G/7G/8G, IEEE 802.11/a/b/g/n/ac/ad/af/ah/ax/ay/az/be/bf/15/16, and/or Bluetooth/BLE/NFC/Zigbee/WiMax.

Processor may comprise any of: general-/special-/purpose/embedded/multi-core processor, microprocessor/-microcontroller, multi-/parallel/CISC/RISC processor, CPU/GPU/ DSP/ASIC/FPGA, and/or logic circuit. Memory may comprise non-/volatile, RAM/ROM/ EPROM/EEPROM, hard disk/SSD, flash memory, CD-/DVD-ROM, magnetic/optical/organic/ storage system/network, network/cloud/edge/local/external/internal storage, and/or any non-transitory storage medium. Set of instructions may comprise machine executable codes in hardware/IC/software/firmware, and may be embedded/pre-loaded/loaded upon-boot-up/on-the-fly/on-demand/pre-installed/installed/downloaded.

Processing/preprocessing/postprocessing may be applied to data (e.g. TSCI/feature/ characteristics/STI/MI/test quantity/intermediate/data/analytics) and may have multiple steps. Step/pre-/post-/processing may comprise any of: computing function of operands/LOS/non-LOS/single-link/multi-link/component/item/quantity, magnitude/norm/phase/-feature/ energy/timebase/similarity/distance/characterization score/measure computation/extraction/ correction/cleaning, linear/nonlinear/FIR/IIR/MA/AR/ARMA/Kalman/particle filtering, lowpass/bandpass/highpass/median/rank/ quartile/ percentile/mode/selective/adaptive filtering, interpolation/intrapolation/extrapolation/decimation/subsampling/ upsampling/resampling, matched filtering/enhancement/restoration/denoising/smoothing/conditioning/spectral analysis/mean subtraction/removal, linear/nonlinear/inverse/frequency/time transform, Fourier transform (FT)/DTFT/DFT/FFT/wavelet/ Laplace/Hilbert/Hadamard/trigonometric/sine/cosine/ DCT/power-of-2/sparse/fast/frequency transform, zero/cyclic/-padding, graph-based transform/processing, decomposition/orthogonal/non-orthogonal/over-complete projection/ eigen-decomposition/SVD/PCA/ICA/compressive sensing, grouping/folding/sorting/ comparison/soft/hard/thresholding/-clipping, first/second/high order derivative/integration/ convolution/multiplication/division/addition/subtraction, local/global/ maximization/ minimization, recursive/iterative/constrained/batch processing, least mean square/absolute error/deviation, cost function optimization, neural network/detection/recognition/classification/ identification/estimation/labeling/ association/ tagging/mapping/remapping/training/clustering/ machine/supervised/unsupervised/semi-supervised learning/network, vector/quantization/ encryption/compression/matching pursuit/scrambling/coding/storing/retrieving/transmitting/ receiving/time-domain/frequency-domain/normalization/scaling/expansion/representing/ merging/combining/splitting/tracking/monitoring/ shape/silhouette/motion/activity/analysis, pdf/histogram estimation/importance/Monte Carlo sampling, error detection/protection/ correction, doing nothing, time-varying/adaptive processing, conditioning/weighted/averaging/ over selected components/links, arithmetic/geometric/harmonic/trimmed mean/centroid/medoid computation, morphological/logical operation/permutation/ combination/sorting/AND/OR/XOR/ union/intersection, vector operation/addition/subtraction/multiplication/division, and/or another operation. Processing may be applied individually/jointly. Acceleration using GPU/DSP/coprocessor/multicore/ multiprocessing may be applied.

Function may comprise: characteristics/feature/magnitude/phase/energy, scalar/vector/discrete/continuous/-polynomial/ exponential/logarithmic/trigonometric/transcendental/logical/piecewise/linear/algebraic/nonlinear/circular/piecewise linear/real/complex/vector-valued/inverse/absolute/indicator/limiting/floor/rounding/sign/composite/sliding/moving function, derivative/integration, function of function, one-to-one/one-to-many/many-to-one/many-to-many function, mean/mode/median/ percentile/max/min/range/statistics/histogram, local/global max/min/zero-crossing, variance/variation/spread/dispersion/ deviation/standard deviation/divergence/range/interquartile range/total variation/absolute/total deviation, arithmetic/geometric/ harmonic/trimmed mean/square/cube/root/power, thresholding/clipping/rounding/truncation/quantization/approximation, time function processed with an operation (e.g. filtering), sine/cosine/-tangent/cotangent/secant/cosecant/elliptical/parabolic/ hyperbolic/game/ zeta function, probabilistic/stochastic/random-m/ergodic/stationary/deterministic/periodic/repeated function, inverse/transformation/frequency/discrete time/Laplace/-Hilbert/sine/cosine/triangular/ wavelet/integer/power-of-2/sparse transform, orthogonal/non-orthogonal/eigen projection/ decomposition/eigenvalue/singular value/PCA/ICA/SVD/compressive sensing, neural network, feature extraction, function of moving window of neighboring items of time series, filtering function/convolution, short-time/discrete transform/Fourier/cosine/sine/Hadamard/wavelet/ sparse transform, matching pursuit, approximation, graph-based processing/transform/graph signal processing, classification/identification/class/ group/category/ labeling, processing/ preprocessing/postprocessing, machine/learning/detection/estimation/feature extraction/learning network/feature extraction/-denoising/signal enhancement/coding/encryption/mapping/vector quantization/remapping /lowpass/highpass/bandpass/matched/Kalman/particle/FIR/IIR/MA/AR/ARMA/median/mode/adaptive filtering, first/second/high order derivative/integration/zero crossing/smoothing, up/down/random/importance/Monte Carlo sampling/resampling/converting, interpolation/extrapolation, short/long term statistics/auto/cross correlation/moment generating function/time averaging/-weighted averaging, special/Bessel/Beta/Gamma/Gaussian/Poisson/ integral complementary error function.

Sliding time window may have time-varying width/size. It may be small/large at beginning to enable fast/accurate acquisition and increase/decrease over time to steady-state size comparable to motion frequency/period/transient motion duration/characteristics/STI/MI to be monitored. Window size/time shift between adjacent windows may be constant/adaptively/ dynamically/automatically changed/adjusted/varied/modified (e.g. based on battery life/power consumption/available computing power/change in amount of targets/nature of motion to be monitored/user request/choice/instruction/command).

Characteristics/STI/MI may be determined based on characteristic value/point of function and/or associated argument of function (e.g. time/frequency). Function may be outcome of a regression. Characteristic value/point may comprise local/global/constrained/significant/ first/second/i^th maximum/minimum/extremum/zero-crossing (e.g. with positive/negative time/ frequency/argument) of function. Local signal-to-noise-ratio (SNR) or SNR-like parameter may be computed for each pair of adjacent local max (peak)/local min (valley) of function, which may be some function (e.g. linear/log/exponential/ monotonic/power/polynomial) of fraction or difference of a quantity (e.g. power/magnitude) of local max over the quantity of local min. Local max (or min) may be significant if its SNR is greater than threshold and/or if its amplitude is greater (or smaller) than another threshold. Local max/min may be selected/identified/computed using persistence-based approach. Some significant local max/min may be selected based on selection criterion (e.g. quality criterion/condition, strongest/consistent significant peak in a range). Unselected significant peaks may be stored/monitored as "reserved" peaks for use in future selection in future sliding time windows. E.g. a particular peak (e.g. at particular argument/time/frequency) may appear consistently over time. Initially, it may be significant but not selected (as other peaks may be stronger). Later, it may become stronger/dominant consistently. When selected, it may be back-traced in time and selected in earlier time to replace previously selected peaks (momentarily strong/dominant but not persistent/-consistent). Consistency of peak may be measured by trace, or duration of being significant. Alternatively, local max/min may be selected based on finite state machine (FSM). Decision thresholds may be time-varying, adjusted adaptively/-dynamically (e.g. based on back-tracing timing/FSM, or data distribution/statistics).

A similarity score (SS)/component SS may be computed based on two temporally adjacent CI/CIC, of one TSCI or of two different TSCI. The pair may come from same/different sliding window (s). SS or component SS may comprise: time reversal resonating strength (TRRS), auto/cross correlation/covariance, inner product of two vectors, L1/L2/Lk/Euclidean/statistical/ weighted/distance score/norm/metric/quality metric, signal quality condition, statistical characteristics, discrimination score, neural network/deep learning network/machine learning/training/discrimination/weighted averaging/preprocessing/denoising/signal conditioning/filtering/time correction/timing compensation/phase offset compensation/ transformation/component-wise operation/feature extraction/FSM, and/or another score.

Any threshold may be fixed (e.g. 0, 0.5, 1, 1.5, 2), pre-determined and/or adaptively/dynamically determined (e.g. by FSM, or based on time/space/location/antenna/ path/link/state/battery life/remaining battery life/available resource/-power/computation power/network bandwidth). Threshold may be applied to test quantity to differentiate two events/-

conditions/situations/states, A and B. Data (e.g. CI/TSCI/feature/similarity score/test quantity/characteristics/STI/MI) may be collected under A/B in training situation. Test quantity (e.g. its distribution) computed based on data may be compared under A/B to choose threshold based on some criteria (e.g. maximum likelihood (ML), maximum aposterior probability (MAP), discriminative training, minimum Type 1 (or 2) error for given Type 2 (or 1) error, quality criterion, signal quality condition). Threshold may be adjusted (e.g. to achieve different sensitivity), automatically/semi-automatically/manually/adaptively /dynamically, once/ sometimes/often/periodically/repeatedly/occasionally/sporadically/on-demand (e.g. based on object/movement/location direction/action/characteristics/STI/MI/size/property/trait/habit/ behavior/venue/feature/fixture/ furniture/barrier/material/machine/living thing/thing/boundary/ surface/medium/map/constraint/model/event/state /situation/condition/time/timing/duration/state/history/user/preference). An iterative algorithm may stop after N iterations, after time-out period, or after test quantity satisfies a condition (e.g. updated quantity greater than threshold) which may be fixed/adaptively/dynamically adjusted.

Searching for local extremum may comprise constrained/minimization/ maximization, statistical/dual/constraint/convex/global/local/combinatorial/infinite-dimensional/multi-objective/multi-modal/non-differentiable/particle-swarm/simulation-based optimization, linear/nonlinear/quadratic/higher-order regression, linear/nonlinear/stochastic/ constraint/dynamic/mathematical/disjunctive/convex/semidefinite/conic/cone/interior/fractional/ integer/sequential/quadratic programming, conjugate/gradient/subgradient/coordinate/reduced descent, Newton's/simplex/ iterative/point/ellipsoid/quasi-Newton/interpolation/memetic/ genetic/evolutionary/pattern-/gravitational-search method/ algorithm, constraint satisfaction, calculus of variations, optimal control, space mapping, heuristics/metaheuristics, numerical analysis, simultaneous perturbation stochastic approximation, stochastic tunneling, dynamic relaxation, hill climbing, simulated annealing, differential evolution, robust/line/abu/reactive search/optimization, curve fitting, least square, variational calculus, and/or variant. It may be associated with an objective/loss/cost/utility/fitness/energy function.

Regression may be performed using regression function to fit data, or function (e.g. ACF/transform/mapped) of data, in regression window. During iterations, length/location of regression window may be changed. Regression function may be linear/quadratic/cubic/ polynomial/another function. Regression may minimize any of: mean/weighted/absolute/-square deviation, error, aggregate/component/weighted/mean/sum/absolute/square/high-order/another error/cost (e.g. in projection domain/selected axes/orthogonal axes), robust error (e.g. first error (e.g. square) for smaller error magnitude, second error (e.g. absolute) for larger error magnitude), and/or weighted sum/mean of multiple errors (e.g. absolute/-square error). Error associated with different links/path may have different weights (e.g. link with less noise may have higher weight). Regression parameter (e.g. time-offset associated with max/min regression error of regression function in regression window, location/width of window) may be initialized and/or updated during iterations (e.g. based on target value/range/profile, characteristics/STI/MI/test quantity, object motion/quantity/count/location/state, past/current trend, location/amount/ distribution of local extremum in previous windows, carrier/subcarrier frequency/bandwidth of signal, amount of antennas associated with the channel, noise characteristics, histogram/distribution/central/F-distribution, and/or threshold). When converged, current time offset may be at center/left/right (or fixed relative location) of regression window.

In presentation, information may be displayed/presented (e.g. with venue map/environmental model). Information may comprise: current/past/corrected/approximate/ map/location/speed/acceleration/zone/region/area/segmentation/coverage-area, direction/path/trace/history/traffic/summary, frequently-visited areas, customer/crowd event/distribution/behavior, crowd-control information, acceleration/speed/vital-sign/breathing/heart-rate/activity/emotion/sleep/-state/rest information, motion-statistics/MI/STI, presence/absence of motion/people/pets/object/vital sign, gesture (e.g. hand/arm/foot/leg/body/head/face/ mouth/eye)/meaning/control (control of devices using gesture), location-based gesture-control/motion-interpretation, identity/identifier (ID) (e.g. of object/person/user/pet/zone/region, device/machine/vehicle/drone/car/boat/bicycle/TV/air-con/fan/, self-guided machine/device/vehicle), environment/weather information, gesture/gesture control/motion trace, earthquake/explosion/storm/rain/fire/temperature, collision/impact/ vibration, event/door/window/open/close/fall-down/ accident/burning/freezing/water-/wind-/air-movement event, repeated/pseudo-periodic event (e.g. running on treadmill, jumping up/down, skipping rope, somersault), and/or vehicle event. Location may be one/two/three dimensional (e.g. expressed/ represented as 1D/2D/3D rectangular/polar coordinates), relative (e.g. w.r.t. map/environmental model) or relational (e.g. at/near/distance-from a point, halfway between two points, around corner, upstairs, on table top, at ceiling, on floor, on sofa).

Information (e.g. location) may be marked/displayed with some symbol. Symbol may be time-varying/flashing/-pulsating with changing color/intensity/size/orientation. Symbol may be a number reflecting instantaneous quantity (e.g. analytics/gesture/state/status/action/ motion/breathing/heart rate, temperature/network traffic/connectivity/remaining power). Symbol/size/orientation/color/intensity/rate/characteristics of change may reflect respective motion. Information may be in text or presented visually/verbally (e.g. using pre-recorded voice/voice synthesis)/mechanically (e.g. animated gadget, movement of movable part).

User device may comprise smart phone/tablet/speaker/camera/display/TV/gadget/ vehicle/appliance/device/IoT, device with UI/GUI/voice/audio/record/capture/sensor/playback/ display/animation/VR/AR (augmented reality)/-voice (assistance/recognition/synthesis) capability, and/or tablet/laptop/PC.

Map/floor plan/environmental model (e.g. of home/office/building/store/warehouse/ facility) may be 2-/3-/higher-dimensional. It may change/evolve over time (e.g. rotate/zoom/ move/jump on screen). Walls/windows/doors/ entrances/exits/forbidden areas may be marked. It may comprise multiple layers (overlays). It may comprise maintenance map/model comprising water pipes/gas pipes/wiring/cabling/air ducts/crawl-space/ceiling/underground layout.

Venue may be segmented/subdivided/zoned/grouped into multiple zones/regions/ sectors/sections/territories/-districts/precincts/localities/neighborhoods/areas/stretches/expance such as bedroom/living/dining/rest/storage/utility/-warehouse/conference/work/walkway/ kitchen/foyer/ garage/first/second floor/offices/reception room/area/regions. Segments/regions/ areas may be presented in map/floor plan/model with presentation characteristic (e.g. brightness/intensity/luminance/color/chrominance/texture/animation/flashing/rate).

An example of disclosed system/apparatus/method. Stephen and family want to install disclosed wireless motion detection system to detect motion in their 2000 sqft two-storey town house in Seattle, Washington. Because his house has two storeys, Stephen decides to use one Type2 device (named A) and two Type1 devices (named B and C) in ground floor. His ground floor has three rooms: kitchen, dining and living rooms arranged in straight line, with dining room in middle. He put A in dining room, and B in kitchen and C in living room, partitioning ground floor into 3 zones (dining room, living room, kitchen). When motion is detected by AB pair and/or AC pair, system would analyze TSCI/feature/characteristics/STI/MI and associate motion with one of 3 zones.

When Stephen and family go camping in holiday, he uses mobile phone app (e.g. Android phone app or iPhone app) to turn on motion detection system. If system detects motion, warning signal is sent to Stephen (e.g. SMS, email, push message to mobile phone app). If Stephen pays monthly fee (e.g. $10/month), a service company (e.g. security company) will receive warning signal through wired (e.g. broadband)/wireless (e.g. WiFi/LTE/5G) network and perform security procedure (e.g. call Stephen to verify any problem, send someone to check on house, contact police on behalf of Stephen).

Stephen loves his aging mother and cares about her well-being when she is alone in house. When mother is alone in house while rest of family is out (e.g. work/shopping/vacation), Stephen turns on motion detection system using his mobile app to ensure mother is ok. He uses mobile app to monitor mother's movement in house. When Stephen uses mobile app to see that mother is moving around house among the three regions, according to her daily routine, Stephen knows that mother is ok. Stephen is thankful that motion detection system can help him monitor mother's well-being while he is away from house.

On typical day, mother would wake up at 7am, cook her breakfast in kitchen for 20 minutes, eat breakfast in dining room for 30 minutes. Then she would do her daily exercise in living room, before sitting down on sofa in living room to watch favorite TV show. Motion detection system enables Stephen to see timing of movement in 3 regions of house. When motion agrees with daily routine, Stephen knows roughly that mother should be doing fine. But when motion pattern appears abnormal (e.g. no motion until 10am, or in kitchen/motionless for too long), Stephen suspects something is wrong and would call mother to check on her. Stephen may even get someone (e.g. family member/neighbor/paid personnel/-friend/social worker/service provider) to check on mother.

One day Stephen feels like repositioning a device. He simply unplugs it from original AC power plug and plugs it into another AC power plug. He is happy that motion detection system is plug-and-play and the repositioning does not affect operation of system. Upon powering up, it works right away.

Sometime later, Stephen decides to install a similar setup (i.e. one Type2 and two Type1 devices) in second floor to monitor bedrooms in second floor. Once again, he finds that system set up is extremely easy as he simply needs to plug Type2 device and Type1 devices into AC power plug in second floor. No special installation is needed. He can use same mobile app to monitor motion in both ground/second floors. Each Type2 device in ground/second floors can interact with all Type1 devices in both ground/second floors. Stephen has more than double capability with combined systems.

Disclosed system can be applied in many applications. Type1/Type2 devices may be any WiFi-enabled devices (e.g. smart IoT/appliance/TV/STB/speaker/refrigerator/stove/ oven/microwave/fan/heater/air-con/router/phone/computer/tablet/ accessory/plug/pipe /lamp/ smoke detector/furniture/fixture/shelf/cabinet/door/window/lock/sofa/table/chair/-piano/utensil/ wearable/watch/tag/key/ticket/belt/wallet/pen/hat/necklace/implantable/phone/eyeglasses/glass panel/-gaming device) at home/office/facility, on table, at ceiling, on floor, or at wall. They may be placed in conference room to count people. They may form a well-being monitoring system to monitor daily activities of older adults and detect any sign of symptoms (e.g. dementia, Alzheimer's disease). They may be used in baby monitors to monitor vital signs (breathing) of babies. They may be placed in bedrooms to monitor sleep quality and detect any sleep apnea. They may be placed in cars to monitor well-being of passengers and drivers, detect sleepy drivers or babies left in hot cars. They may be used in logistics to prevent human trafficking by monitoring any human hidden in trucks/containers. They may be deployed by emergency service at disaster area to search for trapped victims in debris. They may be deployed in security systems to detect intruders.

In some embodiments, the present disclosure discloses deep learning based wireless sensing using a foundation model (FM). In some embodiments, a deep neural network (DNN; or deep learning network, or network of neural networks)/model/FM/LLM may be used as a classifier/detector to classify/detect input into a number of outcome classes. The classifier/detector may comprise a neural network-based feature extraction module (or stage-1 network) followed by a neural network-based classifier/detector module (or stage-2 network). The feature extraction module may be a convolutional neural network (CNN) with N2 layers, each layer with multiple associated convolution filters. The convolution filters may be applied (separately/independently) to each of a plurality of input matrices. Down-sampling may be applied. The classifier/detector/DNN/model/FM/LLM module may comprise one of: feedforward neural network (FNN), fully-connected network (FCN), convolutional neural network (CNN), recurrent neural network (RNN), long short-term memory (LSTM), or transformer. An input to the DNN/model/FM/LLM may be computed/generated/prepared based on a plurality of the 1D transform (at some granularity/granularities).

In some examples, some variables used in the present disclosure may include: N1 TSCI (although N1 may be different for different situations/setups/venues, DL may expect M1 TSCI, where M1 may be larger/smaller than or equal to N1), N2 layer of CNN (M2), N3 layer of FCN (M3), N4 CIC of each CI (M4), N5 CI in a time period (M5), N6 pairs from N1 TSCI (M6), N7 TX antenna , N8 RX antenna, N9 sliding time window in time period (M9), N10 device-pair of Type1/Type2 devices (M10), N11-point 1D transform (M11), N12 (out of N4) selected CIC (or per-component 1D transform) to compute per-TSCI 1D transform, N13-point resampling (from N11 point) , N14 (out of N1) selected per-TSCI 1D transform to compute per-device-pair 1D transform.

In some examples, a wireless sensing system may include N10 TX-RX device pairs, N1 TSCI/pair, N4 CIC/CI. For example, in the wireless sensing system there may be N10 TX-RX device-pairs in a venue, each TX-RX device pair of the system comprising a respective Type1 heterogeneous wireless device (TX device) of the system and a respective Type2 heterogeneous wireless device (RX device) of the system working together to perform at least one wireless sensing task (e.g. occupancy/presence detection/learning/supervised learning/ unsupervised learning/self-supervised learning/- generative pretext task based on restoration/feature learning/feature similarity as pretext task/task transfer/contrastive learning, or more than one tasks/subtasks). A wireless sensing task may be performed in a robust, environmentally independent manner (e.g. for any N10, for any TX-RX device pair with any bandwidth/modulation, for any placement/orientation of TX/RX devices, for TX/RX devices with any amount of antennas, for any venue, etc.).

For each TX-RX device-pair, a respective wireless signal (e.g. WiFi signal, cellular signal, UWB, Bluetooth, radar signal, etc.) may be transmitted from a respective Type1 device (TX) with respective N7 TX antennas to a respective Type2 device (RX) with respective N8 RX antennas through a respective wireless channel of a venue. A respective number, N1=N7*N8, of time series of channel information (TSCI, e.g. CSI, CIR, CFR, RSSI) of the respective wireless channel may be obtained/extracted from the respective received wireless signal by the respective Type2 device, each TSCI being associated with one of the N7 TX antennas and one of the N8 RX antennas.

In some cases, the TX antennas may be close to each other and the RX antennas may be also close to each other, such that all the N1 TSCI may be monitoring same objects/events in a same region/zone of a venue. Thus they may be analyzed together (e.g. by computing autocorrelation function (ACF) or short-time Fourier transform (STFT) based on all N1 TSCI) for a task.

In other cases, the TX antennas may be strategically placed at different locations/corners of the venue (e.g. different/adjacent/opposite corners of a car). Similarly, the RX antennas may be placed at different locations/corners of venue (e.g. different/adjacent/opposite corners in a car). The corresponding N1 TSCI may be used to monitor different regions/zones of the venue and/or same/different objects/motions/ events. Thus, each of the N1 TSCI may be analyzed independently (e.g. by computing N1 ACF, each based on respective TSCI) for a task.

The TSCI may be preprocessed (e.g. denoising, phase cleaning, correction, compensation). Each channel information (CI) of the N1 TSCI may have respective N4 components (called "CI components" or CIC, e.g. the components may be multiple subcarriers in CFR, multiple taps in CIR). Each CI may be represented as a N4-tuple vector (each of the N4 vector component may be respective CI component, or a function (e.g. magnitude/magnitude square/phase or a function of them) of the respective CI component). N7, N8, N1 and/or N4 may be same/different for different device-pairs (e.g. different N1 due to different amount of TX/RX antennas of Type1/Type2 devices, different N4 due to different bandwidth of the wireless signals: 20/40/80/160/320/640 MHz, etc.). The TSCI may be decomposed into N4 time series of CIC (TSCIC), each TSCIC associated with respective one of the N4 CIC of respective CI of TSCI. A feature of each CIC (such as magnitude, magnitude, phase, or a function of such) may be computed.

There may be multiple venues. Each venue may have respective N10 device-pairs. Different venues may have a different number of N10. Each device-pair may have respective N1 TSCI. Different device-pairs may have different N1. For each venue, there may be multiple states (e.g. no-presence, presence, no-motion, human-motion-in-kitchen, nonhuman-motion-in-kitchen, human-motion-in-living-room, nonhuman-motion-in-living-room, etc.). For the venue, multiple sets of respective N1 TSCI may be captured, each set for a respective state.

In some embodiments, the wireless sensing system may include deep learning based system blocks. A deep neural network (DNN) (e.g. deep learning(DL), FNN, FCN, CNN, RNN, LSTM, transformer, network, deep network, network of network, mixture of experts (MoE), model , foundation model(FM), and/or large language model(LLM), etc.) may be used to perform at least one wireless sensing task based on the respective N1 TSCI generated by the N10 TX-RX device-pairs. The wireless sensing system may comprise several major system blocks: (1) a TSCI generation block in which, for each of the N10 TX-RX device pair, respective N1 TSCI are generated by the respective receiver (RX) of the device-pair based on respective wireless signal transmitted from respective transmitter (TX) to the respective RX. N1 may be different for different device-pairs. (Different device-pairs may have same/different N1, same/different sounding frequency and/or same/different wireless signal bandwidth, resulting in same/different amount of CIC); (2) a data augmentation block in which augmented TSCI (comprising augmented CI and/or augmented CIC) are generated based on TSCI obtained in the CSI generation block and/or CSI preprocessing block. (The augmented TSCI may be used for generating augmented DNN-input for training/running DNN, e.g. in contrastive learning, predictive learning); (3) a TSCI preprocessing block in which, for each TX-RX device-pair, the respective N1 TSCI are converted/preprocessed into respective M1 regularized input TSCI which has standard/unified/ regularized format/characteristics for the next block (embedding block). (The M1 may be same for all device-pairs. The M1 regularized input TCSI with the regularized format may be used by the embedding block to generate DNN-input for training/running DNN); (4) an embedding block in which, for each TX-RX device-pair, the respective M1 regularized input TSCI are used/processed to generate DNN-input (an embedding of preprocessed input) to be fed as input to the next block (DNN). (While TSCI of different device-pairs may have significantly different sampling characteristics/format (e.g. sounding rate, amount of CIC) unsuitable for the embedding block, the M1 regularized input TSCI with the regularized characteristics/format are readily used by embedding block. The DNN-input is in a format suitable for use by DNN); (5) a deep neural network (DNN) block which takes DNN-input as input and output a task result. The DNN may comprise any of: neural network (NN), feedforward NN (FNN), convolutional NN (CNN), recurrent NN (RNN), long-short term memory (LSTM), transformer, autoencoder, fully-connected (FCN), mixture of experts (MoE), generative adversarial network (GAN), network of networks, with associated model (AI model), foundation model (FM), and/or large language model (LLM).

In a training phase of the model of DNN, machine learning (e.g. supervised/unsupervised/self-supervised/meta learning, reinforced training, few-shot training, transfer learning, etc.) may be used to train the model of DNN (e.g. with a large set of model parameters) using a set (e.g. large set) of training data. The set of training data may comprise a set of TSCI obtained by various TX-RX device-pairs transmitting wireless signals with various characteristics (sounding rate, carrier frequency, bandwidth) in various venues under various events/conditions/states and measuring the TSCI based on the received wireless signals. There may be a wide variety of wireless devices in the device-pairs comprising access point (AP), client devices, IoT devices, consumer electronics, computing devices, smart device, vehicle devices, etc. The training data may/may not be labeled. In unsupervised training/self-supervised training, the training data may not include any label. In supervised training/reinforced/few-shot/meta/transfer training, some/all training data may be labeled. In machine learning, a loss function may be defined/computed and the parameters of the DNN model may be adjusted to optimize (e.g. minimize) the loss function.

In some embodiments, the DNN of the wireless sensing system may be trained using a combination of contrasting learning and predictive learning. The DNN may map each CI data to a latent/embedding point in a latent/embedding space. In contrastive learning, a contrastive loss function may be defined/computed based on a distance score/similarity score in latent space (embedding space) and may be minimized for the set of training data by adjusting the DNN model parameters. The DNN model parameters may be trained such that a pair of similar inputs (positive pair, e.g. two augmented inputs, or a TSCI and associated augmented TSCI, or a DNN-input and associated augmented DNN-input) may have a small distance score (or high similarity score) in latent/embedding space and thus a lower contrastive loss. A pair of dissimilar inputs (negative pair, e.g. two different TSCI associated with different events, or with different venue) should have a large distance (or small similarity score) and thus a larger contrastive loss.

In some embodiments, the DNN may generate a predicted CI data. In the predictive training, a reconstruction/-prediction loss function (e.g. mean square error, MSE) may be defined/computed between a predicted CI data and an actual CI data, and may be minimized for the set of training data by adjusting the DNN model parameters.

In the wireless sensing system, a total loss function may be computed/defined as an aggregate (e.g. weighted sum or weighted product) of the contrastive loss function and the reconstruction loss function, and may be minimized. In the weighted sum/product of the two loss functions, the weight may be a fixed pre-defined value (e.g. 0.1/0.3/0.5/0.7/0.9) throughout the training. Alternatively, in the training, the weight may start with an initial value and may be changed gradually (e.g. according to a schedule, or controlled by a rate parameter) as the training proceeds (e.g. the weight changed from 0.1 gradually to 0.5).

In some embodiments, the system may have a cloud-edge architecture, where some system blocks (e.g. the TSCI generation block, the TSCI preprocessing block, the data augmentation block, and/or the embedding block) may be in the edge (e.g. a processor of an RX of a TX-RX device-pair, a local server or device) while some other blocks (e.g. the DNN block, the embedding block, the data augmentation block) may be in the cloud (e.g. in a cloud server).

In some examples, as transmission/storage of TSCI is tedious, time consuming, and very demanding on transmission resources/bandwidth and storage resources/memory, transmission of TSCI from edge to the cloud may be avoided by putting the TSCI generation block, the TSCI preprocessing block, the data augmentation block, and the embedding block in the edge, and by putting the DNN block in the cloud. All the immediate processing of any TSCI may be performed in the edge (e.g. processor associated with RX or edge server) to generate the DNN-input and augmented DNN-input. The DNN-input and augmented DNN-input may be transmitted to the cloud (cloud server). The DNN model with lots of parameters may be stored in the cloud, trained/fine-tuned in the cloud and run/executed in the cloud.

In some embodiments, the transmission of the DNN-input may still be considerable and significant. To avoid the transmission of DNN-input from the edge to the cloud, the DNN may further be decomposed into two stages: (1) a CNN to extract features from the DNN-input, and (2) another neural network (e.g. transformer, auto-encoder, FCN, RNN, LSTN) that takes the extracted features as input and output the task results. The stage-1 CNN used to extract features of DNN-input may further be placed in the edge, while the stage-2 neural network may be placed in the cloud. The extracted features by the stage-1 CNN may be transmitted from the edge to the cloud. Typically, a transmission of the extracted features may be much less demanding (e.g. in terms of bandwidth, time delay, memory storage) than the transmission of the DNN-input.

In some cases, for each TX-RX device-pair, transmission of DNN-input/augmented DNN-input, or transmission of the extract features, from the edge (e.g. from the RX of the device-pair) to the cloud may be further reduced by performing a motion detection locally in the edge (e.g. by a motion detection module of the RX of the device-pair) based on the N1 TSCI (without using the DNN). The DNN-input or extracted features may be transmitted only if motion is detected by the motion detection module. In a motion detection task, a similarity score between two temporally adjacent CI of a TSCI may be computed. Motion may be detected when the similarity score is greater than a threshold.

In some embodiments, "DNN-input" (or embedding) may generated from M1 "regularized" "input" TSCI for deep neural network (DNN). A deep neural network (DNN) (e.g. deep learning(DL), FNN, FCN, CNN, RNN, LSTM, transformer, network, deep network, network of network, mixture of experts(MoE), model , foundation model(FM), and/or large language model(LLM), etc.) may be used to perform at least one wireless sensing task based on a formatted input called "DNN-input" (with a certain format for the DNN, e.g. k-D matrix, k-D transform matrix) generated/formatted/ constructed from multiple CI/TSCI. In deep learning (e.g. training/ running/re-training/fine-tuning DNN), M1 regularized "input" TSCI (with associated regularized "input" sampling frequency being MF1, i.e. regularized "input" CI of each regularized "input" TSCI being sampled as MF1 sample/second) may be used/needed/required/ expected/supposed to be used in each input instance to construct the DNN-input. The CI of each of the M1 regularized "input" TSCI may be needed/required/expected/supposed to have M4 regularized "input" CIC. (The M1 regularized input TSCI may be obtained/constructed from the N1 TSCI associated with one TX-RX device pair, or from respective N1 TSCI associated with multiple TX-RX device pairs in the venue and/or additional venues.) There may be a time series of DNN-input. In each input instance, the M1 regularized input TSCI (e.g. all regularized input CI of the M1 regularized input TSCI in a sliding time window) may be used to generate/construct/assemble at least one "DNN-input" to the DNN (e.g. for training the DNN in a training phase, or to be processed/analyzed by the DNN to perform the at least one task).

In some embodiments, the DNN may be a mixture of expert (MoE), or an expert in a MoE. Different experts in a MoE may have/use the same DNN-input requirements/ formats/definitions. Alternatively, different experts in MoE may use/have different DNN-input formats/requirements/ definitions. For MoE, a device (e.g. an AP) may choose/decide/switch which one (or more) expert among a MoE is to be used/executed/called/ chosen to process the M1 regularized input TSCI (or to process a sliding time window of the M1 regularized input TSCI), to generate/compute respective DNN-input associated with the chosen expert(s).

The DNN-input to the DNN may be generated by applying any of the following operations to the M1 regularized input TSCI: preprocessing/processing/postprocessing/filtering, resampling, feature extraction, transformation, 1D/2D/k-D transform at a granularity level, concatenating/combining/ organizing/assembling to form a matrix, and/or another operation. The DNN-input may have fixed size (e.g. a 1D/2D/k-D matrix with fixed dimension and fixed size in each dimension). The fixed dimension and/or fixed size may be initialized/determined before the task. Alternatively, the DNN-input may have a flexible size which may be adaptively changed (e.g. changed during re-training/adaptation/learning/ evolution in the task, change of task, and/or restriction to/emphasizing a particular subtask of the task).

In some embodiments, one or more of the dimensions/elements of the DNN-input may be masked (e.g. masked/forced to be or replaced by zero, or some predefined pattern). A DNN-input mask may be associated with the DNN-input to indicate which elements are valid or invalid. The DNN-input mask may have the same dimension and size as the DNN-input. Any DNN-input mask elements may be either "0" or "1". A mask element of "1" may mean the corresponding element in the DNN-input may be valid and may be used by the DNN. A mask element of "0" may mean the corresponding element of the DNN-input is invalid and may be ignored by the DNN (or to be ignored in training/running/re-training/ refinement of DNN). A logical operation (e.g. logical AND) may be performed between the mask element and corresponding DNN-input element to force the DNN-input element to be zero (or another default value). Alternatively, the DNN may choose to synthesize/generate a padded/replacement/synthesized value to take the place of an invalid DNN-input element.

In some cases, the mask elements may take on additional values. For example, a mask element of "2" which may mean the corresponding element in the DNN-input may be a generated element generated using some padding/synthesizing/interpolation/generation algorithm, and is to be used with caution by the DNN. In another example, a mask element of "3" may mean the corresponding element in the DNN-input may be preprocessed/filtered/cleaned/denoised/conditioned in some method. The mask may be input to the DNN (e.g. as meta data). The mask may be included as part of the DNN-input. For any DNN-input, the associated DNN-input mask may be used in the execution/running of the DNN. When a DNN-input element is associated with a DNN-input mask element of "1" (meaning "valid"), the DNN-input element may be "valid" and may be used (in a normal manner) in all the associated DNN links (connections) in the DNN block.

In some embodiments, a DNN-input element associated with a DNN-input mask element of "0" (meaning "invalid") may be ignored/skipped/not-used in the associated DNN links in the DNN. Or equivalently, the DNN-input element may be "invalid" and may be forced to be a value (e.g. zero) so that it has no effect in the DNN. For any DNN links immediately connected to an "invalid" DNN-input element, model parameter associated with the "invalid" DNN-input element may be considered "invalid" momentarily for the DNN-input. The invalid DNN-links may be excluded in the computation of loss functions (e.g. contrastive loss function, reconstruction loss function, total loss function). In a training phase, back propagation may be used to propagate updated DNN model parameters in a backward manner. The DNN model parameters of the invalid links may not be updated for the DNN-input. The computation associated with the invalid DNN links may not be performed (or simply forced to be zero). Any node with all input links being invalid may be considered "invalid" momentarily for the DNN-input.

In some embodiments, masking may be performed in TSCI set, TSCI, or CI. There may be N1 TSCI associated with a TX-RX device pair, each TSCI with N5 CI in a time period, each CI with N4 CIC. From the N1 TSCI, M1 regularized input TSCI may be constructed, each regularized input TSCI with M5 regularized CI in the time period, each regularized CI with M4 CIC. Any of these items may be valid/invalid/missing/noisy. Respective masks may be constructed/computed/-defined to mark corresponding states.

For TSCI-set mask, some TSCI in the set of N1 TSCI and/or the set of M1 regularized input TSCI may be invalid/missing/noisy/bad. Thus a TSCI-set mask comprising N1/M1 mask elements may be constructed/computed for the N1 TSCI/the M1 regularized input TSCI, each mask element associated with respective TSCI. Similar to the DNN-input mask elements, any TSCI-set mask element may be either "0" (to indicate invalid TSCI), or "1" (to indicate valid TSCI), or other logical flags/values such as "2" (e.g. to indicate "padded", or "synthesized", or "denoised", or "processed" TSCI). Invalid TSCI may not be used, while valid TSCI may be. A synthesized/padded/denoised/processed/borrowed TSCI may be used/generated for and/or used to replace an invalid TSCI.

For TSCI mask, some of the N5/M5 CI may be missing/invalid in the time period in any of the N1 TSCI/the M1 regularized input TSCI. Thus a TSCI mask comprising N5/M5 mask elements may be constructed/ computed for the N5/M5 CI in the respective TSCI, each TSCI mask element associated with respective CI in the time period. Similar to the DNN-input mask elements, any TSCI mask element may be either "0" (to indicate invalid CI), or "1" (to indicate valid CI), or other logical flags/values such as "2" (e.g. to indicate "padded", or "synthesized", or "denoised", or "processed" CI). A respective padded/generated/ replacement CI may be generated/synthesized for and/or used to replace any invalid CI.

For CI mask, some of the N4/M4 CIC may be missing/invalid in the time period in any CI of the N1 TSCI/the M1 regularized input TSCI. Thus a CI mask comprising N4/M4 mask elements may be constructed/ computed for the N4/M4 CIC in respective CI of respective TSCI, each CI mask element associated with respective CIC of the CI. Similar to the DNN-input mask elements, any CI mask element may be either "0" (to indicate invalid CIC), or "1" (to indicate valid CIC), or other logical flags/values such as "2" (e.g. to indicate "padded", or "synthesized", or "denoised", or "processed" CIC). A respective padded/generated/replacement CIC may be generated/synthesized for and/or used to replace any invalid CIC.

In some embodiments, data augmentation is applied for wireless sensing. Data augmentation may comprise techniques to artificially expand/diversify (i.e. increase diversity and amount of) training data by creating variations/modifications of existing data (e.g. the N1 TSCI, the M1 regularized "input" TSCI, the "DNN-input") without actually collecting new data. Data augmentation may be applied to each DNN-input to generate one or more "augmented" DNN-input for training/re-training/refining the DNN. Data augmentation may also be applied to a CIC (regularized or not), a CI (regularized or not), a TSCI (regularized or not) and/or a set of TSCI (regularized or not) to generate respective one or more "augmented" CIC, "augmented" CI, "augmented" TSCI, and/or "augmented" set of TSCI. Augmented non-regularized CIC/CI/TSCI/set of TSCI may be used to generate/construct/form one or more "augmented" regularized CIC/CI/TSCI/set of TSCI. Any augmented regularized CIC/CI/TSCI/set of TSCI may be used to generate augmented DNN-input, for training/re-training/refining the DNN.

For example, data augmentation may be applied to a TSCI (regularized or not, augmented or not) to generate an augmented input TSCI which may be used to construct an augmented set of M1 regularized input TSCI for generating a respective augmented DNN-input. In particular, k of the M1 regularized input TSCI may be augmented to generate an augmented set of TSCI (comprising k augmented TSCI, and (M1-k) non-augmented TSCI) to generate one or more respective DNN-inputs, wherein k may be 0, 1, 2, .., or M1. Different augmentation steps/methodologies/procedures may be applied to different input TSCI. Even when none of the M1 regularized input TSCI is augmented, an augmented set of M1 TSCI may be generated from the set of M1 regularized input TSCI (e.g. by shuffling an order of the set of M1 regularized input TSCI, or by applying a same/common augmentation to all of the set of M1 regularized input TSCI).

In some embodiments, in the set of training data (training TSCI) for training the DNN, there may be imbalance of training data for different classes. More augmentation may be applied to a class with insufficient/less/imbalanced training data so as to generate more augmented training data. For classes with more/sufficient training data, augmentation may still be applied, to a lesser extent, to generate more variety/diversification of training data.

For matrix data, data augmentation may involve geometric transformation, rotation, flipping, cropping, scaling, translation, changing/adjusting colors/hue/brightness/contrast/saturation/dynamic range, edge enhancement, image filtering/blurring/sharpening, adding/injecting noise, occlusion, masking random regions, label-preserving perturbation, etc. Tabular data may be represented as matrices with rows as samples (e.g. TSCI) and columns as features (e.g. link associated with a TX antenna and an RX antenna). Data augmentation may comprise feature noise, feature shuffling (e.g. permute/ shuffle noncritical columns), interpolation between samples (e.g. interpolation between rows), GANs for synthetic data, or synthetic sample generation (SMOTE). Time series data (e.g. TSCI) may be represented as matrices. Augmentation may comprise time warping, permutation, shuffling, magnitude scaling, window slicing, temporal scaling/resampling/subsampling/ interpolation.

In some embodiments, the M1 regularized input TSCI may be generated based on N1 TSCI. The M1 regularized input TSCI used to generate the DNN-input may be obtained/constructed from the N1 TSCI of a device-pair. (Alternatively, the M1 regularized input TSCI may be obtained/constructed from TSCI of more than one device-pairs. The more than one device-pairs may be placed/situated/installed/reside in similar/same sub-region or sub-area of a venue and thus may monitor a same motion/state/activity in the sub-region/sub-area.) As N1 may be different for different device-pairs while M1 may be fixed, there may be three cases: (1) M1=N1, (2) M1<N1, (3) M1>N1.

For case (1): M1=N1, the M1 regularized input TSCI may not be ordered (i.e. it is simply a set/collection of M1 TSCI), and the M1 regularized input TSCI may simply comprise the N1 TSCI (i.e. only one combination). Alternatively, the M1 regularized input TSCI may be ordered. There may be (M1)! (i.e. M1 factorial, where (M1)!= (M1)*(M1-1)*(M1-2)*... *3*2*1) ways (permutations/ shuffling's) to generate the M1 regularized input TSCI from the N1 TSCI, resulting in (M1)! DNN-inputs. In other words, there may be (M1)! input instances of M1 ordered regularized input TSCI to generate (M1)! DNN-inputs to train/run the DNN based on the same N1 TSCI.

For case (2): M1<N1, the M1 regularized input TSCI may comprise a subset of the N1 TSCI. When the M1 regularized input TSCI are not ordered, there may be [C_(N1)^(M1)] = [(N1)!/(N1-M1)!/(M1)!] = (N1)*(N1-1)**(N1-2)*..* (N1-M1+1)/M1/(M1-1)/(M1-2)/.../3/2/1 ways (or combinations) to generate the M1 regularized input TSCI from the N1 TSCI. In other words, there may be [(N1)!/(N1-M1)!/(M1)!] input instances or DNN-inputs (each comprising M1 un-ordered input TSCI) to train/run the DNN based on the N1 TSCI. When the M1 regularized input TSCI are ordered, there may be [P_(N1)^(M1) ] = [(N1)!/(N1-M1)!] = (N1)*(N1-1)* (N1-2)*..*(N1-M1+1) ways (permutations/shuffling's) to generate the M1 regularized input TSCI from the N1 TSCI. In other words, there may be [(N1)!/(N1-M1)!] input instances of M1 ordered input TSCI to generate [(N1)!/(N1-M1)!] DNN-inputs to train the DNN based on the N1 TSCI.

For case (3): M1>N1, the N1 TSCI may be used to construct a total of M1 constructed TSCI. Each set of M1 constructed TSCI may be used to generate one (e.g. when M1 TSCI are not ordered) or more (e.g. when M1 TSCI are ordered) DNN-inputs. As M1>N1, some of the N1 TSCI may be "expanded" by repeating/duplicating/cloning them one or more times (i.e. a repeated TSCI may appear two or more times among the M1 TSCI).

Alternatively, one (or more) of the M1 constructed TSCI may be copied/borrowed/generated from one or more second TSCI associated with a second TX-RX device-pair (e.g. the original TX-RX device-pair and the second TX-RX device-pair may be in same/similar sub-region of venue and thus can both capture the same motion/state/activity). The second TSCI may be captured/obtained in the second TX-RX device-pair with same/different sampling parameters (e.g. different timing, different sampling/sounding rate, different amount of CIC). In the copying/borrowing/generation process, the second TSCI may be adapted/resampled/interpolated/synchronized to match the rest of the M1 constructed TSCI.

Alternatively, one (or more) of the M1 constructed TSCI may be obtained by combining/merging/mixing two or more TSCI (e.g. of the N1 TSCI and/or of another N1 second TSCI associated with the second TX-RX device pair) to form a "combined" TSCI. For example, some of the N4/M4 "combined" CIC of a "combined" CI of the combined TSCI may be (e.g. copied from) corresponding CIC of CI of a first TSCI, while some other of the N4/M4 combined CIC of the combined CI may be (e.g. copied from) corresponding CIC of CI of a second TSCI, and so on. Some of the N4/M4 CIC of a CI of the combine TSCI may be an aggregate (e.g. weighted sum/mean) of respective CIC of respective CI of the first TSCI and respective CIC of respective CI of the second TSCI. Weights in any weighted aggregate may be same/different for different CIC.

In some embodiments, the M1 regularized input TSCI may be generated based on P1 TSCI chosen from N1 TSCI. Alternatively, in any of cases (1), (2) or (3), a number, P1, of TSCI (with P1<M1) may be chosen/selected from the N1 TSCI (e.g. using maximal-ratio combining/MRC) and the P1 chosen TSCI may be used to construct a total of M1 constructed TSCI to generate a DNN-input (similar to case (3) above). In addition to including the P1 chosen TSCI in the M1 constructed TSCI, M1-P1 additional TSCI may be constructed. Similar to case (3), some of the P1 chosen TSCI may be "expanded" by repeating/duplicating/cloning them one or more times. One of the M1 constructed TSCI may be borrowed from another TX-RX device-pair. Two or more of the P1 chosen TSCI (and/or any borrowed TSCI from another TX-RX device-pair) may be "combined" to form a combined TSCI to be used as one of the M1 constructed TSCI.

In some embodiments, for DNN-input used for training/running/fine-tuning the DNN, a standard/target/nominal/reference/required/unified/regularized sounding frequency (or temporal rate of CI in a regularized input TSCI) may be assumed/required/expected/used/shared/common in the M1 regular input TSCI. Associated with a device-pair, a first sounding frequency may be the same/common among the N1 TSCI, and a second sounding frequency may be the same/common among the M1 regularized input TSCI. The second sounding frequency may be the standard sounding frequency for generating the DNN-input and may be the same for all device-pairs. But the first sounding frequency may be same/different from the second sounding frequency. If different, resampling may be done to ensure the M1 regularized input TSCI have the second sounding frequency. In addition, the first sounding frequency may be different/same for different device-pairs (e.g. one may be 1 Hz (i.e. 1 sounding/s), another may be 10 Hz, and yet another one may be 1000 Hz). The re-sampling (e.g. interpolation, zero/first/second/ ../higher order interpolation, spline interpolation, decimation, subsampling or any combination) may be performed on the N1 TSCI to generate the M1 regularized input TSCI such that the sounding frequency of resampled CI/CIC of some/all TSCI associated with any device-pairs may have the assumed/required/ expected/used/share/common sounding frequency. Suppose a first TSCI with first sounding frequency F1 is to be resampled to become a second TSCI with second sounding frequency F2. Consider a sliding time period of T1. There may be F1*T1 CI/CIC of the first TSCI in the sliding time period, while there may be F2*T1 CI/CIC of the second TSCI in the sliding time period. The resampling may resample the F1*T1 CI/CIC to generate the F2*T1 CI/CIC, based on some resampling filter. The resampling may happen before, or after, the generation of the M1 regularized input TSCI from the N1 TSCI.

In some embodiments, a time mask may be constructed/computed/defined for each TSCI (regularized, or not) in a period of time. The time mask may comprise a plurality of time mask elements in a fine time base (e.g. with a time resolution of 10ms for 100Hz, 1ms for 1000Hz, 0.2ms for 5000Hz, 0.1ms for 10000Hz) capable of representing samples at a high sampling frequency (e.g. 100/1000/ 5000/10000 Hz), each time mask element associated with a respective relative time stamp (expressed with respect to the time base) in the period of time. A time separation between consecutive time mask elements (time difference between their time stamps) may be/reflect the time base/resolution to represent the sampling time stamps. A time mask element of "1" may mean a CI is valid/sampled at the respective time stamp, while a time mask element of "0" may mean the CI at respective time stamp is invalid/not-sampled/not-captured/not-generated. In addition, there may be additional time mask element labels such as "2" which may mean the respective CI is generated/synthesized using some method (e.g. zero-order hold/interpolation, first-order/linear interpolation, etc.). A time mask element label "3" may mean the respective CI is preprocessed/cleaned/denoised/conditioned using some method. The time mask may be metadata of respective TSCI. A time mask element label "4" may mean the respective is resampled.

In some embodiments, data augmentation may be performed using time scaling and warping. Time scaling and/or time warping may be applied to any TSCI (e.g. any of the N1 TSCI or any of the M1 regularized input TSCI) to generate an augmented TSCI. Time scaling (e.g. time compression, or time expansion from 7 seconds to 10 seconds) may be a data augmentation technique used primarily for time series data or sequential signal (e.g. TSCI). It may modify the temporal length (duration) of a signal (TSCI, or a time period/section of TSCI) while preserving its essential characteristics. Time compression may reduce the duration of the signal (e.g. from 10 seconds to 7 seconds) by removing samples (e.g. CI of TSCI) or resampling at a higher rate. Time expansion may increase the duration of signal (e.g. from 7 second to 10 second) by inserting samples or resampling at a lower rate. For example, a TSCI comprising an object motion lasting for 10 seconds. Time compression may be applied to the TSCI to generate an augmented TSCI with object motion lasting for 7 seconds. Time scaling may be linear or nonlinear. Dynamic time warping (DTW) may nonlinearly stretch or shrink segments to match a target length. Neural time scaling may use autoencoders or generative adversarial networks (GANs) to learn optimal time-warping functions. An augmented time mask may be associated with the augmented TSCI. Time scaling and/or time warping may be applied to the time mask of the TSCI to generate the augmented time mask of the augmented TSCI.

In some embodiments, data augmentation may be performed based on scaling/noise injection. Augmented TSCI, augmented CI, augmented CIC may be generated by adding noise to respective TSCI, CI and CIC. Noise (e.g. Gaussian/Laplacian noise, impulsive noise, salt-and-pepper noise) may be added to one of N4/M4 CIC of a CI of a TSCI to generate respective augmented CIC. The resulting CI and TSCI are then augmented CI and augmented TSCI due to the augmented CIC. For different CIC, noise with same/different statistical distribution/behavior may be added. A feature (e.g. magnitude, magnitude-square, power) of TSCI/CI/CIC may be scaled/normalized to generate a respective augmented TSCI/CI/CIC.

In some embodiments, for each DNN-input (i.e. for each "to-be-augmented" DNN-input) generated from M1 regularized input TSCI for training/running the DNN (whether ordered or not ordered, whether before or after resampling), a number of associated augmented DNN-input for training/re-training/tuning the DNN may be generated. An augmented DNN-input may be generated by augmenting one or more of the M1 regularized input TSCI, or by augmenting one or more of the N1 TSCI. In the generation/construction of the augmented DNN-input, the to-be-augmented TSCI (also called to-be-replaced TSCI) may be replaced by an augmented TSCI generated from the to-be-augmented TSCI and/or the rest of the TSCI (i.e. the rest of the M1 regularized input TSCI and/or the rest of the N1 TSCI), using any data augmentation method.

In some embodiments, data augmentation may be performed based on permutation of multiple TSCI. In the generation of an augmented DNN-input, some/all of the M1 regularized input TSCI (or the N1 TSCI) may be augmented by applying a permutation/shuffling/re-ordering to the some/all of M1 regularized input TSCI (or the N1 TSCI). The individual TSCI may/may not be altered. This permutation/shuffling/re-ordering is at TSCI level.

In some embodiments, one or more CI/matrix may be represented as vectors. Each CI may be represented as a vector. For example, a CI with N CIC may be a (N)-tuple vector. Multiple vectors (e.g. CI vector) may be jointly represented as a combined vector by concatenating (or combining/grouping/merging) the respective vectors in some order. A number of time-stamped CI of a TSCI may be concatenated/grouped/combined together (e.g. in chronological order) to form a combined vector. For example, there may be N5 CI of a TSCI in a time period and they may be represented as a (N*N5)-tuple vector. Or, a CI may be concatenated with a denoised version of the CI and/or a transformed version of the CI to form a combined vector. Or, multiple CI/CIC from multiple TSCI may be concatenated to form a combined vector. A 2D matrix may be represented as a row-ordered vector, or column-ordered vector. Similarly, a k-D matrix may be scanned in a scanning order (e.g. raster or zig-zag scanning order) and then the scanned elements may be represented as a vector.

In some embodiments, data augmentation may be performed using transformation/permutation of vector/subvector. Transformation and/or permutation may be applied to any vector X (in a vector space), or a subvector of X (in a subspace of the vector space). Permutation is an arrangement of objects in a specific order. Permutation (e.g. rearranging/reorganizing/reordering/shuffling) may be applied to elements of a vector/subvector, or to a collection of time stamped quantities (such as a collection of CI of a TSCI, which are naturally ordered based on time stamp). Transformation may be applied to a vector or a subvector. Transformation may comprise any of: algebraic operations such as addition (e.g. add noise/Gaussian noise/impulsive noise), subtraction, multiplication (e.g. multiply by noise), division, scalar multiplication, permutation, shuffling, resampling, subsampling, truncation, quantization, extraction of a subset or a subvector, noise injection, 1D transform, etc. There may be three ways to generate augmented input using augmentation/permutation/shuffling/ transformation to: (1) multiple TSCI, (2) multiple CI in a TSCI, (3) multiple CIC of CI in a TSCI.

(1) Augmentation/permutation/transformation of multiple TSCI. First, augmentation/ transformation/ permutation/-shuffling may be applied to multiple TSCI (e.g. the N1 TSCI, the M1 regularized input TSCI, or a subset of them). The multiple TSCI may be ordered and some/all of them may be permuted/re-ordered/re-arranged/reorganized/shuffled (e.g. the "i-th" TSCI may become the "j-th" TSCI after permutation, where i and j are different), regardless of whether none/some/any/all individual input TSCI may be augmented or not.

(2) Augmentation/permutation/transformation of multiple CI of a TSCI. Second, augmentation/ transformation/permutation/shuffling may be applied to multiple CI of one TSCI. The multiple CI may comprise CI of the TSCI in one or multiple sliding time windows. The multiple sliding time windows may have same/ different window lengths. Respective permutation/transformation/shuffling may be applied to each individual time window of CI. Another permutation/transformation/shuffling may be applied to the multiple time windows (e.g. the "i-th" window may become the "j-th" window after permutation).

(3) Augmentation/permutation/transformation of multiple CIC of CI of a TSCI. Third, augmentation/ transformation/-permutation/shuffling may be applied to multiple CIC of CI of one TSCI to generate augmented CI, or to elements of a vector to generate an augmented vector. The transformation/ permutation/shuffling may comprise rotation and/or shifting. In particular, the CIC of each CI may be right rotated/left rotated, and/or right shifted/left shifted to generate an augmented CI.

In some embodiments, data augmentation may be performed using matrix multiplication. Let X1 be an N-tuple vector (a 1D array, or rank-1/order-1 tensor) which may represent one (or more) CI with N4/M4 CIC. Let X1(i) be the $i^{th}$ element/component of X1. Let X2 be an augmented N-tuple vector obtained/generated by transforming/permuting/shuffling the N elements/components of X1. The augmented vector X2 may be computed by multiplying the vector X1 by an NxN square matrix A1 (e.g. N4xN4 for N=N4, or M4xM4 for N=M4), i.e. X2=A1*X1 (e.g. a transformation of the rank-1 tensor, or a multi-linear map). As such, the augmentation may be linear.

In some embodiments, data augmentation may be performed using permutation. The A1 may be an NxN identity matrix such that X2=X1. The identity matrix is a diagonal matrix with diagonal elements being 1 and other elements being zero. Alternatively, A1 may be a permutation matrix, which may be the identity matrix with the columns or the rows permuted/shuffled. Each permutation matrix has a 1 in each column/row with the rest of the elements in the column/row being zero. For example, A1 may be an anti-diagonal matrix with the anti-diagonal elements being 1 and other elements being zero, which corresponds to a flipping of elements of X1 such that the elements are arranged in reverse order. For example, X2(1)=X1(N), X2(2)=X1(N-1), .., X2(i)=X1(N+1-i), .. X2(N-1)=X1(2), X2(N)=X1(1).

In some embodiments, data augmentation may be performed using rotation. The A1 may be the NxN identity matrix with the columns right-rotated by k, or left-rotate by N-k. Or the A1 may be the identity matrix with the rows up-rotated by k or down-rotated by N-k. The X2 may be X1 left-rotated (or up-rotated) by k, i.e. X2(i)=X1((i+k) mod N) where mod is modulo. In other words, X2(1)=X1(1+k), X2(2)=X1(2+k), .., X2(N-k)=X1(N), X2(N-k+1)=X1(1), X2(N-k+2)=X1(2), .. X2(N) =X1(k).

In some embodiments, data augmentation may be performed using shifting. The A1 may be the NxN identity matrix with the columns right-shifted by k, or with the rows up-shifted by k. The X2 may be the X1 left-shifted (or up shifted) by k, i.e. X2(1)=X1(1+k), X2(2)=X1(2+k), .., X2(N-k)=X1(N), X2(N-k+1)=0, X2(N-k+2)=0, .. X2(N)=0. The A1 may also be the NxN identity matrix with the columns left-shifted by k, or the rows down-shifted by k. The X2 may be the X1 right-shifted by k, i.e. X2(1)=0, X2(2)=0, .., X2(N-k1)=0, X2(N-k+1)=X1(1), X2(N-k+2)=X1(2), .. , X2(N)=X1(k).

In some embodiments, data augmentation may be performed using cropping. The augmented vector X2 may be generated by cropping. Some elements of X1 may be forced to be zero. In some case, some elements of X1 may be forced to be erratic (e.g. artificially large magnitude, very large magnitude). For example, all elements of the i-th row of A1 may be zero such that the i-th element of X2=A1*X1 may be zero.

In some embodiments, the system may perform sectional augmentation/permutation/ transformation. The N-tuple vector X1 may be subdivided/segmented into a number of "sections" or sub-vectors (e.g. first half, second half, or first/second/third/fourth quarter). Respective augmentation/ permutation/transform/shuffling may be applied to respective individual sections/sub-vectors. Another augmentation/permutation/transform/ shuffling may be applied to the number of sections/sub-vectors. Different sections/sub-vectors may have same/different amount of elements. For example, the CI may be a CFR for a 160MHz channel, and the CI vector X1 may be subdivided into eight sections or eight sub-vectors, each with CIC corresponding to a respective 20 MHz band. Or, X1 may be subdivided into four sections/sub-vectors, each with CIC corresponding to respective 40MHz band. Or X1 may be subdivided into two sections/sub-vectors, each with CIC corresponding to respective 80MHz band.

In some embodiments, each section/subvector may comprise a respective set/collection of consecutive vector elements (e.g. CIC with consecutive indices). Alternatively, the vector elements in a section may not be consecutive (i.e. indices may not be consecutive). For example, four sections/subvectors may be obtained by subsampling X1 by a factor of 4. One section may comprise the subsampled elements at a first subsampling phase (e.g. X1(1), X1(5), X1(9), .., or X(4n+1) for n=0, 1, ..), while a second section may comprise another phase of subsampled elements (e.g. X1(2), X1(6), X1(10), .., or X1(4n+2) for n=0, 1, ..). A third section may comprise X1(3), X1(7), X1(11), .., or X1(4n+3) for n=0,1,.., and a fourth section may comprise X1(4), X1(8), X1(12), .., or X1(4n+4) for n=0,1, .., etc. Different sections may have same/ different amount of (ordered) vector elements/CIC. The number of sections may be ordered/indexed. Some respective transformation/permutation/shuffling (e.g. rotation/shifting/ flipping/random) may be performed/applied in each section independently. Different/same transformation/permutation/shuffling may be applied to different sections.

In some embodiments, some transformation/permutation/shuffling (e.g. rotation/shifting/flipping/random) may be applied/performed to the number of sections. For example, an augmented vector X2 may be obtained by shifting or rotating the sections by k section-positions (or by k section index), i.e. i-th section shifted/rotated to become (i+k)-th section. For example, the first section of X1 may be shifted to become second section of X2 (e.g. k=1), the second section of X1 may be shifted to become third section of X2, and so on.

In some embodiments, CI interpolation may be performed in punctured transmission. Puncturing is a way to increase channel efficiency/ usage/throughput and to reduce latency by reducing interference effects in wireless channels and may happen during the transmission of wireless signals in one or more of the N10 TX-RX device-pairs TSCI. In punctured transmission (e.g. preamble puncturing in 802.11be, BSS coloring in 802.11ax/be) in an affected device-pair, one or more busy (e.g. with severe interference) or unavailable narrow channels may be excluded ("punctured") from a wide channel. As a result, some subband/subcarrier of the band of the wide channel (i.e. some CIC of a CI) may be skipped/not used/not available (e.g. due to severe interference). For example, a particular 20MHz sub-band in a 160MHz band may be busy/blocked and may be skipped such that the available bandwidth is effectively 140MHz (which may be the 160MHz band with a 20MHz "hole" or missing band). Without the puncturing, the 160MHz communication channel may need to fall back to 80MHz due to the interference. During punctured communication with associated "hole" or missing band in an affected TX-RX device- pair in a period of time, some corresponding CIC of each associated CI captured by the TX-RX device-pair in the period of time may be missing/unavailable/invalid. A first CI mask (as explained above) comprising N4 CI mask elements (or components) may be constructed/ defined for each CI of the N1 TSCI associated with the affected device-pair in the period of time, each CI mask element/component associated with respective CIC of the CI. Associated with the first CI mask, a second CI mask comprising M4 CI mask elements may be constructed/defined for each CI of the M1 regularized input TSCI in the period of time. Any CI mask element may be either "0" (to indicate invalid CIC), or "1" (to indicate valid CIC), or other logical flags/values such as "2" (e.g. to indicate "padded", or "synthesized", or "denoised", or "processed" CIC). A synthesized/generated/replacement/borrowed/interpolated CIC may be generated to replace an invalid CIC of a CI. The generated CIC of the CI may be generated based on an interpolation based on "adjacent" CIC. The adjacent CIC may comprise (a) other CIC of the CI with adjacent CIC indices, and/or (b) CIC of temporally adjacent CI in the same TSCI.

In some embodiments, data augmentation may be performed for multi-link operation (MLO). Multiple bands may be used for data/control transmission simultaneously. For example, for a TX-RX device-pair operating in multi-link operation (MLO) (e.g. IEEE 802.11be (Wi-Fi 7)), in which 3 bands may be used simultaneously: 2.4GHz, 5GHz and 6GHz. Multiple sets of respective N1 TSCI may be obtained from a TX-RX device-pair, each set associated with a respective band. The N1 may be same/different for different bands. The amount of CIC (N4) in different bands may be same/different.

In multi-link aggregation (MLA), multiple bands across multiple links may be combined to achieve larger bandwidth. Each link may be associated with a respective TX-RX device-pair, and a respective set of N1 TSCI. Different links may have same/different N1 and/or N4. In Multi-Link Switching (MLS), multiple bands across multiple links may be switched (e.g. one band at a time). Each band of each link may be associated with a respective set of N1 TSCI. In Asynchronous Multi-Link (AML), each of multiple links may have independent transmission resulting in respective set of N1 TSCI. In coordinated MLO (e.g. in 802.11bn), multiple AP may jointly manage punctured channels to optimize network-wide performance. Each AP may generate a respective set of N1 TSCI. In Co-BF (e.g. in 802.11bn), multiple (e.g. two) AP may simultaneously transmit to multiple target STA in the same channel by coordinating beamforming and null steering to prevent interference. This may enhance throughput/reliability and reduce latency in multi-AP environment. Each AP may generate a respective set of N1 TSCI. Independent data augmentation may be applied to each set of N1 TSCI. The multiple set of respective N1 TSCI may be combined/mixed/merged/ interchanged. A time mask may be shared by the multiple TSCI.

In some embodiments, DNN-input may be generated from M1 regularized input TSCI for deep neural network. The regularized CI of each of the M1 regularized input TSCI may be needed/required/expected/supposed to have M4 regularized CIC in order to generate the DNN-input. M4 may be a fixed/pre-defined number. But the CI of the N1 TSCI (of a device-pair) with N4 CIC may not be used directly as the regularized CI (with M4 regularized CIC) due to the mismatching amount of CIC, especially since N4 may be different for different device-pair. Thus M4 regularized CIC of the regularized CI may be constructed/converted from some N4 "initial" CIC of some "initial" CI. Alternatively, an (M4)-tuple regularized CI vector Y with M4 CIC/ components/elements may be constructed from a (N4)-tuple initial CI vector X with N4 initial components/elements/CIC. The vector Y may be computed as a matrix A2 of size M4xN4 multiplied by vector X, i.e. Y=A2*X. Often, the i-th row of matrix A2 may be a unity vector with (N4-1) "0" and one "1" at the j-th element, such that the i-th element of Y is the j-th element of X. Sometimes, the i-th row of A2 may comprise more than one non-zero elements with a sum of unity such that i-th element of Y is a weighted sum of corresponding elements of X, with corresponding weights as indicated in the i-th row of A2. The conversion from N4 initial CIC to M4 regularized CIC may happen before the construction of the M1 regularized input TSCI from the N1 TSCI such that each CI of the M1 regularized input TSCI may have M4 CIC. Alternatively, the conversion from N4 initial CIC to M4 regularized CIC may happen after the construction of the M1 regularized input TSCI such that each CI of the M1 regularized input TSCI may have N4 CIC which may then be converted to M4 regularized CIC.

In some embodiments, as N4 may be different for different device-pairs while M4 may be fixed, there may be 3 situations: (1) M4=N4, (2) M4<N4, (3) M4>N4.

For case (1): M4=N4, the M4-tuple regularized CI vector Y may simply be the N4-tuple initial CI vector X (i.e. Y=X, or equivalent, the matrix A2 may be an identity matrix). Alternatively, the regularized CI vector Y may be a permutation of the initial CI vector (i.e. matrix A2 may be an M4xM4 permutation matrix). There may be (M4)! different permutation matrices such that (M4)! different regularized CI vector Y may be generated from each initial CI vector X. Data augmentation may be applied to each respective regularized CI vector Y, or the respective DNN-input generated by the respective regularized CI vector Y.

For case (2): M4<N4, the regularized CI vector Y may comprise a subset of elements of initial CI vector X. There may be [P_(N4)^(M4) ] = [(N4)!/(N4-M4)!] = (N4)*(N4-1)* (N4-2)*..*(N4-M4+1) ways (permutations/shuffling's) to generate the M4-tuple regularized CI vector Y from the N4-tuple initial CI vector X. In other words, there may be [(N4)!/(N4-M4)!] input instances of M4-tuple regularized CI vector Y to generate [(N4)!/(N4-M4)!] DNN-inputs to train/run the DNN based on the N4-tuple initial CI vector X. One element of M4-tuple Y may be a "summary" (e.g. a linear combination, an aggregate, a weighted average/sum) of multiple elements of N4-tuple X. The M4 elements of M4-tuple Y may be chosen/selected from the N4 elements of N4-tuple X based on an algorithm/criterion (e.g. maximal-ratio combining/MRC, largest eigenvalues, etc.)

For case (3): M4>N4, as the M4-tuple Y needs more elements than the N4-tuple X possesses, at least M4-N4 elements need to be generated for Y based on X. A first way to generate one or more M4-tuple Y from N4-tuple X is zero-padding, in which zeros are padded around the elements of N4-tuple X to form a M4-tuple vector. A total of M4-N4 zeros may be padded at the beginning, or at the end, or partially at beginning and at end. In some cases, some of the M4-N4 zeros may be added/placed/inserted in between the N4 elements of X. A second way to generate M4-tuple Y from N4-tuple X is to "expand" X by repeating/ duplicating/cloning/mirroring at least one element of X. For example, a cyclic repetition of elements of N4-tuple X may be formed, and the M4-tuple Y may be any stretch/section of M4 elements of the cyclic repetition. In a second example, the elements of N4-tuple X may be mirrored to form a mirrored vector X2 comprising approximately 2*N4 elements. Then cyclic repetition of the elements of X2 may be formed, and the M4-tuple Y may be any stretch/section of M4 elements of the cyclic repetition. The mirrored vector X2 may be any of: (1) a (2*N4)-tuple vector [X(1), X(2), .. , X(N4-1), X(N4), X(N4), X(N4-1), .., X(2), X(1)], in which both X(1) and X(N4) appear twice, where X(i) is i-th element of X, (2) a (2*N4-1)-tuple vector [X(1), X(2), .. , X(N4-1), X(N4), X(N4-1), .., X(2), X(1)] in which X(1) appeared twice and X(N4) appeared once, (3) a (2*N4-1)-tuple vector [X(1), X(2), .. , X(N4-1), X(N4), X(N4), X(N4-1), .., X(2)], in which X(1) appeared once and X(N4) appeared twice, (4) a (2*N4-2)-tuple vector [X(1), X(2), .. , X(N4-1), X(N4), X(N4-1), .., X(2)], in which both X(1) and X(N4) appear once.

In some embodiments, a third way to generate M4-tuple Y from N4-tuple X is to generate each of the M4-N4 to-be-generated elements of M4-tuple Y as a respective linear combination of one or more elements of N4-tuple X. The M4-N4 generated elements may be placed/added/inserted at the beginning, or at the end, or partially at the beginning and at the end of elements of N4-tuple X. In some cases, the generated elements may be placed/added/inserted in between the N4 elements of X.

In some embodiments, N11-point 1D transform (e.g. auto-correlation function or ACF, short time Fourier transform or STFT) may be performed at a granularity level (e.g. per-CIC, per-TSCI, per-device-pair, all-device-pair). In a sliding time window, 1-dimensional (1D) N11-point transform (e.g. ACF, STFT) may be computed for CIC and/or CI of any TSCI (e.g. any of the N1 TSCI or the M1 regularized input TSCI of each device pair, or any of the M1 regularized input TSCI used to generate DNN-input for DNN/LLM) associated with any of the N10 device-pairs in the sliding time window, each 1D transform with N11 transform components. Let X be a N11-tuple vector of CIC/CI with N11 vector components/-CIC/CI. Let Y be a N11-tuple vector comprising the 1D transform of X. The 1D transform may be linear such that Y may be computed as Y=A*X, where A is a N11xN11 transform matrix. The 1D transform may also be nonlinear, or it may comprise a linear portion and a nonlinear portion. The 1D transform may comprise any of: autocorrelation function (ACF), short time Fourier transform (STFT), wavelet transform, Hadamard transform, or some frequency transform. The 1D transform may also be a trivial unity transform such that there is effectively no transform performed on the N11 CIC/CI. The N11 may be same/different for all TSCI associated with any of the N10 TX-RX device-pairs, even though different device-pairs may have same/different N4, N7, N8, and/or N1, same/different placement/orientation of TX and RX, and same/different system configuration/antenna types/antenna amounts/signal transmissions/modulation (e.g. WiFi 2.4GHz, WiFi 5GHz, WiFi 6GHz, WiFi 60GHz, 3G/4G/5G/6G/7G/8G, UWB, millimeter wave (mmWave), Bluetooth, etc.). In particular the N11 may be same for all TSCI, especially when all TSCI are associated with same sounding frequency.

In some embodiments, DNN-input may be generated based on N11-point 1D transform. The N11-point transform coefficients of some TSCI (e.g. the M1 regularized input TSCI) may be used to generate the DNN-input (or the M1 regularized input TSCI) for the DNN. Deep learning (DL, e.g. supervised learning, unsupervised learning, self-supervised learning) may be used to train or fine-tune (for a task/sub-task) the DNN/model/FM/LLM using training TSCI obtained/generated from a variety of device-pairs with same/different N4, N7, N8, N1 and with same/different training placement/orientation/ venue, sampling/sounding frequency, carrier frequency band, signal transmission/modulation, etc. The trained DNN/model/FM/LLM may be used for various/any/all device-pairs with various N4, N7, N8 and/or N1. The trained DNN/model/FM/LLM may be adapted/adopted/prompted/fine-tuned to work (e.g. with various additional DNN) for various sensing tasks (e.g. "down-stream" tasks). Fine tuning may change the DNN/model/foundation model/LLM itself while prompting may change the way to use the DNN/model/FM/LLM. There may be N9 sliding time windows in a time period (e.g. 0.1/1/10/100/1000/10000 seconds), and there may be many time periods along the time axis. Adjacent time periods may/may not overlap.

In some embodiments, different N1 may be used for different sliding time windows of different duration. The 1D transform may be performed for sliding time windows with different duration. Suppose the sounding frequency associated with a TSCI is F1. There may be a first series of sliding time windows each of duration T1, and a second series of sliding time windows each of duration T2. The 1D transform may be computed for each sliding time window of the two series of sliding time windows. For a first sliding time window of duration T1, a first N11-point 1D transform may be computed based on CI of the TSCI in the first sliding time window, with the first N11 being F1*T1. For a second sliding time window of duration T2, a second N11-point 1D transform may be computed based on the TSCI in the second sliding time window with second N11 being F1*T2. A short sliding time window (e.g. T1=10 seconds) may reflect short-term behavior while a long sliding time window (e.g. T2=1000 seconds) may reflect long/longer-term behavior.

In some embodiments, N11-point or N13-point 1D transform may be performed with resampling. The N11 may be different for different TSCI. For example, a first TSCI may be associated with a first sounding frequency F1 (e.g. 10 Hz) and a second TSCI may be associated with a second frequency F2 (e.g. 50 Hz). The 1D transform may be performed in both TSCI in respective time window associated with a common sliding time period T1 (e.g. 1/10/100/1000 seconds). The N11 for the first TSCI in the common time period may be T1*F1 while another N11 for the second TSCI in the common time period may be T1*F2. In the case that the two N11 are different for different TSCI, the N11 1D transform coefficients of the first TSCI in the common time period may be resampled (e.g. interpolated, decimated, and/or subsampled) to give N13 (which may be equal to the another N11) resampled transform coefficients, wherein N13 may be the same for all TSCI (e.g. N13 may be associated with the required/expected/ used/shared/common sounding frequency). Alternatively, the N11 CI/CIC in the sliding time period of the first TSCI (e.g. the common time period T1 in the first/ second TSCI) may be resampled to give N13 resampled CI/CIC (with the N13 being the same for all TSCI) and a N13-point 1D transform may be applied to the N13 resampled CI in the sliding time period to give N13 (resampled) transform coefficients. The N13-point (resampled) transform coefficients may be used to generate the DNN-input to the DL/DNN/model/FM/LLM, using the common format/ presentation/expression.

Different granularity levels may include: per-TSCIC, per-TSCI, per-device-pair, all-device-pair. The 1D transform may be computed at different granularity level (e.g. at per-TSCIC/per-component level, at per-TSCI level, at per-device-pair level, or at all-device-pair level). A hierarchy of granularity levels may be established/ constructed/determined. In the hierarchy, the per-component/per-TSCIC granularity level may be a lower granularity level compared with per-TSCI granularity level (i.e. the per-component/per-TSCIC granularity level may be "lower" than per-TSCI granularity level), which may be lower than per-device-pair granularity level, which in turn may be lower than all-device-pair granularity level. In any case, the 1D transform at a granularity level may be a transformation (e.g. of CI, or of CIC) at the granularity level from a first domain (e.g. time domain) to a second domain (e.g. transform domain), or vice versa, associated with the 1D transform. The transform domain may be a "time-lag" domain when 1D transform is ACF, or a frequency domain when 1D transform is Fourier/wavelet/trigonometric transform (e.g. FFT).

In some embodiments, higher granularity-level quantities can be computed based on multiple lower granularity-level quantities. A higher-granularity-level quantity (e.g. 1D transform, or 2-D transform, or motion statistics) in a time window may be computed based on a plurality of lower-granularity-level quantities in the time window. In particular, a higher-granularity-level 1D/2D/k-D transform may be/comprise an aggregate (e.g. sum/product/ mean, possibly weighted) of a plurality of lower-granularity-level 1D/2D/k-D transforms. A per-TSCI 1D/2D/k-D transform may be an aggregate of multiple per-component (or per-TSCIC) 1D/2D/k-D transforms. If each CI has N4 CIC, the per-TSCI 1D/2D/k-D transform may be an aggregate of N4 per-TSCIC 1D/2D/k-D transforms. A per-device-pair 1D/2D/k-D transform may be a first aggregate of multiple per-component (per-TSCIC) 1D/2D/k-D transform, or a second aggregate of multiple per-TSCI 1D/2D/k-D transform, or a third aggregate of the first and second aggregates. An all-device-pair 1D/2D/k-D transform may be a first aggregate of multiple per-component/per-TSCIC 1D/2D/k-D transform, or a second aggregate of multiple per-TSCI 1D/2D/k-D transform, or a third aggregate of multiple per-device-pair 1D/2D/k-D transform, or a fourth aggregate of the first, second and third aggregates. A 2D transform may be constructed based on a plurality of 1D transform. Recursively, a k-D transform may be constructed based on multiple (k-1)-D transforms.

In some embodiments, when more lower granularity-level quantities (in the plurality of lower granularity-level quantities) are used to compute a higher granularity-level quantity, the resulting higher granularity-level quantity may be more substantial/representative/revealing/reliable/ trustworthy. Thus a (or more than one) granularity-level score (e.g. a confidence/reliability/trust/ trustworthiness score) may be computed for/associated with each granularity-level quantity. The granularity-level score may be non-negative. The granularity-level score may be a real number (e.g. non-negative) between an upper bound and a lower bound. For example, it may be between -1 and 1, or between 0 and 1, or between 0 and 10, or between 0 and 100. The granularity-level score of (or associated with) the higher-granularity-level quantity (e.g. higher granularity-level 1D transform) may be larger when more lower-granularity-level quantities (e.g. lower granularity-level 1D transform) are used to compute the higher granularity-level quantity. The higher-granularity-level quantity may be monotonic increasing/non-decreasing with respect to each lower-granularity-level quantity. The higher granularity-level quantity (e.g. 1D transform) may be computed as a weighted sum/mean/quantity of multiple lower granularity-level quantities. A larger weight may be given/assigned to a lower granularity-level quantity with larger granularity-level score (i.e. larger weights for more substantial/representative/ revealing/confident/ reliable/trustworthy quantities as reflected by the associated granularity-level score) in the computation of the weighted sum/mean/quantity. The weight may be a function of the associated score. The function may be monotonic (e.g. monotonic increasing/non-decreasing). The weight may also be a function of an associated transform index. Alternatively, all weights may be equal (i.e. un-weighted) for all lower granularity-level quantities. The weights used in any weighted sum/mean/quantity may be normalized.

In some embodiments, per-component/per-TSCIC level 1D transform (N4/M4 for each TSCI, N1*N4/N1*M4 for each device-pair) may be performed. At the per-component/per-TSCIC granularity level (i.e. lowest level), a per-component (or per-TSCIC) 1D N11-point transform (e.g. ACF, STFT) associated with a CIC of CI of a TSCI of a device-pair may be computed for each of the respective N4 CIC of CI of each respective N1 TSCI of each of N10 device-pairs in the sliding time window (e.g. first CIC of all CI of each TSCI in the sliding time window). In the sliding time window, there may be N4 per-TSCIC/per-component 1D transforms corresponding to the respective N4 CIC of CI of each TSCI, each per-component 1D transform associated with a respective one of the respective N4 CIC of the TSCI. There may be N1*N4 per-component/per-TSCIC 1D transforms for the respective N4 CIC of the respective N1 TSCI of the device-pair (which is a TX-RX pair comprising a Type1 device (TX) and a Type2 device (RX)). For the M1 "input" TSCI with M4 CIC for each "input" CI used to generate the DNN-input for training DNN/model/FM/LLM, there may be M4 per-TSCIC 1D transform for the M4 "input" TSCIC of each input TSCI in the sliding time window, and there may be a total of M1*M4 per-TSCIC 1D transform for the M4 input TSCI.

In some embodiments, per-TSCI level 1D transform (1 for each TSCI, N1 for each device-pair) may be performed as aggregate of N4 per-component/per-TSCIC 1D transform. At the per-TSCI granularity level (or at wireless link level associated with a particular TX antenna and a particular RX antenna), a per-TSCI 1D transform associated with a TSCI (associated with respective TX antenna and respective RX antenna) of a device-pair may be computed as an aggregate of the respective N4 per-component 1D transforms of the TSCI of the device-pair in the sliding time window. There may be respective N1 per-TSCI 1D transforms for the device-pair, each associated with one of the N1 TSCI of the device-pair. For the M1 regularized input TSCI, there may be M1 per-TSCI 1D transform in the sliding time window. Alternatively, a per-TSCI 1D transform such as ACF may be computed for N11 CI of each TSCI directly. The computation of the 1D transform (e.g. ACF or other correlation/covariance-based 1D transform) may comprise products of two CI. To compute such products, each of the two CI may be represented as a respective N4-tuple CI vector with respective N4 vector elements/CIC (or respective M4-tuple vector with respective M4 CIC). The product of two CI may be the dot product of the two respective CI vectors. The aggregate may comprise any of: a sum, product, weighted sum, weighted product, mean, weighted mean/average, arithmetic mean, geometric mean, harmonic mean, percentile, median (50-percentile), minimum (0-percentile), maximum (100-percentile), trimmed mean (mean of percentile from A1-percentile to A2-percentile), mode, etc.

In some embodiments, each higher granularity-level 1D transform (e.g. per-TSCI 1D transform, per-TSCI ACF, per-TSCI STFT, etc.) may be a weighted aggregate (e.g. weighted average/product/mean) of the corresponding lower granularity-level 1D transform. For example, each per-TSCI 1D transform (e.g. per-TSCI ACF/STFT) may be a weighted average of the N4 associated per-TSCIC/per-component 1D transforms. The weights may be computed based on maximum ratio combining (MRC). The weights may be all equal such that the weighted average may simply be an un-weighted average. Some of the lower granular-level 1D transforms may be selected to compute the weighted average while the rest may not be selected. For example, a number, N12, of the N4 CIC (called "selected CIC") or TSCIC ("selected TSCIC") may be selected to compute the per-TSCI 1D transform, while the remaining N4-N12 of the N4 CIC (called un-selected CIC) or TSCIC ("unselected TSCIC") may be unselected. The weights for/of the selected lower granular-level 1D transform (e.g. the N12 selected CIC/TSCIC) may be non-zero while the weights for/of the un-selected lower granularity-level 1D transform (e.g. the N4-N12 unselected CIC/TSCIC) may be zero. The weight for a lower granularity-level 1D transform may be associated with/a function of/proportional to the lower granularity-level 1D transform evaluated at a particular transform index. For example, the weight for a selected CIC/TSCIC (i.e. the weight for the associated per-component/per-TSCIC 1D transform) may be the associated per-component/per-TSCIC 1D transform evaluated at a pre-defined non-zero transform index (e.g. the first non-zero transform index). Alternatively, the weighted aggregate (e.g. weighted average) may simply be an un-weighted aggregate (e.g. un-weighted average/product/mean) with all weights being equal. The weights may be normalized. For example, the weights for the N12 selected CIC/TSCIC may be normalized to unity so that their sum is unity (i.e. one).

In some embodiments, a feature (or characteristic value) of each lower granularity-level 1D transform may be computed. The selection of the selected lower granularity-level 1D transform may be based on an analysis/comparison of the lower granularity-level 1D transform. The feature may comprise (or may be based on) one or more local maxima and/or local minima of the 1D transform (or one or more local max/min of first/second/higher order derivatives of the 1D transform). The feature may be the 1D transform evaluated at a particular transform index. A number of the lower granularity-level 1D transform with the largest (or smallest) feature may be selected as the selected lower granularity-level 1D transform. If there are N12 selected lower granularity-level 1D transform, the N12 lower granularity-level 1D transforms with the top N12 features (or bottom N12 features) may be selected as the N12 selected lower granularity-level 1D transform. For example, to select the N12 selected CIC/TSCIC to compute the per-TSCI 1D transform, all N4 per-component/per-TSCIC 1D transforms may be analyzed and compared. A per-component/per-TSCIC characteristic value (e.g. the feature of the 1D transform) may be computed for each of the N4 per-component/per-TSCIC 1D transforms. The N12 selected CIC may then be selected based on the N4 per-component characteristic values. The N12 selected CIC may comprise/be the CIC associated with one of: maximum (100-percentile) characteristic value, or top (or largest) N12 characteristic values, or multiple local maxima, or minimum (0-percentile) characteristic values, or bottom (or smallest) N12 characteristic values, or multiple local minima, or median (50-percentile) characteristic value, or a group of N12 percentile characteristic value around the median.

In some embodiments, the characteristic value of any 1D transform (e.g. per-component/per-TSCIC 1D transform, or per-TSCI 1D transform, or per-device-pair 1D transform, or all-device-pair 1D transform) may be a first aggregate (e.g. minimum) of all, or a subset, of the N11 transform values of the 1D transform. The subset of transform values may be those associated with a subset of transform indices, such as a range of transform indices, from transform index a1 to index a2. The a1 may be N11*b1 and a2 may be N11*b2. The b1 may be 0.1/ 0.2/0.3/0.4 or other values. The b2 may be 0.6/0.7/0.8/0.9 or other values. The first aggregate may comprise/be a percentile, maximum (100-percentile), minimum (0-percentile), median (50-percentile), mean, weighted mean, arithmetic mean, geometric mean, harmonic mean trimmed mean (sum of percentile from A1-percentile to A2-percentile, e.g. (A1,A2)=(0,10), or (3,17), or (33,66), or (90-100), or (83,97)), difference between two percentile (A2-percentile minus A1-percentiel, e.g. (A1,A2)=(0,100), (10,90), (25,75)), and/or the transform value at a particular transform index (e.g. first non-zero transform index). In some embodiments, a particular characteristic value is minimum transform value in a subset of transform indices. In particular, the characteristic value may be a minimum of a subset of transform values, each of the subset of transform values has a transform index in a range from a1=N11*b1 to a2=N11*b2, with b1=0.2 and b2=0.8. And the N12 selected CIC may be the N12 CIC associated with bottom N12 characteristic values.

In some embodiments, N10 per-device-pair level 1D transform may be performed as aggregate of N1*N4 per-component 1D transform or N1 per-TSCI 1D transform. At the per-device-pair granularity level, a first per-device-pair 1D transform associated with a device pair of TX device and RX device may be computed as an aggregate of all the respective N1*N4 per-component 1D transforms associated with all the respective N4 CIC of CI of all respective N1 TSCI of the device-pair in the sliding time window. A second per-device-pair 1D transform associated with the device pair may be computed as another aggregate of all respective N1 per-TSCI 1D transforms associated with the respective N1 TSCI of the device-pair in the sliding time window. There may be N10 of first (or second) per-device-pair 1D transforms.

In some embodiments, N13 (out of N1*N4) selected per-component 1D transform may be performed to compute per-device-pair 1D transform. The first per-device-pair 1D transform may be a weighted average of all or a subset of the N1*N4 per-component/per-TSCIC 1D transforms (e.g. using maximum ratio combining (MRC). A number, N13, of the N1*N4 per-component/per-TSCIC 1D transforms may be selected to compute the first per-device-pair 1D transform, while a number, N1*N4 - N13, of the per-component 1D transforms may be unselected, wherein N13<(N1*N4). The weights for/of the N13 selected per-component 1D transforms (in the weighted average) may be non-zero while the weights for/of the N1*N4-N13 unselected ones may be zero. The weight for a selected per-component 1D transform may be the selected per-component 1D transform evaluated at a pre-defined non-zero transform index (e.g. first non-zero transform index). The weights for the N13 selected per-component 1D transforms may be normalized so that their sum is unity (i.e. one).

In some embodiments, to select the N13 selected per-component 1D transforms, all N1*N4 per-component 1D transforms may be analyzed and compared. And N1*N4 per-component/per-TSCIC characteristic values may be computed, one for each of the N1*N4 per-component/per-TSCIC 1D transforms. The N13 selected per-component 1D transforms may then be selected based on the N1*N4 per-component characteristic values. The N13 selected per-component 1D transforms may comprise/be the per-component 1D transforms associated with one of: maximum (100-percentile) characteristic value, or top (or largest) N13 characteristic values, or multiple local maxima, or min (0-percentile) characteristic values, or bottom (or smallest) N13 characteristic values, or multiple local minima, or median (50-percentile) characteristic value, or a group of N13 percentile characteristic value around the median. The N13 selected per-component 1D transforms may be associated with bottom (smallest) N13 per-component/per-TSCIC characteristic values.

In some embodiments, N14 (out of N1) may be selected per-TSCI 1D transformed selected to compute per-device-pair 1D transform. The second per-device-pair 1D transform may be a weighted average of all or a subset of the N1 per-TSCI 1D transforms (e.g. using maximum ratio combining (MRC). A number, N14, of the N1 per-TSCI 1D transforms may be selected to compute the second per-device-pair 1D transform, while a number, N1 - N14, of the per-TSCI 1D transforms may be unselected, wherein N14<N1. The weights for/of the N14 selected per-TSCI 1D transforms may be non-zero while the weights for/of the N1-N14 unselected ones may be zero. The weight for a selected per-TSCI 1D transform may be the selected per-TSCI 1D transform evaluated at a pre-defined non-zero transform index (e.g. first non-zero transform index). The weights for the N14 selected per-TSCI 1D transforms may be normalized so that their sum is unity (i.e. one).

In some embodiments, N14 may be selected per-TSCI 1D transform by analyzing all N1 per-TSCI characteristic values. To select the N14 selected per-component 1D transforms, all N1 per-TSCI 1D transforms may be analyzed and compared. And N1 per-TSCI characteristic values may be computed, one for each of the N1 per-TSCI 1D transforms. The N14 selected per-TSCI 1D transforms may then be selected based on the N1 per-TSCI characteristic values. The N14 selected per-TSCI 1D transforms may comprise/be the per-TSCI 1D transforms associated with one of: maximum (100-percentile) characteristic value, or top (or largest) N14 characteristic values, or multiple local maxima, or min (0-percentile) characteristic values, or bottom (or smallest) N14 characteristic values, or multiple local minima, or median (50-percentile) characteristic value, or a group of N14 percentile characteristic value around the median. The N14 selected per-TSCI 1D transforms may be associated with bottom (smallest) N14 per-TSCI characteristic values.

In some embodiments, all-device-pair level 1D transform may be performed as aggregate of N10*N1*N4 per-component 1D transform, or N10*N1 per-TSCI 1D transform, or N10 per-device-pair 1D transform. At the all-device-pair granularity level, a first all-device-pair 1D transform associated with all device-pairs may be computed as an aggregate of all the respective N1*N4 per-component 1D transforms associated with all the respective N4 CIC of CI of all respective N1 TSCI of all of the N10 device-pairs in the sliding time window. A second all-device-pair 1D transform associated with all device-pairs may be computed as another aggregate of all the respective N1 per-TSCI 1D transforms associated with the N1 TSCI of each of the N10 device-pairs in the sliding time window. A third all-device-pair 1D transform associated with all device-pairs may be computed as yet another aggregate of all the N10 per-device-pair 1D transforms associated with the N10 device-pairs in the sliding time window.

In some embodiments, the system may select lower granularity 1D-transform to compute all-device-pair 1D transform. The first/second/third all-device-pair 1D transform may be a weighted average of all, or a subset of, the respective lower-granularity 1D transforms. Some of the lower-granularity 1D transforms may be selected to compute the all-device-pair 1D transform while the remaining lower-granularity 1D transforms may be unselected. The weights for/of the selected lower-granularity 1D transforms (in the weighted average) may be non-zero while the weights for the unselected may be zero. The weight for a selected lower-granularity 1D transform may be the selected lower-granularity 1D transform evaluated at a pre-defined non-zero transform index (e.g. first non-zero transform index). The weights of all the selected lower-granularity 1D transforms may be normalized so that their sum is unity.

In some embodiments, the system may select the selected lower granularity 1D transform by analyzing the characteristic value in the lower granularity. To select the selected lower-granularity 1D transforms, all the lower-granularity 1D transforms may be analyzed and compared. A characteristic value may be computed for each of the lower-granularity 1D transforms, and the selected lower-granularity 1D transforms may be selected based on the characteristic values. The selected lower-granularity 1D transforms may comprise/be those associated with one of: maximum (100-percentile) characteristic value, or a plurality of top (or largest) characteristic values, or multiple local maxima, or min (0-percentile) characteristic values, or a plurality of bottom (or smallest) characteristic values, or multiple local minima, or median (50-percentile) characteristic value, or a plurality of percentile characteristic value around the median. The selected lower-granularity 1D transforms may be associated with a plurality of bottom (smallest) characteristic values.

In some embodiments, the system may perform sensing using motion statistics (MS) in sliding time window. In general, the sensing task (e.g. monitoring/ detection/estimation/recognition/counting of presence/motion/breathing/vital-sign/fall-down/ abnormality/movement/location/daily-activity of one or more objects) may be performed for each sliding time window by computing at least one motion statistics (MS) based on the respective N1 TSCI of each of the N10 device-pairs in the sliding time window. For example, motion detection may be performed by comparing a MS with a threshold. Object motion may be detected if at least one MS is greater than some threshold. The motion statistics (MS) may be computed at different granularity: for all-device-pairs, per-device-pair, per-TSCI and/or per CIC/TSCIC/component. The granularity level of the MS may be chosen to achieve different tradeoff between sensing task performance and sensitivity to any change in: (a) spatial arrangement of the device-pairs, (b) amount of spatial streams (or wireless links, or antenna-pairs), (c) amount of CIC (or channel bandwidth). An MS may be computed as/computed based on a feature of a N11-point 1D transform.

In some embodiments, a per-component/per-TSCIC MS may be computed for each TSCIC of each TSCI of each device-pair (or for each of respective N4 TSCIC of each of respective N1 TSCI of each of N10 device-pair) based on the CIC Of a plurality of CI of the TSCI in a sliding time window. There may be N4 per-component MS for each TSCI in the sliding time window. There may be N1*N4 per-component MS for each device-pair in the sliding time window. In some embodiments, a per-TSCI MS may be computed for each TSCI of each device-pair. The per-TSCI MS for a particular TSCI of a particular device-pair may be computed as an aggregate of all N4 per-component MS associated with the N4 CIC of CI of the particular TSCI of the device-pair. There may be N1 per-TSCI MS for the device-pair, each per-TSCI MS associated with respective one of N1 TSCI. In some embodiments, a first per-device-pair MS for a device-pair may be computed as an aggregate of all respective N1 per-TSCI MS associated with all respective N1 TSCI of the device-pair. A second per-device-pair MS for the device-pair may be computed as another aggregate of all respective N1*N4 per-component MS associated with all respective N4 CIC of CI of all respective N1 TSCI of the device-pair. There may be N10 per-device-pair MS associated with the N10 device-pairs. In some embodiments, a first all-device-pair MS may be computed as an aggregate of all N10 per-device-pair MS associated with the N10 device-pairs. A second all-device-pair MS may be computed as another aggregate of all N10*N1 per-TSCI MS associated with all respective N1 TSCI of all N10 device-pairs (assuming N1 is same for all device-pairs). A third all-device-pair MS may be yet another aggregate of all N10*N1*N4 per-component MS associated with all respective N4 TSCIC of all respective N1 TSCI of all N10 device-pairs (assuming N1 is same for all device-pairs and N4 is same for all TSCI).

In some embodiments, any MS at a granularity level may also be computed based on at least one 1D transform/k-D transform matrix at the granularity level. Any MS may comprise/be one of: a time reversal resonance strength (TRRS), an inner product of two adjacent CI vectors, a similarity score between two adjacent CI vectors, or a feature of 1D transform. The feature may be the 1D transform evaluated at a particular transform index/coefficient (e.g. ACF evaluated at a particular time lag such as one sampling period, or tau=1/Fs). The feature may be close to zero in a stationary environment and positive in a dynamic environment with object motion. Thus motion may be detected when the MS is greater than some threshold.

In some embodiments, the system may utilize all-device-pair statistics and sensitivity to spatial arrangements of N10 device-pairs. If the sensing task is performed/carried out using all-device-pair statistics (e.g. all-device-pair 1D transform/k-D transform/ MS/TSCI) of the sensing system (e.g. using the all-device-pair statistics as input to a neural network), the sensing system may have a tendency to be sensitive to the spatial arrangement of the N10 device pairs. An advantage of the use of the all-device-pair statistics is that, if the spatial arrangement of the N10 device pairs do not be changed in the future, the all-device-pair statistics may allow the system to have very good/superior sensing task performance. A disadvantage of the use of the all-device-pair statistics is that, if the spatial arrangement of the N10 device pairs are changed/moved/altered (e.g. moving the one/more device pairs in same venue, or simply being in a different/new venue), the sensing task performance/characteristics of the sensing system may be significantly affected/degraded/deteriorated.

In some embodiments, the system may utilize per-device-pair MS and sensitivity to spatial arrangements of N10 device-pairs. If the sensing task is performed/carried out using per-device-pair statistics (e.g. per-device-pair 1D transform/k-D transform/ MS/TSCI) of the sensing system (e.g. using the per-device-pair statistics as input to a neural network), the sensing system may not be sensitive to the spatial arrangement of the N10 device pairs. This is because many/various/a plethora of spatial arrangements of the N10 device pairs may be used to train/tune/configure the sensing system. An advantage of the use of per-device-pair statistics is that, if there is no change to the amount of antenna pairs or of spatial streams, the sensing system should have good performance. A disadvantage is that it may still be sensitive to any change/alteration/difference in antenna pairs/spatial streams in each device-pair.

In some embodiments, the system may perform sensing using MS in a time period. Sometimes, sensing task (monitoring/detection/estimation/ recognition/counting of presence/motion/breathing/vital-sign/fall-down/abnormality/movement/ location/daily-activity of objects) may be performed erroneously/sporadically due to noise and may lead to false positive/negative. To avoid false positive/negative, only when monitoring/detection/estimation/ recognition/counting is valid/repeated in sufficient number of sliding time windows in the time period (i.e. when a percentage of sliding time windows with positive/negative object monitoring/detection/ estimation/recognition/counting) is greater than a threshold (e.g. 30%, 50%, 70%, 90%), object monitoring/detection/estimation/recognition/ counting may be confirmed to be positive/negative in the time period. There may be additional (temporally adjacent/neighboring) time periods in which object motion is monitored/detected/ estimated/recognition/counted. Alternative way to detect object motion in time period. Alternatively, an extended time period may be found in which object motion may be detected. The extended time period may be partitioned into the time period and addition time periods.

In one embodiment/example, the multiple classification/detection outcomes may comprise a presence or an absence of user/intruder. The classification/detection may be performed when object motion is detected in the time period.

In some embodiments, the system may perform assembling/combining/concatenating 1D transform to form 2-D transform. To compute/generate/ prepare for input to the DNN/model/FM/LLM, multiple 1D transforms associated with a TSCI may be concatenated/ grouped/combined together to form a k-dimensional( "k-D", such as 2-D or 3-D or 4-D or higher D) transform matrix. There may be N9 sliding time windows in the time period. Recall that a1D per-TSCI N11-point transform may be computed based on a TSCI for each of the N9 sliding time windows in a time period, each N11-point 1D transform represented as a N11-tuple vector. For the TSCI, the N9 vectors associated the N9 1D N11-point transforms (at a granularity of per-TSCI) in the time period may be assembled/combined/concatenated to form a 2-dimensional (2-D) matrix (called "transform matrix" or "spectral matrix") of size N11xN9 (at the granularity of per-TSCI), each 1D transform (vector) being a column of the 2-D matrix. The horizontal axis of the 2-D transform matrix may be time axis and the vertical axis may be transform axis (e.g. frequency axis for 1D transform being STFT, or time-lag axis for 1D transform being ACF). An N11xN9 2-D transform matrix may be computed for each TSCI of each device-pair. Alternatively, a 1D per-TSCIC N11-point transform may be computed based on a TSCIC of the TSCI for each of the N9 sliding time windows in the time period, each N11-point 1D transform represented as a N11-tuple vector. For the TSCIC of the TSCI, the N9 vectors associated the N9 1D N11-point transforms (at a granularity level of per-TSCIC) in the time period may be assembled/combined/concatenated to form a 2-D) matrix (transform/spectral matrix) of size N11xN9 (at the granularity of per-TSCIC), each 1D transform (vector) being a column of the 2-D matrix. The horizontal axis of the 2-D transform matrix may be time axis and the vertical axis may be transform axis. A N11xN9 2-D transform matrix may be computed for each TSCIC of the TSCI. As there may be respective N4 CIC in CI of the TSCI, there may be N4 such N11xN9 2-D transform matrices for the TSCI. Note that N4 may be different for different device-pair.

In some embodiments, the system may perform a construction of k-D transform matrices. For each device-pair, there may be N1 TSCI and thus N1 associated 2-D transform matrices each of size N11xN9. The N1 2-D transform matrices may be combined/assembled/concatenated to form a 3-D transform matrix of size N1xN11xN9. For the venue, there may be N10 device-pairs and thus N10 associated 3-D transform matrices each of size N1xN11xN9. The N10 3-D transform matrices may be combined/assembled/concatenated to form a 4-D transform matrix of size N10xN1xN11xN9. In some situations, multiple venues (e.g. living room, dining room, kitchen, second floor, etc.) may be considered together for a task. The multiple 4-D transform matrices may be combined/assembled/concatenated (e.g. recursively) further to form 5-D or higher dimensional transform matrices. Any k-D transform matrix may be computed at one of the granularity levels: per-TSCIC/per-TSCI/per-device-pair/all-device-pair.

For per-TSCIC k-D transform matrix, when per-TSCIC (per-component) 1D transform is used, the resulting k-D transform matrix (e.g. 2-D transform matrix of size N11xN9) is a per-component k-D transform matrix. There may be N4 per-component 1-D N11-point transform computed based on respective CIC of CI of each TSCI for each of N9 sliding time windows in the time period. For each TSCI, there may be N4 per-component 2-D transform matrices each of size N11xN9. For each device-pair, there may be N4 per-component 3-D transform matrices each of size N1xN11xN9. For the venue, there may be N4 per-component 4-D transform matrices each of size N10xN1xN11xN9.

For per-TSCI k-D transform matrix, when per-TSCI 1D transform is used, the resulting k-D transform matrix (e.g. 2-D transform matrix of size N11xN9) is a per-TSCI k-D transform matrix. There may be one 1-D per-TSCI N11-point transform computed based on CI of each TSCI for each of N9 sliding time windows in the time period. For each TSCI, there may be one per-TSCI 2-D transform matrices each of size N11xN9. For each device-pair, there may be one per-TSCI 3-D transform matrices each of size N1xN11xN9. For the venue, there may be one per-TSCI 4-D transform matrices each of size N10xN1xN11xN9.

In some embodiments, all 2-D, 3-D and 4-D transform matrices may be of size N11xN9, N1xN11xN9 and N10xN1xN11xN9 respectively for all granularities, regardless of any/all differences between difference device-pairs, including difference in bandwidth, amount of TX antennas, amount of RX antennas, etc. Although different device-pairs may have different N1 and N4, the size of 2-D transform matrices may be independent of N1 and N4. Such dimension constancy of 2-D transform matrices may make them suitable as input to the CNN. This also make it possible to use 2-D transform matrices at a first granularity (e.g. lower granularity such as per-TSCI) as additional/ supplementary/reasonable 2-D transform matrices to train the deep learning network which expects 2-D transform matrices at a second granularity (e.g. higher granularity such as per-device-pair). In particular, when training data (e.g. 1D transform, 2-D transform matrix) is insufficient at the second granularity, some of the first granularity data may be used as supplementary/additional/ reasonable training data to train the DNN.

In some embodiments, the system may perform a construction of "d-transform" matrices as input to DNN/model/FM/LLM (instead of transform matrices). Alternatively, a derivative (e.g. first/second/third order) or differential of the 1D transforms (called "1D d-transform", or "1D A-transform") may be computed at any granularity (e.g. per-TSCIC/per-TSCI/per-device-pair/all-device-pair). The 1D d-transform may be used in place of the 1D transform to generate/construct the k-D transform, and the resulting k-D transforms are called k-D d-transform. In particular, all the 1D d-transforms in the time period may be assembled/concatenated to form a 2-D d-transform matrix of size N11xN9, each 1D d-transform being a column of the 2-D d-transform matrix. The horizontal axis of the 2-D d-transform matrix may be time axis and the vertical axis may be transform axis. And recursively, a plurality of k-D d-transform matrices may be assembled/ combined/concatenated to form a (k+1)-D d-transform matrix. The k-D matrices may be fed as input or used to construct an input to the DNN/model/FM/LLM.

In some embodiments, the system may use CNN as feature extraction module of DNN/model/FM/LLM. The k-D transform matrices and/or additional k-D transform matrices (or, alternatively, the k-D D-transform matrix and additional k-D D-transform matrices) may be fed as input to a feature extraction module of the DNN to compute/derive/extract features from the k-D transform matrices (or k-D d-transform matrices). The feature extraction module may be a convolutional neural network (CNN) or an encoder of a transformer architecture. In each layer of the CNN, the multiple convolution filters may be applied concurrently/contemporaneously/ sequentially/independently (e.g. in any order) to each of the plurality of transforms/d-transforms matrices. The output of the CNN may be rearranged/flattened/ concatenated/reorganized to form a data structure for inputting to the stage-2 network. The stage-2 network may compute an output analytics for each outcome class. Among the multiple output analytics, the maximum one may be identified and the associated outcome class may be selected as the classifier output.

In some embodiments, in a training phase, both the stage-1 network and the stage-2 network may be trained using training data (e.g. labeled training data). For each outcome/event/action/situation class, the respective collection of training TSCI may be obtained based on training wireless signals transmitted from training Typel devices to training Type2 devices when situation/events/actions associated with the outcome class occurred. However, for some reason, there may be insufficient/not-so-many training data for a particular outcome/ event/action/situation class. In an operating/inference phase, the 1D transforms and the subsequent 2-D transform matrices may be computed at a target granularity level (e.g. at per-device-pair level) based on TSCI obtained based on wireless signals transmitted from Typel devices to Type2 devices.

In the training phase, the 1D transforms and the subsequent 2-D transform matrices may be computed at more than one granularity levels comprising the target granularity level and at least one other granularity level. For example the at least one other granularity level (e.g. at per-TSCI level) may comprise a level lower than the target granularity level (e.g. at per-device-pair level). For the outcome classes with sufficient training data, the 1D transforms and the subsequent 2-D transform matrices may be computed at the target granularity level only. But for at least one outcome class with insufficient training data, the 1D transforms and the subsequent 2-D transform matrices may be computed at both the target granularity level (e.g. at per-device-pair) and at least one other level (e.g. at per-TSCI level). In additional to the target level 2-D transform matrices, the at least one other level of 2-D transform matrices may be used as training data to train the deep learning network.

In some embodiments, a foundation model may be used for wireless sensing. A foundation model may be a type of large-scale machine learning models (e.g. AI model) trained on vast amounts of wireless sensing data (e.g. the N1 TSCI for each device-pair) to perform a wide range of wireless sensing tasks. These models may be designed to serve a general purpose starting point for various downstream applications, such as wireless sensing, motion detection, presence detection, intrusion detection, breathing/vital sign detection, sleep monitoring, occupancy detection, daily activity monitoring, fall detection, motion recognition, gesture recognition, gait recognition, locationing/positioning, navigation, multimodal tasks, speech enhancement, voice activity detection, natural language processing, image, video, speech, audio, etc. Foundation models may be typically pre-trained on massive datasets and then fine-tuned for specific task.

Foundation models may have these key characteristics: (1) Scale. They may be trained on large datasets and may have billions of parameters. (2) Generalization. They may be adapted to multiple tasks across different domains. (3) Transfer learning. They may leverage knowledge from pre-training to improve performance on specific tasks with minimal additional training. (4) Versatility. They may be used for tasks like text generation, translation, summarization, image recognition, wireless sensing tasks such as motion/presence/location estimation, breathing detection, fall detection, and more. Some examples of foundation models for natural language processing (NLP) may comprise (1) GPT (Generative Pre-trained Transformer) series such as GPT-3, GPT-4, (2) BERT (Bidirectional encoder representations from Transformers), (3) T5 (Text-to-Text Transfer Transformer). Some example of multimodal foundation models may comprise (1) CLIP (Contrastive Language-Image Pretraining), (2) DALL-E (which generates images from text prompts). Some example of foundation models for computer vision may comprise (1) Vision Transformers (ViT). Some challenges for foundation models may be: (1) high computational costs for training, (2) potential biases in the data, (3) environmental impact due to energy consumption.

In some embodiments, foundation models may be built using various architectures, depending on the type of data (e.g. text, images, audio, TSCI, etc.) and the tasks they may be designed to perform. Some example architectures used for foundation models include: Transformer architecture, Pre-training and Fine-Tuning, Scalability, and Transfer Learning.

Transformer architecture: foundation models may be based on the Transformer architecture. Key features may include: (a) self-attention mechanism, which may allow the model to handle long range dependencies and weight the importance of different parts of the input data dynamically. (b) Scalability, which may allow transformers to handle large-scale data and parallelize computations efficiently. (c) Layered-structure, which may comprise multiple encode and decoder layers (though some may use only encoders or decoders). The encoder may have a stack of layers and the decoder may have a stack of identical layers. Each layer may have two sub-layers: a multi-head self-attention mechanism and a position-wise fully connected feedforward network.

Pre-training and Fine-Tuning: foundation models may be pre-trained on massive datasets using unsupervised or self-supervised learning objectives (e.g. masked language modeling, next-token prediction). After pre-training, the models may be fine-tuned on specific downstream tasks with smaller, task specific datasets. This two-phase approach may allow the model to learn general features from the large dataset and then specialize for specific tasks.

Scalability: foundation models may be designed to scale with increasing computational resources and data. This may comprise scaling up: (a) model size, which is the number of parameters (e.g. billions or trillions), (b) data size, which is the amount of training data (e.g. terabytes of text or images), (c) compute resource used for training on large scale GPU/TPU. The foundation models may be designed to scale with more data and more parameters.

Transfer Learning: a key feature of foundation models may be their ability to transfer knowledge from one task to another. This may be facilitated by the pre-training phase, where the model may learn a wide range of features and patterns that may be generally useful across many tasks.

In some examples, for each training data (e.g. each training data comprising at least one of: 1D/k-D transform matrix, 1D/k-D matrix of CI measurements, 1D/k-D matrix of other measurements, at least one sequence of 1D/k-D matrices; the other measurements may comprise any of: other wireless measurements such as RSSI, interference info, system state/settings/parameters, other sensor inputs such as audio, imaging, video, pressure, etc.) of a foundation model, a plurality of associated derived/augmented training data may be computed by performing data augmentation on the training data and/or additional training data. There may be multiple ways to perform data augmentation. The system may perform swapping/reordering/interchanging/reorganizing/altering multiple submatrices of a 1D/2D/k-D matrix. For a 1D matrix/vector, the submatrix may be simply a 1-D submatrix comprising some of the elements/components of the 1D matrix/vector. The elements/components (i.e. the corresponding component indices) may be consecutive or non-consecutive. For a 2-D matrix, a submatrix may be a 1-D submatrix such as a row vector comprising a row or part of a row, a column vector comprising a column or part of a column, a diagonal/anti-diagonal vector comprising diagonal (or off-diagonal) or anti-diagonal (or off-anti-diagonal) elements/components, a directional vector comprising matrix elements/components in a direction. A submatrix may be a 2-D submatrix comprising components/elements in multiple rows and columns (i.e. components in 2 directions, each direction being any of: row, column, diagonal, anti-diagonal, or arbitrary direction). The 2-D submatrix may comprise multiple consecutive/non-consecutive rows/columns. The 2-D submatrix may comprise a sampling (e.g. subsampling, horizontal/vertical/diagonal/anti-diagonal/directional subsampling, periodic/aperiodic/random sampling) of matrix elements/components. The 2-D submatrix may be a rectangular submatrix (a "full" rectangular submatrix with all submatrix elements obtained from the 2-D matrix). The 2-D submatrix may be a collection of submatrix rows/submatrix columns of different lengths (forming a "non-full" rectangular submatrix, with some submatrix elements being empty, i.e. not obtained from the 2-D matrix). Similarly, for a k-D matrix, a submatrix may be a 1-D submatrix, a 2-D submatrix, a 3-D submatrix, ..., a (k-1)-D submatrix, or a k-D submatrix. A 1-D submatrix may be a vector/1D submatrix comprising elements/components in a row/column/direction. A 2-D submatrix may comprise elements/components in two directions (e.g. any two of the k dimensions, or any two "diagonal" or "anti-diagonal" directions, or any two arbitrary directions). A (k2)-D submatrix may comprise elements/components in k2 directions, for any k2<=k (e.g. any k2 of the k dimensions, any k2 "diagonal" or "anti-diagonal" directions, or any k2 arbitrary directions). A k2-D submatrix may comprise a sampling (e.g. subsampling, directional subsampling, random sampling) of matrix elements/components in the k2 directions. The (k2)-D submatrix may be a "rectangular" submatrix (a "full" submatrix with all submatrix elements being obtained from the k-D matrix). The (k2)-D submatrix may be a collection of smaller dimensional submatrix of different submatrix size (forming a "non-full" submatrix, with some elements being empty, i.e. not obtained from the k-D matrix).

In some examples, single submatrix reorganization/alteration may be performed. A submatrix may be partitioned into multiple partitions, each partition comprising some of the submatrix elements/components. The partitions may be disjoint/not disjoint. A submatrix (or a partition of the submatrix) may be rotated, with submatrix components/elements being rotated in a fashion similar to bits being rotated in a bitwise rotation of a byte/word in computers. A submatrix (or a partition of the submatrix) may be shifting, with submatrix components/elements shifted in a similar fashion as bitwise shifting. A submatrix (or a partition of the submatrix) may be permuted/ shuffled, with submatrix components/elements being permuted/shuffled/reordered in many possible orders.

Scaling. A submatrix (or a partition of the submatrix) may be scaled. Each submatrix component/element may be scaled by a respective scaling factor. The scaling factors of different submatrix/element components may be same/-different. A submatrix (or a partition of the submatrix) may be replaced by a similar patch/submatrix/partition. A submatrix (or a partition of the submatrix) may be resized (becoming bigger or smaller). Resizing factor may be different for different dimensions. A submatrix (or a partition of the submatrix) may be moved to another location. A submatrix (or a partition of the submatrix) may be distorted along an axis. Noise (e.g. Gaussian, impulsive, salt-and-pepper) may be added to a submatrix (or a partition of the submatrix). A submatrix (or a partition of the submatrix) may be filtered (e.g. lowpass filtering, highpass filtering, contrast enhanced, edge detection, blurring). A submatrix (or a partition of the submatrix) may be removed. It may be replaced/masked by a predefined value (e.g. zero) or pattern (e.g. noise patch/submatrix/partition). A submatrix (or a partition of the submatrix) may be replaced by blending (e.g. weighted averaging) of two or more patches/submatrices/ partitions. A submatrix (or a partition of the submatrix) may be replaced a patch/submatrix/partition from another matrix. The patch/submatrix/partition may be synthesized based on the another matrix.

In some embodiments, two (or more) submatrices may be swapped/shuffled. For 1D vector/matrix, two vector components may be swapped. The two components may be adjacent to each other with a distance (of associated component indices) of one. The two components may not be adjacent to each other, with a distance greater than one. The component indices of the two components may be a predefined constant, or a dynamically generated (adaptively changed) quantity. For 2-D matrix, the two 1-D submatrices may be adjacent to each other at a distance of one (e.g. one submatrix is row 2 and the other is row 3, with the two rows having a row distance or offset distance of one), or not adjacent to each other with a distance greater than one (e.g. one is row 2 and the other is row 5, with a distance of 3). For the 2-D matrix, the two submatrices may be 2-D submatrices. The two 2-D submatrices may have an "offset distance" of one or more than one. Similarly, for k-D matrix, the (k2)-D submatrices may have an offset distance of one or more than one.

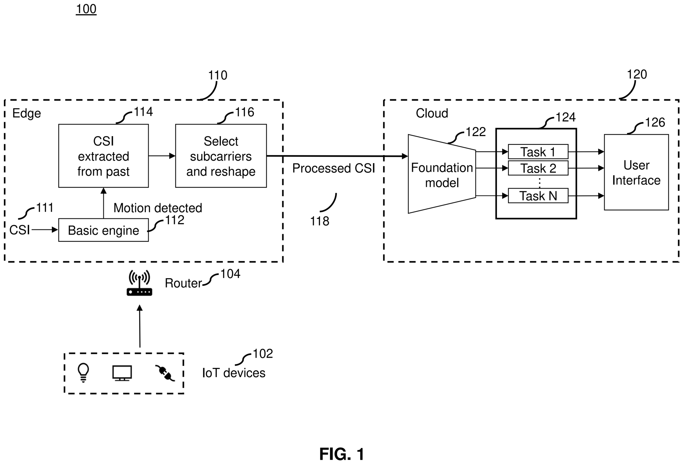

FIG. 1 illustrates an example framework of a system 100 for wireless sensing using a foundation model, according to some embodiments of the present disclosure. As shown in FIG. 1, the system 100 may collect CSI 111 based on wireless signals transmitted from one or more IoT devices 102 to a router 104. In general, the CSI 111 may be any channel information (e.g. CSI, CFR, CIR, etc.) collected based on wireless signals transmitted from a transmitter to a receiver. In some embodiments, the transmitter may serve as a Bot (e.g. Type1 device), while the receiver may serve as an Origin (e.g. Type2 device). A Bot can transmit a wireless signal to the Origin in a venue (e.g. a house), to obtain channel information of a wireless multipath channel based on the wireless signal, where the channel information of the wireless multipath channel may be impacted by motion/presence of any object/user in the venue.

In some embodiments, an edge device 110 (e.g. a local device or local server) may process the CSI 111 to generate processed CSI 118. In the example shown in FIG. 1, the edge device 110 includes a basic engine 112 configured to determine whether a triggering event (e.g. motion detection) happens based on the CSI 111. If a motion is detected by the basic engine 112, the edge device 110 may extract, at operation 114, an immediate past portion of the CSI 111 within an immediate past time period (e.g. past 5 seconds, past 10 seconds). At operation 116, the edge device 110 may process the extracted CSI data based on data augmentation. For example, the edge device 110 may select subcarriers for at least one of the extracted CSI data to ensure all extracted CSI data have a same number of subcarriers according to a standardized format that is suitable for a foundation model 122, and resample each of the extracted CSI data to a predetermined temporal rate according to the standardized format. In some embodiments, the data augmentation performed may further include at least one of: adding random noise to the extracted CSI data; randomizing the selected subcarriers within a block; performing a time scaling or a time warping on the extracted CSI data; simulating at least one environmental parameter related to multi-path change or occlusion; and normalizing amplitudes of the extracted CSI data to mitigate power variation. As such, the edge device 110 may generate the processed CSI 118 which has the standardized format readable by the foundation model 122.

The edge device 110 may transmit the processed CSI 118 to a cloud server 120. As shown in FIG. 1, the cloud server 120 includes the foundation model 122, a plurality of task-specific models 124 and a user interface 126. For example, the processed CSI 118 may be transmitted to the foundation model 122 for training and/or executing the foundation model 122. In some examples, taking the processed CSI 118 as an input, the foundation model 122 may output a feature map representing channel related features and/or sensing related features. The feature map may be utilized by each of the plurality of task-specific models 124 to perform a corresponding one of wireless sensing tasks, e.g. motion detection, user presence detection, breathing/heartbeat detection, fall down detection, intruder detection, etc. In some embodiments, one or more of the task-specific models 124 are selected to perform corresponding wireless sensing tasks using the feature map generated by the foundation model 122, e.g. based on a user instruction during an inference phase. As such, the foundation model 122 is always utilized to perform any of the wireless sensing tasks, while each of the task-specific models 124 is merely utilized to perform a corresponding one of the wireless sensing tasks.

In some embodiments, the plurality of task-specific models 124, which are downstream task models, may be trained based on the foundation model 122. For each downstream task, the system can fine-tune the downstream task model and the foundation model together using supervised data, or freeze the foundation model for all tasks and only tune the downstream task model. In some examples, the plurality of task-specific models 124 may be trained by freezing all model parameters of the foundation model 122 during the training of the plurality of task-specific models 124. In some examples, the plurality of task-specific models 124 may be trained by fine-tuning all model parameters of the foundation model 122 based on at least one task-specific prediction loss during the training of the plurality of task-specific models 124. In some examples, the plurality of task-specific models 124 may be trained by: freezing model parameters of an upstream layer of the foundation model 122, and fine-tuning model parameters of a downstream layer of the foundation model 122. Each of the plurality of task-specific models 124 may be a downstream model compared to the foundation model 122.

In some embodiments, the foundation model 122 may be trained when the model design is finalized and a certain amount of data has been collected. In some embodiments, the downstream task models may be trained after the foundation model 122, which can capture some high-level representations, is trained and a designed model is ready for each downstream task. The labeled data may be used to train the downstream model, where the output of an encoder of the foundation model 122 may be the input of the downstream model. The foundation model 122 may be updated on the cloud server 120. For example, with more data collected, the foundation model 122 may be re-trained where the weights of the foundation model 122 may be updated and saved on the cloud server 120.

In some embodiments, the foundation model 122 may be trained based on self-supervised machine learning without labelled data. Each of the plurality of task-specific models 124 may be trained based on labelled data.

In some embodiments, each of the plurality of task-specific models 124 may be used to perform a corresponding one of the plurality of wireless sensing tasks together with the foundation model 122. The sensing results of the wireless sensing tasks may be presented via the user interface 126, which may be a website-based user interface or an APP-based user interface, to one or more users. In some embodiments, different sensing results of the wireless sensing tasks may be presented via different user interfaces.

In some embodiments, during a training phase, a training dataset may be generated by the edge device 110 and transmitted from the edge device 110 to the cloud server 120. The foundation model 122 and the plurality of task-specific models 124 may be trained by the cloud server 120.

During an inference phase, the plurality of wireless sensing tasks may be performed by: collecting and processing real-time CI data by at least one local device or edge device to generate processed real-time CI data; determining, by the at least one local device, whether a triggering event happens based on the processed real-time CI data; in accordance with a determination that the triggering event happens, transmitting an immediate past portion of the processed real-time CI data within an immediate past time period from the at least one local device to a cloud server; and performing, by the cloud server, a wireless sensing task corresponding to the triggering event based on the immediate past portion of the processed real-time CI data using the trained foundation model and a trained task-specific model corresponding to the wireless sensing task.

In some embodiments, the CSI 111 may be raw CSI generated by the router 104 based on data transmitted from the one or more IoT devices 102 to the router 104. In some examples, the edge device 110 may be a device coupled to or integrated with the router 104. When there is a trigger on the edge device 110 (e.g., motion detection), the edge device 110 can send the processed CSI 118 of past several seconds (following a unified format) to the cloud server 120 as an input to the foundation model 122.

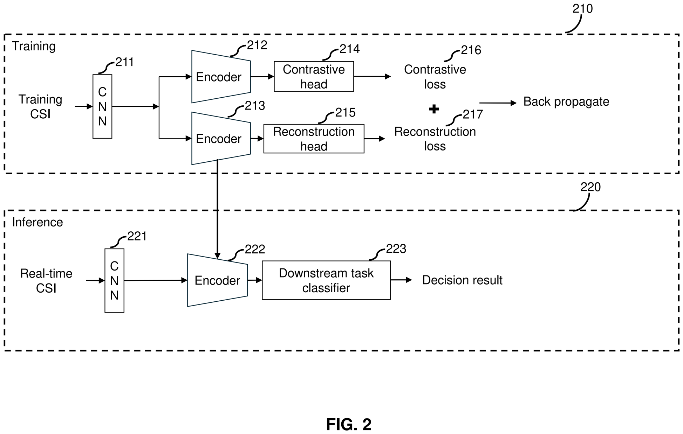

FIG. 2 illustrates example processes 210, 220 for training and executing a foundation model for wireless sensing, according to some embodiments of the present disclosure. In some embodiments, the foundation model may be implemented as the foundation model 122 in FIG. 1. In the example of FIG. 2, the foundation model may be implemented as an encoder. In some examples, the process 210 shows a process for training the foundation model, while the process 220 shows a process for executing the foundation model.

During the process 210, a training dataset (e.g. CSI data used for training) may be processed by a CNN 211, e.g. based on some data augmentation techniques as discussed above, before being used to train the foundation model. In this example shown in FIG. 2, two copies of the foundation model are represented by two encoders 212, 213 respectively, and are trained to minimize a contrastive loss function 216 and a reconstruction loss function 217 respectively and simultaneously. In some embodiments, the entire foundation model including the CNN 211 and the encoders 212, 213 may be placed on a cloud server. In some embodiments, the CNN 211 may be placed on an edge device while the encoders 212, 213 may be placed on the cloud server, to reduce data transmission cost.

In some embodiments, the training dataset may comprise: a plurality of CI pairs, original CI data and a mask. In some embodiments, the plurality of CI pairs comprises: a positive CI pair formed by a preprocessed CI and its associated augmented CI, a positive CI pair formed by two preprocessed CI, a positive CI pair formed by two augmented CI, a negative CI pair formed by two CI obtained from two different wireless channels, a negative CI pair formed by two CI obtained from two different venues, a negative CI pair formed by two CI associated with two different sensing events.

The contrastive loss function 216 may be determined by a contrastive head 214 of the foundation model based on a first similarity metric (e.g. an embedding distance) between CI data of each CI pair in the training dataset. In some embodiments, determining the contrastive loss function comprises: mapping each CI in the training dataset to a corresponding embedding point in an embedding space using the foundation model; for each CI pair comprising two CI in the training dataset, generating a distance score between two embedding points corresponding to the two CI of the CI pair based on the first similarity metric; and determining the contrastive loss function based on the distance score. For example, the distance score is smaller when the CI pair is a positive CI pair; the distance score is larger when the CI pair is a negative CI pair.

The reconstruction loss function 217 may be determined by a reconstruction head 215 of the foundation model based on a second similarity metric between the original CI data and predicted CI data generated based on the mask. In some embodiments, determining the reconstruction loss function comprises: generating masked CI data at least in part by applying the mask to the original CI data to remove at least one portion of the original CI data along a time dimension or a subcarrier dimension; generating the predicted CI data based on the masked CI data using the foundation model; generating an error function between the original CI data and the predicted CI data based on the second similarity metric; and determining the reconstruction loss function based on the error function.

In some embodiments, a total loss function may be determined based on an aggregate of the contrastive loss function and the reconstruction loss function. The model parameters of the foundation model may be determined, trained or learned to minimize the total loss function. For example, the aggregate of the contrastive loss function and the reconstruction loss function may comprise a weighted combination of the contrastive loss function and the reconstruction loss function. The weights used in the weighted combination may also be included in the model parameters of the foundation model and may be adjusted during the training to minimize the total loss function through an iterative back propagation process.

During the process 220, the trained foundation model (implemented as an encoder 222) may be executed to infer decision results for wireless sensing tasks, during an inference phase. In this example shown in FIG. 2, real-time CI data (e.g. real-time CSI) may be collected and then processed by CNN 221, e.g. based on some data augmentation techniques as discussed above, before being used as an input to execute the foundation model. Based on CI data collected in real-time, the trained foundation model (implemented as an encoder 222) may generate a feature map. The feature map may be input to a downstream task classifier 223, which may be one of a plurality of task-specific models, to perform a corresponding one of a plurality of wireless sensing tasks. The decision result generated by the downstream task classifier 223 may be based on the feature map, and may indicate a classification of the corresponding wireless sensing task (e.g. motion detected or not, type of moving subject, occupied or empty, fall down or not, user presence or not, etc.).

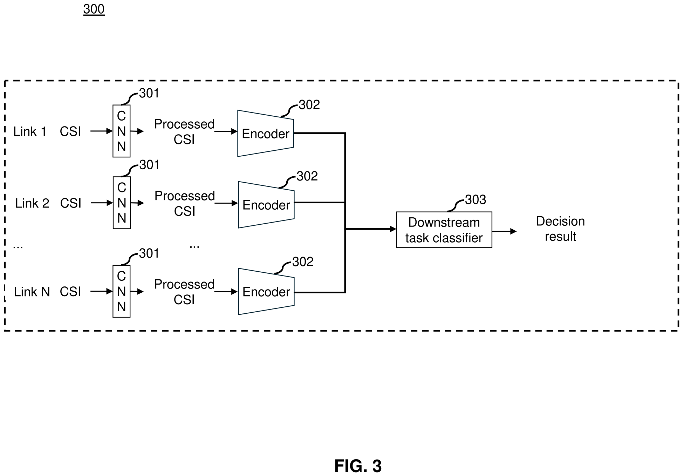

FIG. 3 illustrates an example method 300 for combing decisions for a wireless sensing task based on multiple links, according to some embodiments of the present disclosure. In some embodiments, there are multiple device pairs in at least one venue. Each of the device pairs is formed by a transmitter and a receiver. For each of the plurality of device pairs: a wireless signal is transmitted by the transmitter through a wireless channel to the receiver. The received wireless signal differs from the transmitted wireless signal due to the wireless channel and any sensing event in the at least one venue. A time series of channel information (TSCI) of the wireless channel may be obtained based on the received wireless signal. In some embodiments, real-time CI data may be collected based on all TSCI obtained for the device pairs. That is, during an inference phase, the real-time CI data may be collected from multiple wireless links. Each of the wireless links may correspond to a wireless channel between a transmitter and a receiver, or between a transmitting antenna and a receiving antenna. The real-time CI data may be utilized to perform at least one task of the plurality of wireless sensing tasks.

For each task of the at least one task, the system may process each real-time CI data collected from a corresponding one of the multiple wireless links using a corresponding CNN 301 to generate processed CI, and generate, using a corresponding copy of the foundation model 302, a corresponding feature map based on the processed CI. That is, the real-time CI data collected from multiple links may be processed in parallel and used to execute the foundation model 302 in parallel. In some embodiments, a same CNN 301 may process all real-time CI data in series, and a same copy of the foundation model 302 may be executed in series based on the processed CI.

In some embodiments, the system may fuse the plurality of feature maps generated by the foundation model 302 for the multiple links, e.g. along a subcarrier dimension or according to an index of each of the multiple wireless links, to generate a fused feature map. The system may input the fused feature map into a downstream task classifier 303, which may be a task-specific model corresponding to a wireless sensing task to generate a decision result for the wireless sensing task. In some embodiments, the downstream task classifier 303 may be a small transformer model or a RNN model that can take input of variant length.

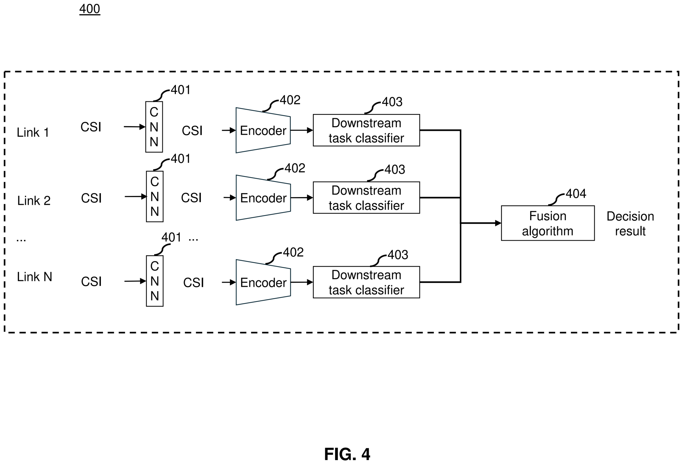

FIG. 4 illustrates another example method 400 for combing decisions for a wireless sensing task based on multiple links, according to some embodiments of the present disclosure. Similar to FIG. 3, real-time CI data may be collected from multiple wireless links, where each of the wireless links may correspond to a wireless channel between a transmitter and a receiver, or between a transmitting antenna and a receiving antenna. The real-time CI data may be utilized to perform at least one task of a plurality of wireless sensing tasks.

For each task of the at least one task, the system may process each real-time CI data collected from a corresponding one of the multiple wireless links using a corresponding CNN 401 to generate processed CI, and generate, using a corresponding copy of the foundation model 402, a corresponding feature map based on the processed CI. That is, the real-time CI data collected from multiple links may be processed in parallel and used to execute the foundation model 402 in parallel. In some embodiments, a same CNN 401 may process all real-time CI data in series, and a same copy of the foundation model 402 may be executed in series based on the processed CI.

In some embodiments, the system may input each of the plurality of feature maps generated by the foundation model 402 into a copy of the downstream task classifier 403, which may be a task-specific model corresponding to a wireless sensing task, to generate a candidate decision result for the task. The system may utilize a fusion model or algorithm 404 to fuse all candidate decision results generated for the task to generate a final decision result for the task.

In some examples, for a motion detection task, when X number of the candidate decision results indicate motion detected and Y number of the candidate decision results indicate no motion detected, the fusion model or algorithm 404 may determine the final decision result as motion detected or no motion detected based on a comparison between X and Y.

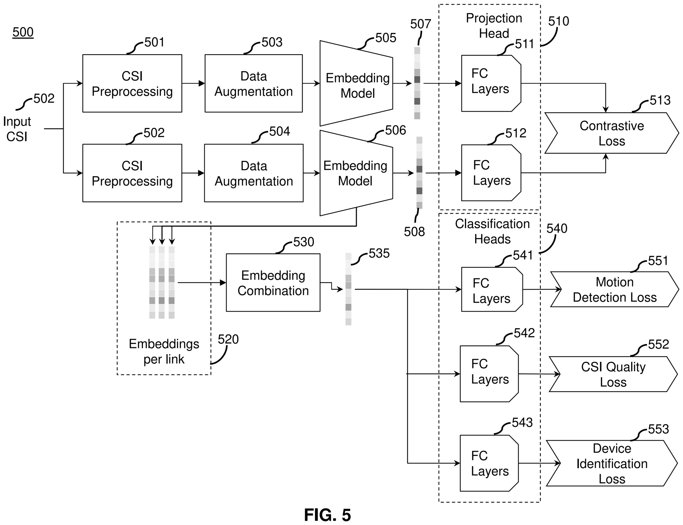

FIG. 5 illustrates an example process 500 for multi-task learning based on a foundation model, according to some embodiments of the present disclosure. In some embodiments, multiple tasks (including e.g. robust motion detection, presence detection, noisy device identification and filtering) may be desired at the same time. What these tasks have in common includes: CSI-based preprocessing and feature extraction, and some classification operation. To exploit the common structures and/or functions of these tasks, a system can utilize a shared encoder with multi-task training targets and unsupervised learning. The example process 500 illustrates a multi-step framework to achieve specific models, by fine tuning a classification head to enable different tasks.

In some embodiments, a system may receive input CSI 502, e.g. from various devices. The input CSI 502 may come from Wi-Fi links with different subcarriers and link configurations. The input CSI 502 may include CSI pairs, each pair having two different CSI with two different features, e.g. different channels, different venues, different subcarriers, etc. The two CSI may be processed in parallel to generate a contrastive loss 513, along a first branch of the process 500.

As shown in FIG. 5, the system may utilize various pre-processing methods 501, 502, including padding and data manipulation, and data augmentation methods 503, 504, to create a consistent and unified representation 507, 508 of the input CSI 502 regardless of its original format. The unified representation 507, 508 may be generated based on an embedding model 505, 506 (as part of a foundation model) for each CSI in each CSI pair, to ensure a fixed size and shape for each input to a projection head 510 of the foundation model.

In some embodiments, the data augmentation methods 503, 504 applied in the CSI domain may generate diverse versions of a same CSI data, to create two distinct representations of the same underlying information through small manipulations that do not alter the core data content. These augmentations may introduce randomness, resulting in different views of the same data when applied twice with varying parameters.

After two different augmented representations are fed into an embedding model, which can be off-the-shelf or custom-trained, a smaller feature vector (embedding) may be generated for each augmented representation. Then the embedding vectors may be input into the fully connected (FC) layers 511, 512 of the projection head 510 to ensure that the embedding vectors of the two different views (positive data pairs) of the same data are similar or close to each other, e.g. by minimizing the contrastive loss 513. Simultaneously, the model learns to differentiate embedding vectors from augmentations of different data samples (negative data pairs).

As shown in FIG. 5, the process 500 also includes a second branch from the embedding model 506, with classification heads 540 for training and/or performing downstream tasks like motion detection, CSI quality assessment, and device identification. This second branch may process individual links of a device (e.g., from multiple transmitter antennas to multiple receiver antennas) in parallel. An embedding combination method 530 may be used to consolidate the embedding vectors 520 from these parallel links into a single representation 535 that captures environmental information. The single representation 535 may be input into the FC layers 541, 542, 543 of the classification heads 540 to determine a motion detection loss 551, a CSI quality loss 552, a device identification loss 553, respectively. In some embodiments, more and/or alternative loss functions may be utilized for various tasks. During training, the losses from these multiple tasks may be combined with weights, to generate a total loss along with the contrastive loss from the first branch.

In some embodiments, the first branch related to contrastive learning may be referred to as pre-training as it involves learning representations without explicit manual labels, similar to how models are pre-trained on large datasets before fine-tuning for specific tasks in the second branch. Although pre-training and fine-tuning may occur concurrently, the concept of learning a general-purpose representation first still applies. In some embodiments, each of the embedding model 505, 506 (two copies) can act as an encoder in a foundation model. The pre-training may help the encoder to learn meaningful features from the unlabeled CSI data.

While the overall process 500 has some parallel aspects, the second branch related to classification may depend from the intermediate output of the upper embedding model 506. In some embodiments, the contrastive loss 513 primarily influences the FC layers 511, 512 and the embedding models 505, 506; and the loss functions 551, 552, 553 may influence the FC layers 541, 542, 543.

**In** some embodiments, the losses 513, 551, 552, 553 are combined together for training and are dynamically weighted. The contribution of the contrastive loss 513 relative to the downstream task losses 551, 552, 553 may change over the course of training. Initially, the contrastive loss may be weighted more heavily, but its importance may gradually decrease as the weights of the second branch increase over epochs. This can enable the model to first learn a good representation and then focus more on the specific downstream tasks.

Different loss functions may be combined to optimize the parameters of the upstream layers. When the tasks are related, combining losses can lead to synergistic improvements. The decision to combine losses and the weighting strategies may involve some experimentation.

The classification heads may directly correspond to the specific tasks the model is trained to perform. This enables the simultaneous training of a foundational model and task-specific classification models. In some embodiments, as discussed above, reconstruction heads may be utilized alongside the contrastive-loss based learning.

As such, the system may utilize various techniques for the multi-task learning, including: parallel processing of multiple links, embedding combination, modification to the contrastive loss function to handle similar samples from the same device or closely spaced time instances, data augmentation techniques with some adaptations for the specific domain, etc.

For example, the system can apply the contrastive loss 513 to Wi-Fi CSI data, where different links from the same device or temporally close samples exhibit high similarity. To address this high similarity, similar/dissimilar pairs need to be created for such instances during the contrastive loss calculation. This careful selection of pairs is crucial for the successful training of the loss function 513.

The system can achieve significant performance benefits by processing multiple links (e.g., from multiple antennas) in parallel instead of treating them as a single input. The embedding combination 530, which can use methods like averaging, max pooling, or neural networks, may aggregate the information from these parallel streams.

During the CSI pre-processing 501, 502, the system can standardize the input CSI 502 to a consistent size (e.g., 60 subcarriers and four links). When there are fewer links or subcarriers, the CSI pre-processing 501, 502 may include repeating samples. This repeating method for padding can improve training speed and performance compared to zero padding. When there are more links, the first four (or first N in general) are processed, and the remaining ones might be handled separately before combination.

For motion detection, the system may use a mapping based on experiment labels, where the experiment may be related to: walking, robot, fan, empty, fast-walking, jogging, running, etc.. While human motion may be labeled as 1, the rest can be labeled as 0. For CSI quality, the system can use labels in the CSI verification dataset, which has motion/empty labels, and good/bad labels. For device identification, device names are included in filenames and folder-names. A device name table may be built to extract device names with a priority list, with high and medium confidence labels during device type classification.

In some embodiments, the CSI preprocessing 501, 502 can play at least two important roles: standardizing data inputs to make neural network (e.g. the foundation model) more flexible, and mitigating nonlinearities. The preprocessing steps may include the following: CSI normalization per packet to offset gain control, clipping or reshaping links to standardize input size, clipping or repeating subcarriers to standardize the input size. While randomly clip is performed during training, the system may only take the first L links and S subcarriers during testing and executing.

In some embodiments, the system can repeat subcarriers until reaching a certain size of subcarriers (e.g. 60), and a certain link size (e.g. 4). The system can combine embedding's of each link for any classification task, to ensure consistent input representation and added diversity during training.

In some embodiments, the contrastive loss 513 may be based on a Normalized Temperature-scaled Cross Entropy (NT-Xent) loss, the motion detection loss 551 and the CSI quality loss 552 may be based on a Binary Cross-Entropy (CE) loss, and the device identification or device type loss 553 may be based on a focal loss. In some embodiments, a training may be conducted with a cumulative loss function:

$$L_{loss} = \beta(t)l_{nt-xent} + (1 - \beta(t))(l_{focal}^{device} + l_{ce}^{csiquality} + l_{ce}^{occ})$$

where β is a parameter to balance pre-training with fine-tuning. Early epochs focus on pre-training, whereas later epochs focus on the fine-tuning tasks.

In some embodiments, parameters to be trained or learned may include: optimizer with weight decay, scheduler to reduce the learning rate over time, the batch size with distributed training, where the parameters are trained for a certain number (e.g. 10) epochs. In some embodiments, the system can adapt the weights of pre-training and fine-tuning over time. For example, the system can start with β = 1, and reduce it 0.1 every epoch.

As described, not all data has labels for all tasks. As such, partial labels are utilized in the downstream multi-task learning where some data samples might have labels for only a subset of the tasks being trained, the system may continue training even when not all labels are available for every data point. In some examples, the system only calculates a loss function for existing labels. If no label exists, the loss may be set to 0 to enable backpropagation to keep the network connected, but has no gradients. In some embodiments, a successful implementation of mix-up (mixing labels with each other for robustness) may improve the performance further.

In some embodiments, the input CSI 502 is not divided but rather has two copies passed through potentially slightly different pre-processing 501, 502 and then data augmentation pipelines 503, 504 in parallel. This results in two different views of the same input, which are then used for contrastive learning. While a single pre-processing block followed by a split is possible, keeping them separate can enable a potential application of slightly different pre-processing steps to each stream.

In some embodiments, the data augmentation pipelines 503, 504 may utilize one or more of the following data augmentation techniques: random noise addition, cropping of subcarriers and time samples, reordering of subcarriers (with localized movements), salt and pepper noise, channel response augmentation (scaling samples with a vector). The data augmentation techniques may also include techniques for wireless sensing, including: Noise Injection, Scaling and Normalization, Subcarrier Shuffling and Selection, Time Scaling and Warping, Environmental Parameter Variation, etc. These methods may create diverse views of the data while preserving the underlying information.

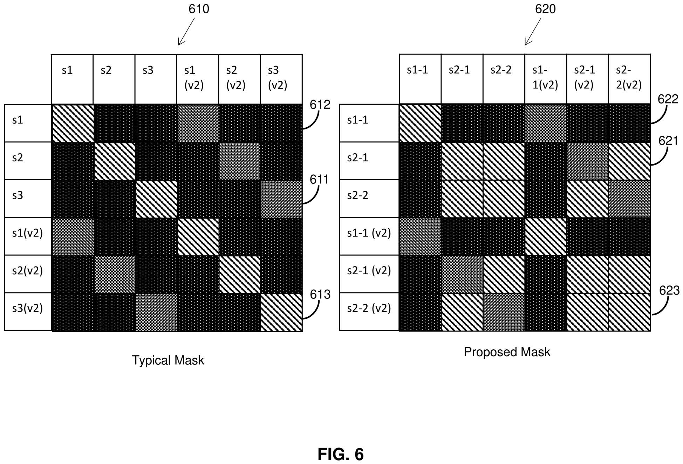

FIG. 6 illustrates an example mask used for contrastive loss, according to some embodiments of the present disclosure. As discussed above, multiple samples might be correlated, such that after processing, some positive sample pairs and some negative sample pairs are created. In a typical mask map example 610 for training data pair generation, sample s1(v2) may be a variant (e.g. an augmented version) of sample s1, such that s1 and s1(v2) are marked similar to each other based on a similar mark 611. In contrast, samples s1 and s2 are two different samples that are marked as dissimilar to each other based on a dissimilar mark 612. In addition, each sample and itself are marked as undefined (neither similar nor dissimilar) based on an undefined mark 613.

In a mask map example 620 for training data pair generation with multiple wireless links (e.g. one transmitter antenna and two receiver antennas), sample s1-1(v2) may be a variant (e.g. an augmented version) of sample s1-1, such that s1-1 and s1-1(v2) are marked similar to each other based on a similar mark 621. In contrast, samples s1-1 and s2-1 are two different samples that are marked as dissimilar to each other based on a dissimilar mark 622. In addition, each sample and itself (e.g. s1-1 and s1-1 itself) are marked as undefined (neither similar nor dissimilar) based on an undefined mark 623. Further, two copies of a sample from two links (e.g. s2-1 and s2-2) are also marked as undefined (neither similar nor dissimilar) based on the undefined mark 623. In some embodiments, a mask based on the mask map example 620 may be utilized to generate positive (similar) sample pairs and negative (dissimilar) sample pairs for training a foundation model based on a contrastive loss and/or a reconstruction loss.

In some embodiments, the system may process links in batch dimension or parallel processing of links. In some embodiments, the system may use shuffling during training and validation. Once the model is trained, it can be used for inference in real-time.

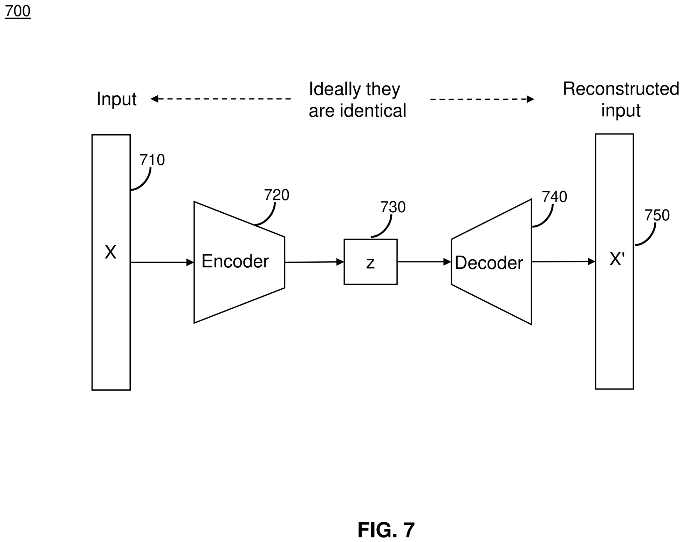

In some embodiments, anomaly detection may be performed based on an encoder. As shown in FIG. 7, a system 700 may include an encoder 720 and a decoder 740. The encoder 720 may receive the input X 710 and generate Z 730, which is a compressed low dimensional representation of the input X. The decoder 740 may receive the Z 730 and generate a reconstructed input X' 750, which would be identical to input X 710 in an ideal case.

In some embodiments, anomalies may be detected by setting a threshold on the reconstruction error, which may be measured based on a difference between input X 710 and reconstructed input X' 750. For example, data points with reconstruction errors higher than the threshold are considered anomalies.

In some embodiments, the CSI data samples come from multiple different chipsets or links, and the network can accommodate the varying subcarrier number of the CSI, based on methods including: zero padding, interpolation, repetition padding, masking, etc.

In some embodiments, the encoder 720 may be trained as a foundation model for multiple wireless sensing tasks, while a different version of the decoder 740 may be trained to perform each corresponding one of the multiple wireless sensing tasks.

In some embodiments, a mask may be used primarily to handle variable-length input data. For CSI data, the dimension of subcarrier is varying, and different chipsets may have different number of subcarriers. Therefore, padding on those subcarriers can be performed to make sure the network has consistently fixed dimension for input data, but the padded values may be invalid. The mask can ensure that these padding values do not influence the model's learning or attention mechanism, focusing only on the valid parts of the data. In some embodiments, the mask is a tensor and may contain 1 for valid subcarriers and 0 for padded subcarriers. In some embodiments, in the forward pass, the attention mechanism can use this mask to exclude the padded or invalid subcarriers from contributing to the final output.

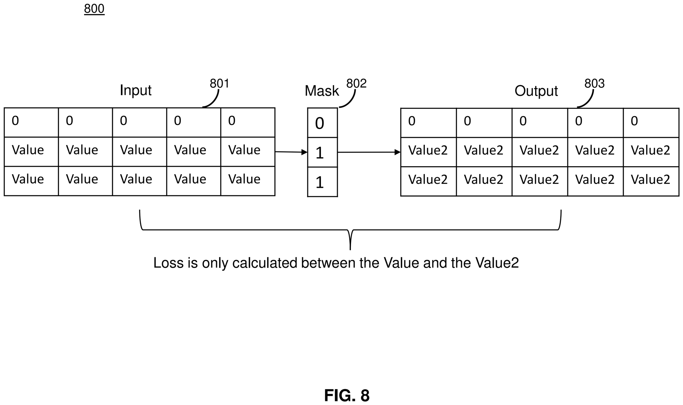

In some embodiments, the masking technique may be used to handle varying data dimensions before feeding them into the network. This method may involve padding data to a fixed dimension and using a mask to indicate valid and padded values. FIG. 8 illustrates an example process 800 for applying a mask, according to some embodiments of the present disclosure. As shown in FIG. 8, values in the first row of the input table 801 are padded values (0) and masked as "0"; and values in the second and third rows of the input table 801 are valid values (Value) and masked as "1". Based on the mask 802, the output table 803 is generated to reconstruct only the second and third rows as Value2, while keeping the values in the first row as zero, for zero padding here. The mask can help the network to learn where the loss calculation ignores nonsense data to improve performance. For example, when computing the loss (how far off the model's predictions are from the ground truth), only the valid values (masked as "1") are used. The padded parts are effectively ignored in the loss calculation. In some examples, different rows may correspond to different subcarriers.

The masking technique may be used in both training and testing phases for an anomaly detection task, e.g. a CSI verification task aiming at detecting anomalous CSI data. In an example of Wi-Fi sensing, verifying CSI quality before deployment can prevent performance issues caused by bad devices. The system may combine the masking with subcarrier padding in auto-encoders for CSI based sensing tasks. The system may use Recurrent Neural Networks (RNN) for the encoder and decoder based on the time-series nature of CSI data.

In various embodiments, the disclosure provides methods and systems for training a foundation model on WiFi Channel State Information (CSI) using a combination of contrastive learning and predictive learning, augmented by wireless-specific data transformations. The foundation model may be designed to generalize across different tasks, devices, and environments, supporting flexible deployment in real-world IoT systems. The system may have a cloud-edge distributed architecture, a novel training framework combining self-supervised learning objectives, specialized data augmentation strategies tailored for CSI, and a multi-bot fusion strategy for robust downstream inference.

In some embodiments, the system architecture may be partitioned into edge and cloud components for efficiency. The edge side may include: IoT devices continuously measuring raw WiFi CSI, an edge preprocessing module, and an edge triggering mechanism. The edge preprocessing module may unify the number of subcarriers, resample CSI to a standard temporal rate, and compress data dimensions (e.g., selective subcarrier selection) to reduce transmission size. The edge triggering mechanism may include a lightweight motion detection module (e.g., moving average statistics) that can detect events. In some examples, only when motion is detected, a recent time window (e.g., past 5 seconds) of preprocessed CSI is transmitted to the cloud.

The cloud side may include: a foundation model storage which stores the latest foundation model weights; pre-training and fine-tuning Engines configured to conduct large-scale self-supervised pre-training and fine-tune downstream task models using labeled datasets; an inference engine configured to processes uploaded CSI samples to produce predictions for various downstream tasks; and a GUI or App interface configured to sends task results (classification, occupancy status, etc.) to end-user platforms.

In some embodiments, the input data to the foundation model may include preprocessed CSI samples standardized to a fixed format (e.g., 250 timestamps * 98 subcarriers). In some embodiments, the foundation model may include an encoder backbone and two parallel learning heads. In some examples, the encoder backbone may be based on a 6-layer Vision Transformer (ViT) or other deep learning models, and may be used to learn temporal and frequency patterns in the CSI data.

The two parallel learning heads include a contrastive learning head and a reconstruction (predictive) learning head. The contrastive learning head may be configured to embed input samples into a latent space and encourage samples from the same augmentation to have similar embedding's. The reconstruction learning head may try to reconstruct masked portions or original signal patterns, and enforce the encoder to retain fine-grained feature information.

The training objectives may include a contrastive loss and a reconstruction loss. Given two augmentations of the same input, minimizing the contrastive loss means minimizing their distance in the latent space, e.g. based on the NT-Xent Loss. For reconstruction loss (e.g., MSE or smooth L1 loss), the reconstruction error may be minimized between predicted and actual CSI data. In some embodiments, the foundation model may be trained based on a joint optimization to minimize a total loss, which is a weighted combination (e.g. weighted sum) of the contrastive loss and the reconstruction loss.

In some embodiments, domain-specific data augmentation techniques may be used. For example, noise injection may be performed by adding Gaussian noise to CSI samples, to improve robustness to environmental noise. For example, subcarrier shuffling may be performed by randomizing selected subcarriers within a block, to encourage frequency invariance. For example, time scaling and warping may be performed by speeding up or slowing down signal evolution to generalize across motion speeds. For example, environmental parameter variation may be performed by simulating multi-path changes, occlusions to improve spatial generalization. For example, amplitude normalization may be performed by normalizing amplitudes to mitigate power variations to handle device diversity. These augmentations can be applied individually or jointly during contrastive pair creation.

In some embodiments, data augmentation may include link-level ACF calculations. An IoT device has more than one antenna, which can be utilized to generate data. Each Tx-Rx link may observe the target (human or object) from a different spatial perspective. Instead of calculating the MRC combined ACF utilizing all the subcarriers from all the links (Tx-Rx pairs), the system may calculate the MRC combined ACF for each link (Tx-Rx pair). This data augmentation can improve the dataset size by N times, where N is the number of links in the device. By treating each link's ACF as a separate sample or partial view, data diversity may be increased without collecting new scenes. One example use case may be DL-occupancy network design, where the occupancy dataset may be highly imbalanced due to a lack of empty data samples. The system can use link-level feature matrix calculation-based data augmentation to improve the empty dataset.

In some embodiments, data augmentation may include link shuffling and/or permutation. There may be multiple Tx-Rx pairs or links in a device, where each link provides a different view of the scene. For tasks like child presence detection, antennas may be separated and attached to the four corners of a vehicle. As such, each link can provide different information about the scenario. Therefore, link permutation-based data augmentation can help to generalize the model architecture in the following aspects: preventing the model from overfitting for the specific link positions, creating diverse data with different spatial configurations, and enabling better generalization to unseen antenna configurations. One example use case may include a network design for child presence detection, to improve the diversity of child motion data and improve test accuracy in unseen environments.

In some embodiments, data augmentation may include link-mix augmentation, where two data samples are considered to represent the same activity (child motion) but are captured in different environments, positions, or from different Tx-Rx configurations. The system can create a synthetic data sample by combining the links across the two samples, to create a new and diverse representation of the same activity and improve networks generalization capabilities. This can be generalized well to new locations (car models), new device setups, with a good domain adaptation. One example use case may include a network design for child presence detection, to create synthetic data samples in the child motion scenario, as the current data samples are limited, and to improve the test accuracy for unseen environments.

In some embodiments, after pre-training the foundation model, the foundation model may support various downstream tasks including: occupancy detection, fall detection, motion source classification (human, pet, fan, robot, etc.), proximity estimation, breathing detection, etc.

In some examples, during fine-tuning, only task-specific classifier layers are trained, while the pre-trained encoder remains fixed. In some examples, both the encoder and classifiers are updated during downstream training and fine-tuning. The choice may depend on available labeled data and computational resources.

In some embodiments, for environments with multiple sensing devices (bots), each device can independently process its CSI and produce intermediate predictions. For example, a fusion module can aggregate predictions across multiple links based on (a) a voting-based majority decision or (b) a weighted aggregation based on link reliability or device proximity. This fusion can increase robustness, especially in large or cluttered environments.

The foundation model can be updated continuously or periodically. For example, when substantial new data is collected, the system can re-train the foundation model with augmented datasets, and deploy updated weights to the cloud for inference. For special environments (e.g., hospitals, elderly homes), a localized foundation model can be fine-tuned using environment-specific data.

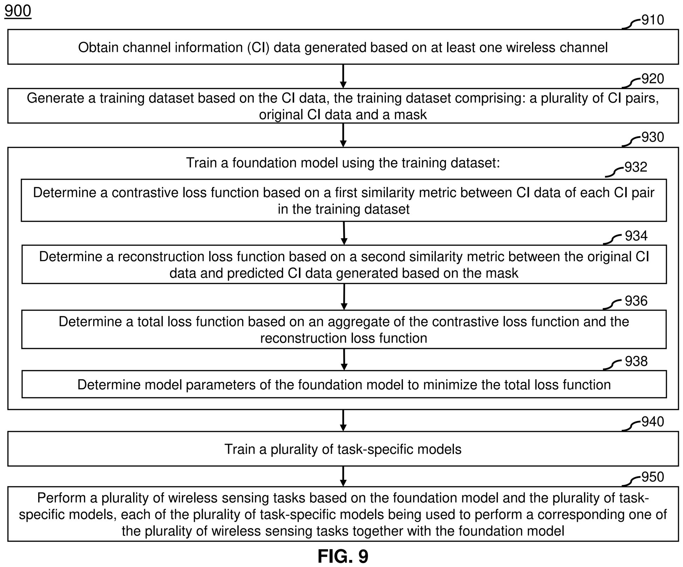

FIG. 9 illustrates a flow chart of an example method 900 for wireless sensing using a foundation model, according to some embodiments of the present disclosure. In various embodiments, the method 900 can be performed by any of the systems disclosed above. At operation 910, channel information (CI) data generated based on at least one wireless channel may be obtained. At operation 920, a training dataset may be generated based on the CI data, the training dataset comprising: a plurality of CI pairs, original CI data and a mask. At operation 930, a foundation model may be trained using the training dataset by sub-operations 932-938. At sub-operation 932, a contrastive loss function is determined based on a first similarity metric between CI data of each CI pair in the training dataset. At sub-operation 934, a reconstruction loss function is determined based on a second similarity metric between the original CI data and predicted CI data generated based on the mask. At sub-operation 936, a total loss function is determined based on an aggregate of the contrastive loss function and the reconstruction loss function. At sub-operation 938, model parameters of the foundation model may be determined to minimize the total loss function. At operation 940, a plurality of task-specific models may be trained. At operation 950, a plurality of wireless sensing tasks may be performed based on the foundation model and the plurality of task-specific models. Each of the plurality of task-specific models may be used to perform a corresponding one of the plurality of wireless sensing tasks together with the foundation model.

The following numbered clauses provide examples for wireless sensing using a foundation model.

Clause 1. A method for wireless sensing, comprising: obtaining channel information (CI) data generated based on at least one wireless channel; generating a training dataset based on the CI data, wherein the training dataset comprises: a plurality of CI pairs, original CI data and a mask; training a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function; training a plurality of task-specific models; and performing a plurality of wireless sensing tasks based on the foundation model and the plurality of task-specific models, wherein each of the plurality of task-specific models is used to perform a corresponding one of the plurality of wireless sensing tasks together with the foundation model.

Clause 2. The method of clause 1, wherein obtaining the CI data comprises: determining a plurality of device pairs in at least one venue, wherein each of the plurality of device pairs is formed by a transmitter and a receiver; for each of the plurality of device pairs: transmitting a wireless signal by the transmitter through a wireless channel, receiving the wireless signal by the receiver, wherein the received wireless signal differs from the transmitted wireless signal due to the wireless channel and any sensing event in the at least one venue, obtaining a time series of channel information (TSCI) of the wireless channel based on the received wireless signal; and obtaining the CI data based on all TSCI obtained for the plurality of device pairs.

Clause 3. The method of clause 2, wherein generating the training dataset comprises: processing the CI data to generate preprocessed CI data according to a standardized format readable by the foundation model; performing a data augmentation on preprocessed CI in the preprocessed CI data to generate augmented CI, wherein the plurality of CI pairs comprises: a positive CI pair formed by a preprocessed CI and its associated augmented CI, a positive CI pair formed by two preprocessed CI, a positive CI pair formed by two augmented CI, a negative CI pair formed by two CI obtained from two different wireless channels, a negative CI pair formed by two CI obtained from two different venues, a negative CI pair formed by two CI associated with two different sensing events.

Clause 4. The method of clause 3, wherein processing the CI data comprises: selecting subcarriers for at least one CI in the CI data to generate a same number of subcarriers for all CI in the CI data according to the standardized format; and resampling each CI in the CI data to a predetermined temporal rate according to the standardized format.

Clause 5. The method of clause 4, wherein performing the data augmentation comprises: adding random noise to the preprocessed CI; randomizing the selected subcarriers within a block; performing a time scaling or a time warping on the preprocessed CI; simulating at least one environmental parameter related to multi-path change or occlusion; and normalizing amplitudes of the preprocessed CI to mitigate power variation.

Clause 6. The method of clause 3, wherein determining the contrastive loss function comprises: mapping each CI in the training dataset to a corresponding embedding point in an embedding space using the foundation model; for each CI pair comprising two CI in the training dataset, generating a distance score between two embedding points corresponding to the two CI of the CI pair based on the first similarity metric, wherein: the distance score is smaller when the CI pair is a positive CI pair, the distance score is larger when the CI pair is a negative CI pair; and determining the contrastive loss function based on the distance score.

Clause 7. The method of clause 1, wherein determining the reconstruction loss function comprises: generating masked CI data at least in part by applying the mask to the original CI data to remove at least one portion of the original CI data along a time dimension or a subcarrier dimension; generating the predicted CI data based on the masked CI data using the foundation model; generating an error function between the original CI data and the predicted CI data based on the second similarity metric; and determining the reconstruction loss function based on the error function.

Clause 8. The method of clause 1, wherein: the aggregate of the contrastive loss function and the reconstruction loss function comprises a weighted combination of the contrastive loss function and the reconstruction loss function; and weights used in the weighted combination are included in the model parameters of the foundation model and are adjusted during the training to minimize the total loss function through an iterative back propagation process.

Clause 9. The method of clause 1, wherein training the plurality of task-specific models comprises at least one of: freezing all model parameters of the foundation model during the training of the plurality of task-specific models; fine-tuning all model parameters of the foundation model based on at least one task-specific prediction loss during the training of the plurality of task-specific models; or during the training of the plurality of task-specific models: freezing model parameters of an upstream layer of the foundation model, and fine-tuning model parameters of a downstream layer of the foundation model, wherein each of the plurality of task-specific models is a downstream model compared to the foundation model.

Clause 10. The method of clause 1, wherein performing the plurality of wireless sensing tasks comprises: generating a feature map using the foundation model based on CI data collected in real-time; and inputting the feature map to the plurality of task-specific models perform the plurality of wireless sensing tasks respectively.

Clause 11. The method of clause 1, wherein performing the plurality of wireless sensing tasks comprises: collecting real-time CI data from multiple wireless links for at least one task of the plurality of wireless sensing tasks; and for each task of the at least one task: generating, using the foundation model, a plurality of feature maps each based on real-time CI data collected from a corresponding one of the multiple wireless links, generating a fused feature map at least in part by fusing the plurality of feature maps along a subcarrier dimension or according to an index of each of the multiple wireless links, and inputting the fused feature map into a task-specific model corresponding to the task to generate a decision result for the task.

Clause 12. The method of clause 1, wherein performing the plurality of wireless sensing tasks comprises: collecting real-time CI data from multiple wireless links for at least one task of the plurality of wireless sensing tasks; and for each task of the at least one task: generating, using the foundation model, a plurality of feature maps each based on real-time CI data collected from a corresponding one of the multiple wireless links, inputting each of the plurality of feature maps into a task-specific model corresponding to the task to generate a candidate decision result for the task, and fusing all candidate decision results generated for the task based on a fusion model to generate a final decision result for the task.

Clause 13. The method of clause 1, wherein: the foundation model is trained based on self-supervised machine learning without labelled data; and each of the plurality of task-specific models is trained based on labelled data.

Clause 14. The method of clause 1, wherein: the training dataset is generated by a local device and transmitted from the local device to a cloud server; the foundation model and the plurality of task-specific models are trained by the cloud server; and performing the plurality of wireless sensing tasks comprises: collecting and processing real-time CI data by at least one local device to generate processed real-time CI data, determining, by the at least one local device, whether a triggering event happens based on the processed real-time CI data, in accordance with a determination that the triggering event happens, transmitting an immediate past portion of the processed real-time CI data within an immediate past time period from the at least one local device to the cloud server, and performing, by the cloud server, a wireless sensing task corresponding to the triggering event based on the immediate past portion of the processed real-time CI data using the foundation model and a task-specific model corresponding to the wireless sensing task.

Clause 15. A system for wireless sensing, comprising: at least one local device configured to: obtain channel information (CI) data generated based on at least one wireless channel, generate a training dataset based on the CI data, wherein the training dataset comprises: a plurality of CI pairs, original CI data and a mask; and a cloud server configured to: train a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function, and train a plurality of task-specific models, wherein the at least one local device and the cloud server are further configured to perform a plurality of wireless sensing tasks based on the foundation model and the plurality of task-specific models, wherein each of the plurality of task-specific models is used to perform a corresponding one of the plurality of wireless sensing tasks together with the foundation model.

Clause 16. The system of clause 15, wherein the at least one local device is configured to generate the training dataset at least in part by: processing the CI data to generate preprocessed CI data according to a standardized format readable by the foundation model; performing a data augmentation on preprocessed CI in the preprocessed CI data to generate augmented CI, wherein the plurality of CI pairs comprises: a positive CI pair formed by a preprocessed CI and its associated augmented CI, a positive CI pair formed by two preprocessed CI, a positive CI pair formed by two augmented CI, a negative CI pair formed by two CI obtained from two different wireless channels, a negative CI pair formed by two CI obtained from two different venues, a negative CI pair formed by two CI associated with two different sensing events.

Clause 17. The system of clause 16, wherein: processing the CI data comprises: selecting subcarriers for at least one CI in the CI data to generate a same number of subcarriers for all CI in the CI data according to the standardized format, and resampling each CI in the CI data to a predetermined temporal rate according to the standardized format; and performing the data augmentation comprises at least one of: adding random noise to the preprocessed CI, randomizing the selected subcarriers within a block, performing a time scaling or a time warping on the preprocessed CI, simulating at least one environmental parameter related to multi-path change or occlusion, and normalizing amplitudes of the preprocessed CI to mitigate power variation.

Clause 18. The system of clause 16, wherein determining the contrastive loss function comprises: mapping each CI in the training dataset to a corresponding embedding point in an embedding space using the foundation model; for each CI pair comprising two CI in the training dataset, generating a distance score between two embedding points corresponding to the two CI of the CI pair based on the first similarity metric, wherein: the distance score is smaller when the CI pair is a positive CI pair, the distance score is larger when the CI pair is a negative CI pair; and determining the contrastive loss function based on the distance score.

Clause 19. The system of clause 15, wherein determining the reconstruction loss function comprises: generating masked CI data at least in part by applying the mask to the original CI data to remove at least one portion of the original CI data along a time dimension or a subcarrier dimension; generating the predicted CI data based on the masked CI data using the foundation model; generating an error function between the original CI data and the predicted CI data based on the second similarity metric; and determining the reconstruction loss function based on the error function.

Clause 20. A device for wireless sensing, comprising: at least one processor; and at least one memory storing instructions, which when executed, cause the at least one processor to perform operations comprising: obtaining channel information (CI) data generated based on at least one wireless channel, generating a training dataset based on the CI data, wherein the training dataset comprises: a plurality of CI pairs, original CI data and a mask, training a foundation model using the training dataset at least in part by: determining a contrastive loss function based on a first similarity metric between CI data of each CI pair in the training dataset, determining a reconstruction loss function based on a second similarity metric between the original CI data and predicted CI data generated based on the mask, determining a total loss function based on an aggregate of the contrastive loss function and the reconstruction loss function, and determining model parameters of the foundation model to minimize the total loss function, training a plurality of task-specific models, and performing a plurality of wireless sensing tasks based on the foundation model and the plurality of task-specific models, wherein each of the plurality of task-specific models is used to perform a corresponding one of the plurality of wireless sensing tasks together with the foundation model.

In some embodiments, a wireless sensing system may utilize a deep learning network. Examples of a deep learning network may include: a Feedforward neural network (FNN), a Convolutional neural network (CNN), a Recurrent neural networks (RNN), an autoencoder, a Generative Adversarial Network (GAN), a transformer network, a Radial Basis Function Network (RBFN), a Self-organizing Map (SOM), a Deep Belief Network (DBN), a Neural Turing Machine (NTM).

In some embodiments, a CNN is primarily used for processing structured grid data such as images. CNN uses a mathematical operation called convolution in place of general matrix multiplication in at least one of their layers. They are designed to automatically and adaptively learn spatial hierarchies of features from input images. In some embodiments, variants including Residual Neural networks (ResNet) may be used to facilitate the training of deep learning networks by allowing gradients to flow more effectively through multiple layers.

In some embodiments, a RNN is suited for sequential data like time series, speech, text. RNNs have connections that form directed cycles, allowing information to persist over time. Variants include Long Short-Term Memory (LSTM) and Gated Recurrent Units (GRU) were developed to address issues like vanishing gradients and to better capture long-range dependencies.

In some embodiments, autoencoders are unsupervised learning models that aim to learn a representation (encoding) for a set of data. Typically used for dimensionality reduction or feature learning. Consist of an encoder that compresses the input into a latent space representation and a decoder that reconstructs the input data from this representation.

In some embodiments, GANs may comprise two networks: a generator and a discriminator, which are trained simultaneously through adversarial processes. The generator learns to produce data that is similar to the training data, while the discriminator learns to distinguish between real and generated data. Used for generating realistic images, videos, and voice recordings.

In some embodiments, a transformer network is a model that uses self-attention mechanisms to weigh the significance of different parts of the input data differently. Transformers have been shown to be highly effective for natural language processing tasks. The architecture is the basis for models like BERT, GPT (Generative Pretrained Transformer), and others.

In some embodiments, RBFNs may use radial basis functions as activation functions. They may be used for function approximation, time series prediction, and control.

In some embodiments, SOMs may be unsupervised learning models used to produce a low-dimensional representation of a higher-dimensional data set. Useful for visualizing high-dimensional data in two or three dimensions.

In some embodiments, DBNs may be composed of multiple layers of stochastic, latent variables. The layers can be trained in a greedy, layer-wise fashion.

In some embodiments, NTMs may combine the fuzzy pattern matching capabilities of neural networks with the algorithmic power of programmable computers. They can infer simple algorithms from examples.

The following numbered clauses provide examples for training a deep learning network as a classifier for wireless sensing.

Clause 571_1. A method/device/system/software of training deep learning classifier using multi-granularity-level training data, comprising: in an operating phase: transmitting a wireless signal by a Type1 heterogeneous wireless device through a wireless channel in a venue; receiving the wireless signal by a Type2 heterogeneous wireless device in the venue, wherein the received wireless signal differs from the transmitted wireless signal due to the wireless channel and a motion of a user in the venue; obtaining N1 time series of channel information (TSCI) of the wireless channel by the Type2 device based on the received wireless signal; for each of the N1 TSCI: computing a respective 1-dimensional (1D) N11-point transform at a target granularity level based on channel information (CI) of the TSCI for each of N9 sliding time windows in a time period, wherein any granularity level is one of: per-component level, per-TSCI level, or all-TSCI level, and constructing a 2-dimensional (2-D) transform matrix of size N11xN9 at the target granularity level for the TSCI for the time period based on the N9 1D N11-point transform; inputting the N1 2-D transform matrices at the target granularity level for the time period into a deep learning classifier; using the deep learning classifier to classify the motion of the object in the time period into a particular motion class based on the N1 2-D transform matrix at the target granularity level; in a training phase: obtaining a plurality of training TSCI for the particular motion class based on respective received training wireless signal transmitted from a training Type1 device to a training Type2 device; for each of N9 sliding time windows in a training time period and for each training TSCI, computing a respective first 1-dimensional (1D) N11-point transform at the target granularity level and multiple respective second 1D N11-point transforms at a second granularity level based on channel information (CI) of the TSCI in the sliding time window, wherein the second granularity level is different from the target granularity level; constructing a first 2-dimensional (2-D) transform matrix of size N11xN9 at the target granularity level for each training TSCI for the training time period based on the N9 first 1D N11-point transform; constructing multiple second 2-D transform matrices of size N11xN9 at the second granularity level for each training TSCI for the training time period based on the second 1D N11-point transforms at the second granularity level, each second 2-D transform matrix based on respective N9 second 1D N11-point transform; training the deep learning network for the particular motion class based on both the first 2-D transform matrix and the multiple second 2-D transform matrices.

In some embodiments, the deep learning classifier may be used only when motion is detected - i.e. when motion statistics is greater than a threshold.

Clause 571_2. The method/device/system/software of training deep learning classifier using multi-granularity-level training data of clause 571_1, comprising: computing a motion statistics (MS) based on N5 CI of the TSCI in the time period; detecting the motion of the user in the time period by comparing the motion statistics with a first threshold, wherein the motion of user is detected in the time period when the motion statistics exceeds the first threshold; classifying the motion of the user when the motion of the user is detected.

In some embodiments, there may be a plurality of motion classes for the deep learning classifier.

Clause 571_3. The method/device/system/software of training deep learning classifier using multi-granularity-level training data of clause 571_1, comprising: using the deep learning classifier to classify the motion of the object in the timer period into one of a plurality of motion classes based on the 2-D transform matrix at the target granularity level.

In some embodiments, the deep learning classifier may have two stages: stage-1 network, stage-2 network. The stage-1 network may be CNN with ReLU activation and maxpooling. In some embodiments, a shared CNN architecture may be used by utilizing a single CNN model to extract features from multiple 2-D transform matrices. This may minimize computation overhead, enable batch processing. This shared architecture may facilitate integration of 2-D transform matrices from new devices without the need for retraining the model. This may particularly be beneficial in dynamic environments where the number of IoT devices may vary. In some embodiments, some possible stage-2 networks are listed here. It may be a transformer. Positional embedding may not be used, which helped to make the system device-agnostic. The classification token is a learnable embedding with the same dimensionality as the feature maps. Attention map of transformer block may measure importance of each feature map and assigns a weight based on that.

Clause 571_4. The method/device/system/software of training deep learning classifier using multi-granularity-level training data of clause 571_3, comprising: wherein the deep learning classifier comprises a stage-1 neural network and a stage-2 neural network; wherein the stage-1 neural network is the first stage of the deep learning classifier comprising a convolutional neural network (CNN); wherein the stage-2 neural network is the second stage of the deep learning classifier comprising one of: feedforward neural network (FNN), fully-connected network (FCN), CNN, recurrent neural network (RNN), long short-term memory (LSTM), or transformer.

In some embodiments, the data flow includes: 2-D transform matrix inputted to Stage-1. In some embodiments, 2-D transform matrix is input to stage-1 CNN. Output of stage-1 CNN may be fed into stage-2 network (possible some suitable data rearrangement). Output of stage-2 CNN may be output analytics associated with the plurality of motion classes.

Clause 571_5. The method/device/system/software of training deep learning classifier using multi-granularity-level training data of clause 571_4, comprising: inputting the 2-D transform matrix for the time period into the stage-1 CNN of the deep learning classifier; inputting an intermediate output of the stage-1 CNN into the stage-2 neural network of the deep learning classifier; output a plurality of output likelihood score for the plurality of motion classes, each output analytics associated with respective motion classes.

In some embodiments, motion class associated with max output analytics may be chosen.

Clause 571_6. The method/device/system/software of training deep learning classifier using multi-granularity-level training data of clause 571_5, comprising: classifying the motion of the object in the time period into the particular motion class when the associated particular output likelihood score is greater than a threshold and is maximum among the plurality of output analytics.

In some embodiments, while special multi-granularity-level may be used to generate additional/supplementary/reasonable training data for motion classes that have insufficient training data, single (target) granularity level may be used for/used to train motion classes with sufficient training data.

Clause 571_7. The method/device/system/software of training deep learning classifier using multi-granularity-level training data of clause 571_1, comprising: in the operating phase: using the deep learning classifier to classify the motion of the object in the timer period into a second motion class based on the 2-D transform matrix at the target granularity level; in the training phase: obtaining a plurality of training TSCI for the second motion class based on respective received training wireless signal transmitted from a training Type1 device to a training Type2 device; for each of N9 sliding time windows in a training time period and for each training TSCI, computing a respective 1-dimensional (1D) N11-point transform at the target granularity level based on channel information (CI) of the TSCI in the sliding time window; constructing a 2-dimensional (2-D) transform matrix of size N11xN9 at the target granularity level for each training TSCI for the training time period based on the N9 1D N11-point transform; training the deep learning network for the second motion class based on the 2-D transform matrix.

In some embodiments, there are some ways to compute 1D transform at per-component granularity level.

Clause 571_8. The method/device/system/software of training deep learning classifier using multi-granularity-level training data of clause 571_1, comprising: where each CI have N4 CI-components (CIC); computing a per-component 1D N11-point transform associated with a particular component of CI of a particular TSCI by: forming a N11-tuple vector by concatenating a respective component of N11 consecutive CI of the particular TSCI, and applying the N11-point transform to the N11-tuple vector.

In some embodiments, there are some ways to compute 1D transform at per-TSCI granularity level.

Clause 571_9. The method/device/system/software of training deep learning classifier using multi-granularity-level training data of clause 571_8, comprising: computing a per-TSCI 1D N11-point transform associated with a particular TSCI as an aggregate of N4 per-component 1D N11-point transforms associated with the N4 components of the particular TSCI.

In some embodiments, there is a way to compute 1D transform at all-TSCI granularity level. (Basically the same as per-device-pair).

Clause 571_10. The method/device/system/software of training deep learning classifier using multi-granularity-level training data of clause 571_9, comprising: computing an all-TSCI 1D N11-point transform associated with all TSCI as an aggregate of N1 per-TSCI 1D N11-point transforms associated with the N1 TSCI.

In some embodiments, there is another way to compute 1D transform at all-TSCI granularity level. (Basically the same as per-device-pair).

Clause 571_11. The method/device/system/software of training deep learning classifier using multi-granularity-level training data of clause 571_9, comprising: computing an all-TSCI 1D N11-point transform associated with all TSCI as an aggregate of N1*N4 per-component 1D N11-point transforms associated with the N4 CIC of CI of the N1 TSCI.

In some embodiments, there is special case when there are more than one device-pairs.

Clause 571_12. The method/device/system/software of training deep learning classifier using multi-granularity-level training data of clause 571_11, comprising: wherein there are N10 pairs of Type1 devices and Type2 devices in the venue; in the operating phase: for each of N10 pairs of Typel devices and Type2 devices: transmitting a respective wireless signal by a respective Type1 device through a wireless channel in a venue; receiving the respective wireless signal by a respective Type2 device in the venue, wherein the received respective wireless signal differs from the transmitted respective wireless signal due to the wireless channel and the motion of the user in the venue; obtaining respective N1 time series of channel information (TSCI) of the wireless channel by the respective Type2 device based on the received respective wireless signal; for each of N10 device-pairs: for each of the respective N1 TSCI of the device-pair: for each of the N4 CIC of CI of the TSCI of the device-pair: computing a per-component 1-dimensional (1D) N11-point transform based on the CIC of channel information (CI) of the TSCI of the device-pair in each of N9 sliding time windows in a time period, and constructing a per-component 2-dimensional (2-D) transform matrix of size N11xN9 for the CIC of CI of the TSCI of the device-pair for the time period based on the N9 per-component 1D N11-point transforms, computing a per-TSCI 1D N11-point transform for the TSCI of the device-pair as a first aggregate of the N4 per-component 1D N11-point transform in each of the N9 sliding time windows in the time period, and constructing a per-TSCI 2-D transform matrix of size N11xN9 for the TSCI of the device-pair for the time period based on the N9 per-TSCI 1D N11-point transforms; computing a per-device-pair 1D N11-point transform as a second aggregate of the N1 per-TSCI N11-point transform, or as a third aggregate of the N1*N4 per-component N11-point transform, in each of the N9 sliding time windows in the time period; constructing a per-device-pair 2-D transform matrix of size N11xN9 for the N10 device-pair for the time period based on the N9 per-device-pair 1D N11-point transforms; computing an all-device-pair 1D N11-point transform as a fourth aggregate of the N10 per-device-pair N11-point transforms, as a fifth aggregate of all respective N1 per-TSCI N11-point transforms of all the N10 device-pairs, or as a sixth aggregate of all respective N1*N4 per-component N11-point transform of all the N10 device-pairs, in each of the N9 sliding time windows in the time period; constructing an all-device-pair 2-D transform matrix of size N11xN9 for all the N10 device-pairs for the time period based on the N9 per-device-pair 1D N11-point transforms; inputting the 2-D transform matrix at a target granularity level for the time period into a deep learning classifier, wherein the target granularity level is either per-device-pair level or all-device; using the deep learning classifier to classify the motion of the object in the time period into a particular motion class based on the 2-D transform matrix at the target granularity level; in a training phase: obtaining a plurality of training TSCI for the particular motion class based on respective received training wireless signal transmitted from a training Type1 device to a training Type2 device; for each of N9 sliding time windows in a training time period and for each training TSCI, computing a respective first 1-dimensional (1D) N11-point transform at the target granularity level and multiple respective second 1D N11-point transforms at a second granularity level based on channel information (CI) of the TSCI in the sliding time window, wherein the second granularity level is different from the target granularity level; constructing a first 2-dimensional (2-D) transform matrix of size N11xN9 at the target granularity level for each training TSCI for the training time period based on the N9 first 1D N11-point transform; constructing multiple second 2-D transform matrices of size N11xN9 at the second granularity level for each training TSCI for the training time period based on the second 1D N11-point transforms at the second granularity level, each second 2-D transform matrix based on respective N9 second 1D N11-point transform; training the deep learning network for the particular motion class based on both the first 2-D transform matrix and the multiple second 2-D transform matrices.

Clause 571_13. The method/device/system/software of training deep learning classifier using multi-granularity-level training data of clause 571_12, comprising: wherein the target granularity level is the all-device-pair level; wherein the second granularity level is any of: the per-device-pair level, the per-TSCI level or the per-component level.

Clause 571_14. The method/device/system/software of training deep learning classifier using multi-granularity-level training data of clause 571_12, comprising: wherein the target granularity level is the per-device-pair level; wherein the second granularity level is the per-TSCI level or the per-component level.

Clause 571_15. The method/device/system/software of training deep learning classifier using multi-granularity-level training data of clause 571_1, comprising: constructing the 2-D transform matrix of size N11xN9 for the time period by assembling and concatenating the N9 1D transform as columns of the 2-D transform matrix.

Clause 571_16. The method/device/system/software of training deep learning classifier using multi-granularity-level training data of clause 571_15, comprising: wherein each 1D transform is associated with a time stamp; assembling and concatenating the N9 1D transform as columns of the 2-D transform matrix in increasing order of the time stamp.

Clause 571_17. The method/device/system/software of training deep learning classifier using multi-granularity-level training data of clause 571_1, comprising: computing N9 1D N11-point d-transform based on the N9 1D N11-point transform in the N9 sliding time windows in the time period, each 1D d-transform being a differential of a respective 1D transform in transform domain; constructing the 2-dimensional (2-D) transform matrix of size N11xN9 for each time fragment by assembling and concatenating the N9 1D d-transform as columns of the 2-D transform matrix in increasing order of the time stamp.

In some embodiments, ACF may be crucial for a range of passive sensing applications, including gait monitoring, motion detection, breathing estimation, human identification, and gesture recognition. Analyzing ACF over extended time windows may provide valuable insights into slowly changing environmental dynamics while observing ACF at shorter intervals allows one to detect transient changes, such as falls. Increasing frequency of ACF calculations along with enhancing resolution and duration of time lags may be vital for optimizing performance across these applications. However, this approach leads to larger ACF vector sizes. The ability to compress ACF data offers significant advantages: (1) efficient data transmission, compression of ACF, faster and more cost effective data transmission, thereby enhancing responsiveness and overall performance of applications; (2) reduced complexity. Using ACF as input can significantly increase the number of parameters that need to be learned, requiring extensive training data. Compressed ACF may reduce input dimensions, which simplifies the model and decreases the number of parameters to learn, simplify the training process. ACF compression can enhance efficiency of data transmission, reduces storage requirement, improves processing speeds and reduces bandwidth consumption.

In some examples, a dictionary learning approach or deep learning based approach can be used to learn a compact representation of an ACF vector. In some embodiments, an encoder-decoder architecture may be utilized. Using a training dataset, the model can learn a lossy encoded representation of a general ACF vector that can be reconstructed with minimum error. In some embodiments, to build such a system, the following operations may be performed.

(a) d-ACF (difference of ACF) calculation. In some examples, the d-ACF vectors are calculated with a time lag of 0.1 sec. For a sounding rate of 1500Hz, this results in 149 length vector which is downsampled by 2 (due to computation of difference of adjacent ACF) to obtain a 74 length vector. For every second, d-ACF calculations are performed 10 times, i.e. a step size of 0.1 sec used. There are 232 subcarriers in total from the 4x4 MIMO of which only 39 subcarriers are used by uniform downsampling.

(b) Data preparation. In some examples, d-ACF vectors are generated for different subcarriers from the CSI collected during routine activities in indoor environments including movement of humans, pets, and other mechanical objects. The d-ACF vectors may then be normalized to lie in the range of 0 and 1.

(c) Training. In some examples, an encoder-decoder architecture that includes 17700 learnable parameters may be trained using above training dataset using 5000 epochs and a learning rate of 1e{-4} and a mean squared error loss.

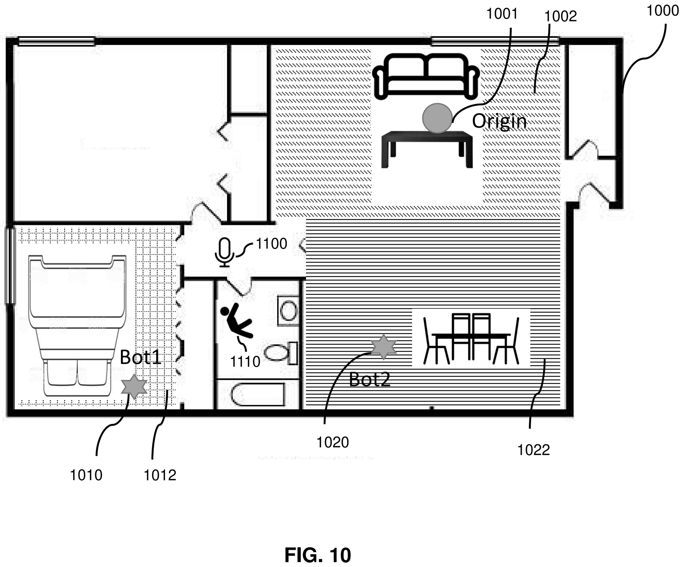

FIG. 10 illustrates an example scenario where a motion/event/activity (e.g. fall/abrupt/impulsive/transient/impactful motion, motion that generates sound/vibration/pressure change, or target motion) is detected (or monitored) based on wireless signal or auxiliary signal or both in a venue, according to one embodiment of the present teaching. For example, as shown in FIG. 10, in a 2-bedroom apartment 1000, Origin 1001 ( Type2 device) may be placed in the living-room area 1002, Bot 1 1010 (e.g. Type1 device) may be placed in a bedroom1-area 1012, and Bot 2 1020 (e.g. Type1 device) may be placed in the dining-room area 1022. A sensor 1100 (e.g. microphone/camera/light sensor/pressure sensor) may also be placed somewhere in the apartment 1000 to capture auxiliary sensing signals (e.g. sound/image/-video/light/ pressure/vibration). During the motion/event/activity (e.g. a person 1110 falls down making sound that is picked up by microphone sensor 1100), each of Bot 1 1010 and Bot 2 1020 can transmit a wireless (sounding/probe) signal to the Origin 1001, which can obtain channel information of a wireless multipath channel based on the wireless signal. A motion information (MI) or radio-based MI (RMI) can be computed based on the channel information. During the motion/event/activity, the sensor 1100 can capture an associated auxiliary signal. An aux-based motion information (AMI) can be computed based on the auxiliary signal. The motion/event/activity can be detected/monitored individually based on the RMI alone (radio-based), individually based on the AMI alone (aux-based), or jointly based on both the RMI and AMI (radio-aux-based, e.g. sequentially radio-based followed by aux-based, or sequentially aux-based followed by radio-based, or simultaneously/contemporaneously by both radio-based and aux-based).

If object motion/activity is detected based on wireless signals transmitted by both Bot 1 1010 and Bot 2 1020, localization may be performed such that a location of the activity/motion/event or the object (e.g. person/user) may be determined the living-room area 1002. If detection is based only on wireless signals transmitted by Bot 1 1010, the location may be determined to be in the bedroom-1 area 1012. If detection is based only on wireless signals transmitted by Bot 2 1020, the location may be determined in the dining-room area 1022. If target motion/event/activity cannot be detected based on wireless signals transmitted by either Bot 1 1010 or Bot 2 1020, then it may be determined that nobody and no object is in the apartment 1000. The corresponding area where the activity/motion/event/person/user is detected may be marked with a predetermined pattern.

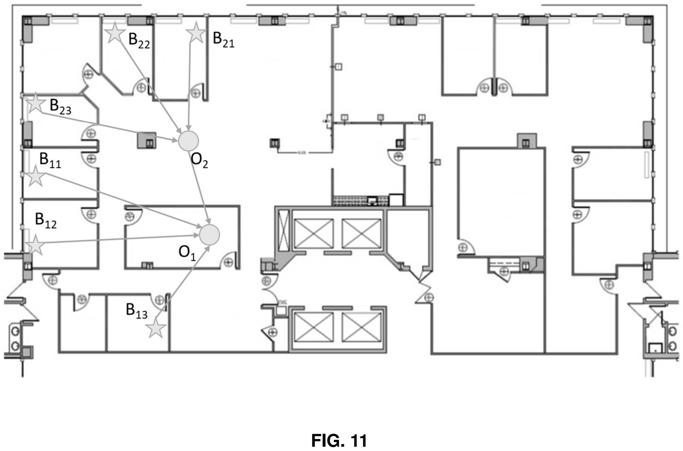

FIG. 11 illustrates an example floor plan and placement of wireless devices for wireless monitoring with motion/event/activity detection and localization, according to some embodiments of the present disclosure. In the example shown in FIG. 11, there are two origins O1 and O2. Each origin is associated with three bots. For example, O1 is associated with bots B11, B12, and B13 (together constitute a first origin group); and O2 is associated with bots B21, B22, and B23 (together constitute a second origin group). Each device of the bots and origins is fixed at a different location. In one embodiment, the origin O1 is called a master origin; and the origin O2 is called a child origin, where the child origin can transmit statistics and information to the master origin for combination.

In some embodiments, the floor plan and placement of wireless devices in FIG. 11 can be used to perform multi-person or multi-object motion localization based on motion statistics. When there are two or more origins, motion statistics (or RMI) measured from different links of different origins are combined to contribute together to the motion localization. For each activated bot, it is determined which origin the bot is associated with, e.g. based on a smoothed motion statistics in a time window. For example, when the smoothed motion statistics of Bot k with respect to Origin j is larger than a threshold, Bot k is determined to be associated with Origin j. The same threshold can be used for other origins. Thus, for each origin, a set of activated bots associated with the origin can be determined. A likelihood is calculated for each activated bot k to detect a motion, and is smoothed over a time window. For each origin group including an origin and its associated bots (e.g. O1, B11, B12, B13), an average motion statistics is computed for the origin group across all the associated bots. Each calculation or computation above can be performed at the origin or the bot.

When there is any motion detected in the environment, an origin group with the highest average motion statistics is chosen. When the average motion statistics of the chosen origin group is larger than a threshold, the motion is determined to be around the origin of the group. Otherwise, when the average motion statistics of the chosen origin group is not larger than a threshold, the motion is determined to be around the bot with the highest likelihood within the origin group.

In some embodiments, the present teaching discloses systems and methods for wireless sensing based on a network comprising local groups of wireless devices.

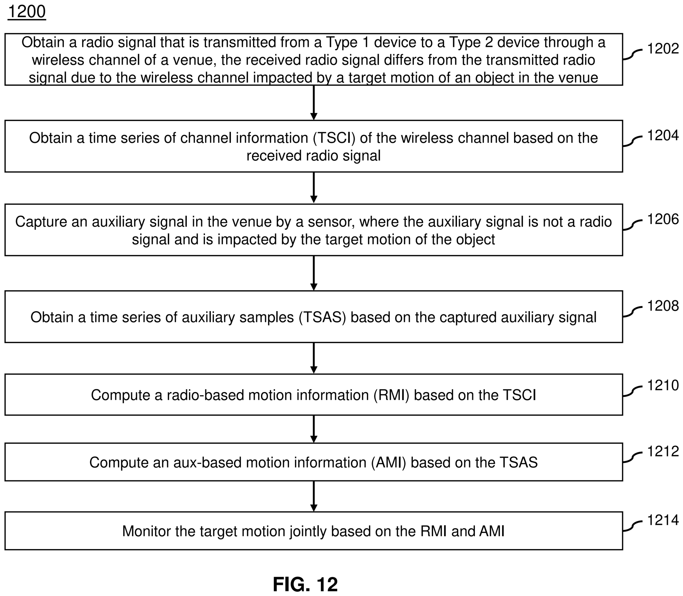

FIG. 12 illustrates a flow chart of an example method for hybrid radio-plus-aux fall-down detection based on wireless sensing, according to some embodiments of the present disclosure.

In some embodiments, a combination of local subsystems with a main system is disclosed. One aspect of the present teaching is about performing wireless sensing in a venue with multiple groups of devices, establishing (a) a local wireless sensing subsystem based on each group of devices, and (b) a main wireless sensing system in the venue linking/connecting all the local wireless sensing subsystems.

Grouping of devices. For a venue, a user may define a number of groups and assign each device in the venue to a group. The user may use a user device (e.g. smart phone, computer, tablet or other smart device) to connect/interact with each device to assign the device to the groups. For example, each group of devices may be associated with a certain area/zone (e.g. bedroom, kitchen, living room) in the venue (e.g. a house). There may be multi-tier or hierarchical grouping. In a high level, there may be no subdivision such that all devices are in the same group (e.g. all devices in a house considered as one group). In the next level, the group may be subdivided into two or more subgroups (e.g. a "first-floor" subgroup comprising devices in first floor of the house, a "second-floor" subgroup comprising devices in second floor). In the next level, a subgroup may be subdivided into two or more sub-sub-groups (e.g. second-floor devices subdivided into sub-subgroups such as "bedroom 1", "bedroom 2", etc.; first-floor devices subdivided into sub-subgroups such as "kitchen", "living room", "dining room", etc.) and so on.

Network of networks configuration. The main wireless sensing system comprises a network of devices in a star configuration with a device in the center of the star configuration (called "main center device") and a number of devices at the vertices of the star configuration (called "main terminal devices") linked/connected radially to the main center device. Similarly, each subsystem comprises a network (or sub-network, called "local sub-network") of devices in a star configuration with a corresponding local device in the center of the star configuration (called "local center device") and a number of devices at the vertices of the star configuration (called "local terminal devices") linked/connected radially to the local center devices.

In some embodiments, the user may designate each device to the roles of main center device, main terminal devices, local center devices and local terminal devices. A device may be designated to multiple roles (e.g. both a main terminal device and a local terminal device). If the user does not differentiate the devices in a particular into local center device and local terminal device, a certain algorithm may be applied to automatically choose one of a group of devices to be local center device. For example, a criterion for the choice of local center device may be the ability to be an access point (AP), or the ability to multi-cast/broadcast. The device with recent multi-cast may be chosen.

Wireless sensing in local subsystems/networks. Wireless sensing measurements take place in the subsystems (local sub-networks). The devices may be configured to perform wireless sensing in each link (or branch) of each subsystem (local sub-network). In other words, pairwise wireless sensing is performed between the local center device and each local terminal device. In each link, a first device (either the local center device or the local terminal device) functions as a TypeI device to transmit a wireless signal (e.g. a train of sounding signals, null-data-packet, NDP, NDP announcement, NDPA, NDPA sounding, trigger-based (TB) sensing, non-TB sensing, trigger frame (TF) sounding, NDPA sounding, initiator-to responder (I2R) sounding, responder-to-initiator (R2I) sounding) to the second device. The second device (either the local terminal device or the local center device) obtains information of the wireless channel (channel information or CI, such as CSI, CIR, CFR, etc.) based on the received wireless signal. It may perform some WiFi sensing computational tasks based on the CI to obtain raw sensing data. It may transmit/report the raw sensing data to the first device. It may transmit/report the CI to the first device which would perform some WiFi sensing computational tasks based on the CI to obtain raw sensing data.

In some embodiments, if the local center device is the first device in multiple links in the local sub-network, it may broadcast, multi-cast and/or unicast the wireless signal(s) to the local terminal devices in the multiple links. In some embodiments, if the local center device is the second device in multiple links, the local terminal devices in the multiple links may transmit the respective wireless signals simultaneously and/or sequentially. Such transmission may be in response to some signal (e.g. trigger signal, trigger frame, polling signal) from the local center device.

In some embodiments, the main center device may establish a local subsystem (local sub-network) with itself being the local center device of the star configuration of the local subsystem and may take part in wireless sensing accordingly.

Details of sensing setup and signaling. More than one wireless signals may be simultaneously transmitted using different frequency bands, different frequency subbands, different frequency carriers, different antennas, and/or different beamforming/beamformer. The configuration of the devices, configuration (e.g. sensing session setup, sensing measurement setup, sensing-by-proxy (SBP) setup) of each pair of devices performing pairwise wireless sensing, transmission of the wireless signal, and/or the obtaining of channel information may be based on a standard (e.g. 802.11, 802.11bf, 4G, 5G, 6G, 7G, 8G, etc.). The transmission of the wireless signal may be in response or correlated to another wireless signal or wireless handshake/procedure (e.g. trigger signal, request, SBP request, sensing session set up, sensing measurement set up). The transmission of the wireless signal may be associated with an identification (ID, e.g. session ID, measurement ID, session setup ID, measurement setup ID, measurement instance ID, time code, etc.).

Main network and local sub-network linkage. In some embodiments of the present teaching, a local sub-network may be linked to the main network in 3 possible methods: (a) via the local center device of the local sub-network, (b) via the local terminal devices of the local sub-network, or (c) via both the local center device and at least one terminal device.

In Method (a), the local center device of the local sub-network is linked/connected to the main center device in the main network. In other words, the local center device is also a main terminal device. The local center device may function as the second device such that the wireless signals may be transmitted from the local terminal devices to the local center device. TB sensing with TF sounding may be used. Non-TB sensing with I2R sounding may be used. Alternatively, the local center device may function as the first device such that the wireless signal(s) may be broadcasted/multi-casted/unicasted/transmitted from the local center device to the local terminal devices. TB sounding may be used. NDPA sounding may be used. The CI obtained by the local terminal device, or raw sensing data computed based on the CI by the local terminal device, may be transmitted/reported to the local center device.

In Method (b), each local terminal device is linked/connected to the main center device. In other words, each local terminal device is also a main terminal device. The local center device may function as the first device such that the wireless signal(s) may be broadcasted, multi-casted or unicasted from the local center device to the local terminal devices. Alternatively, the local center device may function as the second device such that the wireless signals are transmitted from the local terminal devices to the local center device. The CI obtained by the local center device, or raw sensing data computed based on the CI by the local center device, may be transmitted/reported to the local terminal device.

In Method (c), both the local center device and at least one local terminal device are linked/connected to the main center device. Method (c) is a hybrid between (a) and (b). The local center device may function as the first device such that the wireless signal(s) may be broadcasted, multi-casted or unicasted from the local center device to the local terminal devices. The local center device may function as the second device in some links such that the wireless signals are transmitted from the local terminal devices to the local center device.

Center devices being AP. Note that each center device may be an access point of the corresponding network. For example, a local center device may be the access point (AP) of the corresponding local sub-network, while the main center device may be AP of the main network. The center device may have broadband/internet access.

Local terminal device network usage. For Method (a), (b) or (c) in which a local device in a local sub-network (either local center device or local terminal device) may be simultaneously a main terminal device, the local device may be associated with the local sub-network using one channel or one band (e.g. a 2.4GHz channel, a 5GHz channel, a 60GHz channel, a millimeter wave channel, a UWB channel) and a second network of the main center device using a second channel or a second band (e.g. a 2.4GHz channel, a 5GHz channel, a 60GHz channel, a millimeter wave channel, a UWB channel) simultaneously. The local device may be a dual-band, tri-band, quad-band or higher-band device. It may use the first network to perform wireless sensing (transmit or receive wireless signal and obtain raw sensing result/data computed based on CI obtained from the wireless signal) and use the second network to transmit the raw sensing data to the main center device.

Main center device network usage. The main center device may simultaneous be a local center device associated with its own or "personal" local sub-network. In addition to be AP for the main network, it may simultaneously be the AP of its personal local sub-network. It may use a first channel or a first band for the main network and use a second channel or a second band for the personal local sub-network. The first channel and the second channel may be the same or different. The personal local sub-network and the main network may be the same network.

The main center device may use the main network to receive raw sensing data (or result) from the local sub-networks and to send configuration or software update information to the local terminal devices. Configuration or software update information for the local center device may be sent by the main center device to the local center device directly using the main network. The configuration or software update information for the local center device may also be sent by the main center device to a local terminal device using the main network enroute to the local center device via the local sub-network.

In some embodiments, the main center device may use its personal local sub-network to perform wireless sensing. The resulting raw sensing data obtained in the wireless sensing may be transmitted/reported to the main center device via the personal local sub-networks or the main network.

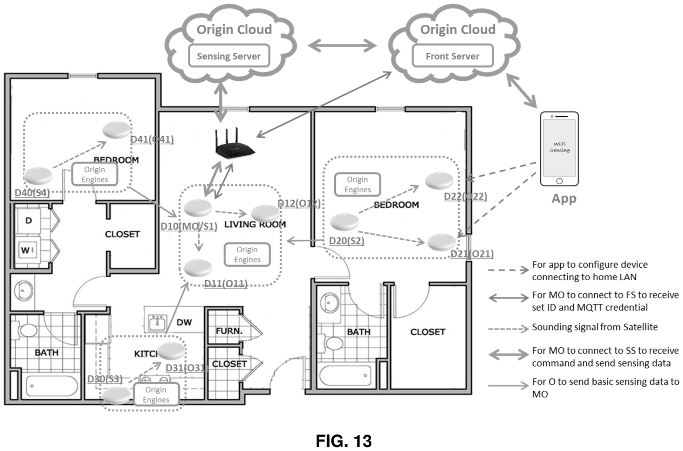

An example of performing wireless sensing in a venue with multiple groups of devices based on the disclosed method is illustrated in FIG. 13. The venue is a house with four zones, including two bedroom areas, a living room area and a kitchen area. The house has a WiFi router that has broadband connection to two cloud servers: a sensing server and a front server. The WiFi router establishes a home WiFi network with SSID MYHOME. The wireless sensing system comprises four subsystems formed by ten WiFi devices in the house. Three of the devices D10, D11, and D12 together form the first subgroup of devices that constitute a first subsystem or local sub-network to monitor a first zone (the living room area). Another three devices D20, D21, and D22 together form the second subgroup of devices that constitute a second subsystem or local sub-network to monitor a second zone (a bedroom area). Two devices D30 and D31 together form the third subgroup of devices that constitute a third subsystem to monitor a third zone (the kitchen area). Two devices D40 and D41 together form the fourth subgroup of devices that constitute a fourth subsystem (local sub-network) to monitor a fourth zone (another bedroom area).

In some embodiments, among the devices, D10 is the designated main center device, called master origin (MO), of the main network and the designated local center device of the first local sub-network. D11 and D12 are the designated local terminal devices of the first local sub-network. D10 has a dual band WiFi router chip with a 2.4 GHz band radio and a 5 GHz band radio. D10 is configured to be an AP to establish the first local sub-network with an SSID of "SENSE-SUBNET-01" using the 5 GHz radio. Each of D11 and D12 is a WiFi-enabled IoT device and is configured to associate with D10 and join the SENSE-SUBNET-01 network using the 5 GHz radio. Wireless sensing is performed in the first local sub-network with D10 broadcasting/multi-casting/unicasting a series of sounding signals to D11 and D12, each of which extracts CSI from the received sounding signals and performs at least one sensing computation task based on the CSI (e.g. motion detection, breathing detection, fall-down detection, etc.) to obtain raw sensing results (e.g. labels such as "motion detected", "motion not detected", "breathing detected", "breathing not detected", "fall-down detected", "fall-down not detected", motion statistics, breathing rate, etc.). In FIG. 13, a device marked "(O##)" is an Origin (or Type2 device); a device marked "(S#)" (e.g. "S1" or "S2" or "S3" or "S4") is a Satellite. In some embodiments, a Satellite is basically Tx or transmitter or Type1 device; while an Origin is basically Rx or receiver or Type2 device.

In some embodiments, all the devices (D10, D11, D12, D20, D21, D22, D30, D31, D40, D41) are configured to associate with the MYHOME home WiFi network using the 2.4 GHz radio. The subsystems report/transmit raw sensing results to the main center device (D10) or cloud server using MYHOME home WiFi network.

In a similar manner, each of the other local sub-networks has a designated local center device (e.g. D20 for the second local sub-network, D30 for the third and D40 for the fourth) and a number of designated local terminal devices. The designated local center device is configured to be an AP to establish the corresponding local sub-network with a corresponding SSID ("SENSE-SUBNET-02" for the second local sub-network, "SENSE-SUBNET-03" for the third, "SENSE-SUBNET-04" for the fourth) using the 5 GHz radio. Each designated local terminal device is configured to associate with the corresponding local center device and join the corresponding local sub-network. To perform the wireless sensing, the local center device transmits/broadcasts/multi-casts/unicasts a series of sounding signals to the local terminal device(s). Each local terminal device obtains CSI from the received sounding signals, performs at least one sensing computation task based on the CSI to obtain raw sensing results. The raw sensing results may be reported/-transmitted to the main center device (D10) or cloud servers using the MYHOME home WiFi network. In some embodiments, the main center device (D10) may be configured to combine/process/fuse the raw sensing results and/or to report/transmit the results to the cloud servers.

In some embodiments, a plurality of wireless devices (a set of heterogeneous wireless devices) in a venue (e.g. home) may be grouped into N+1 groups/networks (N>2), comprising a "main group" (Tier-1 network) and N "subgroups" (Tier-2/3/../K networks). The groups/networks may be overlapping, e.g. two groups/networks may share a common device (i.e. a device may be in both the main group and a subgroup). A subgroup (Tier-2/Tier-3/../Tier-K network) may/may not be a subset of the main group. Each subgroup (Tier-K network for some K>1) may comprise at least one device (called "particular wireless devices") being also in the main group (Tier-1 network).

In some embodiments, one of the N+1 groups may be a "main" group (first subset) of wireless devices, and may constitute a "main wireless sensing system", with one device being "main center device" (first device) and the others in the group being "main terminal device(s)" (Tier-1 devices). All devices in the main group may be communicatively coupled in a "main" wireless network/Tier-1 network (e.g. home WiFi network "MyHome") via a "main" wireless channel (first wireless channel) based on a "main" protocol (first protocol, e.g. 2.4GHz, WiFi, 802.11 standard, 20MHz channel). All devices in the main group may be associated with a "main" access-point (AP, e.g. home AP) and the "main" wireless network may be a wireless network associated with the main AP (e.g. home WiFi network).

In some embodiments, each of N remaining groups may be a "subgroup" (or Tier-2 group) of wireless devices, and may constitute a "sub-system" or a local system, with one device being "local center device" and the others in the subgroup being "local terminal device(s)". All devices in a respective subgroup may be communicatively coupled in a respective wireless network or a respective local sub-network via a respective "local" wireless channel based on a respective "local" protocol (e.g. one subgroup may use 5GHz, WiFi, 802.11 standard, 20 MHz channel; another subgroup may use 5GHz, WiFi, 80MHz channel). The respective local center device may function as a respective AP and the respective wireless network or respective local sub-network may be the associated wireless network.

In a subgroup, the local center device may be either the main center device, or a main terminal device. None, one, more than one, or all, of local terminal device(s) of the subgroup may be either the main center device, or a main terminal device. Wireless channels used by the main group (e.g. 2.4GHz WiFi) may be different from those used by the subgroups (e.g. 5GHz WiFi).

Except for the main group, each group (Tier-K network, K>1) may be used to perform wireless sensing measurement (sensing measurement setup, transmission of wireless sounding signals, extraction of channel information (TSCI), polling/reporting/termination, computation of pairwise sensing analytics, aggregation of pairwise sensing analytics to compute combined sensing analytics). A gateway device in each group/Tier-K network may be used to report sensing results obtained/computed in the Tier-K network to a device in a Tier-(K-1) network.

The N+1 networks may be configured to form a network of networks, with a multi-tier structure. A Tier-K network reports sensing results to a Tier-(K-1) network, for any K> 1. Tier-1 network may be the main network. The N groups may form N sub-networks (performing sensing measurements), and one group may be in a main network (enabling communication of sensing results/analytics/TSCI).

A gateway device may comprise multiple radios (e.g. 2.4GHz radio and 5GHz radio), and may use them to join more than one networks. For example, a Tier-3 gateway device (e.g. third particular wireless device) may use 5GHz/6GHz radio to join a Tier-3 network for performing/obtaining sensing measurements (e.g. TSCI, pairwise sensing analytics) and may use 2.4GHz radio to join Tier-1 network (e.g. first network, home network)) and use the Tier-1 network to send sensing results computed in the Tier-3 network from the Tier-3 network to a gateway device of a Tier-2 network (e.g. second particular wireless device) via the Tier-1 network. Similarly, the Tier-2 network may use its own 2.4GHz radio to join the Tier-1 network and to use its 5GHz/6GHz radio to perform/obtain sensing measurements.

In some embodiments, a gateway device links/connects two networks: a Tier-(K-1) network and a Tier-K network (e.g. Tier-1 network and Tier-2 network). Sensing results obtained in the Tier-K network may be transmitted from the Tier-K network to the Tier-(K-1) network (via the Tier-1 network).

In some embodiments, first combined analytics is associated with first wireless network (Tier-1). First device may compute first combined analytics by aggregating combined analytics from Tier-2 networks. Second combined analytics/particular device are associated with second wireless network (Tier-2). Third combined analytics/particular device are associated with third wireless network (Tier-3). Fourth combined analytics/particular device are associated with fourth wireless network (Tier-3). Fifth combined analytics/particular device are associated with fifth wireless network (Tier-2).

In some embodiments, pairwise sensing analytics may comprise a characteristics/spatial-temporal information(STI)/motion information(MI) of an object or a motion of the object. Pairwise sensing analytics may be based on a similarity score between a pair of temporally adjacent CI of a TSCI. The combined sensing analytics may be simply the pairwise sensing analytics (e.g. in the case of only 2 sensing devices in second network (Tier-K network).

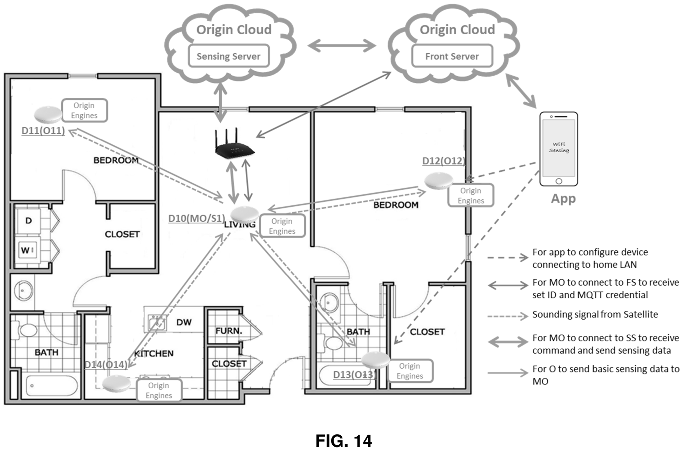

While FIG. 13 illustrates a per-room deployment for wireless sensing, FIG. 14 illustrates a whole-home deployment for wireless sensing. The per-room deployment may be suitable to sense fall detection, automation, and/or activity of daily living (ADL) on a per-room basis. The whole-home deployment may be suitable to sense home security and/or ADL on a whole-home basis. In some embodiments, a same system can support both deployment manners.

In some embodiments, all devices for wireless sensing are provisioned to a front server (FS) with UN/PW (password). One can extend FS or create an AS to support this development. All devices may be in softAP mode with known SSID/PW. As shown in FIG. 13, the set of devices at home includes: {D10, D11, D12, D20, D21, D22, D30, D31, D40, D41}.

During an onboarding process, an app can be used to scan QR codes and register devices to FS under a user account. FS then generates a set ID for the user and creates a sounder.conf file that contains the set ID. When a set is created in FS, FS can generate a default sounder.conf. It is similar to ABC or DEF with AS, where AS generates a set ID and creates dummy sounder.conf with the set ID. The file may be sent to a master Origin (MO) when it connects to AS.

In some embodiments, the app obtains the device credentials from FS. The app connects to the devices (using the device SSID/PW and credentials), provides them the home router SSID and PW for them to connect to the home router as clients. The app can select one device to be MO, e.g. D10. The app may connect to the device to: assign its role to MO, give MO the FS URL, and give MO credentials of other devices in MO network. MO may need credentials to connect to other devices. In some embodiments, the app connects to MO through home LAN.

In some embodiments, using its credential, MO connects to FS to receive: the sounder.conf file with the generated set ID (a.k.a. MO device ID); and sensing server (SS) MQTT credential and URL. A set ID generated by FS may allow changing/replacing MO device without losing sensing settings.

MO can connect to SS using the set ID and MQTT credential. The app may select devices for groups as follows {{D10, D11, D12}; {D20, D21, D22}; {D30, D31}; {D40, D41}} based on room setting. In some embodiments, the grouping can also apply to whole home setting, which includes a single group as shown in FIG. 14.

In some embodiments, the app sends to MO through SS the List-3 in groups, ex {MO ID, {D10, D11, D12}; {D20, D21, D22}; {D30, D31}; {D40, D41}}. For the scenario shown in FIG. 13, cloud and user do not know which one is Satellite or Origins in each group. They only know if these devices belong to which group. For the scenario shown in FIG. 14, the Satellite is in a specific location (e.g. middle of the house) to ensure motion localization performance. So the API should allow app to specify Satellite as well. Specifying Satellite devices could be an option.

In some embodiments, List-3 API will be modified to accommodate grouping. In some embodiments, format is in array and can be updated.

If Satellite is not specified, MO can compare the multicast list. The most recent multicast may be taken as the Satellite for that group. The other ones are the Origins in the group regardless if it is on or not. In this way, there is a device providing sounding.

MO may then build a sounder.conf and save it to FS. The system can modify FS or create an AS for this development. If an MO device is changed, the new MO device can go to FS to get the sounder.conf to restore the services. MO can return to SS the MO network. As such, the app can start the service.

In some embodiments, when receiving a start service command, MO already knows a device in MO network should be Satellite or Origin based on the onboarding. A Satellite can be chosen by MO or by user/app specification. Other devices are Origins.

For a device to be Origin, MO uses the device credential to connect to the Origin. MO provides the Origin the following: the ID and credential of the Satellite associated with the Origin; MO address for Origin to send basic engine output back; and the basic engine types for Origin to run. Origin will use the Satellite credential to connect to the Satellite.

Origin can look up in its multicast table to find the Satellite and its MAC address. Origin may use the Satellite credential to connect to the Satellite. Origin then sends the Satellite the start sounding command.

In some embodiments, Satellite starts the sounding signal if it has not started yet. After that, Origin runs the basic engines that MO requested. Origins send back to MO the basic engine outputs. MO runs fusion engine. MO then sends the fusion engine output to SS.

In some embodiments, when a user stops a service, the app sends MO the stop command. MO sends Origin a stop engine command. Origin stops its associated basic engines. If Origin has no other basic engine to run, Origin then sends the Satellite the stop sounding command.

For example, home security and sleep monitoring are running. Therefore, Origin needs to run motion and breathing. Then a user stops sleep monitoring. MO sends Origin stop breathing engine command. Because Origin still runs motion engine, Origin should not stop Satellite from sounding. In some embodiments, Satellite stops sounding if no other Origins need its sounding signal.

In some embodiments, during operation, MO may be offline or powered down. When resumed online, MO connects to FS to get: Sounder.conf file; SS MQTT credential and URL. MO may then connect to SS to receive service restoration information. If the service was running before MO was offline, MO starts the service. If the service was not running, MO waits to receive start service command.

In some embodiments, during operation, the user may add a device to the sensing network (assuming the device is not MO). Before proceeding adding/removing devices, the app should stop engines on MO. Adding a device is similar to onboarding a device. The device first needs to be provisioned to FS. As a neutral device, the device is in softAP mode with known SSID/PW. Before proceeding, app stops engines on MO. App scans QR codes and registers the device to FS under a user account. App obtains the device credential from FS. App connects to the device (using the device SSID/PW and credential), provides it the home router SSID and PW for it to connect to the home router as a client. App sends MO the new List-3 that includes the new device. MO then builds a sounder.conf and saves it to FS. MO returns to SS the MO network. App then can restart the service.

In some embodiments, during operation, the user may remove a device from the sensing network (assuming the device is not MO). Before proceeding adding/removing devices, app should stop the engines on MO. App stops the engines. App sends MO the new List-3 that excludes the removed device. MO then builds a sounder.conf and saves it to FS. MO returns to SS the MO network. App then can restart the service. After removal, the removed device is still in client mode to home router. Factory reset will neutralize the device. After factory reset, the device is in softAP mode with known SSID/PW, waiting to be configured to connect to home router.

In some embodiments, during operation, the user may replace MO. MO device may not be functional, or user wants to assign another device as MO. App attempts to stop engines on MO. If successful, MO then stops all engines on Origins, and Origins stop Satellite from sending sounding signal. App can deregister MO from user account in FS. Then MO is no longer able to connect to FS unless it gets registered again. FS revolts MQTT credential that MO uses. MO is no longer able to connect to SS. App selects another device to be MO. If the new MO is a neutral device, app connects to the device and makes it connect to home router.

App then connects to the device to: assign its role to MO; give MO the FS URL; and give MO credentials of other devices in MO network. MO may need credentials to connect to other devices. App connects to MO through home LAN. Using its credential, MO connects to FS to receive: the sounder.conf file with the existing set ID (a.k.a. MO device ID); and SS MQTT credential and URL. A set ID generated by FS allows changing/replacing MO device without losing sensing settings. MO connects to SS using the set ID and MQTT credential. MO receives restoration information from SS to resume the service. The old MO can be neutralized through factory reset.

In some embodiments, any device (MO, Origin, or Satellite) can be neutralized through factory reset. When neutralized, the device is in softAP mode with known SSID/PW, waiting to be configured to connect to home router.

In some embodiments, any device in the WiFi sensing network can be Satellite. A Satellite device can be chosen by MO or by user/app/cloud. MO can select a device to be Satellite by comparing the multicast list. MO takes the most recent multicast in a group as the Satellite for that group. Satellite keeps track of the start request from Origins. When an Origin requests sounding, if it is not in Satellite list, Satellite will add the Origin into its list. If an Origin is already in Satellite list requests sounding again, Satellite does not add the Origin into the list. In other words, Satellite list does not include duplicated Origins.

Periodically, Origin can tell Satellite to keep sending sounding signal if the Origin still runs its basic engines. If Satellite does not receive the keep going from an Origin, Satellite will remove the Origin from its list. This is to prevent Satellite from keeping sounding when engine is already stopped but Origin could not have a change to stop Satellite from sounding. An example is when an Origin is dead.

When an Origin stops all of its basic engines, the Origin will send the stop sounding to the Satellite. Satellite then removes the Origin from its list. When the list is empty, Satellite will stop sending out sounding signal. In some embodiments, Satellite does not maintain the list of Origins in persistent storage. When power-cycled, the list of Origin is empty, and thus Satellite does not send out sounding signal. If an Origin is running on the CSI from the Satellite, no CSI is received. Origin then sends the Satellite the request for start sounding. When Satellite is powered on and receives the start sounding, it resumes sending out the sounding signal.

In some embodiments, Origin is a device selected by MO. It is to provide basic engine data to MO to run fusion engines. MO can run multiple fusion engines.

MO should keep track which engine an Origin should run and tell the Origin to stop when no fusion engine requests the basic engine data. For example, soft security and ADL are running, where both requires basic motion engine. When stop Soft Security, MO should not send stop motion engine command to Origin because the ADL fusion engine still needs motion data from the Origin. In some embodiments, Origin does not keep track of the number of fusion engine consuming its output as in Linux system.

Periodically, MO sends Origin the start command for the needed basic engine. If Origin does not receive the start command from MO for a basic engine, Origin will stop the basic engine and thus possibly stops Satellite from sending sounding signal. This is to prevent Origin from running basic engines and Satellite from sending sounding signal forever when MO is dead.

In some embodiments, sample code for wireless sensing may include codes to: announce engine capabilities; provide connection among different devices in the sensing network; act in different roles (MO, Satellite, Origin) when assigned; provide connection to cloud; generate sounding signal and capture and parse CSI; send and receive control, command, and sensing data/detection; run engines in library, etc. In some embodiments, the library for wireless sensing may include core algorithms in basic engines and fusion engines, and produce sensing data and detection.

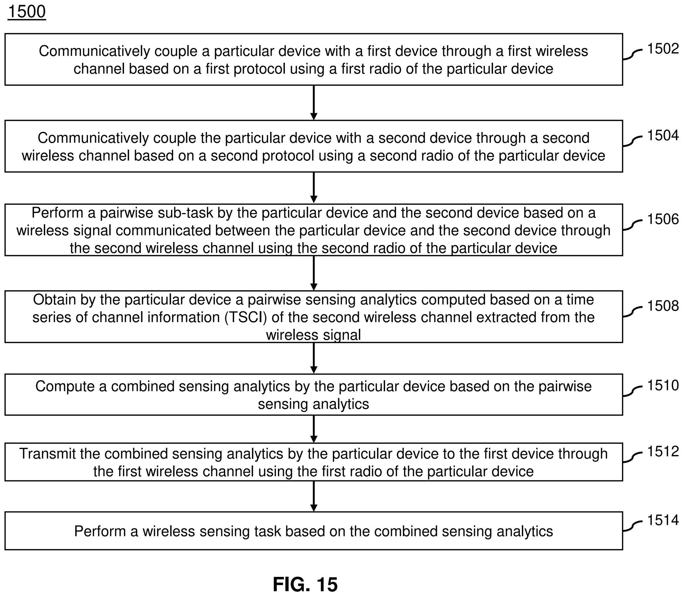

FIG. 15 illustrates a flow chart of an example method 1500 for performing wireless sensing in a venue with multiple groups of devices, according to some embodiments of the present disclosure. In various embodiments, the method 1500 can be performed by the systems disclosed above. At operation 1502, a particular device is communicatively coupled with a first device through a first wireless channel based on a first protocol using a first radio of the particular device. At operation 1504, the particular device is communicatively coupled with a second device through a second wireless channel based on a second protocol using a second radio of the particular device. In some embodiments, the first device, the second device, and the particular device are in a same wireless sensing system in a venue.

At operation 1506, a pairwise sub-task is performed by the particular device and the second device based on a wireless signal communicated between the particular device and the second device through the second wireless channel using the second radio of the particular device. At operation 1508, the particular device obtains a pairwise sensing analytics computed based on a time series of channel information (TSCI) of the second wireless channel extracted from the wireless signal. Each channel information (CI) may comprise at least one of: channel state information (CSI), channel impulse response (CIR) or channel frequency response (CFR). At operation 1510, a combined sensing analytics is computed by the particular device based on the pairwise sensing analytics. At operation 1512, the combined sensing analytics is transmitted by the particular device to the first device through the first wireless channel using the first radio of the particular device. At operation 1514, a wireless sensing task is performed based on the combined sensing analytics. The order of the operations in FIG. 15 may be changed according to various embodiments of the present teaching.

The following numbered clauses provide examples for wireless sensing with multiple groups of wireless devices.

Clause C5315_1. A method for wireless sensing using coded addresses to identify originating devices, comprising: associating a plurality of Type1 devices in a venue with a Type2 device in the venue, wherein: each of the plurality of Type1 devices is a heterogeneous wireless device having a first type, the Type2 device is a heterogeneous wireless device having a second type different from the first type, the Type2 device has a plurality of coded addresses each of which is associated with a respective Type1 device of the plurality of Type1 devices; transmitting, by the Type2 device, a plurality of time series of wireless trigger signals through a wireless channel in the venue to the plurality of Type1 devices to trigger wireless sounding, wherein: each respective time series of wireless trigger signals is transmitted to a respective Type1 device with a coded address of the Type2 device associated with the respective Type1 device, the coded address is embedded as a source address in each wireless trigger signal of the respective time series of wireless trigger signals; transmitting, by each Type1 device in response to each respective wireless trigger signal, a respective wireless sounding signal to the Type2 device with a respective associated coded address of the Type2 device, wherein the respective associated coded address is embedded as a destination address in the wireless sounding signal; receiving, by the Type2 device, a plurality of wireless sounding signals from the plurality of Type1 devices addressed to any of the coded addresses of the Type2 device; for each received wireless sounding signal: obtaining, by a processor of the Type2 device, a respective channel information (CI) of the wireless channel in the venue based on the received wireless sounding signal, comparing, by the processor, a received coded address of the Type2 device embedded as a destination address in the received wireless sounding signal with the plurality of coded addresses stored in a database, and identifying, by the processor, a respective Type1 device, whose associated stored coded address of the Type2 device matching the received coded address, as an originating device of the received wireless sounding signal and the respective CI; assembling, by the processor, a plurality of time series of CI (TSCI) associated with the plurality of Type1 devices, wherein each TSCI associated with a respective Type1 device comprises all CI originated from the respective Type1 device; and performing, by the processor, a wireless sensing task based on the plurality of TSCI associated with the plurality of Type1 devices.

Clause C5315_2. The method of clause C5315_1, further comprising: generating the plurality of coded addresses of the Type2 device based on a reference address of the Type2 device.

Clause C5315_3. The method of clause C5315_2, further comprising: generating, by the processor, a plurality of encoding keys for encoding the reference address; and generating the plurality of coded addresses of the Type2 device by encoding the reference address with the plurality of encoding keys, wherein each coded address is generated by encoding the reference address with a respective encoding key.

Clause C5315_4. The method of clause C5315_3, wherein: the reference address is a MAC address of the Type2 device.

Clause C5315_5. The method of clause C5315_4, wherein: each coded address is a legitimate MAC address in a proper MAC address format.

Clause C5315_6. The method of clause C5315_5, further comprising: configuring the Type2 device to operate in an operating mode to monitor all communications in a wireless network, wherein the operating mode comprises at least one of: a sniffer mode, a monitor mode, or a promiscuous mode.

Clause C5315_7. The method of clause C5315_6, further comprising: monitoring, by the Type2 device, a destination address of each packet being communicated in the wireless network in search of communications to any of the coded addresses of the Type2 device; comparing, by the Type2 device, the destination address of the packet with all stored coded addresses that are used as source addresses in the wireless trigger signals transmitted from the Type2 device to the plurality of Typel devices; and recognizing, by the Type2 device, the destination address as a particular coded address among those coded addresses used as the source addresses based on the comparing.

Clause C5315_8. The method of clause C5315_7, further comprising: for each stored coded address of the Type2 device generated using a respective encoding key, computing, by the Type2 device, a testing decoded address by decoding the destination address based on a respective decoding key associated with the respective encoding key, comparing, by the Type2 device, the testing decoded address with the reference address of the Type2 device, and recognizing, by the Type2 device, the particular coded address when the testing decoded address matches the reference address.

Clause C5315_9. The method of clause C5315_8, wherein: at least a part of an encoding key is generated randomly.

Clause C5315_ 10. The method of clause C5315_8, wherein: the respective decoding key is the same as the respective encoding key.

Clause C5315_11. The method of clause C5315_3, wherein: each coded address of the Type2 device is generated by a reversible transformation of the reference address of the Type2 device based on the respective encoding key.

Clause C5315_ 12. The method of clause C5315_11, wherein the reversible transformation comprises at least one of: a basic logical operation comprising one of: AND, OR, XOR, or negation, a grouping operation comprising one of: rotation, shifting, permutation, combination, scrambling, an addition, a subtraction, a multiplication, a division, an arrangement, a permutation, a combination, a bit-wise logical operation, a byte-wise logical operation, a word-wise logical operation, or a multi-byte logical operation.

Clause C5315_13. The method of clause C5315_1, wherein: each of the wireless trigger signals and the wireless sounding signals is a unicast signal.

Clause C5315_14. A wireless device in a venue, comprising: a data storage storing a plurality of coded addresses of the wireless device, wherein: the wireless device is associated a plurality of Type1 devices in the venue, each of the plurality of Type1 devices is a heterogeneous wireless device having a first type, the wireless device is a Type2 device having a second type different from the first type, each of the plurality of coded addresses is associated with a respective Type1 device of the plurality of Type1 devices; a transmitter configured to transmit a plurality of time series of wireless trigger signals through a wireless channel in the venue to the plurality of Type1 devices to trigger wireless sounding, wherein: each respective time series of wireless trigger signals is transmitted to a respective Type1 device with a coded address of the Type2 device associated with the respective Type1 device, the coded address is embedded as a source address in each wireless trigger signal of the respective time series of wireless trigger signals; a receiver configured to receive a plurality of wireless sounding signals from the plurality of Type1 devices addressed to any of the coded addresses of the Type2 device, wherein: a respective wireless sounding signal is received, from each Type1 device in response to each respective wireless trigger signal, with a respective associated coded address of the Type2 device, the respective associated coded address is embedded as a destination address in the respective wireless sounding signal; and a processor communicatively coupled to the data storage, the transmitter and the receiver, and configured to: for each received wireless sounding signal: obtain a respective channel information (CI) of the wireless channel in the venue based on the received wireless sounding signal, compare a received coded address of the Type2 device embedded as a destination address in the received wireless sounding signal with the plurality of coded addresses stored in the data storage, and identify a respective Type1 device, whose associated stored coded address of the Type2 device matching the received coded address, as an originating device of the received wireless sounding signal and the respective CI, assemble a plurality of time series of CI (TSCI) associated with the plurality of Type1 devices, wherein each TSCI associated with a respective Type1 device comprises all CI originated from the respective Type1 device, and perform a wireless sensing task based on the plurality of TSCI associated with the plurality of Type1 devices.

Clause C5315_15. The wireless device of clause C5315_14, wherein the processor is configured to: generate a plurality of encoding keys for encoding a reference address of the Type2 device; and generate the plurality of coded addresses of the Type2 device by encoding the reference address with the plurality of encoding keys, wherein: each coded address is generated by encoding the reference address with a respective encoding key, the reference address is a MAC address of the Type2 device, and each coded address is a legitimate MAC address in a proper MAC address format.

Clause C5315_16. The wireless device of clause C5315_15, wherein the processor is configured to: operate in an operating mode to monitor all communications in a wireless network, wherein the operating mode comprises at least one of: a sniffer mode, a monitor mode, or a promiscuous mode; monitor a destination address of each packet being communicated in the wireless network in search of communications to any of the coded addresses of the Type2 device; compare the destination address of the packet with all stored coded addresses that are used as source addresses in the wireless trigger signals transmitted from the Type2 device to the plurality of Type1 devices; and recognize the destination address as a particular coded address among those coded addresses used as the source addresses based on the comparing.

Clause C5315_17. The wireless device of clause C5315_15, wherein: each coded address of the Type2 device is generated by a reversible transformation of the reference address of the Type2 device based on the respective encoding key; and the reversible transformation comprises at least one of: a basic logical operation comprising one of: AND, OR, XOR, or negation, a grouping operation comprising one of: rotation, shifting, permutation, combination, scrambling, an addition, a subtraction, a multiplication, a division, an arrangement, a permutation, a combination, a bit-wise logical operation, a byte-wise logical operation, a word-wise logical operation, or a multi-byte logical operation.

Clause C5315_18. A system for wireless sensing, comprising: a plurality of Type1 devices in a venue, wherein each of the plurality of Type1 devices is a heterogeneous wireless device having a first type; and a Type2 device in the venue, wherein: the Type2 device is a heterogeneous wireless device having a second type different from the first type, the Type2 device has a plurality of coded addresses each of which is associated with a respective Type1 device of the plurality of Type1 devices, the Type2 device is configured to transmit a plurality of time series of wireless trigger signals through a wireless channel in the venue to the plurality of Type1 devices to trigger wireless sounding, each respective time series of wireless trigger signals is transmitted to a respective Type1 device with a coded address of the Type2 device associated with the respective Type1 device, the coded address is embedded as a source address in each wireless trigger signal of the respective time series of wireless trigger signals, each Type1 device is configured to transmit, in response to each respective wireless trigger signal, a respective wireless sounding signal to the Type2 device with a respective associated coded address of the Type2 device, the respective associated coded address is embedded as a destination address in the respective wireless sounding signal, wherein the Type2 device is configured to: receive a plurality of wireless sounding signals from the plurality of Type1 devices addressed to any of the coded addresses of the Type2 device, for each received wireless sounding signal: obtain a respective channel information (CI) of the wireless channel in the venue based on the received wireless sounding signal, compare a received coded address of the Type2 device embedded as a destination address in the received wireless sounding signal with the plurality of coded addresses stored in a database, and identify a respective Type1 device, whose associated stored coded address of the Type2 device matching the received coded address, as an originating device of the received wireless sounding signal and the respective CI, assemble a plurality of time series of CI (TSCI) associated with the plurality of Type1 devices, wherein each TSCI associated with a respective Type1 device comprises all CI originated from the respective Type1 device, and perform a wireless sensing task based on the plurality of TSCI associated with the plurality of Type1 devices.

Clause C5315_19. The system of clause C5315_18, wherein the Type2 device is configured to: generate a plurality of encoding keys for encoding a reference address of the Type2 device; and generate the plurality of coded addresses of the Type2 device by encoding the reference address with the plurality of encoding keys, wherein: each coded address is generated by encoding the reference address with a respective encoding key, the reference address is a MAC address of the Type2 device, each coded address is a legitimate MAC address in a proper MAC address format, each coded address of the Type2 device is generated by a reversible transformation of the reference address of the Type2 device based on the respective encoding key, and the reversible transformation comprises at least one of: a basic logical operation comprising one of: AND, OR, XOR, or negation, a grouping operation comprising one of: rotation, shifting, permutation, combination, scrambling, an addition, a subtraction, a multiplication, a division, an arrangement, a permutation, a combination, a bit-wise logical operation, a byte-wise logical operation, a word-wise logical operation, or a multi-byte logical operation.

Clause C5315_20. The system of clause C5315_18, wherein the Type2 device is configured to: operate in an operating mode to monitor all communications in a wireless network, wherein the operating mode comprises at least one of: a sniffer mode, a monitor mode, or a promiscuous mode; monitor a destination address of each packet being communicated in the wireless network in search of communications to any of the coded addresses of the Type2 device; compare the destination address of the packet with all stored coded addresses that are used as source addresses in the wireless trigger signals transmitted from the Type2 device to the plurality of Type1 devices; and recognize the destination address as a particular coded address among those coded addresses used as the source addresses based on the comparing.

Clause 5315_1. A method/device/system/software of a wireless sensing system, comprising: performing a wireless sensing task by a set of heterogeneous wireless devices in a venue, wherein a second particular heterogeneous wireless device comprises a first radio and a second radio; coupling communicatively the second particular device with a first heterogeneous wireless device of the set through a first wireless channel based on a first protocol using the first radio of the second particular device; coupling communicatively the second particular device with a second heterogeneous wireless device of the set through a second wireless channel based on a second protocol using the second radio of the second particular device; performing a pairwise sub-task of the wireless sensing task by the second particular device and the second device based on a wireless signal communicated between the second particular device and the second device through the second channel using the second radio of the second particular device; obtaining by the second particular device a pairwise sensing analytics computed based on a time series of channel information (TSCI) of the second wireless channel extracted from the received wireless signal, wherein each channel information (CI) comprises at least one of: channel state information (CSI), channel impulse response (CIR) or channel frequency response (CFR); computing a second combined sensing analytics by the second particular device based on the pairwise sensing analytics; transmitting the second combined sensing analytics by the second particular device to the first device through the first wireless channel using the first radio of the second particular device; performing the wireless sensing task based on the second combined sensing analytics.

In some embodiments, first radio and second radio may be same/different. First protocol and second protocol may be same/different. They may have same/different carrier frequency (e.g. 2.4GHz/5GHz/6GHz/28GHz/60GHz), frequency channel/band (e.g. band 7 Vs band 23), bandwidth (e.g. 20/40/80/160/320 MHz), protocol (e.g. WiFi, IEEE 802.11n/ac/ax/ay/az/be/bf, 802.15.3/4UWB, Bluetooth, BLE, Zigbee, WiMax, 4G/LTE/5G/6G/7G/8G), protocol settings/parameters, modulation (ASK, PSK, QAM 16/64/256/1024/4096), signaling, etc.

Clause 5315_2. The method/device/system/software of the wireless sensing system of clause 5315_1, comprising: wherein one of the first radio, the first wireless channel, and the first protocol differs from a corresponding one of the second radio, the second wireless channel, and the second protocol in at least one of: carrier frequencies, frequency channel, frequency band, bandwidths, modulation, beamforming, standard protocol, protocol setting, or signaling scheme.

In some embodiments, carrier frequency of one may be higher than the other one, even if they both have the same protocol (e.g. both are WiFi with one being 2.4GHz and the other 5GHz, or 2.4GHz/6GHz, or SGHz/6GHz; e.g. the second particular device may have dual-band, tri-band or quad-band WiFi). First radio may be 2.4GHz WiFi. Second radio may be 5GHz or 6MHz WiFi. Bandwidth of second radio (e.g. 20/40/80/160/320MHz) may/may not be higher than bandwidth of first radio (e.g. 20MHz).

Clause 5315_3. The method/device/system/software of the wireless sensing system of clause 5315_2, comprising: wherein a carrier frequency of the second radio is higher than that the first radio.

Clause 5315_4. The method/device/system/software of the wireless sensing system of clause 5315_3, comprising: wherein a carrier frequency of the second radio is higher than 5GHz; wherein a carrier frequency of the first radio is less than 4GHz.

In some embodiments, the set of devices may form a network of networks. The network of networks may have two tiers. Some device may be in a Tier-1 network, a top-level network (e.g. both second particular device and first device are in Tier-1 network). Some may be in a Tier-2 network, a level lower than top level (e.g. second particular device and second device are in a Tier-2 network). A device may be in both the Tier-1 network and the Tier-2 network (e.g. second particular device). (A device may be in more than one Tier-2 networks.) Each network (Tier-1 or Tier-2, or Tier-K) may be used to perform wireless sensing (e.g. all or some devices in the current network may collaborate as a group to do pairwise (wireless sensing) subtask; each pair of devices may transmit/receive wireless signal between themselves; TSCI may be obtained from each received wireless signal; pairwise analytics may be computed based on each TSCI; pairwise analytics may be sent to a selected device (in current network) that perform fusion to compute a combined analytics based on all pairwise analytics and any combined analytics received from lower level networks linked to the current network; combined analytics may be sent to upper level network linked to current network). Each Tier-2 network may form a local wireless sensing subsystem. The Tier-1 network may form a main wireless sensing system.

A Tier-2 network may be linked/connected to a Tier-1 network by having one or more devices in the Tier-2 network to function as gateway devices between the two networks. Each gateway device (e.g. the second particular device) may have at least two radios and may use them both to connect/associate with the two networks (e.g. the second particular device may uses first radio to join the Tier-1 network and second radio to join the Tier-2 network). More than one Tier-2 networks may be linked/connected to the same Tier-1 network. The Tier-1 network (e.g. its AP) may have access to internet, some external network or some cloud server. The Tier-2 networks may access the internet, the external network or the cloud server via the Tier-1 network (and the corresponding gateway devices). A network-of-networks may have more than 2 tiers. A (or more than one) Tier-K network may be linked/connected to a Tier-(K-1) network (e.g. recursively) and may be communicatively coupled with upper level networks (i.e. Tier-(K-2) network, Tier-(K-3) networks, .. , Tier-2 networks, Tier-1 network), internet, the external network and the cloud server via the Tier-(K-1) network. Recursively, a Tier-(K-1) network may link/connect one or more Tier-K networks. A Tier-(K-1) network may be associated with a zone/region/area (e.g. Tier-1 network may be associated with the whole venue), for any K>1. Each Tier-K network may be associated with a sub-zone/sub-region/sub-area (e.g. Tier-2 networks may be associated with living room, dining room, family room, kitchen, entrance, exit, garage, basement, bedroom1, bedroom 2, first floor, second floor, or some combination/grouping) of the zone/region/area associated with the Tier-(K-1) network. Two sub-zones/sub-regions/sub-areas may/may not overlap. The zone/region/area may comprise a union of more than sub-zones/sub-regions/sub-areas. A portion of the zone/region/area may not belong to any sub-zone/sub-region/sub-area.

For example, Tier-1 may be associated with the whole venue which may be a 2-floor house. A first Tier-2 network may be associated with the whole first floor (a first sub-zone of venue) and a second Tier-2 network may be associated with the whole second floor (a second sub-zone of venue). A first Tier-3 network, under the first Tier-2 network, may be associated with the kitchen (a first sub-sub-zone of first sub-zone) in first floor. A second Tier-3 network, under the first Tier-2 network, may be associated with the living room (a second sub-sub-zone of first sub-zone) in first floor. A third Tier-3 network (under first Tier-2 network) may be associated with the dining room (a third sub-sub-zone of first sub-zone) in the first floor. A fourth Tier-3 network (under second Tier-2 network) may be associated with a first bedroom (a first sub-sub-zone of second sub-zone) in the second floor. A fifth Tier-3 network (under second Tier-2 network) may be associated with a second bedroom (a second sub-sub-zone of second sub-zone) in the second floor. The entrance/foyer area of first floor may be a portion of first sub-zone that is not in any sub-sub-zone of first sub-zone.

Devices in a Tier-K network (called "Tier-K devices") may be used in pairs to perform pairwise wireless sensing in the associated sub-zone/sub-region/sub-area, and corresponding TSCI in Tier-K (called "Tier-K TSCI") may be obtained. Pairwise sensing analytics for Tier-K (called "Tier-K pairwise analytics") may be computed based on the corresponding Tier-K TSCI. A Tier-K combined analytics may be computed based on the Tier-K pairwise analytics, the Tier-K TSCI and any Tier-(K+1) combined analytics obtained from any Tier-(K+1) networks linked/connected to the Tier-K network. The Tier-K combined analytics may be transmitted to the linked/connected Tier-(K-1) network via respective gateway device(s) between the Tier-K and the Tier-(K-1) networks. And this may be recursively performed for all K. In some examples, two or more devices in kitchen network (Tier-3 network, first sub-sub-zone of first sub-zone) in first floor (first sub-zone) may be used to perform pairwise wireless sensing to generate Tier-3 TSCI in the kitchen. Two or more devices in living-room network (Tier-3 network, second sub-sub-zone of first sub-zone) in first floor may be used to perform pairwise wireless sensing in the living room to generate Tier-3 TSCI in living room. Two or more devices in dining-room network (Tier-3 network, third sub-sub-zone of first sub-zone) in first floor may be used to perform pairwise wireless sensing in the dining room to generate Tier-3 TSCI in living room.

For each of the three sub-sub-zones of first sub-zone (say, the kitchen area), one or more Tier-3 pairwise analytics of/for/corresponding to the sub-sub-zone (e.g. kitchen) may be computed based on respective Tier-3 TSCI of the sub-sub-zone (e.g. kitchen or kitchen network). A Tier-3 combined analytics for the sub-sub-zone (e.g. kitchen) may be computed based on all the Tier-3 pairwise analytics and Tier-3 TSCI of the sub-sub-zone (e.g. kitchen area) (e.g. by a respective fusion algorithm). The three Tier-3 combined analytics of the three sub-sub-zones of the first sub-zone may be transmitted from the respective Tier-3 network (kitchen network, living-room network or dining-room network) to a first-floor network (Tier-2 network, first sub-zone) via the respective gateway device. In the first sub-zone (first floor), two or more devices in first-floor network (e.g. in entrance/foyer area, kitchen area, living room area, dining room area of first floor) may be used to perform pairwise wireless sensing to generate Tier-2 TSCI in the first floor. One or more Tier-2 pairwise analytics of the first floor may be computed based on respective Tier-2 TSCI of the first floor. A Tier-2 combined analytics for the first floor may be computed based on all the Tier-2 pairwise analytics and Tier-2 TSCI of the first floor and all the Tier-3 combined analytics from the three Tier-3 networks (e.g. by some respective fusion algorithm).

Different Tier-K network may have different radio, wireless channels, or protocols. E.g. One Tier-K network may be a 5GHz WiFi network; a second Tier-K may be a 6GHz WiFi. For example, a first Tier-2 network may be a first WiFi (e.g. 5GHz), a secondTier-2 network may be a second WiFi (e.g. 6Hz), a third Tier-2 network may be UWB, a fourth Tier-2 network may be Bluetooth, a fifth Tier-2 network may use millimeter wave (mmWave, e.g. 28GHz, 60GHz, 70+GHz). The first WiFi may use 11az for sensing while second WiFi may use 11bf for sensing. The first/second WiFi may have same/different carrier frequency, frequency channel/band, bandwidth, protocol, etc.

Tier-K network may have one or more access point (AP). The second particular device and/or second device may be AP. The wireless signal may be communicated in a trigger-based (TB) manner or non-TB manner. In TB sensing, a train (time series) of sounding signals (e.g. null-data-packet (NDP) may be sent from a first Tier-K device (e.g. AP, non-AP, and/or Type1 heterogeneous wireless device) to other Tier-K device(s) (e.g. non-AP, or another AP in mesh network) in the Tier-K network using uni-cast, multi-cast, and/or broadcast. A non-AP (or another AP) Tier-K device may transmit or receive a sounding signal in response to a trigger signal from a Tier-K AP device (e.g. transmit in response to a trigger frame (TF) in TF sounding, or receive in response to a NDP announcement frame (NDPA) in NDPA sounding). In peer-to-peer sounding, a non-AP Tier-K device may transmit a sounding signal to another non-AP Tier-K device. In non-TB sensing, a train of sounding signals (e.g. NDP) may be sent from a Tier-K AP device to a Tier-K non-AP (or another Tier-K AP) device, each sounding signal accompanied by another sounding signal sent in reverse direction, i.e. from non-AP to AP. In some embodiments, the first radio/wireless channel/protocol may be for Tier-(K-1) network (called "first wireless network"), for any K>1, such as 2, 3, 4, ... The second radio/wireless channel/protocol may be for Tier-K network (called "second wireless network").

Clause 5315_5. The method/device/system/software of the wireless sensing system of clause 5315_1, comprising: performing the wireless sensing task by a first subset of the set of heterogeneous wireless devices using a first wireless network in the venue, wherein the first subset comprises the second particular device and the first device; performing the wireless sensing task by a second subset of the set of heterogeneous wireless devices using a second wireless network in the venue, wherein the second subset comprises the second particular device and the second device; wherein the first radio, the first wireless channel, and the first protocol are associated with the first wireless network; wherein the second radio, the second wireless channel, and the second protocol are associated with the second wireless network; wherein one of the first protocol or the second protocol comprises at least one of: a WiFi standard, a UWB standard, a WiMax standard, an IEEE standard, an IEEE 802 standard, an IEEE 802.11 standard, an IEEE 802.11bf standard, an 802.15 standard, an 802.15.4 standard, and an 802.16 standard.

Clause 5315_6. The method/device/system/software of the wireless sensing system of clause 5315_5, comprising: wherein the second particular device and first device are authenticated and associated in the first wireless network; wherein the second particular device and second device are authenticated and associated in the second wireless network.

In Case 1: wireless signal received by second particular device. Pairwise analytics computed by second particular device. In Case 1a: Non-TB sensing (TB="trigger based"). No trigger signal may be needed.

Clause 5315_7. The method/device/system/software of the wireless sensing system of clause 5315_5, comprising: transmitting the wireless signal from the second device to the second particular device based on the second protocol; extracting the TSCI from the received wireless signal by the second particular device; computing the pairwise sensing analytics based on the TSCI by the second particular device.

In Case 1: Trigger based sensing. AP may sent trigger signal to non-AP before sounding signal (e.g. NDP) being received by non-AP (e.g. triggered by NDPA), or transmitted by non-AP (e.g. triggered by TF). In Case 1b: TB sensing with TF sounding. AP may be second particular device. Trigger signal may be TF. Alternatively, AP may be a third device. Both second particular device and second device may be peer devices. This may be peer-to-peer sensing. Transmission of wireless signal may be triggered.

Clause 5315_8. The method/device/system/software of the wireless sensing system of clause 5315_7, comprising: transmitting the wireless signal based on a trigger signal received by the second device from an access point device (AP) of the second wireless network, based on the second protocol.

Clause 5315_9. The method/device/system/software of the wireless sensing system of clause 5315_8, comprising: wherein the second particular device is the AP of the second wireless network.

In Case 1c: TB sensing with NDPA sounding. AP may be second device. Trigger signal may be NDPA. Alternatively, AP may be a third device. Both second particular device and second device may be peer devices. This may be peer-to-peer sensing. Reception of wireless signal may be triggered.

Clause 5315_10. The method/device/system/software of the wireless sensing system of clause 5315_7, comprising: receiving the wireless signal by the second particular device based on a trigger signal received by the second particular device from an access point device (AP) of the second wireless network, based on the second protocol.

Clause 5315_11. The method/device/system/software of the wireless sensing system of clause 5315_10, comprising: wherein the second device is the AP of the second wireless network.

In Case 2: Wireless signal received by second device. TSCI extracted in second device. Similar to Case 1, this may be non-TB sensing, TB-sensing with NDPA sounding or TB-sensing with TF sounding. In Case 2a: Pairwise analytics computed by second device and reported to second particular device.

Clause 5315_12. The method/device/system/software of the wireless sensing system of clause 5315_5, comprising: transmitting the wireless signal from the second particular device to the second device based on the second protocol; extracting the TSCI from the received wireless signal by the second device; computing the pairwise sensing analytics based on the TSCI by the second device; transmitting the pairwise sensing analytics from the second device to the second particular device.

In Case 2b: TSCI reported to second particular device. Pairwise analytics computed by second particular device.

Clause 5315_13. The method/device/system/software of the wireless sensing system of clause 5315_5, comprising: transmitting the wireless signal from the second particular device to the second device based on the second protocol; extracting the TSCI from the received wireless signal by the second device; transmitting the TSCI from the second device to the second particular device; computing the pairwise sensing analytics based on the TSCI by the second particular device.

In some embodiments, there may be other devices in Tier-K network. Two devices in the Tier-K network may perform a similar pairwise sensing sub-task, by communicating another wireless signal using the Tier-K network/second protocol/second wireless channel, extracting another TSCI from the received another wireless signal, obtaining another pairwise analytics (computed based on the another TSCI) by the second particular device, and computing the combined analytics based on both the pairwise analytics and the another pairwise analytics. Tier-K combined analytics may be computed based further on the TSCI and another TSCI. The Tier-K combined analytics may comprise the pairwise analytics, the another pairwise analytics, the TSCI and/or the another TSCI. The third device may/may not be the second particular device or the second device. The fourth device may/may not be the second particular device or the second device. Combined sensing analytics may be computed in/for the second network based on an aggregation of the pairwise sensing analytics and the second pairwise sensing analytics (and any additional pairwise analytics generated in the second network).

Clause 5315_14. The method/device/system/software of the wireless sensing system of clause 5315_5, comprising: performing a second pairwise sub-task of the wireless sensing task by a third heterogeneous wireless device in the second subset and a fourth heterogeneous wireless device in the second subset based on a second wireless signal transmitted from the third device to the fourth device through the second wireless channel in the second wireless network, wherein the two devices of the set of heterogeneous wireless devices are associated with the second wireless network; obtaining a second TSCI of the second wireless channel by the fourth device based on the received second wireless signal; obtaining by the second particular device a second pairwise sensing analytics computed based on the second TSCI; computing the second combined sensing analytics by the second particular device further based on the second pairwise sensing analytics.

In some embodiments, second pairwise sensing analytics computed by fourth device, then sent to second particular device (e.g. using the second wireless network/Tier-K network, or using the first wireless network/Tier-(K-1) network).

Clause 5315_15. The method/device/system/software of the wireless sensing system of clause 5315_14, comprising: computing the second pairwise sensing analytics by the fourth device based on the second TSCI; transmitting the second pairwise sensing analytics by the fourth device to the second particular device.

In some embodiments, second pairwise sensing analytics computed by second particular device based on second TSCI transmitted from fourth device to second particular device (e.g. using the second wireless network/Tier-K network, or using the first wireless network/Tier-(K-1) network).

Clause 5315_16. The method/device/system/software of the wireless sensing system of clause 5315_14, comprising: transmitting the second TSCI by the fourth device to the second particular device; computing the second pairwise sensing analytics by the second particular device based on the second TSCI.

In some embodiments, Tier-K combined sensing analytics may be computed based on combined analytics from Tier-(K+1) network, called "third wireless network".

Clause 5315_17. The method/device/system/software of the wireless sensing system of clause 5315_14, comprising: obtaining a third combined sensing analytics associated with a third wireless network by the second particular device; computing the second combined sensing analytics by the second particular device further based on the third combined sensing analytics.

Clause 5315_18. The method/device/system/software of the wireless sensing system of clause 5315_17, comprising: performing the wireless sensing task further by a third subset of the set of heterogeneous wireless devices using the third wireless network in the venue; performing a third pairwise sub-task of the wireless sensing task by a fifth heterogeneous wireless device in the third subset and a sixth heterogeneous wireless device in the third subset based on a third wireless signal transmitted from the fifth device to the sixth device through a third wireless channel in the third wireless network, wherein the two devices of the third subset are associated with the third wireless network; obtaining a third TSCI of the third wireless channel by the sixth device based on the received third wireless signal; obtaining by a third particular heterogeneous wireless device in the third subset a third pairwise sensing analytics computed based on the third TSCI; computing the third combined sensing analytics by the third particular device based on the third pairwise sensing analytics; obtaining by the particular device the third combined sensing analytics from the third particular device.

Clause 5315_19. The method/device/system/software of the wireless sensing system of clause 5315_18, comprising: obtaining a fourth combined sensing analytics associated with a fourth wireless network by the particular device; computing the second combined sensing analytics by the particular device further based on the fourth combined sensing analytics.

Clause 5315_20. The method/device/system/software of the wireless sensing system of clause 5315_19, comprising: performing the wireless sensing task further by a fourth subset of the set of heterogeneous wireless devices using the fourth wireless network in the venue; performing a fourth pairwise sub-task of the wireless sensing task by a seventh heterogeneous wireless device in the fourth subset and a eighth heterogeneous wireless device in the fourth subset based on a fourth wireless signal transmitted from the seventh device to the eighth device through a fourth wireless channel in the fourth wireless network, wherein the two devices of the fourth subset are associated with the fourth wireless network; obtaining a fourth TSCI of the fourth wireless channel by the eighth device based on the received fourth wireless signal; obtaining by a fourth particular heterogeneous wireless device in the fourth subset a fourth pairwise sensing analytics computed based on the fourth TSCI; computing the fourth combined sensing analytics by the fourth particular device based on the fourth pairwise sensing analytics; obtaining by the particular device the fourth combined sensing analytics from the fourth particular device.

In some embodiments, there may be another Tier-K network, in parallel to the Tier-K network (second wireless network) described in clause 5315_1/5, doing similar things. It may be associated with Tier-(K-1) network (first wireless network and may perform wireless sensing (sending wireless signals, obtaining TSCI, computing pairwise analytics, then computing combined analytics) and send its combined analytics to first device in Tier-(K-1) network.

Clause 5315_21. The method/device/system/software of the wireless sensing system of clause 5315_20, comprising: performing the wireless sensing task further by a fifth subset of the set of heterogeneous wireless devices using a fifth wireless network in the venue; performing a fifth pairwise sub-task of the wireless sensing task by a ninth heterogeneous wireless device in the fifth subset and a tenth heterogeneous wireless device in the fifth subset based on a fifth wireless signal transmitted from the ninth device to the tenth device through a fifth wireless channel in the fifth wireless network, wherein the two devices in the fifth subset are associated with the fifth wireless network; obtaining a fifth TSCI of the fifth wireless channel by the tenth device based on the received fifth wireless signal; obtaining by a fifth particular heterogeneous wireless device in the fifth subset a fifth pairwise sensing analytics computed based on the fifth TSCI; computing a fifth combined sensing analytics by the fifth particular device based on the fifth pairwise sensing analytics; obtaining the fifth combined sensing analytics by the first device from the fifth particular device; performing the wireless sensing task based on the fifth combined sensing analytics.

In some embodiments, Fifth subset=first subset. Fifth particular device=first device. First device may be in two (or more) networks: the first wireless network (e.g. 2.4GHz) and the fifth wireless network (e.g. 5GHz). The fifth wireless network may be for performing sensing measurement (sensing measurement setup, polling, sending wireless sounding signal/trigger signal, reporting raw sensing measurements/TSCI, sensing measurement termination). The first network may be for communicating any of: user/system wireless sensing parameters/setup/control, computed results based on raw measurements, pairwise analytics/combined analytics, etc.

Clause 5315_22. The method/device/system/software of the wireless sensing system of clause 5315_21, comprising: wherein the fifth subset is the first subset; wherein the fifth particular device is the first device.

Clause 5315_23. The method/device/system/software of the wireless sensing system of clause 5315_22, comprising: performing the wireless sensing task by the set of heterogeneous wireless devices using more than one wireless networks in the venue, with at least two of the heterogeneous wireless devices in each of the wireless networks in the venue; configuring the more than one wireless networks to have a multi-tier structure, comprising at least two tiers, wherein the first wireless network is a Tier-1 network comprising at least the second particular device, and the first device, wherein the second wireless network is a Tier-2 network comprising at least the second particular device, the second device, the third device and the fourth device, wherein the second particular device being in both the first and the second networks serves as a gateway device between the two networks such that sensing results can be transmitted from the second particular device via the first wireless network to the first device; configuring the heterogeneous wireless devices in a Tier-K network to report sensing results obtained in the Tier-K network to a heterogeneous wireless device in a Tier-(K-1) network via a gateway device between the two networks, wherein K is an integer greater than one, wherein sensing results comprise at least one of: combined sensing analytics, pairwise sensing analytics and TSCI.

Clause 5315_24. The method/device/system/software of the wireless sensing system of clause 5315_23, comprising: wherein the first wireless network further comprises the third particular device and the fourth particular device; wherein the third wireless network is a Tier-3 network, comprising at least the third particular device, the fifth device, and the sixth device, wherein the third particular device is a gateway device; wherein the fourth wireless network is a Tier-3 network, comprising at least the fourth particular device, the seventh device, and the eighth device, wherein the fourth particular device is a gateway device; wherein sensing results obtained in the third wireless network are transmitted from the third particular device via the first wireless network to the second particular device; wherein sensing results obtained in the fourth wireless network are transmitted from the fourth particular device via the first wireless network to the second particular device.

Clause 5315_25. The method/device/system/software of the wireless sensing system of clause 5315_24, comprising: wherein the first wireless network further comprises the fifth particular device; wherein the fifth wireless network is a Tier-2 network comprising the fifth particular device, the ninth device, and the tenth device, wherein the fifth particular device is a gateway device; wherein sensing results are transmitted from the fifth particular device via the first wireless network to the first device.

Clause 5315_26. The method/device/system/software of the wireless sensing system of clause 5315_25, comprising: associating the first wireless network with a zone of the venue; associating the second wireless network with a first sub-zone of the zone; associating the third wireless network with a first sub-sub-zone of the first sub-zone; associating the fourth wireless network with a second sub-sub-zone of the first sub-zone.

Clause 5315_27. The method/device/system/software of the wireless sensing system of clause 5315_26, comprising: performing the wireless sensing task for the zone based on at least one of: any pairwise sensing analytics associated with the first wireless network; the combined sensing analytics associated with the second wireless network, or a fourth combined sensing analytics associated with a fifth network in the venue; performing the wireless sensing task for the first sub-zone based on at least one of: the combined sensing analytics associated with the second wireless network, any pair-wise sensing analytics associated with the second wireless network, the second combined sensing analytics associated with the third wireless network, or the third combined sensing analytics associated with the fourth wireless network; associating the third wireless network with a first subzone of the zone; performing a wireless sensing subtask associated with the first subzone based on the third wireless network and the another combined sensing analytics, associating the fourth wireless network with a second subzone of the zone.

In some embodiments, the present teaching discloses systems and methods for a display of WLAN sensing motion statistics(MS)/motion information(MI)/analytics/spatial-temporal-information (STI) associated with more than one "regions" or "zones" in a venue.

In some embodiments, the regions or zones may be established and named by a user. For example, the venue may be a room; a zone or region may be "living room", "dining room", "kitchen", "bedroom 1", "bedroom 2", ... , "rest room 1", "rest room 2", ... , "first floor", "second floor", "basement", "garage", "office 1", "office 2", etc. A region may be large, special or important s.t. more than one "sub-regions" of the region may be established and named by the user. For example, a living room may be a large region of a house s.t. the user established/named sub-regions such as "part of living room near kitchen", "part of living room near front door", "part of living room near back door", "part of living room facing the street", "part of living room near dining room", "part of living room around the TV", part of living room around the piano", etc.

There may be multiple Type1 (Tx) devices and Type2 (Rx) devices in the venue such that TSCI may be obtained for each region/zone and/or sub-region. For each region or sub-region, one or more MS/MI/STI/analytics may be computed, and a magnitude/characteristics of such may be displayed graphically using graphical user-interface (GUI).

In some embodiments, some related MS may be grouped together in the GUI display. Some MS associated with same or neighboring region/sub-region may be grouped together in GUI. Some MS of same kind may be grouped together. For example, some or all breathing statistics (or fall-down statistics, or presence statistics or sleep analytics) may be grouped together.

In some embodiments, some grouped MS may be displayed in a number of ways. They may be displayed in a consecutive/connected/linked/chained manner, forming a line/ring, or spanning/scanning (e.g. zigzag spanning, or raster scanning) of a connected area of the GUI. MS that are grouped together may be displayed in a physically close proximity manner (e.g. forming a cluster).

The MS may be displayed in a number of ways. A MS may be displayed by itself. For example, it may be displayed as a figure/ sliding figure/ graph/ plot/ chart/ bar/pie/ circle/ shape/ histogram/ histogram-like graph/animation. A magnitude of the MS and/or a function of the magnitude may be displayed/ represented/coded/encoded as a number/ numeral, a x-coordinate /y-coordinate of a figure/graph/ plot, a coordinate/ height/ length (e.g. of a bar or bar chart), an area (e.g. of a circle, rectangle, or shape), a volume (e.g. of a 3D animation), a size (e.g. of a circle, rectangle, bar, shape, graph, figure, chart), an animation, animation characteristics, duration, timing, flashing, pattern, shading, effect, color, and/or light/color intensity. The function of the magnitude may be different for different MS.

Some MS may be displayed together (e.g. overlaid, stacked, staggered, and/or concentric). Each MS may be displayed as a figure and the multiple figures may be overlaid, stacked and/or staggered. Each MS may be displayed as a concentric "ring" (e.g. circular or rectangular) around a center point. The rings may /may not overlap. Two MS may be displayed as a two-dimensional shape (e.g. ellipse/rectangle).

The magnitude of MS may be a magnitude/phase of a complex number, value/absolute value/sign of a real number, a norm of a vector (e.g. $L\_l/L\_2/ ..., L\_k/, .., L\_infinity$ norm), a statistics, a mean/variance/correlation/covariance, and/or a thresholding/hard/soft thresholding. The function may be univariate, monotonic increasing, monotonic non-decreasing, piecewise linear, and/or an exponential / logarithmic / polynomial / trigonometric / hyperbola function, and/or a function of another function. The function may be a univariate function (e.g. as described) of a multivariate function (e.g. filtering, transform, moving average, weighted average, median/mean/mode, arithmetic/geometric/ hyperbolic mean, maximum/minimum, statistics, ordered statistics, variance, percentile, histogram, probability function, cumulative distribution function, count) of a sliding window of MS. The function may be a multivariate function of univariate function(s) of the sliding window of MS. The function may also be univariate function of multivariate function of univariate function(s) of the sliding window of MS.

Different MS measuring different characteristics of motion may have different functions. For example, a function of breathing MS may be different from a function of fall- down MS. A function of an MS may be determined based on online/offline learning, or training/ update using training / past data, and/or analysis of characteristics of motion.

Different MS measuring same characteristics of motion may have different functions. For example, breathing MS may have different functions for different regions/sub-regions. Alternatively, MS for some regions/sub-regions (e.g. some grouped MS) may be same, at least for a period of time. The function of a MS may be adaptively determined based on the MS (e.g. past MS or training MS from training data) and/or associated TSCI.

At least one statistics is wireless-sensing MS computed based on TSCI. Some statistics may be non-wireless-sensing statistics obtained in some ways. The statistics may be presented in some presentation device (e.g. displayed visually on a screen/monitor/ smart phone/tablet, generate visual signal/animation using lamp/light bulb/panel , play sound on a speaker, generate vibration/motion/action).

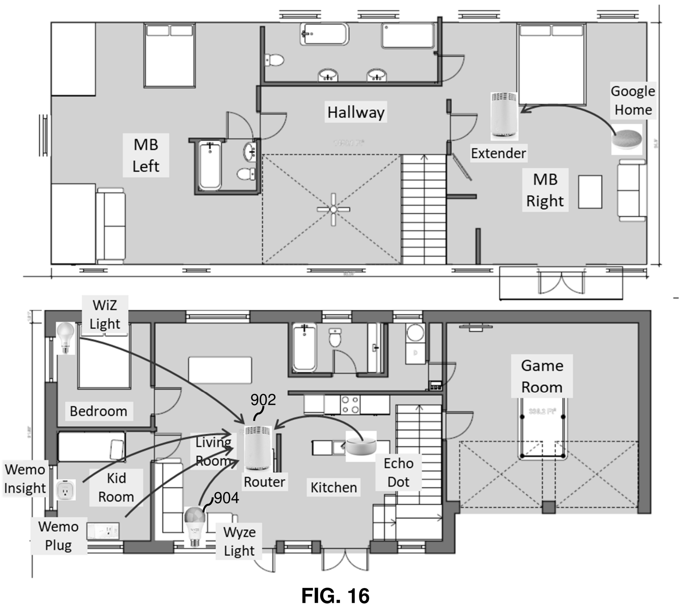

FIG. 16 illustrates an example floor plan for wireless sensing to display sensing motion statistics and analytics, according to some embodiments of the present disclosure. In some embodiments, a location name is assigned to each wireless device, e.g. a router, an extender, etc., based on its location, e.g. bedroom, living room, kitchen, etc. Then, devices with a same location name can be grouped together. For example, a router 1602 and a Wyze light 1604 in FIG. 16 may be grouped together because they have the same location name: Living Room.

In some embodiments, the grouping can enable a system to have multiple IoT devices in the same room to cover big rooms. There may be overlapping sensing zones. In some embodiments, the system may use the wireless sensing and detection to gate a display of motion statistics, e.g. in form of live-view bubbles in a graphical user interface. The system may display sensing motion statistics and analytics that are not the same as the original output of the detection. For example, the system can apply an exponential curve to amplify detections with strong motion statistics and subpress detections with weak motion statistics.

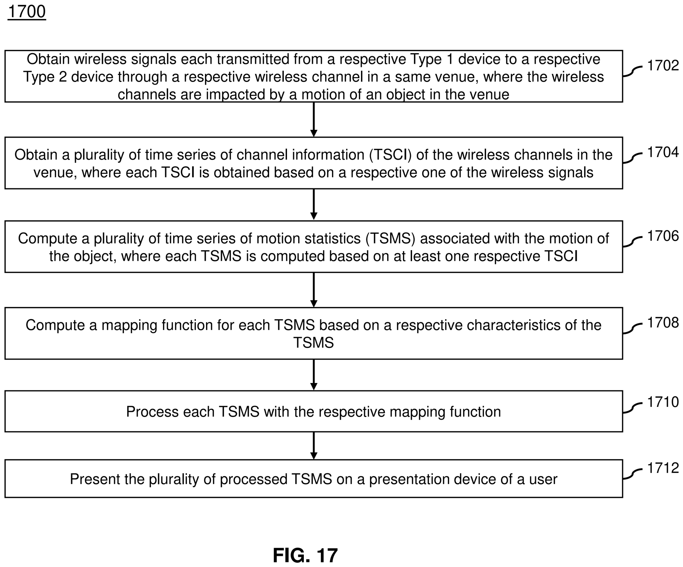

FIG. 17 illustrates a flow chart of an example method of a wireless sensing presentation system, according to some embodiments of the present disclosure.

In some embodiments, the present teaching discloses systems and methods for wireless sensing using two-way sensing in which sounding signals are transmitted between two wireless devices in both ways: from a first device to a second device and from the second device to the first device such that sensing measurement results are obtained/generated in both devices. In one-way sensing, sounding signals are transmitted in one way only such that sensing results are generated in one device only. The sensing results may be used locally in the device or optionally reported to another device.

One disadvantage of one-way sensing is that, when sensing results are generated in a first device but is needed in a second device, undesirable reporting frames may be used by the first device to transmit/report the sensing results to the wirelessly second device. The use of reporting frames is undesirable because they tend to be very large/bulky and may take a long time and a lot of data bandwidth to transmit, and a lot of memory to store, especially when there are many antenna pairs between a TX (wireless transmitter) and a RX (wireless transmitter), many TX/RX pairs, many TX/RX pairs, and wide analog BW used to obtain sensing results (e.g. channel information/CI, such as CSI, CIR, CFR, etc.). An advantage of two-way sensing over one-way sensing is that, with sounding signals transmitted both ways, sensing results are generated in both the first device and the second device, and there may be no need to use the undesirable reporting frames to report the sensing results.

Wireless sensing may be performed in a wireless network based on a standard (e.g. IEEE 802.11, 802.11bf, 4G/5G/6G/7G/8G, 802.15, 802.16, UWB, Bluetooth, etc.), a specification and/or a protocol. In the wireless network, there may be one or more access point (AP) station (STA) (e.g. WiFi AP, mesh network AP, 4G/5G/6G/7G base station, cellular base station, repeater, etc.), and there may be one or more non-AP STA. WLAN or WiFi sensing may be performed based on WLAN/WiFi signal (e.g. compliant to IEEE 802.11, 802.11bf standard, WiFi Alliance).

Non-data packet (NDP) may be used as a sounding signal. A Sensing NDP Announcement (NDPA) frame may be defined that allows a STA to indicate the transmission of NDP frame(s) used to obtain sensing measurements. A Trigger frame variant may be defined that allows an AP STA to solicit NDP transmission(s) from STA(s) to obtain sensing measurements.

Non-TB Wireless Sensing. A non-AP STA may be the sensing initiator and an AP STA may be the sensing responder, and together they may perform non-triggered-based (non-TB or NTB) wireless sensing. The non-AP STA may send an NDPA frame to AP followed by two NDPs: an I2R NDP (initiator-to-responder NDP frame, for uplink sounding) from non-AP STA to AP and an R2I NDP (responder-to-initiator NDP frame, for downlink sounding) from AP to non-AP STA. For the I2R NDP, the non-AP STA is the Type1 device (TX) and the AP is the Type2 device (RX). For the R2I NDP, the AP is the Type1 device (TX) and the non-AP STA is the Type2 device (RX).

One-way non-TB sensing may be performed in which only one of the two NDPs may be used for generating sensing measurement results (e.g. CI, CSI, CIR, CFR, etc.) while the other NDP may not. For example, I2R NDP may be used for uplink sounding to generate sensing measurement results at the AP while the R2I NDP may not lead to sensing measurement results at the non-AP STA. The sensing responder (AP) may optionally report the sensing results to sensing initiator (non-AP STA). When the sensing results are generated, the MAC layer management entity (MLME) of AP may send a first signal/message/primitive to the Station management entity (SME) of AP to indicate the availability of the sensing measurement results. The AP may optionally use sensing measurement report frame to report the sensing results to the non-AP STA (initiator). To do so, the SME may send a second signal/message/primitive to the MLME to request the transmission of the sensing measurement report frame.

In another example, R2I NDP may be used for downlink sounding to generate sensing results at the non-AP STA (initiator). No sensing measurement report frame may be needed because the initiator already has the results. When the sensing results are generated, the MLME of non-AP STA may send the first signal/ message/primitive to the SME of non-AP STA to indicate the availability of the sensing measurement results. The SME may not send the second signal/message/primitive to the MLME to request the transmission of the sensing measurement report frame.

TB Wireless Sensing. An AP STA may be the sensing initiator and a number (one or more) of STA(s) (e.g. other AP STA or non-AP STA) may be the sensing responders. They may jointly perform trigger-based (TB) sensing. There may be a polling phase in which the AP transmits a polling frame to check the availability of the number of STA(s) for TB sensing. If a STA is available, it may respond with a CTS-to-self. After the polling phase, there may be a one-way downlink sounding phase (e.g. NDPA sound phase), a one-way uplink sounding phase (e.g. trigger frame sounding phase), or a two-way uplink-downlink sounding phase.

One-way TB sensing. In the one-way downlink sounding phase, for each STA that is available, the AP may send an NDPA frame followed by an NDP frame as downlink sounding signal to the STA to generate sensing measurement results at the STA. A separate NDPA frame may be sent to each available STA, or a common/shared NDPA frame may be sent to multiple (e.g. some or all) available STA(s). Each STA (responder) may optionally use sensing measurement report frame to report its sensing results to the AP (initiator). When the sensing results are available at an STA, the MLME of the STA may send the first signal/message/primitive to the SME of the STA. If sensing results of the STA is optionally reported to the AP, the SME may send the second signal/message/primitive to the MLME of the STA to request the transmission of sensing measurement report frame to the AP (initiator).

In the one-way uplink sounding phase, for each STA that is available, the AP (initiator) may send a Trigger frame (TF) to the STA (responder), followed by the STA sending an NDP as uplink sounding signal to the AP to generate sensing measurement results at the AP (initiator). A separate Trigger frame may be sent to each available STA, or a common/shared Trigger frame may be sent to multiple (e.g. some or all) available STA(s). When sensing results are available at a STA, the MLME of the STA may send the first signal/message/primitive to the SME of the STA to indicate availability of the sensing results. No sensing measurement report frame may needed/used to transmit sensing results to the initiator, because the sensing results are already generated at the initiator. As such, the SME of the STA may not send the second signal/message/primitive to request transmission of sensing measurement report frame.

Peer-to-peer Wireless Sensing (P2P sensing). In peer-to-peer wireless sensing, one or more pairs of non-AP STA may be determined in a wireless network associated with an AP. With each pair, NDP(s) may be transmitted between a first non-AP STA and a second non-AP STA as sounding signal(s) to generate sensing results in non-AP STA(s). The NDP(s) transmission may/may not be transmitted with a help/signaling/trigger from an associated AP.

One-way P2P sensing. In one example of one-way P2P sensing, the AP may be the sensing initiator and both the first and second non-AP STA may be sensing responders. In another example, a non-AP STA may be a sensing-by-proxy (SBP) initiator that requests the AP (SBP responder) to perform one-way P2P sensing in which the AP may be the sensing initiator and both the first and second non-AP STAs may be sensing responders.

In both examples, the AP may configure/negotiate/ arrange individually with the two non-AP STAs such that the two non-AP STAs can identify each other (each with at least one corresponding ID, e.g. identifiable network address, identifiable wireless network address/ID, AP assigned ID, initiator assigned ID, user defined ID, MAC address) and the first non-AP STA would send NDP as sounding signal to the second non-AP STA so that sensing measurement results may be obtained/generated in the second non-AP STA. The AP may send a first P2P- sensing-triggering frame to the pair of non-AP STAs. The first P2P-sensing-triggering frame may be a NDPA frame, a Trigger Frame, the special NDPA-Trigger frame (mentioned above), or another frame. A separate first P2P-sensing-triggering frame may be sent to each pair of non-AP STAs, or a common/shared first P2P-sensing-triggering frame may be sent to multiple (e.g. some or all) available STA(s). The first non-AP STA would then send the NDP to the second non-AP STA to generate sensing measurement results at the second non-AP STA. The sensing measurement results may be used/needed in the second non-AP STA, or the sensing results can optionally be transmitted from the second non-AP STA (sensing responder) to the AP (sensing initiator). In the SBP example, the AP (SBP responder) may further report the sensing results to the SBP initiator.

Multicast or Broadcast of sounding signals from AP to more than one sensing responders in SBP. An AP may be a sensing initiator and also a sensing transmitter (e.g. in sensing session, or in SBP). It may send a sounding signal (e.g. NDP) to each of a number of sensing responders separately (i.e. point-to-point sounding). Alternatively, it may send sounding signal (e.g. NDP) to more than one sensing responders using multicast or broadcast such that sensing measurement results may be generated in the more than one sensing responders simultaneously or contemporaneously. The sensing measurement results may optionally (i.e. may/may not) be reported to the AP. In the case of SBP, the AP may optionally (i.e. may/may not) report the sensing measurement results to the SBP initiator.

Selective SBP. A proxy-initiator (e.g. SBP-initiator) may send a request to a wireless access point (AP) which is a proxy-responder (e.g. SBP-responder), such that non-selective wireless sensing (e.g. SBP) is performed between the AP (acting as sensing initiator, on behalf of the proxy-initiator) with any available sensing responders (e.g. non-AP STAs/devices, another AP, mesh AP) in the AP's wireless network. Each of the available sensing responders may be assigned/associated with an identity (ID, e.g. MAC address). The proxy-initiator (e.g. SBP- initiator) may send another request to the AP to perform selective wireless sensing (e.g. selective SBP) with a group of selected sensing responders in the AP's wireless network. Each selected sensing responders may be identified by the respective ID. Same or different sensing settings may be used for different sensing responders. For a sensing responder, same or different sensing settings may be used for different target tasks (for the case of more than one target tasks) or different proxy-initiators (for the case of more than one proxy-initiators).

In some embodiments, the present teaching discloses systems and methods for Wireless Sensing in Network of Networks (WS-NoN) with tiered device grouping. A wireless sensing system may function as WS-NoN in a venue to perform a wireless sensing task.

In some embodiments, the system may comprise a plurality of wireless (sensing) devices in a venue, which may be grouped into N+1 groups/tiers/levels (N>=1), namely, Group/Tier/Level 1, and similarly Group/Tier/Level 2, .., Group/Tier/Level N+1. N may be greater than or equal to 1. Some of the plurality of wireless sensing devices (e.g. Tier-k AP, or Tier-k Aggregator device, or Tier-k Control device, or Tier-k gateway device) may be associated, at least for a period of time, with a backbone wireless network (e.g. WLAN, WiFi, mesh, 2G/2.5G/3G/3.5G/4G/LTE/ 5G/6G/7G/8G, Bluetooth, ZigBee, UWB, Matter, etc.), and an associated backbone access point device (AP).

In some embodiments, the system may comprise a multi-tier hierarchical structure with N+1 tiers/levels/groups, i.e., a "main" tier/level/group (or Tier 1 or Level 1 or Group 1), and N additional higher tiers/levels/groups, namely, Tier 2 (or Group 2 or Level-2), Tier 3 (or Group 3, or Level 3), .., Tier N+1 (or Group N+1, or Level N+1). The Tier k may include Tier-k AP devices, Tier-k control devices, Tier-k aggregator devices, and/or Tier-k gateway devices.

**In** some embodiments, the "main" tier/level/group (or Tier 1 or Level 1 or Group 1) has Group-1/Tier-1/Level-1 (sensing) device(s) of the WS-NoN forming (or being in) a Tier-1/Level-1/Group-1 wireless (sensing) network of the WS-NoN. In some examples, in Tier 1, a particular Tier-1/Level-1/Group-1 device may be a control device (a "Tier-1 Control" device) of the Tier-1 sensing network. In some examples, a particular Tier-1 device may be an access point (AP, e.g. base station) of the Tier-1 network (a "Tier-1 AP" device). In some examples, a particular Tier-1 device may be a "Tier-1 Aggregator" device which aggregates (e.g. gather/ receive/concentrate/process/analyze/combine/fuse/ integrate) sensing results in/for/from Tier 1 (i.e. any Tier-1 devices/network) and/or any higher tiers (i.e. any Tier-k devices/networks, for any k>1). In some examples, a particular Tier-1 device may be a "Tier-1 Gateway" device to enable communicative coupling with other group/tier/level. Any two (or more) of: the Tier-1 AP device, the Tier-1 aggregator device, the Tier-1 control device, and/or the Tier-1 gateway device may be a same device.

**In** some embodiments, for any k>1, the Group-k/Tier-k/Level-k wireless (sensing) devices may form one or more Tier-k wireless (sensing) networks of the WS-NoN. The Group-k/Tier-k/Level-k devices may be grouped/organized into one or more Tier-k/Level-k subgroups, each subgroup of devices associated with a respective Tier-k wireless network. In each Tier-k subgroup/network, a particular Tier-k device may be a Tier-k control device. In some examples, a particular Tier-k device may be an AP of the Tier-k wireless network (a "Tier-k AP" device). In some examples, a particular Tier-k control device may be a "Tier-k Aggregator" device which aggregates sensing results in/for/from the associated Tier-k wireless network, same tier (i.e. any other Tier-k wireless networks), and/or any higher tiers (i.e. any Tier-k2 devices/networks, for any k2>k). In some examples, a particular Tier-k device may be a "Tier-k Gateway" device to communicatively couple with other sensing networks in the WS-NoN. Any two (or more) of: the Tier-k AP, the Tier-k Aggregator device, the Tier-k control device, and/or the Tier-k gateway device in the same Tier-k network may be a same device. There may be one or more Tier-k sensing networks/subgroups. In each Tier-k sensing network/subgroup, there may be one or more Tier-k control devices, one or more Tier-k aggregator devices, and/or one or more Tier-k gateway devices.

The aggregator devices may be configured for receiving from or transmitting to higher tiers/same tier/lower tiers. In a particular Tier-k wireless network, there may be one or more first Tier-k aggregator devices configured to receive/aggregate/analyze higher tier sensing results (generated non-locally in networks other than the current network) from a respective first set of higher-tier networks (i.e. a collection of "Tier-k1 sensing results" from respective Tier-k1 networks, with any k1>k). One or more first Tier-k aggregator devices may also receive/aggregate/analyze some (pairwise) sensing results generated locally by Tier-k devices in the particular Tier-k network.

The particular Tier-k wireless network may also include one or more second Tier-k aggregator devices configured to receive/aggregate/analyze same-tier sensing results (generated non-locally in other networks) from a respective second set of same-tier networks (i.e. a collection of Tier-k2 sensing results from respective other Tier-k2 networks, with any k2=k; e.g. from some aggregator devices in those networks). One or more second Tier-k aggregator devices may also receive/aggregate/analyze some sensing results generated locally by Tier-k devices in the same network (i.e. the current network, the particular Tier-k network).

The particular Tier-k wireless network may also include a third Tier-k aggregator device configured to (i) receive/aggregate/analyze any received/ aggregated/analyzed sensing results (generated non-locally in other networks or locally in the same network) from any first Tier-k aggregator device, any second Tier-k aggregator device, and/or any Tier-k devices in the particular Tier-k network, (ii) construct/build a "Tier-k sensing result" based on all the received/ aggregated/analyzed sensing results, and (iii) transmit/report the Tier-k sensing result to a Tier-k3 device (e.g. a Tier-k3 aggregate device) of a Tier-k3 network, with k3<=k. In particular, k3 may be k-1, or 1.

The Tier-k control device may be a first Tier-k aggregator device, a second Tier-k aggregator device, and/or the third Tier-k aggregator device. In particular, the Tier-k control device may be the third Tier-k aggregator device. A first Tier-k aggregator device, a second Tier-k aggregator device and/or the third Tier-k aggregator device may be a same device.

The configuration of Tier-k devices may be performed by configuring devices. In some embodiments, at least one configuring device (e.g. a sensing server, a cloud server, an edge server, a master device, cloud server, edge server, network server, a proxy/ sensing-by-proxy/SBP initiator, Tier-1 control device, Tier-(k-1) control device, Tier-k control device) of the WS-NoN may configure (e.g. interact/liaise/ communicate with/control/command/ instruct/ setup) any Tier-k control device, any Tier-k AP device, any Tier-k aggregator device, any Tier-k gateway device, and/or any other Tier-k devices in the Tier-k network, either directly or indirectly, for any k<=(N+1). During a respective configuration operation, a Tier-k device being configured and the respective configuring device may send/receive/exchange/communicate/ handshake at least one control or data message/command/ request/response (e.g. via internet, via the backbone wireless network, via Tier-k network, or via a combination of wired/ wireless communication links/networks). There may be more than one configuring devices.

In some embodiments, a sensing server may configure all the Tier-k control devices for all k directly. The sensing server may configure all the Tier-k aggregator devices directly. In some embodiments, the sensing server may configure Tier-1 control device. The configured Tier-1 control device may in turn configure the Tier-2 control device(s). Recursively, a configured Tier-k control device may configure one or more Tier-(k+1) control devices.

In some embodiments, there are two classes of sensing devices. There may be a sensing server (e.g. a cloud server) of the WS-NoN. The plurality of wireless sensing devices may be classified into two classes of sensing devices: active sensing devices and passive sensing devices. Active sensing devices are those sensing devices with some dedicated (special purpose) wireless sensing software/application/firmware installed or embedded particularly to perform (part of) the particular wireless sensing task(s). Passive sensing devices are those sensing devices with NO such dedicated wireless sensing software/application/firmware installed or embedded particularly to perform the particular wireless sensing task(s). Instead, the passive devices perform generic (general purpose) wireless sensing operations (for any wireless sensing tasks, not particularly/specially for the particular wireless sensing task(s)) according to one (or more) protocol associated with the wireless network (e.g. WLAN standard, WiFi, 802.11, 802.11bf, mobile standard, 3G/4G/5G/6G/7G/ 8G/9G/10G, Bluetooth, Zigbee, UWB, Matter, adhoc network, mesh network, etc.).

All Tier-k Aggregator, Tier-k Control, and Tier-k Gateway devices are active sensing devices. A Tier-k AP be an active/passive sensing device. Active sensing devices (especially Tier-k Control, Tier-k Aggregator, and/or Tier-k Gateway) may/may not interact/communicate with the sensing server, while the passive sensing devices do not interact/-communicate with the sensing server.

In some embodiments, the passive devices may be cooperating devices in the venue that are willing to contribute to/participate in obtaining/generating raw wireless sensing measurements using the generic (general purpose) wireless sensing operations, without any dedicated software/firmware to further participating in the computation of sensing results for sensing task based on the raw wireless sensing measurements. In particular, the passive sensing device may perform generic sensing operations to transmit/receive wireless sensing signals/signalings (e.g. request/ response signals, sounding signal, NDP, ACK, trigger signal, report signals, etc.), and to obtain/report raw wireless sensing measurements (e.g. CI, CSI, CIR, CFR, RSSI) according to the protocol. Often passive Tier-k sensing devices may be associated with a Tier-k AP of a Tier-k network, and may be tested/discovered by the Tier-k AP (e.g. Tier-k Control) to be suitable for the raw wireless sensing measurements.

The Tier-k AP may be an active sensing device and may be configured (e.g. by sensing server or by Tier-k control device) to discover the passive/active Tier-k sensing devices (as opposed to non-sensing devices). The Tier-k AP may perform a sensing device discovery procedure by sending testing wireless sensing signals (e.g. NDP, wireless sounding signals) to each wireless device in the Tier-k wireless network (associated with the Tier-k AP). Alternatively, the Tier-k AP may send/transmit certain signaling to the wireless device such that it would send the wireless sensing signal/signaling to the Tier-k AP in reply/response. Raw wireless sensing measurements may be obtained by the receiver (whether it is the Tier-k AP or the device) based on the received wireless sensing signals. The Tier-k AP may obtain the raw wireless sensing measurements. It may perform a qualification/testing/analysis (e.g. by computing/ testing/comparing some test analytics/statistics) based on the raw wireless sensing measurements and decide whether the wireless device is/is not a legitimate/suitable/qualified/capable/compatible passive/active device. Different qualification/testing/analysis may be performed for different tasks. A device may be qualified for one task, but not for another task. The Tier-k AP may report the presence and characteristics/capability of the Tier-k passive/active sensing devices in the Tier-k network to the sensing server. The sensing server may maintain a list of passive sensing devices, and a list of active sensing devices, both associated with the user account, the venue and the WS-NoN.

In some embodiment, the generic sensing operation may comprise one or more of: function as any of: sensing initiator/responder/transmitter/receiver and/or SBP initiator/responder (e.g. as defined in IEEE 802.11bf), transmit/receive wireless sensing/ sounding signals (e.g. NDP, or ACK signal in response to pinging/enquiry signals), obtain raw sensing measurements (e.g. TSCI, CSI, CIR, CFR) based on received sounding signal, transmit/receive reports of raw sensing measurements, initiate/terminate sensing/SBP sessions, etc.

In some embodiments, in addition to what the passive devices do (i.e. the generic sensing operations), an active device may interact with the sensing server or Tier-k AP or Tier-k/Tier-1 Control to do any of: report its presence, register on the list of active sensing devices, await instructions/task assignments/group assignment from the sensing server, being grouped/assigned into Tier k, associate with respective Tier-k AP to join respective Tier-k networks, function as Tier-k AP device to establish a Tier-k network, function as Tier-k control device, function as Tier-k aggregate device, function as Tier-k gateway device, load/download/ install/update/execute/run respective components of sensing "engines" (software/-firmware/ configuration), compute/analyze/process some sensing results/ analytics/statistics (e.g. pairwise sensing results such as ACF/motion/breathing information/statistics/ features computed based on raw sensing measurements obtained from received wireless sensing signals/signalings, combined/aggregated sensing results, "Tier-k sensing results") for some sensing tasks, to receive sensing results from upstream (e.g. from higher tiers), analyze/combine/aggregate/process all available sensing results, report sensing results downstream (towards Tier-1).

In some embodiments, a user may participate in the configuration of any Tier-k device using a user device (e.g. mobile phone, tablet, IoT device, smart device). The user may install a WS-NoN for-user application/software/ firmware/configuration/setup in the user device. The Tier-k device may have a respective WS-NoN (for-device) application/software/ firmware configuration installed. The user device may connect (e.g. via internet, broadband network, cellular network, wire/wireless LAN, the backbone network, via a webpage, by scanning a QR code to access some webpage, and/or by using the for-user application/software) to a sensing server (e.g. cloud server) of the WS-NoN. The user device may login to a user account of the user with credentials entered by the user. The user device may obtain access information for the Tier-k devices to connect to the sensing server (associated with the user account).

In some embodiments, an initial configuration of active Tier-k device is used to connect to sensing server. The user device may be configured to ask/prompt the user for permission to use a local wireless channel/protocol (e.g. Bluetooth/BLE/Zigbee, Matter) for the (initial) configuration of an active Tier-k sensing device (in a Tier-k network). Upon receiving approval by the user, the user device may wirelessly interact with the active Tier-k device using the user-permitted wireless channel/protocol and guide/instruct/configure the Tier-k device to associate with either (c1) the backbone AP in the backbone wireless network, or (c2) the Tier-k AP device in the Tier-k network which is communicatively coupled with the backbone network. The user device may provide to the Tier-k device any of: SSID, access credential, access code, and/or password, of either (c1) or (c2), stored or otherwise provided/entered/selected/chosen by the user. The Tier-k device may be guided/instructed/configured to connect to the sensing server via the backbone network using some user credentials related to the user account, and/or the access information obtained from sensing server by the user device. Upon connected to the sensing server as guided, the Tier-k sensing device may be registered/associated with the user account, and the venue (e.g. as identified by/associated with network address of the backbone network).

For further configuration of active Tier-k device, the active Tier-k device may reboot, associate with either (c1) the backbone AP in the backbone wireless network, or (c2) the Tier-k AP device in the Tier-k network which is communicatively coupled with the backbone network, and communicate with the sensing server via the backbone network. The sensing server may then perform further configuration of the Tier-k device. The user device may communicate with the sensing server (e.g. via the backbone wireless network) and help in the further configuration of the Tier-k device. Either at this time or in the future, the Tier-k device may download/install/ update any of: system software/firmware/configurations (e.g. information of the hierarchical/ tiered structure of WS-NON and/or other sensing devices in WS-NoN), one or more sensing "engine" (e.g. sensing software/ firmware/application), engine configurations/requirements, and/or any user preference/settings. For the case of (c1), the sensing server may guide/direct/ cause the active Tier-k devices not designated as the Tier-k AP device to associate with the Tier-k AP device in the Tier-k network (e.g. by providing SSID, access credential, access code, and/or password of the Tier-k network). All active Tier-k devices may be configured to function in at least one role in the Tier-k network (e.g. the Tier-k AP device, the Tier-k control device, the Tier-k aggregator device, the Tier-k gateway device, Tier-k sensing device, sensing transmitter, sensing receiver, sensing responder, sensing initiator, SBP/proxy sensing initiator device, a sensing device on standby, etc.).

Formation of groups/tiers/levels; designation of Tier-k AP, control, aggregate and/or gateway devices are described herein. The sensing server map group the plurality of sensing devices into the N+1 groups/tiers/levels, and may designate some Tier-k devices to be Tier-k AP device, Tier-k control device, Tier-k aggregator device and/or Tier-k gateway device (e.g. based on the list of active sensing devices and the list of passive sensing devices). In some embodiments, the list of active and passive sensing devices may be presented to the user on the user device. The user may use the user device to direct/instruct the sensing server to form some or all of the N+1 groups/tiers/levels based on the list of the active sensing devices and the list of passive sensing devices. The user may use the user device to direct/instruct the sensing server to designate some devices to function as Tier-k AP device, Tier-k control device, Tier-k aggregate device, and/or Tier-k gateway device.

In some embodiments, to search for passive/active sensing devices from among non-yet-known devices, the Tier-k control device in an associated Tier-k network may be configured to ping any "not-yet-known" wireless devices in the network in search of passive/active sensing devices. The "net-yet-known" wireless devices may be wireless devices in the Tier-k network not yet known to the sensing server (and/or the Tier-k control device) with not-yet-known sensing capability/characteristics/quality/suitability/compatibility for/in the WS-NoN, and/or wireless device not yet included in the two lists of active or passive Tier-k sensing devices.

In some embodiments, the Tier-k control device may be the Tier-k AP device of the Tier-k network. The respective configuring device of the Tier-k control device (e.g. user device, the sensing server, the Tier-1 control device or a Tier-(k-1) control device) may instruct/ command/request/cause the Tier-k control device to test the not-yet-known devices in search for passive/active sensing devices. A not-yet-known device may be qualified/identified/designated/ found as a passive/active sensing device based on at least one of: qualified/acceptable brand, qualified/ acceptable model, supported frequency band, supported bandwidth, number of antenna, supported firmware version, supported software/ application, available computing capability/capacity, available memory, available data bandwidth, available/supported timing, suitability/usability/ compatibility/quality of CI, etc.).

The Tier-k device may select/choose a number of the qualified devices as passive/active sensing devices in the Tier-k network, especially if there are more than "sufficient" devices in the Tier-k network qualified as passive/active sensing devices.

The selection/choosing may be based on a limitation (e.g. capability/resource) of the Tier-k network. The Tier-k AP device, the Tier-k control device, the Tier-k aggregator device, and/or the Tier-1 gateway device may comprise limited available memory/buffer (e.g. to buffer locally/nonlocally generated raw sensing measurement and/or pairwise/aggregated/combined sensing results from itself and/or same-network devices; aggregated/Tier-k2 sensing results from other same-tier or higher-tier networks, k2>=k; Tier-k sensing results generated by the Tier-k aggregator device), limited available computing power (to process/preprocess/analyze/compute any pairwise raw sensing measurements and/or any pairwise/combined/aggregated/Tier-k2 sensing results), limited available analog bandwidth, limited available data bandwidth (e.g. only X1 percent of data traffic in the Tier-k network allocated to any sensing-related data communication/traffic/movement), limited available IO/internet bandwidth (e.g. only X2 percent of broadband/internet traffic allowed to any sensing-related data communication/traffic/ movement), limited available system resources, and/or limited available network resources for sensing.

Because of the limitation, the Tier-k control device may have to limit/constrain the number of qualified devices to be selected/chosen as passive/active sensing devices. One or more of the Tier-k AP device, the Tier-k control device, the Tier-k aggregator device, the Tier-1 gateway device, any sensing initiator device, any sensing responder device, any sensing transmitter, any sensing receiver, and/or any proxy (e.g. SBP) initiator, may impose a limitation, either individually or jointly or both, on the amount of passive/active sensing devices allowable/supported/selected in the Tier-k network. For example, the Tier-k AP may support up to N1 passive/active sensing devices in certain pairing configurations. The Tier-k controller may support up to N2 passive/active sensing devices in certain pairing configuration. The Tier-k aggregator may support up to N3 passive/active sensing devices. The Tier-k gateway device may support up to N4 passive/active sensing devices. A sensing initiator may support up to N5 passive/active sensing devices. A sensing responder may support up to N6 passive/active sensing devices. A sensing transmitter may support up to N7 passive/active sensing devices. A sensing receiver may support up to N8 passive/active sensing devices. A proxy initiator device may support up to N9 passive/active sensing devices. The amount of qualified sensing devices to be selected as passive/active sensing devices in the Tier-k network, may be a function of N1, N2, N3, N4, N5, N6, N7, N8, and/or N9. The function may be minimum, maximum, percentile, or weighted average. Or, with coordination of multiple devices, the function may be larger than the minimum of N1, N2, N3 and N4.

The selection/choosing of qualified devices may be based on sensing "coverage" or performance. In one example, a particular qualified device may be the only qualified device located in a particular section/area/region of a facility (e.g. house/office/warehouse/station). In order to ensure "good" coverage, the particular qualified device may be selected/chosen as passive sensing device in the Tier-k network. To identify such qualified device with unique coverage or sensing range/performance, a user may walk around the facility. To test for good or not-so-good coverage, the system would perform a trial sensing task (e.g. motion detection, breathing detection, gait detection, fall down detection, activity recognition) while a user walks around the facility. The system may find that the particular qualified device gave good/stable/consistent sensing task results in the particular section of the facility (e.g. motion/breathing/gait/fall-down detected, activity recognized) but other qualified devices (when paired) gave poor/bad/not-so-good/unstable/inconsistent sensing task results (e.g. erratic or no motion/breathing/gait/fall-down detected, or erratic/no activity recognized).

**In** another example, two qualified devices, A and B, may be spatially adjacent to each other in the particular section/area/region of the facility. In the trial sensing task with the user walking around the facility, the two nearby qualified devices A and B, when paired with at least one same device C, may provide similar sensing task results. Similarity metric/score/measure (e.g. correlation) and/or dissimilarity metric/score/measure (e.g. mismatch score) between various pairs may be computed. Devices A and B may have high similarity (or low dissimilarity) with each other, but low similarity with other qualified devices. Such high similarity characteristics of devices A and B may be registered/recorded/stored (e.g. in Tier-k control device, or sensing server). The Tier-k control device may select/choose one of devices A and B, but not both, due to the "redundant"/similar sensing capability. Between the devices A and B, the unselected/not-chosen device may be marked/labeled as a "backup" device for the selected/chosen device that can be used when the selected/chosen device is down/power-off/ malfunctioned. Device A may have better sensing results for a first sensing task and be selected for it. Device B may have better sensing results for a second sensing task and be selected for it. In some embodiments, for testing suitability of not-yet-known devices as passive/active sensing device, the Tier-k control device may cause each not-yet-known device (or a pair formed by the not-yet-known device and another device, the another device being either another not-yet-know device or a known device on the two lists of active/passive devices) to perform a respective trial sensing measurement operation and may decide whether the not-yet-known wireless device (or the device pair comprising the not-yet-known device) achieves a satisfactory/acceptable/ suitable sensing performance.

In some embodiments, the Tier-k control device may send a (unicast) ping signal (e.g. null data frame/NDP; 802.11/802.11n/ac/ ax/be/bf/WiFi/WiFi-4/WiFi-5/WiFi-6/WiFi-7/WiFi-8/WiFi-9 standard compliant/ compatible, e.g. with ToDS=FromDS=0) to each not-yet-known wireless device and may receive a respective response frame (e.g. acknowledgement/ACK). The Tier-k control device may obtain/extract/ capture respective raw sensing measurement (e.g. CI/CSI/CIR/CFR) based on the respective received response frame.

In some embodiments, for the case of device pair comprising the not-yet-known device, the Tier-k control device may cause the not-yet-known wireless device to communicate wireless signals (e.g. the NDP, the response frame) with the another device (e.g. another not-yet-known wireless device, or a "known" wireless sensing device of WS-NoN) such that raw sensing measurement may be obtained/extracted/ captured from the wireless signals or corresponding response signals.

In some embodiments, the Tier-k control device may compute (or cause to compute) a respective sensing test score based on the raw sensing measurement and compare it with a threshold. It may determine the sensing link between the not-yet-known device and the Tier-k control device, or between the not-yet-known device and the another device in the device pair, to be "usable" or "suitable" or "compatible" or "qualified" when the sensing test score exceeds the threshold, or vice versa. In other words, it may determine the two devices in each link to be "usable" or "suitable" or "compatible" or "qualified" when the test score exceeds the threshold.

In some embodiments, different test scores are computed for different tasks. The sensing test score may depend on a sensing task of the WS-NoN. There may be more than one sensing tasks (e.g. motion detection, presence detection, breathing detection, sleep monitoring, activity detection, motion localization, fall-down detection, etc.) each to be performed/covered by a respective "engine" (e.g. software/application/firmware) of the WS-NoN. Each "engine" may have respective requirement of/on "usability", or "suitability", or "compatibility" or "qualification" of/on the raw sensing measurement. Different sensing test scores (and different corresponding thresholds) may be computed/needed/used for different engines to assess/determine the usability/suitability/ compatibility for the more than one sensing tasks. For example, the test score may be a first statistics for engine1 (e.g. motion statistics for a motion detection engine), and a second statistics for engine2 (e.g. breathing statistics for a breathing detection engine). The usability/suitability/ compatibility may be determined individually for each task based on a respective sensing test score, or jointly for multiple tasks based on multiple respective sensing test scores.

For example, the Tier-k control device may be configured to decide, for each intended sensing task/engine, whether the raw sensing measurements (e.g. CI/CSI/CIR/CFR) obtained in the trial sensing operation is good/suitable/qualified/satisfactory enough (or not). There may be more than one intended sensing tasks/engines, each with different satisfaction/acceptance/ suitability criteria on the raw sensing measurement. Based on the trial sensing operation and the associated sensing test scores, a link and/or device pair comprising a not-yet-known device may be determined/classified to be suitable/acceptable/satisfactory for a first task/engine but not suitable/acceptable/satisfactory for a second task. Or, the link and/or the device pair may be determined as suitable/acceptable/satisfactory for a first/"primary" role (e.g. sensing receiver) of a first task/engine but only for a second/"secondary" role (e.g. sensing transmitter) of a second task. A task may require different amount of sensing devices in different roles (e.g. N1 for first role, and N2 for second role).

In some embodiments, enlisted sensing devices/device-pairs are reported. After a not-yet-known wireless device is designated/enlisted/engaged/included as a Tier-k passive/active sensing device by the Tier-k control device, the Tier-k control device may transmit an information (e.g. identity/ID, MAC address, brand, model, capability, test score, hardware, processor, memory, software, firmware version) of it and/or the associated link/device pair to the sensing server. The sensing server may add the not-yet-known device to the lists of passive/active sensing devices, and/or add the link/device pair to a list of feasible (e.g. acceptable/suitable/qualified) links/device pairs.

In some embodiments, a similar suitability/qualification test may be performed for some/all of the active sensing devices. The associated link/device pair comprising an active sensing device may be reported to the sensing server to be added to the list of feasible links/device pairs.

In some embodiments, the user may be prompted in the user device and may select/choose some (or all) of the feasible links/device pairs for one or more (or all) sensing tasks to be performed. The user may be prompted to tag/label each active sensing device, passive sensing device and/or device pair (link). The user may be prompted to define zones within the venue (e.g. kitchen, living room, family room, dining room, toilet/rest room, garage, bedroom 1, bedroom 2, hallway, first floor, second floor, foyer, etc.) and/or a layout of the zones in the venue. The user may be prompted to associate a zone to each device and/or each device pair (link). The user may be prompted to enter a nature of use of the venue (e.g. primary residence, homestays service, hotel, rental, vacation house, etc.), a type of structure (e.g. multi-unit, single family), number of occupants, presence of any pets, scheduled events, daily/weekly/monthly/ timed activities.

Using the user device, the user may designate/choose one or more allowable sensing tasks (e.g. motion detection, breathing detection, fall down detection, home monitoring, intrusion detection, locationing, tracking, etc.). For one or more tasks, the system may suggest/recommend a suggested system setup, comprising grouping of the devices (which devices to go to which group/subgroup/network), wireless interconnections among devices, suggested roles for the devices, suggested Tier-k AP, suggested Tier-k Aggregator, suggested Tier-k gateway, suggested Tier-k control device, etc. The system may present the suggestion/recommendation to the user on the user device. The system may also analyze the suggested system setup, and may compute/present one or more of: network usage analytics (e.g. for each Tier-k network, for backbone network), device capability/computing/memory/software/firmware/ requirement (e.g. for one/some/each device; relative to available resources).

The user may accept/reject/modify/refine one/more/any/all suggested system setup items. The user-interface in the user device may allow the user to select/highlight/accept/confirm/reject/name/ designate/deny/delete/add/merge/-combine/split/modify/change the groups/groupings and/or wireless inter-connections, to include/exclude/constrain/change sensing devices and/or to select/accept/deny/reject/modify/add roles of each device for the sensing system. The user may highlight/select one (or more) device, group, grouping, and/or wireless inter-connection, and may perform any of the above mentioned operation on the highlighted item. The user may re-connect/re-direct an interconnection. The user may move a (highlighted/selected) device from one group to another. The user may designate/confirm/reject a highlighted/selected device to be any of: Tier-k AP, Tier-k Control, Tier-k Aggregator, Tier-k Gateway, sensing initiator, sensing responder, sensing transmitter or Type1 device, sensing receiver or Type2 device, SBP initiator, SBP responder, etc. The user may establish/setup constraints and get the system to refine/adjust the grouping, roles, interconnections, etc.

The user (or the sensing server) may choose some device (may/may not a Tier-k sensing device) for proximity and/or geo-fencing. For example, a mobile phone of the user's child may be used for geo-fencing such that when the backbone AP or any Tier-k AP senses it, the WS-NoN may deduce that the user's child may be in proximity.

Some devices may be excluded to be a Tier-k sensing device (whether active or passive). For example, a robotic vacuum cleaner may be excluded because its location may be constantly changing. Some devices may be moved/relocated (e.g. by the user) to better locations/orientations/positionings before being enlisted/engaged as a sensing device (e.g. active, or passive). For example, some location/orientation/positioning may give better coverage for wireless sensing.

**In** some embodiments, the WS-NoN may be part of a security system. Different responses may be needed for the security system when motion is detected by WS-NoN under different contexts or situations. Different alert levels may be defined and may be assigned under different situations or contexts. For example, alert level= "1" may be defined to mean "very likely to be an accidental trigger, do nothing". Alert level="2" may be defined to mean "likely accidental". Alert level="3" may be defined to mean "may be accidental, worth checking". Alert level="4" may be defined to mean "concerned, definitely check". Alert level="5" may be defined to mean "intrusion seems likely, call police".

A wireless device may be sensed/detected by or associated with one of the AP in the venue, such as backbone AP, or a Tier-k AP. The context (e.g. of a sensing task in a venue) may comprise whether the detected wireless device is a known device with known/registered/recorded MAC (e.g. mobile device/phone of user/user's children, or mobile device/phone of a frequent/regular visitor such as housekeeper/postman) or an unknown device (intruder's phone). The context may also comprise whether motion/activity is expected based on a time table/schedule/plan/sequence (e.g. children scheduled to arrive home at 4pm Monday to Friday, housekeeper scheduled to come every other Saturday, robot cleaner scheduled/planned to clean at 10am every day, online shopping delivery scheduled in the afternoon, user on a 3-week vacation, pet allowed to move freely in venue during the day, user wakes up and goes to bed at consistent time every day, user morning routine comprises waking up/getting off bed/going to kitchen/making/eating breakfast, neighbor walks in hallway for 10 seconds between lift and his flat, etc.). The context may also be that an event (e.g. being in a geo-fencing neighborhood of the venue) of a wireless device (e.g. children's phone) is reported (e.g. by a geolocation API).

In some embodiments, suppose motion is detected by WS-NoN. If the context/situation is that motion is expected in venue based on time table/plan (e.g. it is time for children to come back from school) and a known wireless device (e.g. children's mobile phone) is detected in a proximity (e.g. in a neighborhood near venue), then alert level may be assigned/set as "1". If the context is that motion is not expected in venue based on time table/plan (e.g. not yet time for children to come back from school) and the known wireless device is detected in the proximity, then the alert level may be set as "2". If the context is that the detected motion by WS-NoN is of an unknown type suggesting the motion is suspicious/alarming and motion is not expected in venue according to time table/plan and a positive report is received suggesting the motion is legitimate (e.g. report received saying that robot vacuum cleaner is cleaning the venue), then the alert level may be set as "2". If motion is expected based on time table/plan (e.g. scheduled arrival of housekeeper) and an unknown wireless device is sensed/detected (e.g. presence of unknown phone), then the alert level may be set as "3". If motion is not expected based on time table/plan (e.g. user being away on vacation) and unplanned presence of a known device (e.g. house keeper's phone) is detected, the Alert level may be set as "4". If motion is not expected based on time table/plan (e.g. user being away on vacation) and an unknown wireless device (e.g. of intruder) is detected, the alert level may be set as "5".

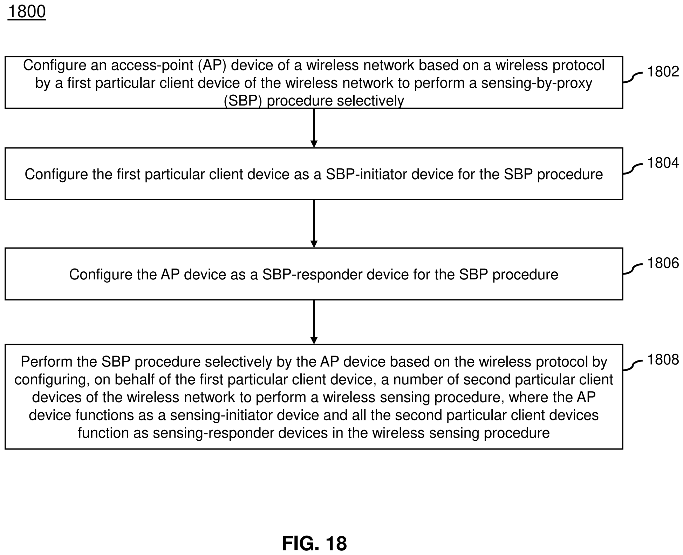

Different embodiments for Tier-k devices configuration are disclosed herein. In some embodiments, the sensing server may configure some/all/no Tier-k devices (e.g. passive/active sensing devices) indirectly, via the associated Tier-k control devices. For example, the sensing server may, or may configure/cause a Tier-k control device to (e.g. by functioning as a SBP/proxy sensing initiator in 1804 in Fig. 18), request the associated Tier-k AP device (e.g. functioning as SBP/proxy sensing responder) of the associated Tier-k network to function as sensing initiator to initiate a sensing session with the Tier-k devices such that wireless sensing measurements are performed in the Tier-k wireless sensing network (e.g. based on wireless sounding signals/NDP sent between sensing initiator and sensing responder, or between two sensing responders) as shown in 1806 of Fig. 18. The Tier-k devices may be configured directly by the Tier-k AP device, and indirectly by the Tier-k control device and the sensing server.

In some embodiments, the sensing server may configure some/all/no Tier-k devices (e.g. active sensing devices) directly to be associated with the respective Tier-k AP device to join the respective Tier-k wireless sensing network (e.g. the Tier-k AP device may be the Tier-k control device). In some embodiments, the sensing server may configure a Tier-k control device to (as sensing initiator) recruit/solicit/find/engage other Tier-k devices in the respective Tier-k network to join the WS-NoN (at least temporarily, or during a sensing session of the WS-NoN).

In some embodiments, a Tier-1 control device may configure Tier-2 control devices. The Tier-1 control device may be configured to configure (e.g. interact/liaise/communicative with/control/command/instruct/setup) the one or more Tier-2 control devices (and/or the associated Tier-2 wireless networks). The Tier-1 control device and each Tier-2 control device may send/exchange/communicate/ handshake at least one control or data message/command/ request/response (e.g. via a wired/wireless communication links/networks).

In some embodiments, a Tier-1 control device may configure higher-tier control devices directly or indirectly. In one example, the Tier-1 control device may configure higher-tier (e.g. Tier-2, Tier-3, etc.) control devices and/or associated higher-Tier wireless networks directly. In another example, the Tier-1 control device may configure the higher-tier control device(s) indirectly in a recursive manner via the Tier-2 control device(s) - in which recursively, as configured/intended/planned by the Tier-1 control device (whether directly or indirectly), a Tier-k control device may recursively configure (or interact with) one or more Tier-k2 control devices and/or the associated Tier-k2 networks, for any k>1, k2>=k. For example, a Tier-k control device may recursively configure one or more Tier-(k+1) control devices.

In some embodiments, Tier-k devices are configured by Tier-k control device. In one embodiment, each Tier-k control device may be configured to, functioning as sensing initiator, proxy sensing initiator and/or SBP initiator, configure directly or indirectly the Tier-k devices in the associated Tier-k wireless networks to perform pairwise wireless sensing measurements, with wireless sounding signals (e.g. NDP) being transmitted between a pair of sensing transmitter to a sensing receiver, and (pairwise) raw wireless sensing measurements (e.g. channel information, CI, channel state information, CSI, channel impulse response, CIR, channel frequency response, CFR, RSSI) being obtained/extracted from or based on the received wireless sounding signals by the sensing receiver. Some Tier-k devices (which may/may not comprise the Tier-k control device) transmit respective wireless sounding signals (e.g. to itself, to other Tier-k devices and/or some Tier-k2 devices, k2<>k) as sensing transmitters. Some Tier-k devices receive respective wireless sounding signals (e.g. from itself, from other Tier-k devices, and/or some Tier-k devices) as sensing receivers, and obtain respective pairwise raw wireless sensing measurements.

In some embodiments, pairwise sensing measurements and sensing results are computed, obtained and reported. Each sensing receiver may be configured (e.g. by sensing initiator, by Tier-k control device, or by sensing server, indirectly by SBP initiator/proxy initiator device) to compute respective pairwise sensing results based on the respective pairwise raw wireless sensing measurements. The pairwise sensing results may be computed based on one or more engines/modules/software/firmware modules installed in the sensing receiver, which may be chosen from a collection of wireless sensing engines/modules/software/ firmware by the user via the user device, or a configuration of the sensing server. Different pairwise sensing results may be computed for different engines/modules/software/firmware based on the pairwise raw wireless sensing measurements. The sensing receiver may be configured to report the pairwise sensing results, and/or pairwise raw wireless sensing measurements to the sensing initiator, the Tier-k control device, the Tier-k Aggregate device, and/or the sensing server.

In some embodiments, the collection of wireless sensing engines may comprise motion engine, security engine, event engine, motion classification engine, motion recognition engine, presence engine, daily activity engine, rhythm engine, breathing engine, heart engine, sleep engine, gait engine, fall-down engine, location engine, tracking engine, navigation engine, fusion engine, etc. The pairwise sensing results may be transmitted from the sensing receiver to an associated Tier-k Aggregator device, which may combine/aggregate (some/all) pairwise sensing results generated in the Tier-k network.

In some embodiments, the pairwise sensing results (including pairwise sensing results or combined/aggregated sensing results) may comprise motion analytics such as any of: motion information (MI)/characteristics/statistics/ indicator value, breathing statistics, presence statistics, location, speed, acceleration, and/or spatial-temporal information (STI), etc. Different engines may have different requirements (e.g. bandwidth such as 20/40/80/160/320/640 MHz, carrier frequency such as 2.4GHz/5GHz/6GHz, antenna, spatial diversity stream, transmitter-receiver pair) on the received wireless sounding signals.

In some embodiments, the Tier-k Aggregator device may be configured to receive/collect any of: (1) higher-tier sensing results from higher tiers (Tier-k2, k2>k), (2) same-tier pairwise raw wireless sensing measurements, same-tier pairwise sensing results, and/or same-tier combined or aggregated sensing results from other Tier-k Aggregator device(s) in other Tier-k networks, and/or (3) same-network pairwise raw wireless sensing measurements, and/or same-network pairwise sensing results from other Tier-k devices in the Tier-k network. The Tier-k Aggregator device may compute (4) combined/ aggregated sensing results by analyzing/processing/aggregating any received (1), (2) and/or (3). It may generate/assemble/ aggregate/ compute "Tier-k sensing results" which comprise any received (1), any received (2), any received (3) and/or any computed (4). It may transmit the "Tier-k sensing results" to another Tier-k Aggregator device in another Tier-k network, or to a Tier-k2 Aggregator device, with k2<k (e.g. Tier-(k-1) Aggregator device), or to Tier-1 Aggregator device, or to sensing server.

In some embodiments, the Tier-k control device may be configured to participate in performing sensing measurements (e.g. transmit or receive sounding signal, trigger sounding signal transmission, obtain/extract raw wireless sensing measurements from received sounding signal), and/or compute pairwise sensing results based on the raw wireless sensing measurements.

In some embodiments, there is complete configuration data in Tier-1 control device. In one embodiment, a complete configuration description of the multi-tier hierarchical structure of the WS NoN may be obtained by the Tier-1 control device (e.g. from sensing server, or from user device via sensing server). The WS NoN (comprising all the tiers, all the wireless (sensing) networks, all the control devices of the wireless networks, all the aggregator devices of the wireless networks, all the devices in the wireless sensing networks, all sensing roles of the devices, all sensing measurement configuration (e.g. bandwidth, antenna) for the wireless sensing signals, all the messaging, all the wireless sensing sounding/signaling, all the protocols, all compliance to standards such as WiFi/802.11/802.11bf/5G/6G/ 7G/8G, all the inter-connections/communications within and between the wireless networks, all the sensing data collection, all the sensing results computation to be performed, all the reporting and presentation of sensing results, etc.) may be constructed/established/configured based on the complete configuration description. Some or all of the complete configuration data may be obtained by the Tier-1 control device from the sensing server, or may be constructed by the Tier-1 control device according to some instruction/requirement from the sensing server.

In some embodiments, the complete configuration data may comprise a description, a textual description, a data structure, a directed structure, a link list, a blueprint, and/or a database, of the multi-tier hierarchical structure of the WS NoN. It may comprise any of: a description of the tiers, the Tier-k networks, the available devices/the Tier-k sensing devices/the Tier-k AP device/the Tier-k control device/the Tier-k Aggregator device in each Tier-k network, identities (e.g. MAC address) of the devices, the sensing tasks, requirements/configurations for the sensing engines/modules/ software/firmware, the (intra-network and inter-network) pairing of sensing devices to perform sensing measurements, the sensing transmitters, the sensing receivers, the sensing initiators, the sensing responders, the SBP/proxy initiator devices, the pairwise sensing results to be computed, the combined/aggregated sensing results to be computed, the composition and reporting of the Tier-k sensing results, etc.

In some embodiments, a Tier-1 control device distributes configuration data to Tier-k control device. In one embodiment, the sensing server may transmit some or all of the complete configuration data to the Tier-1 control device such that the Tier-1 network and all the higher tier networks can be configured by the Tier-1 control device. For each Tier-k network (k>2), the Tier-1 control device may compute a respective Tier-k configuration data and communicate it to the associated Tier-k control device. The respective Tier-k configuration data may comprise part of the complete configuration data in relation to the Tier-k network, the Tier-k control device, and any relevant Tier-k2 wireless network.

In some embodiments, there are configurations of tiers, intra-network pairing and inter-network pairing. In one embodiment, the designation/nesting/grouping of the tiers/groups/levels may be configured by the sensing server. In an embodiment, the intra-network pairing of sensing devices in a Tier-k network may be constructed by the Tier-k controller device of the network, and may be reported by the Tier-k controller device (e.g. to sensing server, to Tier-(k-1) controller device, or to Tier-1 controller device). In an embodiment, an inter-network pairing of sensing devices (e.g. between a Tier-k1 and a Tier-k2 network, k1 < k2 or k1 >k2, or between two different Tier-k networks) may be configured by the sensing server. In another embodiment, an inter-network pairing of a Tier-k1 sensing device and a Tier-k2 sensing device between a Tier-k1 network and a Tier-k2 network may be configured by: the Tier-k1 device, the Tier-k2 device, the associated Tier-k1 control device, the associated Tier-k2 control devices, the Tier-1 control device, the sensing server, and/or multiple of these devices.

In some embodiments, the sensing results are propagated in nested tiers. Wireless sensing may be performed in the wireless networks in the WS-NoN. Raw (pairwise) wireless sensing measurements (such as Channel information (CI), CSI, CIR, CFR, RSSI, or time series of CI (TSCI) or any of CSI/CIR/CFR/RSSI) of the wireless channels of the wireless networks may be obtained and (pairwise) sensing results may be computed based on the raw wireless sensing measurements (e.g. CI or TSCI). The wireless networks in the WS-NoN may be nested such that sensing results may be propagated/reported from higher Tiers towards lower Tiers, until they eventually reach Tier-1, from which they may be reported to a sensing server.

In some embodiments, there is inter-tier (cumulative) propagation of sensing results in adjacent tiers. In the WS-NoN, each Tier-k network may be configured to be (recursively) nested/associated/linked with a respective Tier-(k-1) network (e.g. via a common gateway device, an inter-tier gateway device, a supervisory network or the backbone wireless network) or lower Tier network (e.g. Tier-(k-2), or Tier-(k-3), etc.) such that Tier-k sensing results obtained/collected/-condensed/aggregated/generated/computed by the Tier-k network may be propagated/forwarded/transmitted/reported to the respective associated Tier-(k-1) (or lower Tier) network iteratively/recursively/asynchronously/progressively (e.g. via the common gateway device, inter-tier gateway device, supervisory network, or backbone network), towards the Tier-1 network. The Tier-k sensing results may comprise: any higher-tier sensing results transmitted from any higher Tier networks to the Tier-k network (e.g. Tier-(k+1) sensing results from any Tier-(k+1) networks, Tier-(k+2) sensing results from any Tier-(k+2) networks, Tier-(k+3) sensing results from any Tier-(k+3) networks, etc.), other Tier-k sensing results transmitted from any other Tier-k networks to the Tier-k network, local sensing results generated/computed locally in the Tier-k network based on (analyzing) Tier-k (pairwise) raw sensing measurement (e.g. CI/TSCI) obtained in the Tier-k network, and/or aggregated sensing results generated in the Tier-k network by aggregating/analyzing the local sensing results, the other Tier-k sensing results and/or higher-tier sensing results.

**In** some embodiments, there is intra-tier (horizontal) sensing result propagation in same tier. An exception may be that, a Tier-k network may be nested/associated/linked with another Tier-k network (e.g. via a common gateway device, an intra-tier gateway device, the supervisory network or backbone network), instead of a Tier-(k-1) network or lower Tier network, such that its Tier-k sensing results may be propagated/forwarded/ transmitted/reported to the another Tier-k network (e.g. via the common gateway device, intra-tier gateway device, or the supervisory network), towards the Tier-1 network. In turn, the another Tier-k network may be nested/ associated/linked with a Tier-(k-1) network (e.g. via inter-tier gateway device) or lower Tier network; or the another Tier-k network may be nested/associated/linked with yet another Tier-k network, towards the Tier-1 network. And in turn, the yet another Tier-k network may be nested/associated/linked with a Tier-(k-1) network (or a lower Tier network), or other Tier-k network. And so on.

**In** some embodiments, the networks may be heterogeneous such that different networks (e.g. in the same tier, or in different tiers) may be associated with different network or channel resources/characteristics. They may have different carrier frequency bands (e.g. 2.4GHz, 5GHz, 6GHz, 7GHz, 24GHz, 28GHz, 60GHz, 70+GHz), or different bandwidth (e.g. 20/40/80/ 160 /320/640 MHz), or different modulation, or different multiple access, or different signaling/ standard/ communication schemes (e.g. WiFi/WLAN, IEEE 802.11n/ac/ax/be/bn/bf, 4G/5G/6G/ 7G/8G, Bluetooth, WiMax, UWB, etc.), or different coverage (e.g. cells, micro-cells, pico-cells, room-level, house-level, floor-level, facility-level).

**In** some embodiments, two of the networks (e.g. two Tier-k networks; a Tier-k1 network and a Tier-k2 network) may have same SSID (service set ID), though each network may have its own AP and its own BSSID (basic service set ID). The two associated AP of the two networks may be mesh routers. Each network may be a basic service set (BSS) while together they may constitute an extended service set (ESS).

**In** some embodiments, each Tier-k wireless sensing network may have at least one Tier-k gateway device for communication with other wireless networks (i.e. other Tier-k network, higher tier network (Tier-k2 network, k2>k), and/or lower tier network (Tier-k3 network, k3<k). The Tier-k gateway device may use the backbone network to communicate with the other wireless networks. The Tier-k gateway device may be a common device in two networks, as a bridge between the two networks. A first Tier-k gateway device may be a common device between the Tier-k network and a lower tier network for the propagation/reporting/forwarding /transmitting of Tier-k sensing results from the Tier-k network to the lower tier network. A second Tier-k gateway device may be a common device between the Tier-k network and at least one higher tier network for the propagation/reporting of higher tier sensing results from the higher tier network to the Tier-k network. In some embodiments, the at least one Tier-k gateway device may be associated with the backbone AP of the backbone network and may communicative with other gateway device via the backbone network. The at least one Tier-k gateway device may be the same device. A Tier-k gateway device may be a Tier-k aggregator device.

**In** some embodiments, common devices function as gateway devices. Two networks may overlap by sharing a common device with a particular MAC address, effectively functioning as a gateway device for both networks. The common device may be configured to function/associate/communicate in the two networks (e.g. using 2.4GHz in one network and 5GHz in second network), either simultaneously, or contemporaneously. The common device may function as a gateway/linkage/inter-connecting device linking/connecting/nesting/associating the two or more overlapped networks.

**In** some embodiments, common device can function as intra-tier gateway device. A common device may be in (or associated with) multiple networks in the same tier. For example, it may be in a first Tier-k network (e.g. 2.4GHz WiFi) and also in a second Tier-k network (e.g. 5GHz WiFi), such that it may become an intra-tier gateway device between the two Tier-k networks allowing sensing results/messages/updates to be transmitted from any devices in the second Tier-k network to the common device using the second Tier-k network and then from the common device to other devices in the first Tier-k network using the first Tier-k network.

In some embodiments, common device can function as inter-tier gateway device. A common device may be in multiple networks in two or more tiers. For example, it may be in a Tier-k2 network (e.g. a WiFi network) and a Tier-k1 network (e.g. a UWB network). The common device may function as an inter-tier gateway device between the two tiers such that sensing results/messages of any device in the Tier-k1 network may be first transmitted to the common device using the Tier-k1 network, and then from the common device to other devices in the Tier-k2 network using the Tier-k2 network. Software/firmware/system updates may be propagated/ transmitted in opposite direction - from Tier-k2 network to Tier-k1 network via the common device.

Software/firmware/system updates may be propagated/transmitted between first Tier-k network and second Tier-k network (e.g. a common device or via back-bone network), or between a Tier-k1 network and a Tier-k2 network (e.g. via a common device or via back-bone network).

In some embodiments, the Tier-1 AP device may be communicatively coupled with a sensing server (e.g. master device). The sensing server may comprise a server/device, remote/cloud/ internet server, and/or local/edge/ network server. The Tier-1 AP may communicate with the sensing server via a network, by sending/ receiving/exchanging/ handshaking messages/frames/signals/ notification/request/instruction/command to/from/with the sensing server. The data network may comprise an access network, PAN, WPAN, LAN, WLAN, WiFi, Bluetooth, Zigbee, MAN, WMAN, cellular network, 4G/5G/6G/7G/8G, WiMax, broadband network, cable network, optical network, microwave network, a series/-combination of networks, and/or internet.

In some embodiments, for initialization based on sensing plan, the WS-NoN (including all Tier-k AP devices, associated Tier-k devices in respective Tier-k networks, and associated wireless sensing measurement sessions/settings/ inter-connections/signalings) may be initiated/configured/constructed/ built/setup by the sensing server (e.g. directly, or indirectly via the Tier-1 AP) or by the Tier-1 AP, based on a sensing plan (e.g. plan/information/ description/ list/ instruction/configuration/setup, complete configuration description) for the WS-NoN. The Tier-1 AP and/or the sensing server may have/possess/obtain/receive/transmit/ formulate/ establish/execute/ implement/perform the sensing plan. The sensing plan may comprise information/description/design/ plan/list/instruction/configuration/setup to construct/-build/ establish/ set up the WS-NoN. The sensing plan may be pre-stored in memory of the Tier-1 AP or the sensing server, or exchanged between the Tier-1 AP and the sensing server (e.g. from sensing server to Tier-1 AP, or vice versa), or obtained/ received/configured from a user using a user/local device.

In some embodiments, some/all of the Tier-k networks, including the Tier-1 network, may be formed/initialized/established based on the sensing plan. Some Tier-k network may be an existing network. Some Tier-k network may be newly created/initiated. Based on the sensing plan, the AP of the Tier-k network may be configured/ setup/initiated (e.g. by sensing server, by master device, by Tier-1 AP, or by a Tier-(k-1) AP) to be the Tier-k AP of the Tier-k network of the WS-NoN. Some devices in the network (whether associated or not) may be configured (e.g. by sensing server; by master device; or by Tier-1 AP; or by Tier-k AP of the Tier-k network) to be Tier-k sensing devices to perform wireless sensing measurements in the WS-NoN, and/or to collect/compute/combine/analyze/propagate any Tier-k sensing results to/towards a nested/ associated Tier-(k-1) network (or an nested/associated Tier-k network), towards the Tier-1 network/Tier-1 AP. Some other devices may not be admitted to be a Tier-k device of the WS-NoN. Still some other devices in the network may decline/refuse to be a Tier-k sensing device of the WS-NoN. After the Tier-k network is initialized, new devices may join the Tier-k network and may be added to be Tier-k sensing devices of the Tier-k network of the WS-NoN. An existing Tier-k sensing device may be removed/paused/stopped/ quarantined in the Tier-k network, or moved to another Tier-k2 network. In some embodiments, the "some devices" configured to be Tier-k sensing devices may comprise any of: admissible/allowable devices as described in the sensing plan, pre-identified devices with certain MAC addresses; pre-identified/updated classes of devices known/qualified to be compatible with the WS-NoN; specific types of devices such as brand ABC smart speaker, or brand DEF smart TV, or brand GHI smart plugs; smart devices currently in, or added later to, the network that respond in certain way when prompted; smart devices that passed some qualification trial test; devices trusted/recognized/owned/ used/allowed/installed by a user; devices compliant to some standards such as WiFi 6/7/8/9, IEEE 802.11bf. In some embodiments, the "some other devices" not admitted as Tier-k sensing devices may comprise any of: non-admissible/disallowed/forbidden/to-be-avoided/suspicious devices identified/ described in the sensing plan, devices not trusted/recognized/owned/used/allowed/installed by user, devices that are faulty/erratic/unreliable/noisy/-compromised/black-listed, devices not compatible with WS-NoN, devices that fail a qualification trial test, and/or devices that fail a WS-NoN requirement on any of: computing ability, memory/storage/speed/bus, response time, software/ firmware/application, chip/hardware/accessory capability, wireless capability/ characteristics/ signaling, antenna, availability, power source/endurance, and/or standard compliance.

In some embodiments, for an 802.11bf implementation, the Tier-k AP devices may be compliant to IEEE 802.11bf, or another wireless sensing standard. Any Tier-k AP device may be configured by a configuring device to perform wireless sensing measurements (e.g. based on IEEE 802.11bf, and/or the another standard) in at least one role (e.g. as sensing initiator, as SBP responder, as sensing transmitter, as sensing receiver, as another SBP initiator, as AP, as Tier-k local coordinator/server/concentrator/aggregator). The configuring device may comprise/may be a sensing server, a cloud server, an edge server, a local server, a Tier-1 AP, a Tier-(k-1) AP and/or a sensing-by-proxy (SBP) initiator. The configuring device and the Tier-k AP may perform a (wireless/wired) request/response/configuration/setup handshake or signaling (e.g. configuring device sends SBP request or "Tier-k AP request", Tier-k AP sends SBP response or "Tier-k AP response") to request/agree/decline/negotiate on any requested configuration for the Tier-k AP.

The requested configuration may comprise any of the following configuration items: (1) identification/configuration/ requirement for the Tier-k wireless network to be established/ formed/used by the Tier-k AP for the wireless sensing measurement, (2) requirement/ selection/identification/designation/ configuration of Tier-k wireless devices in the Tier-k network to be used/approached/engaged/ configured for the wireless sensing measurement, (3) pairing of two Tier-k devices (in same or different Tier-k networks) and associated sounding signal configuration for each pair of devices, and/or sensing measurement coordination between the two Tier-k devices (and between the two different Tier-k networks), (4) pairing of a Tier-k1 device in a Tier-k1 network with a Tier-k2 device in a Tier-k2 network (e.g. k2=k1, or k2>k1, or k2<k1), and/or sensing measurement coordination between the Tier-k1 device and the Tier-k2 device, and between the Tier-k1 network and the Tier-k network, (5) identification/selection/ designation/configuration/ requirement of a Tier-k aggregator device (which may be the Tier-k AP) to collect/receive/ aggregate/compute/generate/analyze/fuse/report/transmit sensing results/motion information (MI)/ motion statistics(MS)/ spatial-temporal information (STI) (e.g. compute/ aggregate Tier-k sensing results/MI/MS/STI, receive Tier-(k+1) sensing results/ MI/MS/STI), (6) identification/ designation/configuration of a first gateway device (as a first bridge) between the Tier-k network and a higher tier (e.g. Tier-(k+1)) network, and a second gateway device (as a second bridge) between the Tier-k network and a lower tier (e.g. Tier-(k-1)) network, and/or (7) computing/ analyzing/reporting/routing of any sensing results/MI/MS/STI by the aggregator device.

In some embodiments, the configuration of Tier-k devices in configuration item (2), the coordination in configuration item (4), and/or computing/analyzing/ reporting/routing of any sensing results/MI/MS/STI by the Tier-k aggregator device in configuration item (5) and/or configuration item (7) may comprise any of: (a) local reporting of raw wireless sensing measurements (e.g. Tier-k TSCI) in Tier-k sensing receiver (e.g. any Tier-k devices/Tier-k AP in the Tier-k network), or nonlocal reporting of them from the sensing receiver to sensing initiator (e.g. Tier-k AP, the Tier-k aggregator device) (The sensing initiator may be in another network e.g. another same-tier network or a higher-tier or a lower-tier network.); (b) computing of local Tier-k sensing results/MI/MS/STI (e.g. by the Tier-k sensing receiver and/or sensing initiator) based on the Tier-k TSCI, and/or reporting of the local Tier-k sensing results/MI/MS/STI to the Tier-k aggregator device; (c) reception/collection of sensing result/MI/MS/STI (or even TSCI) by the Tier-k aggregator device from another aggregator device in higher Tier or another same-Tier (i.e. another Tier-k) network; (d) computing of Tier-k sensing results/MI/MS/STI (e.g. aggregation/reorganizing of any sensing results/MI/MS/STI) by the Tier-k aggregator device based on analysis/aggregation of any of: local Tier-k sensing results/MI/MS/STI/TSCI, or the received sensing results/-MI/MS/STI/TSCI; (e) reporting of higher-tier sensing results/MI/ MS/STI wirelessly from higher-tier or another same-tier devices (e.g. another Tier-k AP/device, Tier-(k+1) AP/device or Tier-(k+2) AP/device) to the Tier-k AP or the aggregator device in the Tier-k network; (f) reporting of Tier-k sensing results/MI/MS/STI/TSCI from the Tier-k AP/aggregator device to lower-tier devices (e.g. Tier-(k-1)/Tier-(k-1) device/AP/aggregator device).

In some embodiments, the configuring device may designate the Tier-k AP as the Tier-k aggregator device and/or the first gateway device and/or the second gateway device. A software /firmware/application/a set of instruction stored in the Tier-k device (e.g. Tier-k AP, the aggregator device, the gateway device) may be executed by a memory of the Tier-k device to perform any of the above. The sensing result/motion information computed by the Tier-k device may be associated with a task. The configuring device may be associated with the task.

In some embodiments, a Tier-k AP device may form/establish/create the Tier-k network (e.g. WiFi), and may coordinate/ configure some (e.g. zero, one or more) devices in the Tier-k network (e.g. associated or not associated) to become a Tier-k device of the WS-NoN to perform wireless sensing measurements. The Tier-k AP may function as a (local) Tier-k sensing initiator to establish/initiate a Tier-k sensing session (with associated pairing of the Tier-k devices and reporting of local Tier-k sensing results/MI/MS/STI) in the Tier-k network for the WS-NoN. In the process, it may approach any wireless device in the Tier-k network to join the Tier-k sensing session (and/or joining a joint sensing session of the WS-NoN) to perform sensing measurements based on some respective sensing configurations (e.g. bandwidth, roles of sensing transmitter/ receiver, local/nonlocal reporting). Different wireless devices in the Tier-k network may have different sensing configurations.

In some embodiments, pairwise wireless sensing measurements may be performed. Pairing may be performed among the plurality of wireless devices of WS-NoN (or some exterior device(s) exterior to WS-NoN). Many pairs of devices may be identified and configured (e.g. based on sensing plan; by sensing server/master device/Tier-1 AP/Tier-k AP/Tier-k control device) to perform pairwise wireless sensing measurements. Within each pair (called "sensing pair"), a first device (e.g. Type-1 device, transmitter, TX) transmits a wireless (sounding) signal (e.g. null-data packet/NDP, a training of NDP) through a wireless channel (e.g. WiFi, 4G/5G/6G/7G/8G) to the second device (e.g. Type-2 device, receiver, RX). The second device obtains/extracts raw wireless sensing measurements (e.g. CI/TSCI) of the wireless channel based on the received wireless (sounding) signal. Wireless sensing task(s) may be performed (e.g. by the second device, or another device, or jointly by more than one devices) based on the TSCI.

In some embodiments, either or both intra-network sensing and inter-network sensing may be performed. While pairwise wireless sensing measurements may be performed within each Tier-k network (intra-network sensing), they may also be performed between two or more networks (inter-network sensing). For example, inter-network wireless sensing measurements may be performed between a Tier-k1 network and a Tier-k2 network (e.g. k2>k1, or k2<k1, or k2=k1), or between the Tier-k network and an "exterior" network not in the WS-NoN (i.e. exterior to the WS-NoN). For a (intra-network) sensing pair with both devices in a particular Tier-k network, one of the devices may be the Tier-k AP device in the particular Tier-k network, which may be the transmitter or the receiver of the wireless sounding signal. Alternatively, an intra-network sensing pair may have both devices being NOT the Tier-k AP and the wireless (sounding) signal may be transmitted in a peer-to-peer manner (e.g. non-infrastructure mode). For an inter-network sensing pair, additional coordination (synchronization, sounding, triggering, reporting) between the pair of devices and/or between the different networks may be performed.

In some embodiment, within a Tier-k network, intra-network sensing may be performed by an active sensing device and a plurality of passive sensing devices. A plurality of pairing/pairs may be performed/established/formed/designated, each respective pair comprising the active sensing device and a respective one of the plurality of passive sensing device. Within each pair, the active device may transmit a trigger/probe signal (e.g. a unicast packet such as NDP, with "fromDS" flag=0, "toDS" flag=0) to each passive device to trigger/induce the passive device to send a response/ACK signal (e.g. a unicast ACK with "fromDS"=0, "toDS"=0) back to the active device. The response/ACK signal may be used by the active device as sensing/sounding signal to probe the wireless channel and obtain/extract/capture raw (pairwise) wireless sensing measurements (e.g. CI, CSI, CIR, CFR, RSSI) based on the received response/ACK signal. The active device may compute/analyze/process one or more respective (pairwise) analytics/statistics based on the respective raw sensing measurements for some sensing tasks. It may compute one or more joint analytics/statistics, each based on respective two or more (e.g. some or all) of the pairwise analytics/statistics.

The respective wireless sensing signal may be a respective response signal (e.g. ACK) transmitted in response to reception of a respective initial signal (e.g. NDP, trigger signal, request signal, a signal that requires a response signal such as ACK, and/or a unicast signal) sent/transmitted from the active device to the respective passive device before the respective wireless sensing signal. The respective wireless sensing signal from the respective passive device may comprise a respective destination address but not a respective source address such that, upon receiving the respective wireless sensing signal, the active device may have difficulty identifying/knowing which of the plurality of passive devices sent it.

To enable the active device to identify which passive device transmits which wireless sensing signals, the active device may create/use/design/construct/customize/tailor-make a respective special/customized initial signal for each passive device (e.g. the trigger/probe signal with a respective special coded source address of the active device - specially created/customized for each passive device) to be transmitted to the passive device such that the respective wireless sensing signal (the response/ACK signal) transmitted by the passive device to the active device in response to the respective special/customized initial signal would be recognizable/recognized by the active device and the active device may identify the passive device as its source/originator based on the (destination address of) respective wireless sensing signal. For example, instead of using its own MAC address (of active device) as the source address of the special/customized initial signal, the active device may use a respective coded MAC address as the source address for each passive device. The active device may associate/map each coded MAC address with the respective passive device and store/keep/maintain the association/mapping in a memory (e.g. in a database, a look-up table, a list, a mapping). The active device may function in/work in/enter a "sniffer" mode, "monitor" mode or "promiscuous" mode in the Tier-k network (at least temporarily after transmitting the special/customized initial signals). It may monitor all the wireless communications/packets in the Tier-k network in search of any packets/wireless sensing signals with any of the coded MAC addresses as destination address (e.g. by comparing destination address in each packet with the coded MAC address stored in the memory). When a wireless sensing signal/packet with a recognized coded MAC address is received, the active device may use the database/lookup table/list/mapping to identify the originating passive device associated with the coded MAC address, obtain the raw wireless sensing measurement (e.g. CI, CSI, CIR, CFR) and associate it with the identified passive device. Multiple raw wireless sensing measurement associated with the same identified passive device can be gathered/ together to form/construct/build/assemble a time series of measurement (e.g. a time series of CI/CSI/CIR/CFR).

When the active device does not receive the wireless sensing signal from the passive device in a time-out period after sending the initial signal to the passive device, the active device may transmit another initial signal.

The active device may be the Tier-k control device of the Tier-k network and the plurality of passive devices may be searched/found/identified/designated by the active device.

Alternatively, the active device may not be the Tier-k control device of the Tier-k network. The plurality of passive devices may be searched/found/identified/designated by the Tier-k control device. The pairing of the active device and each of the plurality of passive devices may be established/formed/designated by the Tier-k control device.

The active device may/may not be the Tier-k AP device, or the Tier-k Control device.

In some embodiments, a synchronization wireless signal (e.g. an announcement signal) may be communicated before the wireless sounding signal is transmitted from the sensing transmitter to the sensing receiver, or before raw sensing measurements/sensing results are reported. The synchronization wireless signal may be transmitted/received by any of: the sensing transmitter, the sensing receiver, sensing initiator, sensing responder, SBP/proxy sensing initiator device, associated Tier-k1 AP, associated Tier-k2 AP, Tier-k1/Tier-k2 control device, Tier-k1/Tier-k2 aggregator device, or another device.

In one embodiment, the WS-NoN may be terminated. The sensing server may signal the Tier-1 Control (e.g. by sending a termination signal, possibly via internet/back-bone network) to terminate. The Tier-1 Control may signal one or more Tier-2 Control (e.g. by sending respective termination signal, possibly via Tier-1/Tier-2 Aggregators) to terminate. Recursively, a Tier-k Control may signal one (or more) Tier-(k+1) Control to terminate (e.g. by sending respective termination signal, possibly via Tier-k/Tier-(k+1) Aggregators). In another embodiment, the sensing server may signal all the Tier-k Control to terminate (by sending respective termination signal). Any Tier-k Control of a Tier-k network receiving the termination signal may signal other Tier-k sensing devices in the Tier-k network to terminate the sensing operations.

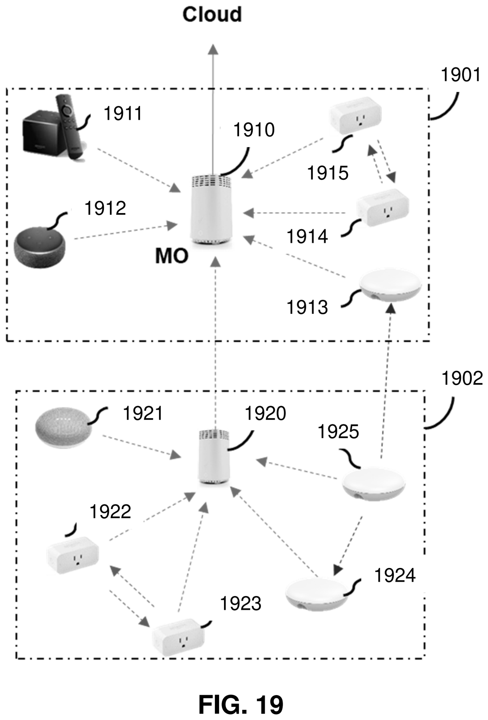

FIG. 19 illustrates an example system for performing wireless sensing in network of networks with inter-network sounding, according to some embodiments of the present disclosure.

As shown in FIG. 19, there may be a "Master Origin" (MO) device 1910 functioning/ designated/configured as Tier-1 aggregator device. The MO device 1910 may/may not function as Tier-1 AP. The MO device 1910 may be configured by a sensing server in the cloud, or a Tier-1 AP if the MO device is not the Tier-1 AP. In some embodiments, the MO device 1910 may also function as a Tier-1 control device, a Tier-1 aggregator device, and/or a Tier-1 gateway device.

In the example shown in FIG. 19, there are five client devices (or bots) 1911, 1912, 1913, 1914, 1915 associated with the MO device 1910, forming a star configuration in a first wireless network 1901. The devices in the first wireless network 1901 may communicate with each other under a first set of network settings. An intra-network sounding may be performed between devices within the first wireless network 1901, e.g. between the MO device 1910 and one of the client devices 1911, 1912, 1913, 1914, 1915, or between two client devices in the first wireless network 1901, e.g. between the client device 1914 and the client device 1915.

In the example shown in FIG. 19, there is a second Origin 1920 functioning as the Tier-2 AP, Tier-2 control device, Tier-2 aggregator device and/or Tier-2 gateway device. The second Origin 1920 can ping the MO device 1910. There are five client devices (or bots) 1921, 1922, 1923, 1924, 1925 associated with the second Origin 1920, forming another star configuration in a second wireless network 1902. The devices in the second wireless network 1902 may communicate with each other under a second set of network settings different from the first set of network settings. For example, the first set of network settings and the second set of network settings may be different because they include at least one of: different carrier frequency bands, different bandwidths, different modulations, different standards, or different coverages. An intra-network sounding may be performed between devices within the second wireless network 1902, e.g. between the second Origin 1920 and one of the client devices 1921, 1922, 1923, 1924, 1925, or between two client devices in the second wireless network 1902, e.g. between the client device 1922 and the client device 1923.

In the example shown in FIG. 19, the Tier-2 client device 1925 in the second wireless network 1902 sends a sounding signal to the Tier-1 client device 1913 in the first wireless network 1901. This is an inter-network sounding between the two networks 1901, 1902 having different settings.

In some examples, a sensing server may know all the networking setting details (e.g. carrier frequency/frequency band/bandwidth) of the first wireless network 1901. The sensing server may inform the Tier-2 client device 1925 (associated with the second wireless network 1902) the networking setting details of the first wireless network 1901. With these networking setting details of the first wireless network 1901, the Tier-2 client device 1925 can listen to traffic of the first wireless network 1901. When the first wireless network 1901 has no traffic or a low traffic (lower than a predetermined threshold), the Tier-2 client device 1925 can ping the Tier-1 client device 1913 using the networking setting details of the first wireless network 1901.

In addition, a same device can perform both inter-network sounding and intra-network sounding. For example, the Tier-2 client device 1925 can send an inter-network sounding signal to the Tier-1 client device 1913, and can also send an intra-network sounding signal to the Tier-2 client device 1924.

In some embodiments, there may be multiple Origin devices (such as D10(MO), D21(O21), D22(O22), D31(O31), D41(O41) in FIG. 6) functioning/designated/configured as Tier-k AP/control/aggregator/gateway devices, for any k>=1. That is, for any k>=1, the WS-NoN may comprise one or more Tier-k Origin devices, each being the Tier-k AP, Tier-k control device, Tier-k aggregator device and/or Tier-k gateway device in a respective Tier-k network.

While different Tier-k networks have different network settings for different k values, the WS-NoN supports not only intra-network sounding within a same network, but also inter-network sounding between different networks. In some examples, a Tier-k client device can ping a Tier-(k-1) client device using the Tier-(k-1) network setting. In some examples, a Tier-(k-1) client device can ping a Tier-k client device using the Tier-k network setting.

In some embodiments, an intra-network sounding in links in a first network may cover a first zone in the venue very well, and an intra-network sounding in links in a second network may cover a second zone in the venue very well. However, some zones or areas between the first zone and the second zone may not be sensed well by either intra-network sounding. Instead, the in-between zones or areas may be better sensed using the inter-network sounding disclosed herein.

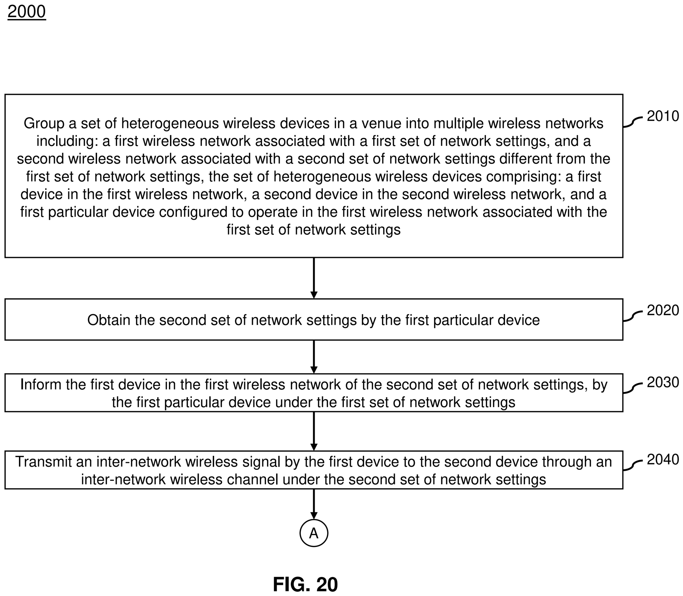

FIG. 20 illustrates a flow chart of an example method 2000 for performing inter-network sounding, according to some embodiments of the present disclosure. In various embodiments, the method 2000 can be performed by the systems disclosed above. At operation 2010, a set of heterogeneous wireless devices in a venue are grouped into multiple wireless networks including: a first wireless network associated with a first set of network settings, and a second wireless network associated with a second set of network settings different from the first set of network settings. The set of heterogeneous wireless devices comprise: a first device in the first wireless network, a second device in the second wireless network, and a first particular device configured to operate in the first wireless network associated with the first set of network settings. At operation 2020, the second set of network settings is obtained by the first particular device. At operation 2030, the first device in the first wireless network informed of the second set of network settings, by the first particular device under the first set of network settings. At operation 2040, an inter-network wireless signal is transmitted by the first device to the second device through an inter-network wireless channel under the second set of network settings. The order of the operations in FIG. 20 may be changed according to various embodiments of the present teaching.

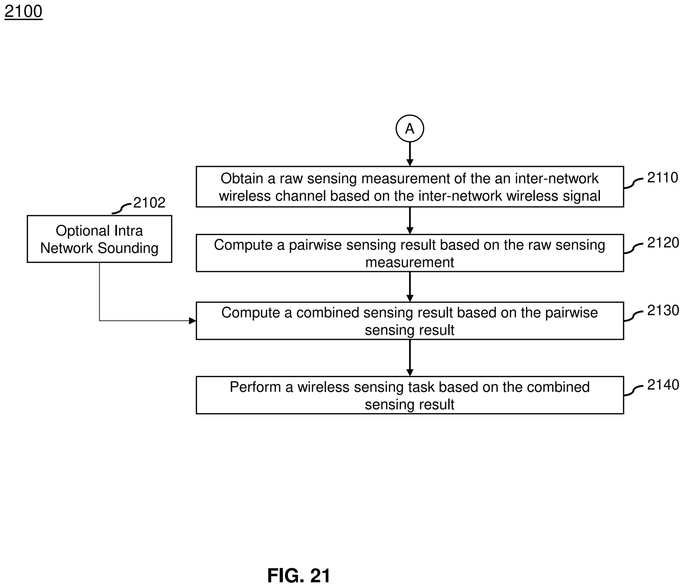

FIG. 21 illustrates a flow chart of an example method 2100 for performing wireless sensing in network of networks with inter-network sounding, according to some embodiments of the present disclosure. In various embodiments, the method 2100 can be performed by the systems disclosed above. At operation 2110, a raw sensing measurement of the inter-network wireless channel is obtained based on the inter-network wireless signal. At operation 2120, a pairwise sensing result is computed based on the raw sensing measurement. At operation 2130, a combined sensing result is computed based on the pairwise sensing result. Optionally, the combined sensing result is computed based on both the pairwise sensing result from the inter-network sounding following the process in FIG. 20, and a pairwise sensing result from an intra-network sounding 2102, which may follow the process in FIG. 8 (e.g. operations 802-808). At operation 2140, a wireless sensing task is performed based on the combined sensing result. The order of the operations in FIG. 21 may be changed according to various embodiments of the present teaching.

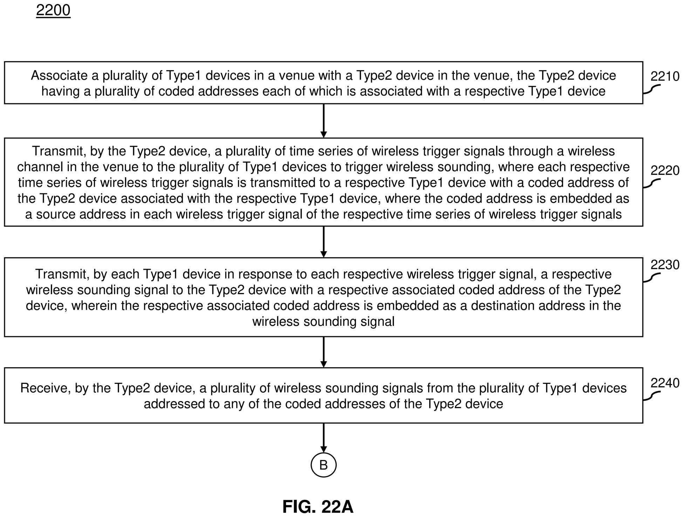

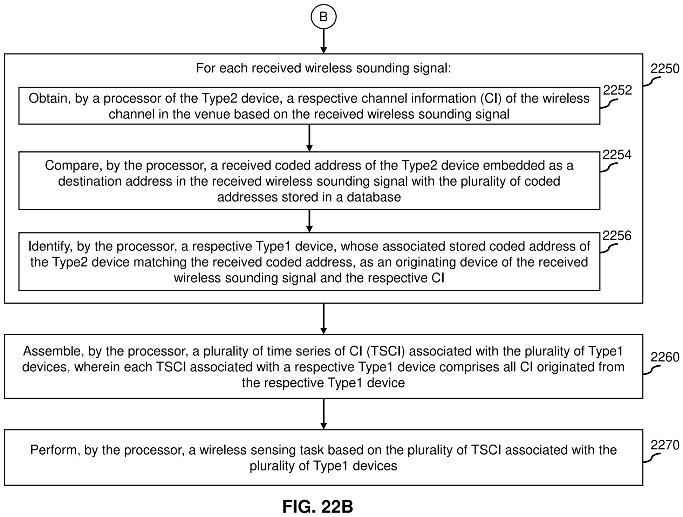

FIG. 22A and FIG. 22B illustrate a flow chart of an example method 2200 for performing wireless sensing with coded addresses, according to some embodiments of the present disclosure. In various embodiments, the method 2200 can be performed by the systems disclosed above. At operation 2210, a plurality of Type1 devices (each with a respective "real" address) in a venue is associated with a Type2 device (with a "real" address) in the venue. The Type2 device has/maintains a plurality of coded (i.e. not real) addresses for itself, which are different from its real address, and associates each with a respective Type1 device. At operation 2220, the Type2 device transmits a plurality of time series of wireless trigger signals through a wireless channel in the venue to the plurality of Type1 devices to trigger wireless sounding from the Type1 devices. Each respective time series of wireless trigger signals is transmitted to a respective Type1 device with a respective destination address being the real/unmodified address of the respective Type1 device and a respective source address being a respective coded/modified address of the Type2 device associated with the respective Type1 device. At operation 2230, each Type1 device transmits, in response to each respective wireless trigger signal, a respective wireless sounding signal to the Type2 device with respective destination address being the coded/modified address of the Type2 device (which is the respective source address in the respective wireless trigger signal). The wireless sounding signal may be a signal packet without source address (e.g. an ACK packet). In the absence of source address in the wireless sounding signal, the Type2 device may need a way to identify which of the Type1 devices is the source/originating Type1 device transmitting the wireless sounding signal (e.g. in order to identify/assemble/construct the TSCI associated with the source Type1 device). The Type2 device may decode the received coded/modified address to find out the source Type1 device. At operation 2240, the Type2 device receives a plurality of wireless sounding signals from the plurality of Type1 devices addressed to any of the coded addresses of the Type2 device.

The operation 2250 includes multiple sub-operations 2252-2256 performed for each received wireless sounding signal, in this embodiment. At sub-operation 2252, a respective channel information (CI) of the wireless channel is obtained by a processor of the Type2 device in the venue based on the received wireless sounding signal. At sub-operation 2254, the processor compares the destination address embedded in the received wireless sounding signal, which is a received coded address of the Type2 device, with the plurality of coded addresses stored in a database. At sub-operation 2256, the processor identifies a respective Type1 device, whose associated stored coded address of the Type2 device matching the received coded address, as an originating/source device of the received wireless sounding signal and the respective CI. At operation 2260, the processor assembles a plurality of time series of CI (TSCI) associated with the plurality of Type1 devices. Each TSCI associated with a respective Type1 device comprises all CI originated from the respective Type1 device. At operation 2270, the processor performs a wireless sensing task based on the plurality of TSCI associated with the plurality of Type1 devices.

The following numbered clauses provide examples for wireless sensing in network of networks with inter-network sounding.

Clause 5315_F1. A system for wireless sensing, comprising: a set of heterogeneous wireless devices in a venue, wherein: the set of heterogeneous wireless devices comprise: a first device, a second device, and a first particular device, the first device in a first wireless network associated with a first set of network settings, the second device in a second wireless network associated with a second set of network settings different from the first set of network settings, the first particular device is configured to: operate in the first wireless network associated with the first set of network settings, obtain the second set of network settings, and inform the first device in the first wireless network of the second set of network settings under the first set of network settings, the first device is further configured to transmit an inter-network wireless signal to the second device through an inter-network wireless channel under the second set of network settings; and a processor configured for: obtaining a raw sensing measurement of the an inter-network wireless channel based on the an inter-network wireless signal, computing a pairwise sensing result based on the raw sensing measurement, and computing a combined sensing result based on the pairwise sensing result, wherein the set of heterogeneous wireless devices is configured to perform a wireless sensing task based on the combined sensing result.

Clause 5315_F2. The system of clause 5315_F1, wherein the first particular device is configured to: operate in the second wireless network associated with the second set of network settings.

Clause 5315_F3. The system of clause 5315_F2, wherein: the set of heterogeneous wireless devices further comprise a second particular device configured to operate in the second wireless network associated with the second set of network settings; and the first particular device is configured to obtain the second set of network settings from the second particular device.

Clause 5315_F4. The system of clause 5315_F3, wherein: the first set of network settings and the second set of network settings include at least one of: different carrier frequency bands, different bandwidths, different modulations, different standards, or different coverages.

Clause 5315_F5. The system of clause 5315_F4, wherein the first device is further configured to: listen to a traffic of the second wireless network under the second set of network settings; compare the traffic of the second wireless network to a predetermined threshold; and transmit the an inter-network wireless signal to the second device through the an inter-network wireless channel in accordance with a determination that the traffic of the second wireless network is lower than the predetermined threshold.

Clause 5315_F6. The system of clause 5315_F5, wherein: the first wireless network is associated with a first zone of the venue; the second wireless network is associated with a second zone of the venue; and the wireless sensing task is performed for a zone between the first zone and the second zone in the venue.

Clause 5315_F7. The system of clause 5315_F6, wherein: the set of heterogeneous wireless devices further comprise a third device in the first wireless network; the first device is further configured to transmit a first intra-network wireless signal to the third device through a first intra-network wireless channel under the first set of network settings; the third device is configured to obtain a first intra-network sensing measurement of the first intra-network wireless channel, and obtain a first intra-network sensing result computed based on the first intra-network sensing measurement; and the combined sensing result is computed based on the pairwise sensing result and the first intra-network sensing result.

Clause 5315_F8. The system of clause 5315_F7, wherein: the set of heterogeneous wireless devices further comprise a fourth device in the second wireless network; the fourth device is configured to transmit a second intra-network wireless signal to the second device through a second intra-network wireless channel under the second set of network settings; the second device is configured to obtain a second intra-network sensing measurement of the second intra-network wireless channel, and obtain a second intra-network sensing result computed based on the second intra-network sensing measurement; and the combined sensing result is computed based on an aggregation of: the pairwise sensing result, the first intra-network sensing result, and the second intra-network sensing result.

Clause 5315_F9. The system of clause 5315_F8, wherein: a protocol of the first wireless network or the second wireless network comprises at least one of: a WiFi standard, a UWB standard, a WiMax standard, an IEEE standard, an IEEE 802 standard, an IEEE 802.11 standard, an IEEE 802.11bf standard, an 802.15 standard, an 802.15.4 standard, or an 802.16 standard.

Clause 5315_F10. The system of clause 5315_F9, wherein: the inter-network wireless signal is transmitted based on a trigger signal received from an access point (AP) in the first wireless network, based on the protocol.

Clause 5315_F11. The system of clause 5315_F9, wherein: the inter-network wireless signal is transmitted based on a trigger signal received from an access point (AP) in the second wireless network, based on the protocol.

Clause 5315_F12. The system of clause 5315_F9, wherein: the set of heterogeneous wireless devices are grouped into N+1 groups, each group comprising a respective subset of the set of heterogeneous wireless devices; N is an integer greater than or equal to one; each heterogeneous wireless device is in at least one of the N+1 groups; the N+1 groups are arranged in a multi-tier group structure such that each group is associated with a respective wireless network at a corresponding tier; and each tier is associated with at least one group.

Clause 5315_F13. The system of clause 5315_F12, wherein: heterogeneous wireless devices in any Tier-k network are configured to report sensing results obtained in the Tier-k network to a respective heterogeneous wireless device in a Tier-(k-1) network via a gateway device between the Tier-k network and the Tier-(k-1) network; k is an integer greater than one; and the reported sensing results comprise at least one of: a combined sensing result, a pairwise sensing result, or a raw sensing measurement.

Clause 5315_F14. The system of clause 5315_F13, wherein: the first wireless network is associated with a Tier-k group of the N+1 groups; and the second wireless network is associated with a Tier-(k-1) group of the N+1 groups.

Clause 5315_F15. The system of clause 5315_F14, wherein the first particular device serves as at least one of: a Tier-k AP of the first wireless network associated with the Tier-k group; a Tier-k control device configured to search for and designate an unknown and available wireless device as a Tier-k sensing device in the first wireless network associated with the Tier-k group; a Tier-k aggregator device configured to aggregate sensing results from Tier-k and any tier higher than k; or a Tier-k gateway device configured to enable a communicative coupling of a device in the first wireless network associated with the Tier-k group with another device in another tier.

Clause 5315_F16. The system of clause 5315_F13, wherein: the first wireless network is associated with a Tier-(k-1) group of the N+1 groups; and the second wireless network is associated with a Tier-k group of the N+1 groups.

Clause 5315_F17. The system of clause 5315_F16, wherein the first particular device serves as at least one of: a Tier-(k-1) AP of the first wireless network associated with the Tier-(k-1) group; a Tier-(k-1) control device configured to search for and designate an unknown and available wireless device as a Tier-(k-1) sensing device in the first wireless network associated with the Tier-(k-1) group; a Tier-(k-1) aggregator device configured to aggregate sensing results from Tier-(k-1) and any tier higher than (k-1); or a Tier-(k-1) gateway device configured to enable a communicative coupling of a device in the first wireless network associated with the Tier-(k-1) group with another device in another tier.

Clause 5315_F18. The system of clause 5315_F13, wherein: a synchronization wireless signal is communicated between the first device in the first wireless network and the second device in the second wireless network, before the inter-network wireless signal is transmitted.

Clause 5315_F19. The system of clause 5315_F18, wherein: a synchronization wireless signal is communicated between the first wireless network and the second wireless network, before the sensing results are reported.

Clause 5315_F20. The system of clause 5315_F19, wherein the synchronization wireless signal is transmitted by one of: a sensing transmitter, a sensing receiver, a sensing initiator, a sensing responder, a proxy sensing initiator device, an associated AP, an associated control device, or an associated aggregator device.

Clause 5315_F21. The system of clause 5315_F20, wherein the first particular device is configured by at least one of: a cloud server or an AP of the first wireless network.

Clause 5315_A1. A method of wireless sensing using coded addresses to identify originating devices: generating and storing, by a processor of a Type2 heterogeneous wireless device in a venue, a plurality of coded addresses of the Type2 device; associating the plurality of coded addresses of the Type2 device with a plurality of Type1 heterogeneous wireless device in the venue, each coded address being associated with a respective Type1 device; transmitting, by the Type2 device, a plurality of wireless trigger signals through a wireless channel in the venue to the plurality of Type1 devices to trigger transmission of wireless sounding signals from the Type1 devices to the Type2 device, each wireless trigger signal transmitted to a respective Type1 device with a respective coded address of the Type2 device associated with the respective Type1 device embedded as respective source address in the wireless trigger signal; transmitting, by each Type1 device in response to respective wireless trigger signal, a respective wireless sounding signal to the Type2 device with the respective associated coded address of the Type2 device embedded as destination address in the wireless sounding signal; receiving, by the Type2 device, a plurality of wireless sounding signals from the plurality of Type1 devices addressed to any of the coded addresses of the Type2 device; for each received wireless sounding signal: obtaining, by the processor, a respective channel information (CI) of a wireless channel of the venue based on the received wireless sounding signal, comparing, by the processor, a received coded address of the Type2 device embedded as destination address in the received wireless sounding signal with the stored coded addresses of the Type2 device, and identifying, by the processor, a respective Type1 device, whose associated stored coded address of the Type2 device matching the received coded address, as an originating device of the received wireless sounding signal and the respective CI; performing, by the processor, a wireless sensing task based on the plurality of CI associated with the plurality of respective Type1 device.

Clause 5315_A2. The method of wireless sensing using coded addresses to identify originating devices of clause 5315_A1, further comprise: computing, by the processor, a plurality of pairwise sensing analytics associated with the plurality of Type1 devices based on the plurality of TSCI, each pairwise sensing result based on a respective TSCI; and performing the wireless sensing task based on the plurality of pairwise sensing analytics.

Clause 5315_A3. The method of wireless sensing using coded addresses to identify originating devices of clause 5315_A1, further comprising: storing in a database the association between each coded address of the Type2 device and an identity (ID) of the associated Type1 device.

Clause 5315_A4. The method of wireless sensing using coded addresses to identify originating devices of clause 5315_A1, wherein: different coded addresses are used for different passive devices.

Clause 5315_A5. The method of wireless sensing using coded addresses to identify originating devices of clause 5315_A1: wherein each of the wireless trigger signals and the wireless sounding signals is a unicast signal.

Clause 5315_A6. The method of wireless sensing using coded addresses to identify originating devices of clause 5315_A1, further comprising: transmitting, by the Type2 device, a plurality of time series of wireless trigger signals to the plurality of Type1 devices, each time series of wireless trigger signal transmitted to a respective Type1 device with the coded address of the Type2 device associated with the respective Type1 device embedded as source address in each wireless trigger signal in the time series of wireless trigger signals; transmitting, by each Type1 device in response to each respective wireless trigger signal, a respective wireless sounding signal to the Type2 device with the respective associated coded address of the Type2 device embedded as destination address in the wireless sounding signal; assembling, by the processor, a plurality of time series of CI (TSCI) associated with the plurality of Type1 devices, each TSCI associated with a respective Type1 device comprising all CI with identified originating Type1 device being the respective Type1 device; performing, by the processor, a wireless sensing task based on the plurality of TSCI associated with the plurality of respective Type1 device.

Clause 5315_A7. The method of wireless sensing using coded addresses to identify originating devices of clause 5315_A1, further comprising: generating the plurality of coded addresses of the Type2 device based on a reference address of the Type2 device.

Clause 5315_A8. The method of wireless sensing using coded addresses to identify originating devices of clause 5315_A7, further comprising: generating, by the processor, a plurality of encoding keys for encoding the reference address; and generating the plurality of coded addresses of the Type2 device by encoding the reference address with the plurality of encoding keys, each coded address generated by encoding the reference address with a respective encoding key.

Clause 5315_A9. The method of wireless sensing using coded addresses to identify originating devices of clause 5315_A8, wherein: the reference address is a MAC address of the Type2 device.

Clause 5315_A10. The method of wireless sensing using coded addresses to identify originating devices of clause 5315_A9, wherein: each coded address is a MAC address.

Clause 5315_A11. The method of wireless sensing using coded addresses to identify originating devices of clause 5315_A10, wherein: each coded address is a legitimate MAC address in proper MAC address format.

Clause 5315_A12. The method of wireless sensing using coded addresses to identify originating devices of clause 5315_A11, wherein: the Type2 device is configured to operate in an operating mode such that it monitors all the communications in a wireless network, wherein the operating mode comprises at least one of: a sniffer mode, a monitor mode, or a promiscuous mode.

Clause 5315_A13. The method of wireless sensing using coded addresses to identify originating devices of clause 5315_A12, wherein the Type2 device is configured to: monitor the destination address of each packet being communicated in the wireless network in search of communications to any of the coded addresses of the Type2 device; compare the destination address of the packet with all the stored coded addresses used as source addresses in the wireless trigger signals transmitted from the Type2 device to the plurality of Type1 devices; recognize the destination address as a particular coded address among those used for the Type1 devices based on the comparing.

Clause 5315_A14. The method of wireless sensing using coded addresses to identify originating devices of clause 5315_A13, wherein the Type2 device is configured to: for each stored coded address of the Type2 device generated using a respective encoding key, compute a testing decoded address by decoding the destination address based on a respective decoding key associated with the respective encoding key, compare the testing decoded address with the reference address of the Type2 device, recognize the particular coded address when the testing decoded address matches the reference address.

Clause 5315_A15. The method of wireless sensing using coded addresses to identify originating devices of clause 5315_A14, wherein: a part of an encoding key is generated randomly.

Clause 5315_A16. The method of wireless sensing using coded addresses to identify originating devices of clause 5315_A14, wherein: the respective decoding key is the respective encoding key.

Clause 5315_A17. The method of wireless sensing using coded addresses to identify originating devices of clause 5315_A11, wherein: one coded address is the reference address.

Clause 5315_A18. The method of wireless sensing using coded addresses to identify originating devices of clause 5315_A8, wherein: each coded address of the Type2 device is obtained by a reversible transformation of the reference address of the Type2 device based on the encoding key.

Clause 5315_A19. The method of wireless sensing using coded addresses to identify originating devices of clause 5315_A18, wherein: the reversible transformation comprise any of: a basic logical operation comprising one of: AND, OR, XOR, or negation, a grouping operation comprising one of: rotation, shifting, permutation, combination, scrambling, an addition, a subtraction, a multiplication, a division, an arrangement, a permutation, a combination, a bit-wise logical operation, a byte-wise logical operation, a word-wise logical operation, or a multi-byte logical operation.

Clause 5315_A20. A method of wireless sensing using coded addresses to identify originating devices: determining a reference address of a Type2 heterogeneous wireless device in a venue by a processor of the Type2 device based on a set of instructions; generating, by the processor, a plurality of encoding keys for encoding the reference address; generating, by the processor, a plurality of coded addresses of the Type2 device by encoding the reference address with the plurality of encoding keys, each coded address generated by encoding the reference address with a respective encoding key; associating the plurality of coded addresses of the Type2 device with a plurality of Type1 heterogeneous wireless device in the venue, each coded address being associated with a respective Type1 device; storing in a database the association between each coded addresses and an identity (ID) of the associated Type1 device; transmitting, by the Type2 device, a plurality of time series of wireless trigger signals through a wireless channel in the venue to the plurality of Type1 devices to trigger transmission of wireless sounding signals from the Type1 devices to the Type2 device, each time series of wireless trigger signals transmitted to a respective Type1 device with the coded address of the Type2 device associated with the respective Type1 device embedded as source address in each wireless trigger signal in the time series of wireless trigger signals; transmitting, by each Type1 device in response to each respective wireless trigger signal, a respective wireless sounding signal to the Type2 device with the respective associated coded address of the Type2 device embedded as destination address in the wireless sounding signal; receiving, by the Type2 device, a plurality of wireless sounding signals from the plurality of Type1 devices addressed to any of the coded addresses of the Type2 device; for each received wireless sounding signal: obtaining, by the processor, a respective channel information (CI) of a wireless channel of the venue based on the received wireless sounding signal, comparing, by the processor, a received coded address of the Type2 device embedded as destination address in the received wireless sounding signal with the stored coded addresses of the Type2 device in the database, and identifying, by the processor, a respective Type1 device, whose associated stored coded address of the Type2 device in the database matching the received coded address, as an originating device of the received wireless sounding signal and the respective CI; assembling, by the processor, a plurality of time series of CI (TSCI) associated with the plurality of Type1 devices, each TSCI associated with a respective Type1 device comprising all CI with identified originating Type1 device being the respective Type1 device; performing, by the processor, a wireless sensing task based on the plurality of TSCI associated with the plurality of respective Type1 device.

Clause 5315_B1. A method/system/device of device selection for wireless sensing, comprising: in a device selection phase, selecting for a wireless sensing task a first number of heterogeneous wireless sensing devices from a second number of heterogeneous wireless candidate devices based on a selection criterion by: communicating a first plurality of wireless sounding signals among the second number of candidate devices and a heterogeneous wireless active device in a wireless network, wherein each wireless sounding signal is transmitted either from a respective candidate device to the active device or from the active device to the respective candidate device, wherein any active device communicates with a sensing server, obtaining by a control device of the wireless network a first plurality of raw wireless sensing measurements of the wireless channel of the wireless network based on the first plurality of received wireless sounding signals, computing a task-specific selection score associated with the wireless sensing task for each of the second number of candidate devices based on the plurality of raw wireless sensing measurements, and comparing the second number of task-specific selection scores of all candidate devices, and selecting the first number of sensing devices from the second number of candidate devices based on a selection criterion associated with the comparison of the second number of task-specific selection scores of all candidate devices, wherein the first number is not greater than the second number; in a wireless sensing phase, performing the wireless sensing task using the active device and the first number by: communicating a second plurality of wireless sounding signals between the first number of sensing devices and the active device, wherein each wireless sounding signal is transmitted either from a respective sensing device to the active device or from the active device to the respective sensing device, obtaining a second plurality of raw wireless sensing measurements of the wireless channel of the wireless network based on the second plurality of received wireless sounding signals, computing a respective plurality of motion statistics based on raw wireless sensing measurements associated with each sensing device, perform the wireless sensing task based on all the motion statistics.

In some embodiments, device selection is decided by a control device (e.g. Tier-k control device) of the wireless network (e.g. Tier-k wireless network).

Clause 5315_B2. The method of device selection for wireless sensing of clause 5315_B1, further comprising: selecting the first number of sensing devices by a control device in the wireless network based on the selection criterion in the device selection phase.

Clause 5315_B3. The method of device selection for wireless sensing of clause 5315_B1 or clause 5315_B2, further comprising: selecting the first number of sensing devices based on a limitation of one of: the network, the active device, the candidate devices, the control device, or an access point of the network.

Clause 5315_B4. The method of device selection for wireless sensing of clause 5315_B3, further comprising: determining a quantity of the sensing devices to be the first number based on the limitation of the network.

Clause 5315_B5. The method of device selection for wireless sensing of clause 5315_B2, further comprising: discovering the second number of candidate devices in the wireless network by the control device.

Clause 5315_B6. The method of device selection for wireless sensing of clause 5315_B5, further comprising: discovering a network address of each of second number of candidate devices in the wireless network by the control device.

Clause 5315_B7. The method of device selection for wireless sensing of clause 5315_B5, further comprising: discovering an information of a particular candidate devices in the wireless network by the control device, wherein the information comprises at least one of: a network address, a MAC address, an internet protocol (IP) address, an identifier (ID), a network ID, a multicast ID, a service set ID (SSID), an association ID (AID), a unique ID (UID), a universally unique ID (UUID), a globally unique ID (GUID), an ASID, a USID, a label, a tag, a representation, an index, a name, a device product name, a host name, a client name, a identifying number, an alphanumeric ID, a brand, a model, a device ID, a vendor ID, a vendor class ID, a serial number, a host ID, or a client ID.

Clause 5315_B8. The method of device selection for wireless sensing of clause 5315_B2, further comprising: pairing each of the first number of sensing devices with the active device for the wireless sensing task by the control device; wherein each motion statistics associated with each sensing device is a pairwise motion statistics associated with the sensing device paired with the active device.

Clause 5315_B9. The method of device selection for wireless sensing of clause 5315_B8, further comprising: recording the pairing of each sensing device with the active device in a database by the control device.

Clause 5315_B10. The method of device selection for wireless sensing of clause 5315_B6, further comprising: configuring the active device by the control device to pair with each of the first number of sensing devices in the wireless sensing phase.

Clause 5315_B11. The method of device selection for wireless sensing of clause 5315_B8, further comprising: reporting the pairing of each sensing device with the active device to a sensing server.

Clause 5315_B12. The method of device selection for wireless sensing of clause 5315_B2, wherein: the active device is the control device.

Clause 5315_B13. The method of device selection for wireless sensing of clause 5315_B1, wherein: the active device is an access point device (AP) of the wireless network.

Clause 5315_C1. A system for wireless sensing, comprising: a set of heterogeneous wireless devices in a venue, wherein: the set of heterogeneous wireless devices comprise: a first device, and a second device, the first device is associated with a first wireless network and communicates with other devices in the first wireless network through a first wireless channel using a first set of channel settings of the first wireless network, the second device associated with a second wireless network and communicates with other devices in the second wireless network through a second wireless channel using a second set of channel settings of the second wireless network different from the first set of channel settings, the second device is not associated with the first wireless network, the second device in the second wireless network is configured to: obtain the first set of channel settings, and transmit an inter-network wireless signal directly to the first device in the first wireless network through the first wireless channel using the first set of channel settings, the first device in the first wireless network is configured to: receive the inter-network wireless signal directly from the second device through the first wireless channel, wherein the transmitted and received inter-network wireless signals are different due to a multipath environment of the first wireless channel and a motion of an object in the venue, obtain a first raw sensing measurement of the first wireless channel based on the received inter-network wireless signal, compute a first pairwise sensing result based on the first raw sensing measurement, and perform a wireless sensing task by monitor the motion of the object individually based on the first pairwise sensing result.

Clause 5315_C2. The system of clause 5315_C1, wherein: the set of heterogeneous wireless device further comprise a first particular device associated with the first wireless network; the first particular device of the first wireless network is configured to: receive pairwise sensing results computed locally by devices in the first wireless network based on respective raw sensing measurements of the first wireless channel obtained by the devices, compute a first combined sensing result based on the received pairwise sensing results computed locally in the first wireless network, wherein the received pairwise sensing results comprise the first pairwise sensing result, and perform the wireless sensing task by monitoring the motion of the object jointly based on the received pairwise sensing results computed locally in the first wireless network and the first combined sensing result.

Clause 5315_C3. The system of clause 5315_C2, wherein: the received pairwise sensing results comprise a pairwise sensing result computed by the first particular device based on raw sensing measurement of the first wireless channel obtained by the first particular device based on a received wireless signal.

Clause 5315_C4. The system of clause 5315_C2, wherein: any combined sensing result comprises a respective collection of respective sensing analytics.

Clause 5315_C5. The system of clause 5315_C2, wherein: the first particular device is further configured to: perform an analysis of the received pairwise sensing results computed locally in the first wireless network, and compute the combined sensing result of the first wireless network based on the analysis.

Clause 5315_C6. The system of clause 5315_C2, wherein: the first particular device is further configured to: receive other combined sensing results computed in a first set of other wireless networks, compute a first cumulative combined sensing result based on the received pairwise sensing results computed locally in the first wireless network, the first combined sensing result, and the received other combined sensing results computed in the first set of other wireless networks, perform the wireless sensing task by monitoring the motion of the object jointly based on the received pairwise sensing results computed locally in the first wireless network, the first combined sensing results, the received other combined sensing results computed in the first set of other wireless networks, and the first cumulative combined sensing result.

Clause 5315_C7. The system of clause 5315_C6, wherein: the set of heterogeneous wireless device further comprise a second particular device associated with the second wireless network; the second particular device of the second wireless network is configured to: receive pairwise sensing results computed locally by devices in the second wireless network based on respective raw sensing measurements of the second wireless channel obtained by the devices, and other combined sensing results computed in a second set of other wireless networks, compute a second combined sensing result based on the received pairwise sensing results computed locally in the second wireless network, compute a second cumulative combined sensing result based on the received pairwise sensing results computed locally in the second wireless network, the second combined sensing result, and the received other combined sensing results computed in the second set of other wireless networks, perform the wireless sensing task by monitoring the motion of the object jointly based on any of: the received pairwise sensing results computed locally in the second wireless network, the second combined sensing results, the received other combined sensing results computed in the second set of other wireless networks, and the second cumulative combined sensing result.

Clause 5315_C8. The system of clause 5315_C6, wherein: the second set of other wireless networks comprise the first wireless network, the other combined sensing results computed in the second set of other wireless networks comprise at least one of: the first combined sensing results or the first cumulative combined sensing results, the first particular device is further configured to report the first combined sensing results or the first cumulative combined sensing results to the second particular device.

Clause 5315_C9. The system of clause 5315_C6, wherein: the first set of other wireless networks comprise the second wireless network, the other combined sensing results computed in the first set of other wireless networks comprise at least one of: the second combined sensing results or the second cumulative combined sensing results, the second particular device is further configured to report the second combined sensing results or the second cumulative combined sensing results to the first particular device.

Clause 5315_C10. The system of clause 5315_C4, wherein: the first particular device is further configured to: perform an analysis of the received pairwise sensing results computed locally in the first wireless network, the first combined sensing result, and the received other combined sensing results computed in the other wireless networks, and compute the first cumulative combined sensing result based on the analysis.

Clause 5315_C11. The system of clause 5315_C2, wherein: the set of heterogeneous wireless devices comprise: a third device and a fourth device, both the third device and the fourth devices are associated with the second wireless network, the third device is configured to transmit an intra-network wireless signal to the fourth device through the second wireless channel using the second set of channel settings, the fourth device is configured to: receive the intra-network wireless signal from the third device through the second wireless channel, wherein the transmitted and received intra-network wireless signals are different due to the multipath environment of the second wireless channel and the motion of the object in the venue, obtain a second raw sensing measurement of the second wireless channel based on the received intra-network wireless signal, compute a second pairwise sensing result based on the second raw sensing measurement, and perform a wireless sensing task by monitor the motion of the object individually based on the second pairwise sensing result, the second pairwise sensing result is one of the any other pairwise sensing results computed by devices in the second wireless network such that the combined sensing result is computed based on the second pairwise sensing results.

Clause 5315_C 12. The system of clause 5315_C6, wherein: the second device is one of: the third device or the fourth device.

Clause 5315_C13. The system of clause 5315_C2, wherein: the set of heterogeneous wireless devices comprise: a fifth device and a sixth device, both the fifth device and the sixth devices are associated with the first wireless network, the fifth device is configured to transmit an intra-network wireless signal to the sixth device through the first wireless channel using the first set of channel settings, the sixth device is configured to: receive the intra-network wireless signal from the fifth device through the first wireless channel, wherein the transmitted and received intra-network wireless signals are different due to the multipath environment of the first wireless channel and the motion of the object in the venue, obtain a third raw sensing measurement of the first wireless channel based on the received intra-network wireless signal, compute a second pairwise sensing result based on the second raw sensing measurement, and perform a wireless sensing task by monitor the motion of the object individually based on the second pairwise sensing result, the second pairwise sensing result is one of the any other pairwise sensing results computed by devices in the second wireless network such that the combined sensing result is computed based on the second pairwise sensing results.

Clause 5315_C 14. The system of clause 5315_C6, wherein: the first device is one of: the fifth device or the sixth device such that it participates in wireless sensing using both inter-network sound and intra-network.

Clause 5315_C15. The system of clause 5315_C1, further comprises a first particular device associated with the first wireless network, wherein: a processor of the first particular device is configured to: compute a combined sensing result based on the pairwise sensing result computed by the second device and any other pairwise sensing results computed by devices in the second wireless network based on respective raw sensing measurements of the second wireless channel obtained by the devices, and perform the wireless sensing task by monitoring the motion of the object jointly based on all the pairwise sensing results computed in the second wireless network and the combined sensing results.

Clause 5315_C16. The system of clause 5315_C1, wherein: the first set of channel settings and the second set of channel settings include at least one of: different carrier frequency bands, different bandwidths, different modulations, different standards, or different coverages.

Clause 5315_C17. The system of clause 5315_C11, wherein the first device is further configured to: listen to a traffic of the second wireless network under the second set of network settings; compare a quantity of the traffic of the second wireless network to a predetermined threshold; and transmit the inter-network wireless signal to the second device through the second wireless channel in accordance with a determination that the quantity of the traffic of the second wireless network is lower than the predetermined threshold.

Clause 5315_C18. The system of clause 5315_C12, wherein: the venue is partitioned into zones associated with the wireless networks; the first wireless network is associated with a first zone of the venue for which the wireless sensing task is performed based on the pairwise sensing results computed by devices in the first wireless network; the second wireless network is associated with a second zone of the venue for which the wireless sensing task is performed based on pairwise sensing results computed by devices in the second wireless network; and the first device of the first wireless network and the second device of the second wireless network is associated with a third zone of the venue, between the first zone and the second zone, for which the wireless sensing task is performed based on the pairwise sensing results computed based on the inter-network wireless signal communicated between the first device and the second device.

Clause 5315_C19. The system of clause 5315_C13, wherein: the venue is partitioned into overlapping zones; the first zone and the second zone overlap in the third zone.

Clause 5315_C20. The system of clause 5315_C7, further comprising: a sensing server, wherein: the first device, the second device, the first particular device and the second particular device are active sensing devices that are communicatively coupled with the sensing server, and are configured by the sensing server.

Clause 5315_C21. The system of clause 5315_C20, wherein: the first device is configured to report the first pairwise sensing result to a first particular device in the first wireless network.

Clause 5315_C22. The system of clause 5315_C20, wherein: a respective sensing software is downloaded from the sensing server into each of the first and second devices.

Clause 5315_C23. The system of clause 5315_C22, wherein: the respective downloaded sensing software in each of the first and second devices is updated by the sensing server.

Clause 5315_C24. The system of clause 5315_C7, further comprising: a sensing server, wherein: both first device, the second device, the first particular device and the second particular device are communicatively coupled with the sensing server, both the first and second devices and both the first and second particular devices are configured by the sensing server.

Clause 5315_C25. The system of clause 5315_C1, wherein: a protocol of the first wireless network or the second wireless network comprises at least one of: a WiFi standard, a UWB standard, a WiMax standard, an IEEE standard, an IEEE 802 standard, an IEEE 802.11 standard, an IEEE 802.11bf standard, an 802.15 standard, an 802.15.4 standard, or an 802.16 standard.

Clause 5315_C26. The system of clause 5315_C1, wherein: the inter-network wireless signal is transmitted based on a trigger signal received from one of: an access point (AP) or a controller device of the system in one of: the first wireless network, or the second wireless network, based on the protocol.

Clause 5315_C27. The system of clause 5315_C1, wherein: the set of heterogeneous wireless devices are grouped into N+1 groups, each group comprising a respective subset of the set of heterogeneous wireless devices; N is an integer greater than or equal to one; each heterogeneous wireless device is in at least one of the N+1 groups; the N+1 groups are arranged in a multi-tier group structure such that each group is associated with a respective wireless network at a corresponding tier; and each tier is associated with at least one group.

Clause 5315_C28. The system of clause 5315_C27, wherein: heterogeneous wireless devices in any Tier-k network are configured to report sensing results obtained in the Tier-k network to a respective heterogeneous wireless device in a Tier-(k-1) network via a gateway device between the Tier-k network and the Tier-(k-1) network; k is an integer greater than one; and the reported sensing results comprise at least one of: a combined sensing result, a pairwise sensing result, or a raw sensing measurement.

Clause 5315_C29. The system of clause 5315_C28, wherein: the first wireless network is associated with a Tier-k group of the N+1 groups; and the second wireless network is associated with a Tier-(k-1) group of the N+1 groups.

Clause 5315_C30. The system of clause 5315_C29, wherein the first particular device serves as at least one of: a Tier-k AP of the first wireless network associated with the Tier-k group; a Tier-k control device configured to search for and designate an not-yet-known wireless device as a Tier-k sensing device in the first wireless network associated with the Tier-k group; a Tier-k aggregator device configured to aggregate sensing results from Tier-k and any tier higher than k; or a Tier-k gateway device configured to enable a communicative coupling of a device in the first wireless network associated with the Tier-k group with another device in another tier.

Clause 5315_C31. The system of clause 5315_C28, wherein: the first wireless network is associated with a Tier-(k-1) group of the N+1 groups; and the second wireless network is associated with a Tier-k group of the N+1 groups.

Clause 5315_C32. The system of clause 5315_C31, wherein the first particular device serves as at least one of: a Tier-(k-1) AP of the first wireless network associated with the Tier-(k-1) group; a Tier-(k-1) control device configured to search for and designate a not-yet-known wireless device as a Tier-(k-1) sensing device in the first wireless network associated with the Tier-(k-1) group; a Tier-(k-1) aggregator device configured to aggregate sensing results from Tier-(k-1) and any tier higher than (k-1); or a Tier-(k-1) gateway device configured to enable a communicative coupling of a device in the first wireless network associated with the Tier-(k-1) group with another device in another tier.

Clause 5315_C33. The system of clause 5315_C28, wherein: a synchronization wireless signal is communicated between the first device in the first wireless network and the second device in the second wireless network, before the inter-network wireless signal is transmitted.

Clause 5315_C34. The system of clause 5315_C33, wherein: a synchronization wireless signal is communicated between the first wireless network and the second wireless network, before the sensing results are reported.

Clause 5315_C35. The system of clause 5315_C34, wherein the synchronization wireless signal is transmitted by one of: a sensing transmitter, a sensing receiver, a sensing initiator, a sensing responder, a proxy sensing initiator device, an associated AP, an associated control device, or an associated aggregator device.

Clause 5315_C36. The system of clause 5315_C35, wherein the first particular device is configured by at least one of: a cloud server or an AP of the first wireless network.

Clause 5315_C37. A method for wireless sensing, comprising: grouping a set of heterogeneous wireless devices in a venue into multiple wireless networks including: a first wireless network associated with a first set of network settings, and a second wireless network associated with a second set of network settings different from the first set of network settings, wherein: the set of heterogeneous wireless devices comprise: a first device in the first wireless network, a second device in the second wireless network, and a first particular device configured to operate in the first wireless network associated with the first set of network settings; obtaining the second set of network settings by the first particular device; informing the first device in the first wireless network of the second set of network settings, by the first particular device under the first set of network settings; transmitting an inter-network wireless signal by the first device to the second device through an inter-network wireless channel under the second set of network settings; obtaining a raw sensing measurement of the an inter-network wireless channel based on the an inter-network wireless signal; computing a pairwise sensing result based on the raw sensing measurement; computing a combined sensing result based on the pairwise sensing result; and performing a wireless sensing task based on the combined sensing result.

Device-free indoor object detection and localization are essential for success of smart homes. Traditional vision/acoustic/radar-based approaches face operational constraints that limit their effectiveness and scalability. Most existing approaches show inadequate performance in typical residential settings, due to the limited WiFi bandwidth and the resulting low spatial resolution. One purpose of the present disclosure is to introduce a novel system using commodity WiFi that can accurately determine the specific room where the person is, i.e., room-level localization. The system employs a novel multipath selection technique to concentrate on a limited set of multipaths predominated by the proximate motions to the device. Based on the technique, a spatial feature leveraging multiple antennas to enhance the spatial resolution is disclosed for more refined detection coverage. Combining the spatial feature with time and frequency-domain features, the system outperforms state-of-art methods by more than 20% and shows its potential for real-world applications.

With the swift advancement of Internet of Things (IoT) devices, indoor intelligent applications have been spurred to improve the quality of life. These applications include smart homes, security systems, elderly care, etc. A crucial element of these applications is indoor object detection and localization aiming to identify human presence in specific areas of interest, so as to achieve better energy efficiency in smart homes, and provide location-specific context for security systems and elderly monitoring. Compared to device-based/active localization which requires users to carry a device, device-free/passive indoor object detection and localization is of greater interest, as the latter is more practical and user friendly.

Existing passive indoor object detection and localization systems are mostly vision-based, acoustic-based, infrared-based, and radar-based. However, the limitation of these methods leads to significant operational constraints that restrict their effectiveness and scalability. Vision-based methods raise privacy concerns and may fail in poor lighting conditions while acoustic methods are susceptible to ambient noise. Infrared-based methods can only work in line-of-sight (LOS) scenarios, and radar-based approaches demand specialized hardware that is typically expensive. Some WiFi-based approaches often need either labor-intensive fingerprinting, dedicated calibration, or multiple transceivers arranged in a specific geometric pattern, which are not realistic. Furthermore, these methods require LOS conditions and suffer a notable performance degradation in indoor non-LOS (NLOS) multi-room scenarios. Further, these methods often perform poorly due to broad coverage and are thus not robust in multi-room residential settings.

The present disclosure discloses a novel passive WiFi-based system capable of accurately detecting and locating a moving human across multiple rooms (room-level localization) through walls. To achieve such a system, several critical challenges will be addressed.

Firstly, it is challenging to derive reliable motion features from WiFi signals for both LOS and NLOS settings. The multipath propagation especially under NLOS complicates human detection due to weaker reflections from the human body. In addition, using all multipath components (MPCs) for localization leads to broad coverage and can reduce the accuracy of localization. To overcome the challenge, a novel multipath selection method is disclosed for key feature extraction by selecting a subset of MPCs mainly affected by proximate movements to differentiate between proximate and distant movements under both LOS and NLOS based on a rich-scattering model.

Secondly, the limited bandwidth of commodity WiFi devices leads to coarse spatial resolution making room-level localization difficult. To enhance the spatial resolution, multiple antennas are used to extract the primary paths with principal component analysis (PCA) on the concatenated channel state information (CSI) from all antennas and a useful spatial-domain feature is disclosed to effectively refine the sensing coverage.

Thirdly, systems relying on a single feature for localization are often not robust. As such, a disclosed system incorporates multidimensional features with the above spatial-domain feature and utilizes a lightweight kernel-based support vector machine (SVM) classifier to distinguish between no human presence and the specific room occupied.

CSI can characterize the transmission of radio signals through various MPCs within a certain environment. Given a pair of TX and RX, the CSI at time t and frequency f can be expressed as:

$$H(t,f) = \sum_{i=1}^{L} \alpha_i(t)e^{\frac{-j2\pi f d_i(t)}{c}} + n(t,f), \qquad (1)$$

where $\alpha_i(t)$ represents the amplitude attenuation, $d_i(t)$ is the propagation length of the $i^{th}$ path, c corresponds to the speed of light, L is the total number of MPCs, and n(t, f) denotes the additive white Gaussian noise (AWGN).

Considering the dynamic scatterers (e.g., moving individuals or objects) and static scatterers (e.g., floors, walls, furniture), Eqn. (1) can be further expressed as:

$$
\begin{aligned}
H(t,f) \quad &= \underbrace{\sum_{i\in\Omega_D(t)} a_i(t)e^{\frac{-j2\pi f d_i(t)}{c}}}_{\text{dynamic paths}} \\
&+ \underbrace{\sum_{i\in\Omega_S(t)} a_i(t)e^{\frac{-j2\pi f d_i(t)}{c}}}_{\text{static paths}} + n(t,f) \\
&= H_D(t,f) + H_S(t,f) + n(t,f),
\end{aligned}
\qquad (2)
$$

where $\Omega_D(t)$ and $\Omega_S(t)$ represent the set of dynamic and static scatterers, and $H_D(t,f)$ and $H_S(t,f)$ are the contribution of the dynamic and static scatters, respectively. Within a sufficiently short time duration, the static paths can be assumed nearly constant. By mean subtraction, the time varying fluctuation of CSI, $\hat{H}(t,f)$, can be expressed as:

$$\hat{H}(t,f) = H_D(t,f) + n(t,f) \qquad (3)$$

In WiFi systems with $N_s$ subcarriers, there are $N_s$ CSI estimates at any given t, i.e.,

$$\hat{H}(t,f_i) = H_D(t,f_i) + n(t,f_i), i = 1, \ldots, N_s. \qquad (4)$$

$\hat{H}(t,f_i)$ exhibits noticeable changes over time in the presence of human movements, based on which one can derive various features for motion detection and localization.

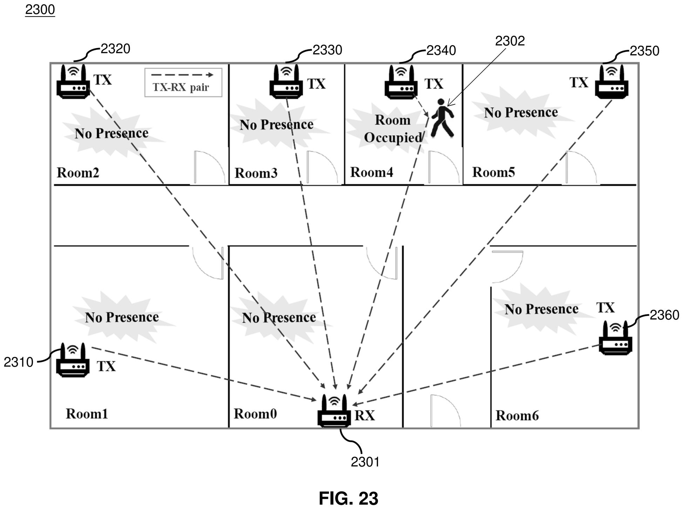

FIG. 23 illustrates an example scenario where a motion/event/activity (e.g. fall/abrupt/impulsive/transient/impactful motion, motion that generates sound/vibration/pressure change, or target motion) is detected (or monitored) based on wireless signal or auxiliary signal or both in a venue, according to some embodiments of the present disclosure. For example, as shown in FIG. 23, the system can include a single TX/RX 2301 and multiple RXs/TXs 2310~2360, each of which is placed in a different room or area of interest. The number of devices may depend on the total number of rooms being monitored.

In the example shown in FIG. 23, the TX/RX 2301 (e.g. Origin or Type2 device) is placed in room 0, while the multiple RXs/TXs (e.g. Bots or Type1 devices) 2310~2360 are placed in rooms 1~6 of an apartment 2300, respectively. During a motion/event/activity (e.g. a person 2302 is present or moving in room 4), the Bot 2340 can transmit a wireless (sounding/probe) signal to the Origin 2301, which can obtain channel information of a wireless multipath channel based on the wireless signal. A motion information (MI) or radio-based MI (RMI) can be computed based on the channel information.

If an object motion/activity is detected based on wireless signals transmitted by any one of the Bots 2310~2360, localization may be performed such that a location of the activity/motion/event or the object (e.g. person/user) may be determined in one of the rooms. For example, if detection is based only on wireless signals transmitted by Bot 2310, the location may be determined to be in the room 1. If detection is based only on wireless signals transmitted by Bot 2340, the location may be determined in the room 4. If target motion/event/activity cannot be detected based on wireless signals transmitted by any Bot, then it may be determined that nobody and no object is in the apartment 2300.

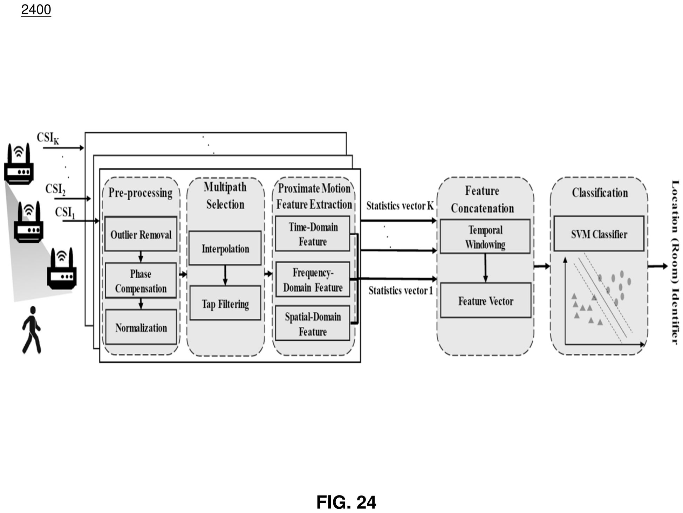

FIG. 24 illustrates an example framework of a system 2400 for wireless localization, according to some embodiments of the present disclosure. As illustrated in FIG. 24, the system 2400 mainly includes the following five modules: (1) Preprocessing, where the CSI measurements of each TX-RX pair are processed to obtain the sanitized CSI through outlier removal, phase compensation, and normalization for the subsequent multipath selection; (2) Multipath Selection, where the sanitized CSI is first interpolated and then a tap filtering procedure is applied to narrow the detection coverage by choosing the MPCs only influenced by the human movements near the devices; (3) Proximate Motion Feature Extraction, where multidimensional motion features relevant to the moving subject across time-, frequency-, and spatial-domains are extracted; (4) Feature Concatenation, where the multidimensional features of each TX-RX pair are processed with a predetermined temporal window to eliminate temporary fluctuations, and then concatenated to form a comprehensive feature vector for the subsequent SVM classifier; and (5) Classification, where a lightweight kernel-based SVM is utilized to determine the boundaries between classes of no presence and the occupied room based on the feature vector.

In some embodiments, for Preprocessing, CSIs can be affected by noise and hardware imperfections, RX auto gain control, and asynchronous clocks, all leading to noisy measurements. To improve CSI quality, on each link, the system can first apply a median filter on each subcarrier to remove the outliers, and then utilize a linear compensation technique to remove random phase noise, followed by a normalization of the phase-aligned CSI $\tilde{H}^{(m)}(t, f_i)$ on link m over subcarriers as

$$\bar{H}^{(m)}(t, f_i) = \frac{\tilde{H}^{(m)}(t, fi)}{\sqrt{\sum_{j=1}^{N_s} |\tilde{H}^{(m)}(t, f_j)|^2}}, \tag{5}$$

where $\bar{H}^{(m)}(t, f_i)$ is the sanitized CSI on link m at time t and frequency $f_i$.

In some embodiments, for Multipath Selection, due to the limited WiFi bandwidth, the spatial resolution of WiFi sensing is often not sufficient for high accuracy motion localization. For instance, a 80 MHz bandwidth yields a time resolution of 12.5 ns, and the corresponding spatial resolution is 3.75m. The typical maximum excess delay, representing the maximum delay of a noticeable MPC, a.k.a. the largest path length, is usually less than 500 ns. This means only about the first 40 channel impulse response (CIR) taps contain the significant MPCs and the rest are barely relevant to localization. However, relying solely on these 40 CIR taps for proximate motion feature extraction still poses challenges in achieving precise room-level localization in typical residential environments, because only a limited subset of these taps contains significant MPCs affected by proximate motion and the remaining taps usually contain MPCs affected by multiple reflections throughout the entire house. To further refine detection coverage, the system may focus on a subset of the MPCs to capture more localized reflections/scattering only affected by motion close to a device (TX/RX) to improve the localization accuracy. One example multipath selection method is detailed as follows.

First, the system can employ interpolation techniques on the channel frequency response (CFR) and take $N_s$-point inverse fast Fourier transform (IFFT) to reconstruct the CIR to increase the detection precision. This is because not all subcarriers are accessible due to implementation constraints in WiFi systems.

Second, for each snapshot at t, the system may determine the index $\tau_0$ of the dominant tap (i.e., the tap with the highest energy). The system may apply a truncated window $N_c$ to limit the range of CIR taps so as to confine the area of interest, where $N_c$ can be experimentally chosen. To be specific, the truncated CIR can be written as

$$h_{trun}^{(m)}(t; v) = \begin{cases} h^{(m)}(t; v), & v \in [\tau_0, \tau_0 + N_c] \\ 0, & o.w., \end{cases} \tag{6}$$

where $h^{(m)}(t; v) = \frac{1}{N_s} \sum_{i=0}^{N_s-1} \bar{H}^{(m)}(t, f_i) e^{j\frac{2\pi}{N_s} iv}$, representing the CIR computed by taking the $N_s$-point IFFT of CFR and $v = 1 \sim N_s$.

Then, the system may convert the truncated CIR back to the frequency domain using $N_s$-point FFT to obtain the smoothed CSI, denoted as $\bar{H}_c^{(m)}(t, f_i)$, where i = 1,.., $N_s$.

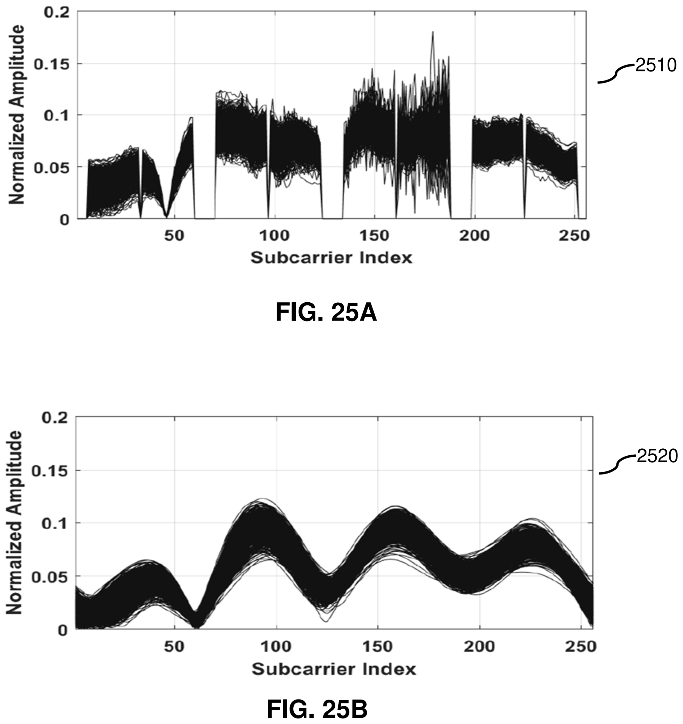

FIG. 25A and FIG. 25B illustrate an example multipath selection filtering, according to some embodiments of the present disclosure. In this example, an original CSI 2510 obtained from 80MHz WiFi packets is shown in FIG. 25A; and a corresponding filtered CSI 2520 after applying the multipath selection is shown in FIG. 25B. In some embodiments, the filtering process interpolates amplitudes in the guard interval and effectively reduces fluctuations in the CSI amplitudes caused by the MPCs which experience multiple reflections throughout the house.

In some embodiments, for Proximate Motion Feature Extraction, the system may use the statistical multi-dimensional features of the CSI from time-, frequency-, and spatial-domains (TD/FD/SD) for each TX-RX pair.

In some embodiments, to quantify the intensity of proximate motion in a certain environment, one can define a motion statistics that is environment-independent using the filtered CSI $\left|\bar{H}_c^{(m)}(t, f_i)\right|$. Denote $\rho_i^{(m)}(\tau)$ as the motion statistics for the subcarrier with frequency $f_i$ on link m, it can be calculated as the autocorrelation function (ACF) of CSI power response evaluated at a time lag of $\tau = 1/F_s$, with $F_s$ being the sounding rate, as

$$\rho_i^{(m)}(\tau)\Big|_{\tau=\frac{1}{F_s}} = \frac{COV\{|\bar{H}_c^{(m)}(t,f_i)|, |\bar{H}_c^{(m)}(t+\tau,f_i)|\}}{COV\{|\bar{H}_c^{(m)}(t,f_i)|, |\bar{H}_c^{(m)}(t,f_i)|\}}\Bigg|_{\tau=\frac{1}{F_s}}, \tag{7}$$

where COV is the covariance operator. When no motion is present, $\rho_i^{(m)}(1/F_s) \approx 0$ while $\rho_i^{(m)}(1/F_s) > 0$ if there is motion.

In some examples, one can define the TD feature, $\xi$, as the averaged motion statistics over all subcarriers and links, i.e.,

$$\xi = E\left[\rho_i^{(m)}(1/F_s)\right] \approx \frac{\sum_{m=1}^{N_tN_r}\sum_{i=1}^{N_s}\rho_i^{(m)}(1/F_s)}{N_tN_rN_s}, \qquad (8)$$

where E is the expectation operator, and Nt and $N_r$ are the number of TX and RX antennas, respectively.

In some examples, an experiment can be conducted to demonstrate how the multipath selection technique affects the TD feature and its ability to detect motions near the device (TX/RX). An experiment setup can show the TD features captured as a tester walks within an area at different distances from a single pair of WiFi devices in an open area. During the test, the tester walks in the way for two minutes in each of Areas #1 to #6, with Areas #1 and #2 designated as the detection zones of interest. The test shows a clear drop in $\xi$ as the movement is farther away from the devices, while using all multipaths keeps $\xi$ high, illustrating the effectiveness of the TD feature with multipath selection in distinguishing proximate motions.

In some embodiments, besides the TD feature, one can also employ a proximate motion metric in frequency dimension, which is based on the correlation of CSI amplitudes over subcarriers. The insight is that correlation between neighboring subcarriers is high when movement is near the device, but it drops to nearly zero when the movement is distant. This is because when the motion is near the device, the human body primarily causes significant disturbances in signal propagation across subcarriers. These disturbances manifest as consistent fluctuations in CSI amplitudes among neighboring subcarriers, resulting in high correlation between them, especially the adjacent subcarriers. Conversely, the movement farther away from the device induces fluctuations not only from the human body but also multiple environmental reflections. This may lead to more varied fluctuations in the CSI amplitude and thus lower correlation across subcarriers. This effect can be shown as a correlation matrix of the CSI amplitudes when a person moves at different distances from the device. When the person moves near the device, the correlation of CSI amplitudes among neighboring subcarriers becomes more pronounced, particularly those that are near-diagonal. In contrast, the correlation among neighboring subcarriers is nearly zero when the person moves far from the device. Inspired by this, the system may define the FD feature, $\kappa$, as the mean correlation coefficient of CSI amplitudes across adjacent subcarrier over antenna pairs as

$$\kappa = E\left[r^{(m)}(f_i, f_{i+1})\right] = \frac{\sum_{m=1}^{N_tN_r}\sum_{i=1}^{N_s-1}r^{(m)}(f_i,f_{i+1})}{N_tN_r(N_s-1)}, \qquad (9)$$

where $r^{(m)}(f_i, f_{i+1})$ is the correlation coefficient between the CSI amplitudes of adjacent subcarriers on link m.

In some embodiments, TD and FD features are not sufficient to provide satisfactory performance for residential environments due to the limited spatial resolution. The system may utilize the multiple antennas to enhance the spatial resolution by employing PCA on the concatenated CSI. By stacking the CSI amplitudes from all the subcarriers over all the antenna pairs, drawing inspiration from super-resolution techniques, this approach enhances resolution of the time of arrival and path difference, which is observable in the primary PCA components. These components can more accurately characterize the initial reflections from the human body and are less influenced by distant movements because those primary components have shorter paths and are thus mainly influenced by human motions near the device. In some examples, one can define the SD feature as the moving variance of the first PCA component within a certain sliding window.

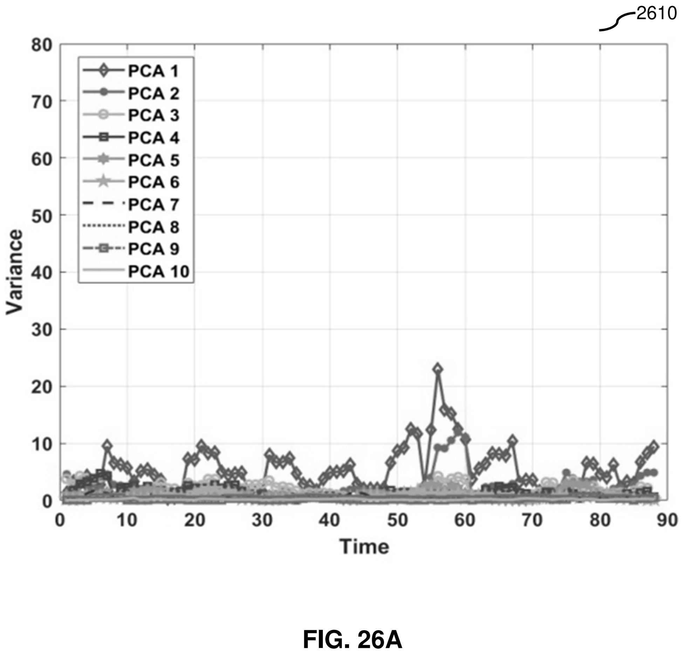

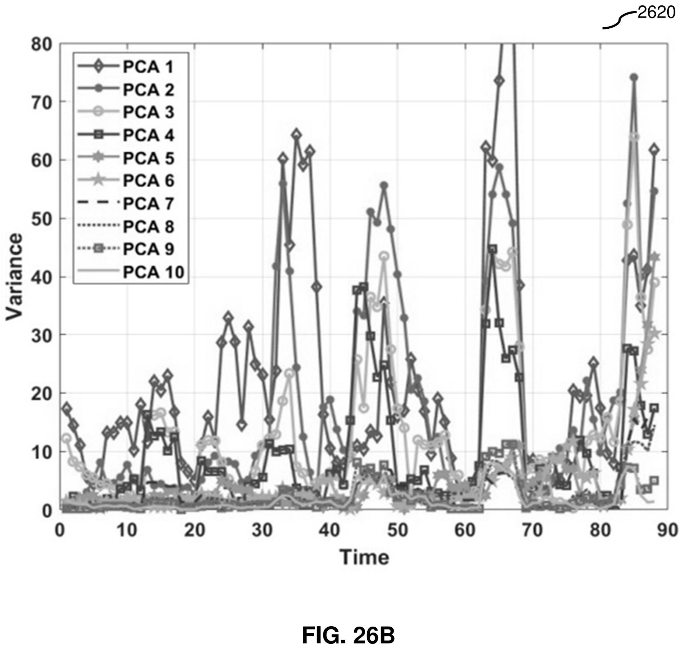

FIG. 26A and FIG. 26B illustrate example performances of moving variances of PCA components over CSI packets, according to some embodiments of the present disclosure. FIG. 26A shows the moving variance of the first 10 PCA components across CSI packets for stationary case 2610, while FIG. 26B shows the moving variance of the first 10 PCA components across CSI packets for human motion case 2620. One can see much more substantial fluctuations for the human motion case 2620 compared to the stationary case 2610.

In some embodiments, for Feature Concatenation, the system may first apply a temporal windowing on the above features to mitigate the temporal fluctuations. The features from each pair are then concatenated to form a single comprehensive feature vector for the classifier. Specifically, for a setup with K TXs, the feature vector consists of 3K features, i.e.,

$$\nu = [\xi_1, \kappa_1, SV_1, \cdots, \xi_i, \kappa_i, SV_i, \cdots, \xi_K, \kappa_K, SV_K], \qquad (10)$$

where the subscript denotes the pair index, and SV denote the SD feature.

In some embodiments, Classification is performed because it is challenging to select a suitable set of feature thresholds for presence detection and localization, due to different room sizes and room separation. Therefore, the system can utilize kernel-based SVM, a lightweight classification model, to automatically "determine" the boundary of each room with the comprehensive feature vector obtained above. The classes include empty for no human presence and specific rooms where presence is detected. The SVM model may be trained with various kernels, where the optimal model was determined through an exhaustive grid search with 5-fold cross-validation. Once the SVM model is trained, it will be fixed without any further parameter tuning or re-training, according to one embodiment.

In some embodiments, the present teaching discloses systems and methods for wireless sensing with transformed component selection.

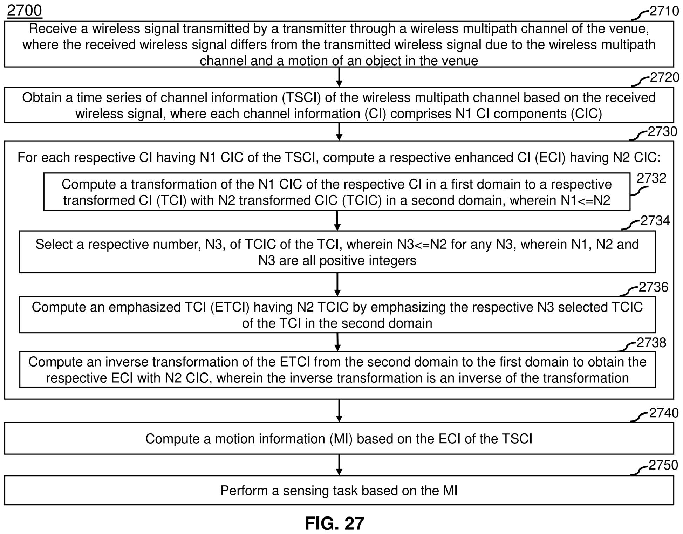

FIG. 27 illustrates a flow chart of an example method 2700 for performing wireless sensing with transformed component selection, according to some embodiments of the present disclosure. In various embodiments, the method 2700 can be performed by the systems disclosed above. At operation 2710, a wireless signal transmitted by a transmitter is received through a wireless multipath channel of the venue. The received wireless signal differs from the transmitted wireless signal due to the wireless multipath channel and a motion of an object in the venue. At operation 2720, a time series of channel information (TSCI) of the wireless multipath channel is obtained based on the received wireless signal, where each channel information (CI) comprises N1 CI components (CIC).

The operation 2730 in this example includes multiple sub-operations 2732-2738 to compute a respective enhanced CI (ECI) having N2 CIC for each respective CI having N1 CIC of the TSCI. At sub-operation 2732, a transformation of the N1 CIC of the respective CI in a first domain to a respective transformed CI (TCI) with N2 transformed CIC (TCIC) in a second domain is computed, wherein N1 <=N2. A respective number, N3, of TCIC of the TCI is selected at sub-operation 2734, wherein N3<=N2 for any N3, wherein N1, N2 and N3 are all positive integers. At sub-operation 2736, an emphasized TCI (ETCI) having N2 TCIC is computed by emphasizing the respective N3 selected TCIC of the TCI in the second domain. An inverse transformation of the ETCI from the second domain to the first domain is computed at sub-operation 2738 to obtain the respective ECI with N2 CIC. The inverse transformation is an inverse of the transformation. At operation 2740, a motion information (MI) is computed based on the ECI of the TSCI. At operation 2750, a sensing task is performed based on the MI.

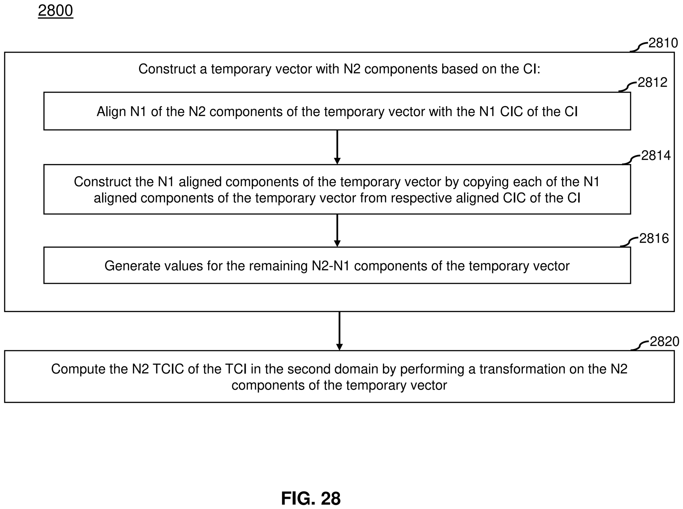

FIG. 28 illustrates a flow chart of an example method 2800 for transforming N1-component CI to N2-component TCI, according to some embodiments of the present disclosure. In various embodiments, the method 2800 can be performed by the systems disclosed above. The operation 2810 in this example includes multiple sub-operations 2812~2816 to construct a temporary vector with N2 components based on the CI. At sub-operation 2812, N1 of the N2 components of the temporary vector are aligned with the N1 CIC of the CI. At sub-operation 2814, the N1 aligned components of the temporary vector are constructed by copying each of the N1 aligned components of the temporary vector from respective aligned CIC of the CI. At sub-operation 2816, values are generated for the remaining N2-N1 components of the temporary vector. At operation 2820, the N2 TCIC of the TCI in the second domain are computed by performing a transformation on the N2 components of the temporary vector.

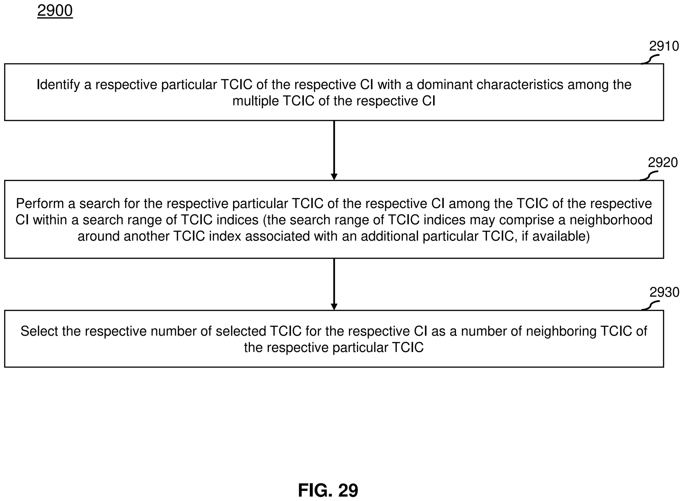

FIG. 29 illustrates a flow chart of an example method 2900 for selecting N3 TCIC from N2 components of TCI, according to some embodiments of the present disclosure. In various embodiments, the method 2900 can be performed by the systems disclosed above. At operation 2910, a respective particular TCIC of the respective CI with dominant characteristics is identified among the multiple TCIC of the respective CI. At operation 2920, a search is performed for the respective particular TCIC of the respective CI among the TCIC of the respective CI within a search range of TCIC indices. The search range of TCIC indices may comprise a neighborhood around another TCIC index associated with an additional particular TCIC, if the additional particular TCIC is available. At operation 2930, the respective number of selected TCIC for the respective CI is selected as a number of neighboring TCIC of the respective particular TCIC.

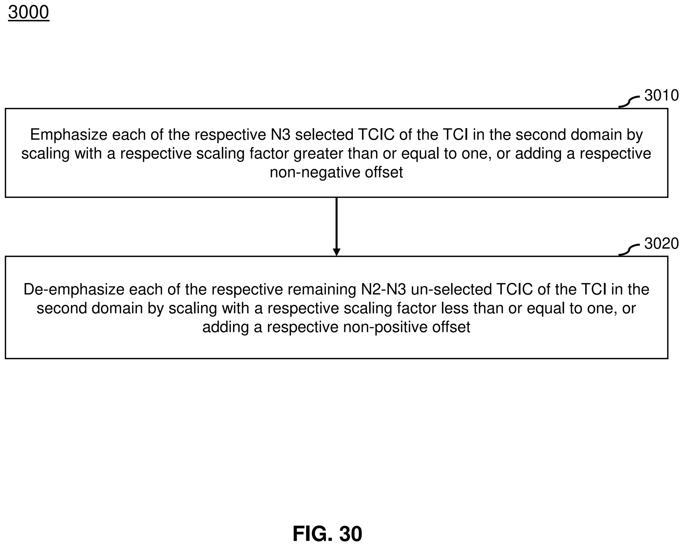

FIG. 30 illustrates a flow chart of an example method 3000 for emphasizing N3 selected TCIC and deemphasizing N2-N3 un-selected TCIC, according to some embodiments of the present disclosure. In various embodiments, the method 3000 can be performed by the systems disclosed above. At operation 3010, each of the respective N3 selected TCIC of the TCI in the second domain is emphasized by scaling with a respective scaling factor greater than or equal to one, or adding a respective non-negative offset. At operation 3020, each of the respective remaining N2-N3 un-selected TCIC of the TCI in the second domain is de-emphasized by scaling with a respective scaling factor less than or equal to one, or adding a respective non-positive offset.

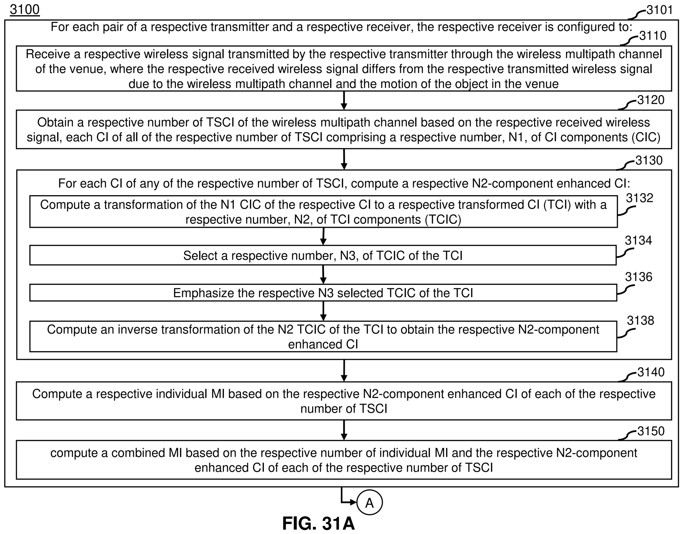

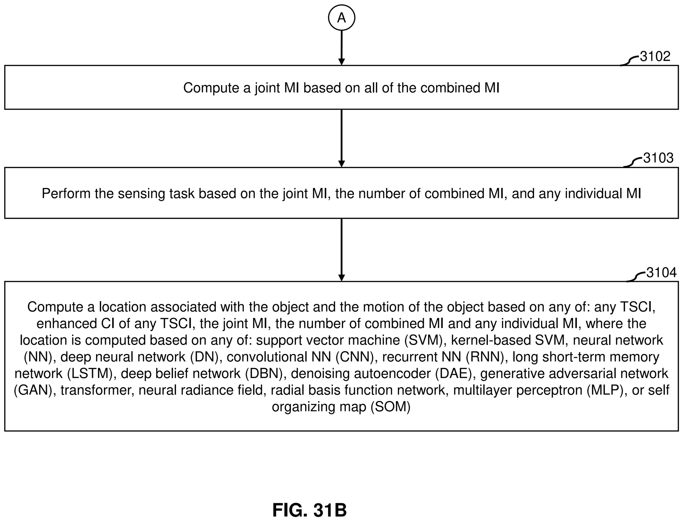

FIG. 31A and FIG. 31B illustrate a flow chart of an example method 3100 for computing task results using enhanced CI, according to some embodiments of the present disclosure. In various embodiments, the method 3100 can be performed by the systems disclosed above. The operation 3101 in this example includes multiple sub-operations 3110~3150 for each pair of a respective transmitter and a respective receiver, where the respective receiver is configured to perform the sub-operations 3110-3150. At sub-operation 3110, a respective wireless signal transmitted by the respective transmitter is received through the wireless multipath channel of the venue. The respective received wireless signal differs from the respective transmitted wireless signal due to the wireless multipath channel and the motion of the object in the venue. At sub-operation 3120, a respective number of TSCI of the wireless multipath channel is obtained based on the respective received wireless signal. Each CI of all of the respective number of TSCI comprises a respective number, N1, of CI components (CIC). At sub-operation 3130, a respective N2-component enhanced CI is computed for each CI of any of the respective number of TSCI. At sub-operation 3140, a respective individual MI is computed based on the respective N2-component enhanced CI of each of the respective number of TSCI. At sub-operation 3150, a combined MI is computed based on the respective number of individual MI and the respective N2-component enhanced CI of each of the respective number of TSCI.

The sub-operation 3130 in this example includes multiple steps 3132-3138. At step 3132, a transformation of the N1 CIC of the respective CI to a respective transformed CI (TCI) with a respective number, N2, of TCI components (TCIC) is computed. At step 3134, a respective number, N3, of TCIC of the TCI are selected. At step 3136, the respective N3 selected TCIC of the TCI are emphasized. At step 3138, an inverse transformation of the N2 TCIC of the TCI is computed to obtain the respective N2-component enhanced CI.

At operation 3102, a joint MI is computed based on all of the combined MI. At operation 3104, the sensing task is performed based on the joint MI, the number of combined MI, and any individual MI. At operation 3106, a location associated with the object and the motion of the object are computed based on any of: any TSCI, enhanced CI of any TSCI, the joint MI, the number of combined MI and any individual MI. The location is computed based on any of: support vector machine (SVM), kernel-based SVM, neural network (NN), deep neural network (DN), convolutional NN (CNN), recurrent NN (RNN), long short-term memory network (LSTM), deep belief network (DBN), denoising autoencoder (DAE), generative adversarial network (GAN), transformer, neural radiance field, radial basis function network, multilayer perceptron (MLP), or self organizing map (SOM).

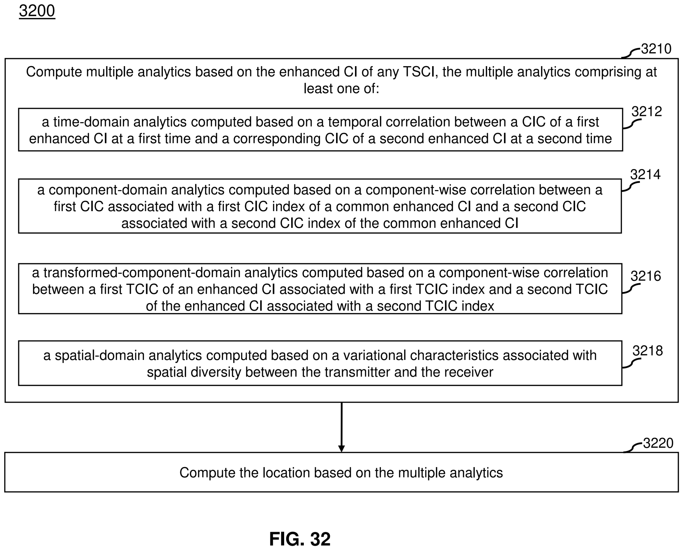

FIG. 32 illustrates a flow chart of an example method 3200 for computing task results based on multiple domain-based analytics, according to some embodiments of the present disclosure. In various embodiments, the method 3200 can be performed by the systems disclosed above. At operation 3210, multiple analytics are computed based on the enhanced CI of any TSCI. In this example, the multiple analytics comprise at least one of: a time-domain analytics 3212 computed based on a temporal correlation between a CIC of a first enhanced CI at a first time and a corresponding CIC of a second enhanced CI at a second time, a component-domain analytics 3214 computed based on a component-wise correlation between a first CIC associated with a first CIC index of a common enhanced CI and a second CIC associated with a second CIC index of the common enhanced CI, a transformed-component-domain analytics 3216 computed based on a component-wise correlation between a first TCIC of an enhanced CI associated with a first TCIC index and a second TCIC of the enhanced CI associated with a second TCIC index, and a spatial-domain analytics 3218 computed based on a variational characteristics associated with spatial diversity between the transmitter and the receiver. At operation 3210, the location is computed based on the multiple analytics.

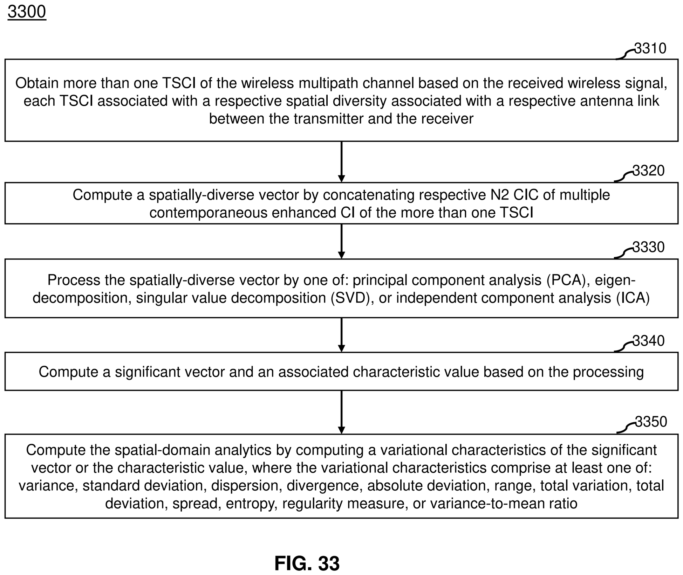

FIG. 33 illustrates a flow chart of an example method 3300 for constructing a spatially-diverse vector to generate spatial-domain analytics, according to some embodiments of the present disclosure. In various embodiments, the method 3300 can be performed by the systems disclosed above. At operation 3310, more than one TSCI of the wireless multipath channel is obtained based on the received wireless signal. Each TSCI associated with a respective spatial diversity is associated with a respective antenna link between the transmitter and the receiver. At operation 3320, a spatially-diverse vector is computed by concatenating respective N2 CIC of multiple contemporaneous enhanced CI of the more than one TSCI. At operation 3330, the spatially-diverse vector is processed by one of: principal component analysis (PCA), eigen-decomposition, singular value decomposition (SVD), or independent component analysis (ICA). At operation 3340, a significant vector and an associated characteristic value are computed based on the processing. At operation 3350, the spatial-domain analytics is computed by computing variational characteristics of the significant vector or the characteristic value. The variational characteristics comprise at least one of: variance, standard deviation, dispersion, divergence, absolute deviation, range, total variation, total deviation, spread, entropy, regularity measure, or variance-to-mean ratio.

In some embodiments, the disclosed system can be evaluated using off-the-shelf WiFi devices employing a WiFi module at carrier frequency 5.21 GHz with a sounding rate of 30 Hz and a bandwidth of 80 MHz with 256 subcarriers. The TXs are each equipped with a single omnidirectional antenna, and paired with the RX which has four omnidirectional antennas. The experiments may be conducted in two unique indoor environments of compact single family houses, with different room sizes. This contrasts with most existing studies, which often rely on idealized settings featuring large separations between rooms and consistent room dimensions.

In some embodiments, two scenarios are used for evaluation. Scenario I is a single-family house divided into 5 zones, while Scenario II includes 7 zones. In each scenario, one TX is deployed in every zone while the RX is placed at a typical location of an access point. For scenario II, two settings are evaluated regarding the overlapping sensing coverage of the pairs: with less overlapping coverage and with more substantial overlap. The devices were positioned at heights ranging from 0.3 meters to 1 meter.

In some examples, one may collect data in two cases: (1) no human presence, and (2) an individual moving around within each room, over a period of a month with 4 volunteers. During each data collection session, a participant was instructed to walk at his/her normal pace within each room. For each topology, one can accumulate about 55 minutes of data per room per participant and around 60 minutes of empty case. The data may be segmented into 5-second instances, yielding roughly 660 instances with walking motion for each room per person and 720 instances for the empty case. The amount of data for each room is approximately equal to ensure a fair evaluation.

In some embodiments, one can use the following metrics for the performance evaluation: Accuracy that represents the overall correctness of the model predicting the presence of a human in the correct room; True positive rate (TPR) that denotes the likelihood that the presence of a moving human is accurately identified in the specified room; and Positive predictive value (PPV) that indicates the likelihood that a moving human identified in a specified room is actually in that room.

As such, the disclosed system can be tested with off-the-shelf WiFi devices in various indoor settings, including single-family houses with different floor plans. The evaluation results show that the disclosed method outperforms other state-of-the-art methods by more than 20%.

In some embodiments, the system can utilize respiration detection as an indicator of a static person. For example, the system can compare the strength of the breathing pattern captured by the devices to infer the room where the static person is located. The system can also explore the selection of subcarriers that are sensitive to subtle CSI changes caused by a static person for the feature extraction.

A multi-person localization is a practical use case in real-life scenarios but poses significant challenges due to limited WiFi bandwidth. The system can be used for multi-person scenarios. In some embodiments, the system can be used based on deep neural networks to accommodate the complex cases of multi-person.

Accordingly, the present disclosure discloses a device-free WiFi-based multi-room human detection and localization system that leverages time-, frequency-, and spatial-domain features. The system may utilize a novel multipath selection method that selects a subset of multipaths to distinguish between nearby and distant movements, facilitating key feature extraction. The system may use effective spatial-domain feature by utilizing the spatial diversity of multiple antennas to boost the spatial resolution for more refined sensing coverage. The system may utilize multi-dimensional features from time-, frequency-, and spatial-domains to enhance the robustness and the adaptability in diverse indoor settings. The system may use an innovative technique for selecting MPCs that discerns between proximate and distant motion, facilitating the extraction of key features, and may also use multiple antennas to derive a useful feature via PCA to improve the spatial resolution. The system's performance has been evaluated across various indoor environments and its effectiveness in real-world scenarios is verified.

In some embodiments, a novel system is disclosed to use commodity WiFi that measures high dimensional wireless channel characteristics with embedded information of object motions and use it to perform a wireless sensing task. In a particular example, the system accurately determines the specific room where the person is, i.e., room-level localization. While the multicomponent wireless channel characteristics suffers from puncturing and mis-alignment due to missing components during sampling, the system employs a novel measurement enhancement technique comprising rectifying and transforming the channel measurements, selecting important/key transformed components, and emphasizing the selected transform components to significantly enhance the wireless channel characteristics in order to perform superior wireless sensing. The transform component emphasis highlights/enhances a limited set of selected transformed components reflective of the object motions, while suppressing the other components. Based on the enhanced wireless measurements, a spatial feature leveraging multiple antennas to enhance the spatial resolution is computed for more refined detection coverage. The spatial feature is combined with time and frequency-domain features to achieve good overall test accuracy, good true positive rate, and good positive predictive value.

In some embodiments, an object (or more than one objects) is located in a venue comprising K1 regions/zones (e.g. rooms) by computing a zone-level/region-level/room-level location of the object (i.e. being present at one of the K1 zones/regions, or being absent/not present). Any object may be moving in the venue. There may be K2 wireless devices forming K3 pairs of devices. Out of the K2 devices, up to (K2!)/(K2-2)!/2!=K2(K2-1)/2 pairs may be formed/constructed/identified/designated/configured such that K3<= K2(K2-1)/2.

In some embodiments, within each pair of wireless devices, one device may function as a Type1 heterogeneous wireless device (wireless transmitter/TX) and the other device may function as a Type2 heterogeneous wireless device (wireless receiver/RX). A respective wireless signal may be transmitted from the Type1 device to the Type2 device in each of the pairs and a time series of channel information (TSCI) may be obtained in the Type2 device based on the received wireless signal. In each pair, when multiple antennas are used in the Type1 device and/or the Type2 device, more than one TSCI may be obtained in the Type2 device based on the received wireless signal, each TSCI being associated with a respective antenna link (spatial diversity) between the Type1 device and the Type2 device.

In some embodiments, a sensing task may be performed based on the TSCI. Each CI may have imperfection/distortion/ corruption/noise. Preprocessing may be applied to the TSCI. The preprocessing may comprise outlier removal, phase compensation and/or normalization. Further, each CI may have missing component/omitted info. For example, if CI is channel frequency response (CFR), some frequency components of the CFR may be missing in CFR due to some reason (e.g. guard band not sampled). In one example, the CFR of a 40MHz channel may have some missing component at 0Mhz, some missing at 20MHz and some missing around 40MHz. The CFR of a 80MHz channel may have missing components at 0MHz, 20MHz, 40MHz, 60MHz, 80MHz.

In some embodiments, for an example of missing components of a CI (e.g. CFR), a genuine/true CFR should be a vector with N2 components (e.g. resembling N2=256 components for an 80MHz band in FIG. 3). However, due to guard bands at the beginning and/or end of each 20MHz band such that some CFR components are missing (e.g. at 0, 64, 128 and 256 in FIG. 3A, shown as zero). The sampled/available (non-zero) CFR components are packed/pushed/ concatenated together to form an N1-component vector (N1 <N2). In next step (measurement enhancement), the N1-component CFR (or CI) is enhanced to give/obtain/get a N2-component enhanced CFR (CI).

In some embodiments, measurement enhancement is a step to preprocess/process/ refine/enhance/restore/extend/ expandlimprove/enrich/complement/reinforce/supplement/augment/ boost/upgrade/improve the measurement (e.g. CI/TSCI) to obtain/give/generate enhanced measurement (e.g. enhanced CI/TSCI, preprocessed/processed/refined/enhanced/restored/extended/expanded/ improved/enriched/ complemented/reinforced/supplemented/augmented/boosted/ upgraded/improved CI/TSCI) that resemble/approximate/approach/estimate the genuine/true measurement. The sensing task may then be performed based on the enhanced measurement (e.g. enhanced CI/TSCI). The measurement enhancement may firstly align/re-align/map/restore the N1-component CI to a N2-component temporary vector (shown in part (a) of Fig. 3), transform (e.g. Fourier/inverse Fourier transform) the N2-component temporary vector to the N2-component transformed CI (TCI), select/emphasize some N3 of the N2 components of TCI (N3<N2), inverse transform (e.g. inverse Fourier/Fourier transform respectively) the resulting emphasized TCI (ETCI) to generate/give/obtain enhanced CI (ECI) (as shown in FIG. 3B).

In some embodiments, the key step to enhance the CI/TSCI may comprise "transformed CI component selection" (e.g. multipath selection) in which (a) N1 CI components (i.e. N1 CIC) of a N1-component CI are transformed to generate a N2-component transformed CI (TCI), (b) some TCI components (N3 TCIC, N3<N2) of TCI are selected, (c) the N3 selected TCIC of TCI are emphasized to generate a N2-component emphasized TCI (ETCI), (d) the N2 components of ETCI are inverse transformed to form/generate/give a N2-component enhanced CI (ECI). The sensing task is performed based on the enhanced CI. Each CI may have multiple components (e.g. frequency components such as subcarrier, time components such as taps). Some components of the CI may be missing/unreliable/distorted/ corrupted/zero-ed. The missing/unreliable/distorted/corrupted/zero-ed components may be constructed/ reconstructed/restored/enhanced/refined/reinforced (based on the available CIC).

For example, each "genuine"/"true" CI should be a CFR or a CIR of the wireless channel with N2 components (e.g. N2 frequency components of CFR, or N2 time components of CIR). As some components of the genuine/true CI may be missing/unavailable/not sampled, only N1 "available components" or "measured components" of genuine/true CI may be available/provided/sampled/ produced. The N1 available components may be packed/concatenated in a N1-component sampled/available/provided CI vector/array (e.g. from firmware), where N1 <=N2. This is the N1-component CI with N1 CIC.

In some embodiments, in the process of the packing/concatenation, the indices of the N1 available components in the provided CI vector may be shifted/misaligned/unevenly sampled with respect to the correct indices in the N2-component genuine/true CI (i.e. the correct index of an available component of the genuine/true CI may be different from its CIC index in the provided CI vector). Correction may be applied to the N1-component CI to obtain a N2-component temporary vector (a corrected CI). The CIC indices of the available N1 CIC may be corrected by realigning/rectifying/correcting/restoring them to the respective correct indices in the genuine/true CI (e.g. based on a mapping of actual component indices as specified/provided by firmware provider/chip manufacturer). In particular, the N1 (available) CIC of the N1-component CI may be copied to the respective entries/components at the respective corrected CIC indices of a N2-component temporary vector, with zeros inserted into the missing entries/components not mapped to any CIC of the CI. There may be (N2-N1) zeros inserted. Transformation may be applied to the N2-component corrected CI to generate a N2-component transformed CI (TCI).

In some embodiments, in (a) of the key step (measurement enhancement), transformation may be applied to each N1-component CI (or, the N2-component corrected CI). For example, inverse Fourier transform may be applied to CFR; Fourier transform/trigonometric transform/wavelet transform may be applied to CIR. The transformation of the CI transforms the CI from its N1 CIC in a first domain (frequency domain of CFR or time domain of CIR) to N2 transformed CIC (TCIC) in a second domain (time domain of channel impulse response(CIR), or frequency domain of CFR/trigonometric transform, or time-frequency domain of wavelet transform). N2 may be larger than, same as, or smaller than N1. The transformation may comprise two sub-steps: (a1) extending/expanding/re-aligning the N1 CIC of the CI to N2 components of a temporary vector (the corrected CI), and (a2) transforming the N2 components of the corrected CI to a N2-component transformed CI (TCI) with N2 TCI components (TCIC).

In some embodiments, in (b) of the key step (measurement enhancement), a number (N3) of TCIC may be selected from the N2 TCIC. The quantity N3 may be a pre-determined number, or may be adaptively determined. The quantity N3 (and/or the TCIC indices of the N3 selected TCIC) may be same/different (and/or changed/unchanged) over time (e.g. among a number of temporally adjacent CI of the TSCI). The quantity N3 (and/or the TCIC indices of the N3 selected TCIC) may be same/different (and/or changed/unchanged) over different antenna links between a pair of Type1/TX device and Type2/RX device. The quantity N3 (and/or the TCIC indices of the N3 selected TCIC) may be same/different (and/or changed/unchanged) over different pairs of Type1/TX device and Type2/RX device.

In some embodiments, a particular TCIC with a particular TCIC index may be identified. The particular TCIC may be a dominant TCIC. The dominant TCIC may have a maximum magnitude among the N2 TCIC. The dominant TCIC may have a maximum (or almost max) magnitude among the N2 TCIC of multiple consecutive CI (e.g. CI at time t, t-1, t-2, .., t+1, t+2, ..). For example the dominant TCIC with the particular TCIC index may have a maximum weighted average of magnitude of respective TCIC of the multiple consecutive CI with the particular TCIC index. The dominant TCIC may have a magnitude among the top P1 percentage magnitude of the N2 TCIC (e.g. top 10%). The dominant TCIC may have a magnitude within P2 percent of the maximum magnitude among the N2 TCIC (e.g. 95%<=(P2/max magnitude)<=100%). The N3 selected TCIC may be selected based on the particular TCIC and/or the particular TCIC indices. The N3 selected TCIC may comprise the particular TCIC. The TCIC indices of the N3 selected TCIC may comprise the particular TCIC indices.

In some embodiments, one or more additional particular TCIC with respective additional particular TCIC index may also be identified. The one or more additional particular TCIC may comprise additional dominant TCIC. The additional dominant TCIC may comprise a second (and/or third, fourth, ..) maximum magnitude among the N2 TCIC. The additional dominant TCIC may have a second (and/or third, fourth, ..) maximum magnitude among the N2 TCIC of multiple consecutive CI (e.g. CI at time t, t-1, t-2, .., t+1, t+2, ..). For example the additional dominant TCIC with the particular TCIC index may have a second (and/or third, fourth, ..) maximum weighted average of magnitude of respective TCIC of the multiple consecutive CI with the particular TCIC index. The dominant TCIC may have a magnitude among the top P3 percentage magnitude of the N2 TCIC (e.g. top 15%). The dominant TCIC may have a magnitude within P4 percent of the maximum magnitude among the N2 TCIC (e.g. 90%<=P2<=100%).

In some embodiments, the N3 selected TCIC may be selected based on the one or more additional particular TCIC and/or the one or more additional particular TCIC indices. The N3 selected TCIC may comprise the one or more additional particular TCIC. The TCIC indices of the N3 selected TCIC may comprise the one or more additional particular TCIC indices.

In some embodiments, the N3 selected TCIC may have consecutive TCIC indices. The indices of the N3 selected TCIC may form a contiguous interval of TCIC indices. If the TCIC index of the particular TCIC is k, the indices of the N3 selected TCIC may comprise the interval of [k-N5, k+N6], wherein N5+N6+1=N3. Both N5 and N6 may be non-negative integers. N6 may be greater than or equal to N5. N5 may be zero.

In some embodiments, each of the N3 selected TCIC may have a magnitude among the top P4 percentage magnitude of the N2 TCIC (e.g. top 10% or top 20%). The quantity N3 may be adaptively determined/selected to include most, if not all, of the top P4 percentage magnitude of the N2 TCIC. The quantity P4 may be adaptively determined/selected such that the resulting N3 (determined based on P4, or determined to encompass all of top P4 percentage magnitude) is within a certain range (greater than a first threshold, and/or less than a second threshold).

In some embodiments, the quantity N3 may be adaptively determined/selected to include most, if not all, of the top P5 percentage magnitude of the N2 TCIC of multiple consecutive CI. The quantity P5 may be adaptively determined/selected such that the resulting N3 (determined based on P5, or determined to encompass all of top P5 percentage magnitude) is within a certain range (greater than a first threshold, and/or less than a second threshold).

In some embodiments, there may be multiple antenna links between a Type1/TX device and a Type2/RX device. A wireless signal may be transmitted from Type1/TX device to Type2/RX device. Multiple TSCI may be obtained based on the received wireless signal, each TSCI associated with a respective antenna link. In particular, at a common time stamp, a CI of respective TSCI may be obtained from the wireless signal. Each of the CI at the common time stamp may be enhanced by the key step: (a), (b), (c) and (d). In (a), N1 CIC of each CI may be transformed to N3 TCIC. In (b), a respective number of TCIC of each CI may be selected. At the common time, a respective particular TCIC of each CI with a respective particular TCIC index may be selected. Each respective particular TCIC may be selected independently for the CI. Alternatively, the respective particular TCIC of each CI may be selected jointly for all the CI at the common time stamp. The respective particular TCIC index of different CI may be same or different. Same or different amount/quantity/number of TCIC may be selected for different CI. In (c) of the key step (measurement enhancement), the N3 selected TCIC of a CI may be emphasized. The rest of the N2 TCIC other than the N3 selected TCIC (i.e. the N2-N3 TCIC that are not selected, or the "un-selected TCIC") may be de-emphasized. A TCIC may be emphasized by either scaling/multiplying the TCIC with a respective scaling factor greater than one and/or adding a respective offset to generate a respective emphasized TCIC. A TCIC may be de-emphasized by either scaling/multiplying the TCIC with a respective scaling factor less than one and/or subtracting a respective offset to generate a respective de-emphasized TCIC (e.g. "deemphasized TCIC" may also be called "emphasized TCIC").

In some embodiments, the scaling factor of different selected TCIC may be same/different (and/or changed/unchanged) over time/different antenna link/different TX/RX pair. The scaling factor of different un-selected TCIC may be same/different (and/or changed/unchanged over time). All TCIC of a CI may be scaled by a common scaling factor (e.g. greater/less than one) before (or after) emphasizing the N3 selected TCIC and de-emphasizing the N2-N3 un-selected TCIC.

In some embodiments, the N3 selected TCIC of a CI may be emphasized by multiplying all the N2 TCIC $x(i)$ by a weighting function $w(i)$ to get emphasized TCIC $y(i)$, where i is the associated TCIC index. The $w(i)$ may be greater than or equal to 1 for any i of the N3 selected TCIC. The N2-N3 un-selected TCIC of the CI may be de-emphasized by multiplying all the N2-N3 TCIC x(i) by a weighting function w2(i) to get de-emphasized TCIC y(i), where i is the associated TCIC index, and the w2(i) may be less than or equal to 1 for any i of the un-selected TCIC.

In an example, the N3 selected TCIC may be retained as they are (scaled by a factor of one, or adding an offset of zero). The N2-N3 unselected TCIC may be zero-ed (scaled by a factor of zero, or subtracting itself). This is equivalent to w(i) being 1 for any i of the N3 selected TCIC and 0 for any i of the un-selected TCIC, which is effectively the indicator function of the N3 selected TCIC.

In another example, each of the N3 selected TCIC may be scaled by a respective scaling factor that is computed as a decreasing function of a distance of the respective selected TCIC from the particular selected TCIC (e.g. the dominant TCIC). In other words, w(i_max+k2)<=w(i_max+k1), for 0<=k1 <k2, where i_max is the TCIC index of the particular selected TCIC. Similarly, w(i_max-k2)<=w(i_max-k1), for 0<=k1 <k2. Note that the function may/may not be symmetric (i.e. w(i_max+k1)=w(i_max-k1) for some k1, and w(i_max+k1)<>w(i_max-k1) for some other k1).

In an example, each of the N2-N3 unselected TCIC may be scaled by a respective scaling factor that is computed as a decreasing function of a distance of the respective unselected TCIC from a respective nearest selected TCIC. The distance between two TCIC is a difference between their respective TCIC indices. The decreasing function may be a monotonic decreasing (or non-increasing) function, such as linear, piecewise linear, exponential, etc.

The following numbered clauses provide examples for wireless sensing with transformed component selection.

Clause C445_1. A method for wireless sensing with transformed component selection, comprising: receiving, by a receiver, a wireless signal transmitted by a transmitter through a wireless multipath channel of a venue, wherein the received wireless signal differs from the transmitted wireless signal due to the wireless multipath channel and a motion of an object in the venue; obtaining a time series of channel information (TSCI) of the wireless multipath channel based on the received wireless signal, wherein each channel information (CI) comprises N1 CI components (CIC); for each respective CI having N1 CIC of the TSCI, computing a respective enhanced CI (ECI) having N2 CIC by: computing a transformation of the N1 CIC of the respective CI in a first domain to a respective transformed CI (TCI) with N2 transformed CIC (TCIC) in a second domain, wherein N1<=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation; computing a motion information (MI) based on the ECI of the TSCI; and performing a sensing task based on the MI.

Clause C445_2. The method of clause C445_1, further comprising, for each CI having N1 CIC of the TSCI: constructing a temporary vector with N2 components based on the CI by: aligning N1 of the N2 components of the temporary vector with the N1 CIC of the CI, constructing the N1 aligned components of the temporary vector by copying each of the N1 aligned components of the temporary vector from respective aligned CIC of the CI, and generating values for the remaining N2-N1 components of the temporary vector; and computing the N2 TCIC of the TCI in the second domain by performing a transformation on the N2 components of the temporary vector.

Clause C445_3. The method of clause C445_2, wherein computing the respective enhanced CI for the respective CI further comprises: identifying a respective particular TCIC of the respective CI with a dominant characteristics among the multiple TCIC of the respective CI; and selecting the respective number of selected TCIC for the respective CI based on the respective particular TCIC of the respective CI.

Clause C445_4. The method of clause C445_3, wherein: the respective particular TCIC of the respective CI has a jointly dominant characteristics among the multiple TCIC of the respective CI and multiple TCIC of at least one other CI.

Clause C445_5. The method of clause C445_4, wherein: the at least one other CI comprises a temporally adjacent CI in either the TSCI or an additional TSCI; the additional TSCI of the wireless multipath channel is obtained by the receiver based on the received wireless signal from the transmitter; and the TSCI and the additional TSCI are associated with different antenna links between transmitter and the receiver.

Clause C445_6. The method of clause C445_4, wherein: the respective particular TCIC of the respective CI has either a maximum magnitude among the multiple TCIC of the respective CI or a maximum aggregate of magnitudes of a respective TCIC of the respective CI and a respective TCIC of the at least one other CI with a same TCIC index; the jointly dominant characteristics comprise a maximum aggregate of magnitudes of a respective set of TCIC of the respective CI and a respective set of TCIC of the at least one other CI; the aggregate comprises one of: a sum, a weighted sum, a product, a weighted product, a mean, a weighted mean, an arithmetic mean, a geometric mean, a harmonic mean, a median, a mode, or a percentile; and each TCIC is associated with a respective TCIC index in the second domain.

Clause C445_7. The method of clause C445_3, wherein computing the respective enhanced CI for the respective CI further comprises: identifying an additional particular TCIC of an additional CI in the TSCI with the dominant characteristics among the multiple TCIC of the additional CI; identifying the respective particular TCIC of the respective CI based on the additional particular TCIC.

Clause C445_8. The method of clause C445_3, wherein computing the respective enhanced CI for the respective CI further comprises: performing a search for the respective particular TCIC of the respective CI among the TCIC of the respective CI within a search range of TCIC indices, wherein the search range of TCIC indices comprises a neighborhood around another TCIC index associated with the additional particular TCIC.

Clause C445_9. The method of clause C445_3, wherein computing the respective enhanced CI for the respective CI further comprises: selecting the respective number of selected TCIC for the respective CI as a number of neighboring TCIC of the respective particular TCIC.

Clause C445_10. The method of clause C445_9, wherein computing the respective enhanced CI for the respective CI further comprises: selecting the respective number of selected TCIC for the respective CI as the number of neighboring TCIC of the respective particular TCIC such that all the selected TCIC have magnitudes greater than or equal to a threshold, the threshold being a percentage of a magnitude of the respective particular TCIC.

Clause C445_11. The method of clause C445_10, wherein computing the respective enhanced CI for the respective CI further comprises: selecting the respective number of selected TCIC for the respective CI as the number of neighboring TCIC of the respective particular TCIC to encompass all neighboring TCIC (a) with magnitudes greater than or equal to the threshold and (b) being immediately neighboring to the respective particular TCIC or another selected TCIC, by: starting from the respective particular TCIC, and selecting all the immediately neighboring TCIC until encountering a first TCIC with a magnitude less than the threshold.

Clause C445_12. The method of clause C445_11, wherein computing the respective enhanced CI for the respective CI further comprises: selecting the respective number of selected TCIC for the respective CI as a contiguous interval of neighboring TCIC of the respective particular TCIC, wherein: each TCIC is associated with a respective TCIC index in the second domain, a particular TCIC index k is associated with the respective particular TCIC, the respective number of selected TCIC comprises all TCIC with indices spanning from k-M1 to k+M2, both M1 and M2 are non-negative integers.

Clause C445_13. The method of clause C445_12, wherein the respective enhanced CI is computed further by: emphasizing each of the respective N3 selected TCIC of the TCI in the second domain by scaling with a respective scaling factor greater than or equal to one, or adding a respective non-negative offset.

Clause C445_14. The method of clause C445_13 wherein: a particular TCIC index, i_max, is associated with the respective particular TCIC; among all scaling factors applied to the respective N3 selected TCIC of the TCI, a scaling factor $w(i)$ for any TCIC index i is a maximum at i=i_max such that $w(i\_max)>=w(i)$; the scaling factor $w(i)$ is a non-increasing function of $abs(i-i\_max)$, which is an absolute value of a difference between i and i_max, such that: $w(i\_max+k2) <= w(i\_max+k1)$, for $0<=k1<k2$, and $w(i\_max-k2)<=w(i\_max-k1)$, for $0<=k1<k2$.

Clause C445_15. The method of clause C445_13, wherein the respective enhanced CI is computed further by: de-emphasizing each of the respective remaining N2-N3 un-selected TCIC of the TCI in the second domain by scaling with a respective scaling factor less than or equal to one, or adding a respective non-positive offset.

Clause C445_16. The method of clause C445_13, wherein: at least one of the transmitter and the receiver comprises multiple antennas; and the method further comprises: obtaining multiple TSCI of the wireless multipath channel based on the received wireless signals, each of the multiple TSCI being associated with a respective antenna of the transmitter and a respective antenna of the receiver, each CI of any of the multiple TSCI comprising N1 CIC; for each CI of any of the multiple TSCI, computing a respective enhanced CI by: computing a transformation of the N1 CIC of the respective CI in the first domain to a respective transformed CI (TCI) with N2 TCI components (TCIC) in the second domain, selecting a respective number, N3, of TCIC of the TCI, emphasizing the respective N3 selected TCIC of the TCI, and computing an inverse transformation of the N2 TCIC of the TCI to obtain the respective enhanced CI with N2 CI components; computing a respective individual MI based on the enhance CI of each of the multiple TSCI; computing a combined MI based on the multiple individual MI and the enhanced CI of each of the multiple TSCI; performing the sensing task based on the combined MI and the multiple individual MI.

Clause C445_17. The method of clause C445_16, wherein: there are a plurality of transmitters and receivers in the venue; and the method further comprises: forming a number of pairs based on the plurality of transmitters and receivers, each pair being formed by a transmitter and a receiver; for each pair of a respective transmitter and a respective receiver: receiving, by a respective receiver of the pair, a respective wireless signal transmitted by the respective transmitter of the pair through the wireless multipath channel of the venue, wherein the respective received wireless signal differs from the respective transmitted wireless signal due to the wireless multipath channel and the motion of the object in the venue, obtaining a respective number of TSCI of the wireless multipath channel based on the respective received wireless signal, each CI of all of the respective number of TSCI comprising a respective number, N1, of CI components (CIC), for each CI of any of the respective number of TSCI, computing a respective N2-component enhanced CI by: computing a transformation of the N1 CIC of the respective CI to a respective transformed CI (TCI) with a respective number, N2, of TCI components (TCIC), selecting a respective number, N3, of TCIC of the TCI, emphasizing the respective N3 selected TCIC of the TCI, and computing an inverse transformation of the N2 TCIC of the TCI to obtain the respective N2-component enhanced CI, computing a respective individual MI based on the respective N2-component enhanced CI of each of the respective number of TSCI, and computing a combined MI based on the respective number of individual MI and the respective N2-component enhanced CI of each of the respective number of TSCI; combining a joint MI based on all of the combined MI; and performing the sensing task based on the joint MI, the number of combined MI, and any individual MI.

Clause C445_18. The method of clause C445_17, further comprising: computing a location associated with the object and the motion of the object based on any of: any TSCI, enhanced CI of any TSCI, the joint MI, the number of combined MI and any individual MI; and computing the location based on any of: support vector machine (SVM), kernel-based SVM, neural network (NN), deep neural network (DN), convolutional NN (CNN), recurrent NN (RNN), long short-term memory network (LSTM), deep belief network (DBN), denoising autoencoder (DAE), generative adversarial network (GAN), transformer, neural radiance field, radial basis function network, multilayer perceptron (MLP), or self organizing map (SOM).

Clause C445_19. The method of clause C445_18, further comprising: computing multiple analytics based on the enhanced CI of any TSCI, the multiple analytics comprising at least one of: a time-domain analytics computed based on a temporal correlation between a CIC of a first enhanced CI at a first time and a corresponding CIC of a second enhanced CI at a second time, a component-domain analytics computed based on a component-wise correlation between a first CIC associated with a first CIC index of a common enhanced CI and a second CIC associated with a second CIC index of the common enhanced CI, a transformed-component-domain analytics computed based on a component-wise correlation between a first TCIC of an enhanced CI associated with a first TCIC index and a second TCIC of the enhanced CI associated with a second TCIC index, or a spatial-domain analytics computed based on a variational characteristics associated with spatial diversity between the transmitter and the receiver; and computing the location based on the multiple analytics.

Clause C445_20. The method of clause C445_19, further comprising: obtaining more than one TSCI of the wireless multipath channel based on the received wireless signal, each TSCI associated with a respective spatial diversity associated with a respective antenna link between the transmitter and the receiver; computing a spatially-diverse vector by concatenating respective N2 CIC of multiple contemporaneous enhanced CI of the more than one TSCI; processing the spatially-diverse vector by one of: principal component analysis (PCA), eigen-decomposition, singular value decomposition (SVD), or independent component analysis (ICA); computing a significant vector and an associated characteristic value based on the processing; and computing the spatial-domain analytics by computing a variational characteristics of the significant vector or the characteristic value, wherein the variational characteristics comprise at least one of: variance, standard deviation, dispersion, divergence, absolute deviation, range, total variation, total deviation, spread, entropy, regularity measure, or variance-to-mean ratio.

Clause C445_21. A system for wireless sensing, comprising: a transmitter configured to transmit a wireless signal through a wireless multipath channel of a venue; and a receiver configured to: receive the wireless signal through the wireless multipath channel of the venue, wherein the received wireless signal differs from the transmitted wireless signal due to the wireless multipath channel and a motion of an object in the venue, obtain a time series of channel information (TSCI) of the wireless multipath channel based on the received wireless signal, wherein each channel information (CI) comprises N1 CI components (CIC), for each respective CI having N1 CIC of the TSCI, compute a respective enhanced CI (ECI) having N2 CIC by: computing a transformation of the N1 CIC of the respective CI in a first domain to a respective transformed CI (TCI) with N2 transformed CIC (TCIC) in a second domain, wherein N1 <=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation, compute a motion information (MI) based on the ECI of the TSCI, and perform a sensing task based on the MI.

Clause C445_22. The system of clause C445_21, wherein the receiver is further configured to, for each CI having N1 CIC of the TSCI: construct a temporary vector with N2 components based on the CI by: aligning N1 of the N2 components of the temporary vector with the N1 CIC of the CI, constructing the N1 aligned components of the temporary vector by copying each of the N1 aligned components of the temporary vector from respective aligned CIC of the CI, and generating values for the remaining N2-N1 components of the temporary vector; and compute the N2 TCIC of the TCI in the second domain by performing a transformation on the N2 components of the temporary vector.

Clause C445_23. The system of clause C445_22, wherein the respective enhanced CI is computed further by: identifying a respective particular TCIC of the respective CI with a dominant characteristics among the multiple TCIC of the respective CI; performing a search for the respective particular TCIC of the respective CI among the TCIC of the respective CI within a search range of TCIC indices, wherein the search range of TCIC indices comprises a neighborhood around another TCIC index associated with the additional particular TCIC; and selecting the respective number of selected TCIC for the respective CI as a number of neighboring TCIC of the respective particular TCIC.

Clause C445_24. The system of clause C445_22, wherein the respective enhanced CI is computed further by: emphasizing each of the respective N3 selected TCIC of the TCI in the second domain by scaling with a respective scaling factor greater than or equal to one, or adding a respective non-negative offset; and de-emphasizing each of the respective remaining N2-N3 un-selected TCIC of the TCI in the second domain by scaling with a respective scaling factor less than or equal to one, or adding a respective non-positive offset.

Clause C445_25. The system of clause C445_22, further comprising a plurality of transmitters and receivers in the venue, wherein: a number of pairs are formed based on the plurality of transmitters and receivers, each pair being formed by a transmitter and a receiver; and for each pair of a respective transmitter and a respective receiver: the respective transmitter of the pair is configured to transmit a respective wireless signal through the wireless multipath channel of the venue, the respective receiver of the pair is configured to: receive the respective wireless signal through the wireless multipath channel of the venue, wherein the respective received wireless signal differs from the respective transmitted wireless signal due to the wireless multipath channel and the motion of the object in the venue, obtain a respective number of TSCI of the wireless multipath channel based on the respective received wireless signal, each CI of all of the respective number of TSCI comprising a respective number, N1, of CI components (CIC), for each CI of any of the respective number of TSCI, compute a respective N2-component enhanced CI by: computing a transformation of the N1 CIC of the respective CI to a respective transformed CI (TCI) with a respective number, N2, of TCI components (TCIC), selecting a respective number, N3, of TCIC of the TCI, emphasizing the respective N3 selected TCIC of the TCI, and computing an inverse transformation of the N2 TCIC of the TCI to obtain the respective N2-component enhanced CI, compute a respective individual MI based on the respective N2-component enhanced CI of each of the respective number of TSCI, and compute a combined MI based on the respective number of individual MI and the respective N2-component enhanced CI of each of the respective number of TSCI, a joint MI is computed based on all of the combined MI, and the sensing task is performed based on the joint MI, the number of combined MI, and any individual MI, a location associated with the object and the motion of the object is computed based on any of: any TSCI, enhanced CI of any TSCI, the joint MI, the number of combined MI and any individual MI; and the location is computed based on any of: support vector machine (SVM), kernel-based SVM, neural network (NN), deep neural network (DN), convolutional NN (CNN), recurrent NN (RNN), long short-term memory network (LSTM), deep belief network (DBN), denoising autoencoder (DAE), generative adversarial network (GAN), transformer, neural radiance field, radial basis function network, multilayer perceptron (MLP), or self organizing map (SOM).

Clause C445_26. The system of clause C445_25, wherein the location is computed based on: obtaining more than one TSCI of the wireless multipath channel based on the received wireless signal, each TSCI associated with a respective spatial diversity associated with a respective antenna link between the transmitter and the receiver; computing a spatially-diverse vector by concatenating respective N2 CIC of multiple contemporaneous enhanced CI of the more than one TSCI; processing the spatially-diverse vector by one of: principal component analysis (PCA), eigen-decomposition, singular value decomposition (SVD), or independent component analysis (ICA); computing a significant vector and an associated characteristic value based on the processing; computing a spatial-domain analytics by computing a variational characteristics of the significant vector or the characteristic value, wherein the variational characteristics comprise at least one of: variance, standard deviation, dispersion, divergence, absolute deviation, range, total variation, total deviation, spread, entropy, regularity measure, or variance-to-mean ratio; computing multiple analytics based on the enhanced CI of any TSCI, the multiple analytics comprising the spatial-domain analytics and at least one of: a time-domain analytics computed based on a temporal correlation between a CIC of a first enhanced CI at a first time and a corresponding CIC of a second enhanced CI at a second time, a component-domain analytics computed based on a component-wise correlation between a first CIC associated with a first CIC index of a common enhanced CI and a second CIC associated with a second CIC index of the common enhanced CI, or a transformed-component-domain analytics computed based on a component-wise correlation between a first TCIC of an enhanced CI associated with a first TCIC index and a second TCIC of the enhanced CI associated with a second TCIC index; and computing the location based on the multiple analytics.

Clause C445_27. A wireless device in a venue, comprising: a receiver configured to receive a wireless signal transmitted by a transmitting device through a wireless multipath channel of the venue, wherein the received wireless signal differs from the transmitted wireless signal due to the wireless multipath channel and a motion of an object in the venue; a memory; and a processor communicatively coupled to the memory and configured to: obtain a time series of channel information (TSCI) of the wireless multipath channel based on the received wireless signal, wherein each channel information (CI) comprises N1 CI components (CIC), for each respective CI having N1 CIC of the TSCI, compute a respective enhanced CI (ECI) having N2 CIC by: computing a transformation of the N1 CIC of the respective CI in a first domain to a respective transformed CI (TCI) with N2 transformed CIC (TCIC) in a second domain, wherein N1 <=N2, selecting a respective number, N3, of TCIC of the TCI, wherein N3<=N2 for any N3, wherein N1, N2 and N3 are all positive integers, computing an emphasized TCI (ETCI) having N2 TCIC by emphasizing the respective N3 selected TCIC of the TCI in the second domain, computing an inverse transformation of the ETCI from the second domain to the first domain to obtain the respective ECI with N2 CIC, wherein the inverse transformation is an inverse of the transformation, compute a motion information (MI) based on the ECI of the TSCI, and perform a sensing task based on the MI.

Clause C445_28. The wireless device of clause C445_27, wherein the processor is further configured to, for each CI having N1 CIC of the TSCI: construct a temporary vector with N2 components based on the CI by: aligning N1 of the N2 components of the temporary vector with the N1 CIC of the CI, constructing the N1 aligned components of the temporary vector by copying each of the N1 aligned components of the temporary vector from respective aligned CIC of the CI, and generating values for the remaining N2-N1 components of the temporary vector; and compute the N2 TCIC of the TCI in the second domain by performing a transformation on the N2 components of the temporary vector.

Clause C445_29. The wireless device of clause C445_28, wherein the respective enhanced CI is computed further by: identifying a respective particular TCIC of the respective CI with a dominant characteristics among the multiple TCIC of the respective CI; performing a search for the respective particular TCIC of the respective CI among the TCIC of the respective CI within a search range of TCIC indices, wherein the search range of TCIC indices comprises a neighborhood around another TCIC index associated with the additional particular TCIC; and selecting the respective number of selected TCIC for the respective CI as a number of neighboring TCIC of the respective particular TCIC.

Clause C445_30. The wireless device of clause C445_28, wherein the respective enhanced CI is computed further by: emphasizing each of the respective N3 selected TCIC of the TCI in the second domain by scaling with a respective scaling factor greater than or equal to one, or adding a respective non-negative offset; and de-emphasizing each of the respective remaining N2-N3 un-selected TCIC of the TCI in the second domain by scaling with a respective scaling factor less than or equal to one, or adding a respective non-positive offset.

Clause 445_1. A method/system/device/software of wireless sensing with transformed component selection, comprising: transmitting a wireless signal by a Type1 heterogeneous wireless device to a Type2 heterogeneous wireless device through a wireless multipath channel of a venue; receiving the wireless signal by the Type2 device, wherein the received wireless signal differs from the transmitted wireless signal due to the wireless multipath channel and a motion of an object in the venue; obtaining a time series of channel information (TSCI) of the wireless multipath channel based on the received wireless signal, wherein each channel information (CI) comprises N1 CI components (CIC); for each N1-component CI of the TSCI, computing a respective N2-component enhanced CI (ECI) by: computing a transformation of the N1 CIC of the respective CI in a first domain to a respective N2-component transformed CI (TCI) with N2 transformed CIC (TCIC) in a second domain, wherein N1<=N2, selecting a respective number, N3, of TCIC of the TCI, wherein N3<=N2 for any N3, computing an N2-component emphasized TCI (ETCI) by emphasizing the respective N3 selected TCIC of the TCI in the second domain, computing an inverse transformation of the emphasized TCI from the second domain to the first domain to obtain the respective enhanced CI with N2 components, wherein the inverse transformation is an inverse of the transformation; computing a motion information (MI) based on the enhanced CI of the TSCI; performing a sensing task based on the MI.

In some embodiments, N3 TCIC of TCI are selected, where a particular TCIC is important because the selected TCIC are selected based on the particular TCIC. It may be dominant (with dominant feature/characteristics/magnitude).

Clause 445_2. The method/system/device/software of wireless sensing with transformed component selection of clause 445_1, wherein computing the respective enhanced CI for the CI further comprises: identifying a respective particular TCIC of the CI with a dominant characteristics among the multiple TCIC of the CI; selecting the respective number of selected TCIC for the CI based on the respective particular TCIC of the CI.

In some embodiments, the particular TCIC may have a maximum magnitude among the multiple TCIC of the CI.

Clause 445_3. The method/system/device/software of wireless sensing with transformed component selection of clause 445_2: wherein the respective particular TCIC of the CI has a maximum magnitude among the multiple TCIC of the CI.

In some embodiments, the particular TCIC index (associated with the particular TCIC) may have a jointly dominant characteristics (dominant in a "jointed" way, e.g. with dominant aggregate characteristics, or with dominant characteristics in most/all CI) among the multiple TCIC of one or more other CI. An example of aggregate characteristics is weighted sum/mean (e.g. arithmetic/geometric/ harmonic mean) of respective TCIC magnitude among the CI and the at least one other CI.

Clause 445_4. The method/system/device/software of wireless sensing with transformed component selection of clause 445_2: wherein the respective particular TCIC of the CI has a jointly dominant characteristics among the multiple TCIC of the CI and multiple TCIC of at least one other CI.

In some embodiments, other CI may be/comprise temporally adjacent CI (e.g. past CI, future CI) in the TSCI. The particular TCIC index may have a dominant joint/combined/aggregated characteristics (e.g. max weighted average magnitude) in several consecutive CI in the TSCI. Alternatively, the particular TCIC index may be associated with dominant characteristics (e.g. max magnitude) in each of several consecutive CI in the TSCI.

Clause 445_5. The method/system/device/software of wireless sensing with transformed component selection of clause 445_4: wherein the at least one other CI comprises a temporally adjacent CI in the TSCI.

In some embodiments, other CI may comprise temporally adjacent CI (e.g. past CI, future CI) in another TSCI.

Clause 445_6. The method/system/device/software of wireless sensing with transformed component selection of clause 445_4: wherein the at least one other CI comprises a temporally adjacent CI of another TSCI.

In some embodiments, the another TSCI may be associated with another antenna link between the Type1 device and Type2 device (spatial diversity).

Clause 445_7. The method/system/device/software of wireless sensing with transformed component selection of clause 445_6: wherein the another TSCI of the wireless multipath channel is obtained by the Type2 device based on the received wireless signal from the Type1 device; where the TSCI and the another TSCI are associated with different antenna link between the Type1 device and the Type2 device.

In some embodiments, the jointly dominant characteristics may comprise/be a max aggregate of magnitude of sets of TCIC of the CI and other CI. The sets of TCIC may comprise one TCIC of CI and one TCIC of each other CI. The sets of TCIC at a "current" TCIC index may comprise a few TCIC of CI (e.g. 5 consecutive TCIC of the CI around the current TCIC index) and another few TCIC of the other CI (e.g. 3 consecutive TCIC of the other CI around the current TCIC index). Some possible aggregate (e.g. weighted mean) are listed.

Clause 445_8. The method/system/device/software of wireless sensing with transformed component selection of any of clauses 4 to 7: wherein the jointly dominant characteristics comprise a maximum aggregate of magnitude of respective set of TCIC of the CI and respective set of TCIC of the at least one other CI; wherein the aggregate comprise one of these statistical aggregates: a sum, a weighted sum, a product, a weighted product, a mean, a weighted mean, an arithmetic mean, a geometric mean, a harmonic mean, a median, a mode, or a percentile.

In some embodiments, an aggregate may be an aggregate over TCIC with same TCIC index. In other words, the sets of TCIC may comprise only 1 TCIC of CI and only 1 TCIC of the other CI, both TCIC with the same TCIC index.

Clause 445_9. The method/system/device/software of wireless sensing with transformed component selection of clause 445_8: wherein the maximum magnitude comprise a maximum aggregate of magnitude of a respective TCIC of the CI and a respective TCIC of the at least one other CI with a same TCIC index; wherein each TCIC is associated with a respective TCIC index in the second domain.

In some embodiments, when there are multiple antenna links (spatial diversity), respective particular TCIC may be computed/identified for respective CI in each antenna link. The particular TCIC of some (or all) CI at same (or contemporaneous) time may be computed independently, sequentially (i.e. particular TCIC of a CI may be computed based on another particular TCIC of another CI) or jointly (simultaneously, together).

Clause 445_10. The method/system/device/software of wireless sensing with transformed component selection of any of clauses 2 to 9, wherein computing the respective enhanced CI for the CI further comprises: identifying another particular TCIC of another CI in the TSCI with the dominant characteristics among the multiple TCIC of the another CI; identifying the respective particular TCIC of the CI based on the another particular TCIC.

In some embodiments, the particular TCIC may be computed by searching for the dominant characteristics, e.g. domain characteristics may be maximum magnitude, and a search for max magnitude may be performed among the TCIC of the CI.

Clause 445_11. The method/system/device/software of wireless sensing with transformed component selection of any of clauses 2 to 10, wherein computing the respective enhanced CI for the CI further comprises: performing a search for the respective particular TCIC of the CI among the TCIC of the CI within a search range of TCIC indices.

In some embodiments, a search range may be defined in the search for the particular TCIC of the TCI. The dominant characteristics of temporally adjacent CI (or TCI) of multiple TSCI (e.g. multiple TSCI associated with multiple wireless links between a pair of Type1 device and Type2 device) may happen at similar TCIC indices of respective TCI. Thus if the dominant characteristic has been found for a first CI of a first TSCI (e.g. by searching a large TCIC range), a reduced/predictive search range (of TCIC indices) for a second CI (contemporaneous to first CI, with similar/nearby time stamps) of a second TSCI may be defined based on the predictor, which is the TCIC index of the dominant characteristics of the first TCI/CI. And a reduced search or predictive search can be performed.

Clause 445_12. The method/system/device/software of wireless sensing with transformed component selection of clause 445_11: wherein the search range of TCIC indices comprises a neighborhood around another TCIC index associated with the another particular TCIC.

In some embodiments, after the particular TCIC (associated with a particular TCIC index) is identified/found, a number of neighboring TCIC (with neighboring TCIC indices) may be selected as the selected TCIC.

Clause 445_13. The method/system/device/software of wireless sensing with transformed component selection of any of clauses 2 to 12, wherein computing the respective enhanced CI for the CI further comprises: selecting the respective number of selected TCIC for the CI as a number of neighboring TCIC of the respective particular TCIC.

In some embodiments, for a particular CI, the selected CI may have the property that their magnitude is at least a percentage (e.g. 95% or 90% or 80% or 70%) of the maximum magnitude (of the particular TCIC).

Clause 445_14. The method/system/device/software of wireless sensing with transformed component selection of clause 445_13, wherein computing the respective enhanced CI for the CI further comprises: selecting the respective number of selected TCIC for the CI as the number of neighboring TCIC of the respective particular TCIC such that all the selected TCIC have magnitude greater than or equal to a threshold, the threshold being a percentage of the magnitude of the respective particular TCIC.

In some embodiments, the amount of selected TCIC may be different for different CI in the TSCI, and/or for CI across multiple TSCI associated with different antenna links. The amount for any CI may be chosen so as to encompass all the directly connected (or immediately neighboring) TCIC with magnitude reaching the percentage of max magnitude.

Clause 445_15. The method/system/device/software of wireless sensing with transformed component selection of clause 445_14, wherein computing the respective enhanced CI for the CI further comprises: selecting the respective number of selected TCIC for the CI as the number of neighboring TCIC of the respective particular TCIC to encompass all neighboring TCIC of the CI (a) with magnitude greater than or equal to the threshold and (b) being immediately neighboring to the respective particular TCIC or another selected TCIC.

In some embodiments, to encompass all the directly connected (or immediately neighboring) TCIC with magnitude reaching the percentage of max magnitude, one may start from the particular TCIC (i.e. the max magnitude, a local max), descent from the local max on both positive side and negative side, include all TCIC as selected TCIC until the next TCIC fails the acceptance criterion (it fails when its magnitude is less than the percentage of max magnitude).

Clause 445_16. The method/system/device/software of wireless sensing with transformed component selection of clause 445_15, wherein computing the respective enhanced CI for the CI further comprises: selecting the respective number of selected TCIC for the CI as the number of neighboring TCIC of the respective particular TCIC by starting from the respective particular TCIC and selecting all the immediately neighboring TCIC until encountering a first TCIC with magnitude less than the threshold.

In some embodiments, the percentage may be 80%, or higher.

Clause 445_17. The method/system/device/software of wireless sensing with transformed component selection of any of clauses 14 to 16, wherein the percentage is greater than or equal to 80%.

In some embodiments, the amount of selected TCIC may be fixed/same for two consecutive CI in the TSCI. The amount of selected TCIC may be fixed/same for contemporaneous CI across multiple TSCI associated with different antenna links.

Clause 445_18. The method/system/device/software of wireless sensing with transformed component selection of any of clauses 4 to 17: wherein same amount of selected TCIC are selected for the CI and the at least one other CI.

In some embodiments, the amount and TCIC indices of selected TCIC may be same for two consecutive CI in the TSCI. For contemporaneous CI across multiple TSCI, the corresponding TCIC indices of selected TCIC may be identical, or slightly different. Actually, the corresponding particular TCIC may be identical or slightly different.

Clause 445_19. The method/system/device/software of wireless sensing with transformed component selection of any of clauses 4 to 18: wherein indices of the selected TCIC for the CI and the at least one other CI are identical.

In some embodiments, the TCIC indices of the selected TCIC may form a continuous interval [k-M1, k+M2]. Both M1 and M2 are nonnegative. M2 may be greater than M1. M1 may be zero.

Clause 445_20. The method/system/device/software of wireless sensing with transformed component selection of any of clauses 2 to 19, wherein computing the respective enhanced CI for the CI further comprises: selecting the respective number of selected TCIC for the CI as a contiguous interval of neighboring TCIC of the respective particular TCIC.

Clause 445_21. The method/system/device/software of wireless sensing with transformed component selection of any of clauses 2 to 20, wherein: each TCIC is associated with a respective TCIC index in the second domain; a particular TCIC index k is associated with the respective particular TCIC; the respective number of selected TCIC comprises all the TCIC with indices spanning from k-M1 to k+M2, both M1 and M2 are non-negative integers.

Clause 445_22. The method/system/device/software of wireless sensing with transformed component selection of clause 445_21, wherein: M2 is greater than or equal to M1.

Clause 445_23. The method/system/device/software of wireless sensing with transformed component selection of any of clauses 21 to 22, wherein: M1 is zero.

In some embodiments, emphasizing N3 selected TCIC of TCI. The selected TCIC may be emphasized by (a) scaling by a factor greater or equal to 1, and/or (b) adding a non-negative offset.

Clause 445_24. The method/system/device/software of wireless sensing with transformed component selection of any of clauses 1 to 23, further comprising: for each N1-component CI of the TSCI, computing the respective N2-component enhanced CI further by: emphasizing each of the respective N3 selected TCIC of the TCI in the second domain by scaling with a respective scaling factor greater than or equal to one, or adding a respective non-negative offset.

In some embodiments, the scaling factor may be a decreasing function of TCIC index away from the TCIC index of the particular TCIC (e.g. of max TCIC).

Clause 445_25. The method/system/device/software of wireless sensing with transformed component selection of clause 445_24: wherein among all the scaling factors associated with the CI: the scaling factor for a particular TCIC index, i_max, associated with the respective particular TCIC is a maximum among all scaling factors applied to the respective N3 selected TCIC of the TCI, the scaling factor is a non-increasing function of TCIC indices away from the particular TCIC index, i_max.

In some embodiments, the decreasing function of the scaling factor, in mathematic form.

Clause 445_26. The method/system/device/software of wireless sensing with transformed component selection of clause 445_25, wherein: i_max is the TCIC index associated with the respective particular TCIC of the TCI, w(i) is the scaling factor for TCIC index i; wherein the scaling factor w(i) is a monotonic non-increase, or monotonic decreasing, function of the absolute value of i - i_max such that: w(i_max+k2)<=w(i_max+k1), for 0<=k1 <k2, w(i_max-k2)<=w(i_max-

k1), for 0<=k1<k2.

In some embodiments, the scaling factor for all selected TCIC may be identical for each CI (or for a number of neighboring CI in a TSCI, or for contemporaneous/temporally neighboring CI of multiple TSCI.

Clause 445_27. The method/system/device/software of wireless sensing with transformed component selection of any of clauses 24 to 26: for each N1-component CI of the TSCI, computing the respective N2-component enhanced CI further by: (a) scaling all of the respective N3 selected TCIC with a respective common scaling factor greater than or equal to one, or (b) adding to all of the respective N3 selected TCIC a respective common non-negative offset.

In some embodiments, the not-selected (or un-selected) TCIC may be de-emphasized (or "emphasized") by (a) scaling by a factor less or equal to 1, and/or (b) adding a non-positive offset. For example, they may be scaled by 0 (i.e. forced to zero, or discarded/not used in inverse transformation). The scaling factors (or offsets) may be identical/common for all the un-selected TCIC of the TCI.

Clause 445_28. The method/system/device/software of wireless sensing with transformed component selection of any of clauses 1 to 27, further comprising: for each N1-component CI of the TSCI, computing the respective N2-component enhanced CI further by: de-emphasizing each of the respective remaining N2-N3 un-selected TCIC of the TCI in the second domain by scaling with a respective scaling factor less than or equal to one, or adding a respective non-positive offset.

In some embodiments, a transformation of N1-component CI to N2-component TCI is computed. If some components are not available and/or the available components may be misaligned, then the misaligned available component may be aligned and some values may be generated for the unavailable components. A "proper CI" associated with a CI should have N2 components (i.e. there should be N2 CIC), but only N1 components may be available (i.e. the N1 CIC of the CI). And N2-N1 components may not be available (i.e. N2-N1 CIC unavailable) and may be generated. The N1 components of the CI (CIC) are simply N1 of the N2 components of the proper. The N2 components may be "punctured" by the N1 components (e.g. some components in the middle may be missing, here and there). A temporary vector may be constructed to imitate the proper CI by copying the N1 components from the CI and by generating the N2-N1 unavailable components. The N1 components of CI may be mapped/aligned to the proper locations/components among the N2 components. The N2-N1 unavailable components may be generated as zeros, interpolated values, and/or random numbers.

Clause 445_29. The method/system/device/software of wireless sensing with transformed component selection of any of clauses 1 to 28: for each N1-component CI of the TSCI: constructing a temporary vector with N2 components based on the CI by: aligning N1 of the N2 components of the temporary vector with the N1 CIC of the CI, constructing the N1 aligned components of the temporary vector by copying each of the N1 aligned components of the temporary vector from respective aligned CIC of the CI, generating values for the remaining N2-N1 components of the temporary vector, computing the N2 TCIC of the TCI in the second domain by performing the transformation on the N2 components of the temporary vector.

In some embodiments, first domain may be frequency domain. Second domain may be time domain. Transformation may be inverse frequency transform (e.g. inverse Fourier transform).

Clause 445_30. The method/system/device/software of wireless sensing with transformed component selection of any of clauses 1 to 29: wherein the transformation comprises one of: an inverse frequency transformation, or an inverse Fourier transform; wherein the first domain is a frequency domain; wherein the second domain is a time domain.

In some embodiments, first domain may be time domain. Second domain may be frequency domain. Transformation may be frequency transform (e.g. Fourier transform, wavelet transform, trigonometric transform, sin transform, cosine transform, Hadamard transform, Haar transform).

Clause 445_31. The method/system/device/software of wireless sensing with transformed component selection of any of clauses 1 to 29: wherein the transformation comprises one of: a frequency transformation, a Fourier transform, a wavelet transform, or a trigonometric transform, wherein the first domain is a time domain; wherein the second domain is a frequency domain.

In some embodiments, more than one TSCI associated with different wireless links between Type1 and Type2 devices.

Clause 445_32. The method/system/device/software of wireless sensing with transformed component selection of any of clauses 1 to 31, further comprising: wherein at least one of the Type1 device and Type2 device comprise more than one antennas; obtaining more than one TSCI of the wireless multipath channel based on the received wireless signals, each TSCI associated with a respective antenna of the Type1 device and a respective antenna of the Type2 device, each CI of any TSCI comprising N1 CI components (CIC); for each CI of any of the more than one TSCI, computing a respective enhanced CI by: computing a transformation of the N1 CIC of the respective CI in the first domain to a respective transformed CI (TCI) with N2 TCI components (TCIC) in the second domain, selecting a respective number, N3, of TCIC of the TCI, emphasizing the respective N3 selected TCIC of the TCI, and computing inverse transformation of the N2 TCIC of the TCI to obtain the respective enhanced CI with N2 CI components; computing a respective individual MI based on the enhance CI of each of the more than one TSCI; computing a combined MI based on the more than one individual MI and the enhanced CI of each of the more than one TSCI; performing the sensing task based on the combined MI and the more than one individual MI.

In some embodiments, more than one pairs of Type1 and Type2 devices. For different pairs, different bandwidth may be used by respective wireless signal such that the respective CI of respective TSCI may have respective N1 components (e.g. one may use 80MHz while another may use 40MHz). The N1, N2 and/or N3 may be different for different TSCI. For example, CI of a first TSCI may have 220 components while CI of a second TSCI may have 110 components. And the respective N2 may be N2=256 for first TSCI and N2=128 for second TSCI.

Clause 445_33. The method/system/device/software of wireless sensing with transformed component selection of any of clauses 1 to 32: wherein there are a plurality of Type1 devices and Type2 devices in the venue; forming a number of pairs based on the plurality of Type1 devices and Type2 devices, each pair comprising a Type1 device and a Type2 device; for each pair of Type1 device and Type2 device: transmitting a respective wireless signal by the respective Type1 heterogeneous wireless device of the pair to the respective Type2 heterogeneous wireless device of the pair through the wireless multipath channel of the venue, receiving the respective wireless signal by the respective Type2 device, wherein the respective received wireless signal differs from the respective transmitted wireless signal due to the wireless multipath channel and the motion of the object in the venue, obtaining a respective number of TSCI of the wireless multipath channel based on the respective received wireless signal, each CI of all of the respective number of TSCI comprising a respective number, N1, of CI components (CIC), for each CI of any of the respective number of TSCI, computing a respective N2-component enhanced CI by: computing a transformation of the N1 CIC of the respective CI to a respective transformed CI (TCI) with a respective number, N2, of TCI components (TCIC), selecting a respective number, N3, of TCIC of the TCI, emphasizing the respective N3 selected TCIC of the TCI, and computing inverse transformation of the N2 TCIC of the TCI to obtain the enhanced CI with N2 components, computing a respective individual MI based on the enhanced CI of each of the respective number of TSCI, and computing a combined MI based on the respective number of individual MI and the enhanced CI of each of the respective number of TSCI; combining a joint MI based on all the combined MI; performing the sensing task based on the joint MI, the number of combined MI, and any individual MI.

In some embodiments, location (e.g. room-level location) is computed based on individual/combined/joint MI computed based on enhanced CI.

Clause 445_34. The method/system/device/software of wireless sensing with transformed component selection of clause 445_33, further comprising: computing a location associated with the object and the motion of the object based on any of: any TSCI, enhanced CI of any TSCI, the joint MI, the number of combined MI and any individual MI.

In some embodiments, location is computed based on any of: SVM, or neural network, etc.

Clause 445_35. The method/system/device/software of wireless sensing with transformed component selection of clause 445_34, further comprising: computing the location based on any of: support vector machine (SVM), kernel-based SVM, neural network (NN), deep neural network (DN), convolutional NN (CNN), recurrent NN (RNN), long short-term memory network (LSTM), deep belief network (DBN), denoising autoencoder (DAE), generative adversarial network (GAN), transformer, neural radiance field, radial basis function network, multilayer perceptron (MLP), or self organizing map (SOM).

In some embodiments, location may be computed based on more than one analytics and a vector formed by concatenating multiple analytics, or using them as input to the SVM, neural network, etc.

Clause 445_36. The method/system/device/software of wireless sensing with transformed component selection of any of clauses 1 to 35, further comprises: computing more than one analytics based on the enhanced CI of any TSCI; computing a vector of the MI based on a concatenation of the more than one analytics; computing the location based on the vector and the more than one analytics.

In some embodiments, time-domain analytics are in Eqn. (7) and Eqn. (8). Component-domain analytics are in Eqn. (9) based on CIC of each CI. Transformed-component-domain analytics is similar, but computed based on TCIC (instead of CIC) of the CI.

Clause 445_37. The method/system/device/software of wireless sensing with transformed component selection of clause 445_36: wherein the more than one analytics comprise at least one of: a time-domain analytics computed based on a temporal correlation between a CIC of a first enhanced CI at a first time and a corresponding CIC of a second enhanced CI at a second time, a component-domain analytics computed based on a component-wise correlation between a first CIC associated with a first CIC index of a common enhanced CI and a second CIC associated with a second CIC index of the common enhanced CI, a transformed-component-domain analytics computed based on a component-wise correlation between a first TCIC of an enhanced CI associated with a first TCIC index and a second TCIC of the enhanced CI associated with a second TCIC index, or a spatial-domain analytics computed based on a variational characteristics associated with spatial diversity between the Type1 device and the Type2 device.

In some embodiments, multiple TSCI associated with multiple antenna links (spatial diversity) may be obtained. CI from multiple TSCI may be concatenated into a vector. PCA/SVD/ICA/eigen-decomposition may be performed to extract a significant vector (e.g. PCA component with maximum magnitude). Variational characteristics (e.g. variance) of the significant vector may be computed. An example of spatial domain analytics is the spatial-domain feature (variance of PCA component of significant vector).

Clause 445_38. The method/system/device/software of wireless sensing with transformed component selection of clause 445_37: obtaining more than one TSCI of the wireless multipath channel based on the received wireless signal, each TSCI associated with a respective spatial diversity associated with a respective antenna link between the Type1 device and the Type2 device; computing a spatially-diverse vector by concatenating CIC of contemporaneous CI of the more than one TSCI; processing the spatially-diverse vector by one of: principal component analysis (PCA), eigen-decomposition, singular value decomposition (SVD), or independent component analysis (ICA); computing a significant vector and an associated characteristic value based on the processing; computing the spatial-domain analytics by computing a variational characteristics of the significant vector or the characteristic value, wherein the variational characteristics comprise any of: variance, standard deviation, dispersion, divergence, absolute deviation, range, total variation, total deviation, spread, entropy, regularity measure, or variance-to-mean ratio.

Indoor falls are fatal to many people due to a lack of timely assistance. Existing approaches for fall detection using cameras and wearable devices intrude on privacy and cause inconvenience. Passive sensing approaches using radar have limited coverage and demand dense deployment. Solutions using commercial off-the-shelf (COTS) WiFi devices are either environment dependent or lack extensive testing in real environments to confidently assess false alarm rates. The present disclosure shows a fusion approach to detect falls with COTS WiFi, where signal processing techniques are leveraged to extract environment-independent features, a neural network is used to detect differentiating patterns in those features. A disclosed system can utilize a lightweight Long Short-Term Memory (LSTM)-based neural network with parameters that can easily be deployed on edge devices. A framework is disclosed to generate an explanation of the network's behavior that supports a calibration-free design. The explanation is generated by probing the neural network (e.g. LSTM) with multiple controlled perturbations. Some controlled perturbations with desirable characteristics or behavior (e.g. causing bad outcome to change and become good outcome, or causing wrong outcome to become correct) are selected to refine or re-train the neural network. The system's detection performance has been extensively tested on to show that the system can detect falls with a high average detection rate in unseen environments.

In some embodiments, the system computes the difference of auto-correlation function (ACF) from CSI power response that holds speed-related information. This allows the system to boost the dynamic signal and extract environment-independent speed-related information, which is a first step in designing a robust fall detection system.

In some embodiments, rather than relying on the extracted speed alone from the wireless CSI for fall detection, the system utilizes other relevant information in the ACF to filter out "fall-like" activities which may trigger false alarms. For example, d-ACF includes information about the peak and valley locations, intensities, and widths. Since it is not possible to design an exhaustive list of handcrafted features, the system may resort to a learning approach that uses ACF information for its classification. Learning approaches generally demand a large dataset to observe useful patterns. However, having extracted the ACF already, the burden is reduced on the classifier module to learn the differentiating features in CSI from the very beginning and overcome the large data set requirement. Additionally, the system can use data augmentation methods to increase the effective data set size.

The present disclosure also discloses explainability or explanation to interpret behaviors of the learning module in the system. To build trust in a system, one need to know if the system is relying on the correct information to make its decisions, as it is not possible to test in all environments. Explainability or explanation has other advantages such as identifying under-fit and over-fit scenarios and reducing computational complexity by removing or avoiding preprocessing of irrelevant parts of the data. In some embodiments, a novel technique called ID-CAM (Iterative Distortion- Class Activation Map) is used to obtain a heatmap highlighting the significance of different portions of the input. From the resultant heatmap, one can prove that the disclosed learning module is indeed focusing on portions of the input that embed high speed information to classify a fall event. With this design, an example system called FallAware is disclosed, which is an explainable and environment-independent fall detection system. Extensive testing has proven the robustness of FallAware. The explanation may be generated by applying controlled or systematic perturbation to input data and monitoring how the outcome changes with the perturbation. Some controlled perturbation that cause bad (or wrong) outcomes to become good (or correct) outcomes may be selected for retraining or refining the classifier (e.g. neural network) of the system. Similarly, some controlled perturbation that cause good outcomes to become bad may be selected also for retraining or refining the classifier.

Fall detection is distinct from other applications (e.g. activity sensing, breathing detection, sleep monitoring, indoor tracking and human identification) due to the rapid and transient nature of a fall. In some embodiments, unlike other applications, falls need to be detected using <2 sec of CSI and there is limited potential for improvement in detection using a longer CSI observation time. The disclosed system can use a higher sampling rate to build a robust system that can detect falls with high accuracy and minimal false alarms.

In some embodiments, FallAware can achieve high detection rate and low false alarm rate with comprehensive real world fall, showing superior performance and generalizability compared to other systems. In some embodiments, FallAware is a high-accuracy environment-independent fall detection system that uses wireless CSI from COTS WiFi devices. By leveraging a model-based feature extraction approach, combined with the power of learning techniques, a method or software solution can easily be used alongside existing WiFi infrastructure.

In some embodiments, the system may use of a preprocessed feature (e.g. d-ACF) that embeds speed-related information, as input to the learning module. Speed-related information is an intuitive and reliable feature for fall vs non-fall activity classification. With a novel feature significance visualization technique called ID-CAM, the classifier is indeed relying on the high-speed regions of the input for its fall decisions, which builds trust in the system and mitigates unforeseen behavior in new environments.

In some embodiments, instead of a binary classification of an activity into a fall event or normal activity, a disclosed method calculates the likelihood of a fall event. By choosing different thresholds on the likelihood, FallAware can be tailored to different scenarios for optimum performance. For example, a single occupancy home with an older person can use a high sensitivity (e.g. a threshold of 0.2), while a household with multiple people and kids/pets can work with a lower sensitivity (e.g. a threshold of 0.7). This flexibility enhances the overall user experience by reducing false alarms, yet ensuring a good fall detection rate in that scenario.

In some embodiments, a disclosed neural network architecture includes a small number of parameters, thanks to a robust model-based feature selection. Such an efficient solution enables implementation on edge devices, without the need for a cloud platform and thus ensures low cost and stability.

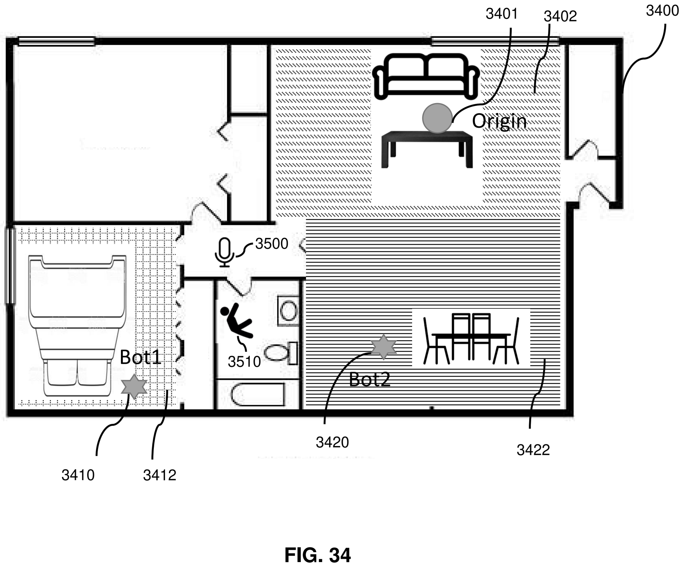

FIG. 34 illustrates an example scenario where a motion/event/activity (e.g. fall/abrupt/impulsive/transient/impactful motion, motion that generates sound/vibration/pressure change, or target motion) is detected (or monitored) based on wireless signal or auxiliary signal or both in a venue, according to one embodiment of the present teaching. For example, as shown in FIG. 34, in a 2-bedroom apartment 3400, Origin 3401 ( Type2 device) may be placed in the living-room area 3402, Bot 1 3410 (e.g. Type1 device) may be placed in a bedroom1-area 3412, and Bot 2 3420 (e.g. Type1 device) may be placed in the dining-room area 3422. A sensor 3500 (e.g. microphone/camera/light sensor/pressure sensor) may also be placed somewhere in the apartment 3400 to capture auxiliary sensing signals (e.g. sound/image/video/light/ pressure/vibration). During the motion/event/activity (e.g. a person 3510 falls down making sound that is picked up by microphone sensor 3500), each of Bot 1 3410 and Bot 2 3420 can transmit a wireless (sounding/probe) signal to the Origin 3401, which can obtain channel information of a wireless multipath channel based on the wireless signal. A motion information (MI) or radio-based MI (RMI) can be computed based on the channel information. During the motion/event/activity, the sensor 3500 can capture an associated auxiliary signal. An aux-based motion information (AMI) can be computed based on the auxiliary signal. The motion/event/activity can be detected/monitored individually based on the RMI alone (radio-based), individually based on the AMI alone (aux-based), or jointly based on both the RMI and AMI (radio-aux-based, e.g. sequentially radio-based followed by aux-based, or sequentially aux-based followed by radio-based, or simultaneously/contemporaneously by both radio-based and aux-based).

If object motion/activity is detected based on wireless signals transmitted by both Bot 1 3410 and Bot 2 3420, localization may be performed such that a location of the activity/motion/event or the object (e.g. person/user) may be determined the living-room area 3402. If detection is based only on wireless signals transmitted by Bot 1 3410, the location may be determined to be in the bedroom-1 area 3412. If detection is based only on wireless signals transmitted by Bot 2 3420, the location may be determined in the dining-room area 3422. If target motion/event/activity cannot be detected based on wireless signals transmitted by either Bot 1 3410 or Bot 2 3420, then it may be determined that nobody and no object is in the apartment 3400. The corresponding area where the activity/motion/event/person/user is detected may be marked with a predetermined pattern.

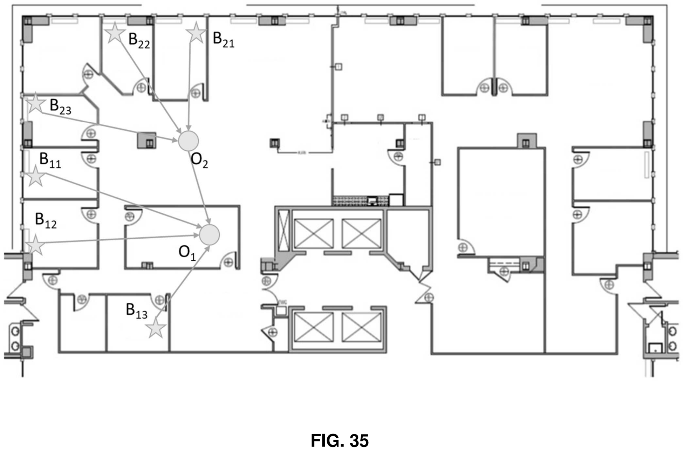

FIG. 35 illustrates an example floor plan and placement of wireless devices for wireless monitoring with motion/event/activity detection and localization, according to some embodiments of the present disclosure. In the example shown in FIG. 35, there are two origins O1 and O2. Each origin is associated with three bots. For example, O1 is associated with bots B11, B12, and B13 (together constitute a first origin group); and O2 is associated with bots B21, B22, and B23 (together constitute a second origin group). Each device of the bots and origins is fixed at a different location. In one embodiment, the origin O1 is called a master origin; and the origin O2 is called a child origin, where the child origin can transmit statistics and information to the master origin for combination.

In some embodiments, the floor plan and placement of wireless devices in FIG. 35 can be used to perform multi-person or multi-object motion localization based on motion statistics. When there are two or more origins, motion statistics (or RMI) measured from different links of different origins are combined to contribute together to the motion localization. For each activated bot, it is determined which origin the bot is associated with, e.g. based on a smoothed motion statistics in a time window. For example, when the smoothed motion statistics of Bot k with respect to Origin j is larger than a threshold, Bot k is determined to be associated with Origin j. The same threshold can be used for other origins. Thus, for each origin, a set of activated bots associated with the origin can be determined. A likelihood is calculated for each activated bot k to detect a motion, and is smoothed over a time window. For each origin group including an origin and its associated bots (e.g. O1, B11, B12, B13), an average motion statistics is computed for the origin group across all the associated bots. Each calculation or computation above can be performed at the origin or the bot.

When there is any motion detected in the environment, an origin group with the highest average motion statistics is chosen. When the average motion statistics of the chosen origin group is larger than a threshold, the motion is determined to be around the origin of the group. Otherwise, when the average motion statistics of the chosen origin group is not larger than a threshold, the motion is determined to be around the bot with the highest likelihood within the origin group.

WiFi signals in the 5GHz band experience multiple reflections and scattering in typically crowded indoor environments. In some embodiments, the channel response of OFDM-based WiFi systems is available in the form of Channel State Information (CSI) from COTS WiFi devices. If X(t, f) and Y(t, f) are the transmitted and received signals over the subcarrier frequency f at time t, then the estimate of CSI is given by $H(t,f) = \frac{Y(t,f)}{X(t,f)}$ .

Given a rich-scattering indoor environment, one can derive that, (i) speed of the dynamic scatterers is embedded in the autocorrelation function (ACF) of the received electric field at the receiver (Rx), and (ii) the power of the channel response from WiFi devices, given by $G(t, f) = |H(t, f)|^2$, can be treated as an equivalent of the power of the received electric field. From (i) and (ii), the ACF of G can be derived to be proportional to a weighted sum of ACF of different electric field components. The magnitudes of the theoretical ACFs of these different electric field components decay with oscillations with distance. However, it can be observed that, (iii) the first local peak of differential of ACF of G coincides with the first local peak of the differential of these superimposed ACFs of electric field components.

Specifically, $\rho_G(\tau, f) = [\gamma_G(\tau, f)/\gamma_G(0, f)]$ gives the ACF of G, where $\gamma_G(\tau, f)$ is the sample covariance of G at a time lag $\tau$. Using (i) and (iii), it can be shown that the location of the first local peak of $\Delta\rho_G(\tau, f)$ includes the speed of movement information. If $\hat{\tau}$ is the location of the first peak in $\Delta\rho_G(\tau, f)$, the speed of movement is given by $v = 0.54\lambda/\tau$ , where $\lambda$ is the wavelength (5.17 cm for 5.805GHz carrier frequency).

In practice, $\Delta\rho_G(\tau, f)$, is noisy, and therefore values from different subcarriers are aggregated to boost the SNR of the signal. For this, Maximal Ratio Combining (MRC) may be adopted to combine signals from multiple receiver antennae. For MRC, the top 5 subcarriers based on the highest value of $\rho_G\left(\frac{1}{F_s}, f\right)$ , which is indicative of the "strength" of motion recorded by each subcarrier are selected in some embodiments. In the following discussions, variable f is ignored and $\Delta\rho_G(\tau, f)$ after MRC is simply denoted by $\Delta\rho_G(\tau)$. In some embodiments, several instances of $\Delta\rho_G(\tau)$ over 4 sec for a human walking may be determined. This matrix will be referred to as d-ACF, which is computed with a time step of 0.02 sec and with a maximum time lag, $\Delta = 0.1$ sec. The black dots highlight the location of the first peak at every time instance. It can be shown that d-ACF plays a significant role in the design of FallAware.

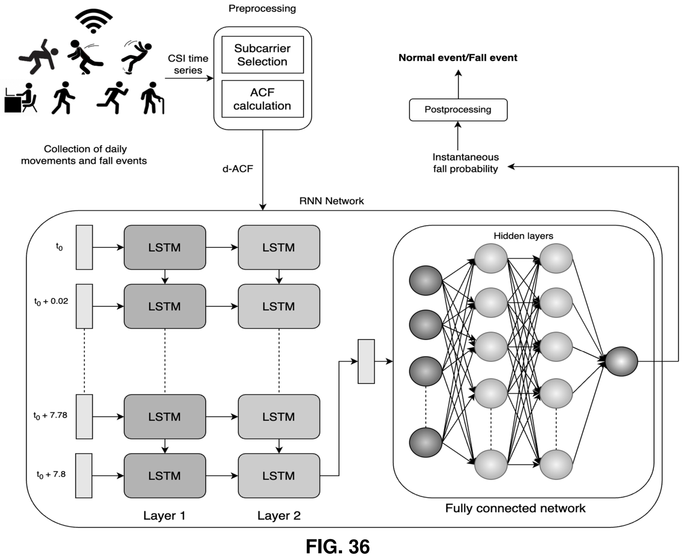

In some embodiments, the design of FallAware has three stages: (1) Preprocessing, (2) Learning, and (3) Postprocessing. In some embodiments, an example overview of the FallAware system is shown in FIG. 36. The CSI time series is processed in stage (1), which is fed into a neural network in stage (2). The output of stage (2) is processed in stage (3) to determine if a fall has occurred in the given observation time of the CSI. More details of each stage are provided below.

In the Preprocessing stage, among the features that could be extracted from the WiFi CSI, the most intuitive and differentiating feature for an environment-independent fall event classification is the speed of movement. The speed extraction from d-ACF could potentially remove other useful context information. Also, the noisy d-ACF could result in incorrect speed values at times, which might affect the performance, given the transient nature of the fall event. Therefore, the system can use d-ACF as input for stage (2) to include more information and context. In some embodiments, using speed alone has lower classification performance compared to using d-ACF in stage (2). In some embodiments, the pattern of fall events typically involves an increasing speed region (where the peak moves closer to the zero time lag) and a quickly decreasing speed region (where the peak moves away from the zero time lag). This pattern is similar in different environments, which is crucial for the design of an environment-independent fall detector. In some examples, one can use a time lag ($\Delta$) of 0.03 sec and a CSI time duration of 8 sec to calculate the d-ACF input to stage (2).

Given the d-ACF from the stage (1), the goal in the Learning stage is to identify patterns that can segregate fall events. The location of the peaks in the d-ACF is related to the speed of movement. Therefore, it is important to keep track of the relative time information in the d-ACF both in the time lag ($\tau$) dimension and the observation time, t. The observation time t could help to differentiate falls from other normal activities that "look" like falls but are slower. For instance, when a door closes, it is possible to have an increasing speed followed by a deceleration period, which is similar to a fall. The duration of this increasing and decreasing speed pattern could be a key feature in differentiating falls from door-closing events. Recurrent Neural Networks (RNNs) are effective at both time series classification and pattern recognition due to their inherent ability to remember and learn correlations among data. The system can adopt the Long-Short Term Memory (LSTM) variation of RNNs to overcome the exploding/vanishing gradient problem and to retain information from past time steps. In some embodiments, FallAware may use other neural network architectures with a similar number of learnable parameters. The output of the Learning stage is a scalar with fall probability pf.

In the Postprocessing stage, a straightforward approach to do a binary classification of fall vs non-fall events is to apply a threshold of 0.5 on pf and classify all activities above the threshold as falls. However, such an approach discards useful information about the value of pf. In some embodiments, instead of using a fixed threshold of 0.5 on pf, the system can apply different thresholds (0-1), to obtain different pairs of detection and false alarm rates, which together formed the ROC curve. Further, instead of using pf from one time instance, t, pf is observed from several previous time instances and its mean value is compared against the threshold. The ROC curve obtained by thresholding on the instantaneous pf is compared against the ROC curve where the threshold is applied on a moving average of pf. When using a window, there are more points on the ROC, closer to the low FAR. This enables users to pick a threshold corresponding to the desired detection rate and tolerable low FAR according to the household scenario. For example, if the user intends to be notified of every potential fall event and can tolerate a few false alarms, the threshold can be set to a very low value. In some examples, given an observation window length (e.g. 5 seconds) and a likelihood threshold, the mean value of pf in the observation window is compared against the threshold to determine if the activity is a fall or a routine activity.

In some embodiments, to generate explainability or explanation of FallAware, an LSTM network is used in stage (2) of FallAware. One can train the LSTM network with fall and routine activities from different environments and test it on unseen environments. However, since it is not practically possible to test on all types of environments, it is vital to verify if the LSTM network is drawing its inferences from the correct regions of the input. Class Activation Maps (CAMs) may be used to highlight the important portions of images in Convolution Neural Networks (CNN). In some embodiments, an approach called Iterative Distortion - Class Activation Map (ID-CAM) is utilized to provide high-resolution importance maps. The explanation may be generated by applying controlled perturbation with various perturbation types and sizes (or degrees) to input data and monitoring how the outcome changes with the perturbation types and sizes. Some controlled perturbation with minimal perturbation sizes that cause bad (or wrong) outcomes to become good (or correct) outcomes may be searched and selected for retraining or refining the classifier (e.g. neural network) of the system. Similarly, some controlled perturbation with minimal perturbation sizes that cause good outcomes to become bad may be selected also for retraining or refining the classifier.

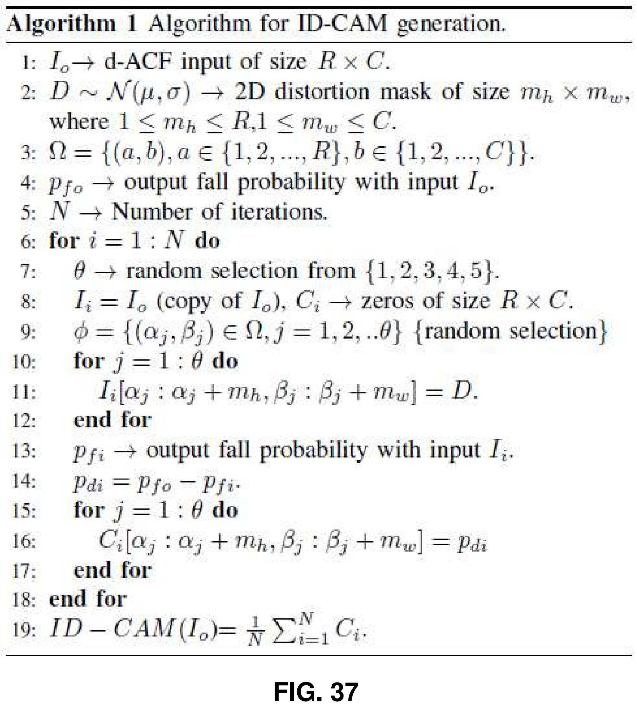

An example method and algorithm of ID-CAM is shown in FIG. 37, according to some embodiments. The idea may be to distort different portions of the input ($I_o$) and observe the corresponding output class probabilities. By averaging the difference between the updated output probabilities ($\rho_{fi}$) and the class probability without input distortion ($\rho_{fo}$), one can obtain the regions that are most important for a decision, as a heatmap. As the number of iterations (N) of distortion increases, the heatmap converges to highlight the most important portions of the input. An example of the convergence of the heatmap can show that after several iterations, the heatmap converges to the high-speed region of the fall, indicating that the network is mostly relying on this part of the data for its fall decision. The observation also aligns with an intuition and the physical differentiating characteristics of a fall from other events. From the true positive and false positive examples, it is evident that highspeed regions contribute the most to a fall decision. On the other hand, for a no-fall decision, the focus region is lower in the vertical dimension (time lag), indicating reliance on low-speed related information. The LSTM network is thus able to generalize well to unseen data and learn to focus on the important regions of the input, justifying the disclosed design. In some embodiments, the ID-CAM is used only to verify the training and to interpret the model's behavior in the design phase, and is not included in the pipeline of FallAware.

In some embodiments, the explainability of FallAware comes from not only IDCAM but also the different system components. First, d-ACF contains speed and gait-related information. Second, the significance of peak locations along the time-lag dimension is directly linked to speed estimations. Further, ID-CAM demonstrates that the network indeed uses the peak and valley locations corresponding to the high-speed regions to make fall decisions.

In some embodiments, motion classification algorithms can be incorporated into the system to account for active pet movements and any resultant false alarms. Adding training data from pets could further enhance FallAware for these scenarios.

In some embodiments, there is no other significant source of motion in the environment at the time of a fall. In some embodiments, in a multi-person scenario, the fallen person will likely get help. In the case of interference from mechanical objects such as the ceiling fan, additional preprocessing might be needed to remove periodic interferences.

In some embodiments, FallAware treats each Tx-Rx link as an independent system. When multiple Tx-Rx links are available in some embodiments, fusing information from multiple Rx can give better insights about the type of motion and improve overall performance.

In some embodiments, the system uses MRC to generate overall d-ACF using information from individual subcarriers. In some embodiments, different subcarrier ACFs could capture/embed speed information of different body parts that can provide more contexts for the learning module of the system to better detect softer falls.

In some embodiments, the present teaching discloses systems and methods for wireless sensing with classifier probing and refinement.

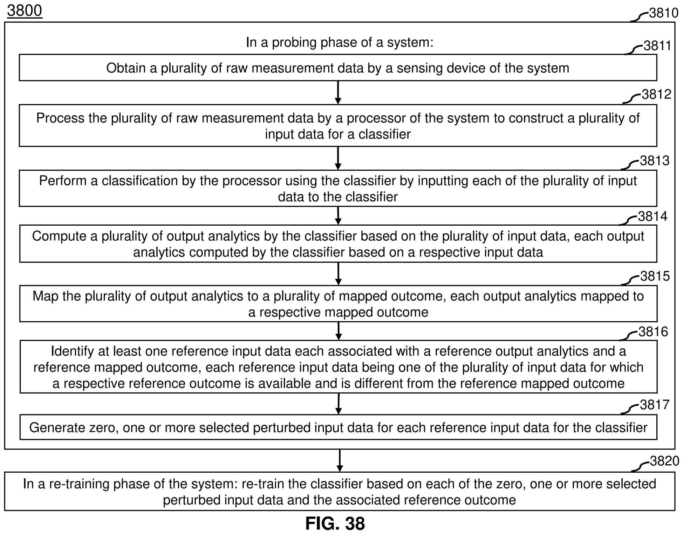

FIG. 38 illustrates a flow chart of an example method 3800 for performing wireless sensing with classifier probing and refinement, according to some embodiments of the present disclosure. In various embodiments, the method 3800 can be performed by the systems disclosed above. As shown in FIG. 38, the operation 3810 in this example includes multiple sub-operations 3811-3817 performed in a probing phase of a system. At sub-operation 3811, a plurality of raw measurement data is obtained by a sensing device of the system. The plurality of raw measurement data is processed by a processor of the system to construct a plurality of input data for a classifier at sub-operation 3812. At sub-operation 3813, a classification is performed by the processor using the classifier by inputting each of the plurality of input data to the classifier. A plurality of output analytics is computed at sub-operation 3814 by the classifier based on the plurality of input data, each output analytics computed by the classifier based on a respective input data.

At sub-operation 3815, the plurality of output analytics is mapped to a plurality of mapped outcome, each output analytics mapped to a respective mapped outcome. At least one reference input data is identified at sub-operation 3816, each associated with a reference output analytics and a reference mapped outcome, each reference input data being one of the plurality of input data for which a respective reference outcome is available and is different from the reference mapped outcome. At sub-operation 3817, zero or at least one selected perturbed input data is generated for each reference input data for the classifier. At operation 3820, the classifier is re-trained in a re-training phase of the system, based on each of the zero or at least one selected perturbed input data and the associated reference outcome.

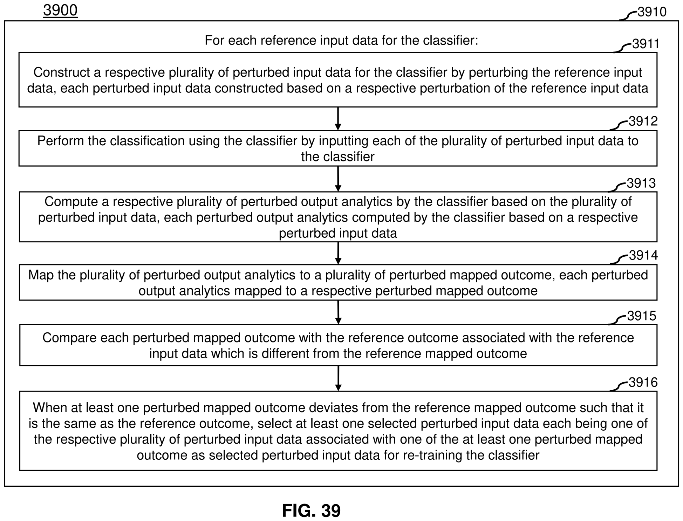

FIG. 39 illustrates a flow chart of an example method 3900 for generating at least one selected perturbed input data, according to some embodiments of the present disclosure. In various embodiments, the method 3900 can be performed by the systems disclosed above. The operation 3910 in this example includes multiple sub-operations 3911~3916 performed for each reference input data for the classifier. At sub-operation 3911, a respective plurality of perturbed input data is constructed for the classifier by perturbing the reference input data, each perturbed input data constructed based on a respective perturbation of the reference input data. At sub-operation 3912, the classification is performed using the classifier by inputting each of the plurality of perturbed input data to the classifier. At sub-operation 3913, a respective plurality of perturbed output analytics is computed by the classifier based on the plurality of perturbed input data, each perturbed output analytics computed by the classifier based on a respective perturbed input data. At sub-operation 3914, the plurality of perturbed output analytics is mapped to a plurality of perturbed mapped outcome, each perturbed output analytics mapped to a respective perturbed mapped outcome. At sub-operation 3915, each perturbed mapped outcome is compared with the reference outcome associated with the reference input data which is different from the reference mapped outcome. At sub-operation 3916, when at least one perturbed mapped outcome deviates from the reference mapped outcome such that it is the same as the reference outcome, at least one selected perturbed input data is selected, each being one of the respective plurality of perturbed input data associated with one of the at least one perturbed mapped outcome as selected perturbed input data for re-training the classifier. In some embodiments, the method 3900 may be performed as part of the operation 3817 in the method 3800.

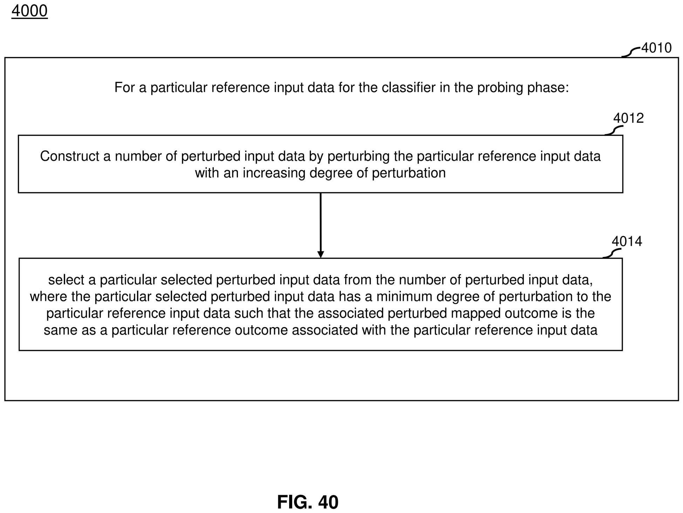

FIG. 40 illustrates a flow chart of an example method 4000 for selecting a particular selected perturbed input data, according to some embodiments of the present disclosure. In various embodiments, the method 4000 can be performed by the systems disclosed above. The operation 4010 in this example includes multiple sub-operations 4012~4014 performed for a particular reference input data for the classifier in the probing phase. At sub-operation 4012, a number of perturbed input data is constructed by perturbing the particular reference input data with an increasing degree of perturbation. At sub-operation 4014, a particular selected perturbed input data is selected from the number of perturbed input data. The particular selected perturbed input data has a minimum degree of perturbation to the particular reference input data such that the associated perturbed mapped outcome is the same as a particular reference outcome associated with the particular reference input data.

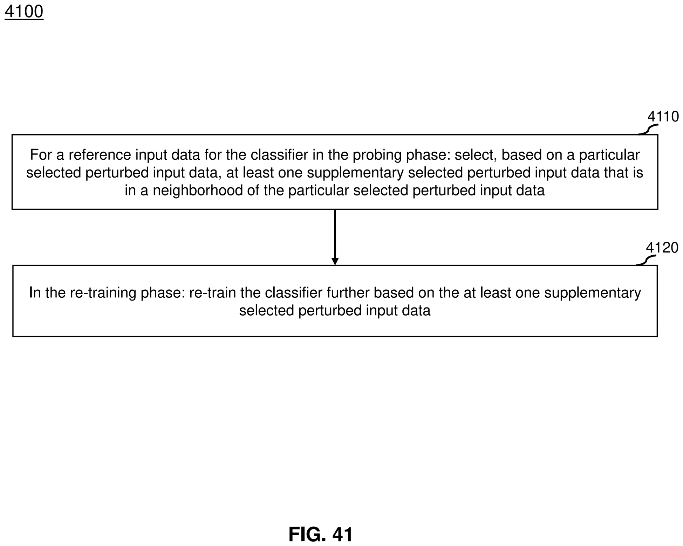

FIG. 41 illustrates a flow chart of an example method 4100 for re-training a classifier based on supplementary selected perturbed input data, according to some embodiments of the present disclosure. In various embodiments, the method 4100 can be performed by the systems disclosed above. At operation 4110, at least one supplementary selected perturbed input data is selected for a reference input data for the classifier in the probing phase, based on a particular selected perturbed input data. The at least one supplementary selected perturbed input data is in a neighborhood of the particular selected perturbed input data. At operation 4120, the classifier is further re-trained based on the at least one supplementary selected perturbed input data, in the re-training phase.

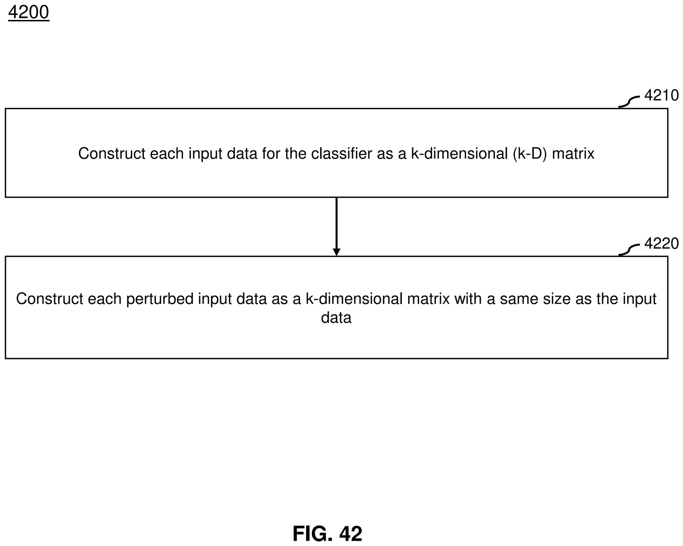

FIG. 42 illustrates a flow chart of an example method 4200 for constructing input data, according to some embodiments of the present disclosure. In various embodiments, the method 4200 can be performed by the systems disclosed above. At operation 4210, each input data is constructed for the classifier as a k-dimensional (k-D) matrix. At operation 4220, each perturbed input data is constructed as a k-dimensional matrix with a same size as the input data.

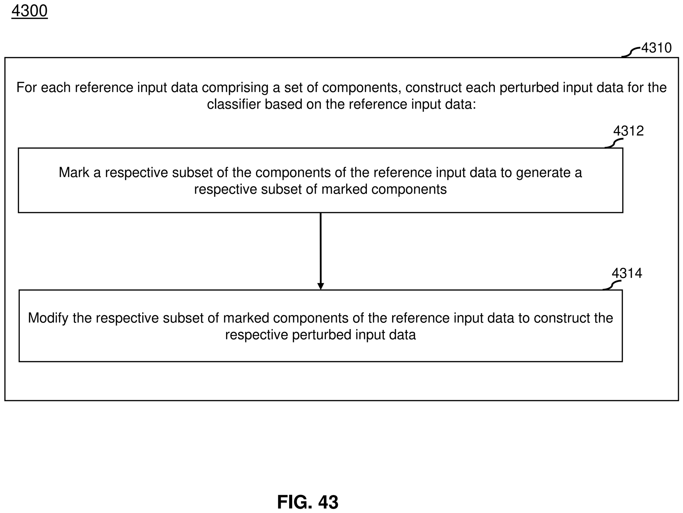

FIG. 43 illustrates a flow chart of an example method 4300 for constructing perturbed input data based on reference input data, according to some embodiments of the present disclosure. In various embodiments, the method 4300 can be performed by the systems disclosed above. The operation 4310 in this example includes multiple sub-operations 4312-4314 performed for each reference input data comprising a set of components to construct each perturbed input data for the classifier based on the reference input data. At sub-operation 4312, a respective subset of the components of the reference input data is marked to generate a respective subset of marked components. At sub-operation 4314, the respective subset of marked components of the reference input data is modified to construct the respective perturbed input data. In some embodiments, the method 4300 may be performed as part of the operation 3911 in the method 3900. In some embodiments, the method 4300 may be performed as part of the operation 4220 in the method 4200.

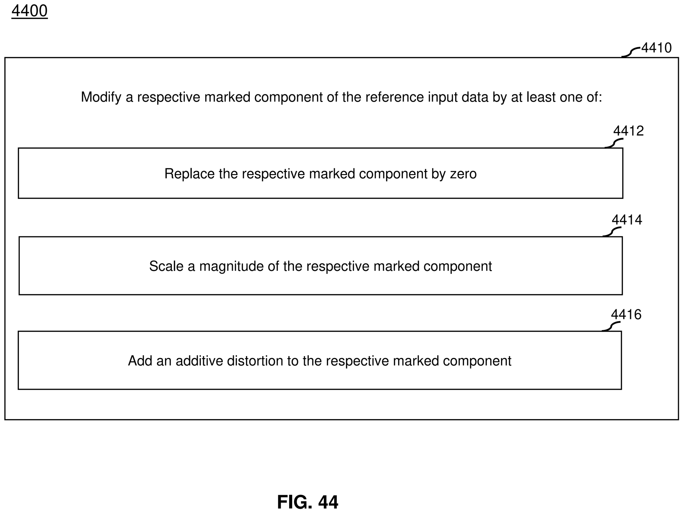

FIG. 44 illustrates a flow chart of an example method 4400 for modifying a respective marked component of the reference input data, according to some embodiments of the present disclosure. In various embodiments, the method 4400 can be performed by the systems disclosed above. At operation 4410, a respective marked component of the reference input data is modified. In this example, the operation 4410 is performed by at least one of the sub-operations 4412~4416. At sub-operation 4412, the respective marked component is replaced by zero. At sub-operation 4414, a magnitude of the respective marked component is scaled. At sub-operation 4416, an additive distortion is added to the respective marked component. In some embodiments, the method 4400 may be performed as part of the operation 4314 in the method 4300.

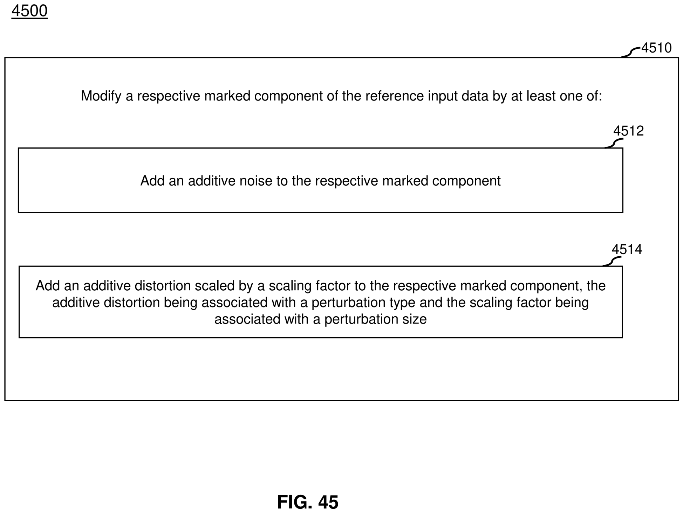

FIG. 45 illustrates a flow chart of another example method 4500 for modifying a respective marked component of the reference input data, according to some embodiments of the present disclosure. In various embodiments, the method 4500 can be performed by the systems disclosed above. At operation 4510, a respective marked component of the reference input data is modified. In this example, the operation 4510 is performed by at least one of the sub-operations 4512-4514. At sub-operation 4512, an additive noise is added to the respective marked component. At sub-operation 4514, an additive distortion scaled by a scaling factor is added to the respective marked component. The additive distortion is associated with a perturbation type. The scaling factor is associated with a perturbation size. In some embodiments, the method 4500 may be performed as part of the operation 4314 in the method 4300.

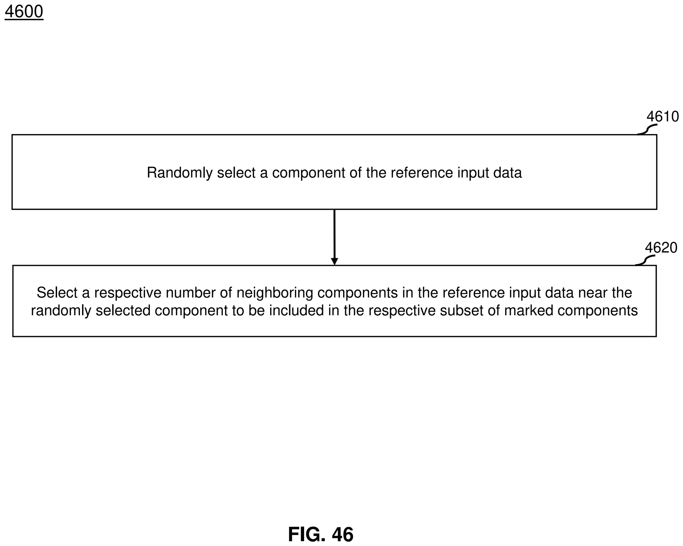

FIG. 46 illustrates a flow chart of an example method 4600 for generating a subset of marked components, according to some embodiments of the present disclosure. In various embodiments, the method 4600 can be performed by the systems disclosed above. At operation 4610, a component of the reference input data is randomly selected. At operation 4620, a respective number of neighboring components is selected in the reference input data near the randomly selected component to be included in the respective subset of marked components. In some embodiments, the method 4600 may be performed as part of the operation 4312 in the method 4300.

In some embodiments, an explainable learning approach is disclosed to perform smart detection/recognition/-classification/monitoring (e.g. FallAware, an explainable learning approach to robust fall detection with WiFi). A disclosed system may comprise at least one device (e.g. Type1 heterogeneous wireless devices/TX, Type2 heterogeneous wireless devices/RX) to perform sensing and/or to obtain/capture/sense raw measurement results (e.g. channel information, CSI, CIR, CFR). The raw measurement results may be preprocessed.

In some embodiments, the raw measurement results may be processed (e.g. filtered, permuted, arranged, organized, and/or formatted) to generate a multi-dimensional input data (e.g. a vector, a 2-dimensional/2D matrix, a 3-dimensional/3D matrix, a k-dimensional/k-D matrix, and/or a sequence/series/ collection/set of k-D matrix) that is fed into a classifier which computes a classification analytics (based on the input data). A classification result may be obtained/-computed for a classification/ sensing task based on the classification analytics.

In some embodiments, in a training phase, a plurality of training raw measurement results may be obtained/captured/sensed, which may be processed to generate multi-dimensional training input data ("training data") to train the classifier.

In some embodiments, in a refining/enhancement/targeted-training/fine-tuning/perturbation/ deviation phase, some additional raw measurement results may be obtained and processed to generate a particular multi-dimensional input data (called "reference input"). The particular input data is fed into the classifier which outputs/computes a particular classification analytics (called "reference analytics"). The reference input may comprise a plurality of components/elements (e.g. elements of k-dimensional matrix). It may be a 1-D matrix, which is an M-tuple vector with M components. It may be a MxN 2-D matrix with MN components. It may be a MxNxK 3-D matrix with MNK components. It may a k-D matrix of dimension N1xN2x.. xNk with N1*N2*.. *Nk components. Or it may be a collection/series/ sequence/set of k-D matrices.

In some embodiments, a plurality of modified/variant/perturbed input data may be computed/generated based on the reference input. To generate each modified/variant input datum (data), a respective subset of components of the reference input may be marked/defined/identified/determined. For example, the respective subset of marked components may be determined by generating a random number P (e.g. a random number between 1 and Q, wherein Q is less than or equal to a cardinality of the plurality of components; different modified/variant/perturbed input data may have different P) and then randomly selecting P components among all the plurality components as the respective subset of marked components. In another example, a random number P may be generated and then P random components of the reference input may be selected. For each of the P selected random components, a set of components in a respective neighborhood of the selected random component may be selected to constitute/form/generate the respective subset of marked components. If the reference input is a k1-D matrix, the neighborhood of the random component may be (all or part of, such as a subsampled/downsampled/punctured version of) a k2-D sub-matrix of the k-D matrix, wherein k2<=k1. For different selected random components, different neighborhood (e.g. any of 1D/2D/3D/.. neighborhood, or multiple k2-D neighborhood with different amount of neighbors) may be used.

In some embodiments, to generate each modified/variant/perturbed input data, a respective modification procedure may be applied to the respective subset of marked components of the reference input. The modification may comprise any of: forcing components to be zero, reducing magnitude of components, filtering/blurring/ averaging/lowpassing the components, or adding noise to the components.

In some embodiments, each modified/variant/perturbed input data may be fed into the classifier to output/compute a respective classification analytics (called "modified analytics" or "variant analytics" or "perturbed analytics"). The respective modified/variant/perturbed analytics may be compared with the reference analytics. A respective analytics deviation (or first similarity score, or deviation score, or perturbation score) between the reference analytics and the modified/variant/perturbed analytics (e.g. comprising a difference, a quotient/division, and/or an aggregation). For each modified/variant/perturbed input data, a desirable/desired/allowed/ideal deviation may be obtained (e.g. from a user). The respective analytics deviation (perturbation score) may be further compared with the desired deviation.

In some embodiments, in the refining phase, the classifier may be modified/varied/adjusted/ adapted such that, among all the plurality of modified/variant/perturbed input data, the respective analytics deviation (perturbation score) may be comparable/similar to the desired deviation. Additional reference input data may be used such that the classifier may be modified in such a way so that the respective analytics deviation (perturbation score) may be comparable/similar to the respective desired deviation for all the reference input and for all modified/variant/perturbed input data associated with each reference input. A desirability score/second similarity score (e.g. correlation) between the desired deviation and the respective analytics deviation (perturbation score) may be computed.

In some embodiments, in the refining phase, a modified/variant/perturbed input data associated with a large/high similarity between the desired deviation and respective first analytics deviation/ similarity score(e.g. as indicated by large (or small) desirability score/second similarity score, greater than (or smaller than) a first threshold) may be selected to be used as additional training data to modify/adjust/adapt/ train/reinforce the classifier, while a modified/variant/perturbed input data associated with a small/low similarity (e.g. as indicated by small (or large) desirability score/second similarity score, less than (or greater than) a second threshold) may not be selected. Alternatively, a modified/variant/perturbed input data associated with the small/low similarity may be selected to be negative training data to modify/adjust/adapt/-train/suppress the classifier.

In some embodiments, the classifier may be modified/varied/adjusted/adapted/trained to favor (or respond to or be sensitive to) modified/variant/perturbed input data with high (or low) desirability score/second similarity score and to avoid (or not respond to or be insensitive to) from modified/variant/perturbed input data with low (or high) desirability score/second similarity score.

In some embodiments, a classifier may take "input data" (e.g. any of CI, TSCI, ACF, STI/MI/MS, input analytics) as input and may output numerical "output analytics" or simply "output" or "analytics" (e.g. one or more scalar quantity, vector/matrix, etc.) that may be used to determine many possible outcomes. The possible outcome may be determined based on/by thresholding/mapping/vector quantization of some output analytics. Each input data may be arranged/organized/formed/computed as a k-dimensional (k-D) matrix. Each input data may comprise a k-D matrix.

In some embodiments, in a testing/probing stage (or phase) for the classifier, some identified input data (e.g. training data used for training classifier, operation data collected for continuous improvement) with corresponding feedback of classifier outcome (e.g. training outcome of labeled training data, user feedback, or feedback obtained from "long term" analysis of input data and corresponding outcome wherein "long-term" may be a duration such as one or more day/week/month/year, etc.) available may be identified. The identified input data ("reference input data") may be fed into the classifier to obtain/generate corresponding classifier output/outcome ("reference output"/"reference outcome").

In some embodiments, some "perturbed data" may be generated based on some respective perturbation/modification/ distortion/change to each of the identified input data. The perturbed data may be fed to the classifier to obtain/generate corresponding classifier output/outcome ("perturbed output"/"perturbed outcome"). For each identified input data, each of the perturbed output/ outcome may be compared with the reference output/outcome. Some of perturbed data associated with the identified input data may be selected (e.g. those with perturbed outcome being difference/ deviated from the reference outcome). The identified input with at least one selected perturbed data may be marked. An identified input without any selected perturbed data may not be marked.

In some embodiments, after the testing/probing stage, in a classifier adaptation/ongoing-learning/improvement/enhancement/refinement/retraining stage, the selected perturbed data may be used to train/re-train/enhance/adapt/improve the identifier. A number, N2, of perturbed data may be generated systematically/stochastically based on each of a number, N1, of identified input data. The set of N1 identified input data may comprise any/all input data. Alternatively the set of N1 identified input data may comprise some/all input data that give rise to correct/incorrect/borderline outcome.

In some embodiments, different perturbed data perturbed from a particular/same identified input data may have different type/amount of perturbation/distortion/deviation w.r.t. the particular/same identified input data. In the case of the particular input data being a multi-dimensional data, different perturbed data may have same/different perturbation/distortion/deviation "types", with perturbation/deviation/ distortion in same/different dimensions (or directions), and/or same/different combination/amount of dimensions (or directions).

In some embodiments, for perturbed data of the same perturbation/distortion/deviation type (i.e. with same combination/ amount of dimensions/directions), different perturbed data may have same/different perturbation/ distortion/deviation "size", with same/different amount of deviation/perturbation/distortion in respective common dimensions/-directions. For example, the particular input data may be k-dimensional (k-D). Some perturbed data may have distortion/ perturbation/deviation in one dimension, some in two dimensions, .., some in k-1 dimensions, and/or some in k dimensions. For those with distortion/perturbation/deviation in one dimension, some may be in first dimension, some in second dimension, .., some in k^{th} dimension. For those with distortion/perturbation/deviation in one direction, some may be in first direction, some in second direction, etc. For those with distortion in a particular dimension/direction, some may have different distortion/distance: some with distance/distortion of 1, some with distance 1.7, some with distance 2, and so on. Any distance/distortion may be L1, L2, L3, and so on.

In some embodiments, each perturbed data perturbed from the particular input data (reference input data) may be fed into the classifier to give the respective perturbed output analytics which determine the respective perturbed outcome. Some of such respective perturbed outcomes may be the same as the particular outcome of the particular input (reference outcome), while some may be different. There may be four cases: (a) reference outcome is correct and respective perturbed outcome is correct/same, (b) reference outcome is correct and perturbed outcome is incorrect/different, (c) reference outcome is incorrect and perturbed outcome is incorrect/same, (d) reference outcome is incorrect and perturbed outcome is correct/different.

In some embodiments, for each perturbation/distortion/deviation type (i.e. for each combination of dimensions/directions), a corresponding perturbation size (e.g. distortion/deviation size) may be determined such that the perturbed outcome is flipped/changed/toggled/different. When the perturbation size is zero, the perturbed outcome is same as the reference outcome, because there is zero distortion/perturbation. As the perturbation size increases (e.g. by performing a search in a respective search range, from 0 up to a respective search range limit; different type may have different search range limit; the different search range limit may be associated with a (stochastic) distribution of "reasonable" perturbation), there may be a particular perturbation size when the corresponding perturbed outcome becomes different/flipped/toggled/changed. The perturbed data associated with the particular perturbation size may be selected to be a selected perturbed data for refining the classifier in a refining stage. A reasonable perturbation of a reference input data may be a deviation/ perturbation/distortion/change that may reasonably be generated by the same state/venue/ object(s)/motion/action/movement that generated the reference input data. In addition, for the distortion type, one or more additional perturbed data with perturbation size in a neighborhood of the particular perturbation size may be selected. Suppose m is the particular perturbation size at which the perturbed outcome first flipped/changed/toggled/differed. The additional selected perturbed data may comprise one or more of those with perturbation size of m+1, m+2, .. , m-1, m-2 ,m-3, ....

In some embodiments, a "borderline" input data may be an input data of which at least one selected perturbed data is found in the respective search range. In a way, the collection of all possible borderline input data may define the decision boundary (e.g. hyper boundary, manifold) of the input data corresponding to various outcome (for the classifier). Such borderline input data may be useful as supplementary/ refinement/enhancement/additional/adaptation data to improve/retrain the classifier.

In some embodiments, in the search of perturbation size in a search range (e.g. from 1 to respective limit associated with the perturbation/distortion/deviation type), if the perturbed outcome do not flip/change (i.e. no perturbation size with flipped/changed perturbed outcome (compared with the particular outcome) is found), no perturbed data may be selected. In some embodiments, in the search of perturbation size in the search range, if the perturbed outcome flipped/changed more than one time, then the perturbation size at/near the change point (e.g. the perturbation sizes before and after the change) may be selected.

In some embodiments, the refining stage may happen after the testing/probing stage. In the refining stage, the classifier may be further trained/re-trained/enhanced with all the selected perturbed data.

In some embodiments, for a particular (reference) input data, the classifier may output a particular output analytics (reference analytics/output/output analytics). The classifier may comprise any of: support vector machine (SVM), kernel-based SVM, neural network (NN), deep neural network (DN), convolutional NN (CNN), recurrent NN (RNN), long short-term memory network (LSTM), deep belief network (DBN), generative adversarial network (GAN), conditional GAN (cGAN), transformer, encoder-decoder, denoising autoencoder (DAE), neural radiance field, radial basis function network, multilayer perceptron (MLP), or self organizing map (SOM). The possible outcome may comprise any of: state, event, location, gesture, action, identity, such as "event happened", "event not happened", "fall down detected", "fall down not detected", "motion/movement detected", "motion/movement not detected", "object at location 1", "object at location 2", "event 1", "event 2", "object walking", "object running", "object dancing", "intruder detected", "pet detected", "vacuum cleaner detected", "father detected", "mother detected", "child detected", etc.

In some embodiments, the input data may be a k-D matrix A. It may have many components/elements (e.g. matrix elements). Suppose it is a 2D matrix $A=[a(i,j)]$. Then the components/elements are all the matrix elements $a(i,j)$, where $(i,j)$ is a component coordinate/location. A "distance" (e.g. component-to-component distance) may be defined between any two components $a(i1, j1)$ and $a(i2, j2)$. The distance may be L1-distance which is $abs(i1-i2)+abs(j1-j2)$, or L2-distance which is $sqrt[(i1-i2)^2+(j1-j2)^2]$, or any Lk-distance. Based on the distance, a neighborhood can be defined for any component $a(i,j)$, and the neighboring components can be identified. A neighborhood may be un-directional or omni-directional, comprising all components within a distance D. Such a neighborhood may resemble a ball/circle/sphere/high-dimensional sphere, if it is defined using L2-distance in all directions. It may resemble a square/cube/hyper-cube/high-dimensional cube, if it is defined using L1-distance in all directions. It neighborhood may be directional with different distance in difference direction.

In some embodiments, the classifier may be refined/improved/adjusted/adapted/trained by reinforcing the classifier's "correct" responses and suppressing "incorrect" responses. The classifier may be designed to react strongly to some input variations/perturbations and react mildly to other input variations/ perturbations. When an input data is perturbed/varied in a first way, it may be desirable that the output is perturbed strongly (i.e. large deviation from or low similarity to the output/response to initial/unperturbed input data). And it may undesirable that the output is perturbed only mildly (i.e. small deviation from or high similarity to the output/response to initial/unperturbed input data). When the input data is perturbed/varied in a second way, it may be desirable that the output is perturbed mildly (i.e. small deviation from or high similarity to the output/response to initial/unperturbed input data). In other words, it may be undesirable that the output is perturbed strongly.

In some embodiments, to test whether the classifier is responding in a desired way to input data perturbation, many reference input data may be identified. For each reference input data, perturbation may be applied and a number of variants (perturbations) of the reference input data (called "perturbed input data") may be obtained. Each perturbed input data may be fed as input into the classifier to get corresponding output (called "perturbed analytics").

In some embodiments, to gauge the sensitivity of the classifier to input perturbation (e.g. strong/weak response to input perturbation), deviation of each perturbed analytics from the reference analytics (analytics deviation, or perturbation score) may be computed. In some embodiments, to gauge the correctness of the response to input perturbation, an analytics deviation (e.g. perturbation score) may be compared with some desired values - a desirability score between the perturbation score and the desired value may be computed. If the analytic deviations resemble the desired values (with high degree of similarity, e.g. desirability score greater than some threshold), the response is "correct".

In some embodiments, there may be many possible perturbations. The classifier output response may be "correct" (e.g. desirability score greater than first threshold) for some perturbation and not so correct (e.g. desirability score less than second threshold) for other perturbation.

In some embodiments, to reinforce the correct responses and suppress the incorrect responses, the input perturbation (i.e. perturbed input data) corresponding to correct responses may be used as positive training data to re-train/adapt the classifier and input perturbation corresponding to incorrect responses may be used as negative training data. Some input perturbation may not be associated with any correct or incorrect responses and may not be used to re-train/adapt the classifier.

The following numbered clauses provide examples for wireless sensing with classifier probing and refinement.

Clause C446_1. A method performed by a system for wireless sensing with classifier probing and refinement, comprising: in a probing phase of the system: obtaining a plurality of raw measurement data by a sensing device of the system, processing the plurality of raw measurement data by a processor of the system to construct a plurality of input data for a classifier, performing a classification by the processor using the classifier by inputting each of the plurality of input data to the classifier, computing a plurality of output analytics by the classifier based on the plurality of input data, each output analytics computed by the classifier based on a respective input data, mapping the plurality of output analytics to a plurality of mapped outcome, each output analytics mapped to a respective mapped outcome, identifying at least one reference input data each associated with a reference output analytics and a reference mapped outcome, each reference input data being one of the plurality of input data for the classifier for which a respective reference outcome is available and is different from the reference mapped outcome, and for each reference input data for the classifier: constructing a respective plurality of perturbed input data for the classifier by perturbing the reference input data, each perturbed input data constructed based on a respective perturbation of the reference input data, performing the classification using the classifier by inputting each of the plurality of perturbed input data to the classifier, computing a respective plurality of perturbed output analytics by the classifier based on the plurality of perturbed input data, each perturbed output analytics computed by the classifier based on a respective perturbed input data, mapping the plurality of perturbed output analytics to a plurality of perturbed mapped outcome, each perturbed output analytics mapped to a respective perturbed mapped outcome, comparing each perturbed mapped outcome with the reference outcome associated with the reference input data which is different from the reference mapped outcome, and when at least one perturbed mapped outcome deviates from the reference mapped outcome such that it is the same as the reference outcome, selecting at least one selected perturbed input data each being one of the respective plurality of perturbed input data associated with one of the at least one perturbed mapped outcome as selected perturbed input data for re-training the classifier; and in a re-training phase of the system: re-training the classifier based on each of the at least one selected perturbed input data and the associated reference outcome.

Clause C446_2. The method of clause C446_1, further comprising: for a particular reference input data for the classifier in the probing phase: constructing a number of perturbed input data by perturbing the particular reference input data with an increasing degree of perturbation; and selecting a particular selected perturbed input data from the number of perturbed input data, wherein the particular selected perturbed input data has a minimum degree of perturbation to the particular reference input data such that the associated perturbed mapped outcome is the same as a particular reference outcome associated with the particular reference input data.

Clause C446_3. The method of clause C446_2, further comprising: for the particular reference input data for the classifier in the probing phase: performing a search among the number of perturbed input data in search of the particular selected perturbed input data, wherein the search comprises one of: full exhaustive search, sequential search with early termination, binary search, or another fast search.

Clause C446_4. The method of clause C446_1, further comprising: for a reference input data for the classifier in the probing phase: selecting, based on a particular selected perturbed input data, at least one supplementary selected perturbed input data that is in a neighborhood of the particular selected perturbed input data; and in the re-training phase: re-training the classifier further based on the at least one supplementary selected perturbed input data.

Clause C446_5. The method of clause C446_4, wherein: the at least one supplementary selected perturbed input data comprise at least one of a number of perturbed input data that (1) are next to the particular selected perturbed input data and (2) have a minimal decrease or increase of degree of perturbation compared with the particular selected perturbed input data.

Clause C446_6. The method of clause C446_1, further comprising: receiving, by the sensing device, a wireless signal from a wireless device through a wireless channel of a venue, wherein the plurality of raw measurement data comprise a time series of channel information (TSCI) of the wireless channel obtained by the sensing device based on the received wireless signal.

Clause C446_7. The method of clause C446_1, further comprising: mapping each output analytics to a respective mapped outcome based on at least one of: a nonlinear function of the output analytics, a vector quantization of the output analytics, or a thresholding of the output analytics.

Clause C446_8. The method of clause C446_1, further comprising: for each of a plurality of perturbation types, constructing at least one perturbed input data by perturbing a reference input data based on the perturbation type.

Clause C446_9. The method of clause C446_1, further comprising: constructing each input data for the classifier as a k-dimensional (k-D) matrix; and constructing each perturbed input data as a k-dimensional matrix with a same size as the input data.

Clause C446_10. The method of clause C446_9, further comprising: for each reference input data comprising a set of components, constructing each perturbed input data for the classifier based on the reference input data by: marking a respective subset of the components of the reference input data to generate a respective subset of marked components, and modifying the respective subset of marked components of the reference input data to construct the respective perturbed input data.

Clause C446_11. The method of clause C446_10, further comprising: modifying a respective marked component of the reference input data by at least one of: replacing the respective marked component by zero, scaling a magnitude of the respective marked component, or adding an additive distortion to the respective marked component.

Clause C446_12. The method of clause C446_10, further comprising: modifying a respective marked component of the reference input data by at least one of: adding an additive noise to the respective marked component; or adding an additive distortion scaled by a scaling factor to the respective marked component, wherein the additive distortion is associated with a perturbation type and the scaling factor is associated with a perturbation size.

Clause C446_13. The method of clause C446_10, wherein marking the respective subset of the components of the reference input data to generate the respective subset of marked components comprises: randomly selecting a component of the reference input data; and selecting a respective number of neighboring components in the reference input data near the randomly selected component to be included in the respective subset of marked components.

Clause C446_14. The method of clause C446_13, wherein: each input data is a k-dimensional (k-D) matrix, the input data being the reference input data or any perturbed input data; each component of the input data is a matrix element of the k-D matrix; a first matrix element of the k-D matrix is a neighboring component near a second matrix element of the k-D matrix if a distance between coordinates of the two matrix elements is less than a threshold; the respective number of selected neighboring components in the reference input data comprise a local neighborhood of matrix elements of the k-D matrix near the randomly selected component; and the respective number of selected neighboring components in the reference input data are the respective subset of marked components.

Clause C446_15. The method of clause C446_13, wherein: each input data is a k-dimensional (k-D) matrix, the input data being the reference input data or any perturbed input data; each component of the input data is a matrix element of the k-D matrix; a first matrix element of the k-D matrix is a neighboring component near a second matrix element of the k-D matrix if a distance between coordinates of the two matrix elements is less than a threshold; the respective number of selected neighboring components in the reference input data comprise a sub-matrix of matrix elements of the k-D matrix near the randomly selected component; and the sub-matrix is a (k2)-dimensional (k2-D) sub-matrix comprising the randomly selected component, wherein k2<=k.

Clause C446_16. The method of clause C446_1, wherein the classifier comprises at least one of: support vector machine (SVM), kernel-based SVM, neural network (NN), deep neural network (DN), convolutional NN (CNN), recurrent NN (RNN), long short-term memory network (LSTM), deep belief network (DBN), generative adversarial network (GAN), conditional GAN (cGAN), transformer, encoder-decoder, denoising autoencoder (DAE), neural radiance field, radial basis function network, multilayer perceptron (MLP), or self organizing map (SOM).

Clause C446_17. A system for wireless sensing with classifier probing and refinement, comprising: a sensing device configured to obtain a plurality of raw measurement data in a probing phase of the system; and a classifier comprising a memory and a processor configured in the probing phase of the system to: process the plurality of raw measurement data to construct a plurality of input data, perform a classification using each of the plurality of input data as input to the classifier, compute a plurality of output analytics based on the plurality of input data, each output analytics computed based on a respective input data, map the plurality of output analytics to a plurality of mapped outcome, each output analytics mapped to a respective mapped outcome, identify at least one reference input data each associated with a reference output analytics and a reference mapped outcome, each reference input data being one of the plurality of input data for the classifier for which a respective reference outcome is available and is different from the reference mapped outcome, and for each reference input data for the classifier: construct a respective plurality of perturbed input data for the classifier by perturbing the reference input data, each perturbed input data constructed based on a respective perturbation of the reference input data, perform the classification using each of the plurality of perturbed input data as input to the classifier, compute a respective plurality of perturbed output analytics based on the plurality of perturbed input data, each perturbed output analytics computed based on a respective perturbed input data, map the plurality of perturbed output analytics to a plurality of perturbed mapped outcome, each perturbed output analytics mapped to a respective perturbed mapped outcome, compare each perturbed mapped outcome with the reference outcome associated with the reference input data which is different from the reference mapped outcome, and when at least one perturbed mapped outcome deviates from the reference mapped outcome such that it is the same as the reference outcome, select at least one selected perturbed input data each being one of the respective plurality of perturbed input data associated with one of the at least one perturbed mapped outcome as selected perturbed input data for re-training the classifier, wherein the processor is configured to re-train the classifier based on each of the at least one selected perturbed input data and the associated reference outcome in a re-training phase of the system.

Clause C446_18. The system of clause C446_17, wherein the processor is further configured to: for a particular reference input data for the classifier in the probing phase: construct a number of perturbed input data by perturbing the particular reference input data with an increasing size of perturbation; and select a particular selected perturbed input data from the number of perturbed input data, wherein the particular selected perturbed input data has a minimum size of perturbation to the particular reference input data such that the associated perturbed mapped outcome is the same as a particular reference outcome associated with the particular reference input data.

Clause C446_19. The system of clause C446_18, wherein the processor is further configured to: for the particular reference input data for the classifier in the probing phase: perform a search among the number of perturbed input data in search of the particular selected perturbed input data, wherein the search comprises one of: full exhaustive search, sequential search with early termination, binary search, or another fast search.

Clause C446_20. The system of clause C446_17, wherein the processor is further configured to: for a reference input data for the classifier in the probing phase: select, based on a particular selected perturbed input data, at least one supplementary selected perturbed input data that is in a neighborhood of the particular selected perturbed input data; and in the re-training phase: re-train the classifier further based on the at least one supplementary selected perturbed input data.

Clause C446_21. The system of clause C446_17, wherein the processor is further configured to: map each output analytics to a respective mapped outcome based on at least one of: a nonlinear function of the output analytics, a vector quantization of the output analytics, or a thresholding of the output analytics.

Clause C446_22. The system of clause C446_17, wherein the processor is further configured to: construct each input data for the classifier as a k-dimensional (k-D) matrix; and construct each perturbed input data as a k-dimensional matrix with a same size as the input data.

Clause C446_23. The system of clause C446_22, wherein the processor is further configured to: for each reference input data comprising a set of components, construct each perturbed input data for the classifier based on the reference input data by: marking a respective subset of the components of the reference input data to generate a respective subset of marked components, and modifying the respective subset of marked components of the reference input data to construct the respective perturbed input data.

Clause C446_24. The system of clause C446_23, wherein the processor is further configured to: modify a respective marked component of the reference input data by at least one of: replacing the respective marked component by zero, scaling a magnitude of the respective marked component, or adding an additive distortion to the respective marked component.

Clause C446_25. The system of clause C446_23, wherein the processor is further configured to: modify a respective marked component of the reference input data by at least one of: adding an additive noise to the respective marked component; or adding an additive distortion scaled by a scaling factor to the respective marked component, wherein the additive distortion is associated with a perturbation type and the scaling factor is associated with a perturbation size.

Clause C446_26. The system of clause C446_23, wherein marking the respective subset of the components of the reference input data to generate the respective subset of marked components comprises: randomly selecting a component of the reference input data; and selecting a respective number of neighboring components in the reference input data near the randomly selected component to be included in the respective subset of marked components.

Clause C446_27. A device for wireless sensing with classifier probing and refinement, comprising: a receiver configured to obtain a plurality of raw measurement data in a probing phase of the device; and a classifier comprising a memory and a processor configured in the probing phase of the device to: process the plurality of raw measurement data to construct a plurality of input data, perform a classification using each of the plurality of input data as input to the classifier, compute a plurality of output analytics based on the plurality of input data, each output analytics computed based on a respective input data, map the plurality of output analytics to a plurality of mapped outcome, each output analytics mapped to a respective mapped outcome, identify at least one reference input data each associated with a reference output analytics and a reference mapped outcome, each reference input data being one of the plurality of input data for the classifier for which a respective reference outcome is available and is different from the reference mapped outcome, and for each reference input data for the classifier: construct a respective plurality of perturbed input data for the classifier by perturbing the reference input data, each perturbed input data constructed based on a respective perturbation of the reference input data, perform the classification using each of the plurality of perturbed input data as input to the classifier, compute a respective plurality of perturbed output analytics based on the plurality of perturbed input data, each perturbed output analytics computed based on a respective perturbed input data, map the plurality of perturbed output analytics to a plurality of perturbed mapped outcome, each perturbed output analytics mapped to a respective perturbed mapped outcome, compare each perturbed mapped outcome with the reference outcome associated with the reference input data which is different from the reference mapped outcome, and when at least one perturbed mapped outcome deviates from the reference mapped outcome such that it is the same as the reference outcome, select at least one selected perturbed input data each being one of the respective plurality of perturbed input data associated with one of the at least one perturbed mapped outcome as selected perturbed input data for re-training the classifier, wherein the processor is configured to re-train the classifier based on each of the at least one selected perturbed input data and the associated reference outcome in a re-training phase of the device.

Clause C446_28. The device of clause C446_27, wherein the processor is further configured to: for a particular reference input data for the classifier in the probing phase: construct a number of perturbed input data by perturbing the particular reference input data with an increasing degree of perturbation; and select a particular selected perturbed input data from the number of perturbed input data, wherein the particular selected perturbed input data has a minimum degree of perturbation to the particular reference input data such that the associated perturbed mapped outcome is the same as a particular reference outcome associated with the particular reference input data.

Clause C446_29. The device of clause C446_27, wherein the processor is further configured to: for a reference input data for the classifier in the probing phase: select, based on a particular selected perturbed input data, at least one supplementary selected perturbed input data that is in a neighborhood of the particular selected perturbed input data; and in the re-training phase: re-train the classifier further based on the at least one supplementary selected perturbed input data.

Clause C446_30. The device of clause C446_27, wherein the processor is further configured to: map each output analytics to a respective mapped outcome based on at least one of: a nonlinear function of the output analytics, a vector quantization of the output analytics, or a thresholding of the output analytics.

Clause 446_1. A method/system/device/software of refining a classifier, comprising: in a refining phase: obtaining a plurality of raw measurement data by a sensing device of the system; processing the plurality of raw measurement data by a processor to construct at least one reference input data for a classifier; performing a classification by using each of the at least one reference input data as input to the classifier; computing at least one reference output analytics by the classifier based on the at least one reference input data, each reference output analytics computed by the classifier based on a respective reference input data; for each reference input data: construct a respective plurality of perturbed input data for the classifier by perturbing the reference input data by the processor, each perturbed input data constructed based on a respective perturbation of the reference input data, performing a classification by using each of the plurality of perturbed input data as input to the classifier, computing a respective plurality of perturbed output analytics by the classifier based on the plurality of perturbed input data, each perturbed output analytics computed by the classifier based on a respective perturbed input data, computing a plurality of perturbation scores by the processor based on the plurality of perturbed output analytics and the reference output analytics associated with the reference input data, each perturbation score being between the reference output analytics and a respective perturbed output analytics, and computing a plurality of desirability scores by the processor based on the plurality of perturbation scores and a plurality of desired similarity scores, each desirability score being between a respective perturbation score and a respective desired similarity score; adjusting the classifier based on the plurality of reference input data, the plurality of perturbed input data associated with each reference input data, the plurality of desirability scores.

Clause 446_2. The method/system/device/software of refining the classifier of clause 446_1, further comprising: preprocessing the plurality of raw measurement data.

Clause 446_3. The method/system/device/software of refining the classifier of any of clauses 1 to 2, wherein: the plurality of raw measurement data comprises a time series of channel information (TSCI) of a wireless channel of a venue obtained from a wireless signal transmitted by a Type1 heterogeneous wireless device through the wireless channel and received by a Type2 heterogeneous wireless device; the sensing device is the Type2 device.

Clause 446_4. The method/system/device/software of refining the classifier of any of clauses 1 to 3, further comprising: constructing the at least one reference input data for the classifier as a k-dimensional (k-D) matrix.

Clause 446_5. The method/system/device/software of refining the classifier of any of clauses 1 to 4, further comprising: wherein the reference input data comprises a set of components; for each reference input data, constructing each perturbed input data for the classifier based on the reference input data by: marking a respective subset of the components of the reference input data, and modifying the respective subset of marked components of the reference input data to construct the respective perturbed input data.

Clause 446_6. The method/system/device/software of refining the classifier of clause 446_5, further comprising: modifying a respective marked component of the reference input data by replacing the respective marked component by zero.

Clause 446_7. The method/system/device/software of refining the classifier of clause 446_5, further comprising: modifying a respective marked component of the reference input data by scaling a magnitude of the respective marked component.

Clause 446_8. The method/system/device/software of refining the classifier of clause 446_5, further comprising: modifying a respective marked component of the reference input data by adding an additive distortion to the respective marked component.

Clause 446_9. The method/system/device/software of refining the classifier of clause 446_8, further comprising: modifying a respective marked component by adding additive noise to the marked component.

Clause 446_10. The method/system/device/software of refining the classifier of clause 446_5, further comprising: modifying the subset of marked components by filtering the subset of marked components.

Clause 446_11. The method/system/device/software of refining the classifier of clause 446_5, further comprising: marking the subset of the components of the reference input data by: randomly selecting a component of the reference input data, and selecting a respective number of neighboring components in the reference input data near the randomly selected component to be included in the subset of marked components.

Clause 446_12. The method/system/device/software of refining the classifier of clause 446_11: wherein each input data is a k-dimensional (k-D) matrix, the input data being the reference input data or any perturbed input data; wherein each component of the input data is a matrix element of the k-D matrix; wherein a first matrix element of the k-D matrix is a neighboring component near a second matrix element of the k-D matrix if a distance between the two matrix elements is less than a threshold.

Clause 446_13. The method/system/device/software of refining the classifier of clause 446_12: wherein the respective number of selected neighboring components in the reference input data comprise a sub-matrix of matrix elements of the k-D matrix near the randomly selected component.

Clause 446_14. The method/system/device/software of refining the classifier of clause 446_13: wherein the sub-matrix is a k-D sub-matrix comprising the randomly selected component.

Clause 446_15. The method/system/device/software of refining the classifier of clause 446_11, further comprising: selecting the respective number of neighboring components in the reference input data near the randomly selected component as the subset of marked components.

Clause 446_16. The method/system/device/software of refining the classifier of clause 446_5, further comprising: for each reference input data and for each of the set of components of the respective reference input data: selecting a respective number of neighboring components in the reference input data near the respective component of the respective reference input data to be included in the subset of marked components associated with a respective perturbed input data.

Clause 446_17. The method/system/device/software of refining the classifier of clause 446_16: wherein each input data is a k-dimensional (k-D) matrix, the input data being the reference input data or any perturbed input data; wherein each component of the input data is a matrix element of the k-D matrix; wherein a first matrix element of the k-D matrix is a neighboring component near a second matrix element of the k-D matrix if a distance between the two matrix elements is less than a threshold.

Clause 446_18. The method/system/device/software of refining the classifier of clause 446_17: wherein the respective number of selected neighboring components in the reference input data comprise a sub-matrix of matrix elements of the k-D matrix near the respective component of the respective reference input data.

Clause 446_19. The method/system/device/software of refining the classifier of clause 446_18: wherein the sub-matrix is a (k2)-dimensional (k2-D) sub-matrix comprising the respective component, wherein k2<=k.

Clause 446_20. The method/system/device/software of refining the classifier of clause 446_19: wherein the sub-matrix is a k-D sub-matrix comprising the respective component.

Clause 446_21. The method/system/device/software of refining the classifier of clause 446_16, further comprising: selecting the respective number of neighboring components in the reference input data near the respective component of the respective reference input data as the subset of marked components associated with a respective perturbed input data.

Clause 446_22. The method/system/device/software of refining the classifier of clause 446_1, wherein: each perturbation score comprises at least one of: a correlation, a difference, a distance, a square of a difference, a deviation, a ratio, or a percentage.

Clause 446_23. The method/system/device/software of refining the classifier of clause 446_1, wherein: each desirability score comprises at least one of: a correlation, a difference, a distance, a square of a difference, a deviation, a ratio, or a percentage.

Clause 446_24. The method/system/device/software of refining the classifier of clause 446_1, further comprising: in an operating phase, performing a classification task based on the adjusted classifier and an input of at least one operating input data to the adjusted classifier.

Clause 446_A1. A method/system/device/software of classifier probing and refinement, comprising: in a probing phase: obtaining a plurality of raw measurement data by a sensing device of the system, processing the plurality of raw measurement data by a processor to construct a plurality of input data for a classifier, performing a classification by the processor using the classifier by using each of the plurality of input data as input to the classifier, computing a plurality of output analytics by the classifier based on the plurality of input data, each output analytics computed by the classifier based on a respective input data, mapping the plurality of output analytics to a plurality of mapped outcome, each output analytics mapped to a respective mapped outcome, identifying at least one reference input data each associated with respective output analytics and mapped outcome, each reference input data being one of the plurality of input data for the classifier for which a respective reference outcome is available and is different from the respective mapped outcome, and for each reference input data for the classifier: constructing a respective plurality of perturbed input data for the classifier by perturbing the reference input data, each perturbed input data constructed based on a respective perturbation of the reference input data, performing the classification using the classifier by using each of the plurality of perturbed input data as input to the classifier, computing a respective plurality of perturbed output analytics by the classifier based on the plurality of perturbed input data, each perturbed output analytics computed by the classifier based on a respective perturbed input data, mapping the plurality of perturbed output analytics to a plurality of perturbed mapped outcome, each perturbed output analytics mapped to a respective perturbed mapped outcome, comparing each of the perturbed mapped outcome with the reference outcome associated with the reference input data which is different from the reference mapped outcome, and when at least one perturbed mapped outcome deviates from the reference mapped outcome such that it is the same as the reference outcome, selecting at least one selected perturbed input data each being one of the respective plurality of perturbed input data associated with one of the at least one perturbed mapped outcome as selected perturbed input data for refining the classifier in the re-training phase; and in a re-training phase: re-training the classifier based on each of the selected perturbed input data and the associated reference outcome.

In some embodiments, there may be multiple perturbation type, and multiple perturbation size (e.g. amount/degree) for each perturbation type. For each type of perturbation, a number of perturbed input data may be generated by applying the type of perturbation with various amount/size/degree (e.g. in an increasing manner, or in a decreasing manner). For example, each input data may be a N1-component vector. Each perturbation type may be (associated with) a random N1-component noisy vector (e.g. multi-variate Gaussian). For example, the random N1-component noisy vector may have energy/power/norm (e.g. L2-norm, Lk-norm, square of L2-norm, sum of square) of 1. The input data may be perturbed/corrupted/distorted by adding to the input data the (additive) N1-component noisy vector scaled by a scaling factor (scalar). As the scaling factor increases from 0 to a certain limit, a number of perturbed input data may be constructed/generated. In another example, each input data may be a k-dimensional (k-D) matrix. Each input data may be a N1xN2x..xNk matrix, with N1*N2*..*Nk components. Each perturbation type may be (associated with) a random k-D matrix, of size N1*N2*..*Nk. Each random k-D matrix may have energy/power/ norm (e.g. L2-norm, Lk-norm, square of L2-norm, sum of square) of 1. The input data may be perturbed/corrupted/ distorted by adding to the input data the (additive) k-D random matrix, scaled by a scaling factor (scalar). As the scaling factor increases from 0 to a certain limit, a number of perturbed input data may be constructed/generated. For example, 300 perturbed input data can be generated by increasing the scaling factor from 0 to 150, in steps of 0.5, resulting in 300 increasing scaling factors: 0.5, 1, 1.5, 2, 2.5, 3, 3.5, 4, ..., .., 149, 149.5, 150). A particular selected perturbed input data associated with a particular reference input data may be associated with a minimum degree/size/amount of perturbation of the particular reference input data.

Clause 446_A2. The method/system/device/software of classifier probing and refinement of clause 446_A1, comprising: for a particular reference input data for the classifier in the probing phase: constructing a number of perturbed input data by perturbing the particular reference input data with an increasing degree of perturbation; from among the number of perturbed input data, selecting a particular selected perturbed input data as the perturbed input data with minimum degree of perturbation to the reference input data such that the associated perturbed mapped outcome is the same as a particular reference outcome associated with the particular reference input data.

In some embodiments, to identify/ find the particular selected perturbed input data from among the number of perturbed data with increasing degree of perturbation, a search may be performed among the number of perturbed input data.

Clause 446_A3. The method/system/device/software of classifier probing and refinement of clause 446_A2, comprising: for the particular reference input data for the classifier in the probing phase: performing a search among the number of perturbed input data in search of the selected particular selected perturbed input data.

In some embodiments, it may be a full search such that all the number of perturbed input data are tested/examined.

Clause 446_A4. The method/system/device/software of classifier probing and refinement of clause 446_A3: wherein the search is a full exhaustive search.

In some embodiments, the search may be a quickest/greedy search such that it may stop half-way as long as the particular selected perturbed input data is found (early termination; step/terminate early before all number of perturbed input data are tested/examined). The perturbation size/degree/amount may be k*step-size, where k=1, 2, .., N2. Here are the steps of the quickest/greedy/sequential search: Step 1: Initialize (current k) k=1; Step 2: Perform the classification by using current perturbed input data associated with k as input to the classifier; Step 3: Map the output of the classifier, the perturbed output analytics, to perturbed mapped outcome; Step 4: Compare perturbed mapped outcome with reference outcome associated with particular reference input data; Step 5: If perturbed mapped outcome is the same as reference output, select the current perturbed input data as selected perturbed input data and stop. If not, increment current k (i.e. k=k+1); Step 6: if k<N2, go to step 2, else stop.

Clause 446_A5. The method/system/device/software of classifier probing and refinement of clause 446_A3, comprising: for the particular reference input data for the classifier in the probing phase: performing a quickest search among the number of perturbed input data by initializing a current perturbed input data as one of the number of perturbed input data with minimal non-zero perturbation, and recursively testing the current perturbed input data by: performing the classification using the classifier by using the current perturbed input data as input to the classifier, mapping the perturbed output analytics, the associated output of the classifier, to the perturbed mapped outcome, comparing the perturbed mapped outcome with the reference outcome associated with the reference input data, and when the perturbed mapped outcome is the same as the reference outcome, selecting the current perturbed input data as the particular selected perturbed input data, otherwise updating the current perturbed input data by incrementing the degree of perturbation and repeating the testing of the updated current perturbed input data.

In some embodiments, more than one selected perturbed input data may be selected for a (e.g. for each) perturbed.

Clause 446_A6. The method/system/device/software of classifier probing and refinement of clause 446_A1, comprising: for a reference input data for the classifier in the probing phase: selecting at least one supplementary selected perturbed input data based on a particular selected perturbed input data; and in the re-training phase: re-training the classifier further based on the at least one supplementary selected perturbed input data.

Clause 446_A7. The method/system/device/software of classifier probing and refinement of clause 446_A6: wherein the supplementary selected perturbed input data is in a neighborhood of the particular selected perturbed input data.

In some embodiments, one or more perturbed input data with slightly lower degree of perturbation may be selected as supplementary selected perturbed input data. If the selected perturbed input data has k=k1, these supplementary selected perturbed input data may have k=k1-1, or k=k1-2, etc.

Clause 446_A8. The method/system/device/software of classifier probing and refinement of clause 446_A7, comprising: wherein the at least one supplementary selected perturbed input data comprise at least one of the number of perturbed input data next to the selected perturbed input data with minimal decrease of degree of perturbation compared with the selected perturbed input data.

In some embodiments, one or more perturbed input data with slightly higher degree of perturbation may be selected as supplementary selected perturbed input data. If the selected perturbed input data has k=k1, these supplementary selected perturbed input data may have k=k1+1, or k=k1+2, etc.

Clause 446_A9. The method/system/device/software of classifier probing and refinement of clause 446_A7, comprising: wherein the at least one supplementary selected perturbed input data comprise at least one of the number of perturbed input data next to the selected perturbed input data with minimal increase of degree of perturbation compared with the selected perturbed input data.

In some embodiments, as the degree of perturbation increases from zero, the selected perturbed input data may be the first time the mapped outcome flipped (from being "different from reference outcome" to being "same as reference outcome"). In the case that the mapped outcome flipped two times, a second selected perturbed input data may be selected as the second time the mapped outcome flipped (from being "same as reference outcome" to being "different from reference outcome"). Characteristics of the second selected perturbed input data is (a) it has more distortion/perturbation that the selected perturbed input data, and (b) the second flipping occurs.

Clause 446_A10. The method/system/device/software of classifier probing and refinement of clause 446_A6, comprising: for the particular reference input data for the classifier in the probing phase: from among the number of perturbed input data, selecting a second particular selected perturbed input data as a perturbed input data with (a) higher degree of perturbation compared with the particular selected perturbed input data, and (b) minimum degree of perturbation such that the associated perturbed mapped outcome is different from the particular reference outcome associated with the particular reference input data.

In some embodiments, raw measurement data may be time series of channel information (CI/TSCI, e.g. CSI, CIR, CFR) extracted/obtained from wireless signal received by the sensing device (e.g. Type2 heterogeneous wireless device).

Clause 446_A11. The method/system/device/software of classifier probing and refinement of clause 446_A1, comprising: transmitting a wireless signal from a Type1 heterogeneous wireless device to a Type2 heterogeneous wireless device through a wireless channel of a venue, wherein the Type2 device is the sensing device and wherein the plurality of raw measurement data comprise a time series of channel information (TSCI) of the wireless channel obtained by the Type2 device based on the received wireless signal.

Clause 446_A12. The method/system/device/software of classifier probing and refinement of clause 446_A11, comprising: preprocessing the TSCI.

In some embodiments, input data may be ACF/features of ACF/STI/MI/MS/analytics computed from raw measurement/sensing data (e.g. TSCI).

Clause 446_A13. The method/system/device/software of classifier probing and refinement of clause 446_A12, comprising: constructing the input data for the classifier based on an auto-correlation function (ACF) of the TSCI.

Clause 446_A14. The method/system/device/software of classifier probing and refinement of clause 446_A1, comprising: constructing each input data for the classifier as a k-dimensional (k-D) matrix.

In some embodiments, entries/elements/components of the k-dimensional (k-D) matrix may be computed based on ACF of TSCI.

Clause 446_A15. The method/system/device/software of classifier probing and refinement of clause 446_A14, comprising: constructing the k-D matrix based on an auto-correlation function (ACF) of the TSCI.

Clause 446_A16. The method/system/device/software of classifier probing and refinement of clause 446_A1, comprising: mapping each output analytics to a respective mapped outcome based on a nonlinear function of the output analytics.

Clause 446_A17. The method/system/device/software of classifier probing and refinement of clause 446_A16, comprising: mapping each output analytics to a respective mapped outcome based on a vector quantization of the output analytics.

Clause 446_A18. The method/system/device/software of classifier probing and refinement of clause 446_A17, comprising: mapping each output analytics to a respective mapped outcome based on a thresholding of the output analytics.

In some embodiments, there may be multiple perturbation types. If input is k-D matrix, each perturbation type may comprise an additive k-D distortion/perturbation matrix. For each perturbation types, there may be multiple perturbation size/degree/amount. The k-D perturbation matrix may be scaled by a scaling factor (scalar) and added to the reference input data to get/give/obtain the perturbed input data. Multiple scaling factors may be used. The multiple scaling factors may be the multiple perturbation size/degree/amount.

Clause 446_A19. The method/system/device/software of classifier probing and refinement of clause 446_A14, comprising: for each of a plurality of perturbation type, construct at least one perturbed input data by perturbing a reference input data based on the perturbation type.

Clause 446_A20. The method/system/device/software of classifier probing and refinement of clause 446_A19, comprising: for each of a plurality of perturbation type and each of a plurality of perturbation size associated with the perturbation type, construct a perturbed input data based on the perturbation type and the perturbation size.

In some embodiments, perturbed input data constructed from a reference input data may have identical size/dimension as the reference input data.

Clause 446_A21. The method/system/device/software of classifier probing and refinement of clause 446_A20, comprising: constructing each perturbed input data as a k-dimensional matrix with same size as the input data.

In some embodiments, each input data may be k-D matrix of size N1xN2x..xNk. One way to generate perturbed input data is to choose/mark some of the k dimensions and some components/elements/entries in those dimensions of the k-D matrix and perturb only the chosen/marked dimensions/components/elements/entries. In a special case: all k dimensions are chosen/marked, and all components in all k dimensions are chosen/marked such that effective all components/elements/entries of the k-D matrix are perturbed/ modified/changed/distorted. Different dimensions/components of different reference input data may be chosen/marked.

Clause 446_A22. The method/system/device/software of classifier probing and refinement of clause 446_A21, comprising: wherein the reference input data comprises a set of components; for each reference input data, constructing each perturbed input data for the classifier based on the reference input data by: marking a respective subset of the components of the reference input data, and modifying the respective subset of marked components of the reference input data to construct the respective perturbed input data.

In some embodiments, some chosen/marked dimension/components may be zero-ed (e.g. multiplied by zero).

Clause 446_A23. The method/system/device/software of classifier probing and refinement of clause 446_A22, further comprising: modifying a respective marked component of the reference input data by replacing the respective marked component by zero.

In some embodiments, some chosen/marked dimension/components may be scaled. Multiplication perturbation/distortion may be additive perturbation/distortion in the logarithmic domain.

Clause 446_A24. The method/system/device/software of classifier probing and refinement of clause 446_A22, further comprising: modifying a respective marked component of the reference input data by scaling a magnitude of the respective marked component.

In some embodiments, additive distortion may be applied/added to some chosen/marked dimension/components.

Clause 446_A25. The method/system/device/software of classifier probing and refinement of clause 446_A22, further comprising: modifying a respective marked component of the reference input data by adding an additive distortion to the respective marked component.

In some embodiments, additive random/noisy (may be positive or negative) distortion may be applied/added to some chosen/marked dimension/components.

Clause 446_A26. The method/system/device/software of classifier probing and refinement of clause 446_A25, further comprising: modifying a respective marked component by adding additive noise to the marked component.

Clause 446_A27. The method/system/device/software of classifier probing and refinement of clause 446_A25, further comprising: modifying a respective marked component by adding additive distortion scaled by a scaling factor to the marked component, wherein the additive distortion is associated with a perturbation type and the scaling factor is associated with a perturbation size.

In some embodiments, filtering (e.g. linear/nonlinear filtering, temporal/spatial/directional/ subspace filtering, lowpass/highpass/bandpass filtering) may be applied/added to some chosen/marked dimension/components.

Clause 446_A28. The method/system/device/software of classifier probing and refinement of clause 446_A22, further comprising: modifying the subset of marked components by filtering the subset of marked components.

In some embodiments, the marked/chosen dimensions/components/elements/entries may constitute a local neighborhood. A random dimension and/or a random component in the random dimension may be chosen/marked. A local neighborhood of the random component in the random dimension may be chosen/marked.

Clause 446_A29. The method/system/device/software of classifier probing and refinement of clause 446_A22, further comprising: marking the subset of the components of the reference input data by: randomly selecting a component of the reference input data, and selecting a respective number of neighboring components in the reference input data near the randomly selected component to be included in the subset of marked components.

In some embodiments, "distance" between two matrix elements/components/entries of k-D matrix may be L1-distance (absolute distance), L2-distance (Euclidean distance), or Lk-distance between "coordinates" of the two matrix elements/components/entries. Distance may be needed to define neighborhood. L1 neighborhood may be a rectangular submatrix. L2 neighborhood may be circular.

Clause 446_A30. The method/system/device/software of classifier probing and refinement of clause 446_A29: wherein each input data is a k-dimensional (k-D) matrix, the input data being the reference input data or any perturbed input data; wherein each component of the input data is a matrix element of the k-D matrix; wherein a first matrix element of the k-D matrix is a neighboring component near a second matrix element of the k-D matrix if a distance between the two matrix elements is less than a threshold.

Clause 446_A31. The method/system/device/software of classifier probing and refinement of clause 446_A30: wherein the respective number of selected neighboring components in the reference input data comprise a local neighborhood of matrix elements of the k-D matrix near the randomly selected component.

In some embodiments, distance is needed to define neighborhood. An L1 neighborhood may be a rectangular submatrix. An L2 neighborhood may be circular.

Clause 446_A32. The method/system/device/software of classifier probing and refinement of clause 446_A31: wherein the sub-matrix is a k-D sub-matrix comprising the randomly selected component.

Clause 446_A33. The method/system/device/software of classifier probing and refinement of clause 446_A22, further comprising: selecting the respective number of neighboring components in the reference input data near the randomly selected component as the subset of marked components.

Clause 446_A34. The method/system/device/software of classifier probing and refinement of clause 446_A22, further comprising: for each reference input data and for each of the set of components of the respective reference input data: selecting a respective number of neighboring components in the reference input data near the respective component of the respective reference input data to be included in the subset of marked components associated with a respective perturbed input data.

Clause 446_A35. The method/system/device/software of classifier probing and refinement of clause 446_A34: wherein each input data is a k-dimensional (k-D) matrix, the input data being the reference input data or any perturbed input data; wherein each component of the input data is a matrix element of the k-D matrix; wherein a first matrix element of the k-D matrix is a neighboring component near a second matrix element of the k-D matrix if a distance between the coordinates of two matrix elements is less than a threshold.

Clause 446_A36. The method/system/device/software of classifier probing and refinement of clause 446_A35: wherein the respective number of selected neighboring components in the reference input data comprise a sub-matrix of matrix elements of the k-D matrix near the respective component of the respective reference input data.

Clause 446_A37. The method/system/device/software of classifier probing and refinement of clause 446_A36: wherein the sub-matrix is a (k2)-dimensional (k2-D) sub-matrix comprising the respective component, wherein k2<=k.

Clause 446_A38. The method/system/device/software of classifier probing and refinement of clause 446_A37: wherein the sub-matrix is a k-D sub-matrix comprising the respective component.

Clause 446_A39. The method/system/device/software of classifier probing and refinement of clause 446_A16, further comprising: selecting the respective number of neighboring components in the reference input data near the respective component of the respective reference input data as the subset of marked components associated with a respective perturbed input data.

Clause 446_A40. The method/system/device/software of classifier probing and refinement of clause 446_A1: wherein the classifier may comprise any of: support vector machine (SVM), kernel-based SVM, neural network (NN), deep neural network (DN), convolutional NN (CNN), recurrent NN (RNN), long short-term memory network (LSTM), deep belief network (DBN), generative adversarial network (GAN), conditional GAN (cGAN), transformer, encoder-decoder, denoising autoencoder (DAE), neural radiance field, radial basis function network, multilayer perceptron (MLP), or self organizing map (SOM).

User presence detection, e.g. child presence detection (CPD), is an essential vehicular technology that prevents heatrelated injuries or fatalities by detecting the presence of an unattended user (e.g. a child). With the increasing number of child heatstroke deaths reported over the past decades, in-car child presence detection (CPD) systems have become a safety evaluation criterion for next-generation automobiles. The European New Car Assessment Program (Euro NCAP) has introduced a child occupant protection protocol to ensure the protection of children from heart stroke deaths and offers rewards to vehicles that offer CPD solutions satisfying the given protocol. Existing solutions (e.g. CPD solutions based on indirect sensing methods, such as pressure, weight, heat, capacitive and PIR sensors) have limitations in terms of accuracy, coverage, and additional device requirements. While WiFi-based solutions can overcome the limitations, they face challenges in dealing with environmental impacts and distinguishing child-only presence from adult presence.

The present disclosure discloses a robust, WiFi-based child presence detection (RoWiCPD) system using commodity WiFi. In some embodiments, the system may include three main modules: a presence detection module, a seat occupancy detection module, and a child and adult classification module. The presence detection module leverages image enhancement techniques to improve detection in unfavorable scenarios with remarkable accuracy and minimal false alarms. The seat occupancy detection module determines the occupied seat using confidence scores that measure the quality of the breathing signal. The child and adult classification module employs a CNN-based neural network to distinguish child-only presence from other scenarios. Extensive experimental results show that the system can achieve high detection accuracy and lower false alarm rate for presence detection, high accuracy for seat occupancy detection and CNN-based classification, over different cars and applications.

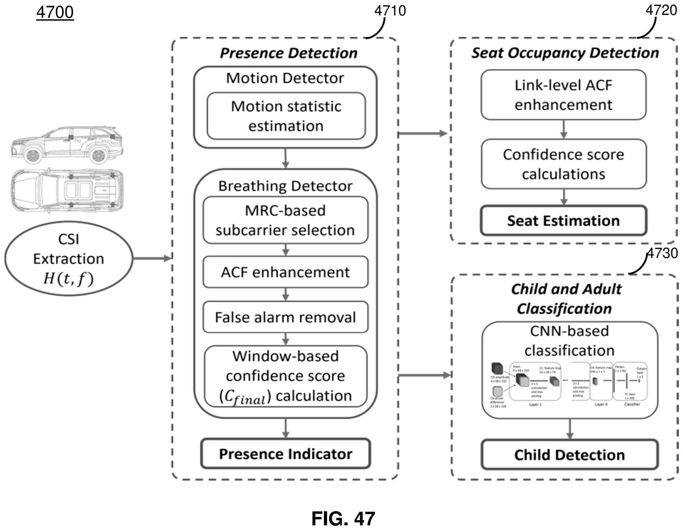

FIG. 47 illustrates an example framework of a wireless sensing system 4700 for in-vehicle child presence detection, according to some embodiments of the present disclosure. As shown in FIG. 47, the system 4700 includes three core modules: presence detection 4710, seat occupancy detection 4720, and child and adult classification 4730. The presence detection module 4710 employs both motion and enhanced breathing detectors to detect the presence of occupants within the car. The seat occupancy detection module 4720 evaluates the quality of breathing signals through a confidence score metric to pinpoint the occupied seat. The child/adult classification module 4730 utilizes a CNN-based classifier to identify adult presence and reduce false alerts.

In the presence detection module 4710, the system can improve the detectability of periodic signals corresponding to subtle breathing movements by enhancing breathing signals. In some embodiments, the stripes in the autocorrelation function (ACF) of the WiFi channel state information (CSI) over a given window reflect the breathing rate and can be corrupted under severe environmental impact. Treating the ACF as an image, the system may utilize an image enhancement technique that involves peak enhancement followed by histogram equalization to enhance the breathing pattern. As the enhancement may also create breathing-like patterns, the system can use two metrics, zero crossing rate (ZCR) and dynamic time warping (DTW) to mitigate the false alarms. The system may further use a window-based decision fusion to re-establish continuity of detection and remove sudden false detection spikes.

The in-vehicle seat occupancy module 4720, which identifies the occupied seat, can be used to enhance passenger safety, as knowing which seat is occupied can offer vital information when sending an alert to the responsible adult/authorities. The seat occupancy module 4720 can determine confidence scores which can reflect the quality/-

strength of breathing for each antenna pair, compare the scores over the multiple antenna pairs, and detect the occupied seat.

In some embodiments, as CPD technology aims to detect unattended children who cannot exit the vehicle on their own, it is essential to distinguish the presence of a child and an adult to prevent unnecessary alerts when an adult is in the car. To achieve this, the system utilizes a CNN-based neural network model in the child/adult classification module 4730 to extract the necessary features to further classify the presence of a child, an adult, or an empty case.

In some embodiments, within the confines of a vehicle, rich multi-path propagation of WiFi signals can undergo reflection, scattering, and diffraction off various surfaces, including human bodies, seats, and the vehicle's structure, before reaching the receiver. This results in the superposition of numerous multi-path components (MPC) at the receiver. Taking this multi-path effect into account, the channel state information (CSI) estimated on a subcarrier on frequency f at time t can be modeled as

$$H(t, f) = \sum_{l \in \Omega_m} a_l(t) e^{-j2\pi f \tau_l(t)} + n(t, f), \qquad (3817\_1)$$

where $\Omega_m$ denotes the set of multipath components, $a_l(t)$ and $\tau_l(t)$ denote the complex amplitude and the propagation delay of the $l^{th}$ multipath component, and $n(t, f)$ represents the additive white Gaussian noise, with power of $\sigma^2(f)$.

In some embodiments, dynamic entities, such as humans, generate time-varying MPCs due to movement, while static objects contribute time-invariant MPCs. Notably, even stationary humans can induce time-varying MPCs, as WiFi signals are sensitive to the subtle movements caused by breathing. Consequently, the estimated CSI, H(t, f), can be reformulated as

$$H(t, f) = \sum_{m \in \Omega_s} a_m(t) e^{-j2\pi f \tau_m(t)} + \sum_{n \in \Omega_d} a_n(t) e^{-j2\pi f \tau_n(t)} + n(t, f), \qquad (3817\_2)$$

where $\Omega_s$ and $\Omega_d$ denote the time-invariant and time-variant multi-path components, respectively. $a_m(t)$, $a_n(t)$ are the complex amplitudes, $\tau_m$, $\tau_n$ are the time delay of the m and n-th MPC. Assuming that the time-invariant MPCs ($\Omega_s$) remain constant over time, the CSI can be approximated by

$$H(t, f) \approx H_s(f) + \sum_{n \in \Omega_d} a_n(t) e^{-j2\pi f \tau_n(t)} + n(t, f), \qquad (3817\_3)$$

where $H_s(f)$ is the sum of all static MPCs. In practical applications, as the phase information usually becomes unreliable due to synchronization offsets, one can focus on power response of the CSI given by

$$G(t, f) = |H(t, f)|^2 = \left| H_s(f) + \sum_{n \in \Omega_d} a_n(t) e^{-j2\pi f \tau_n(t)} \right|^2 + \epsilon(t, f) = \mu(t, f) + \epsilon(t, f). \quad (3817\_4)$$

In some embodiments, the presence detection module 4710 aims to detect the presence of life in a car, regardless of whether the person is awake and moving or in a stationary position, such as sleeping. To fulfill this requirement, it leverages two detectors: a motion detector and a breathing detector.

A person performing movements creates many dynamic scatters, which can be detected by a motion detector with the extracted CSI at the receiver. The motion detector leverages the intensity of motion statistics. According to electromagnetic wave theory, the ACF of the CSI power, $\rho(\tau, f)$, correlates directly with the power of dynamic scatters as

$$\rho(\tau, f) = \frac{\text{cov}[G(t, f), G(t+\tau, f)]}{\text{var}[G(t, f)]} \qquad (3817\_5)$$

$$= \frac{E_d^2(f)}{E_d^2(f) + \sigma^2(f)} \rho_\mu(\tau, f) + \frac{\sigma^2(f)}{E_d^2(f) + \sigma^2(f)} \delta(\tau), \qquad (3817\_6)$$

where $E_d^2(f)$ and $\sigma^2(f)$ reflects the power of dynamic scatters and the power of measurement noise, respectively. $\rho_\mu(\tau, f)$ is the ACF of $\mu(t, f)$ and $\delta(\tau)$ is the Dirac delta function.

In a dynamic environment, $E_d^2 > 0$, while in a static environment, $E_d^2 = 0$ as there are no dynamic scatters. Therefore, $\lim_{\tau \to 0} \rho(\tau, f)$ is an excellent indicator for detecting motion. In practise, the direct measurement of the $\lim_{\tau \to 0} \rho(\tau, f)$ is not feasible due to the limitation of sampling frequency $F_s$. Thus, it can be approximate as $\lim_{\tau \to 0} \rho(\tau, f) \approx \rho(\tau = 1/F_s, f)$.

Motion statistics can then be defined as $\psi = 1/N_f \sum_{i=1}^{N_f} \rho(\tau = 1/F_s, f_i)$ which is average over all subcarriers $N_f$ to get a more reliable indicator.

To detect the presence of a person through motion, one can employ a pre-defined threshold $k_m$, meaning if the motion statistics $\psi > k_m$, the system detects the presence. Otherwise, it proceeds to the breathing detector for further evaluation.

If there is no motion but breathing, the breathing pattern can be inferred from the periodicity in ACF. One can define the channel gain $g(f) \triangleq \frac{E_d^2(f)}{E_d^2(f)+\sigma^2(f)}$. Then for $\tau \neq 0$, one can write the ACF in Eqn. (3817_6) as,

$$\rho(\tau, f) = g(f)\rho_\mu(\tau, f). \qquad (3817\_7)$$

With the existence of breathing, $\rho_\mu(\tau, f)$ exhibits a periodic pattern with peak values varying across each subcarrier f. To maximize the overall SNR of the breathing signal, maximum ration combining (MRC) by utilizing the subcarrier diversity can be adopted, and the SNR-boosted ACF can be given as

$$\rho_b(\tau) = \sum_{i=1}^{N_f} \rho(\tau = 1/F_s, f_i)\rho(\tau, f_i). \qquad (3817\_8)$$

In some embodiments, even though MRC provides the SNR boost, it is insufficient to recover breathing signals that have been corrupted by background interference. Due to the periodic nature of the breathing pattern, one can observe horizontal stripes corresponding to the peaks of the signal $\rho_b(\tau)$ in the ACF for a given time window. The ACF can be viewed as a 2D image, and the system can formulate the breathing signal enhancement as image enhancement.

In some embodiments, as the peak enhancement is sensitive to noise which can cause false peaks, before enhancing the ACF, the system can first apply a median filter across the time axis to remove the noise. Then, to enhance the horizontal stripes, the system may utilize 1D peak enhancement based on the first-order derivative of the signal, to amplify the sharpness of the peak, making it more distinct and easier to identify. The enhanced signal $\rho_{en}(\tau)$ can be given as,

$$\rho_{en}(\tau) = \rho_b(\tau) + k\rho_b{}'(\tau) \approx \rho_b(\tau) + k[\rho_b(\tau-1) + \rho_b(\tau+1) - 2\rho_b(\tau)], \quad (3817\_9)$$

where $\rho_b{}'(\tau)$ is the first-order derivative of $\rho_b(\tau)$ and k is the weighting factor. Peak enhancement can sometimes result in uneven contrast in the image. Thus, following the peak enhancement, the system can perform histogram equalization on the twodimensional ACF image to improve contrast and facilitate clearer peak identification.

Due to the above enhancement techniques, interference/noise from outside the vehicle can easily create periodic patterns similar to breathing patterns and cause false alarms. To remove these false detections, two metrics are detailed below.

In some embodiments, zero crossing rate is used as a metric to remove false detections. A clear breathing signal exhibits a sinusoidal pattern in the enhanced ACF $\rho_{en}(\tau)$, while a noisy signal lacks such a clear periodic pattern and has a dominant noise term, corresponding to high-frequency components with many oscillations in the ACF $\rho_{en}(\tau)$. One can use an FFT-based algorithm to identify noisy signals to prevent false breathing detection, but this is computationally expensive. Instead, the system may opt for a simpler zero crossing rate (ZCR) calculation. Histogram of ZCR values obtained from true and false breathing signals can show that false breathing signals exhibit high ZCR due to many oscillations, while true breathing exhibits low ZCR corresponding to the number of breaths in the given time frame.

Therefore, the system can utilize soft thresholding to remove false breathing detection. It assigns a confidence score, a value between 0 and 1, to indicate the probability that the breathing signal is classified as true breathing. After analyzing the histogram derived from data, one can set two bounds, a lower bound $Z_l$ and an upper bound $Z_u$, and assign the confidence score, $C_{ZCR}$ as,

$$C_{ZCR} = \begin{cases} 1 & \text{if } Z_l \leq ZCR \leq Z_u \\ \max(0, 0.1(ZCR - Z_u)) & \text{if } ZCR > Z_u \\ 0 & \text{Otherwise} \end{cases} \qquad (3817\_10)$$

In some embodiments, DTW calculation is used as a metric to remove false detections. With ZCR metric alone, one still cannot differentiate fallacious breathing patterns due to periodic motions outside a vehicle. To further remove such false alarms, one can compare the enhanced ACF $\rho_{en}(\tau)$ with a pre-defined template that corresponds to actual breathing. DTW technique is utilized for this comparison, as it can account for synchronization errors and time shifts. The true breathing signals is expected to be more similar to the template, resulting in lower DTW distances, while false breathing patterns would yield higher DTW values.

In some embodiments, soft thresholding is also employed to assign the confidence score based on the DTW metric. Based on the empirical histogram generated from data, one can establish two thresholds, denoted as $D_1$ and $D_2$.

The confidence score, $C_{DTW}$, is assigned as follows:

$$C_{DTW} = \begin{cases} 1 & \text{if } DTW \leq D_1 \\ \frac{D_2 - DTW}{D_2 - D_1} & \text{if } D_1 < DTW < D_2 \\ 0 & \text{if } DTW \geq D_2 \end{cases} \qquad (3817\_11)$$

In some embodiments, after enhancing the breathing signal and eliminating false alarms, the system employs a peak detection algorithm, which assesses peak characteristics such as peak prominence, width, amplitude, and location , to determine peak locations and calculate the breathing rate. To ensure robust detection and further eliminate false detection, the algorithm identifies two consecutive peaks. If two peaks are detected, it assigns a confidence score of $C_{peak}$ = 1, indicating a high likelihood of a true breathing signal; otherwise, it assigns $C_{peak}$ = 0.

In some embodiments, a window-based decision fusion strategy is designed to address occasional failures in restoring the breathing trace, which can lead to misdetections and sporadic false alarms. The strategy employs historical data to maintain detection continuity and eliminate abrupt false alarms.

In some embodiments, the confidence score at a given time instance t, denoted as $C_t$, is computed using a weighted summation of the confidence scores derived from the false alarm removal metrics and peak detection, given as

$$C_t = \frac{W_1 C_{DTW} + W_2 C_{ZCR} + W_3 C_{peak}}{W1 + W2 + W3}, \qquad (3817\_12)$$

where the weights $W_1$, $W_2$, and $W_3$ are chosen empirically based on the importance of each metric, and their sum in the denominator normalizes the confidence score to ensure a fair comparison. This normalized score, Ct, ranges between 0 and 1 and represents the probability that the signal at time t is a true breathing signal. Based on data analysis, $W_3$ is set higher than $W_1$ and $W_2$ as the $C_{peak}$ metric is more reliable than the other two metrics.

In some embodiments, to incorporate the past data into consideration, the system may utilize T-second decision window and combine confidence scores extracted from previous time instances with the current time instance to obtain the final confidence score $C_{final}$, defined as

$$C_{final} = \frac{1}{\sum_{i=t-T}^{T} k_i} \sum_{i=t-T}^{T} k_i C_i. \qquad (3817\_13)$$

Here, $k_i$ represents the weight for the $i^{th}$ time instance, reflecting its relevance to the final decision. One can assign a weight of $k_{t-T}$ = 0.1 to the earliest time instance and increase the weights linearly up to $k_T$ = 1 for the current instance. In some embodiments, the system conforms the presence if the final confidence score, $C_{final}$, exceeds the preset threshold, ensuring the reliable detection outcome.

Due to the resolution limitation imposed by lower bandwidth and limited antenna arrays, seat occupant detection with WiFi is challenging. In some embodiments, to overcome this, the system uses a confidence score-based detection method that utilizes the ACF extracted from each Tx - Rx pair.

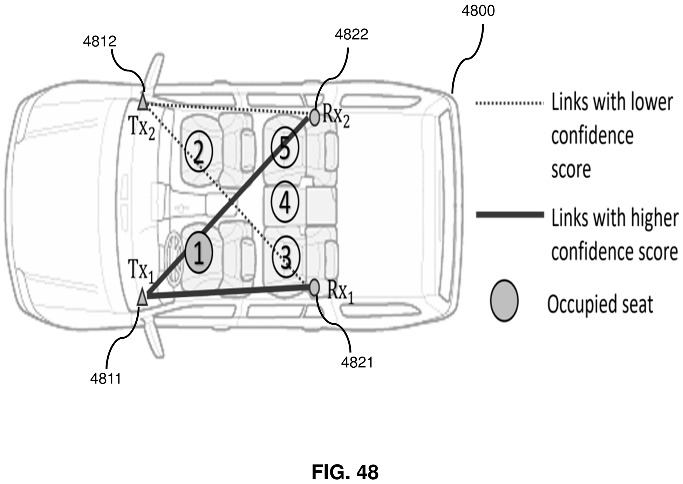

Without loss of generality, one can assume a pair of transmitter (Tx) and receiver (Rx), each equipped with two antennas, and the antennas can be separately placed at different locations in the car. One example setup is illustrated in FIG. 48 with two Tx antennas 4811, 4812 positioned near the two side mirrors and two Rx antennas 4821, 4822 positioned at the rear seat near the back doors. It can be generalized to other separated antenna locations as long as prior knowledge about the antenna placement is available. One can further assume that there is only a single occupant to be detected in the car, and he/she should maintain a static position to extract breathing for a certain time duration (e.g. 10 seconds for breathing calculations) to ensure an accurate decision.

In some embodiments, each of the two Tx antennas 4811, 4812 may serve as a Bot (e.g. Type1 device), while each of the two Rx antennas 4821, 4822 may serve as an Origin (e.g. Type2 device). Each Bot can transmit a wireless (sounding/probe) signal to the Origin, which can obtain channel information of a wireless multipath channel based on the wireless signal.

Given the two Tx and two Rx antennas, the system has four distinct links, each generating a unique ACF. Following the steps outlined before, the system can obtain an enhanced ACF and a confidence score, $C_{final}$, for each link. The proximity of a user to an antenna influences the confidence score. For instance, if a user is in the driver's seat (e.g. Seat #1 in FIG. 48), the ACFs corresponding to the $Tx_1$ - $Rx_1$ and $Tx_1$ - $Rx_2$ pairs are less noisy and yield higher confidence scores compared to the other two pairs. The ACF can be visualized for a 100-second time frame when the user occupied the driver's seat, obtained from each of the four links to validate the above claim. Based on the visualization, the ACF corresponding to the first two rows shows cleaner breathing traces, resulting in higher confidence scores. As such, one can estimate with high probability that the occupied seat is the one nearest to $Tx_1$, which is the driver seat.

On the other hand, if the user occupies the middle rear seat (e.g. Seat #4 in FIG. 48), the confidence scores across all four links are similar. This observation allows the system to detect the presence and pinpoint the location of a single occupant in the vehicle. As these scores vary with environmental conditions, one can define a threshold $C_{th}$ to check the relative similarity between the scores. If the differences between confidence scores are less than the threshold $C_{th}$, the system can consider all scores to be at similar levels and decide that the user is in the middle seat. Otherwise, the system can identify the two maximum scores, determine the antenna corresponding to the two links, and assign the seat closest to the antenna.

For the antenna configuration depicted in FIG. 48, if $\hat{A} = Tx_1$ the predicted seat is Seat #1; if $\hat{A} = Tx_2$, the predicted seat is Seat #2;, if $\hat{A} = Rx_1$, the predicted seat is Seat #3; and if $\hat{A} = Rx_2$, the predicted seat is Seat #5.

In some embodiments, after user presence detection, the system needs to differentiate child presence from adult presence, while false positives caused by adult presence should be avoided. Given the requirement, the system can utilize deep neural network architecture based on CNN layers to address the limitation.

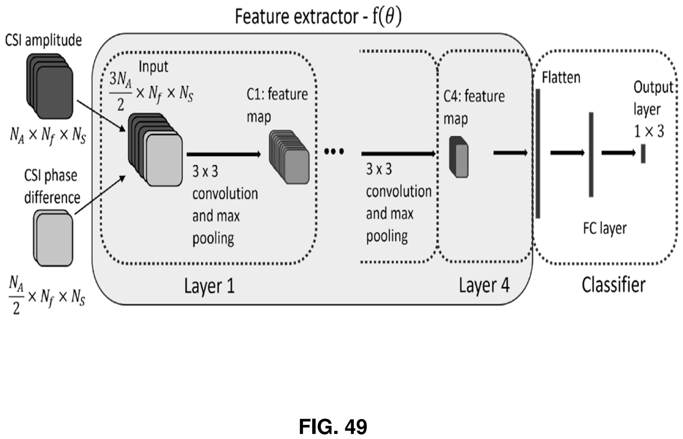

Due to the difference in breathing rates, a static child can be easily differentiated from a static adult by the detected breathing rate. However, recognizing child motion from adult motion is challenging due to the nature of the defined motion statistics. The statics of motion depend on the magnitude of dynamic motions and can be similar for adults and children depending on the motion type. As a result, one can infer that ACF does not provide the necessary information required to distinguish between a child's and an adult's presence. Given that, the system may use CSI data as the input to the neural network and use a CNN-based classification network, as shown in FIG. 49 to extract features useful for child presence evaluation.

The use of CSI as input involves processing complex numbers. However, CNN layers are primarily designed to process real numbers. To address this challenge, the system can modify the input CSI. Like multiple channels in RGB input, one can separate the power and phase data of CSI into distinct channels. However, the phase information of CSI is prone to noise due to the effects of synchronization. To mitigate this, the system may utilize the phase difference between two adjacent antennas instead of the raw phase.

In some embodiments, it is assumed that there are M transmit antennas and N receiver antennas, yielding a total of $N_A = M \times N$ antenna pairs. The CSI estimated from all these antenna pairs forms a 3D matrix of size $N_A \times N_f \times N_S$ with complex numbers. Here, $N_f$ denotes the number of subcarriers, and $N_S$ represents the number of samples within the considered time window. After separating the power and phase data into separate channels, the CSI comprises $N_A$ power channels. The number of phase channels is reduced to $N_A/2$ as the system uses the phase difference instead of the raw phase. As a result, input CSI is a 3D matrix with the size $3N_A/2 \times N_f \times N_S$.

As the input to the classifier leverages both the amplitude and phase information of CSI over all the subcarriers and samples, which encapsulates the vital indicators of human presence, e.g., breathing patterns, the system can distinguish between child and adult presence. Furthermore, the robustness and generalizability of the classifier can be further enhanced by training it on a diverse dataset, including those from diverse car models and environmental conditions.

In some embodiments, the system uses 4 CNN layers followed by max-pooling to extract features from CSI, and the extracted features are concatenated to fed through fully connected layers, followed by softmax activation at the last layer to extract output probabilities of each class. In addition, to prevent overfitting, one can apply dropout with probability p = 0.2 to the fully connected layers. FIG. 3 shows the detailed network design used for the classification. To further improve the robustness and generalization capabilities, the system may leverage the mixup data augmentation technique. In the mixup, the system can randomly mix two data points and the corresponding labels using linear interpolation. This allows the system to learn the model using unseen examples capturing rare features.

In some embodiments, while a neural network design can adapt to various car models with a given antenna setting, it may not generalize well for significantly different antenna configurations. To mitigate potential overfitting, the system can employ the few-shot learning strategy and pre-train the network with a limited number of data samples collected under a new antenna setup. In the pertaining step, one can fix the feature extractor, $f(\theta)$, select a few data samples (5 or 10) per class, and retrain the fully connected layers to adjust weights to the new antenna configuration. This approach allows the system to achieve the desired performance despite the altered conditions.

In some embodiments, the disclosed lightweight CNN model can provide a generalized solution to child and adult classification, eliminating the need for specific training when deploying in a new car model. When dealing with changes in the antenna configuration, few-shot learning becomes necessary. Despite this requirement, it does not involve full network training, which can be a time-consuming and computationally expensive process. Instead, it focuses on changing weights in the last two fully connected layers with limited data. The simplicity of the network design and low computational requirements for learning allows for easier implementation and are suitable for deployment at the edge device. In some embodiments, a disclosed CNN-based neural network model comprises 800,000 parameters, requiring only 3.34 MB of storage. The compact size underscores its feasibility for edge device deployment, where storage and computational resources are often limited.

In some embodiments, to evaluate the results of three modules: presence detection, seat occupancy detection, and child and adult classification, one can implement the system using a pair of WiFi devices operating at 5 GHz with a bandwidth of 40 MHz. In some examples, each device is equipped with two omnidirectional antennas. The estimated CSI at the receiver contains 58 subcarriers with a sample rate of 30 Hz.

In some embodiments, one can collect data under various antenna setups to study their impact on the performance, as detailed below.

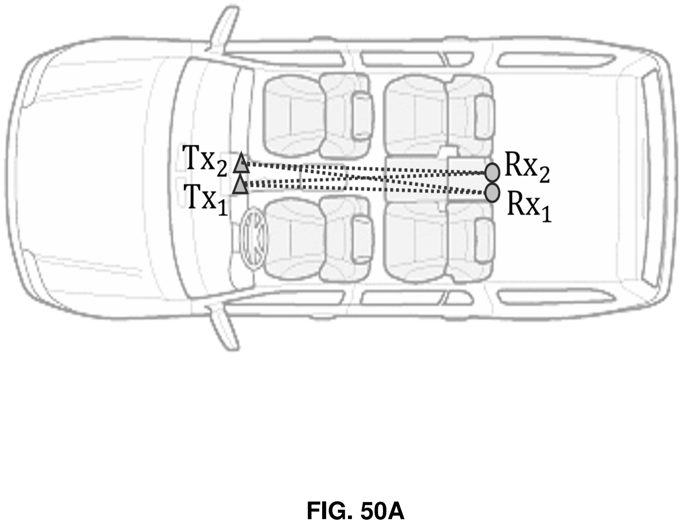

In a Colocated setup example, both the transmit (Tx) and receive (Rx) antennas are colocated as shown in FIG. 50A. The Tx antennas can be placed in the front, and the Rx antennas can be placed in the back, or vice versa.

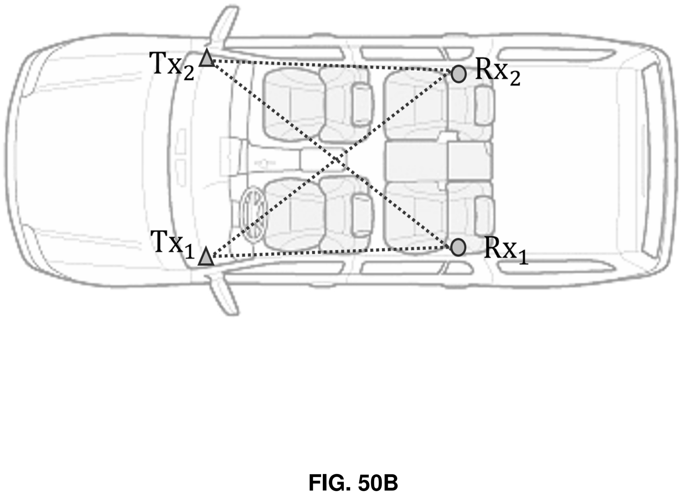

In a Distributed setup example, the two Tx and two Rx antennas are placed in the four corners of the car as shown in FIG. 50B, where the Tx antennas are placed in the two corners of the front dashboard and the Rx antennas are near the two sides of the back seats.

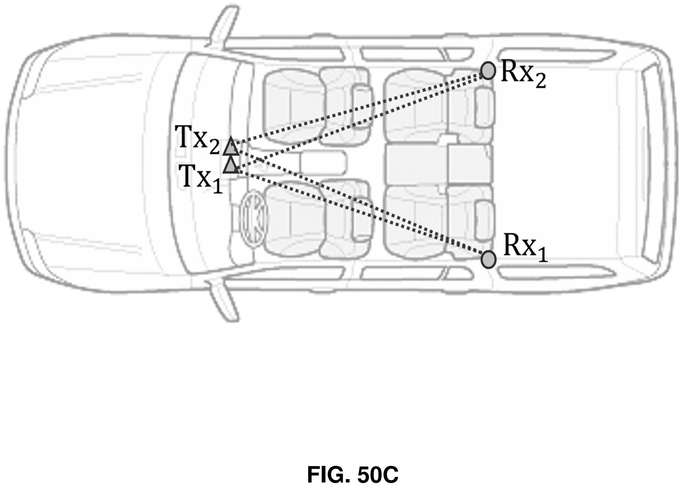

In a Hybrid setup example, the Tx antennas are placed in a colocated manner, and the Rx antennas are placed in a distributed way as in FIG. 50C. The positions of Tx and Rx antennas can be interchanged.

In some embodiments, the system is implemented the system using a commercial WiFi chipset to validate the performance with 25 distinct cars under different environments to ensure the performance of the system under realistic conditions. The dataset includes child data, adult data, and empty data collected over a period of six months, considering various car models, antenna settings, subject positions, and environmental factors. Experiment results show that the system can achieve high detection accuracy with low false alarm rate for presence detection, high overall accuracy in seat occupancy detection with high child detection rate using the learning-based classification for test data collected from different cars.

In some embodiments, in a venue, a Type1 heterogeneous wireless device (TX) with one or more antennas may transmit a wireless signal (e.g. a train/series of sounding signals) to a Type2 heterogeneous wireless device (RX) with one or more antennas. Each transmit antenna and each receive antenna form a wireless link. The Type2 device may extract one or more time series of channel information (TSCI) based on the received signal, one TSCI for each wireless link. The TSCI may be preprocessed.

As discussed above, in some embodiments, the system may comprise 3 modules: (1) Presence Detection Module, (2) Seat Occupancy Detection Module, and (3) Child/Adult Classification.

Module 1: Presence Detection Module.

In some embodiments, presence of user can bee detected. In the venue, one or more users may be present. The Presence Detection Module (PDM) detects the presence or absence of the one or more users based on the one or more TSCI. The PDM may comprise (1) a motion detector module to detect object motion based on the TSCI, and (2) a breathing detector module to detect breathing of any object based on the TSCI.

In some embodiments, motion detector of PDM is used. In a sliding time window, the motion detector may compute a motion statistics. Motion may be detected when the motion statistics exceeds a threshold. The motion statistics may be a time reversal resonance strength (TRRS), or a correlation between adjacent CI of a TSCI. A linkwise motion statistics may be computed for each wireless link, and the motion statistics may be an aggregate (e.g. average/sum, or arithmetic/geometric/harmonic mean) of the linkwise motion statistics. Presence is detected when motion is detected. If motion is not detected, the breathing detector may be applied to detect any breathing.

In some embodiments, 2D image construction is performed based on 1D transform, and enhancement. The breathing detector may compute a 1D transform (e.g. auto-correlation function (ACF), short time Fourier transform (STFT), frequency transform) of CI of a TSCI in each of a plurality of sliding time windows. Multiple 1D transform associated with a plurality of sliding time windows may be put/assembled/combined together to form/construct a 2D image (transform-image). When breathing of a user is present, horizontal stripes (corresponding to peaks of the transform/ACF/STFT) should appear in the 2D image. In the breathing detector, the 2D image may be enhanced. Peak enhancement/emphasis may be applied to each 1D transform by adding to it one (or more) scaled highpass version of it. For example, a highpass version of the 1D transform is its first order derivative, or a linear combination of any order derivative (e.g. first-/second/third/fourth/.. order derivative). Histogram equalization may be applied to the 2D image to improve/enhance the contrast.

In some embodiments, 1D transform construction is performed based on component 1D transform. Each CI (e.g. CSI, CIR, CFR, RSSI) may comprise a plurality of components (e.g. subcarriers of CFR, taps of CIR). A respective 1D transform of each component ("component 1D transform", such as component ACF, component STFT, component frequency transform) may be computed in each sliding time window. For example, it may compute a feature (e.g. magnitude, magnitude square, phase) of each component and, for each component, compute the component 1D transform for the component based on the feature of the component. It may compute the 1D transform (e.g. ACF) of the CI in the sliding time window by combining the component 1D transform (e.g. ACF). In particular, the ACF may be an aggregate or a weighted aggregate (e.g. weighted average/sum or weighted arithmetic/geometric/harmonic mean) of the component ACF. The weight for each component ACF may be a value of the component ACF evaluated at a particular time tag (e.g. sampling/sounding period, or tau=1).

Consider a time period (larger/longer than sliding time window) comprising a plurality of sliding time windows. A plurality of 1D transform (e.g. ACF) may be obtained for the time period, each 1D transform computed from CI in respective sliding time window. A 2D structure/ matrix/image may be computed/obtained/formed/generated for the time period by assembling/grouping/combining the plurality of 1D transform, with one dimension of the 2D structure/matrix/image being the time axis and the second dimension being the transform domain axis of the 1D transform. If the 1D transform is ACF, the second dimension may be the axis of time lag. If the 1D transform is STFT, the second dimension may be the (STFT) frequency axis. Suppose each 1D transform has K components and is represented as a K-tuple vector. Suppose there are L sliding time windows in the time period such that there are L vectors each with K components. The L vectors may be put together to form the 2D matrix/structure/image with a size of KxL.

In some embodiments, breathing detection is performed by peak detection. A detection of horizontal stripes (e.g. along/parallel to the time axis) may be performed based on the 2D image (e.g. enhanced 2D image). The 2D image may be enhanced. The enhanced 2D image may be obtained by peak enhancement, edge enhancement, histogram equalization, directional filtering (e.g. horizontal/near-horizontal lowpass, vertical highpass), and/or other image enhancement means.

In some embodiments, peak detection may be performed by computing peak characteristics such as peak prominence, peak width, peak amplitude, and/or peak location. Candidate peaks may be obtained - local maxima for each 1D transform (e.g. enhanced 1D transform) of the 2D image. But often, some candidate peaks may be untrustworthy/ false/bad peaks due to noise. For each peak/maximum of each 1D transform, individual peak characteristics may be computed/tested/analyzed/assessed. Peaks of each 1D transform satisfying acceptance criteria may be considered "good" peaks and may be chosen. The acceptance criteria may comprise any of: (1) peak prominence>T6, (2) peak amplitude>T7, (3) T8<peak width<T9. Peaks not satisfying acceptance criteria may not be "good" and may be discarded. If a "consistently-good" peak location can be found such that a "good" (or chosen) peak occurs at or near the peak location in at least A1 percentage (e.g. A1 may be 90%, 80%, or 70%, etc.) of the 1D transform in the time period (or a sliding portion of the time period, each sliding portion with multiple sliding time windows), user breathing may be detected and the peaks at or near the consistently-good peak location may be determined as the peaks associated with user breathing.

In some embodiments, a user breathing rate/period may be computed based on the consistently-good peak location. If the 1D transform is ACF, the time lag associated with the consistently-good peak location may be the user breathing period. The user breathing rate may be the reciprocal of the user breathing period. There may be more than one consistently-good peak locations, with one being the breathing period (e.g. the first/smallest/lowest one) and the others being integer multiple of the breathing period. The breathing period may be computed/determined as a greatest common factor (GCF) (approximately) of the more than one consistently-good peak locations.

In some embodiments, if the 1D transform is STFT, there may be multiple consistently-good peak locations, with one (e.g. the first/smallest/ lowest one) being the breathing rate and the others being harmonics (e.g. integer multiples) of the breathing rate. The breathing rate may be computed/determined a greatest common factor (GCF) (approximately) of the multiple consistently-good peak locations (i.e. all the harmonics and/or the basic breathing rate).

In some embodiments, false alarm removal is performed. Sometimes false alarm may occur - that is, breathing may be accidentally (and incorrectly) detected, probably due to noise. To suppress such false alarm, one can use a false alarm removal scheme based on some confidence scores (CS): (1) Oscillation CS, (2) DTW CS, (3) peak CS.

An oscillation rate (OR) may be computed for each 1D transform of the 2D image. The oscillation rate may be a zero crossing rate obtained by counting the amount of zero crossing in each 1D transform (e.g. enhanced 1D transform from the enhanced 2D image). Alternatively, the oscillation rate may be a zero crossing rate of mean-subtracted 1D transform (obtained by subtracting a mean from 1D transform). The mean to be subtracted from a 1D transform may be a mean function (e.g. moving average, moving weighted average, lowpass filtered, smoothing in transform domain) of the 1D transform obtained by smoothing/ lowpass filtering, moving average or moving weighted average applied to the 1D transform in transformed domain. Alternatively, the oscillation rate may be an amount of maxima (or minima) obtained by counting the amount of local maxima (or minima) of the 1D transform (or the mean-subtracted 1D transform). The 1D transform may be filtered with a lowpass filter to suppress noise before counting the local max/min.

In some embodiments, the Oscillation CS may be computed as a function of the oscillation rate (OR), in relation to some "acceptable" behavior/range of OR. The Oscillation CS may be a real number between 0 and 1 (or may be scaled/mapped to any finite range). It may be 1 if the oscillation rate is within an acceptable range between a lower bound T1 and upper bound T2 (T1 <OR<T2). It may be a monotonic non-increasing (or monotonic decreasing) function (e.g. piecewise linear) when the oscillation rate exceeds T2 (OR>T2). For example, it may be decreasing (e.g. linearly, piecewise linear, exponentially) between T2 and T3 (T2<OR<T3), and zero beyond T3 (OR>T3). It may be 0 below T1 (OR<T1). It may be a monotonic non-decreasing (or monotonic increasing) function (e.g. piecewise linear) when the oscillation rate is below T1 (OR<T1). For example, it may be decreasing (e.g. linearly, piecewise linear, exponentially) between T2 and T3 (T2<OR<T3), and zero beyond T3 (OR>T3). It may be 0 below T1 (OR<T1).

In some embodiments, reference 1D transform is utilized. A reference 1D transform (e.g. a K-component vector, obtained by applying the 1D transform on CI of TSCI obtained when user breathing is present) may be obtained. In a training phase, at least one training wireless signal may be transmitted from at least one training Type1 device to at least one training Type2 device in at least one training venue when breathing of a training user at least one location in the training venue is present. At least one training TSCI may be obtained by the at least one training Type2 device based on the at least one received training wireless signal. At least one training 1D transform of CI of the at least one TSCI may be computed. The reference 1D transform (with some user breathing present) may be computed (e.g. as an aggregate) based on the at least one training 1D transform of CI.

In some embodiments, DTW between 1D transform and reference 1D transform is determined. In a detection phase, to detect whether user breathing is present, each current 1D transform (K-tuple vector) may be compared with the reference 1D transform (K-tuple vector). If no user (and thus no user breathing) is present, the current 1D transform vector (without user breathing info/impact embedded) would naturally not match the reference 1D transform vector (with user breathing info embedded). The two non-matching vectors may have low similarity score or large distance, such as L1-distance, L2-distance (Euclidean distance) or Lk-distance for some k.

However, if a user with user breathing is present in the detection phase, the current 1D transform vector may still not match the reference 1D transform vector because there may be different breathing rates in the reference 1D vector (in training phase) and the current 1D transform vector (in detection phase). Although there should be peaks/maxima in both the reference 1D transform vector and also in the current 1D transform vector due to the presence of user breathing, the corresponding peaks/maxima may happen at different locations/components due to the different breathing rates. Thus direct comparison between the current 1D transform vector and the reference 1D transform vector may still give low similarity score or large distance. But if the vectors (or the vector components) are properly mapped/matched/scaled, the two vectors should give high similarity score or small distance. Thus dynamic time warping (DTW) may be applied to find the best possible match between the two vectors. After the DTW, the similarity score and/or distance between the two vectors may be computed. User breathing may be determined/considered/concluded to be present if the similarity score is larger than a first threshold or the distance is less than a second threshold.

In other words, a matching between the current 1D transform and the reference 1D transform may suggest a high likelihood of the presence of user breathing (i.e. the detected breathing by breathing detector may not be a false alarm). Conversely, a mismatch between the 1D transform and the reference 1D transform may suggest a low likelihood of the presence of user breathing (i.e. the detected breathing by breathing detector may be a false alarm). However, there may be a scale mismatch (local/global) between the current 1D transform and the reference 1D transform. Thus dynamic time warping (DTW) may be applied to find the best match between 1D transform and the reference 1D transform, with associated DTW distance/DTW cost (DC) which may be the similarity score and/or the distance. The similarity score or the distance may be compared with corresponding thresholds

In some embodiments, DTW CS is determined based on DTW cost. The DTW CS may be computed for each current 1D transform as a function of the DTW cost (DC) associated with best DTW matching between the current 1D transform and the reference 1D transform. The DTW CS may be a real number between 0 and 1 (or may be scaled/mapped to any finite range). The DTW CS may be a monotonic decreasing (or monotonic non-increasing) function of DC. It may be 1 if DC<T4. It may be 0 if DC>T5 (T5>T4). It may be decreasing/non-increasing (e.g. linearly, piecewise linear, exponential) for T4<DC<T5.

In some embodiments, Peak CS is determined based on amount of good peaks. Peak CS may be computed for each 1D transform as a real number between 0 and 1 (or may be scaled/mapped to any finite range). If only one good peak (or only one consistently-good peak location) is identified, Peak CS may be 0. If M1 good peaks (or M1 consistently-good peak locations) at peak locations L1<L2< ..<L(M1) are identified with all the peak locations being an integer multiple of the smallest peak location (i.e. if L2/L1, L3/L1, .., L(M1)/L1 are all integers), the Peak CS may be a monotonic increasing/non-decreasing function f1 of M1, i.e. Peak CS=f1(M1). Else if M2 consistently-good peak locations are identified with a greatest common factor (GCF) of all the consistently-good peak locations being greater than T6 (T6>1), the Peak CS may be a second increasing function f2 of M2, wherein f1(x)>=f2(x). In one embodiment, f1(M1)=1 for M1>=2.

In some embodiments, a Combined CS, CCS(t), is computed based on weighted mean of CS. At any time t associated with a 1D transform, a combined CS (CCS(t)) may be computed as a weighted aggregate (e.g. weighted sum/product, weighted arithmetic mean, weighted geometric mean, weighted harmonic mean, weighted median) of any/all of (1) Oscillation CS, (2) DTW CS, (3) Peak CS computed for the 1D transform. As all of Oscillation CS(t), DTW CS(t) and Peak CS(t) are real numbers between 0 and 1 (or may be scaled/mapped to any finite range), the CCS(t) may also be a real number between 0 and 1 (or may be scaled/mapped to any finite range). Any CS(t) may be viewed as a likelihood that user breathing happened/occurred at time t. The weight for Peak CS may be larger than the weights of Oscillation CS and DTW CS.

In some embodiments, a Final CS, FCS(t), is computed based on weighted time average of CCS(t). To incorporate past data into consideration, a final CS (FCS) may be computed as weighted average of CCS(t) with t in a sliding time window. The weight may increase with time t, with higher weight for later CCS(t) and smaller weights for earlier CCS(t). In other words, CCS(t1)<=CCS(t2) if t1<t2.

Module 2: Seat occupancy detection module.

In some embodiments, in a venue (such as a vehicle), there may be multiple "seats" (e.g. chair/sofa/seats in vehicle/van/bus/RV/trailer/train/tram/airplane/boat, seats/chairs/benches in facilities/office/ classroom/lab/cinema/meeting room/waiting area/waiting room, beds in a dormitory, partitions in toilet/changing room/shower facility/voting booth, cages in animal facilities/zoos, parking spaces in parking facility, storage bins in shelving/cabinet, etc.). A user (e.g. human, animal, or object) may occupy/sit/stand/recline/rest/station/stay/store at any of the seats. The seat occupancy detection module (SOD) may detect which of the seats is/are being occupied.

In some embodiments, for seat and antenna placement in venue, without loss of generality, the venue may have 5 (or 6) seats in a "rectangular" area (e.g. a cabin of a vehicle with 5/6 seats): front left seat, front right seat, back left seat, back right seat, and/or some center seat(s) (e.g. center back seat, center front seat, center left seat, center right seat, seat in middle of the rectangular area). A user may be seated at one of the 5 seats. The Seat Occupancy Detection (SOD) module may be used to detect which of the 5 seats is being occupied by the user based on multiple TSCI obtained/captured/extracted based on wireless signal communicated between multiple (TX-RX) antenna pairs between the Type1 and Type2 devices. In particular, the Type1 device (TX) may have two (or more) antennas (TX1 and TX2) spaced together/apart/close-by, such as being placed at two of the corners (e.g. left front corner, right front corner) of the rectangular area/cabin. The Type2 device (RX) may have two (or more) antennas (RX1 and RX2) placed together/close-by/apart, such as being at the other two corners (e.g. left back corner, right back corner) of the rectangular area/cabin. Additional TX and/or RX antennas may be placed in the cabin, such as on the ceiling, floor, etc. (e.g. ceiling center, and/or toward the back/front). The TX antennas and Rx antennas may be placed at different locations inside the rectangular cabin. There may be N1 wireless links resulting in N1 TSCI being captured/extracted. For the case of 2 TX antennas and 2 RX antennas, there may be N1=4 TSCI comprise (1) a left link between the TX-RX antennas at the left front corner and left back corner, (2) a right link between the TX-RX antennas at the right front corner and right back corner, (3) a diagonal link between the TX-RX antennas at the left front corner and right back corner, and (4) an anti-diagonal link between the TX-RX antennas at the right front corner and left back corner.

In some embodiments, seat occupancy detection is performed based on linkwise confidence score. For each of the N1 TSCI and each sliding time window, a respective 1D transform (e.g. ACF or enhanced ACF, STFT or enhanced STFT) may be computed based on CI of the TSCI in the sliding time window. Based on the respective 1D transform, respective Oscillation CS(t), DTW CS(t), Peak CS(t), CSS(t) and FCS(t) may be computed for each of the N1 link/TSCI. Seat occupancy may be computed based on the N1 FCS. If each of the N1 FCS(t) are greater than a threshold T10, the occupied seat may be determined to be the center seat. Otherwise, two max FCS(t) may be identified and the occupied seat may be determined based on the two max FCS(t).

In some example, if the two max FCS(t) occur in the left link and the diagonal link, the occupied seat may be determined to be the left front seat. If the two max FCS(t) occur in the left link and the anti-diagonal link, the occupied seat may be determined to be the left back seat. If the two max FCS(t) occur in the right link and the anti-diagonal link, the occupied seat may be determined to be the right front seat. If the two max FCS(t) occur in the right link and the diagonal link, the occupied seat may be determined to be the right back seat. If the two max FCS(t) occur in the right link and the left link, there may be some user present outside the venue (e.g. some outside the left side/wall of the rectangular area, and some outside the right side/wall), but no user present in the venue (rectangular area/cabin). If the two max FCS(t) occur in the diagonal link and the anti-diagonal link, the occupied seat may be determined to be the center seat.

Module 3: Child/Adult classification Module.

In some embodiments, CNN for feature extraction is performed with a fully-connected network for classification. Even when user presence is detected, it remains to be determined if the user present is an adult or a child. The child/adult classification module may comprise two stages to determine if the user is an adult or a child. In the first stage (called feature extraction), initial features of the N1 TSCI (e.g. CI amplitude and CI phase difference) may be computed and used as input to a convolutional neural network (CNN) comprising N2 layers (e.g. 3 or 4 or 5 or more layers). The output of the N2-layer CNN may be considered final features of the TSCI, for further processing/classification. The N2-layer CNN may be effectively a feature extractor to compute final features of the N1 TSCI based on initial features of the N1 TSCI. The final features (the extracted features) may be flattened into a vector and fed as input to a N3-layer fully-connected network (e.g. 2/3/4/more layers, or nearly fully connected) to classify between no-user-present, child-present and adult-present.

In some embodiments, initial features comprising CIC magnitude and pairwise CIC phase difference are obtained. Each CI may comprise N4 scalar components ("CIC" or CI components). Each sliding time window may comprise N5 CI of any TSCI. Thus in each sliding time window, there may be a total of N1xN4xN5 CIC in each sliding time window. The initial features comprise the magnitude (CIC amplitude) of the N1xN4xN5 CIC (i.e. the N1xN4xN5 CIC magnitude). The phase of CIC (CIC phase) may/may not be used as initial feature directly because they may contain much noise and distortion. Pairwise CIC phase difference may be used instead of the CIC phase itself. The difference between the phases of each pair of CIC may be computed and used as the part of initial features.

In some embodiments, TSCI-level CIC pair formation is performed for computing pairwise CIC phase difference. To compute the pairwise CIC phase difference as initial features, the N1xN4xN5 CIC may be organized/ grouped into N6xN4xN5 CIC pairs. The pairing may be done at a TSCI level such that all CIC of CI of a first TSCI may be paired with respective CIC of respective CI of a second TSCI. In a first example, all possible pairings of TSCI may be used such that N6=N1C2=(N1)(N1-1)/2. In a second example, each TSCI may be used once to form pairing such that N6~=N1/2. If N1 is even, then N6=N1/2. If N1 is odd, one TSCI may be used twice to form pairing such that N6=(N1+1)/2. In a third example, the two TSCI of any pair of TSCI may be associated with same/identical Type1 device antenna (TX antenna). Then for each TX antenna, pairing the associated TSCI is equivalent to pairing the associated RX antennas. Suppose there are N7 TX antennas and N8 RX antennas such that N1=N7*N8. In one case, all possible RX antenna pairing may be used such that there may be N8C2=N8(N8-1)/2 pairs (for N8>1) for each TX antenna, and thus N6=N7(N8)(N8-1)/2 for the N7 TX antennas. In another case, each RX antenna is paired only once. If N8 is even, then N6=N7*N8/2. If N8 is odd, one of the RX antennas may be used twice to form pairs, such that N6=N7*(N8+1)/2>N7*N8/2. In the third example, the wireless signals used to generate the two TSCI of a pair of TSCI are a same/common wireless signal transmitted by a common TX antenna. Phase artifacts of the same/ common wireless signal received by the two RX antennas may be similar/correlated. Thus the difference between their phases may have reduced phase artifacts. And if a first CI is paired with a second CI, all first CIC of the first CI are paired with corresponding second CIC of the second CI.

In some embodiments, formation of 3D matrix is performed from multiple 2D matrices. The N1xN4xN5 CIC magnitude may be organized/re-organized/grouped into N1 2-dimensional matrices. Each 2D matrix of size N4xN5 may be associated with a respective one of the N1 TSCI and may comprise N5 columns. Each of the N5 columns may comprise the N4 CIC of a respective one of the N5 CI of the TSCI. The N6xN4xN5 CIC phase difference may be organized into N6 2D matrices. Each 2D matrix of size N4xN5 may be associated with a respective one of the N6 pairs of TSCI and may comprise N5 columns. Each of the N5 columns may comprise the N4 phase difference between the N4 CIC pairs associated with a respective pair of CI associated with the pair of TSCI. All the N1+N6 2D matrices (all having a size of N4xN5) may be stacked together (in any order) to form a 3-dimensional matrix, with each N4xN5 matrix being a 2D sheet/layer/channel/-image of the 3D matrix. There may be N1+N6 2D sheets/layers of the 3D matrix.

In some embodiments, feature extraction is performed using CNN. The 3D matrix of the size (N1+N6)xN4xN5 may be fed as the input to the CNN. Each layer of the CNN may comprise M3 (e.g. M3=2 or 4 or ... s.t. M3>1) 2D convolution kernels (e.g. of size 3x3, 5x5, 3x5, etc.) each applied to the 2D sheets/layers of the input 3D matrix to give a respective 2D output matrix. In each layer, the CNN may apply the M3 2D convolutional filters/kernel across all the input 2D sheets/layers/channels, either simultaneously or at any order (as there is no fixed/required/pre-defined order), followed by down-sampling/max-pooling such that each input 2D sheet/image/layer may give rise to M3 output 2D sheets/images/layers of smaller size than the input 2D sheet/image/layer. All the output 2D sheets/images/layers may be stacked together to form a 3D matrix to be processed by the next layer of the CNN.

In a similar manner, every subsequent CNN layer takes the 3D matrix output of the previous CNN layer as 3D matrix input. Multiple respective 2D convolution kernels may be applied separately/independently (e.g. simultaneously or in any order) to each sheet/layer/ image/channel to give a respective 2D output matrix followed by down-sampling/max-pooling. Different 2D convolution kernels may be used in different CNN layers to generate respective output 2D matrices/sheets. For example, suppose the CNN has 3 layers, with M3=4 and 2-to-1 down-sampling/maxpooling. The input to the first layer of CNN (Layer 1) may be the 3D matrix comprising (N1+N6) 2D sheets/layers each of size N4xN5.

In some embodiments, at the output of Layer 1, four 2D Layer-1 (N4/2)x(N5/2) output sheets may be generated for each 2D Layer-1 N4xN5 input sheet. As there may be a total of (N1+N6) Layer-1 input sheets, there may be a total of 4x(N1+N6) Layer-1 output sheets each of size (N4/2)x(N5/2) which may serve as input to the second layer of CNN (Layer 2). The 4x(N1+N6) Layer-1 output sheets (or Layer-2 input sheets) may be stacked together to form a 3D matrix of size 4x(N1+N6)x(N4/2)x(N5/2). At the output of Layer 2, four 2D Layer-2 (N4/4)x(N5/4) output sheets may be generated for each 2D Layer-2 (N4/2)x(N5/2) input sheet. As there may be a total of 4x(N1+N6) Layer-2 input sheets, there may be a total of 16x(N1+N6) Layer-2 output sheets each of size (N4/4)x(N5/4) which may serve as input to the third layer of CNN (Layer 3). The 16x(N1+N6) Layer-2 output sheets (or Layer-3 input sheets) may be stacked together to form a 3D matrix of size 16x(N1+N6)x(N4/4)x(N5/4). At the output of Layer 3, four 2D Layer-3 (N4/8)x(N5/8) output sheets may be generated for each 2D Layer-3 (N4/4)x(N5/4) input sheet. As there may be a total of 16x(N1+N6) Layer-3 input sheets, there may be a total of 64x(N1+N6) Layer-3 output sheets each of size (N4/8)x(N5/8) which may serve as input to the fourth layer of CNN (Layer 4). The 64x(N1+N6) Layer-3 output sheets (or Layer-4 input sheets) may be stacked together to form a 3D matrix of size 64x(N1+N6)x(N4/8)x(N5/8). At the output of Layer 4, four 2D Layer-4 (N4/16)x(N5/16) output sheets may be generated for each 2D Layer-4 (N4/8)x(N5/8) input sheet. As there may be a total of 64x(N1+N6) Layer-4 input sheets, there may be a total of 256x(N1+N6) Layer-4 output sheets each of size (N4/16)x(N5/16) which may be the final features generated by the 4-layer CNN. The 256x(N1+N6) Layer-4 output sheets may be stacked together to form a 3D matrix of size 256x(N1+N6)x(N4/16)x(N5/16). The final features may be flattened/ concatenated/re-organized/re-arranged into a vector and fed as input to a N3-layer fully-connected network.

In some embodiments, all the parameters of all the 2D convolution kernels and all the parameters of the fully-connected layer may be trained in a training phase. Supervised training may be used. To adapt to new car/vehicle/venue models with different antenna setting and placement, few shot learning may be applied, in which the parameters of the N2-layer CNN may be frozen and the parameters of the fully-connected layer may be updated/trained/re-trained using limited training data collected using the new car/vehicle/venue models.

In some embodiments, the child/adult classification module may be used for other classification task. It may be used without the presence detection and/or the seat occupancy.

In some embodiments, the present teaching discloses systems and methods for wireless sensing for in-vehicle child presence detection.

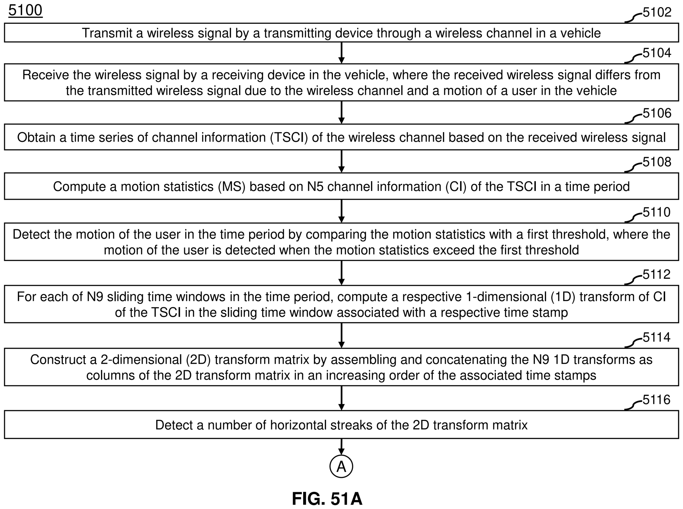

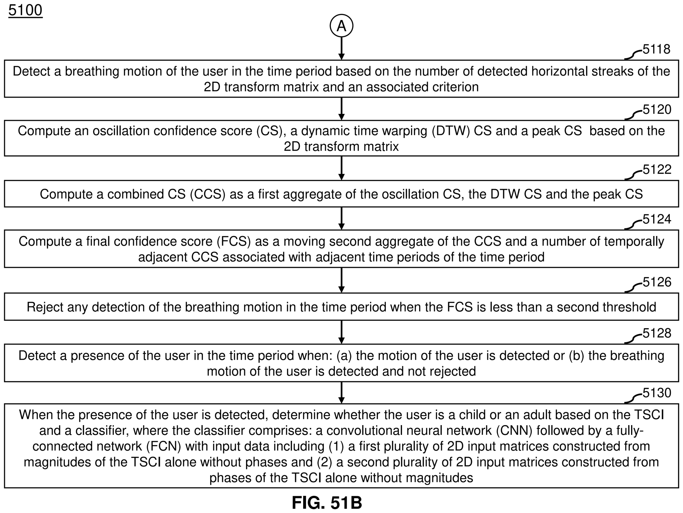

FIG. 51A and FIG. 51B illustrate a flow chart of an example method 5100 for performing wireless sensing for in-vehicle child presence detection, according to some embodiments of the present disclosure. In various embodiments, the method 5100 can be performed by the systems disclosed above. As shown in FIG. 51A, at operation 5102, a wireless signal is transmitted by a transmitting device through a wireless channel in a vehicle. At operation 5104, the wireless signal is received by a receiving device in the vehicle, where the received wireless signal differs from the transmitted wireless signal due to the wireless channel and a motion of a user in the vehicle. At operation 5106, a time series of channel information (TSCI) of the wireless channel is obtained based on the received wireless signal. At operation 5108, a motion statistics (MS) is computed based on N5 channel information (CI) of the TSCI in a time period. At operation 5110, the motion of the user is detected in the time period by comparing the motion statistics with a first threshold, where the motion of the user is detected when the motion statistics exceed the first threshold. At operation 5112, for each of N9 sliding time windows in the time period, a respective 1-dimensional (1D) transform of CI of the TSCI is computed in the sliding time window associated with a respective time stamp. At operation 5114, a 2-dimensional (2D) transform matrix is constructed by assembling and concatenating the N9 1D transforms as columns of the 2D transform matrix in an increasing order of the associated time stamps. At operation 5116, a number of horizontal streaks of the 2D transform matrix are detected.

As shown in FIG. 51B, at operation 5118, a breathing motion of the user is detected in the time period based on the number of detected horizontal streaks of the 2D transform matrix and an associated criterion. At operation 5120, an oscillation confidence score (CS), a dynamic time warping (DTW) CS and a peak CS based on the 2D transform matrix are computed. At operation 5122, a combined CS (CCS) is computed as a first aggregate of the oscillation CS, the DTW CS and the peak CS. At operation 5124, a final confidence score (FCS) is computed as a moving second aggregate of the CCS and a number of temporally adjacent CCS associated with adjacent time periods of the time period. At operation 5126, any detection of the breathing motion in the time period is rejected when the FCS is less than a second threshold. At operation 5128, a presence of the user in the time period is detected when: (a) the motion of the user is detected or (b) the breathing motion of the user is detected and not rejected. At operation 5130, when the presence of the user is detected, it is determined whether the user is a child or an adult based on the TSCI and a classifier. The classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

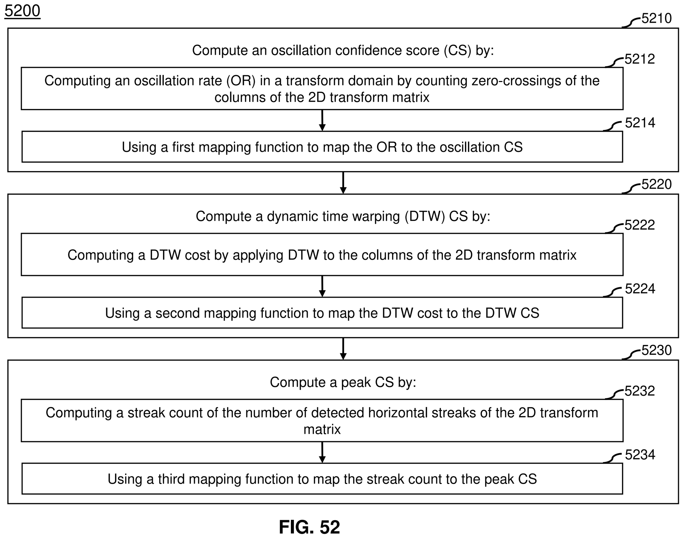

FIG. 52 illustrates a flow chart of an example method 5200 for computing an oscillation confidence score (CS), a dynamic time warping (DTW) CS and a peak CS, according to some embodiments of the present disclosure. In various embodiments, the method 5200 can be performed by the systems disclosed above. The operation 5210 in this example includes multiple sub-operations 5212-5214 performed to compute an oscillation confidence score (CS). At sub-operation 5212, an oscillation rate (OR) in a transform domain is computed by counting zero-crossings of the columns of the 2D transform matrix. At sub-operation 5214, a first mapping function is used to map the OR to the oscillation CS. The operation 5220 in this example includes multiple sub-operations 5222-5224 performed to compute a dynamic time warping (DTW) CS. At sub-operation 5222, a DTW cost is computed by applying DTW to the columns of the 2D transform matrix. At sub-operation 5224, a second mapping function is used to map the DTW cost to the DTW CS. The operation 5230 in this example includes multiple sub-operations 5232-5234 performed to compute a peak CS. At sub-operation 5232, a streak count of the number of detected horizontal streaks of the 2D transform matrix is computed. At sub-operation 5234, a third mapping function is used to map the streak count to the peak CS. In some embodiments, the method 5200 may be performed as part of the operation 5120 in the method 5100.

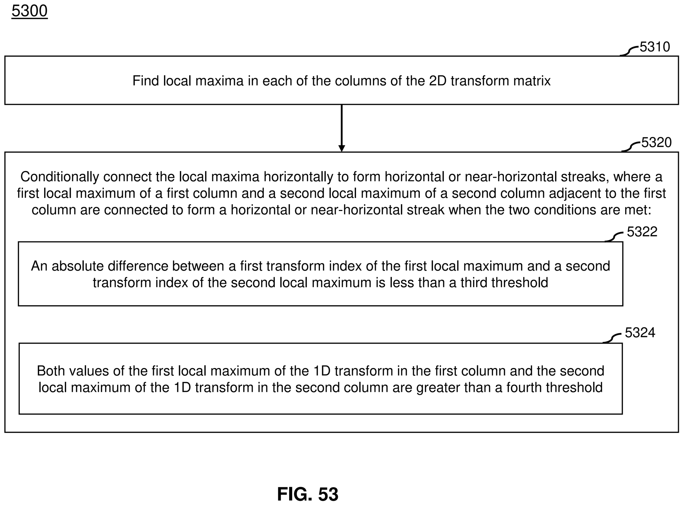

FIG. 53 illustrates a flow chart of an example method 5300 for detecting a number of horizontal streaks of a 2D transform matrix, according to some embodiments of the present disclosure. In various embodiments, the method 5300 can be performed by the systems disclosed above. At operation 5310, local maxima are found in each of the columns of the 2D transform matrix. At operation 5320, the local maxima are conditionally connected horizontally to form horizontal or near-horizontal streaks. A first local maximum of a first column and a second local maximum of a second column adjacent to the first column are connected to form a horizontal or near-horizontal streak when the two conditions 5322, 5324 are met. Condition 5322 includes that an absolute difference between a first transform index of the first local maximum and a second transform index of the second local maximum is less than a third threshold. Condition 5324 includes that both values of the first local maximum of the 1D transform in the first column and the second local maximum of the 1D transform in the second column are greater than a fourth threshold. In some embodiments, the method 5300 may be performed as part of the operation 5116 in the method 5100.

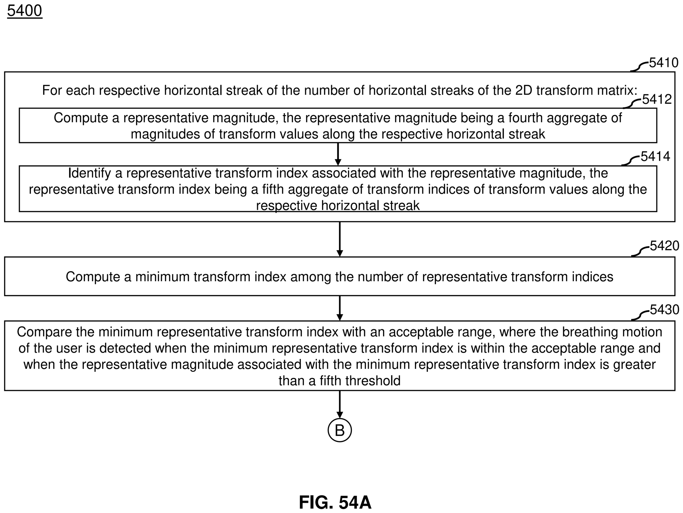

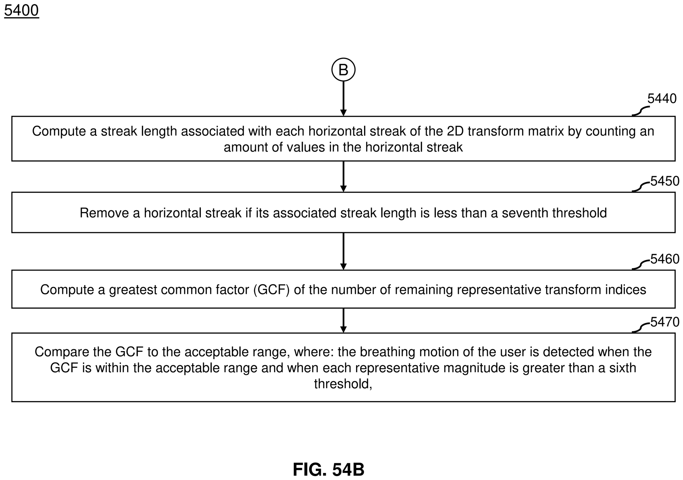

FIG. 54A and FIG. 54B illustrate a flow chart of an example method 5400 for detecting a breathing motion of a user in a time period, according to some embodiments of the present disclosure. In various embodiments, the method 5400 can be performed by the systems disclosed above. As shown in FIG. 54A, the operation 5410 in this example includes multiple sub-operations 5412-5414 performed for each respective horizontal streak of the number of horizontal streaks of the 2D transform matrix. At sub-operation 5412, a representative magnitude is computed, the representative magnitude being a fourth aggregate of magnitudes of transform values along the respective horizontal streak. At sub-operation 5414, a representative transform index associated with the representative magnitude is identified, the representative transform index being a fifth aggregate of transform indices of transform values along the respective horizontal streak. At operation 5420, a minimum transform index is computed among the number of representative transform indices. At operation 5430, the minimum representative transform index is compared with an acceptable range. The breathing motion of the user is detected when the minimum representative transform index is within the acceptable range and when the representative magnitude associated with the minimum representative transform index is greater than a fifth threshold. As shown in FIG. 54B, at operation 5440, a streak length associated with each horizontal streak of the 2D transform matrix is computed by counting an amount of values in the horizontal streak. At operation 5450, a horizontal streak is removed if its associated streak length is less than a seventh threshold. At operation 5460, a greatest common factor (GCF) of the number of remaining representative transform indices is computed. At operation 5470, the GCF is compared to the acceptable range. The breathing motion of the user is detected when the GCF is within the acceptable range and when each representative magnitude is greater than a sixth threshold. In some embodiments, the method 5400 may be performed as part of the operation 5118 in the method 5100.

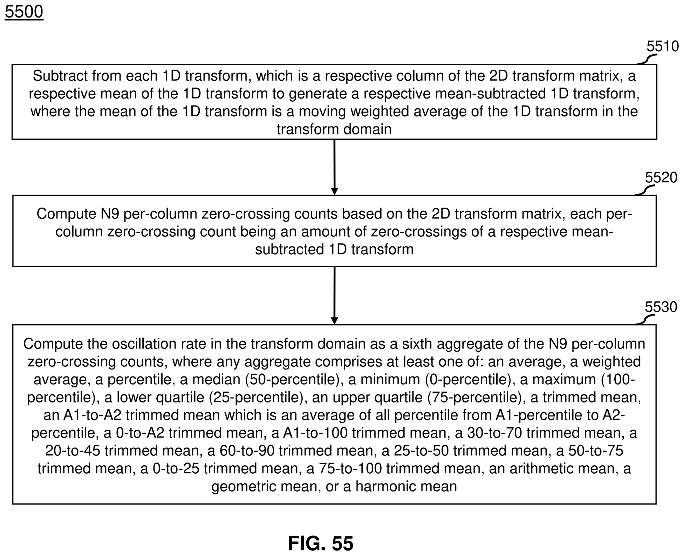

FIG. 55 illustrates a flow chart of an example method 5500 for computing oscillation rate in transform domain, according to some embodiments of the present disclosure. In various embodiments, the method 5500 can be performed by the systems disclosed above. At operation 5510, a respective mean of the 1D transform is subtracted from each 1D transform, which is a respective column of the 2D transform matrix, to generate a respective mean-subtracted 1D transform. The mean of the 1D transform is a moving weighted average of the 1D transform in the transform domain. At operation 5520, N9 per-column zero-crossing counts are computed based on the 2D transform matrix, each per-column zero-crossing count being an amount of zero-crossings of a respective mean-subtracted 1D transform. At operation 5530, the oscillation rate is computed in the transform domain as a sixth aggregate of the N9 per-column zero-crossing counts. Any aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean. In some embodiments, the method 5500 may be performed as part of the operation 5212 in the method 5200.

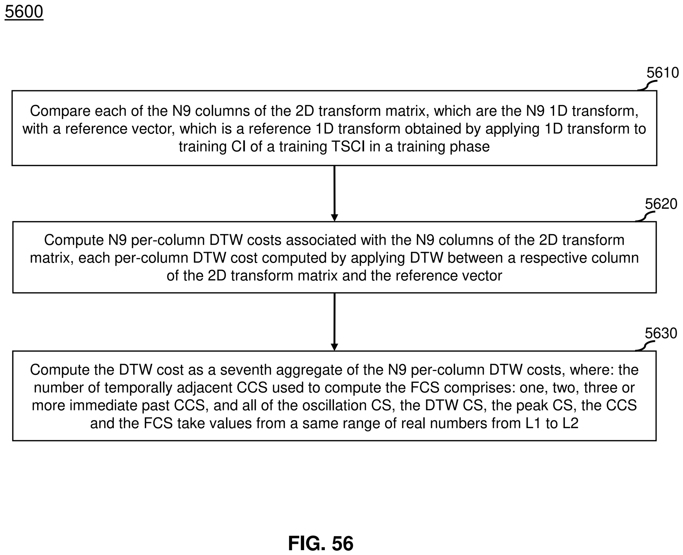

FIG. 56 illustrates a flow chart of an example method 5600 for computing DTW cost a, according to some embodiments of the present disclosure. In various embodiments, the method 5600 can be performed by the systems disclosed above. At operation 5610, each of the N9 columns of the 2D transform matrix, which are the N9 1D transform, is compared with a reference vector, which is a reference 1D transform obtained by applying 1D transform to training CI of a training TSCI in a training phase. At operation 5620, N9 per-column DTW costs associated with the N9 columns of the 2D transform matrix are computed, each per-column DTW cost computed by applying DTW between a respective column of the 2D transform matrix and the reference vector. At operation 5630, the DTW cost is computed as a seventh aggregate of the N9 per-column DTW costs. The number of temporally adjacent CCS used to compute the FCS comprises: one, two, three or more immediate past CCS, and all of the oscillation CS, the DTW CS, the peak CS, the CCS and the FCS take values from a same range of real numbers from L1 to L2. In some embodiments, the method 5600 may be performed as part of the operation 5222 in the method 5200.

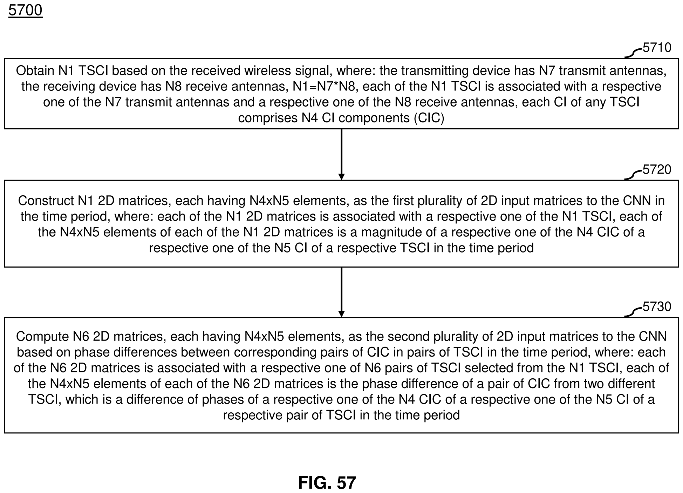

FIG. 57 illustrates a flow chart of an example method 5700 for computing 2D matrices, according to some embodiments of the present disclosure. In various embodiments, the method 5700 can be performed by the systems disclosed above. At operation 5710, N1 TSCI are obtained based on the received wireless signal. The transmitting device has N7 transmit antennas. The receiving device has N8 receive antennas. N1=N7*N8. Each of the N1 TSCI is associated with a respective one of the N7 transmit antennas and a respective one of the N8 receive antennas, each CI of any TSCI comprises N4 CI components (CIC). At operation 5720, N1 2D matrices, each having N4xN5 elements, are constructed as the first plurality of 2D input matrices to the CNN in the time period. Each of the N1 2D matrices is associated with a respective one of the N1 TSCI. Each of the N4xN5 elements of each of the N1 2D matrices is a magnitude of a respective one of the N4 CIC of a respective one of the N5 CI of a respective TSCI in the time period. At operation 5730, N6 2D matrices, each having N4xN5 elements, are computed as the second plurality of 2D input matrices to the CNN based on phase differences between corresponding pairs of CIC in pairs of TSCI in the time period. Each of the N6 2D matrices is associated with a respective one of N6 pairs of TSCI selected from the N1 TSCI. Each of the N4xN5 elements of each of the N6 2D matrices is the phase difference of a pair of CIC from two different TSCI, which is a difference of phases of a respective one of the N4 CIC of a respective one of the N5 CI of a respective pair of TSCI in the time period.

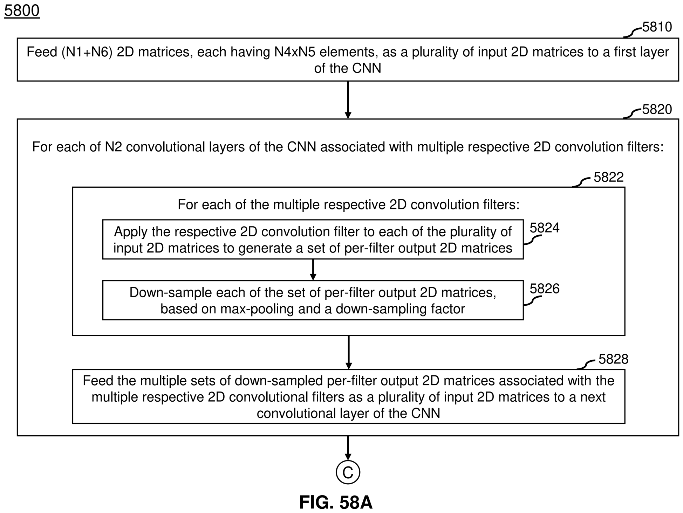

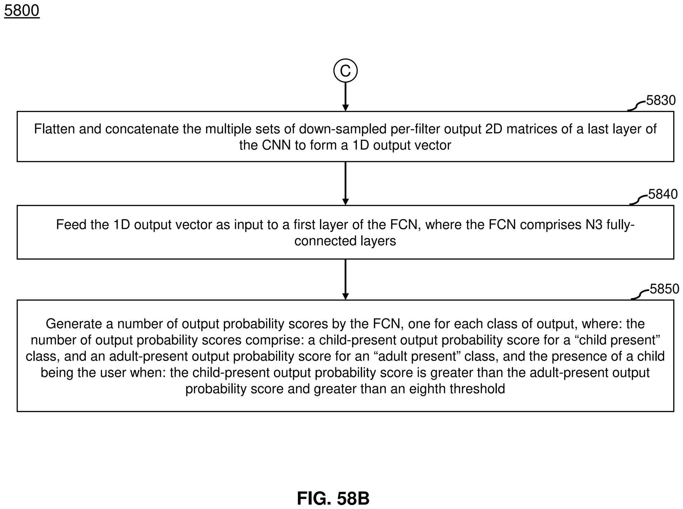

FIG. 58A and FIG. 58B illustrate a flow chart of an example method 5800 for generating output probability scores for a fully-connected network, according to some embodiments of the present disclosure. In various embodiments, the method 5800 can be performed by the systems disclosed above.

As shown in FIG. 58A, at operation 5810, (N1+N6) 2D matrices, each having N4xN5 elements, are fed as a plurality of input 2D matrices to a first layer of the CNN. In this example, the operation 5820 includes multiple sub-operations 5822 and 5828 performed for each of N2 convolutional layers of the CNN associated with multiple respective 2D convolution filters. The sub-operation 5822 includes steps 5824 and 5826 performed for each of the multiple respective 2D convolution filters. At step 5824, the respective 2D convolution filter is applied to each of the plurality of input 2D matrices to generate a set of per-filter output 2D matrices. At step 5826, each of the set of per-filter output 2D matrices is down-sampled based on max-pooling and a down-sampling factor. At sub-operation 5828, the multiple sets of down-sampled per-filter output 2D matrices associated with the multiple respective 2D convolutional filters are fed as a plurality of input 2D matrices to a next convolutional layer of the CNN.

As shown in FIG. 58B, at operation 5830, the multiple sets of down-sampled per-filter output 2D matrices of a last layer of the CNN are flattened and concatenated to form a 1D output vector. At operation 5840, the 1D output vector is fed as input to a first layer of the FCN, where the FCN comprises N3 fully-connected layers. At operation 5850, a number of output probability scores are generated by the FCN, one for each class of output. The number of output probability scores comprise: a child-present output probability score for a "child present" class, and an adult-present output probability score for an "adult present" class. The presence of a child is the user when: the child-present output probability score is greater than the adult-present output probability score and greater than an eighth threshold.

The following numbered clauses provide examples for wireless sensing for in-vehicle child presence detection.

Clause C3817_1. A method for in-vehicle child presence detection, comprising: transmitting a wireless signal by a transmitting device through a wireless channel in a vehicle; receiving the wireless signal by a receiving device in the vehicle, wherein the received wireless signal differs from the transmitted wireless signal due to the wireless channel and a motion of a user in the vehicle; obtaining a time series of channel information (TSCI) of the wireless channel based on the received wireless signal; computing a motion statistics (MS) based on N5 channel information (CI) of the TSCI in a time period; detecting the motion of the user in the time period by comparing the motion statistics with a first threshold, wherein the motion of the user is detected when the motion statistics exceed the first threshold; for each of N9 sliding time windows in the time period, computing a respective 1-dimensional (1D) transform of CI of the TSCI in the sliding time window associated with a respective time stamp; constructing a 2-dimensional (2D) transform matrix by assembling and concatenating the N9 1D transforms as columns of the 2D transform matrix in an increasing order of the associated time stamps; detecting a number of horizontal streaks of the 2D transform matrix; detecting a breathing motion of the user in the time period based on the number of detected horizontal streaks of the 2D transform matrix and an associated criterion; computing an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; computing a combined CS (CCS) as a first aggregate of the oscillation CS, the DTW CS and the peak CS; computing a final confidence score (FCS) as a moving second aggregate of the CCS and a number of temporally adjacent CCS associated with adjacent time periods of the time period; rejecting any detection of the breathing motion in the time period when the FCS is less than a second threshold; detecting a presence of the user in the time period when: (a) the motion of the user is detected or (b) the breathing motion of the user is detected and not rejected; and when the presence of the user is detected, determining whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

Clause C3817_2. The method of clause C3817_1, wherein: the 1D transform comprises one of: autocorrelation function (ACF), short-time Fourier transform (STFT), fast Fourier transform (FFT), or frequency transform; any CI has N4 CI components (CIC); computing the respective 1D transform comprises: for each respective CIC of the N4 CIC, computing a respective per-component 1D transform of the respective CIC of CI of the TSCI in the respective sliding time window, and computing the respective 1D transform as a third aggregate of the N4 per-component 1D transforms; and each aggregate comprises at least one of: a sum, product, mean, arithmetic mean, geometric mean, harmonic mean, weighted sum, weighted average, percentile, median (50-percentile), minimum (0-percentile), maximum (100-percentile), trimmed mean (mean from A1-percentile to A2-percentile), trimmed arithmetic mean, trimmed geometric mean, trimmed harmonic mean, or mode.

Clause C3817_3. The method of clause C3817_1, wherein detecting the number of horizontal streaks of the 2D transform matrix comprises: finding a respective number of local maxima in each of the columns of the 2D transform matrix; and conditionally connecting the local maxima horizontally to form horizontal or near-horizontal streaks, wherein a first local maximum of a first column and a second local maximum of a second column adjacent to the first column are connected to form a horizontal or near-horizontal streak when: an absolute difference between a first transform index of the first local maximum and a second transform index of the second local maximum is less than a third threshold, and both values of the first local maximum of the 1D transform in the first column and the second local maximum of the 1D transform in the second column are greater than a fourth threshold.

Clause C3817_4. The method of clause C3817_1, wherein detecting the breathing motion of the user in the time period comprises: computing a streak length associated with each horizontal streak of the 2D transform matrix by counting an amount of values in the horizontal streak; and removing a horizontal streak if its associated streak length is less than a seventh threshold; for each respective horizontal streak of a number of remaining horizontal streaks of the 2D transform matrix: computing a representative magnitude, the representative magnitude being a fourth aggregate of magnitudes of transform values along the respective horizontal streak, identifying a representative transform index associated with the representative magnitude, the representative transform index being a fifth aggregate of transform indices of transform values along the respective horizontal streak; computing a minimum transform index among the number of representative transform indices; comparing the minimum representative transform index with an acceptable range, wherein the breathing motion of the user is detected when the minimum representative transform index is within the acceptable range and when the representative magnitude associated with the minimum representative transform index is greater than a fifth threshold; computing a greatest common factor (GCF) of the number of representative transform indices; comparing the GCF to the acceptable range, wherein the breathing motion of the user is detected when the GCF is within the acceptable range and when each representative magnitude is greater than a sixth threshold, wherein the sixth threshold is larger than the fifth threshold.

Clause C3817_5. The method of clause C3817_1, wherein computing the oscillation rate in the transform domain comprises: subtracting from each 1D transform, which is a respective column of the 2D transform matrix, a respective mean of the 1D transform to generate a respective mean-subtracted 1D transform, wherein the mean of the 1D transform is a moving weighted average of the 1D transform in the transform domain; computing N9 per-column zero-crossing counts based on the 2D transform matrix, each per-column zero-crossing count being an amount of zero-crossings of a respective mean-subtracted 1D transform; and computing the oscillation rate in the transform domain as a sixth aggregate of the N9 per-column zero-crossing counts, wherein the sixth aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

Clause C3817_6. The method of clause C3817_1, wherein computing the DTW cost comprises: comparing each of the N9 columns of the 2D transform matrix, which are the N9 1D transform, with a reference vector, which is a reference 1D transform obtained by applying 1D transform to training CI of a training TSCI in a training phase; computing N9 per-column DTW costs associated with the N9 columns of the 2D transform matrix, each per-column DTW cost computed by applying DTW between a respective column of the 2D transform matrix and the reference vector; and computing the DTW cost as a seventh aggregate of the N9 per-column DTW costs, wherein the seventh aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

Clause C3817_7. The method of clause C3817_1, wherein: the number of temporally adjacent CCS used to compute the FCS comprises: one, two or three immediate past CCS; and all of the oscillation CS, the DTW CS, the peak CS, the CCS and the FCS take values from a same range of real numbers from 0 to 1.

Clause C3817_8. The method of clause C3817_1, further comprising: obtaining N1 TSCI based on the received wireless signal, wherein: the transmitting device has N7 transmit antennas, the receiving device has N8 receive antennas, N1=N7*N8, each of the N1 TSCI is associated with a respective one of the N7 transmit antennas and a respective one of the N8 receive antennas, each CI of any TSCI comprises N4 CI components (CIC); constructing N1 2D matrices, each having N4xN5 elements, as the first plurality of 2D input matrices to the CNN in the time period, wherein: each of the N1 2D matrices is associated with a respective one of the N1 TSCI, each of the N4xN5 elements of each of the N1 2D matrices is a magnitude of a respective one of the N4 CIC of a respective one of the N5 CI of a respective TSCI in the time period; and computing N6 2D matrices, each having N4xN5 elements, as the second plurality of 2D input matrices to the CNN based on phase differences between corresponding pairs of CIC in pairs of TSCI in the time period, wherein: each of the N6 2D matrices is associated with a respective one of N6 pairs of TSCI selected from the N1 TSCI, each of the N4xN5 elements of each of the N6 2D matrices is the phase difference of a pair of CIC from two different TSCI, which is a difference of phases of a respective one of the N4 CIC of a respective one of the N5 CI of a respective pair of TSCI in the time period.

Clause C3817_9. The method of clause C3817_8, further comprising: selecting the N6 pairs of TSCI from the N1 TSCI, wherein: N6 is greater than or equal to N1/2 such that all TSCI are used at least once among the N6 pairs, and each of the N6 pairs comprises two TSCI associated with: a same transmit antenna of the transmitting device, or a same receive antenna of the receiving device.

Clause C3817_10. The method of clause C3817_8, further comprising: feeding the (N1+N6) 2D matrices, each having N4xN5 elements, as a plurality of input 2D matrices to a first layer of the CNN; and for each of N2 convolutional layers of the CNN associated with multiple respective 2D convolution filters: for each of the multiple respective 2D convolution filters: applying the respective 2D convolution filter to each of the plurality of input 2D matrices to generate a set of per-filter output 2D matrices, and down-sampling each of the set of per-filter output 2D matrices, based on max-pooling and a 2:1 down-sampling factor, and feeding the multiple sets of down-sampled per-filter output 2D matrices associated with the multiple respective 2D convolutional filters as a plurality of input 2D matrices to a next convolutional layer of the CNN.

Clause C3817_11. The method of clause C3817_10, further comprising: flattening and concatenating the multiple sets of down-sampled per-filter output 2D matrices of a last layer of the CNN to form a 1D output vector; feeding the 1D output vector as input to a first layer of the FCN, wherein the FCN comprises N3 fully-connected layers; and generating a number of output probability scores by the FCN, one for each class of output.

Clause C3817_12. The method of clause C3817_11, wherein: the number of output probability scores comprise: a child-present output probability score for a "child present" class, and an adult-present output probability score for an "adult present" class; and detecting the presence of a child being the user in the vehicle when: the child-present output probability score is greater than the adult-present output probability score and greater than an eighth threshold.

Clause C3817_13. The method of clause C3817_11, further comprising: training the CNN and the FCN based on a set of training TSCI obtained in at least one vehicle with at least one antenna configuration and at least one antenna placement within the at least one vehicle in a training phase; enriching the set of training TSCI based on mix-up data segmentation; and adapting the classifier to a new antenna placement in the vehicle or in a new vehicle using few shot learning by retraining the FCN based on a number of TSCI captured with the new antenna placement in the vehicle or in the new venue while keeping the CNN unchanged.

Clause C3817_14. The method of clause C3817_1, further comprising: obtaining N1 TSCI based on the received wireless signal, wherein: the transmitting device has N7 transmit antennas, the receiving device has N8 receive antennas, N1=N7*N8, each of the N1 TSCI is associated with a respective one of the N7 transmit antennas and a respective one of the N8 receive antennas; computing N1 MS based on the N1 TSCI, each MS computed based on N5 CI of a respective one of the N1 TSCI in the time period; detecting the motion of the user in the time period based on any one of the N1 TSCI when the corresponding one of the N1 MS exceeds the first threshold; for each of the N9 sliding time windows in the time period, computing a respective 1D transform of CI of each of the N1 TSCI in the sliding time window associated with a respective time stamp; constructing N1 2D transform matrices associated with the N1 TSCI, each 2D transform matrix associated with a respective TSCI being constructed by assembling and concatenating the respective N9 1D transform of the respective TSCI as columns of the 2D transform matrix in an increasing order of the associated time stamps; detecting a respective number of horizontal streaks for each of the N1 2D transform matrices; detecting a breathing motion of the user in the time period based on any one of the N1 TSCI and the detected horizontal streaks of the corresponding one of the N1 2D transform matrices and an associated criterion; computing N1 oscillation CS, N1 DTW CS, and N1 peak CS based on the N1 TSCI, each CS computed based on a respective TSCI; computing N1 CCS, each based on a respective oscillation CI, a respective DTW CS and a respective peak CS; computing N1 FCS based on the N1 CCS and a number of temporally adjacent CCS; for each of the N1 TSCI, rejecting any detection of the breathing motion of the user in the time period based on the TSCI and the horizontal streaks of the corresponding 2D transform matrix when the associated FCS is less than a tenth threshold; detecting the presence of the user in the time period when: (a) the motion of the user is detected based on at least one of the N1 TSCI, or (b) the breathing motion of the user is detected and not rejected based on at least one of the N1 TSCI; and when the presence of the user is detected in the time period, detecting seat occupancy of the vehicle based on the N1 FCS in the time period.

Clause C3817_15. The method of clause C3817_14, wherein: the vehicle comprises a rectangular-shaped space encompassing two rows of seats; a first row or front row of the two rows comprises two seats: a front-left seat and a front-right seat; a second row or back row of the two rows comprises at least two seats: a back-left seat and a back-right seat; N7=2, such that the transmitting device comprises two transmit antennas; N8=2, such that the receiving device comprises two receive antennas and N1=N7*N8=4; the two transmit antennas and the two receive antennas comprise: a front-left antenna located towards a front-left corner of the rectangular-shaped space, a front-right antenna located towards a front-right corner of the rectangular-shaped space, a back-left antenna located towards a back-left corner of the rectangular-shaped space, and a back-right antenna located towards a back-right corner of the rectangular-shaped space; the front-left antenna and the front-right antenna belong to a same one of the transmitting device or the receiving device, the back-left antenna and the back-right antenna belong to the other one of the transmitting device or the receiving device; the two transmit antennas and the two receive antennas form four wireless links comprising: a left link between the front-left antenna and the back-left antenna, a right link between the front-right antenna and the back-right antenna, a diagonal link between the front-left antenna and the back-right antenna, and an anti-diagonal link between the front-right antenna and the back-left antenna; when all of the N1 FCS are greater than an eleventh threshold, a center seat of the vehicle is determined to be occupied by the detected user; and when at least one FCS is not greater than the eleventh threshold: identify two largest FCS among the N1 FCS, when the two largest FCS occur in the left link and the diagonal link, the left-front seat is determined to be occupied by the detected user, when the two largest FCS occur in the left link and the anti-diagonal link, the left-back seat is determined to be occupied by the detected user, when the two largest FCS occur in the right link and the anti-diagonal link, the right-front seat is determined to be occupied by the detected user, when the two largest FCS occur in the right link and the diagonal link, the right-back seat is determined to be occupied by the detected user, when the two largest FCS occur in the diagonal link and the anti-diagonal link, the center seat is determined to be occupied by the detected user, and when the two largest FCS occur in the left link and the right link, it is determined that no user is present in the vehicle.

Clause C3817_16. A system for in-vehicle child presence detection, comprising: a transmitting device configured to transmit a wireless signal through a wireless channel in a vehicle; a receiving device configured to receive the wireless signal, wherein the received wireless signal differs from the transmitted wireless signal due to the wireless channel and a motion of a user in the vehicle; and a processor configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

Clause C3817_17. The system of clause C3817_16, wherein the oscillation rate in the transform domain is computed based on: subtracting from each 1D transform, which is a respective column of the 2D transform matrix, a respective mean of the 1D transform to generate a respective mean-subtracted 1D transform, wherein the mean of the 1D transform is a moving weighted average of the 1D transform in the transform domain; computing N9 per-column zero-crossing counts based on the 2D transform matrix, each per-column zero-crossing count being an amount of zero-crossings of a respective mean-subtracted 1D transform; and computing the oscillation rate in the transform domain as a sixth aggregate of the N9 per-column zero-crossing counts, wherein any aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

Clause C3817_18. The system of clause C3817_16, wherein the DTW cost is computed based on: comparing each of the N9 columns of the 2D transform matrix, which are the N9 1D transform, with a reference vector, which is a reference 1D transform obtained by applying 1D transform to training CI of a training TSCI in a training phase; computing N9 per-column DTW costs associated with the N9 columns of the 2D transform matrix, each per-column DTW cost

**EP 4 745 613 A1**

computed by applying DTW between a respective column of the 2D transform matrix and the reference vector; and computing the DTW cost as a seventh aggregate of the N9 per-column DTW costs, wherein the seventh aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean, wherein: the number of temporally adjacent CCS used to compute the FCS comprises: one, two or three immediate past CCS, and all of the oscillation CS, the DTW CS, the peak CS, the CCS and the FCS take values from a same range of real numbers from 0 to 1.

Clause C3817_19. The system of clause C3817_16, wherein the processor is further configured to: obtain N1 TSCI based on the received wireless signal, wherein: the transmitting device has N7 transmit antennas, the receiving device has N8 receive antennas, N1=N7*N8, each of the N1 TSCI is associated with a respective one of the N7 transmit antennas and a respective one of the N8 receive antennas; compute N1 MS based on the N1 TSCI, each MS computed based on N5 CI of a respective one of the N1 TSCI in the time period; detect the motion of the user in the time period based on any one of the N1 TSCI when the corresponding one of the N1 MS exceeds the first threshold; for each of the N9 sliding time windows in the time period, compute a respective 1D transform of CI of each of the N1 TSCI in the sliding time window associated with a respective time stamp; construct N1 2D transform matrices associated with the N1 TSCI, each 2D transform matrix associated with a respective TSCI being constructed by assembling and concatenating the respective N9 1D transform of the respective TSCI as columns of the 2D transform matrix in an increasing order of the associated time stamps; detect a respective number of horizontal streaks for each of the N1 2D transform matrices; detect a breathing motion of the user in the time period based on any one of the N1 TSCI and the detected horizontal streaks of the corresponding one of the N1 2D transform matrices and an associated criterion; compute N1 oscillation CS, N1 DTW CS, and N1 peak CS based on the N1 TSCI, each CS computed based on a respective TSCI; compute N1 CCS, each based on a respective oscillation CI, a respective DTW CS and a respective peak CS; compute N1 FCS based on the N1 CCS and a number of temporally adjacent CCS; for each of the N1 TSCI, reject any detection of the breathing motion of the user in the time period based on the TSCI and the horizontal streaks of the corresponding 2D transform matrix when the associated FCS is less than a tenth threshold; detect the presence of the user in the time period when: (a) the motion of the user is detected based on at least one of the N1 TSCI, or (b) the breathing motion of the user is detected and not rejected based on at least one of the N1 TSCI; and when the presence of the user is detected in the time period, detect seat occupancy of the vehicle based on the N1 FCS in the time period.

Clause C3817_20. The system of clause C3817_16, wherein the processor is further configured to: obtain N1 TSCI based on the received wireless signal, wherein: the transmitting device has N7 transmit antennas, the receiving device has N8 receive antennas, N1=N7*N8, each of the N1 TSCI is associated with a respective one of the N7 transmit antennas and a respective one of the N8 receive antennas, each CI of any TSCI comprises N4 CI components (CIC); construct N1 2D matrices, each having N4xN5 elements, as the first plurality of 2D input matrices to the CNN in the time period, wherein: each of the N1 2D matrices is associated with a respective one of the N1 TSCI, each of the N4xN5 elements of each of the N1 2D matrices is a magnitude of a respective one of the N4 CIC of a respective one of the N5 CI of a respective TSCI in the time period; and compute N6 2D matrices, each having N4xN5 elements, as the second plurality of 2D input matrices to the CNN based on phase differences between corresponding pairs of CIC in pairs of TSCI in the time period, wherein: each of the N6 2D matrices is associated with a respective one of N6 pairs of TSCI selected from the N1 TSCI, each of the N4xN5 elements of each of the N6 2D matrices is the phase difference of a pair of CIC from two different TSCI, which is a difference of phases of a respective one of the N4 CIC of a respective one of the N5 CI of a respective pair of TSCI in the time period.

Clause C3817_21. The system of clause C3817_20, wherein the processor is further configured to: feed the (N1+N6) 2D matrices, each having N4xN5 elements, as a plurality of input 2D matrices to a first layer of the CNN; for each of N2 convolutional layers of the CNN associated with multiple respective 2D convolution filters: for each of the multiple respective 2D convolution filters: apply the respective 2D convolution filter to each of the plurality of input 2D matrices to generate a set of per-filter output 2D matrices, and down-sample each of the set of per-filter output 2D matrices, based on max-pooling and a 2:1 down-sampling factor, and feed the multiple sets of down-sampled per-filter output 2D matrices associated with the multiple respective 2D convolutional filters as a plurality of input 2D matrices to a next convolutional layer of the CNN; flatten and concatenate the multiple sets of down-sampled per-filter output 2D matrices of a last layer of the CNN to form a 1D output vector; feed the 1D output vector as input to a first layer of the FCN, wherein the FCN comprises N3 fully-connected layers; and generate a number of output probability scores by the FCN, one for each class of output, wherein: the number of output probability scores comprise: a child-present output probability score for a "child present" class, and an adult-present output probability score for an "adult present" class, and the presence of a child being the user is detected in the vehicle when: the child-present output probability score is greater than the adult-present output probability score and greater than an eighth threshold.

**148**

Clause C3817_22. A device for in-vehicle child presence detection, comprising: a receiver configured to receive a wireless signal transmitted by a transmitter through a wireless channel in a vehicle, wherein the received wireless signal differs from the transmitted wireless signal due to the wireless channel and a motion of a user in the vehicle; and a processor configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

Clause C3817_23. The device of clause C3817_22, wherein the oscillation rate in the transform domain is computed based on: subtracting from each 1D transform, which is a respective column of the 2D transform matrix, a respective mean of the 1D transform to generate a respective mean-subtracted 1D transform, wherein the mean of the 1D transform is a moving weighted average of the 1D transform in the transform domain; computing N9 per-column zero-crossing counts based on the 2D transform matrix, each per-column zero-crossing count being an amount of zero-crossings of a respective mean-subtracted 1D transform; and computing the oscillation rate in the transform domain as a sixth aggregate of the N9 per-column zero-crossing counts, wherein any aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

Clause C3817_24. The device of clause C3817_22, wherein the DTW cost is computed based on: comparing each of the N9 columns of the 2D transform matrix, which are the N9 1D transform, with a reference vector, which is a reference 1D transform obtained by applying 1D transform to training CI of a training TSCI in a training phase; computing N9 per-column DTW costs associated with the N9 columns of the 2D transform matrix, each per-column DTW cost computed by applying DTW between a respective column of the 2D transform matrix and the reference vector; and computing the DTW cost as a seventh aggregate of the N9 per-column DTW costs, wherein the seventh aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean, wherein: the number of temporally adjacent CCS used to compute the FCS comprises: one, two or three immediate past CCS, and all of the oscillation CS, the DTW CS, the peak CS, the CCS and the FCS take values from a same range of real numbers from 0 to 1.

Clause C3817_25. The device of clause C3817_22, wherein the processor is further configured to: obtain N1 TSCI based on the received wireless signal, wherein: the transmitter has N7 transmit antennas, the receiver has N8 receive antennas, N1=N7*N8, each of the N1 TSCI is associated with a respective one of the N7 transmit antennas and a respective one of the N8 receive antennas; compute N1 MS based on the N1 TSCI, each MS computed based on N5 CI of a respective one of the N1 TSCI in the time period; detect the motion of the user in the time period based on any one of the N1 TSCI when the corresponding one of the N1 MS exceeds the first threshold; for each of the N9 sliding time windows in the time period, compute a respective 1D transform of CI of each of the N1 TSCI in the sliding time window associated with a respective time stamp; construct N1 2D transform matrices associated with the N1 TSCI, each 2D transform matrix associated with a respective TSCI being constructed by assembling and concatenating the respective N9 1D transform of the respective TSCI as columns of the 2D transform matrix in an increasing order of the associated time stamps; detect a respective number of horizontal streaks for each of the N1 2D transform matrices; detect a breathing motion of the user in the time period based on any one of the N1 TSCI and the detected horizontal streaks of the corresponding one of the N1 2D transform matrices and an associated criterion; compute N1 oscillation CS, N1 DTW CS, and N1 peak CS based on the N1 TSCI, each CS computed based on a respective TSCI; compute N1 CCS, each based on a respective oscillation CI, a respective DTW CS and a respective peak CS; compute N1 FCS based on the N1 CCS and a number of temporally adjacent CCS; for each of the N1 TSCI, reject any detection of the breathing motion of the user in the time period based on the TSCI and the horizontal streaks of the corresponding 2D transform matrix when the associated FCS is less than a tenth threshold; detect the presence of the user in the time period when: (a) the motion of the user is detected based on at least one of the N1 TSCI, or (b) the breathing motion of the user is detected and not rejected based on at least one of the N1 TSCI; and when the presence of the user is detected in the time period, detect seat occupancy of the vehicle based on the N1 FCS in the time period.

Clause C3817_26. The device of clause C3817_22, wherein the processor is further configured to: obtain N1 TSCI based on the received wireless signal, wherein: the transmitter has N7 transmit antennas, the receiver has N8 receive antennas, N1=N7*N8, each of the N1 TSCI is associated with a respective one of the N7 transmit antennas and a respective one of the N8 receive antennas, each CI of any TSCI comprises N4 CI components (CIC); construct N1 2D matrices, each having N4xN5 elements, as the first plurality of 2D input matrices to the CNN in the time period, wherein: each of the N1 2D matrices is associated with a respective one of the N1 TSCI, each of the N4xN5 elements of each of the N1 2D matrices is a magnitude of a respective one of the N4 CIC of a respective one of the N5 CI of a respective TSCI in the time period; and compute N6 2D matrices, each having N4xN5 elements, as the second plurality of 2D input matrices to the CNN based on phase differences between corresponding pairs of CIC in pairs of TSCI in the time period, wherein: each of the N6 2D matrices is associated with a respective one of N6 pairs of TSCI selected from the N1 TSCI, each of the N4xN5 elements of each of the N6 2D matrices is the phase difference of a pair of CIC from two different TSCI, which is a difference of phases of a respective one of the N4 CIC of a respective one of the N5 CI of a respective pair of TSCI in the time period.

Clause C3817_27. The device of clause C3817_26, wherein the processor is further configured to: feed the (N1+N6) 2D matrices, each having N4xN5 elements, as a plurality of input 2D matrices to a first layer of the CNN; for each of N2 convolutional layers of the CNN associated with multiple respective 2D convolution filters: for each of the multiple respective 2D convolution filters: apply the respective 2D convolution filter to each of the plurality of input 2D matrices to generate a set of per-filter output 2D matrices, and down-sample each of the set of per-filter output 2D matrices, based on max-pooling and a 2:1 down-sampling factor, and feed the multiple sets of down-sampled per-filter output 2D matrices associated with the multiple respective 2D convolutional filters as a plurality of input 2D matrices to a next convolutional layer of the CNN; flatten and concatenate the multiple sets of down-sampled per-filter output 2D matrices of a last layer of the CNN to form a 1D output vector; feed the 1D output vector as input to a first layer of the FCN, wherein the FCN comprises N3 fully-connected layers; and generate a number of output probability scores by the FCN, one for each class of output, wherein: the number of output probability scores comprise: a child-present output probability score for a "child present" class, and an adult-present output probability score for an "adult present" class, and the presence of a child being the user is detected in the vehicle when: the child-present output probability score is greater than the adult-present output probability score and greater than an eighth threshold.

Clause C3817_28. A vehicle, comprising: a transmitting device configured to transmit a wireless signal through a wireless channel in the vehicle; a receiving device configured to receive the wireless signal, wherein the received wireless signal differs from the transmitted wireless signal due to the wireless channel and a motion of a user in the vehicle; and a processor configured to: obtain a time series of channel information (TSCI) of the wireless channel based on the received wireless signal; compute a motion statistics (MS) based on N5 channel information (CI) of the TSCI in a time period; detect the motion of the user in the time period by comparing the motion statistics with a first threshold, wherein the motion of the user is detected when the motion statistics exceed the first threshold; for each of N9 sliding time windows in the time period, compute a respective 1-dimensional (1D) transform of CI of the TSCI in the sliding time window associated with a respective time stamp; construct a 2-dimensional (2D) transform matrix by assembling and concatenating the N9 1D transforms as columns of the 2D transform matrix in an increasing order of the associated time stamps; detect a number of horizontal streaks of the 2D transform matrix; detect a breathing motion of the user in the time period based on the number of detected horizontal streaks of the 2D transform matrix and an associated criterion; compute an oscillation confidence score (CS) by: computing an oscillation rate (OR) in a transform domain by counting zero-crossings of the 2D transform matrix, and using a first mapping function to map the OR to the oscillation CS; computing a dynamic time warping (DTW) CS by: computing a DTW cost by applying DTW to the 2D transform matrix, and using a second mapping function to map the DTW cost to the DTW CS; computing a peak CS by: computing a streak count of the number of detected horizontal streaks of the 2D transform matrix, and using a third mapping function to map the streak count to the peak CS; compute a combined CS (CCS) as a first aggregate of the oscillation CS, the DTW CS and the peak CS; compute a final confidence score (FCS) as a moving second aggregate of the CCS and a number of temporally adjacent CCS associated with adjacent time periods of the time period; reject any detection of the breathing motion in the time period when the FCS is less than a second threshold; detect a presence of the user in the time period when: (a) the motion of the user is detected or (b) the breathing motion of the user is detected and not rejected; and when the presence of the user is detected, determine whether the user is a child or an adult based on the TSCI and a classifier, wherein the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes.

Clause C3817_29. The vehicle of clause C3817_28, wherein the oscillation rate in the transform domain is computed based on: subtracting from each 1D transform, which is a respective column of the 2D transform matrix, a respective mean of the 1D transform to generate a respective mean-subtracted 1D transform, wherein the mean of the 1D transform is a moving weighted average of the 1D transform in the transform domain; computing N9 per-column zero-crossing counts based on the 2D transform matrix, each per-column zero-crossing count being an amount of zero-crossings of a respective mean-subtracted 1D transform; and computing the oscillation rate in the transform domain as a sixth aggregate of the N9 per-column zero-crossing counts, wherein any aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

Clause C3817_30. The vehicle of clause C3817_28, wherein the DTW cost is computed based on: comparing each of the N9 columns of the 2D transform matrix, which are the N9 1D transform, with a reference vector, which is a reference 1D transform obtained by applying 1D transform to training CI of a training TSCI in a training phase; computing N9 per-column DTW costs associated with the N9 columns of the 2D transform matrix, each per-column DTW cost computed by applying DTW between a respective column of the 2D transform matrix and the reference vector; and computing the DTW cost as a seventh aggregate of the N9 per-column DTW costs, wherein the seventh aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean, wherein: the number of temporally adjacent CCS used to compute the FCS comprises: one, two or three immediate past CCS, and all of the oscillation CS, the DTW CS, the peak CS, the CCS and the FCS take values from a same range of real numbers from 0 to 1.

Clause 3817_1. A system/device/method/software of wireless sensing for in-vehicle child presence detection, comprising: transmitting a wireless signal by a Type1 heterogeneous wireless device through a wireless channel in a vehicle; receiving the wireless signal by a Type2 heterogeneous wireless device in the vehicle, wherein the received wireless signal differs from the transmitted wireless signal due to the wireless channel and a motion of a user in the vehicle; obtaining a time series of channel information (TSCI) of the wireless channel by the Type2 device based on the received wireless signal; computing a motion statistics (MS) based on N5 CI of the TSCI in a time period; detecting the motion of the user in the time period by comparing the motion statistics with a first threshold, wherein the motion of user is detected when the motion statistics exceed the first threshold; for each of N9 sliding time windows in the time period, computing a respective 1-dimensional (1D) transform of channel information (CI) of the TSCI in the sliding time window associated with a respective time stamp; constructing a 2-dimensional (2D) transform matrix by assembling and concatenating the N9 1D transform as columns of the 2D transform matrix in increasing order of the time stamp; detecting a number of horizontal streaks of the 2D transform matrix; detecting a breathing motion of the user in the time period based on the number of detected horizontal streaks of the 2D transform matrix and an associated criterion; computing an oscillation confidence score (oscillation CS) by: computing an oscillation rate (OR) in the transform domain by counting zero-crossings of the 2D transform matrix, and using a first mapping function to map the OR to the oscillation CS; computing a DTW confidence score (DTW CS) by: computing a DTW cost by applying dynamic time warping (DTW) to the 2D transform matrix, and using a second mapping function to map the DTW cost to the DTW CS; computing a peak confidence score (peak CS) by: computing a streak count of the number of detected horizontal streaks of the 2D transform matrix, and using a third mapping function to map the streak count to the peak CS; computing a combined confidence score (CCS) as a first aggregate of the oscillation CS, the DTW CS and the peak CS; computing a final confidence score (FCS) as a moving second aggregate of the CCS and a number of temporally adjacent CCS associated with adjacent time periods, wherein any aggregate comprises at least one of: a sum, product, mean, arithmetic mean, geometric mean, harmonic mean, weighted sum, weighted average, percentile, median (50-percentile), minimum (0-percentile), maximum (100-percentile), trimmed mean (mean from A1-percentile to A2-percentile), trimmed arithmetic mean, trimmed geometric mean, trimmed harmonic mean, or mode; rejecting any detection of the breathing motion in the time period when FCS is less than a second threshold; detecting a presence of the user in the time period when either (a) the motion of the user is detected, or (b) the breathing motion of the user is detected and not rejected; when presence of the user is detected, detecting whether the detected user is a child or an adult in the time period based on the TSCI and a classification module comprising a convolutional neural network (CNN) followed by a fully-connected network (FCN) with input being a first plurality of 2D input matrices constructed from magnitude of TSCI alone with the phase, and a second plurality of 2D input matrices constructed from phase of TSCI alone without the magnitude.

Clause 3817_2. The system/device/method/software of wireless sensing for in-vehicle child presence detection of clause 3817_1, further comprising: wherein the motion statistics comprises a similarity score of a pair of temporally adjacent CI of the TSCI.

In some embodiments, these may be some possible 1D transform: ACF, STFT, or some frequency transform such as wavelet transform, sin transform, cosine transform, trigonometic transform, Hadamard transform, Haar transform, etc.

Clause 3817_3. The system/device/method/software of wireless sensing for in-vehicle child presence detection of clause 3817_1: wherein the 1D transform comprises one of: autocorrelation function (ACF), short-time Fourier transform (STFT), fast Fourier transform (FFT), or frequency transform.

In some embodiments, 1D transform may be an aggregate of multiple per-component 1D transform.

Clause 3817_4. The system/device/method/software of wireless sensing for in-vehicle child presence detection of clause 3817_3, further comprising: wherein any CI has N4 CI components (CIC); computing the respective 1D transform by: for each of the N4 CIC, computing a respective per-component 1D transform of the respective CIC of CI of the TSCI in the respective sliding time window, and computing the respective 1D transform as a third aggregate of the N4 per-component 1D transform, wherein the any third aggregate comprises at least one of: sum, product, mean, arithmetic mean, geometric mean, harmonic mean, weighted sum, weighted average, percentile, median (50-percentile), minimum (0-percentile), maximum (100-percentile), trimmed mean (mean from A1-percentile to A2-percentile), trimmed arithmetic mean, trimmed geometric mean, trimmed harmonic mean, or mode In some embodiments, a special case includes MRC used in the aggregate to generate 1D transform.

Clause 3817_5. The system/device/method/software of wireless sensing for in-vehicle child presence detection of clause 3817_4, further comprising: computing the respective 1D transform as the third aggregate of the N4 per-component 1D transform based on maximum ratio combining (MRC).

In some embodiments, the 2D transform matrix (formed by representing each of the N9 1D transform as a 1-dimensional vector and concatenating/grouping/combining the N9 vectors) may be enhanced in clause 3817_1.

Clause 3817_6. The system/device/method/software of wireless sensing for in-vehicle child presence detection of clause 3817_1, further comprising: enhancing the 2D transform matrix by at least one of: image peak enhancement, edge enhancement, peak emphasis, highpass emphasis, directional filtering, vertical highpass filtering, horizontal lowpass filtering, near-horizontal lowpass filtering, histogram equalization, or image enhancement.

Clause 3817_7. The system/device/method/software of wireless sensing for in-vehicle child presence detection of clause 3817_1, further comprising: detecting the number of horizontal peaks of the 2D transform matrix by finding local maxima in each of the vertical columns and conditionally connecting the maxima horizontally to form horizontal or near-horizontal streaks.

In some embodiments, the threshold may be 1 or 2 or 3 or ... The streak may be horizontal if threshold is 1, and near horizontal if threshold is 2 or 3 or larger.

Clause 3817_8. The system/device/method/software of wireless sensing for in-vehicle child presence detection of clause 3817_7, further comprising: conditionally connecting a first local maximum of a first column and a second local maximum of an adjacent column adjacent to the first column to form a horizontal or near-horizontal streak when: an absolute difference between a first transform index of the first local maximum and a second transform index of the second local maximum is less than a third threshold, both the first local maximum value of the 1D transform in the first column and the second local maximum value of the 1D transform in the adjacent column are greater than a fourth threshold.

In some embodiments, the system can compute a representative magnitude of each horizontal streak (e.g. average or weighted average of magnitude of transform values along the streak). In one example, all values may have equal weights along the streak. In another example, the all values may have a common weight along the streak, except that the last one or more may have different weights (e.g. smaller or greater than the common weight). Ideally, the representative magnitude should be large enough in order for it to be trustworthy. In some embodiments, the system can compute a representative transform index for each horizontal streak (related to breathing rate).

Clause 3817_9. The system/device/method/software of wireless sensing for in-vehicle child presence detection of clause 3817_1, further comprising: detecting the breathing motion of the user in the time period by: computing a representative magnitude of each of the number of horizontal streaks of the 2D transform matrix, the representative magnitude being a fourth aggregate of magnitude of transform values along the respective streak, identifying a representative transform index associated with each of the number of horizontal streaks of the 2D transform matrix, the representative transform index being a fifth aggregate of transform index of transform values along the respective streak, computing a minimum transform index among the number of representative transform indices, comparing the minimum representative transform index to an acceptable range, wherein the breathing motion of the user is detected when the minimum representative transform index is within the acceptable range and the associated representative magnitude is greater than a fifth threshold.

Clause 3817_10. The system/device/method/software of wireless sensing for in-vehicle child presence detection of clause 3817_9, further comprising: detecting the breathing motion of the user in the time period further by: computing a greatest common factor (GCF) of the number of representative transform indices, and comparing the GCF to the acceptable range, wherein the breathing motion of the user is detected when the GCF is within the acceptable range and each of the representative magnitude is greater than a sixth threshold, wherein the sixth threshold is larger than the fifth threshold.

In some embodiments, short horizontal streaks may be due to noise and may be eliminated/removed/deleted.

Clause 3817_11. The system/device/method/software of wireless sensing for in-vehicle child presence detection of clause 3817_10, further comprising: detecting the breathing motion of the user in the time period further by: computing a streak length of each horizontal streak of the 2D transform matrix by counting an amount of values in each streak, and remove a streak if the associated streak length is less than a seventh threshold.

In some embodiments, zero-crossing count may be obtained for each column of 2D transform matrix (i.e. for each 1D transform). Oscillation rate may be an aggregate of N9 per-column zero-crossing counts.

Clause 3817_12. The system/device/method/software of wireless sensing for in-vehicle child presence detection of clause 3817_1, further comprising: computing N9 per-column zero-crossing counts based on the 2D transform matrix, each per-column zero-crossing count being an amount of zero-crossings of a respective 1D transform which is a respective one of the N9 columns of the 2D transform matrix, and computing the oscillation rate in the transform domain as a sixth aggregate of the N9 per-column zero-crossing counts, wherein sixth aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

In some embodiments, a mean (e.g. a constant mean, or a mean function) of each column may be subtracted from the column before zero-crossing counts are computed.

Clause 3817_13. The system/device/method/software of wireless sensing for in-vehicle child presence detection of clause 3817_12, further comprising: subtracting from each 1D transform, which is a respective column of the 2D transform matrix, a respective mean of the 1D transform; computing each per-column zero-crossing count as the amount of zero-crossings of a respective mean-subtracted 1D transform.

In some embodiments, the mean function may be computed by applying a (weighted) moving average filter (a smoothing filter) to the 1D transform.

Clause 3817_14. The system/device/method/software of wireless sensing for in-vehicle child presence detection of clause 3817_13: wherein the mean of the 1D transform to be subtracted is a moving weighted average of the 1D transform in the transform domain.

In some embodiments, DTW cost may be an aggregate of individual per-column (i.e. per 1D transform) DTW cost.

Clause 3817_15. The system/device/method/software of wireless sensing for in-vehicle child presence detection of clause 3817_1, further comprising: comparing each of the N9 columns of the 2D transform matrix, which are the N9 1D transform, with a reference vector, which is a reference 1D transform obtained by applying 1D transform to training CI of a training TSCI in a training phase; computing N9 per-column DTW cost associated with the N9 columns of the 2D transform matrix, each per-column DTW cost computed by applying dynamic time warping (DTW) between respective column of the 2D transform matrix and the reference vector; computing the DTW cost as a seventh aggregate of the N9 per-column DTW cost, wherein the seventh aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean.

In some embodiments, FS may be moving average of several temporally adjacent CCS.

Clause 3817_16. The system/device/method/software of wireless sensing for in-vehicle child presence detection of clause 3817_1: wherein the number of temporally adjacent CCS used to compute the FCS comprises: one, two, or three immediate past CCS.

Clause 3817_17. The system/device/method/software of wireless sensing for in-vehicle child presence detection of clause 3817_1, further comprising: wherein all of oscillation CS, DTW CS, peak CS, combined CS and final CS take values from a same range of real numbers.

In some embodiments, all CS may be in the range between 0 and 1.

Clause 3817_18. The system/device/method/software of wireless sensing for in-vehicle child presence detection of clause 3817_17: wherein the same range of real numbers is from 0 to 1.

In some embodiments, there may be multiple (N1) TSCI due to multiple TX antennas or multiple RX antennas. A number (N1) of 2D matrices may be constructed as part of input to CNN. Each 2D matrix of size N4xN5 may be associated with a respective TSCI. Each element may be magnitude of one of N4 CIC of one of N5 CI of respective TSCI in the time period.

Clause 3817_19. The system/device/method/software of wireless sensing for in-vehicle child presence detection of clause 3817_1, comprising: obtaining N1=N7*N8 TSCI based on the received wireless signal, wherein the Type1 device has N7 TX antennas and the Type2 device has N8 RX antennas, wherein each of the N1 TSCI is associated with a respective one of the N7 TX antennas and a respective one of the N8 RX antennas, wherein each CI of any TSCI comprises N4 CI components (CIC); constructing N1 2-dimensional (2D) matrices each of size N4xN5 as the first plurality of 2D input matrices to the CNN in the time period, wherein each of the N1 2D matrices is associated with a respective one of the N1 TSCI, wherein each of the N4xN5 elements of each 2D matrix is the magnitude of a respective one of the N4 CIC of a respective one of the N5 CI of a respective TSCI in the time period.

In some embodiments, another number (N6) of 2D matrices may be constructed as another part of input to CNN. Each 2D matrix of size N4xN5 may be associated with a respective TSCI-pair (respective pair of TSCI from the N1 TSCI). Each element may be phase-difference of one of N4 CIC of one of N5 CI of respective TSCI-pair in the time period.

Clause 3817_20. The system/device/method/software of wireless sensing for in-vehicle child presence detection of clause 3817_19, comprising: computing N6 2D matrices each of size N4xN5 as the second plurality of 2D input matrices to the CNN based on phase difference between corresponding pairs of CIC in pairs of TSCI in the time period, wherein each of the N6 2D matrices is associated with a respective one of N6 pairs of TSCI from among the N1 TSCI, wherein each of the N4xN5 elements of each 2D matrix is the phase difference of a pair of CIC from two different TSCI, which is the difference of phase of respective one of the N4 CIC of a respective one of the N5 CI of a respective pair of TSCI in the time period.

In some embodiments, the N6 pairs of TSCI may be selected from the N1 TSCI.

Clause 3817_21. The system/device/method/software of wireless sensing for in-vehicle child presence detection of clause 3817_20, comprising: selecting the N6 pairs of TSCI from the N1 TSCI.

In some embodiments, N6 >=N1/2. All TSCI may be used/involved at least once in the N6 pairs.

Clause 3817_22. The system/device/method/software of wireless sensing for in-vehicle child presence detection of clause 3817_21, comprising: wherein N6 is greater than or equal to N1/2 such that all TSCI are used at least once among the N6 pairs.

In some embodiments, each pair may have two TSCI associated with same TX antenna of the Type1 device.

Clause 3817_23. The system/device/method/software of wireless sensing for in-vehicle child presence detection of clause 3817_22, comprising: wherein each of the N6 pairs comprises two TSCI associated with a same TX antenna of the Type1 device.

In some embodiments, each pair may have two TSCI associated with same RX antenna of the Type2 device.

Clause 3817_24. The system/device/method/software of wireless sensing for in-vehicle child presence detection of clause 3817_22, comprising: wherein each of the N6 pairs comprises two TSCI associated with a same RX antenna of the Type2 device.

In some embodiments, for initialization: The (N1+N6) 2D N4xN5 matrices may be fed as input to layer 1 of CNN. Recursion/iteration: Each layer of CNN may be associated with multiple respective 2D convolution filters. There may be a plurality of respective input 2D matrices. Iteratively/recursively, each associated filter is applied separately/independently/simultaneous/sequentially/contemporaneously to each/all of the plurality of input 2D matrices to generate corresponding output 2D matrices. Each/all output 2D matrix may be down-sampled at some respective down-sampling factor (e.g. 2:1, 3:1 or 4:1 down-sampling) using some down-sampling techniques (e.g. maxpooling). All the down-sampled output 2D matrices may be fed as a plurality of input 2D matrix (at any order) to next layer of CNN. Different layer may have different amount of 2D convolution filters and/or different down-sampling factor/methods. The amount of associated 2D convolution filter may be related to the down-sampling factor. For example, for N:1 down-sampling, there may be N*N=N^2 filters. For example, 2*2=4 filters for 2:1 down-sampling, 3*3=9 filters for 3:1 down-sampling, or 4*4=16 filters for 4:1 downsampling.

Clause 3817_25. The system/device/method/software of wireless sensing for in-vehicle child presence detection of clause 3817_20, comprising: feeding the (N1+N6) 2D matrices each of size N4xN5 as a plurality of input 2D matrices to a first layer of the CNN; for each of N2 convolutional layers of the CNN associated with respective multiple 2D convolution filters: for each of respective multiple 2D convolutional filters: applying the respective associated 2D convolution filter to each of the plurality of input 2D matrices to generate a plurality of per-filter output 2D matrices, and down-sampling each of the plurality of per-filter output 2D matrices, and feeding the multiple plurality of down-sampled per-filter output 2D matrices associated with the multiple 2D convolutional filters as a plurality of input 2D matrices to the next convolutional layer of the CNN; In some embodiments, maxpooling may be used for down-sampling.

Clause 3817_26. The system/device/method/software of wireless sensing for in-vehicle child presence detection of clause 3817_25, further comprising: down-sampling each of the plurality of per-filter output 2D matrices based on maxpooling.

Clause 3817_27. The system/device/method/software of wireless sensing for in-vehicle child presence detection of clause 3817_26, further comprising: down-sampling each of the plurality of per-filter output 2D matrices based on a 2:1 downsampling factor.

In some embodiments, all down-sampled per-filter output 2D matrices may be concatenated and flattened to form a 1D vector. The 1D vector may be fed as input to first layer of the N3-layer fully-connected network (FCN). The FCN may compute/generate some output probability score, each probability for a respective class of output.

Clause 3817_28. The system/device/method/software of wireless sensing for in-vehicle child presence detection of clause 3817_25, further comprising: flattening and concatenating the multiple plurality of down-sampled per-filter output 2D matrices of the last layer of the CNN to form a 1-dimensional output vector; feeding the 1D output vector as input to the first layer of FCN, wherein the FCN comprises N3 fully-connected layers; generating by the FCN a number of output probability score for each class of output.

In some embodiments, the output classes may comprise a "child present" child, an "adult present" class. Perhaps a "no-one present" class.

Clause 3817_29. The system/device/method/software of wireless sensing for in-vehicle child presence detection of clause 3817_28: wherein there is a child-present output probability score for a "child present" class and an adult-present output probability score for an "adult present" class.

In some embodiments, some conditions for detecting the presence of a child: (a) "child present" has higher probability score than "adult present", and (b) "child present" need to be large enough.

Clause 3817_30. The system/device/method/software of wireless sensing for in-vehicle child presence detection of clause 3817_29: detecting the presence of a child when the child-present output probability score is greater than the adult-present output probability score, and the child-present output probability score is greater than a eighth threshold.

In some embodiments, the output classes may comprise an additional class: "on one present" child.

Clause 3817_31. The system/device/method/software of wireless sensing for in-vehicle child presence detection of clause 3817_28: wherein there is a no-one-present output probability score for a "no one present" class.

In some embodiments, some conditions for detecting the presence of a child: (a) "child present" has higher probability score than "adult present" and "no one present", and (b) "child present" need to be large enough..

Clause 3817_32. The system/device/method/software of wireless sensing for in-vehicle child presence detection of clause 3817_31: detecting the presence of a child when the child-present output probability score is greater than both the adult-present output probability score and the no-one-present output probability score, and the child-present output probability score is greater than a ninth threshold.

In some embodiments, both the CNN and FCN are trained in a training phase using training TSCI obtained in certain training venue (one or more vehicles) with certain training antenna configuration and certain training antenna placement.

Clause 3817_33. The system/device/method/software of wireless sensing for in-vehicle child presence detection of clause 3817_28: training the CNN and FCN based on a set of training TSCI obtained in at least one vehicle with at least one antenna configuration and at least one antenna placement within the at least one vehicle in a training phase.

In some embodiments, perhaps the training TSCI is not general/rich enough. The set of training TSCI may be enriched/ expanded/improved by generating additional/new training data using mixup data segmentation.

Clause 3817_34. The system/device/method/software of wireless sensing for in-vehicle child presence detection of clause 3817_33: enriching the set of training TSCI based on mixup data segmentation.

In some embodiments, after the initial training, the classifier (classification module) needs to classify in a new vehicle or need to classify in an original vehicle but with new antenna placement, which were not included in/covered by the training situations. The classifier may be retrained/modified/enhanced using few shot learning, which may use a small amount of additional training data of the new situation/venue (i.e. the new vehicle, or the new antenna placement in an original vehicle). As the additional training data is limited, they may not be sufficient to training the whole classification module (i.e. both CNN and FCN). In one example, only the FCN is re-trained while keeping the CNN unchanged. In another example, only the CNN is re-trained while keep the FCN unchanged. In a third example, only some layers of the FCN (and/or some layers of the CNN) are re-trained.

Clause 3817_35. The system/device/method/software of wireless sensing for in-vehicle child presence detection of clause 3817_33: adapting the classification module to a new antenna placement in the vehicle or a new vehicle using few shot learning by retraining the FCN based on a number of TSCI captured with the new antenna placement in the vehicle or in the new venue while keeping the CNN unchanged.

In some embodiments, motion/breathing/presence detection may be based on multiple TSCI, each corresponding for a respective TX antenna of Type1 device and a respective RX antenna of Type2 device. The N1 2D transform matrices here is different from the N1 2D matrices in clause 3817_13. Here the 2D transform matrix contains 1D transform values while in clause 3817_13, each 2D matrix contains CIC magnitude (with NO 1D transforms). Here the vertical dimension of the 2D transform matrix is transform domain index, while in clause 3817_13, the vertical dimension is CI component index (or CIC index, NOT transform domain index). Motion is detected as long as motion is detected in any one of the N1 TSCI. Breathing is detected as long as breathing is detected in any one of the N1 TSCI. Rejection of breathing detection is performed one TSCI as a time. If breathing is detected in one particular TSCI, the breathing detection (based on the particular TSCI) may be rejected if the corresponding final CS (FCS) computed from/based on the particular TSCI is less than some threshold. Presence is detected if motion is detected in at least one TSCI. Presence is also detected if breathing is detected and not rejected in one (or more) TSCI.

Clause 3817_36. The system/device/method/software of wireless sensing for in-vehicle child presence detection of clause 3817_1: obtaining N1=N7*N8 TSCI based on the received wireless signal, wherein the Type1 device has N7 TX antennas and the Type2 device has N8 RX antennas, wherein each of the N1 TSCI is associated with a respective one of the N7 TX antennas and a respective one of the N8 RX antennas; computing N1 motion statistics based on N1 TSCI, each motion statistics computed based on N5 CI of respective one of the N1 TSCI in the time period; detecting the motion of the user in the time period based on any one of the N1 TSCI when the corresponding one of the N1 motion statistics exceeds the first threshold; for each of N9 sliding time windows in the time period, computing a respective 1D transform of CI of each of the N1 TSCI in the sliding time window associated with a respective time stamp; constructing N1 2D transform matrices associated with the N1 TSCI, each 2D transform matrix associated with respective TSCI being constructed by assembling and concatenating the respective N9 1D transform of the respective TSCI as columns of the 2D transform matrix in increasing order of the time stamp; detecting a respective number of horizontal streaks for each of the N1 2D transform matrices; detecting a breathing motion of the user in the time period based on any one of the N1 TSCI and the detected horizontal streaks of the corresponding one of the N1 2D transform matrices and an associated criterion; computing N1 oscillation CS, N1 DTW CS, and N1 peak CS based on the N1 TSCI, each CS computed based on respective TSCI; computing N1 combined CS, each based on respective oscillation CI, respective DTW CS and respective peak CS; computing N1 final CS based on the N1 combined CS and a number of temporally adjacent combined CS; for each of the N1 TSCI, rejecting any detection of the breathing motion of the user in the time period based on the TSCI and the horizontal streaks of the corresponding 2D transform matrix when the associated FCS is less than a tenth threshold; detecting the presence of the user in the time period when either (a) the motion of the user is detected based on at least one of the N1 TSCI, or (b) the breathing motion of the user is detected and not rejected based on at least one of the N1 TSCI; when the presence of the user is detected in the time period, detecting seat occupancy based on the N1 FCS in the time period.

In some embodiments, seat occupancy detection may be performed when user motion/breathing/presence is detected. Background setup/information of venue, seats, first row, second row, N7=2, N8=2, antenna placement (towards four corners of rectangular space) 37. The system/device/method/software of in-vehicle child presence detection based on wireless sensing of clause 3817_36: wherein the vehicle comprises a rectangular-shaped space encompassing two rows of seats; wherein a first row or front row of the two rows comprises two seats, namely, a front-left seat and a front-right seat; wherein a second row or back row comprises at least two seats, namely, a back-left seat and a back-right seat; wherein the Type1 device comprises N7=2 TX antennas and the Type2 device comprises N8=2 RX antennas such that N1=N7*N8=4; wherein among the four antennas, one is located towards a front-left corner of the space, a second one towards a front-right corner of the space, a third one towards a back-left corner of the space and a fourth one towards a back-right corner of the space; wherein the front-left antenna and the front-right antenna belong to one of the Type1 device or the Type2 device, while the back-left antenna and the back-right antenna belong to the other one of the Type1 device or the Type2 device; wherein there are four wireless links: a left link between the front-left antenna and the back-left antenna, a right link between the front-right antenna and the back-right antenna, a diagonal link between the front-left antenna and the back-right antenna, and an anti-diagonal link between the front-right antenna and the back-left antenna.

Clause 3817_38. The system/device/method/software of in-vehicle child presence detection based on wireless sensing of clause 3817_37: when all of the N1 FCS are greater than a eleventh threshold, a center seat is determined to be occupied by the detected user; when at least one FCS is not greater than the eleventh threshold: identify two largest FCS among the N1 FCS, when the two largest FCS occur in the left link and the diagonal link, the occupied seat is determined to be the left-front seat, when the two largest FCS occur in the left link and the anti-diagonal link, the occupied seat is determined to be the left-back seat, when the two largest FCS occur in the right link and the anti-diagonal link, the occupied seat is determined to be the right-front seat, when the two largest FCS occur in the right link and the diagonal link, the occupied seat is determined to be the right-back seat, when the two largest FCS occur in the diagonal link and the anti-diagonal link, the occupied seat is determined to be the center seat, when the two largest FCS occur in the left link and the right link, it is determined that no user is present in the vehicle.

Clause 3817_39. The system/device/method/software of wireless sensing for in-vehicle child presence detection of clause 3817_1: where each CI comprises one of: channel state information (CSI), channel impulse response (CIR), or channel frequency response (CFR).

An indoor intrusion detection (IDS) system can play a critical role in security for both residential and commercial spaces. Existing IDS solutions either require dedicated and often expensive equipment deployment from professionals or suffer from annoyingly high false alarm rate (FAR) due to non-human motion (e.g. pet). In some embodiments, a robust through-the-wall indoor IDS system, called GuardFi, is disclosed to mitigate the interference from non-human subjects using ubiquitous wireless (e.g. WiFi) signals. In some embodiments, GuardFi has four key components: a robust signal preprocessing methods to extract environment-independent statistics, a ResNet model to extract features of indoor moving subjects, a Long Short-Term Memory (LSTM) based state machine to incorporate temporal data for accurate intrusion detection, and a few-shot learning model to boost system performance on unseen motion sources. GuardFi is independent of the device location, subject's orientation and the environmental changes, enabling swift, efficient, and stable deployment in real-world environments. Experiment results suggest that GuardFi can achieve a high intrusion detection accuracy with a low false alarm rate in unseen environments with model re-tuning, underscoring its robustness and potential for ubiquitous indoor security applications.

In GuardFi, intrusion detection is performed by first performing motion detection. Then, when object motion is detected, it performs human/non-human classification. When human is detected, intrusion/intruder is detected.

In some embodiments, 1D transform of CI is computed. In GuardFi, a wireless signal (e.g. WiFi signal) is transmitted from a Type1 heterogeneous wireless device (TX) to a Type2 heterogeneous wireless device (RX) through a wireless channel of a venue. A time series of channel information (e.g. CSI, CIR, CFR, RSSI) may be obtained/extracted from the received wireless signal by the Type2 device. A 1-dimensional (1D) transform (e.g. autocorrelation function (ACF), short time Fourier transform (STFT) or some frequency transform) of CI of the TSCI may be computed in a sliding time window. There may be many sliding time windows in a time period or one of multiple time fragments of the time period (e.g. 1/10/ 100/1000/10000 seconds), and many time periods along the time axis.

In some embodiments, the 1D transform is computed based on per-component 1D transform (e.g. a K-point transform). Each CI may have multiple components (e.g. multiple subcarriers in CFR, multiple taps in CIR). A per-component 1D transform (e.g. ACF, STFT) may be computed for each component of CI of TSCI in each sliding time window. The 1D transform may be computed as an aggregate of the per-component 1D transforms. The aggregate may comprise any of: sum, product, mean, weighted sum, weighted product, weighted average, arithmetic mean, geometric mean, harmonic mean, percentile, median (50-percentile), minimum (0-percentile), maximum (100-percentile), trimmed mean (mean of percentile from A1-percentile to A2-percentile), mode, etc.

In some embodiments, object motion is detected in a sliding time window. Motion detection may be performed for each sliding time window by computing a motion statistics (MS) based on CI of TSCI in the sliding time window and comparing the MS with a threshold. Object motion may be detected if MS is greater than the threshold and no object motion may be detected otherwise. The MS may be the 1D transform (e.g. ACF) evaluated at one sampling period, or tau=1/Fs. It may be close to zero in a stationary environment and positive in a dynamic environment with object motion.

In some embodiments, object motion is detected in a time period. Sometimes, object motion may be detected sporadically due to noise. To avoid false alarm, only when object motion is detected in sufficient number of sliding time windows in the time period (i.e. when a percentage of sliding time windows with object motion detected is greater than a threshold such as 30%/50%/70%/90%), object motion is detected or confirmed to be detected in the time period. There may be additional (temporally adjacent/neighboring) time periods in which object motion is detected.

In some embodiments, an alternative way is used to detect object motion in a time period. An extended time period may be found in which object motion may be detected. The extended time period may be partitioned into the time period and addition time periods.

In some embodiments, a 2D transform matrix is generated as input preparation. When object motion is detected in the time period, the 1D transform may be prepared to be input to an intrusion detection network, which comprises a motion recognition module followed by an intrusion detection module. All the 1D transform of CI in sliding time windows in the time period may be represented as vectors and assembled/concatenated to form a 2-dimensional (2D) matrix (called "transform matrix" or "spectral matrix"), each 1D transform (vector) being a column of the 2D matrix. The horizontal axis of the 2D transform matrix may be time axis and the vertical axis may be transform axis (e.g. frequency axis for 1D transform being STFT, or time-lag axis for 1D transform being ACF). Alternatively, a derivative (or differential) of the 1D transform (called "1D D-transform", or "1D A-transform") may be computed. All the 1D D-transform in the time period may be assembled/concatenated to form a 2-dimensional (2D) D-transform matrix (or 2D D-spectral matrix/image, or simply spectrum), each 1D D-transform being a column of the 2D D-transform matrix. The horizontal axis of the 2D D-transform matrix may be time axis and the vertical axis may be transform axis.

In some embodiments, a CNN is used as a motion recognition module (MRM). The 2D transform matrix and additional 2D transform matrices (or, alternatively, 2D D-transform matrix and respective 2D D-transform matrices) may be fed as input to a motion recognition module (MRM) to compute/derive/extract features from the 2D transform. The MRM may comprise any of: feed-forward neural network (FNN), convolutional neural network (CNN), recurrent neural network (RNN), transformers, or encoder/decoder. In particular, the MRM may be a CNN with multiple layers, each layer associated with multiple convolution filters. For example, it may be a ResNet18 is a CNN with 18 layers. The multiple convolution filters may be applied concurrently/ sequentially/contemporaneously/ independently (e.g. in any order) to each of the plurality of transform/ d-transform matrices. The output of the MRM may be flattened/concatenated/re-arranged to form an output vector.

In some embodiments, a RNN is used as an intrusion detection module (IDM). The output vector of the MRM may be fed as input to an intrusion detection module (IDM) to compute intrusion detection result(s). The IDM may comprise any of: feed-forward neural network (FNN), convolutional neural network (CNN), recurrent neural network (RNN), transformer, or encoder/decoder. In particular, the IDM may be an RNN that processes sequential data (e.g. time series of 2D transform/d-transform matrix). For example, it may be a Long Short-Term Memory (LSTM) which is a type of RNN. In some embodiments, both the MRM and IDM may be trained in a training phase. The few shot learning may be applied to retrain the MRM and IDM.

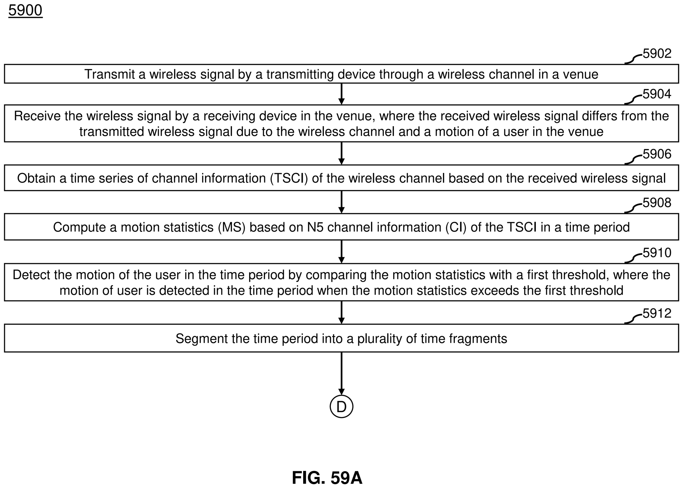

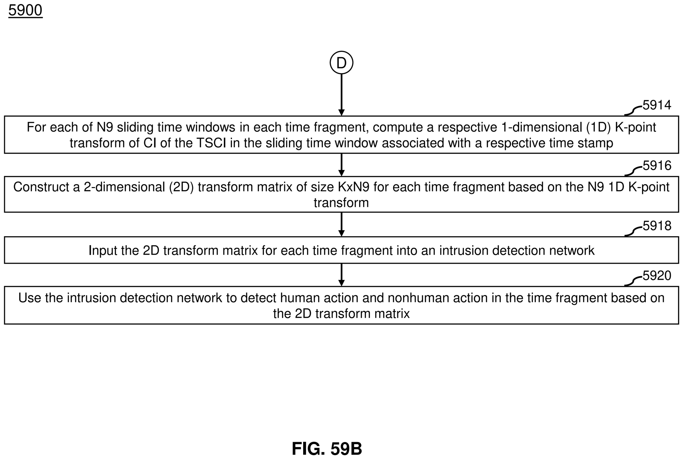

FIG. 59A and FIG. 59B illustrate a flow chart of an example method 5900 for wireless sensing for intruder detection with human-nonhuman detection, according to some embodiments of the present disclosure. In various embodiments, the method 5900 can be performed by the systems disclosed above. As shown in FIG. 59A, at operation 5902, a wireless signal is transmitted by a transmitting device through a wireless channel in a venue. At operation 5904, the wireless signal is received by a receiving device in the venue, where the received wireless signal differs from the transmitted wireless signal due to the wireless channel and a motion of a user in the venue. At operation 5906, a time series of channel information (TSCI) of the wireless channel is obtained based on the received wireless signal. At operation 5908, a motion statistics (MS) is computed based on N5 channel information (CI) of the TSCI in a time period. At operation 5910, the motion of the user is detected in the time period by comparing the motion statistics with a first threshold, where the motion of user is detected in the time period when the motion statistics exceeds the first threshold. At operation 5912, the time period is segmented into a plurality of time fragments.

As shown in FIG. 59B, at operation 5914, for each of N9 sliding time windows in each time fragment, a respective 1-dimensional (1D) K-point transform of CI of the TSCI is computed in the sliding time window associated with a respective time stamp. At operation 5916, a 2-dimensional (2D) transform matrix of size KxN9 is constructed for each time fragment based on the N9 1D K-point transform. At operation 5918, the 2D transform matrix for each time fragment is input into an intrusion detection network. At operation 5920, the intrusion detection network is used to detect human action and nonhuman action in the time fragment based on the 2D transform matrix.

In some embodiments, the intrusion detection network comprises a neural network. In some embodiments, the neural network comprises a convolution neural network (CNN) followed by a recurrent neural network (RNN). In some embodiments, the CNN is a resNet18 which is a CNN with 18 layers. In some embodiments, the RNN is a long short-term memory (LSTM).

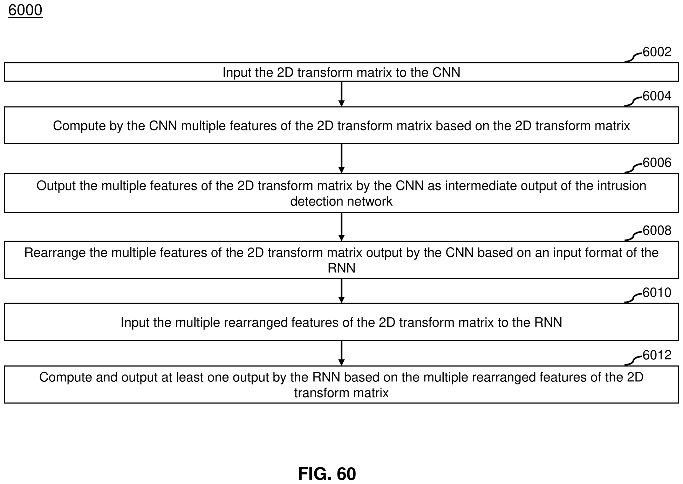

FIG. 60 illustrates a flow chart of an example method 6000 for running a neural network, according to some embodiments of the present disclosure. In various embodiments, the method 6000 can be performed by the systems disclosed above. At operation 6002, the 2D transform matrix is input to the CNN. At operation 6004, multiple features of the 2D transform matrix is computed by the CNN based on the 2D transform matrix. At operation 6006, the multiple features of the 2D transform matrix is output by the CNN as intermediate output of the intrusion detection network. At operation 6008, the multiple features of the 2D transform matrix output by the CNN is rearranged based on an input format of the RNN. At operation 6010, the multiple rearranged features of the 2D transform matrix is input to the RNN. At operation 6012, at least one output is computed and output by the RNN based on the multiple rearranged features of the 2D transform matrix. In some embodiments, the method 6000 may be performed as part of the operation 5918 in the method 5900.

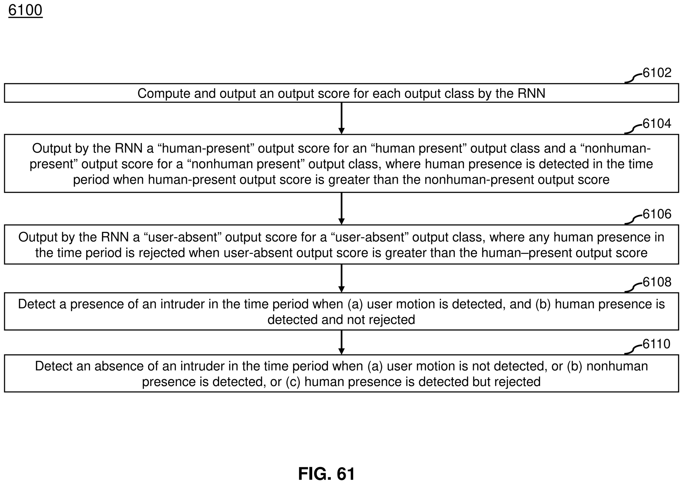

FIG. 61 illustrates a flow chart of an example method 6100 for detecting human action and nonhuman action, according to some embodiments of the present disclosure. In various embodiments, the method 6100 can be performed by the systems disclosed above. At operation 6102, an output score is computed and output for each output class by the RNN. At operation 6104, a "human-present" output score is output by the RNN for an "human present" output class and a "nonhuman-present" output score is output by the RNN for a "nonhuman present" output class, where human presence is detected in the time period when human-present output score is greater than the nonhuman-present output score. At operation 6106, a "user-absent" output score is output by the RNN for a "user-absent" output class, where any human presence in the time period is rejected when user-absent output score is greater than the human -present output score. At operation 6108, a presence of an intruder is detected in the time period when (a) user motion is detected, and (b) human presence is detected and not rejected. At operation 6110, an absence of an intruder is detected in the time period when (a) user motion is not detected, (b) nonhuman presence is detected, or (c) human presence is detected but rejected. In some embodiments, the method 6100 may be performed as part of the operation 5920 in the method 5900.

The following numbered clauses provide examples for wireless sensing for intruder detection with human-nonhuman detection.

Clause 3817_A1. A method/device/system/software of wireless sensing for intruder detection with human-nonhuman detection, comprising: transmitting a wireless signal by a Type1 heterogeneous wireless device through a wireless channel in a venue; receiving the wireless signal by a Type2 heterogeneous wireless device in the venue, wherein the received wireless signal differs from the transmitted wireless signal due to the wireless channel and a motion of an object in the venue; obtaining a time series of channel information (TSCI) of the wireless channel by the Type2 device based on the received wireless signal; computing a motion statistics (MS) based on N5 CI of the TSCI in a time period; detecting the motion of the object in the time period by comparing the motion statistics with a first threshold, wherein the motion of object is detected in the time period when the motion statistics exceeds the first threshold; segmenting the time period into a plurality of time fragments; for each of N9 sliding time windows in each time fragment, computing a respective 1-dimensional (1D) K-point transform of channel information (CI) of the TSCI in the sliding time window associated with a respective time stamp; constructing a 2-dimensional (2D) transform matrix of size KxN9 for each time fragment based on the N9 1D K-point transform; inputting the 2D transform matrix for each time fragment into an intrusion detection network; using the intrusion detection network to detect human action and nonhuman action in the time fragment based on the 2D transform matrix.

Clause 3817_A2. The method/device/system/software of wireless sensing for intruder detection with human-nonhuman detection of clause 3817_A1: constructing the 2-dimensional (2D) transform matrix of size KxN9 for each time fragment by assembling and concatenating the N9 1D transform as columns of the 2D transform matrix in increasing order of the time stamp.

Clause 3817_A3. The method/device/system/software of wireless sensing for intruder detection with human-nonhuman detection of clause 3817_A1: computing N9 1D a-transform based on the N9 1D transform, each 1D a-transform being a differential of a respective 1D transform in transform domain; constructing the 2-dimensional (2D) transform matrix of size KxN9 for each time fragment by assembling and concatenating the N9 1D a-transform as columns of the 2D transform matrix in increasing order of the time stamp.

Clause 3817_A4. The method/device/system/software of wireless sensing for intruder detection with human-nonhuman detection of clause 3817_A1: wherein the intrusion detection network comprises a neural network.

Clause 3S17_A5. The method/device/system/software of wireless sensing for intruder detection with human-nonhuman detection of clause 3817_A4: wherein the neural network comprises a convolution neural network (CNN) followed by a recurrent neural network (RNN).

Clause 3817_A6. The method/device/system/software of wireless sensing for intruder detection with human-nonhuman detection of clause 3817_A5: wherein the CNN is a resNet18 which is a CNN with 18 layers; wherein the RNN is a long short-term memory (LSTM).

Clause 3817_A7. The method/device/system/software of wireless sensing for intruder detection with human-nonhuman detection of clause 3817_A5, further comprising: inputting the 2D transform matrix to the CNN; computing by the CNN multiple features of the 2D transform matrix based on the 2D transform matrix; outputting the multiple features of the 2D transform matrix by the CNN as intermediate output of the intrusion detection network.

Clause 3817_A8. The method/device/system/software of wireless sensing for intruder detection with human-nonhuman detection of clause 3817_A7, further comprising: rearranging the multiple features of the 2D transform matrix outputted by the CNN based on an input format of the RNN; inputting the multiple rearranged features of the 2D transform matrix to the RNN; and computing and outputting at least one output by the RNN based on the multiple rearranged features of the 2D transform matrix.

Clause 3817_A9. The method/device/system/software of wireless sensing for intruder detection with human-nonhuman detection of clause 3817_A8, further comprising: computing and outputting an output score for each output class by the RNN.

Clause 3817_A10. The method/device/system/software of wireless sensing for intruder detection with human-nonhuman detection of clause 3817_A9, further comprising: outputting by the RNN a "human-present" output score for an "human present" output class and a "nonhuman-present" output score for a "nonhuman present" output class, wherein human presence is detected in the time period when human-present output score is greater than the nonhuman-present output score.

Clause 3817_A11. The method/device/system/software of wireless sensing for intruder detection with human-nonhuman detection of clause 3817_A10, further comprising: detecting a presence of an intruder in the time period when (a) object motion is detected, and (b) human presence is detected (and not rejected).

Clause 3817_A12. The method/device/system/software of wireless sensing for intruder detection with human-nonhuman detection of clause 3817_A10, further comprising: detecting an absence of an intruder in the time period when (a) object motion is not detected, or (b) nonhuman presence is detected (or (c) human presence is detected but rejected).

Clause 3817_A13. The method/device/system/software of wireless sensing for intruder detection with human-nonhuman detection of clause 3817_A10, further comprising: outputting by the RNN a "object-absent" output score for a "object-absent" output class, wherein any human presence in the time period is rejected when object-absent output score is greater than the human-present output score.

Clause 3817_A14. The method/device/system/software of wireless sensing for intruder detection with human-nonhuman detection of clause 3817_A1: wherein the plurality of time fragments are non-overlapping such that there is no overlapping between any two time fragments.

Clause 3817_A15. The method/device/system/software of wireless sensing for intruder detection with human-nonhuman detection of clause 3817_A1, further comprise: obtaining N1 TSCI of the wireless channel by the Type2 device based on the received wireless signal, each TSCI associated with a respective antenna of the Type1 device and a respective antenna of the Type2 device; computing N1 motion statistics (MS) based on CI of the N1 TSCI in the time period, each MS computed based on N5 CI of respective TSCI in the time period; computing an aggregate MS as an aggregate of the N1 motion statistics, wherein any aggregate comprise at least one of: sum, weighted sum, product, weighted product, mean, weighted mean, arithmetic mean, geometric mean, harmonic mean, percentile, minimum (0-percentile), maximum (100-percentile), median (50-percentile), A1-percentile, trimmed mean (mean of percentile from A1-percentile to A2-percentile), mode, or another aggregate of at least two of the above; detecting the motion of the object in the time period by comparing the N1 motion statistics with a second threshold, wherein the motion of object is detected in the time period when the aggregate MS exceeds the first threshold; for each of the N1 TSCI and for each of N9 sliding time windows in each time fragment of the time period, computing a respective 1D K-point transform of channel information (CI) of the respective TSCI in the respective sliding time window associated with a respective time stamp; constructing N1 2D transform matrices each of size KxN9 for each time fragment, each 2D transform matrix constructed based on respective N9 1D K-point transform of respective TSCI; inputting the N1 2D transform matrices for each time fragment into the intrusion detection network; using the intrusion detection network to detect human action and nonhuman action in the time period based on all the 2D transform matrices.

In some embodiments, the present disclosure discloses HRNet, a deep neural network system based on cGAN architecture, to achieve high-resolution object (human) silhouette images, which can be used for object (e.g. human) identification. HRNet can use radar spatial spectrum (e.g. generated using a modified MUSIC algorithm) as input. It may be trained with some reference images (e.g. images/video obtained from some reference device, Kinect images, depth images, infrared images, visual/RGB/YUV/YIQ/YCbCr images) as ground truth.

In some embodiments, the reconstructed high resolution object images can be used in sensing applications such as pose estimation, human identification, elderly monitoring, activity recognition. Compared with traditional camera-based or depth sensor-based imaging, RF imaging is robust to atmospheric conditions such as smoke, fog, and/or changing lighting conditions. Furthermore, the ubiquitous availability of devices and smaller size of antenna arrays provide light-weight, cost-effective solutions with easy deployment.

In some embodiments, the disclosed system can be tested using a commodity mmWave radar device operating at 60 GHz. In some examples, experiments performed with seven users (human objects) in three different environments show that the disclosed system can reconstruct object (e.g. human) images with mean silhouette difference when compared with Kinect images. Moreover, the system achieved a high average classification accuracy for twelve users and for seven users in unseen environments; thereby verifying robustness to environment changes.

WiFi sensing, as a part of RF sensing, has been widely explored for various (e.g. human) sensing applications such as vital sign monitoring, activity sensing, human/object tracking, etc. However, imaging is still challenging as the smaller bandwidth and limited antennas inherently limit the resolution. Nevertheless, object (e.g. human) body reconstruction and pose estimation have become feasible with deep-learning approaches. Previous works highly depend on the data patterns in the training dataset, which includes the environment information. As a result, the approaches may not generalize well to unseen environments. Given the impracticality of gathering training data samples from every new environment, there is a demand for a more robust approach that can learn to generate environment-independent features suitable for the required task.

Millimeter wave (mmWave) signals provide higher resolution due to their larger bandwidth and antenna arrays, making it easier to distinguish between a human subject and the surrounding environment to exact environment-independent features, which enable high-resolution applications such as keystroke recognition, handwriting tracking and sound separation. Using this finer resolution information from the mmWave devices, accurate object (e.g. human) pose estimation and tracking can be achieved using Frequency-Modulated-Continuous-Wave (FMCW) radar and deep neural networks. Due to the sparsity and high dimensionality of point cloud data, point cloud-based methods rely on complex network architectures that require larger data sets for training. Moreover, point cloud data can be easily corrupted by noise, which can significantly change the model's performance. Thus, it is crucial to ensure high-quality data collection. On the other hand, range-velocity heatmaps-based models have lower complexity than point cloud networks. However, these models still require larger datasets to capture different data patterns and cannot capture unique human features as they rely on pre-defined key points estimation. The resolution of some work is limited and does not capture unique features of the object (e.g. human) body that can be used to identify the object (e.g. human) target.

In some embodiments, to improve the resolution and overcome the aforementioned challenges, HRNet (High-Resolution Neural Network) is disclosed with a novel deep neural network design to create high-resolution images from lowresolution spatial spectrums. The design followed the conditional Generative Adversarial Network (cGAN) architecture, which has been used in automobile capturing using radar. Given the larger size and more defined shapes, automobile imaging is easier than human imaging. Moreover, the weaker reflections from the object (e.g. human) body make it harder to capture the object (e.g. human) image with high enough accuracy. To tackle these challenges, the cGAN design is modified to integrate multiple loss functions in the training stage to extract critical information about the object (e.g. human) body structure. The system can combine additional modality (e.g. RGB modality, Kinect depth maps) to extract finer details. Furthermore, the system may use the UNet architecture within the generator, rather than the encoder-decoder module, to retain more information during downsampling. With the above modifications, HRNet generates high-resolution images for a dataset with 12 different users in some embodiments.

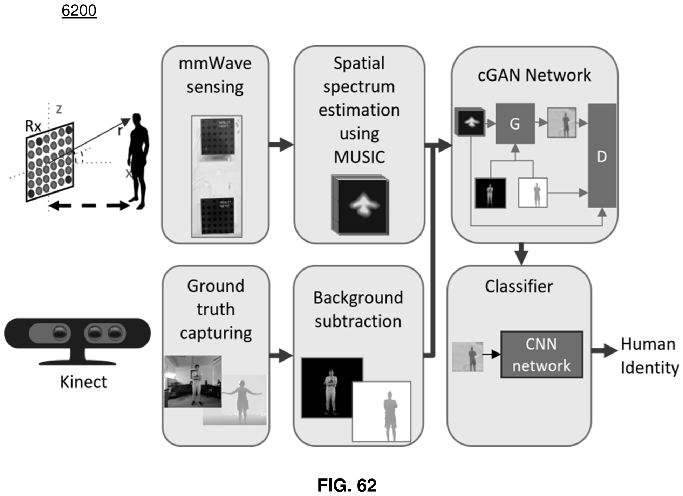

In an embodiment, the system uses a 60 GHz commodity mmWave device with a 802.11ad chipset which has a colocated transmitter and receiver antenna arrays with 32 antennas. FIG. 62 illustrates an example framework of a system 6200 for encoder-decoder-based high resolution imaging, according to some embodiments of the present disclosure.

In some embodiments, cGAN of HRNet has a generator (G) and a discriminator (D). The system may first pre-process the channel information (e.g. channel impulse response/CIR) received from the mmWave device to remove background information and estimate the environment-independent spatial spectrum using the MUSIC algorithm. This estimated spatial spectrum allows the system to extract human features from the CIR, thereby simplifying the training process. The resolution of the pre-processed input may be further improved using HRNet, which includes a "generator" (G) and a "discriminator" (D). The generator uses a UNet network design with a k1-dimensional ("k1"-D, e.g. 3D) encoder and a k2-dimensional ("k2-D", e.g. 2D) decoder. The k1 may be greater than k2, equal to k2, or smaller than k2.

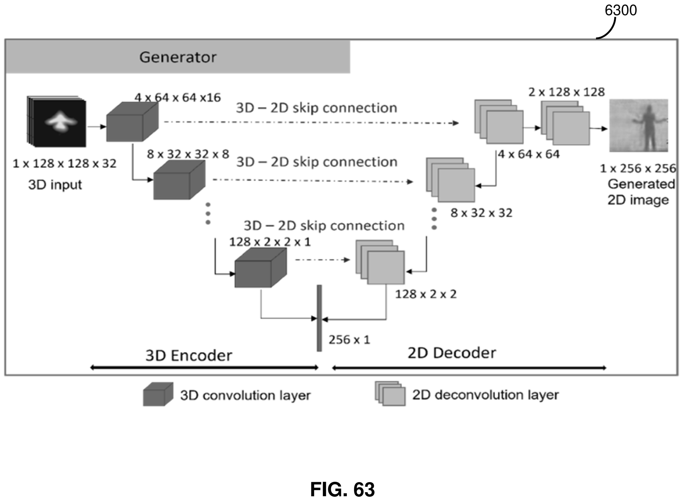

In some embodiments, the generator has a k1-D encoder and k2-D decoder. One goal here is for the generator (the k1-D encoder and k2-D decoder) of the HRNet to take a k1-D input and generate a k2-D output. The k1-D encoder has k1-D input (an input matrix of size M1xM2x..xM(k1)) and 1-D intermediate output (a vector of size P). The k2-D decoder takes the 1-D intermediate output and has k2-D output (an output matrix of size N1xN2x..xN(k2)). FIG. 63 illustrates an example architecture of a generator 6300 in a system for encoder-decoder-based high resolution imaging, according to some embodiments of the present disclosure, where for k1=3, k2=2.

In some embodiments, (k2+1)-D input is generated for the encoder. For each transmitter (or receiver), a respective k2-D spatial spectrum (e.g. 2D image for k2=2) may be obtained using the MUSIC (or modified MUSIC) algorithm. When there are multiple transmitters (or receivers) in the mmWave device, multiple k2-D spatial spectrums may be obtained. The multiple k2-D spatial spectrums may be stacked/combined to generate/create/form a (k2+1)-D input (e.g. 3D input for k2=2) for the HRNet. In this case, k1=k2+1, and the goal of the HRNet is to use the (k2+1)-D input to generate the k2-D output. The input dimension (k1=k2+1) is different from the output dimension (k2).

In some embodiments, for a special case of k2=2, HRNet may generate a 2D output image based on 3D input formed by stacking multiple 2D spatial spectrum. Let the size of the 2D spatial spectrum (a 2D matrix) be M1xM2. Suppose there are M3 transmitter (or receiver) such that there may be M3 M1xM2 spatial spectrums. A 3D input matrix of size M1xM2xM3 may be formed by stacking the M3 spatial spectrums each of size M1xM2. In this case, the goal of HRNet may be to generate a 2D output matrix of size N1xN2 based on the 3D input matrix of size M1xM2xM3.

In some embodiments, for resolution improvement, with k1>=k2, the goal is for the output to have higher resolution/size than the input. Thus N1>=M1, and N2>=M2. For example, N1=2*M1, and N2=2*M2. Or, N1=1.7*M1, N2=2*M2. Or, N1=3*M1 and N2=4*M2. (The input aspect ratio may be same as or different from the output aspect ratio.)

In some embodiments, (k2+2)-D input is generated for the encoder. In one embodiment, the (k2+1)-D input at multiple time instances may be considered/used together by the HRNet to generate the k2-D output. A (k2+2)-D input may be generated as input to the HRNet by stacking/combining the multiple (k2+1)-D input at the multiple time instances. In this case, k1=k2+2 and the goal is to use the (k2+2)-D input to generate the k2-D output. For the case of k2=2, suppose M4 time instances are used. Then a 4D matrix of size M1xM2xM3xM4 may be formed by stacking the M4 3D matrices each of size M1xM2xM3. And the goal is to generate a 2D output matrix of size N1xN2 based on the 4D input matrix of size M1xM2xM3xM4. The k2=2 case may be suitable for the scenario in which the target is stationary/motionless during the given time instances such that generating a high-resolution 2D output image of the target is desirable. For the scenario that the target is moving during the given time instances, generating 3D output (k2=3, e.g. video or a sequence of images) from the 4D input data may be desirable.

In some embodiments, (k2+3)-D input is generated for the encoder. In one embodiment, multiple mmWave devices may be placed/positioned at different locations/depths/angles and may be used by the HRNet to generate the k2-D output. Suppose the multiple time instance may be used together by the HRNet also such that a (k2+2)-D may be generated for each mmWave device. Using the multiple mmWave devices, a (k2+3)-D input may be generated as input to the HRNet by stacking/combining the multiple (k2+2)-D matrices. In this case, k1=k2+3 and the goal is to use the (k2+3)-D input to generate the k2-D output. For the case of k2=2, suppose M5 mmWave device are used. Then a 5D matrix of size M1xM2xM3xM4xM5 may be formed by stacking the M5 4D matrices each of size M1xM2xM3xM4. The goal is to generate a 2D output matrix of size N1xN2 based on the 5D input matrix of size M1xM2xM3xM4xM5. In some embodiments, recursively, a k1-D input (matrix) may be generated by stacking/combining multiple (k1-1)-D input (matrix).

In some embodiments, there are multiple generator/discriminator pairs in HRNet. In one embodiment, the HRNet may comprise multiple generator/discriminator pairs, each pair with respective k1-D encoder and respective k2-D decoder in the respective generator. The pair of (k1, k2) may be different for different generators (or for different generator/discriminator pairs). In a first generator/discriminator pair (or first generator), the respective k1 may be greater than the respective k2. In a second generator/discriminator pair (or second generator), the respective k1 may be equal to the respective k2. In a third generator/discriminator pair (or third generator), the respective k1 may be less than the respective k2.

In some embodiments, outputs of multiple generators are aligned/aggregated. The respective k1 and/or k2 parameters of the multiple generators may be same/different. The respective outputs (i.e. the set of respective k2-D output) of the multiple generators may have same/different size (even for those with same dimension k2). The respective outputs of some (or all) generators may be partially/totally aligned/not aligned. The outputs (especially the aligned outputs) may be fused/aggregated/combined (e.g. sum, weighted sum, product, weighted product, average, weighted average, arithmetic mean, geometric mean, harmonic mean, median, mode, percentile, etc.) to generate a fused/aggregated/combined output. In particular, some (or all) output elements/pixels/matrix elements of some/all outputs may be aligned, and the aligned elements/pixels may be fused/aggregated/combined to generate respective fused/aggregated/combined output element/pixels.

In some embodiments, HRNet may have a GAN structure with a generator/discriminator pair to synthesize/-generate synthetic output (the k2-D output) based on input z (the k1-D input). The generator may have an encoder/decoder structure. A U-Net-based structure (with associated "skip connections") may be added to the GAN structure of HRNet to capture both global and local structures, enabled by per-pixel (or per-element) feedbacks. HRNet may further have a conditional GAN structure in which additional information from different modalities (e.g. RGB image, kinect, depth) may be used (e.g. in discriminator). As the task may be imaging of object such as person, the different modalities may include RGB image, gray scale image, depth (e.g. from kinect). Loss function for training may incorporate perceptual/visual/structural measures.

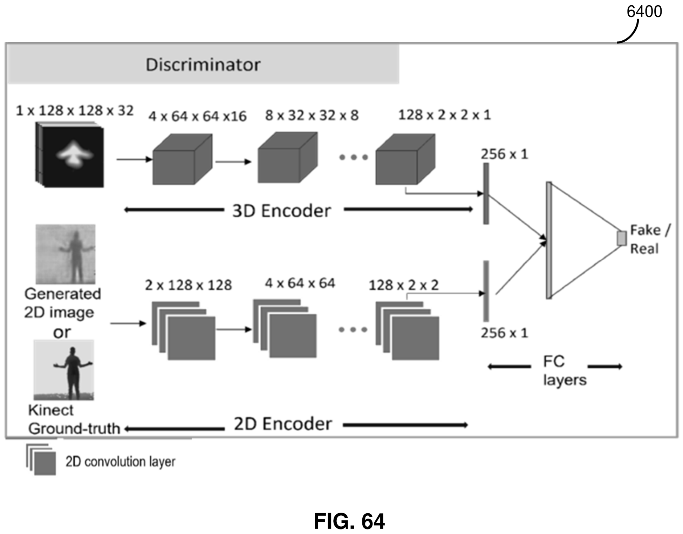

FIG. 64 illustrates an example architecture of a discriminator 6400 in a system for encoder-decoder-based high resolution imaging, according to some embodiments of the present disclosure, with 2 stream network architecture. In some embodiments of a cGAN structure, the generator G creates synthetic samples while the discriminator D differentiates between synthetic and natural samples. They compete in an adversarial game to improve the generator's ability to generate genuine-like (e.g. resembling/"appearing" to be genuine) synthetic samples and the discriminator's ability to identify between the genuine sample and the genuine-like synthetic samples. The aim is to produce synthetic samples that closely approximate their natural counterparts. This constitutes a min-max optimization task: $\min_G \{\max_D (L_{(GAN)})\}$ wherein $L_{\{GAN\}} = E_x[\log D(x)] + E_z[\log(1-D(G(z)))]$, and E is cross entropy of binary classifier of binary classifier of the discriminator. The task of the generator G is to minimize the generator loss to generate synthesized samples that cannot be distinguished by the discriminator D: $\min_G (L_{(GAN)})$. The task of the discriminator D is to separate real samples and synthesized samples better: $\max_D (L_{(GAN)})$. In typical GAN/cGAN structure, the input z of the generator and the output G(z) of the generator have same dimensions (e.g. both k2-D). They may even have same sizes. But in some embodiments, input and output may have different dimensions (k1-D input, k2-D output).

In an embodiment, an innovative feature of HRNet is that the input z and the output G(z) may have same/different dimensions and/or same/different sizes. In particular, the k1-D input matrix z and the k2-D output matrix G(z) may have different dimensions and different sizes (input size of M1xM2x..xM(k1) versus output size of N1xN2x..xN(k2)).

The generator G may comprise an encoder and a decoder. In some embodiments, encoder input matrix is expanded. In the encoder, the k1-D input matrix of size M1xM2x..xM(k1) may be expanded/converted/changed/considered/represented as an expanded, higher dimensional (k1+k3)-D matrix, with k3 additional/expanded dimensions added to the original/initial k1 dimensions and a size of 1 in each of the k3 additional/expanded dimensions. For example, for k3=1, the k1-D input matrix may be considered as (k1+1)-D expanded matrix of size P1xM1xM2x..xM(k1), where P1=1. Or, the k1-D input matrix may be considered as (k1+2)-D expanded matrix of size P1xP2xM1xM2x..xM(k1), where P1=P2=1. Or, the k1-D input matrix may be considered as (k1+3)-D expanded matrix of size P1xP2xP3xM1xM2x..xM(k1), where P1=P2=P3=1. And so on.

In some embodiments, the encoder of the generator G may comprise a series/sequence/ concatenation of L1 layers/stages/steps/operations $E^{\wedge}i$ to progressively "downsample" the expanded (k1+k3)-D matrix to a lower-dimensional intermediate output y, where $y=E^{\{L1\}}(E^{\{L1-1\}}( .. E^2(E^1(z))..))$. For example, $E^{\wedge}1$ is first applied. Then $E^{\wedge}2$. Then $E^{\wedge}3$. And so on. $E^{\{L1\}}$ is the last.

In some embodiments, for each layer/stage/step/operation $E^{\wedge}i$, the respective input matrix and the respective output matrix may have same dimension and same/different sizes. In general, the input matrix of $E^{\wedge}i$ is the output matrix of $E^{\{i-1\}}$. The output matrix of $E^{\wedge}i$ is the input matrix of $E^{\{i+1\}}$. The input matrix of $E^{\wedge}1$ is the (k3+k1)-D expanded matrix of size P1xP2x..P(k3)xM1xM2x..xM(k1).

In some embodiments, downsampling in "original" dimensions of output matrix size is performed over encoder layers. For $E^{\wedge}i$, let the respective input matrix be of size $P1^{\{i-1\}}xP2^{\{i-1\}}x..xP(k3)^{\{i-1\}}xM1^{\{i-1\}}xM2^{\{i-1\}}x..xM(k1)^{\{i-1\}}$. Let the respective output matrix be of size $P1^{\{i\}}xP2^{\{i\}}x..xP(k3)^{\{i\}}xM1^{\{i\}}xM2^{\{i\}}x..xM(k1)^{\{i\}}$. The size of the "original dimensions" (i.e. dimensions associated with M1, M2, .., M(k1)) may be progressively reduced. In other words, $M1^{\{i\}}$

$<=M1^{i-1}$; $M2^{i}<=M2^{i-1}$; ... ; $M(k1)^{i}<=M(k1)^{{i-1}}$. In one embodiment, the size of the "original dimensions" may be recursively halved (i.e. reduced by a factor of 2), with $M1^{i}=M1^{i-1}/2$; $M2^{i}=M2^{i-1}/2$; ... ; $M(k1)^{i}=M(k1)^{i-1}/2$. For any dimension (e.g. the dimension associated with M3), the recursive down-sampling may continue until the size of the dimension becomes 1 (e.g. until $M3^{k}=1$) at which point the size reduction (for that dimension) stops (e.g. down-sampling/size-reduction for the dimension associated with M3 stops when $M3^{k}=1$). If the halving operation gives a non-integer, the halved value may be rounded up or down.

In some embodiments, upsampling in "expanded" dimensions of output matrix size is performed over encoder layers. While the size of the "original dimensions" may be progressively reduced, the size of the "expanded dimensions" (i.e. dimensions associated with P1, P2, .., P(k3)) may be progressively increased. In other words, $P1^{i}>=P1^{i-1}$; $P2^{i}>=P2^{i-1}$; ... ; $P(k3)^{i}>=P(k3)^{i-1}$. In one embodiment, the size of the expanded dimensions may be doubled recursively (i.e. increased by a factor of 2), with $P1^{i}=P1^{i-1}*2$; $P2^{i}=P2^{i-1}*2$; ... ; $P(k3)^{i}>=P(k3)^{i-1}*2$.

In some embodiments, effective dimension reduction is performed in intermediate encoder output. After the L1 layers/stages/steps/ operations ($E^1$, $E^2$, .., $E^{L1}$), the size in some/all of the "original" dimension may be reduced to 1. Let Q be the amount of dimensions of the intermediate output y with corresponding size (of each such dimension) reduced to 1. Not counting the Q dimensions with size 1, the remaining dimensions (or effective dimensions) of y may be k3+k1-Q (as any dimension with a size of 1 may be considered trivial/immaterial/redundant). The Q may be less than, equal to, or larger than k1 or k3. The effective dimension of y may be greater than, equal to, or less than k1 or k3. In one embodiment, the effective dimension k3+k1-Q is equal to k3 (i.e. Q=k1). In particular, k3+k1-Q may be equal to 1 if Q=k1 and k3=1. When the effective dimension is 1, the size of y in the dimension (the final, non-trivial dimension) can be any number greater than 1.

In some embodiments, processing is performed in each encoder layer. Each layer/stage/step/ operation $E^i$ may comprise applying convolution with zero padding using respective kernels and down-sampling (e.g. using max-pooling) with respective strides in respective dimensions (e.g. a stride of 2 when the respective size halved, a stride of 4 when the respective size is reduced by a factor of 4, and so on). ReLU (rectified linear unit, with activation function $f(x)=x$ for $x>0$ and $f(x)=0$ for $x<=0$) or Re-LU activation may be applied. The respective kernel may be a (k1+k3)-D kernel. In any dimension of any kernel, the respective size of the kernel in the dimension may be any positive integer. The (k1+k3)-D kernel may be separable/nonseparable. The (k1+k3)-D kernel may be a matrix generated/computed based on two or more 1-dimensional (1-D) kernels (each 1-D kernel being a vector). The (k1+k3)-D kernel may be computed based on an outer-product of two 1-D kernels (outer-product of two vectors), or an outer-product of a 1-D kernel and a multi-dimensional kernel.

In some embodiments, there may be multiple k1-D encoder kernels. There may be a different amount of k1-D kernels for different layers/stages/steps/operations. The amount of any layer/stage/step/operation may be a function of the respective output matrix size (e.g. $P1^{i}xP2^{i}x..xP(k3)^{i}xM1^{i}xM2^{i}x..xM(k1)^{i}$). For $E^i$, the multiple k1-D kernels may comprise a total of $(P1^{i}/P1^{i-1})$ x $(P2^{i}/P2^{i-1})$ x.. x $(P(k3)^{i}/P(k3)*{i-1})$ of the k1-D kernels, wherein each of $P1^{i}/P1^{i-1}$, $P2^{i}/P2^{i-1}$, .., $P(k3)^{i}/P(k3)*{i-1}$ is an integer. Each k1-D kernel may be applied to the original dimensions (i.e. convolution may be performed in the original dimensions using each k1-D kernel).

In some embodiments, the k1-D input matrix z may be constructed by stacking $M(k1)*M(k1-1)*..*M(k2+1)$ spatial spectrums each being k2-D (each spatial spectrum being of size $M1xM2x..xM(k2)$). For the case of k1>k2, one or more or all k1-D kernels may be k2-D kernels that may be applied to the k2 dimensions associated with the k2-D spatial spectrums.

In some embodiments, there may be multiple k2-D encoder kernels. There may be a different amount of k2-D kernels for different layers/stages/steps/operations. Recall that the k1-D input matrix z may be constructed by stacking $M(k1)xM(k1-1)x..xM(k2+1)$ spatial spectrums each being k2-D (each spatial spectrum being of size $M1xM2x..xM(k2)$). And k1 may be greater than k2. For $E^i$, the multiple k2-D kernel may comprise a total of $(P1^{i}/P1^{i-1})$ x $(P2^{i}/P2^{i-1})$ x..x $(P(k3)^{i}/P(k3)^{i-1})$x M(k1) x M(k1-1) x ..x M(k2+1) of the k2-D kernels. Each k2-D kernel may be applied to the k2 dimensions associated with the k2-D spatial spectrums.

In some embodiments, in HRNet, the decoder of the generator may take the intermediate output y of the encoder as input matrix and generate a k2-D output matrix G(z) of size $N1xN2x..xN(k2)$. The decoder may comprise a series/sequence/concatenation of L2 layers/stages/steps/ operations $D^i$ to progressively "upsample" y to generate the k2-D output matrix G(z), where $G(z)=D^{L2}(D^{L2-1}( .. D^2(D^1(y))..))$. For example, $D^1$ is first applied. Then $D^2$. Then $D^3$. And so on. $D^{L2}$ is the last. The L2 may be greater than, equal to, or smaller than L1.

In some embodiments, the input matrix of $D^1$ may be a (k2+k3)-D matrix y3, which is derived from the (k1+k3)-D intermediate output matrix y of size $P1^{L1}xP2^{L1}x..xP(k3)^{L1}xM1^{L1}x M2^{L1}x..xM(k1)^{L1}$. As described above, the size of Q dimensions of y may be 1 such that the effective dimension of y may be (k1+k3-Q). Q may be equal to k1 such that k1+k3-Q may be equal to k3. In particular, the trivial dimensions of y (i.e. those dimensions with size 1 in y) may be those associated with the k1 original dimensional and the remaining non-trivial dimensions may be the k3 expanded dimensions. And the size of y may be $P1^{L1}xP2^{L1}x..xP(k3)^{L1}x1x1x..x1$, wherein $M1^{L1}=M2^{L1}=..=M(k1)^{L1}=1$. If k1>=k2, the matrix y3 is constructed from y by removing k1-k2 trivial dimensions, such that the size of y3 may be $P1^{L1}xP2^{L1}x..xP(k3)^{L1}x1x1x..x1$, wherein $M1^{L1}=M2^{L1}=..=M(k2)^{L1}=1$. If k1<k2, the matrix y3 is constructed from y by adding k2-k1 trivial dimensions, such that the size of y3 may be $P1^{L1}xP2^{L1}x..xP(k3)^{L1}$

x1x1x..x1, wherein M1^{L1}=M2^{L1 }=..=M(k2) ^{L1}=1. The output matrix of D^1 may be a (k3+k2)-D matrix of size P1^(L1+1)xP2^(L1+1)x..xP(k3) ^{L1+1}x M1^{L1+1}xM2^{L1+1}x..x M(k2) ^{L1+1}.

In some embodiments, up-sampling in "original" dimensions of output matrix size is performed over subsequent decoder layers. For each subsequent layer/stage/step/operation D^i (i=2, 3, ..L2), let the respective input matrix of D^i be of size P1^{L1+i-1}xP2^{L1+i-1}x..xP(k3)^{L1+i-1}xM1^{L1+i-1}xM2^{L1+i-1}x..xM(k2) ^{L1+i-1}. And let the respective output matrix of D^i be of size P1^{L1+i}xP2^{L1+i}x..xP(k3)^{L1+i}xM1^{L1+i}xM2^{L1+i}x.. xM(k2) ^{L1+i}. The size of the "original dimensions" may be progressively increased. In other words, M1^{L1+i}>=M1^(L1+i-1); M2^{L1+i}>=M2^{L1+i-1}; ... ; M(k2)^{L1+i}>=M(k2)^{L1+i-1}. In one embodiment, the size of the "original dimensions" may be recursively doubled (i.e. increased by a factor of 2), with M1^{L1+i}=M1^(L1+i-1)*2; M2^{L1+i}=M2^{L1+i-1}*2; ... ; M(k1)^{L1+i} >=M(k1)^{L1+i-1}*2, until the size reaches the target value in N1xN2x..xN(k2) at which point the size doubling stops.

In some embodiments, down-sampling in "expanded" dimensions of output matrix size is performed over subsequent decoder layers. While the size of the "original dimensions" may be progressively increased, the size of the expanded dimensions may be progressively reduced. In other words, P1^{L1+i}<=P1^{L1+i-1}; P2^{L1+i}<=P2^{L1+i-1}; ... ; P(k3)^{L1+i}<=P(k3)^{L1+i-1}. In one embodiment, the size of the expanded dimensions may be halved recursively (i.e. reduced by a factor of 2), with P1^{L1+i}=P1^{L1+i-1}/2; P2^{L1+i}=P2^{L1+i-1}/2; ... ; P(k3)^{L1+i} >=P(k3)^{L1+i-1}/2, until the size becomes 1 at which point the size reduction stops. If the halving operation gives a non-integer, the halved value may be rounded up or down. After L2 layers/stages/steps/operations, P1^{L1+L2}=1; P2^{L1+L2}=1; ... ; P(k3)^{L1+L2}=1 in the final output matrix. Removing trivial size-1 dimensions, the final output matrix may become the k2-D output matrix G(z).

In some embodiments, processing is performed in each decoder layer. Each layer/stage/step/operation E^i may comprise applying a deconvolution using a respective kernel and an upsampling with a respective stride in respective dimension (e.g. a stride of 2 or 0.5 when the respective size doubled). ReLU or Re-LU activation may be applied. The respective kernel may be a (k2+k3)-D kernel. The (k2+k3)-D kernel may be separable/non-separable. The (k2+k3)-D kernel may be a matrix generated/computed based on two or more 1-dimensional (1-D) kernels (each 1-D kernel being a vector). The (k2+k3)-D kernel may be computed based on an outer-product of two 1-D kernels (outer-product of two vectors), or an outer-product of a 1-D kernel and a multi-dimensional kernel.

In some embodiments, there may be multiple k2-D encoder kernels. There may be a different amount of k2-D kernels for different layers/stages/steps/operations. For D^i, the multiple k2-D kernel may comprise a total of (P1^{L1+i-1}/P1^{L1+i}) x (P2^{L1+i-1}/P2^{L1+i}) x..x (P(k3)^{L1+i-1}/P(k3)^{L1+i} ) of the k2-D kernels. Each k2-D kernel may be applied to the k2 dimensions associated with the k2-D spatial spectrums.

In some embodiments, in UNet architecture, skip connections are constructed between encoder/decoder. In the upsampling process of the decoder, it may be able to capture global structures but different to capture local structures. To capture both global and local structure, at least one "skip connection" may be constructed between the encoder layers and the decoder layers. For a decoder layer skip-connected with an encoder layer, the output matrix of an encoder layer (hereinafter called "encoder output matrix") may be used to modify the output matrix of the skip-connected decoder layer (hereinafter called "decoder output matrix") (e.g. by fusing/adding into it). The modification may comprise addition and/or multiplication (e.g. sum/average, weighted sum/averaging, geometric mean, harmonic mean).

In some embodiments, modification of decoder output matrix is performed using modified encoder output matrix in skip connection. Normally, in typical skip connection, an encoder output matrix may be added (with some weighting) to a decoder output matrix. In some embodiments here, the dimension of the encoder output matrix is k3+k1 while the dimension of the decoder output matrix is k3+k2. Their dimensions may be different/ mismatched and thus direct addition/multiplication may not be feasible. Even when the dimensions are the same/matching, the encoder output matrix need to have same size as the decoder output matrix in order for modification by addition/multiplication to be feasible. Thus the encoder output matrix may be dimension-adjusted and/or size-adjusted to generate a (k3+k2)-D adjusted/modified encoder output matrix with same/compatible dimension and size as the decoder output matrix such that the modified encoder output matrix may be used to modify the decoder output matrix.

In some embodiments, a (k3+k2)-D "modified" decoder output matrix (the one after skip connection) may be computed as an aggregate (e.g. weighted sum, weighted mean, weighted arithmetic mean, weighted geometric mean, weighted harmonic mean) of the (k3+k2)-D "adjusted" encoder output matrix (the one after dimension/ size adjustment) and the (k3+k2)-D "original" (the one before skip connection) decoder output matrix. For the case where k3+k1 > k3 + k2, the dimension k3+k1 may be projected to k3+k2 dimension by aggregating(weighted sum, weighted arithmetic mean, weighted harmonic mean) over the additional dimensions.

In some embodiments, comparison of encoder output matrix and decoder output matrix is performed. Suppose the decoder output matrix is the (k3+k2)-D output matrix of D^{i2} and has size P1^{L1+i2}xP2^{L1+i2}x..xP(k3)^{L1+i2} xM1^{L1+i2}xM2^{L1+i2}x..xM(k2) ^{L1+i2}. Recall that the (k3+k1)-D encoder output matrix of E^{i1} has size P1^{i1} xP2^{i1}x..xP(k3)^{i1}x M1^{i1}xM2^{i1}x..xM(k1) ^{i1}. The first k3 dimensions (associated with the P1^{i1}xP2^{i1}x..x P(k3)^{i1} portion of the size) of the encoder output matrix are the same k3 expanded dimensions as the first k3 dimension (associated with the P1^{L1+i2}xP2^{L1+i2}x..xP(k3)^{L1+i2} portion of the size) of the decoder output matrix. The next k2 dimensions (associated with the M1^{i1}xM2^{i1}x..xM(k2) ^{i1} portion of the size) of the encoder output matrix are the same k2 dimensions of the k2-D spatial spectrum as the next k2 dimensions (associated with the M1^{L1+i2}xM2^{L1+i2} x..xM(k2) ^{L1+i2} portion of the size) of the decoder output matrix. The extra (k1-k2) dimensions of the encoder output matrix may correspond to the M(k2+1)*M(k2+2)*..*M(k1) spatial spectrums (each being k2-D) used to generate the k1-D input z.

In some embodiments, a desired/perfect encoder output matrix is generated for skip-connections. For each i2, the corresponding i1 to be chosen to be skip-connected with i2 should be such that their sizes in the first k3 dimensions and the next k2 dimensions are identical. In other words, the desired/perfect i1 for i2 should have matching size with i2 such that P1^{L1+i2}=P1^{i1}, P2^{L1+i2}=P2^{i1}, .., P(k3)^{L1+i2}=P(k3)^{i1}, M1^{L1+i2}=M1^{i1}, M2^{L1+i2}=M2^{i1}, .., M(k2)^(L1+i2)=M(k2)^{i1}. If the desired/perfect i1 can be found, then the (i1, i2) may be chosen for skip connection, and for each of the M(k2+1)^{i1}*M(k2+2)^{i1}*..*M(k1)^{i1} combinations of indices in the extra (k1-k2) dimension in the encoder output matrix, there is a (k3xk2)-D sub-matrix of the encoder output matrix.

In some embodiments, in lieu of perfect match, construct using good match. For the i2, if the desired/perfect i1 (with matching size with i2) cannot be found, in one embodiment, the i2 may not be chosen to form a skip connection. In another embodiment, in lieu of a perfect i1, one (or more) "good" (though not perfect) i1 may be identified. A size of the decoder output matrix (associated with i2) has k3+k2 components: P1, P2, .., P(k3), M1, M2, .., M(k2) that ideally need to match the corresponding first k3+k2 components of the size of encoder output matrix. The size components can form a (k3+k2)-tuple vector. A size-distance may be defined between the k3+k2 size components of an encoder output matrix and a decoder output matrix, which may comprise one of: L_1 distance (sum of absolute difference between the k3+k2 size components), L_2 distance (square root of sum of square of difference between the k3+k2 size components), or L_k. The one (or more) "good" i1 may be the i1 with minimum size-distance with respect to i2. A temporary encoder output matrix may be constructed based on the output matrix associated with the one (or more) "good" i1. Slight scaling (upsampling or downsampling or both) may be performed on the less-than-perfect dimensions (dimensions/components with non-zero size component difference) among the first k3+k2 dimensions of the "good" encoder output matrix to ensure that the resulting first k3+k2 size components of the temporary encoder output matrix match perfectly with that of the decoder output matrix. The temporary encoder output matrix may then be considered as the adjusted encoder output matrix of the perfect i1 so that the following steps can be applied.

In some embodiments, element-wise construction of (k3xk2)-D modified encoder output matrix is performed from (k3+k1)-D encoder output matrix. For i2 and its perfect i1, in one embodiment, the (k3+k2)-D modified/adjusted encoder output matrix (of same size as the decoder output matrix) may be computed on an element-by-element basis (i.e. each element computed regardless of other elements). Recall that for the M(k2+1)^{i1}*M(k2+2)^{i1}*..*M(k1)^{i1} combinations of indices in the extra (k1-k2) dimension in the (k3+k1)-D encoder output matrix (of the perfect i1), there are M(k2+1)^{i1}* M(k2+2)^{i1}*..*M(k1)^{i1} sub-matrices (each (k3+k2)-D, each with matching size with decoder output matrix) of the encoder output matrix, each index combination corresponding to a respective sub-matrix. The (k3+k2)-D modified encoder output matrix may be constructed as an element-by-element (or element-based) aggregate of the sub-matrices, wherein any aggregate may comprise at least one of: sum, weighted sum, product, weighted product, average, weighted average, arithmetic mean, geometric mean, harmonic mean, median, weighted median, mode, percentile, maximum, minimum, trimmed mean. Each of the P1^{i1}xP2^{i1}x..xP(k3)^{i1}xM1^{i1}xM2^{i1}x..xM(k2)^{i1} elements of the modified encoder output matrix may be the aggregate of the respective elements of all the sub-matrices, regardless of other elements (of the sub-matrices and of the modified encoder output matrix).

In some embodiments, submatrix-wise construction of (k3xk2)-D modified encoder output matrix is performed from (k3+k1)-D encoder output matrix. In another embodiment, the (k3+k2)-D modified encoder output matrix may be computed on a sub-matrix basis (i.e. all elements of each sub-matrix is used in exactly the same way to compute the modified encoder output matrix, e.g. all are selected, or all not selected, or all are weighted by same factor). Some of the M(k2+1)^{i1}* M(k2+2)^{i1}*..*M(k1)^{i1} sub-matrices may be selected to compute the modified encoder output matrix. In one embodiment, there may be only one selected sub-matrix (e.g. with max magnitude) and it may automatically become the modified encoder output matrix. In another embodiment, there may be more than one selected sub-matrices (e.g. top 10% magnitude) and the modified encoder output matrix may be computed as an aggregate (as listed above) of the selected sub-matrices.

In some embodiments, to select the selected sub-matrices, a respective representative value may be computed for the P1^{i1}xP2^{i1}x..xP(k3)^{i1}M1^{i1}xM2^{i1}x..xM(k2)^{i1} elements of each sub-matrix. Magnitude of each element may be computed/considered. The representative value may comprise at least one of: an aggregate of element magnitudes, an aggregate of element magnitudes in a percentile range, an aggregate of element magnitudes in a sub-sub-matrix of the submatrix, a variation measure of element magnitudes, a variation measure of element magnitudes divided by an aggregate, or an aggregate of any of the above. In one embodiment, the representative value may be the maximum of the element magnitudes. In another embodiment, the representative value may be the mean of the top 10% element magnitudes. In some embodiments, the variation measure may comprise at least one of: variance, standard deviation, variation, derivative, slope, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, and/or maximum-to-minimum ratio. In some embodiments, at least one representative value(s) is selected. The selected representative value(s) may comprise one of: maximum, minimum, median, percentile, a percentile range (e.g. from 90% to 100%, or top 10%). The at least one sub-matrix associated with the at least one selected representative value may be selected.

In some embodiments, the discriminator of cGAN may comprise a first encoder which is the encoder E of the generator G and a second encoder. As explained regarding the Generator above, the first encoder E may take z as input and generate the intermediate output $y=E(z)$ using a series of layers/stages/steps/operations $E^i$. The second encoder E2 may take an input z2 and perform a series of L3 layers/stages/steps/operations $E2^i$ to generate a second intermediate output $y2=E2(z2)$. The discriminator may further comprise a classifier which take y and y2 as input and determine whether it is genuine or fake (i.e. synthetic, artificially generated).

In some embodiments, expansion of encoder input matrix of E2 is performed. The input matrix z2 of the second encoder E2 may be k2-D (same dimension as the output of Generator G(z)) and may have size $N1xN2x..xN(k2)$ (same size as G(z)). Similar to the first encoder, the k2-D input matrix z2 may be expanded as an expanded, higher dimensional (k4+k2)-D matrix, with k4 additional/expanded dimensions added to the original/initial k2 dimensions and a size of 1 in each of the k4 additional/expanded dimensions. In other words, the k2-D input matrix z2 may be considered as a (k4+k2)-D expanded matrix of size $PA1xPA2x..xPA(k4)xN1xN2x..xN(k2)$, wherein $PA1=PA2=..=P(k4)=1$. The k4 may be equal to k3.

In some embodiments, the second encoder E2 may comprise a series/sequence/concatenation of L3 layers/stages/steps/operations $E2^i$ to progressively "down-sample" the expanded (k4+k2)-D matrix to a lower-dimensional second intermediate output y2, where $y2=E2^{L3}(E2^{L3-1}(.. E2^2(E2^1(z2))..))$. For example, $E2^1$ is first applied. Then $E2^2$. Then $E2^3$. And so on. $E2^{L3}$ is the last.

In some embodiments, for each layer/stage/step/operation $E2^i$, the respective input matrix and the respective output matrix may have same/different size. In general, the input matrix of $E2^i$ is the output matrix of $E2^{i-1}$. And the output matrix of $E2^i$ is the input matrix of $E2^{i+1}$. The input matrix of $E^1$ is the (k4+k2)-D expanded matrix of size $PA1xPA2x..PA(k4)xN1xN2x..xN(k2)$.

In some embodiments, downsampling in "original" dimensions of output matrix size over E2 layers is performed. For $E2^i$, let the respective input matrix be of size $PA1^{i-1}xPA2^{i-1}x..xPA(k4)^{i-1}xN1^{i-1}xN2^{i-1}x..xN(k2)^{i-1}$. Let the respective output matrix be of size $PA1^{i}xPA2^{i}x..xPA(k4)^{i}xN1^{i}xN2^{i}x..xN(k2)^{i}$. The size of the "original dimensions" may be progressively reduced. In other words, $N^{i}<=N1^{i-1}$; $N2^{i}<=N2^{i-1}$; ... ; $N(k2)^{i}<=N(k2)^{i-1}$. In one embodiment, the size of the "original dimensions" may be recursively halved (i.e. reduced by a factor of 2), with $N1^{i}=N1^{i-1}/2$; $N2^{i}=N2^{i-1}/2$; ... ; $N(k2)^{i}=N(k2)^{i-1}/2$, until the size becomes 1 at which point the size reduction stops. If the halving operation gives a non-integer, the halved value may be rounded up or down.

In some embodiments, upsampling in "expanded" dimensions of output matrix size is performed over E2 layers. While the size of the "original dimensions" may be progressively reduced, the size of the expanded dimensions may be progressively increased. In other words, $PA1^{i}>=PA1^{i-1}$; $PA2^{i}>=PA2^{i-1}$; ... ; $PA(k4)^{i}>=PA(k4)^{i-1}$. In one embodiment, the size of the expanded dimensions may be doubled recursively (i.e. increased by a factor of 2), with $PA1^{i}=PA1^{i-1}*2$; $PA2^{i}=PA2^{i-1}*2$; ... ; $PA(k4)^{i}=PA(k4)^{i-1}*2$.

In some embodiments, effective dimension reduction is performed in second intermediate encoder output. Let Q2 be the amount of dimensions of the second intermediate output y2 with corresponding size (of each such dimension) reduced to 1. Then the effective dimension of y2 may be k4+k2-Q2 (as any dimension with a size of 1 may be considered trivial/immaterial/redundant). The Q2 may be larger than k4 such that the effective dimension of y2 may be less than the k2 (dimension of the k2-D input matrix z2). In one embodiment, k4+k2-Q2 may be equal to k4 (i.e. Q2=k2). In another embodiment, k4+k2-Q2 may be equal to 1 (e.g. if k4=1).

In some embodiments, processing is performed in each E2 encoder layer. Each layer/stage/step/operation $E2^i$ may comprise applying a convolution using a respective kernel and a downsampling with a respective stride in respective dimension (e.g. a stride of 2 when the respective size halved). ReLU or Re-LU activation may be applied. The respective kernel may be a (k4+k2)-D kernel. The (k4+k2)-D kernel may be separable/non-separable. The (k4+k2)-D kernel may be a matrix generated/computed based on two or more 1-dimensional (1-D) kernels (each 1-D kernel being a vector). The (k4+k2)-D kernel may be computed based on an outer-product of two 1-D kernels (outer-product of two vectors), or an outer-product of a 1-D kernel and a multi-dimensional kernel.

In some embodiments, there may be multiple k2-D encoder kernels. There may be a different amount of k2-D kernels for different layers/stages/steps/operations. Each k2-D kernel may be applied to the k2 dimensions associated with the k2-D matrix z2. A k2-D kernel may be a convolutional kernel associated with a respective k2-D deconvolutional kernel of the decoder D of the Generator G. In one embodiment, L2=L3 and the multiple k2-D convolutional kernels of $E2^i$ may corresponding to the multiple k2-D deconvolutional kernels of $E^{L2-i}$. Each $E^{L2-i}$ may double the size in the original dimensions and each $E2^{i}$ may halve the size in the original dimensions.

In some embodiments, one or more supplementary reference/genuine/ground-truth z2 (e.g. RGB image, monochrome image, depth map, Kinect) may be available for training the HRNet. The HRNet may be trained by minimizing/optimize a loss function which is an aggregate of multiple cost functions. The multiple cost functions may comprise at least two of: a standard GAN loss function (L_G), a weighted L_k loss function (L_{k-weighted}), a perceptual loss function (L_p), a SSIM loss function (L_{SSIM}), or any aggregate of the above. In particular, the loss function may be an aggregate of all four of the named functions. The L_k loss function may be a $k^{th}$ root of sum of $k^{th}$ power of elements of (G(z)-z2). The L_k loss function may be weighted. As the generated image G(z) tend to have many background pixels, such background pixels may have lower weights in the L_k loss function. The perceptual loss (L_p) may be a perceptual cost extracted from pre-trained VGG network. The L_p may compare VGG(z2_depth) with VGG(G(z)). It may also compare VGG(z2_RGB) with VGG(G(z)). As VGG network may be pre-trained for 3-channel images (e.g. RGB), any depth map (e.g. from Kinect) or monochrome image may be used to create 3-channel image. The SSIM is structural similarity index measure which measures a perceptual/structural similarity between images. SSIM may compare z2_depth and G(z). It may also compare z2_RGB and G(z). In SSIM loss, RGB images may be converted to grayscale before comparison.

In some embodiments, the generated images may be used for pose estimation, human identification or activity recognition.

In some embodiments, in wireless sensing, a Type1 heterogeneous wireless device may transmit a wireless signal to a Type2 heterogeneous wireless device through a wireless channel of a venue. A time series of channel information (TSCI) may be obtained based on the received wireless signal. Some analytics, spatial-temporal information (STI), motion statistics (MS) or motion information (MI) may be computed based on the TSCI. A sensing task may be performed based on the TSCI and/or the analytics/STI/MS/MI.

The efficacy/effectiveness of performing the sensing task may be significantly influenced by environmental factors/signal propagation (e.g. physical barriers/walls/furniture, multipath environment, wireless channel traffic, interference, temperature, humidity, cooling), hardware variations (e.g. chip/IC, chip set, circuitry, interface, hardware design, antenna, defects, etc.), signal processing algorithms, and noise (e.g. due to background radiation) which may affect the TSCI. Thus there is a need to evaluate the quality of the TSCI produced by the Type1 device and the Type2 device. Characterizing the TSCI is crucial in wireless sensing applications. High quality TSCI may ensure superior sensing performance, whereas low quality TSCI may degrade results and add unnecessary training complexity. The quality of the TSCI may vary significantly due to differences in hardware design, signal processing algorithm. The TSCI may need to be evaluated when a new chipset is activated, or a firmware is updated, or the Type1/Type2 devices are deployed in new settings.

In some embodiments, CSI evaluation enables the evaluation of whether the Type1 device and the Type2 device form a plausible/reasonable pair to perform wireless sensing task and/or other tasks. It also enables the evaluation of an installation (e.g. placement, orientation, antenna choice) and/or setting (e.g. firmware, system software/OS, system setup/parameters) and/or modification (e.g. hardware/software, antenna/module/RAM/harddisk) of the Type1 device and/or the Type2 device.

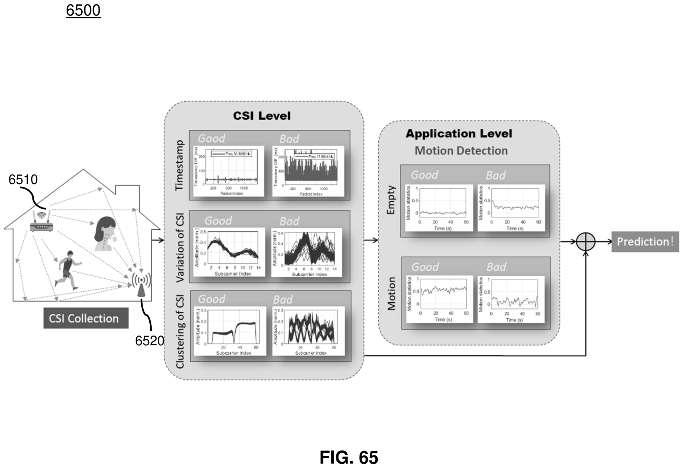

FIG. 65 illustrates an example diagram of a system 6500 for CSI evaluation, according to some embodiments of the present disclosure. The evaluation of CSI is at CSI level and application level. As shown in FIG. 65, the system 6500 may collect CSI based on wireless signals transmitted from a transmitter 6510 to a receiver 6520. In some embodiments, the transmitter 6510 may serve as a Bot (e.g. Type1 device), while the receiver 6520 may serve as an Origin (e.g. Type2 device). A Bot can transmit a wireless (sounding/probe) signal to the Origin in a venue (e.g. a house), which can obtain channel information of a wireless multipath channel based on the wireless signal, where the wireless multipath channel is impacted by motion/presence of any object/user in the venue.

In some embodiments, to evaluate the quality of the TSCI from the pair of the Type1 device and the Type2 device, more than one scores (e.g. channel information (CI) timing accuracy/integrity score, CI-timing rate score, CI-timing regularity score, CI amplitude integrity/accuracy score, CI amplitude regularity/variability/ clustering/correlation score, application or task level/specific scores) may be computed to gauge/measure/evaluate different aspects of the quality of the TSCI. A composite score may be computed based on the multiple scores.

In some embodiments, high quality TSCI should have good timing accuracy/integrity. The wireless signal may comprise a train/sequence/series of sounding signals. Often for the sensing task, the sounding signals may be designed to be transmitted by the Type1 device at regular time intervals. However, due to various reasons/factors (e.g. other competing/high-priority data transmission, interference, packet loss, etc.), the corresponding received signals by the Type2 device may have irregular timing. Thus at least one CI timing accuracy/integrity score related to the timing of the received signal and/or the TSCI may be computed.

In some embodiments, a first measure of quality of the TSCI is related to the ability for a sounding rate of the TSCI to be close to a target/nominal rate. A rate score may be computed. Time stamps of all the CI may be obtained. Time duration of adjacent CI (inter-CI duration obtained by subtracting time stamps of adjacent CI) may be computed. A rate (an effective sounding rate analytics, ESR) may be computed based on the time stamps and/or the inter-CI duration in a sliding time window and a rate score may be computed based on the rate (ESR). A first ESR may be computed as an average/mean ($sum\_{i=1}^N x\_i/N$, called "effective mean", EM) or weighted average/weighted mean ($sum\_{i=1}^N x\_i * w\_i)/( sum\_{i=1 }^N w\_i$, called "effective weighted mean", EWM) of the inter-CI duration in the sliding time window and then taking the inverse (i.e. 1/x). Alternatively, instantaneous rate may be computed as the inverse of the inter-CI duration and a second ESR may be computed as an average or an weighted average of the instantaneous rate in the sliding time window. A third ESR may be a geometric mean of inter-CI duration. A fourth ESR may be a geometric mean of inverse of inter-CI duration. A fifth ESR may be a combined ESR computed based on the first ESR, second ESR, third ESR and/or fourth ESR (e.g. sum, weighted sum, average, weighted average, geometric mean, harmonic mean, etc.). In some embodiments, for inter-CI period/duration, the first ESR may be the inverse of arithmetic mean and the inverse of second ESR may be the harmonic mean. For CI or sounding rate/frequency, the second ESR may be the arithmetic mean and the first ESR may be the harmonic mean. Each of first/second/third/fourth/fifth ESR may take values from a range (e.g. between 0 and 1, or between 0 and 10, or between 0 and 100).

In some embodiments, multiple sliding time window durations may be used and the ESR (e.g. first/second/third/-fourth/fifth ESR) may be computed accordingly. A long sliding time window (e.g. 1/2/3/5/7/10/12 hour/day/ week/month) may be able to capture "long term" rate behavior while short sliding time window (e.g. 1/3/5/7/10/20/30 min) captures "short term" rate behavior. The ESR for different sliding time window durations may be further combined/aggregated to generate an aggregate (e.g. average, weighted average, geometric mean, harmonic mean, median, mode, percentile, average from A1-percentile to A2-percentile) as a sixth ESR.

In some embodiments, in any weighted average/weighted mean (e.g. in first/second/third/fourth/fifth/sixth ESR) of $x\_i$, i=1 .. N, different $x\_i$ may be weighted differently. In one embodiment, any $x\_i$ far away from the mean (with a large deviation from its mean, $abs(x\_i - x\_mean)$, such as outliers with $abs(x\_i - x\_mean)>T1$) may be weighted less to suppress outliers. The $x\_i$ near the mean (with a small deviation from its mean, such as the "normal" or "well-behaving" $x\_i$, e.g. with $abs(x\_i - x\_mean)<T2$) may be weighted more. In other words, the weight for any $x\_i$ may be a decreasing function of $abs(x\_i - x\_mean)$. In another situation, the weight for any $x\_i$ may be an increasing function of $abs(x\_i - x\_mean)$ to penalize the outliers more.

In some embodiments, a CI-timing rate score may be computed based on one (or more) ESR. The CI-timing rate score may be a monotonic non-decreasing (or monotonic increasing) function of the ESR. Any monotonic function may be/comprise one of: linear, piecewise linear, quadratic, polynomial, logarithm, exponential, convex, concave, or any combination, etc. The function may be based on a nominal rate and/or a minimum required rate. The nominal rate may be a target rate of the series of sounding signals in the wireless signal. The Type1 device may seek (e.g. with best effort) to send out the sounding signals at the nominal rate. However, some sounding signals may be late due to network traffic congestion, or even lost due to interference. Thus the ESR (any of the ESR) may be different from the nominal rate. Usually there is little cost/loss/penalty if the ESR is larger than nominal rate. But there can be considerable/ significant/catastrophic cost/loss/penalty if the ESR is less than the nominal rate. Thus the CI-timing rate score may be the monotonic non-decreasing (or monotonic increasing) function of the ESR. The CI-timing rate score (and other scores, e.g. to be introduced below) may be normalized to take on values between L1 and L2. For example, L1=0 and L2=100. A small (or large) CI-timing rate score may suggest bad quality while a large (or small) CI-timing rate score may suggest good quality. The minimum required rate may be a rate needed by the sensing task. When the ESR is less than the minimum required rate, the CI-timing rate score may be clipped/set to L1 (e.g. zero). The CI-timing rate score may be clipped (e.g. upper-limited/lower-limited) at L2. In one embodiment, the CI-timing rate score may be $max[0, (ESR-x\_minimum)/(x\_nominal - x\_minimum)]$ or $min(L2, max[L1, (ESR-x\_minimum)^k/ (x\_nominal - x\_minimum)^k])$.

In some embodiments, a second measure of quality of the TSCI is related to the ability for the rate to remain stable, with little variation/deviation. A first effective variation (EV) analytics may be computed for the inter-CI duration or the instantaneous rate in the sliding time window. A second EV analytics may be computed for the inter-CI duration or the instantaneous rate in the sliding time window. A third EV may be computed based on the first EV and the second EV (e.g. sum, weighted sum, average, weighted average, geometric mean, harmonic mean, etc.). Any EV (e.g. first EV, second EV) may comprise any of the following quantities: variance, standard deviation, absolute deviation, variation, total variation, absolute variation, square variation, derivative, range, range between two percentiles (e.g. 10% and 90%), inter-quartile range, spread, dispersion, variability, divergence, entropy, skewness, kurtosis, coefficient of variation, maximum-to-minimum ratio, a combination, an aggregate and/or an aggregate of an aggregate. Any EV may be normalized by (e.g. being divided by) effective mean (EM). The EM may be an aggregate of the inter-CI duration or the instantaneous rate. In some embodiments, the first/second/third EV may be normalized by being divided by the EM/aggregate of corresponding inter-CI duration/instantaneous rate in the sliding time window.

In some embodiments, multiple sliding time window durations may be used and the EV (e.g. first/second/third EV) may be computed accordingly. The EV for different sliding time window durations may be combined/aggregated to generate an aggregate or aggregate-of-aggregate as a fourth EV. A CI-timing regularity score (e.g. "timestamp variation score") may be computed based on one (or more) EV. The CI-timing regularity score may be a monotonic non-increasing or monotonic decreasing function of the EV. The CI-timing regularity score may be normalized to take on values between L3 and L4. For example, L3=L1=0 and L4=L2=100. A small (or large) score value may suggest bad quality (highly fluctuating/variable/volatile) while a large (or small) score value may suggest good quality (stable, not fluctuating/variable/volatile).

In one embodiment, the monotonic function may comprise an inverse function (1/x) (e.g. "coefficient of variation" or "CV"). For example, it may be 1/(a1+max(EV-a2, a3)). A final CI-timing score may be computed as an aggregate of the CI-timing rate score may be combined with the CI-timing regularity score.

In some embodiments, a third measure of quality of the TSCI is related to the ability for a magnitude of the CI in the TSCI to remain stable, with little variation/deviation when the venue (sensing environment) is empty with no object and no object motion. Note that each CI of the TSCI may have multiple CI components (CIC). A fifth EV may be computed for a magnitude of each CIC of the CI of the TSCI.

In the case that the Type1 device and/or Type2 device has more than one antenna (leading to more than one spatial stream), there may be more than one wireless links and more than one TSCI may be obtained based on the received wireless signal, each TSCI associated with a respective wireless links. The fifth EV may be a per-TSCI EV computed for the magnitude of each CIC of the CI of each of the TSCI.

In some embodiments, all the fifth EV (all per-TSCI EV) may be aggregated/averaged/ weighted-averaged to give a sixth EV. Any EV may be normalized by being divided by the corresponding EM. A CI-amplitude regularity score (e.g. "CI amplitude variation score") may be computed based on one (or more) EV (e.g. fifth EV, sixth EV). The CI-amplitude regularity score may be a monotonic non-increasing or monotonic decreasing function of the fifth EV. The CI- amplitude regularity score may be normalized to take on values between L5 and L6. For example, L5=L3=L1 and L6=L4=L2. A small (or large) score value may suggest bad quality (highly fluctuating/variable/volatile CI amplitude) while a large (or small) score value may suggest good quality (stable, not fluctuating/variable/volatile CI amplitude). In one embodiment, the monotonic function may comprise an inverse function (1/x).

In some embodiments, a fourth measure of quality of the TSCI is related to a clustering issue/problem of the CI in TSCI, i.e. whether the CI (e.g. CSI) magnitude form/shift between more than one clusters when the venue (sensing environment) is empty with no object and no object motion. This is because, when there is no object/object motion, the CI of TSCI should be stable around a single cluster. But in some bad situations, the CI in a TSCI may shift between two or more clusters when there is no object/object motion. Each CI with N CI components (CIC) may be represented as a first N-dimensional (N-D) vector (complex), or a sample point in a first N-D space. Alternatively, magnitude of each CIC may be computed, and the CIC magnitude of the CI may be represented as a second N-D vector (real), or a sample point in a second N-D space. Quantization/clustering may be performed on the CI in either the second (or first) N-D space. Clusters may be formed. Each CI of the TSCI may be assigned/associated with a respective cluster. A size of each cluster may be defined as the amount of CI being assigned/associated with the cluster. A CI-amplitude clustering score may be computed as a ratio of the size of the second-largest cluster to the size of the largest cluster. The closer this ratio is to 1, the more severe the clustering issue is. A final CI-amplitude score may be an aggregate of CI-amplitude regularity score and CI-amplitude clustering score.

In some embodiments, a fifth measure of quality of the TSCI is related to the usage of TSCI in applications. A fundamental or basic application/engine comprises the computation of a motion statistics based on autocorrelation function (ACF) of CI of the TSCI. For each CI with N CI components (CIC), a component ACF may be computed for each of the N CIC (or N CIC magnitude, or N CIC magnitude square) of CI. The ACF may be a sum/mean, or weighted sum/mean of the N1 component ACF. The weight for each component ACF may be the component ACF evaluated at one sampling period. Typically motion is detected if the motion statistics is larger than a threshold, and not detected otherwise. Suppose each CI is represented as an N-D vector (e.g. vector of CIC, or vector of CIC magnitude, or vector of CIC magnitude square). The motion statistics may be/comprise a similarity measure between two adjacent CI (e.g. inner-product of two CI vectors associated with two temporally adjacent CI, or ACF evaluated at one sampling period). The fifth measure of quality may be motion score related to behavior of motion statistics computed based on CI samples collected during periods of large motion (e.g. walking) around the devices (TX or RX), or during no motion. The motion statistics may be computed so as to determine its sample distribution, sample mean and sample variance. The motion statistics and its sample distribution can be normalized by subtracting by the sample mean and divided by the sample standard deviation (square root of sample variance).

In some embodiments, if the walking motion is continuous and consistent, the in-motion motion statistics should have a normal/Gaussian distribution with positive mean and variance for "good" or "well-behaving" CI. In other words, the normalized sample distribution should be standard Gaussian with zero mean and unity variance. Thus a first motion score is an in-motion MS-distribution score which is a Kullack-Leibler divergence (KL divergence) between the normalized sample distribution and standard Gaussian distribution. The first motion score is non-negative. It is zero when the two distributions are identical the first motion score (KL divergence) is zero. Small KL divergence suggests that the two distributions are similar, while large KL divergence suggests that the two distributions are not so similar.

In some embodiments, a second motion score is an in-motion MS-tailedness score computed based on the kurtosis of the sample distribution which measures the "tailedness" of the sample distribution (i.e. whether it has heavy tail or light tail). Kurtosis of a random variable X with mean m and standard deviation s is $E([(X-m)/s]^4)$. To compute the second motion score, X is the observation (i.e. the motion statistics), m is the sample mean, s is the sample standard deviation (square root of sample variance). As the normalized observation is $X2=(X-m)/s$, the kurtosis is equal to $E(X2^4)$ and can be computed using the normalized motion statistics. For Gaussian distribution, the kurtosis should be 3. A kurtosis greater than 3 implies a tail of sample distribution heavier than Gaussian distribution. A kurtosis less than 3 implies a tail of sample distribution lighter than Gaussian. A related analytics "Excess kurtosis" is defined as kurtosis minus 3. The second motion score is a monotonic function of the excess kurtosis. For example, it may simply be the absolute value of excess kurtosis, or the square of excess kurtosis.

In some embodiments, a third motion score is an in-motion MS-magnitude score computed based on magnitude of "in-motion" MS. As the mean of the motion statistics should be positive under motion and zero under no motion, the magnitude may be a key feature to differentiate between "motion" and "no-motion". The third motion score is the probability of the in-motion MS being larger than some typical threshold (e.g. 0.2). The third motion score may be computed for multiple thresholds (e.g. 0.1, 0.2, 0.3).

In some embodiments, a fourth motion score is no-motion MS-magnitude score computed based on magnitude of "no-motion" motion statistics computed from CI collected when no user and no user motion is present. When there is no user/user motion, the motion statistics should be zero (or very small). The fourth motion score is the probability of the no-motion MS being less than some typical threshold (e.g. 0.2). The fourth motion score may be computed for multiple thresholds (e.g. 0.1, 0.2, 0.3).

In some embodiments, a respective mapping may be applied to each of the motion scores so that they take on values from within a range [L1, L2]. E.g. L1=0, L1=1 or L1=10 or L1=100.

In some embodiments, the present teaching discloses systems and methods for encoder-decoder-based high resolution imaging.

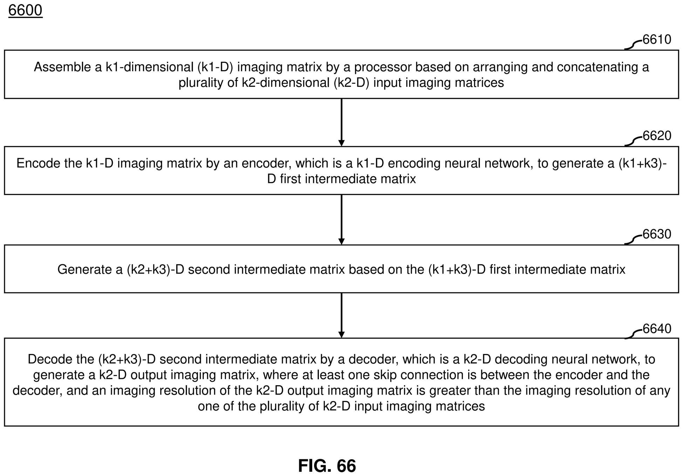

FIG. 66 illustrates a flow chart of an example method 6600 for encoder-decoder-based high resolution imaging, according to some embodiments of the present disclosure. In various embodiments, the method 6600 can be performed by the systems disclosed above. At operation 6610, a k1-dimensional (k1-D) imaging matrix is assembled by a processor based on arranging and concatenating a plurality of k2-dimensional (k2-D) input imaging matrices. At operation 6620, the k1-D imaging matrix is encoded by an encoder, which is a k1-D encoding neural network, to generate a (k1+k3)-D first intermediate matrix. At operation 6630, a (k2+k3)-D second intermediate matrix is generated based on the (k1+k3)-D first intermediate matrix. At operation 6640, the (k2+k3)-D second intermediate matrix is decoded by a decoder, which is a k2-D decoding neural network, to generate a k2-D output imaging matrix. At least one skip connection is between the encoder and the decoder. An imaging resolution of the k2-D output imaging matrix is greater than the imaging resolution of any one of the plurality of k2-D input imaging matrices.

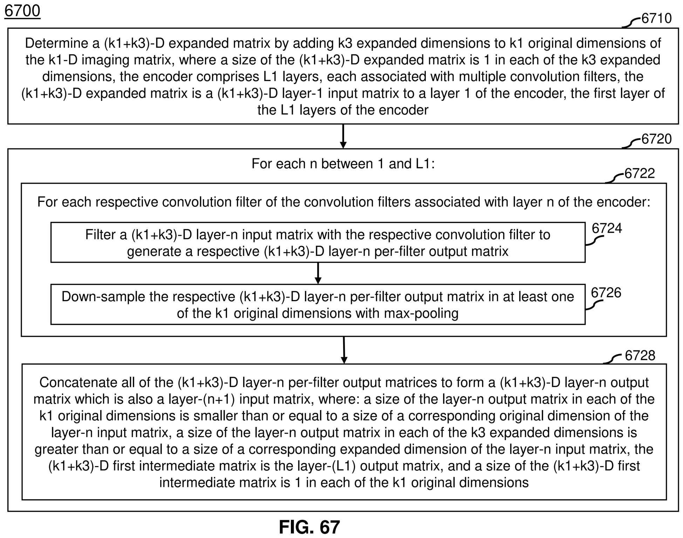

FIG. 67 illustrates a flow chart of an example method 6700 for generating output matrices for different layers of an encoder, according to some embodiments of the present disclosure. In various embodiments, the method 6700 can be performed by the systems disclosed above. At operation 6710, a (k1+k3)-D expanded matrix is determined by adding k3 expanded dimensions to k1 original dimensions of the k1-D imaging matrix. A size of the (k1+k3)-D expanded matrix is 1 in each of the k3 expanded dimensions. The encoder comprises L1 layers, each associated with multiple convolution filters. The (k1+k3)-D expanded matrix is a (k1+k3)-D layer-1 input matrix to a layer 1 of the encoder, the first layer of the L1 layers of the encoder. The operation 6720 in this example includes multiple sub-operations 6722 and 67267 performed for each n between 1 and L1. The sub-operation 6722 includes step 6724 and step 6726 performed for each respective convolution filter of the convolution filters associated with layer n of the encoder. At step 6724, a (k1+k3)-D layer-n input matrix is filtered with the respective convolution filter to generate a respective (k1+k3)-D layer-n per-filter output matrix. At step 6726, the respective (k1+k3)-D layer-n per-filter output matrix is down-sampled in at least one of the k1 original dimensions with max-pooling. At sub-operation 6728, all of the (k1+k3)-D layer-n per-filter output matrices are concatenated to form a (k1+k3)-D layer-n output matrix which is also a layer-(n+1) input matrix. A size of the layer-n output matrix in each of the k1 original dimensions is smaller than or equal to a size of a corresponding original dimension of the layer-n input matrix. A size of the layer-n output matrix in each of the k3 expanded dimensions is greater than or equal to a size of a corresponding expanded dimension of the layer-n input matrix. The (k1+k3)-D first intermediate matrix is the layer-(L1) output matrix. A size of the (k1+k3)-D first intermediate matrix is 1 in each of the k1 original dimensions.

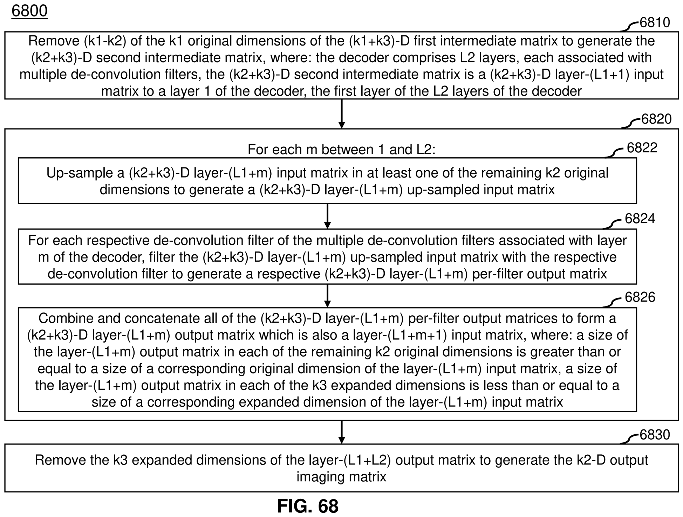

FIG. 68 illustrates a flow chart of an example method 6800 for generating an output imaging matrix, according to some embodiments of the present disclosure. In various embodiments, the method 6800 can be performed by the systems disclosed above. At operation 6810, (k1-k2) of the k1 original dimensions of the (k1+k3)-D first intermediate matrix are removed to generate the (k2+k3)-D second intermediate matrix. The decoder comprises L2 layers, each associated with multiple de-convolution filters. The (k2+k3)-D second intermediate matrix is a (k2+k3)-D layer-(L1+1) input matrix to a layer 1 of the decoder, the first layer of the L2 layers of the decoder. The operation 6820 in this example includes multiple sub-operations 6822-6826 performed for each m between 1 and L2. At the sub-operation 6822, a (k2+k3)-D layer-(L1+m) input matrix is up-sampled in at least one of the remaining k2 original dimensions to generate a (k2+k3)-D layer-(L1+m) up-sampled input matrix. At sub-operation 6824, for each respective de-convolution filter of the multiple de-convolution filters associated with layer m of the decoder, the (k2+k3)-D layer-(L1+m) up-sampled input matrix is filtered with the respective de-convolution filter to generate a respective (k2+k3)-D layer-(L1+m) per-filter output matrix. At sub-operation 6826, all of the (k2+k3)-D layer-(L1+m) per-filter output matrices are combined and concatenated to form a (k2+k3)-D layer-(L1+m) output matrix which is also a layer-(L1+m+1) input matrix. A size of the layer-(L1+m) output matrix in each of the remaining k2 original dimensions is greater than or equal to a size of a corresponding original dimension of the layer-(L1+m) input matrix. A size of the layer-(L1+m) output matrix in each of the k3 expanded dimensions is less than or equal to a size of a corresponding expanded dimension of the layer-(L1+m) input matrix. At operation 6830, the k3 expanded dimensions of the layer-(L1+L2) output matrix are removed to generate the k2-D output imaging matrix.

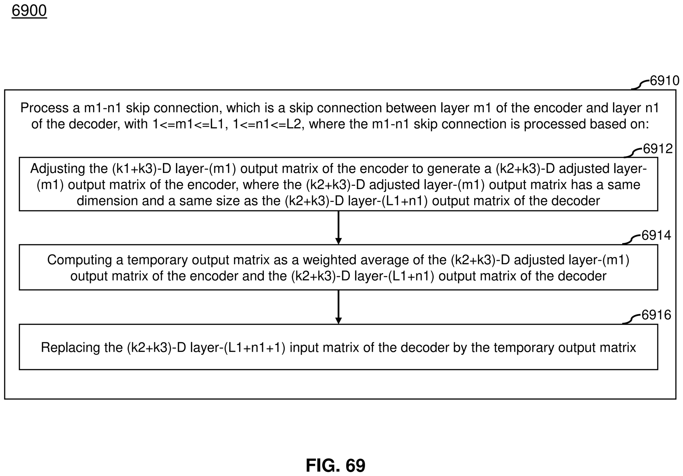

FIG. 69 illustrates a flow chart of an example method 6900 for processing a skip connection, according to some embodiments of the present disclosure. In various embodiments, the method 6900 can be performed by the systems disclosed above. As shown in FIG. 69, the operation 6910 in this example includes multiple sub-operations 6912-6916 performed to process a m1-n1 skip connection, which is a skip connection between layer m1 of the encoder and layer n1 of the decoder, with 1<=m1<=L1, 1<=n1<=L2. At sub-operation 6912, the (k1+k3)-D layer-(m1) output matrix of the encoder is adjusted to generate a (k2+k3)-D adjusted layer-(m1) output matrix of the encoder, where the (k2+k3)-D adjusted layer-(m1) output matrix has a same dimension and a same size as the (k2+k3)-D layer-(L1+n1) output matrix of the decoder. At sub-operation 6914, a temporary output matrix is computed as a weighted average of the (k2+k3)-D adjusted layer-(m1) output matrix of the encoder and the (k2+k3)-D layer-(L1+n1) output matrix of the decoder. At sub-operation 6916, the (k2+k3)-D layer-(L1+n1+1) input matrix of the decoder is replaced by the temporary output matrix.

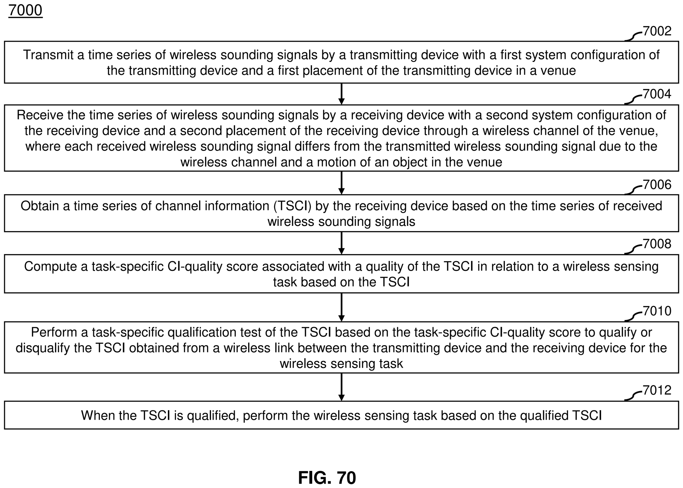

FIG. 70 illustrates a flow chart of an example method 7000 for quality evaluation of channel measurements for wireless sensing, according to some embodiments of the present disclosure. In various embodiments, the method 7000 can be performed by the systems disclosed above. At operation 7002, a time series of wireless sounding signals are transmitted by a transmitting device with a first system configuration of the transmitting device and a first placement of the transmitting device in a venue. At operation 7004, the time series of wireless sounding signals are received by a receiving device with a second system configuration of the receiving device and a second placement of the receiving device through a wireless channel of the venue, where each received wireless sounding signal differs from the transmitted wireless sounding signal due to the wireless channel and a motion of an object in the venue. At operation 7006, a time series of channel information (TSCI) is obtained by the receiving device based on the time series of received wireless sounding signals. At operation 7008, a task-specific CI-quality score associated with a quality of the TSCI is computed in relation to a wireless sensing task based on the TSCI. At operation 7010, a task-specific qualification test of the TSCI is performed based on the task-specific CI-quality score to qualify or disqualify the TSCI obtained from a wireless link between the transmitting device and the receiving device for the wireless sensing task. At operation 7012, when the TSCI is qualified, the wireless sensing task is performed based on the qualified TSCI.

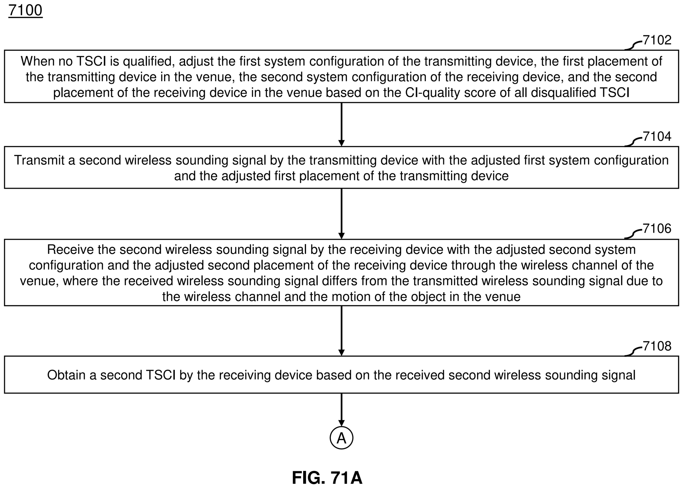

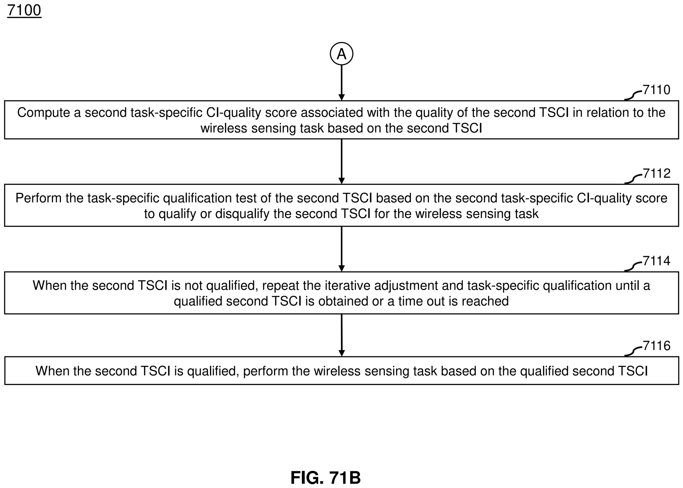

FIG. 71A and FIG. 71B illustrate a flow chart of an example method 7100 for task-specific qualification, according to some embodiments of the present disclosure. In various embodiments, the method 7100 can be performed by the systems disclosed above. As shown in FIG. 71A, at operation 7102, when no TSCI is qualified, the first system configuration of the transmitting device, the first placement of the transmitting device in the venue, the second system configuration of the receiving device, and the second placement of the receiving device in the venue are adjusted based on the CI-quality score of all disqualified TSCI. At operation 7104, a second wireless sounding signal is transmitted by the transmitting device with the adjusted first system configuration and the adjusted first placement of the transmitting device. At operation 7106, the second wireless sounding signal is received by the receiving device with the adjusted second system configuration and the adjusted second placement of the receiving device through the wireless channel of the venue, where the received wireless sounding signal differs from the transmitted wireless sounding signal due to the wireless channel and the motion of the object in the venue. At operation 7108, a second TSCI is obtained by the receiving device based on the received second wireless sounding signal.

As shown in FIG. 71B, at operation 7110, a second task-specific CI-quality score associated with the quality of the second TSCI is computed in relation to the wireless sensing task based on the second TSCI. At operation 7112, the task-specific qualification test of the second TSCI is performed based on the second task-specific CI-quality score to qualify or disqualify the second TSCI for the wireless sensing task. At operation 7114, when the second TSCI is not qualified, the iterative adjustment and task-specific qualification are repeated until a qualified second TSCI is obtained or a time out is reached. At operation 7116, when the second TSCI is qualified, the wireless sensing task is performed based on the qualified second TSCI.

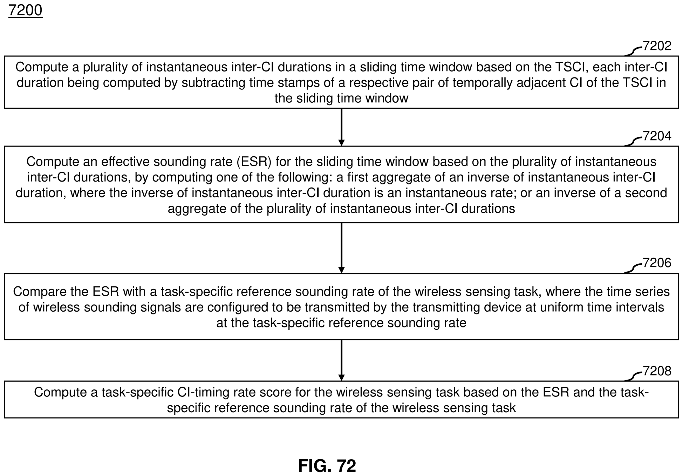

FIG. 72 illustrates a flow chart of an example method 7200 for computing a task-specific CI-timing rate score, according to some embodiments of the present disclosure. In various embodiments, the method 7200 can be performed by the systems disclosed above. At operation 7202, a plurality of instantaneous inter-CI durations in a sliding time window are computed based on the TSCI, each inter-CI duration being computed by subtracting time stamps of a respective pair of temporally adjacent CI of the TSCI in the sliding time window. At operation 7204, an effective sounding rate (ESR) is computed for the sliding time window based on the plurality of instantaneous inter-CI durations, by computing one of the following: a first aggregate of an inverse of instantaneous inter-CI duration, where the inverse of instantaneous inter-CI duration is an instantaneous rate; or an inverse of a second aggregate of the plurality of instantaneous inter-CI durations. At operation 7206, the ESR is compared with a task-specific reference sounding rate of the wireless sensing task, where the time series of wireless sounding signals are configured to be transmitted by the transmitting device at uniform time intervals at the task-specific reference sounding rate. At operation 7208, a task-specific CI-timing rate score is computed for the wireless sensing task based on the ESR and the task-specific reference sounding rate of the wireless sensing task.

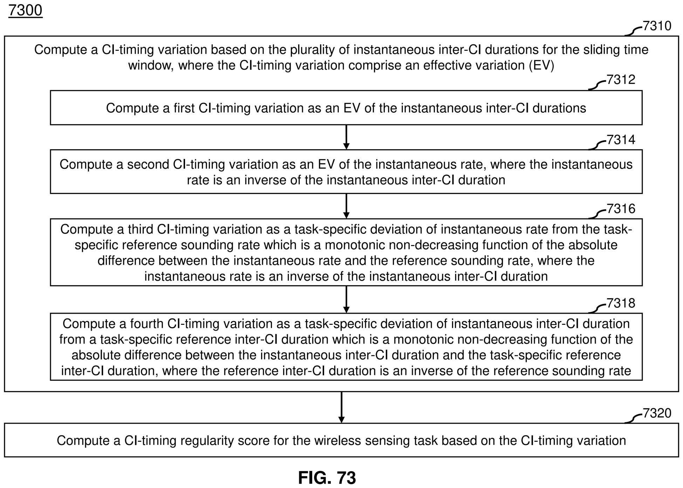

FIG. 73 illustrates a flow chart of an example method 7300 for computing a CI-timing regularity score, according to some embodiments of the present disclosure. In various embodiments, the method 7300 can be performed by the systems disclosed above. The operation 7310 in this example includes multiple sub-operations 7312 and 7318 performed to compute a CI-timing variation based on the plurality of instantaneous inter-CI durations for the sliding time window, where the CI-timing variation comprise an effective variation (EV). At sub-operation 7312, a first CI-timing variation is computed as an EV of the instantaneous inter-CI durations. At sub-operation 7314, a second CI-timing variation is computed as an EV of the instantaneous rate, where the instantaneous rate is an inverse of the instantaneous inter-CI duration. At sub-operation 7316, a third CI-timing variation is computed as a task-specific deviation of instantaneous rate from the task-specific reference sounding rate which is a monotonic non-decreasing function of the absolute difference between the instantaneous rate and the reference sounding rate, where the instantaneous rate is an inverse of the instantaneous inter-CI duration. At sub-operation 7318, a fourth CI-timing variation is computed as a task-specific deviation of instantaneous inter-CI duration from a task-specific reference inter-CI duration which is a monotonic non-decreasing function of the absolute difference between the instantaneous inter-CI duration and the task-specific reference inter-CI duration, where the reference inter-CI duration is an inverse of the reference sounding rate. At operation 7320, a CI-timing regularity score is computed for the wireless sensing task based on the CI-timing variation.

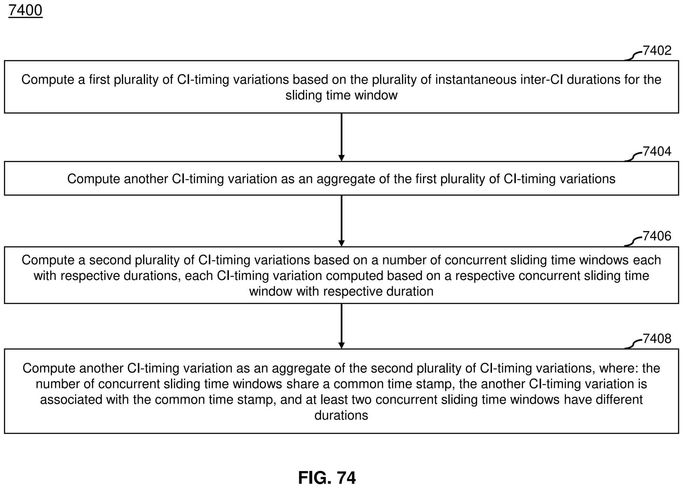

FIG. 74 illustrates a flow chart of an example method 7400 for computing an aggregate of a plurality of CI-timing variations, according to some embodiments of the present disclosure. In various embodiments, the method 7400 can be performed by the systems disclosed above. At operation 7402, a first plurality of CI-timing variations are computed based on the plurality of instantaneous inter-CI durations for the sliding time window. At operation 7404, another CI-timing variation is computed as an aggregate of the first plurality of CI-timing variations. At operation 7406, a second plurality of CI-timing variations are computed based on a number of concurrent sliding time windows each with respective durations, each CI-timing variation computed based on a respective concurrent sliding time window with respective duration. At operation 7408, another CI-timing variation is computed as an aggregate of the second plurality of CI-timing variations, where: the number of concurrent sliding time windows share a common time stamp, the another CI-timing variation is associated with the common time stamp, and at least two concurrent sliding time windows have different durations.

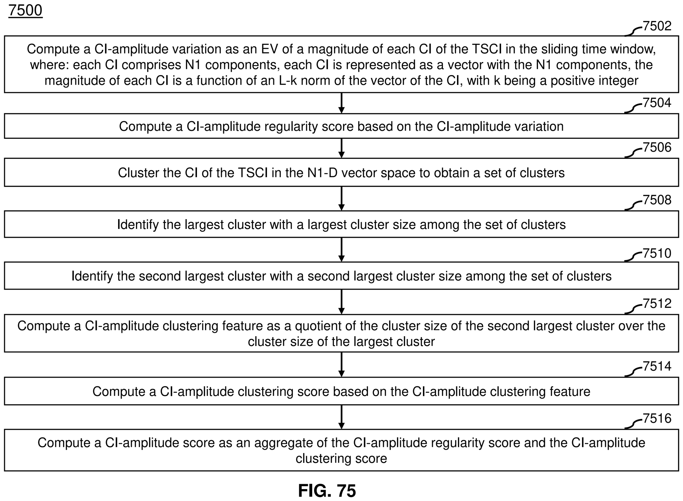

FIG. 75 illustrates a flow chart of an example method 7500 for computing a CI-amplitude score, according to some embodiments of the present disclosure. In various embodiments, the method 7500 can be performed by the systems disclosed above. At operation 7502, a CI-amplitude variation is computed as an EV of a magnitude of each CI of the TSCI in the sliding time window, where: each CI comprises N1 components, each CI is represented as a vector with the N1 components, the magnitude of each CI is a function of an L-k norm of the vector of the CI, with k being a positive integer. At operation 7504, a CI-amplitude regularity score is computed based on the CI-amplitude variation. At operation 7506, the CI of the TSCI in the N1-D vector space are clustered to obtain a set of clusters. At operation 7508, the largest cluster with a largest cluster size is identified among the set of clusters. At operation 7510, the second largest cluster with a second largest cluster size is identified among the set of clusters. At operation 7512, a CI-amplitude clustering feature is computed as a quotient of the cluster size of the second largest cluster over the cluster size of the largest cluster. At operation 7514, a CI-amplitude clustering score is computed based on the CI-amplitude clustering feature. At operation 7516, a CI-amplitude score is computed as an aggregate of the CI-amplitude regularity score and the CI-amplitude clustering score.

The following numbered clauses provide examples for encoder-decoder-based high resolution imaging.

Clause C5220_1. A method for encoder-decoder-based high resolution imaging, comprising: assembling a k1-dimensional (k1-D) imaging matrix by a processor based on arranging and concatenating a plurality of k2-dimensional (k2-D) input imaging matrices; encoding the k1-D imaging matrix by an encoder, which is a k1-D encoding neural network, to generate a (k1+k3)-D first intermediate matrix; generating a (k2+k3)-D second intermediate matrix based on the (k1+k3)-D first intermediate matrix; and decoding the (k2+k3)-D second intermediate matrix by a decoder, which is a k2-D decoding neural network, to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

Clause C5220_2. The method of clause C5220_1, further comprising: determining a (k1+k3)-D expanded matrix by adding k3 expanded dimensions to k1 original dimensions of the k1-D imaging matrix, wherein: a size of the (k1+k3)-D expanded matrix is 1 in each of the k3 expanded dimensions, the encoder comprises L1 layers, each associated with multiple convolution filters, the (k1+k3)-D expanded matrix is a (k1+k3)-D layer-1 input matrix to a layer 1 of the encoder, the first layer of the L1 layers of the encoder.

Clause C5220_3. The method of clause C5220_2, further comprising: for each n between 1 and L1: for each respective convolution filter of the multiple convolution filters associated with layer n of the encoder: filtering a (k1+k3)-D layer-n input matrix with the respective convolution filter to generate a respective (k1+k3)-D layer-n per-filter output matrix, and down-sampling the respective (k1+k3)-D layer-n per-filter output matrix in at least one of the k1 original dimensions with max-pooling; and concatenating all of the (k1+k3)-D layer-n per-filter output matrices to form a (k1+k3)-D layer-n output matrix which is also a layer-(n+1) input matrix, wherein: a size of the layer-n output matrix in each of the k1 original dimensions is smaller than or equal to a size of a corresponding original dimension of the layer-n input matrix, a size of the layer-n output matrix in each of the k3 expanded dimensions is greater than or equal to a size of a corresponding expanded dimension of the layer-n input matrix, the (k1+k3)-D first intermediate matrix is the layer-(L1) output matrix, and a size of the (k1+k3)-D first intermediate matrix is 1 in each of the k1 original dimensions.

Clause C5220_4. The method of clause C5220_3, further comprising: removing (k1-k2) of the k1 original dimensions of the (k1+k3)-D first intermediate matrix to generate the (k2+k3)-D second intermediate matrix, wherein: the decoder comprises L2 layers, each associated with multiple de-convolution filters, the (k2+k3)-D second intermediate matrix is a (k2+k3)-D layer-(L1+1) input matrix to a layer 1 of the decoder, the first layer of the L2 layers of the decoder.

Clause C5220_5. The method of clause C5220_4, further comprising: for each m between 1 and L2: up-sampling a (k2+k3)-D layer-(L1+m) input matrix in at least one of the remaining k2 original dimensions to generate a (k2+k3)-D layer-(L1+m) up-sampled input matrix, for each respective de-convolution filter of the multiple de-convolution filters associated with layer m of the decoder, filtering the (k2+k3)-D layer-(L1+m) up-sampled input matrix with the respective de-convolution filter to generate a respective (k2+k3)-D layer-(L1+m) per-filter output matrix, and combining and concatenating all of the (k2+k3)-D layer-(L1+m) per-filter output matrices to form a (k2+k3)-D layer-(L1+m) output matrix which is also a layer-(L1+m+1) input matrix, wherein: a size of the layer-(L1+m) output matrix in each of the remaining k2 original dimensions is greater than or equal to a size of a corresponding original dimension of the layer-(L1+m) input matrix, a size of the layer-(L1+m) output matrix in each of the k3 expanded dimensions is less than or equal to a size of a corresponding expanded dimension of the layer-(L1+m) input matrix; and removing the k3 expanded dimensions of the layer-(L1+L2) output matrix to generate the k2-D output imaging matrix.

Clause C5220_6. The method of clause C5220_5, further comprising: processing a m1-n1 skip connection, which is a skip connection between layer m1 of the encoder and layer n1 of the decoder, with 1<=m1<=L1, 1<=n1<=L2, wherein the m1-n1 skip connection is processed based on: adjusting the (k1+k3)-D layer-(m1) output matrix of the encoder to generate a (k2+k3)-D adjusted layer-(m1) output matrix of the encoder, wherein the (k2+k3)-D adjusted layer-(m1) output matrix has a same dimension and a same size as the (k2+k3)-D layer-(L1+n1) output matrix of the decoder; computing a temporary output matrix as a weighted average of the (k2+k3)-D adjusted layer-(m1) output matrix of the encoder and the (k2+k3)-D layer-(L1+n1) output matrix of the decoder; and replacing the (k2+k3)-D layer-(L1+n1+1) input matrix of the decoder by the temporary output matrix.

Clause C5220_7. The method of clause C5220_6, wherein: there is a m2-n2 skip connection, which is a skip connection between layer m2 of the encoder and layer n2 of the decoder, with 1<=m1<m2<=L1, 1<=n2<n1<=L2; and the method further comprises processing all skip connections in an ascending order of layer index of the decoder such that the m2-n2 skip connection is processed before the m1-n1 skip connection.

Clause C5220_8. The method of clause C5220_6, further comprising: for any n1 and the (k2+k3)-D layer-(L1+n1) output matrix of the decoder: performing a search among all L1 layers of the encoder to identify the m1 layer of the encoder which has an adjusted output matrix with a size matching the size of the layer-(L1+n1) output matrix of the decoder, in order to form the m1-n1 skip connection, wherein: when no matching layer of the encoder is found, a best match is used for the m1-n1 skip connection, the best match m1 is a layer of the encoder with a minimum absolute difference between the size of its adjusted output matrix and the size of the layer-(L1+n1) output matrix of the decoder.

Clause C5220_9. The method of clause C5220_6, further comprising: computing each element of the (k2+k3)-D adjusted layer-(m1) output matrix of the encoder as a characteristic value of a respective (k1-k2)-D sub-matrix of the (k1+k3)-D layer-(m1) output matrix of the encoder, wherein: the characteristic value is an aggregate of the elements in the respective (k1-k2)-D submatrix, the aggregate comprises at least one of: mean, arithmetic mean, geometric mean, harmonic mean, weighted average, percentile, minimum (0-percentile), median (50-percentile), maximum (100-percentile), trimmed mean (mean of percentile from A1-percentile to A2-percentile), mode, sum, weighted sum, product or weighted product.

Clause C5220_10. The method of clause C5220_1, further comprising: training the encoder and the decoder as part of a conditional generative adversarial network (cGAN) comprising a generator and a discriminator, wherein: the generator comprises the encoder and the decoder with the at least one skip connection; the k1-D imaging matrix is an input of the generator; the k2-D output imaging matrix is an output of the generator; and the discriminator comprises: the encoder with the k1-D imaging matrix as input and the (k2+k3)-D second intermediate matrix as output, an additional encoder with a k2-D supplementary input imaging matrix as input, and a full-connected network configured to compute a real-fake score.

Clause C5220_11. The method of clause C5220_10, further comprising: training the cGAN with a cost function which is a weighted sum of a standard generative adversarial network (GAN) loss function and an additional cost function, wherein the additional cost function is at least one of: a L-k loss function or a weighted L-k loss function between the k2-D output imaging matrix and the k2-D supplement input imaging matrix, with k being an integer, a visual loss function, a pre-trained perceptual loss function, a SSIM loss function, an image structural loss function, or an image-based loss function.

Clause C5220_12. A system for encoder-decoder-based high resolution imaging, comprising: a processor configured to assemble a k1-dimensional (k1-D) imaging matrix by arranging and concatenating a plurality of k2-dimensional (k2-D) input imaging matrices; an encoder, which is a k1-D encoding neural network, configured to encode the k1-D imaging matrix to generate a (k1+k3)-D first intermediate matrix, wherein the processor is further configured to generate a (k2+k3)-D second intermediate matrix based on the (k1+k3)-D first intermediate matrix; and a decoder, which is a k2-D decoding neural network, configured to decode the (k2+k3)-D second intermediate matrix to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

Clause C5220_13. The system of clause C5220_12, wherein the processor is further configured to: determine a (k1+k3)-D expanded matrix by adding k3 expanded dimensions to k1 original dimensions of the k1-D imaging matrix, wherein: a size of the (k1+k3)-D expanded matrix is 1 in each of the k3 expanded dimensions, the encoder comprises L1 layers, each associated with multiple convolution filters, the (k1+k3)-D expanded matrix is a (k1+k3)-D layer-1 input matrix to a layer 1 of the encoder, the first layer of the L1 layers of the encoder.

Clause C5220_14. The system of clause C5220_13, wherein the processor is further configured to: for each n between 1 and L1: for each respective convolution filter of the multiple convolution filters associated with layer n of the encoder: filter a (k1+k3)-D layer-n input matrix with the respective convolution filter to generate a respective (k1+k3)-D layer-n per-filter output matrix, and down-sample the respective (k1+k3)-D layer-n per-filter output matrix in at least one of the k1 original dimensions with max-pooling; and concatenate all of the (k1+k3)-D layer-n per-filter output matrices to form a (k1+k3)-D layer-n output matrix which is also a layer-(n+1) input matrix, wherein: a size of the layer-n output matrix in each of the k1 original dimensions is smaller than or equal to a size of a corresponding original dimension of the layer-n input matrix, a size of the layer-n output matrix in each of the k3 expanded dimensions is greater than or equal to a size of a corresponding expanded dimension of the layer-n input matrix, the (k1+k3)-D first intermediate matrix is the layer-(L1) output matrix, and a size of the (k1+k3)-D first intermediate matrix is 1 in each of the k1 original dimensions.

Clause C5220_15. The system of clause C5220_14, wherein the processor is further configured to: remove (k1-k2) of the k1 original dimensions of the (k1+k3)-D first intermediate matrix to generate the (k2+k3)-D second intermediate matrix, wherein: the decoder comprises L2 layers, each associated with multiple de-convolution filters, the (k2+k3)-D second intermediate matrix is a (k2+k3)-D layer-(L1+1) input matrix to a layer 1 of the decoder, the first layer of the L2 layers of the decoder.

Clause C5220_16. The system of clause C5220_15, wherein the processor is further configured to: for each m between 1 and L2: up-sample a (k2+k3)-D layer-(L1+m) input matrix in at least one of the remaining k2 original dimensions to generate a (k2+k3)-D layer-(L1+m) up-sampled input matrix, for each respective de-convolution filter of the multiple de-convolution filters associated with layer m of the decoder, filter the (k2+k3)-D layer-(L1+m) up-sampled input matrix with the respective de-convolution filter to generate a respective (k2+k3)-D layer-(L1+m) per-filter output matrix, and combine and concatenate all of the (k2+k3)-D layer-(L1+m) per-filter output matrices to form a (k2+k3)-D layer-(L1+m) output matrix which is also a layer-(L1+m+1) input matrix, wherein: a size of the layer-(L1+m) output matrix in each of the remaining k2 original dimensions is greater than or equal to a size of a corresponding original dimension of the layer-(L1+m) input matrix, a size of the layer-(L1+m) output matrix in each of the k3 expanded dimensions is less than or equal to a size of a corresponding expanded dimension of the layer-(L1+m) input matrix; and remove the k3 expanded dimensions of the layer-(L1+L2) output matrix to generate the k2-D output imaging matrix.

Clause C5220_17. The system of clause C5220_16, wherein the processor is further configured to: process a m1-n1 skip connection, which is a skip connection between layer m1 of the encoder and layer n1 of the decoder, with 1<=m1<=L1, 1<=n1<=L2, wherein the m1-n1 skip connection is processed based on: adjusting the (k1+k3)-D layer-(m1) output matrix of the encoder to generate a (k2+k3)-D adjusted layer-(m1) output matrix of the encoder, wherein the (k2+k3)-D adjusted layer-(m1) output matrix has a same dimension and a same size as the (k2+k3)-D layer-(L1+n1) output matrix of the decoder; computing a temporary output matrix as a weighted average of the (k2+k3)-D adjusted layer-(m1) output matrix of the encoder and the (k2+k3)-D layer-(L1+n1) output matrix of the decoder; and replacing the (k2+k3)-D layer-(L1+n1+1) input matrix of the decoder by the temporary output matrix.

Clause C5220_18. The system of clause C5220_17, wherein: there is a m2-n2 skip connection, which is a skip connection between layer m2 of the encoder and layer n2 of the decoder, with 1<=m1<m2<=L1, 1<=n2<n1<=L2; and the processor is further configured to process all skip connections in an ascending order of layer index of the decoder such that the m2-n2 skip connection is processed before the m1-n1 skip connection.

Clause C5220_19. The system of clause C5220_17, wherein the processor is further configured to: for any n1 and the (k2+k3)-D layer-(L1+n1) output matrix of the decoder: perform a search among all L1 layers of the encoder to identify the m1 layer of the encoder which has an adjusted output matrix with a size matching the size of the layer-(L1+n1) output matrix of the decoder, in order to form the m1-n1 skip connection, wherein: when no matching layer of the encoder is found, a best match is used for the m1-n1 skip connection, the best match m1 is a layer of the encoder with a minimum absolute difference between the size of its adjusted output matrix and the size of the layer-(L1+n1) output matrix of the decoder.

Clause C5220_20. The system of clause C5220_17, wherein the processor is further configured to: compute each element of the (k2+k3)-D adjusted layer-(m1) output matrix of the encoder as a characteristic value of a respective (k1-k2)-D sub-matrix of the (k1+k3)-D layer-(m1) output matrix of the encoder, wherein: the characteristic value is an aggregate of the elements in the respective (k1-k2)-D submatrix, the aggregate comprises at least one of: mean, arithmetic mean, geometric mean, harmonic mean, weighted average, percentile, minimum (0-percentile), median (50-percentile), maximum (100-percentile), trimmed mean (mean of percentile from A1-percentile to A2-percentile), mode, sum, weighted sum, product or weighted product.

Clause C5220_21. The system of clause C5220_12, wherein the processor is further configured to: train the encoder and the decoder as part of a conditional generative adversarial network (cGAN) comprising a generator and a discriminator, wherein: the generator comprises the encoder and the decoder with the at least one skip connection; the k1-D imaging matrix is an input of the generator; the k2-D output imaging matrix is an output of the generator; and the discriminator comprises: the encoder with the k1-D imaging matrix as input and the (k2+k3)-D second intermediate matrix as output, an additional encoder with a k2-D supplementary input imaging matrix as input, and a full-connected network configured to compute a real-fake score.

Clause C5220_22. The system of clause C5220_21, wherein the processor is further configured to: train the cGAN with a cost function which is a weighted sum of a standard generative adversarial network (GAN) loss function and an additional cost function, wherein the additional cost function is at least one of: a L-k loss function or a weighted L-k loss function between the k2-D output imaging matrix and the k2-D supplement input imaging matrix, with k being an integer, a visual loss function, a pre-trained perceptual loss function, a SSIM loss function, an image structural loss function, or an image-based loss function.

Clause C5220_23. A device for encoder-decoder-based high resolution imaging, comprising: a processor; and a memory storing instructions, which when executed, cause the processor to perform operations comprising: assembling a k1-dimensional (k1-D) imaging matrix by arranging and concatenating a plurality of k2-dimensional (k2-D) input imaging matrices, encoding the k1-D imaging matrix using an encoder, which is a k1-D encoding neural network, to generate a (k1+k3)-D first intermediate matrix, generating a (k2+k3)-D second intermediate matrix based on the (k1+k3)-D first intermediate matrix, and decoding the (k2+k3)-D second intermediate matrix using a decoder, which is a k2-D decoding neural network, to generate a k2-D output imaging matrix, wherein: there is at least one skip connection between the encoder and the decoder, and an imaging resolution of the k2-D output imaging matrix is greater than the imaging resolution of any one of the plurality of k2-D input imaging matrices.

Clause C5220_24. The device of clause C5220_23, wherein the operations further comprise: determining a (k1+k3)-D expanded matrix by adding k3 expanded dimensions to k1 original dimensions of the k1-D imaging matrix, wherein: a size of the (k1+k3)-D expanded matrix is 1 in each of the k3 expanded dimensions, the encoder comprises L1 layers, each associated with multiple convolution filters, the (k1+k3)-D expanded matrix is a (k1+k3)-D layer-1 input matrix to a layer 1 of the encoder, the first layer of the L1 layers of the encoder.

Clause C5220_25. The device of clause C5220_24, wherein the operations further comprise: for each n between 1 and L1: for each respective convolution filter of the multiple convolution filters associated with layer n of the encoder: filtering a (k1+k3)-D layer-n input matrix with the respective convolution filter to generate a respective (k1+k3)-D layer-n per-filter output matrix, and down-sampling the respective (k1+k3)-D layer-n per-filter output matrix in at least one of the k1 original dimensions with max-pooling; and concatenating all of the (k1+k3)-D layer-n per-filter output matrices to form a (k1+k3)-D layer-n output matrix which is also a layer-(n+1) input matrix, wherein: a size of the layer-n output matrix in each of the k1 original dimensions is smaller than or equal to a size of a corresponding original dimension of the layer-n input matrix, a size of the layer-n output matrix in each of the k3 expanded dimensions is greater than or equal to a size of a corresponding expanded dimension of the layer-n input matrix, the (k1+k3)-D first intermediate matrix is the layer-(L1) output matrix, and a size of the (k1+k3)-D first intermediate matrix is 1 in each of the k1 original dimensions.

Clause C5220_26. The device of clause C5220_25, wherein the operations further comprise: removing (k1-k2) of the k1 original dimensions of the (k1+k3)-D first intermediate matrix to generate the (k2+k3)-D second intermediate matrix, wherein: the decoder comprises L2 layers, each associated with multiple de-convolution filters, the (k2+k3)-D second intermediate matrix is a (k2+k3)-D layer-(L1+1) input matrix to a layer 1 of the decoder, the first layer of the L2 layers of the decoder.

Clause C5220_27. The device of clause C5220_26, wherein the operations further comprise: for each m between 1 and L2: up-sampling a (k2+k3)-D layer-(L1+m) input matrix in at least one of the remaining k2 original dimensions to generate a (k2+k3)-D layer-(L1+m) up-sampled input matrix, for each respective de-convolution filter of the multiple de-convolution filters associated with layer m of the decoder, filtering the (k2+k3)-D layer-(L1+m) up-sampled input matrix with the respective de-convolution filter to generate a respective (k2+k3)-D layer-(L1+m) per-filter output matrix, and combining and concatenating all of the (k2+k3)-D layer-(L1+m) per-filter output matrices to form a (k2+k3)-D layer-(L1+m) output matrix which is also a layer-(L1+m+1) input matrix, wherein: a size of the layer-(L1+m) output matrix in each of the remaining k2 original dimensions is greater than or equal to a size of a corresponding original dimension of the layer-(L1+m) input matrix, a size of the layer-(L1+m) output matrix in each of the k3 expanded dimensions is less than or equal to a size of a corresponding expanded dimension of the layer-(L1+m) input matrix; and removing the k3 expanded dimensions of the layer-(L1+L2) output matrix to generate the k2-D output imaging matrix.

Clause C5220_28. The device of clause C5220_27, wherein the operations further comprise: processing a m1-n1 skip connection, which is a skip connection between layer m1 of the encoder and layer n1 of the decoder, with 1<=m1<=L1, 1<=n1<=L2, wherein the m1-n1 skip connection is processed based on: adjusting the (k1+k3)-D layer-(m1) output matrix of the encoder to generate a (k2+k3)-D adjusted layer-(m1) output matrix of the encoder, wherein the (k2+k3)-D adjusted layer-(m1) output matrix has a same dimension and a same size as the (k2+k3)-D layer-(L1+n1) output matrix of the decoder; computing a temporary output matrix as a weighted average of the (k2+k3)-D adjusted layer-(m1) output matrix of the encoder and the (k2+k3)-D layer-(L1+n1) output matrix of the decoder; and replacing the (k2+k3)-D layer-(L1+n1+1) input matrix of the decoder by the temporary output matrix.

Clause C5220_29. The device of clause C5220_28, wherein: there is a m2-n2 skip connection, which is a skip connection between layer m2 of the encoder and layer n2 of the decoder, with 1<=m1<m2<=L1, 1<=n2<n1<=L2; and the operations further comprise processing all skip connections in an ascending order of layer index of the decoder such that the m2-n2 skip connection is processed before the m1-n1 skip connection.

Clause C5220_30. The device of clause C5220_29, wherein the operations further comprise: for any n1 and the (k2+k3)-D layer-(L1+n1) output matrix of the decoder: performing a search among all L1 layers of the encoder to identify the m1 layer of the encoder which has an adjusted output matrix with a size matching the size of the layer-(L1+n1) output matrix of the decoder, in order to form the m1-n1 skip connection, wherein: when no matching layer of the encoder is found, a best match is used for the m1-n1 skip connection, the best match m1 is a layer of the encoder with a minimum absolute difference between the size of its adjusted output matrix and the size of the layer-(L1+n1) output matrix of the decoder.

Clause 5220_1. A method/device/system for encoder-decoder-based high resolution imaging, comprising: assembling a k1-dimensional (k1-D) imaging matrix by a processor by arranging and concatenating a plurality of k2-dimensional (k2-D) input imaging matrices; encoding the k1-D imaging matrix by a k1-D encoding neural network (encoder) to generate a (k1+k3)-D first intermediate matrix; generating a (k2+k3)-D second intermediate matrix based on the (k1+k3)-D first intermediate matrix; and decoding the (k2+k3)-D second intermediate matrix by a k2-D decoding neural network (decoder) to generate a k2-D output imaging matrix, wherein there is at least one k1-D-to-k2-D skip connection between the k1-D encoder and the k2-D decoder, wherein an imaging resolution of the k2-D output imaging matrix is greater than the imaging resolution of any one of the plurality of k2-D input imaging matrices.

Clause 5220_2. The method/device/system for encoder-decoder-based high resolution imaging of clause 5220_1, comprising: determining a (k1+k3)-dimensional ((k1+k3)-D) expanded matrix by adding k3 expanded dimensions to the existing k1 original dimensions of the k1-D imaging matrix, wherein the size of the (k1+k3)-D expanded matrix is 1 in each of the k3 expanded dimensions, wherein the k1-D encoder comprises L1 layers, each associated with multiple convolution filters, wherein the (k1+k3)-D expanded matrix is a (k1+k3)-D layer-1 input matrix to a layer 1 of the encoder, the first of the L1 layers of the encoder.

Clause 5220_3. The method/device/system for encoder-decoder-based high resolution imaging of clause 5220_2, comprising: for n=1 to L1: for each of the multiple respective convolution filter associated with the layer n of the encoder: filtering the (k1+k3)-D layer-n input matrix with the respective convolution filter to generate respective (k1+k3)-D layer-n per-filter output matrix, and down-sampling the respective (k1+k3)-D layer-n per-filter output matrix in at least one of the k1 original dimensions with max-pooling, and concatenating all the (k1+k3)-D layer-n per-filter output matrix to form a (k1+k3)-D layer-n output matrix which is also a layer-(n+1) input matrix, wherein the size of the layer-n output matrix in each of the k1 original dimensions is smaller than or equal to the size of the corresponding original dimension of the layer-n input matrix, wherein the size of the layer-n output matrix in each of the k3 expanded dimensions is greater than or equal to the size of the corresponding expanded dimension of the layer-n input matrix, wherein the (k1+k3)-D first intermediate matrix is the layer-(L1) output matrix.

Clause 5220_4. The method/device/system for encoder-decoder-based high resolution imaging of clause 5220_3: wherein the size of the (k1+k3)-D first intermediate matrix is 1 in at least (k1-k2) of the k1 original dimensions.

Clause 5220_5. The method/device/system for encoder-decoder-based high resolution imaging of clause 5220_3: wherein the size of the (k1+k3)-D first intermediate matrix is 1 in each of the k1 original dimensions.

Clause 5220_6. The method/device/system for encoder-decoder-based high resolution imaging of clause 5220_5, further comprising: removing (k1-k2) of the k1 original dimensions of the (k1+k3)-D first intermediate matrix to generate the (k2+k3)-D second intermediate matrix, wherein the decoder comprises L2 layers, each associated with multiple de-convolution filters, wherein the (k2+k3)-D second intermediate matrix is a (k2+k3)-D layer-(L1+1) input matrix to a layer 1 of the decoder, the first of the L2 layers of the decoder.

Clause 5220_7. The method/device/system for encoder-decoder-based high resolution imaging of clause 5220_6, comprising: for n=1 to L2: up-sampling a (k2+k3)-D layer-(L1+n) input matrix in at least one of the k2 original dimensions to generate a (k2+k3)-D layer-(L1+n) up-sampled input matrix, for each of the multiple respective de-convolution filter associated with the layer n of the decoder: filtering the (k2+k3)-D layer-(L1+n) up-sampled input matrix with the respective de-convolution filter to generate respective (k2+k3)-D layer-(L1+n) per-filter output matrix, and combining and concatenating the multiple (k2+k3)-D layer-(L1+n) per-filter output matrix to form a (k2+k3)-D layer-(L1+n) output matrix which is also a layer-(L1+n+1) input matrix, wherein the size of the layer-(L1+n) output matrix in each of the k2 original dimensions is greater than or equal to the size of the corresponding original dimension of the layer-(L1+n) input matrix, wherein the size of the layer-(L1+n) output matrix in each of the k3 expanded dimensions is less than or equal to the size of the corresponding expanded dimension of the layer-(L1+n) input matrix; and removing the k3 expanded dimensions of the layer-(L1+L2) output matrix to generate the k2-D output imaging matrix.

Clause 5220_8. The method/device/system for encoder-decoder-based high resolution imaging of clause 5220_7, comprising: wherein there is a m1-n1 skip connection, which is a skip connection between layer m1 of the encoder and layer n1 of the decoder, with 1<=m1<=L1, 1<=n1<=L2; processing the m1-n1 skip connection by: adjusting the (k1+k3)-D layer-(m1) output matrix of the encoder to generate a (k2+k3)-D adjusted layer-(m1) output matrix of the encoder such that the adjusted matrix has same dimension and size as the (k2+k3)-D layer-(L1+n1) output matrix of the decoder ; computing a temporary output matrix as a weighted average of the (k2+k3)-D adjusted layer-(m1) output matrix of the encoder and the (k2+k3)-D layer-(L1+n1) output matrix of the decoder; replacing the (k2+k3)-D layer-(L1+n1+1) input matrix of the decoder by the temporary output matrix.

Clause 5220_9. The method/device/system for encoder-decoder-based high resolution imaging of clause 5220_8, comprising: wherein there is a m2-n2 skip connection, which is a skip connection between layer m2 of the encoder and layer n2 of the decoder, with 1<=m1<m2<=L1, 1<=n2<n1<=L2; processing all skip connections in ascending order of the layer index of the decoder such that the m2-n2 skip connection is processed before the m1-n1 skip connection.

Clause 5220_10. The method/device/system for encoder-decoder-based high resolution imaging of clause 5220_8, comprising: for any n1 and the (k2+k2)-D layer-(L1+n1) output matrix of the decoder: performing a search among all L1 layers of the encoder to identify the m1 layer of the encoder which has an adjusted output matrix size matching the size of the layer-(L1+n1) output matrix of the decoder, in order to form the m1-n1 skip connection.

Clause 5220_11. The method/device/system for encoder-decoder-based high resolution imaging of clause 5220_10, comprising: when no perfectly matching layer of the encoder is found, a best match is used for the m1-n1 skip connection, wherein the best match m1 is a layer of the encoder with minimum absolute difference between the size of its adjusted output matrix and the size of the layer-(L1+n1) output matrix of the decoder.

Clause 5220_12. The method/device/system for encoder-decoder-based high resolution imaging of clause 5220_8, comprising: computing each element of the (k2+k3)-D adjusted layer-(m1) output matrix of the encoder as a characteristic value of a respective (k1-k2)-D sub-matrix of the (k1+k3)-D layer-(m1) output matrix of the encoder, wherein the characteristic value is an aggregate of the elements in the respective (k1-k2)-D submatrix, the aggregate comprising one of: mean, arithmetic mean, geometric mean, harmonic mean, weighted average, percentile, minimum (0-percentile), median (50-percentile), maximum (100-percentile), trimmed mean (mean of percentile from A1-percentile to A2-percentile), mode, sum, weighted sum, product or weighted product.

Clause 5220_13. The method/device/system for encoder-decoder-based high resolution imaging of clause 5220_1, comprising: training the k1-D encoder and the k2-D decoder as part of a conditional generative adversarial network (cGAN) comprising a generator and a discriminator, wherein the generator comprises the k1-D encoder and the k2-D decoder with the at least one skip connection, with the k1-D imaging matrix as input of the generator and the k2-D output imaging matrix as output of the generator, wherein the discriminator comprises: the k1-D encoder with the k1-D imaging matrix as input and the (k2+k3)-D second intermediate matrix as output, a second k2-D encoder with a k2-D supplementary input imaging matrix as input, and a full-connected network to compute a real-fake score.

Clause 5220_14. The method/device/system for encoder-decoder-based high resolution imaging of clause 5220_1, comprising: training the cGAN with a cost function which is a weighted sum of a standard generative adversarial network (GAN) loss function and at least one of: a L-k loss function or a weighted L-k loss function between the k2-D output imaging matrix and the k2-D supplement input imaging matrix, with k being an integer, a visual loss function, a pre-trained perceptual loss function, a SSIM loss function, an image structural loss function, or an image-based loss function.

Clause 5220_15. The method/device/system for encoder-decoder-based high resolution imaging of clause 5220_1, comprising: transmitting a wireless signal through a wireless channel of a venue by a Type1 heterogeneous wireless device with a first number, B1, of transmit antennas; receiving the wireless signal by a Type2 heterogeneous wireless device with a second number, B2, of receive antennas, wherein the received wireless signal is different from the transmitted wireless signal due to the wireless channel and a motion of an object, wherein B2*B2>100; obtaining a set of time series of channel information (TSCI) of the wireless channel based on the received wireless signal, wherein each channel information (CI) comprises one of: channel state information (CSI), channel impulse response (CIR), frequency computing the plurality of k2-D input imaging matrices based on the set of TSCI.

Clause 5220_16. The method/device/system for encoder-decoder-based high resolution imaging of clause 5220_15, comprising: wherein each of the plurality of k2-D input imaging matrices is associated with a respective antenna of the Type1 device.

Clause 5220_17. The method/device/system for encoder-decoder-based high resolution imaging of clause 5220_15, comprising: wherein each of the plurality of k2-D input imaging matrix is associated with a respective antenna of the Type2 device.

Clause 5220_18. The method/device/system for encoder-decoder-based high resolution imaging of clause 5220_15, comprising: wherein each of the plurality of k2-D input imaging matrix is computed based on CI at one time stamp.

Clause 5220_19. The method/device/system for encoder-decoder-based high resolution imaging of clause 5220_15, comprising: wherein each of the plurality of k2-D input imaging matrix is computed based on CI at more than one time stamps.

Clause 5220_20. The method/device/system for encoder-decoder-based high resolution imaging of clause 5220_1: wherein k2=2; wherein each k2-D input imaging matrix is a 2-D input image.

Clause 5220_21. The method/device/system for encoder-decoder-based high resolution imaging of clause 5220_20: wherein k1=k2+1; wherein the 3-D imaging matrix is assembled by stacking the plurality of correlated 2-D input imaging matrices.

Clause 5220_22. The method/device/system for encoder-decoder-based high resolution imaging of clause 5220_20: wherein k1=k2+2; wherein the 4-D imaging matrix is assembled by stacking the plurality of correlated 2-D input imaging matrices.

The following numbered clauses provide examples for quality evaluation of channel measurements for wireless sensing.

In some embodiments, a wireless sensing system may comprise a Type1 device (TX) and a Type2 device (RX). Each device may have respective software/system configuration, and respective device/antenna placement (location + orientation). The system may be designed for a wireless sensing task. However, the quality of raw sensing measurements (TSCI) from the wireless sounding signals may be tested/evaluated to determine whether the TX/RX and respective configuration/placement are good for the wireless sensing task, or not. In some embodiments, to evaluate/qualify/disqualify the TSCI, task-specific CI-quality score may be computed based on TSCI. A task-specific qualification test may be performed based on the task-specific CI-quality score.

Clause 5220_A1. A method/device/system of quality evaluation of channel measurements for wireless sensing, comprising: transmitting a time series of wireless sounding signals by a Type1 heterogeneous wireless device with a first system configuration of the Type1 device and a first placement of the Type1 device in a venue; receiving the time series of wireless sounding signals by a Type2 heterogeneous wireless device with a second system configuration of the Type2 device and a second placement of the Type2 device through a wireless channel of the venue, wherein each received wireless sounding signal differs from the transmitted wireless sounding signal due to the wireless channel and a motion of an object in the venue; obtaining a time series of channel information (TSCI) by the Type2 device based on the time series of received wireless sounding signal; computing a task-specific CI-quality score associated with a quality of the TSCI in relation to a wireless sensing task based on the TSCI; performing a task-specific qualification test of the TSCI based on the task-specific CI-quality score to qualify or disqualify the TSCI obtained from a wireless link between the Type1 device and the Type2 device for the wireless sensing task; when the TSCI is qualified, performing the wireless sensing task based on the qualified TSCI.

Clause 5220_A2. The method/device/system of quality evaluation of channel measurements for wireless sensing of clause 5220_A1, comprising: qualifying or disqualifying at least one of: the first system configuration of the Type1 device, the first placement of the Type1 device, the second system configuration of the Type2 device, and the second placement of the Type2 device, for the wireless sensing task, together with the TSCI, based on the CI-quality score.

In some embodiments, when TSCI is disqualified (not good enough), the two devices/system configuration/placement may be adjusted and qualification may be done again. The adjustment/qualification may be performed repeatedly/iteratively/recursively until the TSCI is qualified/good enough, or a time out (e.g. max iteration) is reached. Then the wireless sensing task may be performed based on the final qualified setup.

Clause 5220_A3. The method/device/system of quality evaluation of channel measurements for wireless sensing of clause 5220_A2, comprising: when no TSCI is qualified, adjusting the first system configuration of the Type1 device, the first placement of the Type1 device in the venue, the second system configuration of the Type2 device, and the second placement of the Type2 device in the venue based on the CI-quality score of all the disqualified TSCI; transmitting a second wireless sounding signal by the Type1 device with the adjusted first system configuration and the adjusted first placement of the Type1 device; receiving the second wireless sounding signal by the Type2 device with the adjusted second system configuration and the adjusted second placement of the Type2 device through the wireless channel of the venue, wherein the received wireless sounding signal differs from the transmitted wireless sounding signal due to the wireless channel and the motion of the object in the venue; obtaining a second TSCI by the Type2 device based on the received second wireless sounding signal; computing a second task-specific CI-quality score associated with the quality of the second TSCI in relation to the wireless sensing task based on the second TSCI; performing the task-specific qualification test of the second TSCI based on the second task-specific CI-quality score to qualify or disqualify the second TSCI for the wireless sensing task; repeating the iterative adjustment and task-specific qualification until a qualified second TSCI is obtained or a time out is reached; when the second TSCI is qualified, performing the wireless sensing task based on the qualified second TSCI.

In some embodiments, when qualifying the system, one of the TX or RX may be a pre-qualified device (e.g. with pre-qualified system configuration and/or placement) and the other one of the TX or RX may be a to-be-qualified device. So when qualification fails, the adjustment may be performed only on the to-be-qualified device. In some embodiments, the pre-qualified device may have several pre-qualified system configuration and/or placement. When the TSCI is disqualified, the to-be-qualified device may be adjusted. If many adjustments were applied and the TSCI still failed, then the system configuration/placement of the pre-qualified device may be adjusted to another qualified configuration/placement. And the recursion of qualification/ adjustment may be repeated.

Clause 5220_A4. The method/device/system of quality evaluation of channel measurements for wireless sensing of clause 5220_A3, comprising: wherein one of the Type1 device and the Type2 device is a pre-qualified device with pre-qualified system configuration and pre-qualified placement, performing the task-specific qualification test of the second TSCI based on the second task-specific CI-quality score to qualify or disqualify, together with the second TSCI, the other one of the Type1 device and the Type2 device with associated system configuration and placement for the wireless sensing task.

Clause 5220_A5. The method/device/system of quality evaluation of channel measurements for wireless sensing of clause 5220_A4, comprising: wherein the system configuration of the pre-qualified device is not adjusted in the iterative adjustment and task-specific qualification.

In some embodiments, to qualify TSCI, instantaneous inter-CI duration and instantaneous rate (inverse of instantaneous inter-CI duration) may be measured/computed. Both are related to CI timing accuracy. In some embodiments, for the wireless sensing task, there may be a required sounding rate.("reference sounding rate"). The wireless sounding signal may be designed to be transmitted by the Type1 device (TX) at the reference sounding rate. In some embodiments, some effective sounding rate (ESR) may be computed. It may be compared with reference sounding rate (e.g. required sounding rate for wireless sensing task). The sounding signal sent by TX to RX may be configured to be the reference sounding rate. If they match, the TSCI may be good. If they differ a lot, the TSCI may be bad. In some embodiments, more than one reference sounding rate may be studied. For TX/RX configuration/placement and associated TSCI may be good/qualified for low sounding rate, but not good/disqualified for high sounding rate. The particular sounding rate at which the ESR fails to catch up with the respective reference sounding rate (with considerable/significant deviation) may be computed. The system/configuration/placement/setup may then be qualified up to the particular sounding rate. In some embodiments, task-specific CI-timing rate score may be computed based on ESR and task-specific reference sounding rate.

Clause 5220_A6. The method/device/system of quality evaluation of channel measurements for wireless sensing of clause 5220_A1, comprising: computing a plurality of instantaneous inter-CI durations in a sliding time window based on the TSCI, each inter-CI duration being computed by subtracting time stamps of a respective pair of temporally adjacent CI of the TSCI in the sliding time window; computing an effective sounding rate (ESR) for the sliding time window based on the plurality of instantaneous inter-CI durations; comparing the ESR with a task-specific reference sounding rate of the wireless sensing task, wherein the time series of wireless sounding signals are configured to be transmitted by the Type1 device at uniform time intervals at the task-specific reference sounding rate; computing a task-specific CI-timing rate score for the wireless sensing task based on the ESR and the task-specific reference sounding rate of the wireless sensing task.

In some embodiments, ESR may be an inverse of aggregate/average of instantaneous inter-CI duration, or aggregate/average of instantaneous rate (which is inverse of inter-CI duration).

Clause 5220_A7. The method/device/system of quality evaluation of channel measurements for wireless sensing of clause 5220_A6, comprising: computing the ESR by computing one of the following: a first aggregate of an inverse of instantaneous inter-CI duration, wherein the inverse of instantaneous inter-CI duration is an instantaneous rate, and an inverse of a second aggregate of the plurality of instantaneous inter-CI durations, wherein any aggregate comprises sum, weighted sum, product, weighted product, mean, weighted mean, arithmetic mean, geometric mean, harmonic mean, percentile, minimum (0-percentile), maximum (100-percentile), median (50-percentile), trimmed mean,(mean of percentile from A1-percentile to A2-percentile), mode, or another aggregate of any of the above.

In some embodiments, when multiple ESR are computed, they can be combined/aggregated to form another ESR (a combined ESR).

Clause 5220_A8. The method/device/system of quality evaluation of channel measurements for wireless sensing of clause 5220_A7, comprising: computing a plurality of ESR; computing another ESR as an aggregate of the plurality of ESR.

In some embodiments, in a special case, windows with different window length/duration may be used to compute the same ESR (e.g. average of instantaneous rate, for several window lengths: 10 sec, 1 min, 1 hour) lead to a plurality of ESR. Each ESR is associated with all the time stamps in the respective time window. Large window may give medium/long term behavior while short window may give short-term behavior. All these windows may be concurrent/contemporaneous/overlapping with at least one common time stamp being in all these windows. The plurality of ESR may be combined/aggregated to form a new ESR. The new ESR may be associated with the at least one common time stamp. In some embodiments, the window size may be so different that a long window (e.g. 10 min long) may totally encompass a short window (e.g. 1 min long).

Clause 5220_A9. The method/device/system of quality evaluation of channel measurements for wireless sensing of clause 5220_A8, comprising: computing a plurality of ESR, each being a same ESR computed based on a number of concurrent sliding time windows each with respective durations; computing another ESR as an aggregate of the plurality of ESR.

Clause 5220_A10. The method/device/system of quality evaluation of channel measurements for wireless sensing of clause 5220_A9: wherein the number of concurrent sliding time windows share at least one common time stamp.

Clause 5220_A11. The method/device/system of quality evaluation of channel measurements for wireless sensing of clause 5220_A10: wherein at least two concurrent sliding time windows have different durations.

Clause 5220_A12. The method/device/system of quality evaluation of channel measurements for wireless sensing of clause 5220_A11: wherein one of the at least two concurrent sliding time windows is a subset of another one of the at least two concurrent sliding time windows.

In some embodiments, while ESR may be computed independent of the wireless sensing task, the reference sounding rate may reflect a requirement/setting of the wireless sensing task. In some embodiments, to gauge how good/bad the ESR is in relation to the reference sounding rate, a difference (ESR-reference sounding rate) or a quotient/ratio (ESR/reference sounding rate) may be computed in order to compute task-specific CI-timing rate score.

Clause 5220_A13. The method/device/system of quality evaluation of channel measurements for wireless sensing of clause 5220_A7: the task-specific CI-timing rate score comprises at least one of: a difference between the ESR and the task-specific reference sounding rate, a quotient of the ESR over the task-specific reference sounding rate, a function of the difference or the quotient, a mapping to a target range [L1, L2] between L1 and L2.

In some embodiments, when multiple wireless sensing tasks may be/may need to be considered, a task-nonspecific score (i.e. general score) may be computed without consider task-specific setting/configuration/ requirement.

Clause 5220_A14. The method/device/system of quality evaluation of channel measurements for wireless sensing of clause 5220_A7: computing a task-nonspecific CI-timing rate score based on the ESR, without using the reference sounding rate of the wireless sensing task.

In some embodiments, in general, higher achievable EST is better and thus may have higher/larger score.

Clause 5220_A15. The method/device/system of quality evaluation of channel measurements for wireless sensing of clause 5220_A14: wherein the task-nonspecific CI-timing rate score is a monotonic non-decreasing function of the ESR.

In some embodiments, the score may have limited range (e.g. between 0 and 1) and thus clipping may be applied to clip at the min or max values.

Clause 5220_A16. The method/device/system of quality evaluation of channel measurements for wireless sensing of clause 5220_A15: wherein the monotonic non-decreasing function comprise a clipping function.

In some embodiments, in aggregate, there may be some weighted quantities such as weighted sum, weighted average, weighted product. The weight may be related to how far the individual values from the mean value. In some embodiments, a value very far away from the mean value may likely be an outlier and thus the weight may be less. A value close to the mean may likely not be outlier and thus the weight may be larger.

Clause 5220_A17. The method/device/system of quality evaluation of channel measurements for wireless sensing of clause 5220_A7: wherein a weight for a measurement in a weighted aggregate is a decreasing function of an absolute distance between the measurement and another aggregate In some embodiments, in addition to ESR and whether it is close to reference sound rate or not, it may be useful to measure how fluctuating/varying/variable is the CI timing. In some embodiments, some effective variation (e.g. variance) may be computed.

Clause 5220_A18. The method/device/system of quality evaluation of channel measurements for wireless sensing of clause 5220_A6: computing a CI-timing variation based on the plurality of instantaneous inter-CI durations for the sliding time window, wherein the CI-timing variation comprise an effective variation (EV), wherein any EV comprise at least one of: variance, standard deviation, absolute deviation, variation, total variation, absolute variation, square variation, derivative, range, range between two percentiles (e.g. 10% and 90%), inter-quartile range, spread, dispersion, variability, divergence, entropy, skewness, kurtosis, coefficient of variation, maximum-to-minimum ratio, a combination, an aggregate of the above; computing a CI-timing regularity score for the wireless sensing task based on the CI-timing variation.

In some embodiments, effective variation may be computed for instantaneous inter-CI duration.

Clause 5220_A19. The method/device/system of quality evaluation of channel measurements for wireless sensing of clause 5220_A18: computing a first CI-timing variation as an EV of the instantaneous inter-CI durations.

In some embodiments, effective variation may be computed for instantaneous rate (inverse of inter-CI duration).

Clause 5220_A20. The method/device/system of quality evaluation of channel measurements for wireless sensing of clause 5220_A18: computing a second CI-timing variation as an EV of the instantaneous rate, wherein the instantaneous rate is an inverse of the instantaneous inter-CI duration.

In some embodiments, while EV may compute deviation from mean, the system may compute deviation from reference sounding rate (or reference inter-CI duration) related to the wireless sensing task.

Clause 5220_A21. The method/device/system of quality evaluation of channel measurements for wireless sensing of clause 5220_A18: computing a third CI-timing variation as a task-specific deviation of instantaneous rate from the task-specific reference sounding rate which is a monotonic non-decreasing function of the absolute difference between the instantaneous rate and the reference sounding rate, where the instantaneous rate is an inverse of the instantaneous inter-CI duration.

Clause 5220_A22. The method/device/system of quality evaluation of channel measurements for wireless sensing of clause 5220_A18: computing a fourth CI-timing variation as a task-specific deviation of instantaneous inter-CI duration from a task-specific reference inter-CI duration which is a monotonic non-decreasing function of the absolute difference between the instantaneous inter-CI duration and the task-specific reference inter-CI duration, wherein the reference inter-CI duration is an inverse of the reference sounding rate.

In some embodiments, when multiple CI-timing variations are computed, they may be combined/aggregated to form another (combined) CI-timing variation.

Clause 5220_A23. The method/device/system of quality evaluation of channel measurements for wireless sensing of clause 5220_A18: computing a plurality of CI-timing variation based on the plurality of instantaneous inter-CI durations for the sliding time window; computing another CI-timing variation as an aggregate of a plurality of CI-timing variation.

In some embodiments, in a special case, a same CI-timing variation may be computed for concurrent/contemporary windows with different window lengths/durations to generate a plurality of CI-timing variation. Such concurrent/contemporary windows may have at least one common time stamp. In some embodiments, the plurality of CI-timing variation may be combined/aggregated to form a new/combined CI-timing variation, associated with the at least one common time stamp. In some embodiments, a special case: a long concurrent window may totally encompass/contain/comprise a short concurrent window.

Clause 5220_A24. The method/device/system of quality evaluation of channel measurements for wireless sensing of clause 5220_A23, comprising: computing a plurality of CI-timing variation based on a number of concurrent sliding time windows each with respective durations, each CI-timing variation computed based on a respective concurrent sliding time window with respective duration; computing another CI-timing variation as an aggregate of the plurality of CI-timing variation.

Clause 5220_A25. The method/device/system of quality evaluation of channel measurements for wireless sensing of clause 5220_A24: wherein the number of concurrent sliding time windows share a common time stamp; wherein the another CI-timing variation is associated with the common time stamp.

Clause 5220_A26. The method/device/system of quality evaluation of channel measurements for wireless sensing of clause 5220_A25: wherein at least two concurrent sliding time windows have different durations.

Clause 5220_A27. The method/device/system of quality evaluation of channel measurements for wireless sensing of clause 5220_A26: wherein one of the at least two concurrent sliding time windows is a subset of another one of the at least two concurrent sliding time windows.

In some embodiments, any CI-timing variation may be normalized (e.g. EV of observable X divided by mean of X).

Clause 5220_A28. The method/device/system of quality evaluation of channel measurements for wireless sensing of clause 5220_A18: normalizing the CI-timing variation by dividing the respective EV by a respective CI-timing mean computed based on the plurality of instantaneous inter-CI durations for the sliding time window, wherein the respective CI-timing mean comprise an aggregate.

In some embodiments, CI-timing rate score and CI-timing regularity score may be combined to form a new/combined CI-timing score.

Clause 5220_A29. The method/device/system of quality evaluation of channel measurements for wireless sensing of clause 5220_A18: computing a CI-timing score as an aggregate of CI-timing rate score and CI-timing regularity score.

In some embodiments, in addition to CI timing, the goodness/qualification of TSCI in relation magnitude of CI may be investigated/monitored/computed/analyzed. Good TSCI may have low variation/variability/variance. Bad TSCI may have large variation/variability/variance. In some embodiments, a CI-amplitude regularity score may be computed based on the CI-amplitude variation. Large variation may give low regularity score.

Clause 5220_A30. The method/device/system of quality evaluation of channel measurements for wireless sensing of clause 5220_A18: computing a CI-amplitude variation as an EV of a magnitude of each CI of the TSCI in the sliding time window; computing a CI-amplitude regularity score based on the CI-amplitude variation.

In some embodiments, CI magnitude may be L-k norm (e.g. L1/L2/L3/../Lk norm), or L-k norm square of CI vector.

Clause 5220_A31. The method/device/system of quality evaluation of channel measurements for wireless sensing of clause 5220_A30: wherein each CI comprises N1 components; wherein each CI is represented as a vector with the N1 components; wherein the magnitude of each CI is a function of an L-k norm of the vector of the CI, with k being a positive integer.

Clause 5220_A32. The method/device/system of quality evaluation of channel measurements for wireless sensing of clause 5220_A31: wherein the magnitude of each CI is the L-k norm of the vector of the CI.

Clause 5220_A33. The method/device/system of quality evaluation of channel measurements for wireless sensing of clause 5220_A31: wherein the magnitude of each CI is a square of the L-k norm of the vector of the CI.

In some embodiments, for good/qualified TSCI, CI-amplitude should have a largest cluster of CI magnitude much bigger (i.e. with much/significantly larger cluster size) than the second largest cluster. In some embodiments, clustering may be performed to find largest and second largest clusters. CI-amplitude clustering feature may be quotient (or ratio) of second largest cluster size over/to largest cluster size.

Clause 5220_A34. The method/device/system of quality evaluation of channel measurements for wireless sensing of clause 5220_A30: wherein each CI comprises N1 CI components (CIC); wherein each CI is represented a N1-dimensional (N1-D) vector in a N1-D vector space, the N1-D vector comprising the N1 CIC of the CI; clustering the CI of the TSCI in the N1-D vector space to obtain a set of clusters; identifying the largest cluster with largest cluster size among the set of clusters; identifying the second largest cluster with second largest cluster size among the set of clusters; computing a CI-amplitude clustering feature as a quotient of the cluster size of the second largest cluster over the cluster size of the largest cluster; computing a CI-amplitude clustering score based on the CI-amplitude clustering feature.

Clause 5220_A35. The method/device/system of quality evaluation of channel measurements for wireless sensing of clause 5220_A34: computing a CI-amplitude score as an aggregate of the CI-amplitude regularity score and the CI-amplitude clustering score.

In some embodiments, in wireless sensing applications, a basic/fundamental sensing task is motion detection. A motion statistics may be computed, such as TRRS (time reversal resonance strength), or similarity score/inner product of CI-vector of two temporally adjacent CI, autocorrelation function (ACF) evaluated at one sampling period. In some embodiments, in good/qualified TSCI, the in-motion motion statistics computed from TSCI obtained during large/significant user motion (e.g. user walking next to TX or RX) should have Gaussian/normal distribution. In some embodiments, thus an in-motion MS-distribution feature may be computed as a statistic distance, such as Kullback-Leibler (KL) divergence between sample distribution of motion statistics and Gaussian distribution.

Clause 5220_A36. The method/device/system of quality evaluation of channel measurements for wireless sensing of clause 5220_A35: computing a sample distribution of CI magnitude vector and corresponding sample mean and sample variance; computing a statistical distance between the sample distribution and a Gaussian distribution with mean being the sample mean and variance being the sample variance, wherein the statistical distance comprises one of: Kullback-Leibler distance, relative entropy, f-divergence, discriminability index, Bhattacharyya distance, Jensen-Shannon divergence, Renyi divergence, total variation distance, Hellinger distance, Levy-Prokhorov metric, Wasserstein metric, Mahalanobis distance, Amari distance, or integral probability metric; computing an in-motion MS-distribution score based on the statistical distance.

In some embodiments, for good/qualified TSCI, MS should have a high likelihood/probability to be greater than a reference threshold to enable detection of user motion when there is user motion.

Clause 5220_A37. The method/device/system of quality evaluation of channel measurements for wireless sensing of clause 5220_A36: computing an in-motion MS likelihood based on the in-motion sample distribution of CI magnitude vector, the in-motion MS likelihood being that the MS greater than a reference threshold when there is user motion, wherein the reference threshold is a task-specific threshold for a supplementary motion detection task; computing an in-motion MS-likelihood score based on the in-motion MS likelihood.

In some embodiments, for good/qualified TSCI, MS should have a high likelihood/probability to be less than a reference threshold to enable detection of no user motion when there is no motion.

Clause 5220_A38. The method/device/system of quality evaluation of channel measurements for wireless sensing of clause 5220_A36: computing a no-motion MS likelihood based on the sample distribution of CI magnitude vector, the no-motion MS likelihood being that the MS magnitude less than the reference threshold when there is no user motion, wherein the reference threshold is a task-specific threshold for a supplementary motion detection task; computing a no-motion MS-likelihood score based on the no-motion MS likelihood.

In some embodiments, for good/qualified TSCI, the tailedness of MS (kurtosis) should be equal to that of Gaussian distribution.

Clause 5220_A39. The method/device/system of quality evaluation of channel measurements for wireless sensing of clause 5220_A36: computing a in-motion MS-tailedness based on the sample distribution of CI magnitude vector, the in-motion MS-tailedness being the kurtosis of the sample distribution; computing a deviation of the in-motion MS-tailedness with a tailedness of a Gaussian distribution, computing an in-motion MS-tailedness score based on the in-motion MS-tailedness.

Clause 5220_A40. The method/device/system of quality evaluation of channel measurements for wireless sensing of clause 5220_A36: computing a MS score based on an aggregate of at least two of: in-motion MS-distribution score, in-motion MS-likelihood score, no-motion MS-likelihood score, or in-motion MS-tailedness score.

In some embodiments, when there are multiple TSCI, the analytics such as ESR, EV, CI-timing variation, CI-amplitude variation, CI-amplitude clustering feature/score, etc. may be computed based on all the TSCI.

Clause 5220_A41. The method/device/system of quality evaluation of channel measurements for wireless sensing of clause 5220_A6: receiving multiple TSCI by the Type2 device based on the time series of received wireless sounding signal, wherein each TSCI is associated with a respective antenna of the Type1 device and a respective antenna of the Type2 device; computing a respective plurality of instantaneous inter-CI durations in the sliding time window based on the multiple TSCI, each plurality of instantaneous inter-CI duration computed from respective TSCI, each inter-CI duration being computed by subtracting time stamps of a respective pair of temporally adjacent CI of respective TSCI in the sliding time window, computing the ESR for the sliding time window based on the multiple plurality of instantaneous inter-CI durations.

In some embodiments, the present disclosure discloses device-free or passive WiFi-based indoor tracking, which is favored for its user-friendliness, as it does not require a carried device. CSI-based fingerprinting may be used in tracking due to

its ability to provide detailed and unique signal characteristics for precise position identification. Different aspects of CSI can be used for fingerprinting, including the amplitudes of each subcarrier, the square sum of CSI amplitudes, and inter-subcarrier phase differences. Due to the complexity and volume of these features, learning-based methods can be used for efficient analysis. But a practical use of learning-based tracking methods is limited because they often struggle with generalization across different environments and subjects, necessitating a large and frequently updated database to remain effective. Additionally, the significant computational resources and extensive labor required for data collection restrict their widespread deployment.

In some embodiments, to reduce dependence on large datasets and extensive training, a passive WiFi-based tracking system is disclosed to leverage a location-discriminative signature resilient to environmental changes and user variability. A proximity-based signature can be used to combine user-to-device distance and motion continuity extracted from multiple transceiver links. With only single-shot training, the disclosed system can accurately track user locations passively. Its architecture aligns naturally with real-world WiFi deployments, providing a practical, scalable, and training-efficient solution for indoor tracking.

In some embodiments, a novel passive proximity-based indoor tracking system is disclosed to achieve decent performance with minimal training data. The system needs only a single one-shot route training session by one user, and can adapt seamlessly to different users with varied walking speeds. Additionally, the overall system design is lightweight, facilitating easier implementation and scalability.

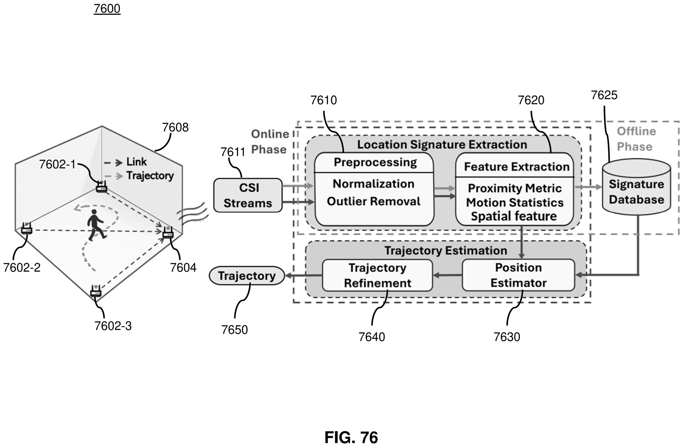

FIG. 76 illustrates an example framework of a system 7600 for wireless tracking, according to some embodiments of the present disclosure. As shown in FIG. 76, the system 7600 may collect CSI streams 7611 based on wireless signals transmitted from one or more IoT devices 7602-1, 7602-2, 7602-3 (collectively 7602) to a router 7604. In general, the CSI 7611 may be any channel information (e.g. CSI, CFR, CIR, etc.) collected based on wireless signals transmitted from a transmitter to a receiver. In some embodiments, the transmitter may serve as a Bot (e.g. Type1 device), while the receiver may serve as an Origin (e.g. Type2 device). A Bot can transmit a wireless signal to the Origin in a venue 7608 (e.g. a house), to obtain channel information of a wireless multipath channel based on the wireless signal, where the channel information of the wireless multipath channel may be impacted by motion/presence of any object/user in the venue 7608.

As shown in FIG. 76, the system 7600 comprises two modules, location signature extraction and trajectory estimation. While the trajectory estimation module operates only during an online phase, the location signature extraction module can operate in both offline and online phases. In some embodiments, the location signature extraction includes a preprocessing module 7610 and a feature extraction module 7620. In some embodiments, the trajectory estimation includes a position estimator 7630 and a trajectory refinement module 7640.

In some embodiments, the preprocessing module 7610 may process the CSI 7611 to generate processed CSI. For example, the preprocessing module 7610 may apply median filtering and normalization to reduce noise and outlier, to ensure consistent CSI across links for metric extraction. Each link may correspond to a connection between a transmitter and a receiver, or a connection between a transmitting antenna and a receiving antenna.

In the example shown in FIG. 76, the feature extraction module 7620 can perform link-level feature extraction. For example, the feature extraction module 7620 may extract three features on each Transmitter (TX)-Receiver (RX) link: proximity metric (PM), motion statistics (MS), and spatial feature.

In some examples, the proximity metric measures the user's distance to the device, and may be extracted based on the correlation of CSI amplitudes across subcarriers in frequency domain, which reflects relative nearness to devices and remains robust across users and environments. Each TX-RX link can yield a value that increases when the user is nearby and approaches zero when far. With multiple deployed pairs, the concatenated metrics form a unique spatial signature at each location.

In some examples, the motion statistics quantifies motion intensity and may be derived from the temporal autocorrelation of CSI amplitudes. The motion statistics can capture the movement continuity, which remains near zero in static periods and rises during motion. By indicating the presence and continuity of motion, the motion statistic further enhances the robustness of the overall location signature.

In some examples, the spatial feature may be derived based on principal component analysis (PCA) components from concatenated CSI across all antenna pairs, to represent location related characteristics of the object.

The proximity metric, the motion statistics and the spatial features extracted from each link can all be aggregated by concatenating the individual features into a unified multi-dimensional feature vector. This resulting vector may serve as a location signature, capturing both spatial and temporal characteristics of the user's position and movement. During an offline phase of the system, the location signature is generated based on a tester's movement in the venue 7608 and may be stored in a signature database 7625 for online use. During an online phase of the system, the location signature is generated based on a user's movement, and will be utilized by the trajectory estimation module to tracking the user's movement.

During the online inference phase, the position estimator 7630 may compute the user's position signature by processing live CSI data. This signature is then compared against the pre-built signature database 7625 of location signatures to estimate the user's current position.

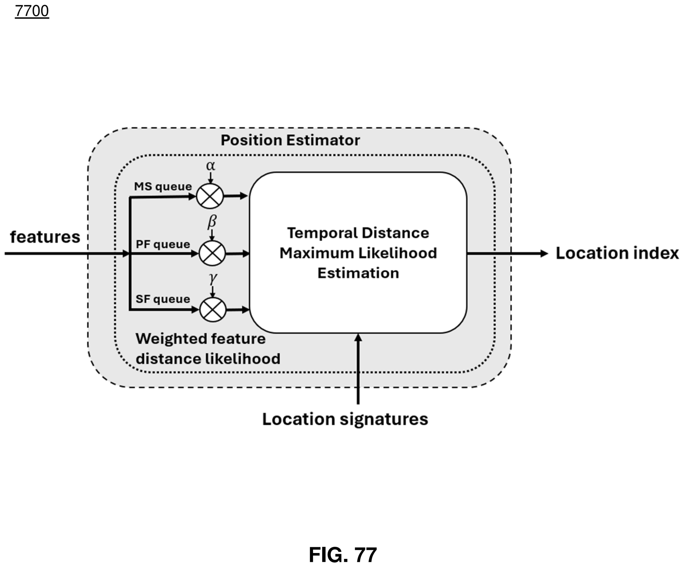

FIG. 77 illustrates an example position estimator 7700 in a system for wireless tracking, according to some embodiments of the present disclosure. In some embodiments, the position estimator 7700 may be implemented as the position estimator 7630 in the system 7600. As shown in FIG. 77, the motion statistics (MS) features, the proximity metric features, and the spatial features extracted per link can be combined with different weights, $\alpha, \beta, \gamma$, respectively, to generate a weighted feature combination. The weights are tunable based on user feedback and system performance. The position estimator 7700 may perform a temporal distance maximum likelihood estimation based on the weighted feature combination generated online and the location signatures generated and stored offline. For example, the weighted feature combination may be compared with the location signatures to generate a weighted feature distance likelihood, which can be used to estimate a location index on a signature map of the venue 7608. Each location on the signature map corresponds to a location in the venue 7608, and the location index indicates a corresponding location on the signature map. By tracking a location of the user at each time stamp, the user's trajectory may be obtained over time.

In some embodiments, relying solely on signature matching can result in erratic jumps between non-adjacent locations due to noise and transient fluctuations. To enhance tracking accuracy, the trajectory refinement module 7640 may be used to enforce spatial continuity by selecting the most probable path over a sliding time window. This can be achieved using a maximum likelihood approach, which smooths the trajectory and ensures more reliable position estimates.

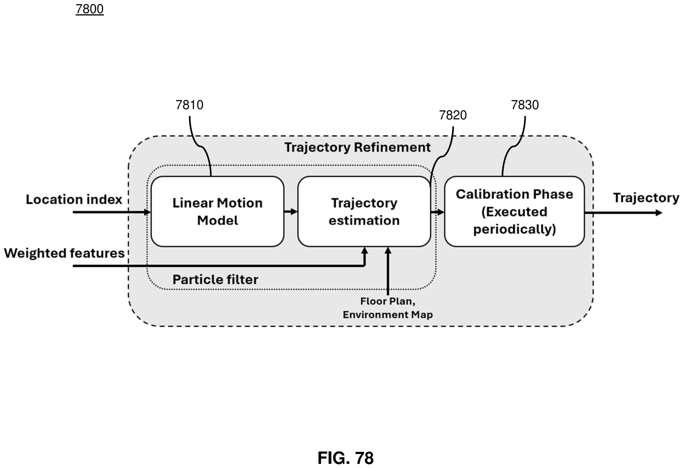

FIG. 78 illustrates an example trajectory refinement module 7800 in a system for wireless tracking, according to some embodiments of the present disclosure. In some embodiments, the trajectory refinement module 7800 may be implemented as the trajectory refinement module 7640 in the system 7600. As shown in FIG. 78, the trajectory refinement module 7800 includes a linear motion model 7810, a trajectory estimation module 7820 and a calibration phase executor 7830.

In some embodiments, the linear motion model 7810 receives a location index, which may be an initial location index generated by the position estimator 7700 or the position estimator 7630, for each time stamp by a current time stamp in a time window. The linear motion model 7810 can fit the initial location indices over time to generate a refined location index for the current time stamp based on an assumption of a continuous moving path of the object in the venue 7608. The trajectory estimation module 7820 may then generate the updated location index for the current time stamp based on: the refined location index, the weighted feature combination generated by the position estimator 7700 or the position estimator 7630, and one or more floor plan constraints or environment map associated with the venue 7608. As such, the linear motion model 7810 and the trajectory estimation module 7820 form a particle filter to refines the tracking results, reducing the likelihood of sudden, unrealistic changes in estimated locations and enhancing overall tracking accuracy.

In some embodiments, the calibration phase executor 7830 may perform a calibration periodically or upon a detected event. For example, the calibration phase executor 7830 may determine that the object or user stops at a same location for longer than a predetermined time period based on the updated location index over the time window. This may indicate that the updated location index generated by the particle filter is not reliable at this time. Then, the calibration phase executor 7830 may determine that the object is in close proximity to a device (e.g. the IoT devices 7602, the router 7604) for the current time stamp, with a confidence level higher than a predetermined threshold. At this point, the calibration phase executor 7830 is more confident about the object's location in close proximity to the device, than the location generated by the particle filter. As such, the calibration phase executor 7830 may perform a calibration or re-calibration to generate a calibrated location index for the current time stamp based on the close proximity and the confidence level, and replace the updated location index with the calibrated location index for the current time stamp. Combining all location indices (updated or calibrated) for all time stamps, a trajectory 7650 of the moving object or user can be obtained.

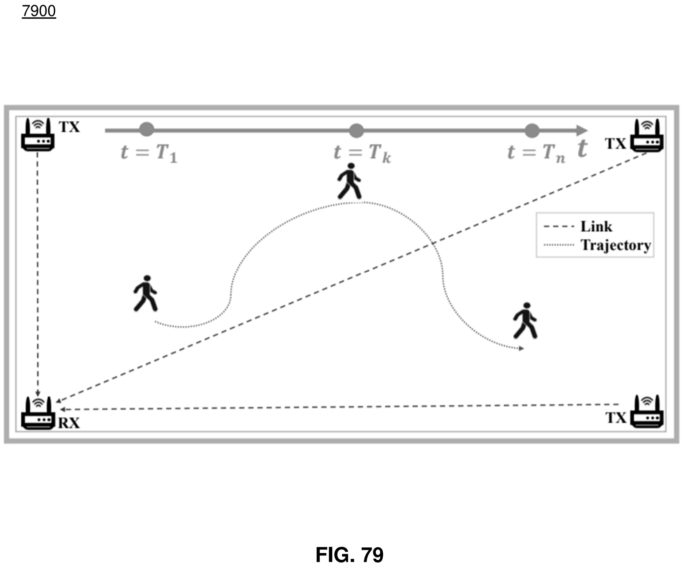

In some embodiments, the system may employ a single RX and multiple TXs, strategically positioned throughout the indoor space to ensure comprehensive coverage across designated areas and enrich the data with diverse characteristics for more robust tracking. FIG. 79 illustrates a scenario 7900 of indoor tracking based on wireless signals, according to some embodiments of the present disclosure.

There are some main challenges of passive WiFi-based indoor tracking systems. First, CSI measurements are extremely sensitive to environmental dynamics. Consequently, the features directly extracted from CSI in the fingerprint database must be updated frequently. For instance, changes such as relocating furniture or altering the state of doors can significantly impact CSI measurements. In addition, variations in body size or walking patterns may also result in distinct CSI measurements. These changes can alter the signal characteristics captured in the fingerprint, leading to potential mismatches and inaccuracies. Second, CSI fingerprint-based systems face significant scalability challenges when applied to a large number of different buildings. This necessitates extensive data collection and calibration for each new building, making the process time-consuming and resource-intensive. Third, the lack of path flexibility in existing systems is a major limitation. These approaches typically require users to follow predefined paths to maintain accuracy, which heavily restricts their movements. Such restriction is not piratical as the user path is not predictable.

As discussed above, to tackle these challenges, one can resort to a statistical proximity metric derived from CSI. This metric serves as a location-specific signature that effectively captures the distance between a human and a device. Different from the features directly extracted from raw CSI, the proximity metric is fundamentally based on radio propagation principles, taking into account the influence of moving individuals on the signal. Consequently, it can precisely capture the movements of these individuals while remaining unaffected by static objects in the environment. This specificity ensures the metric's robustness and adaptability across diverse settings.

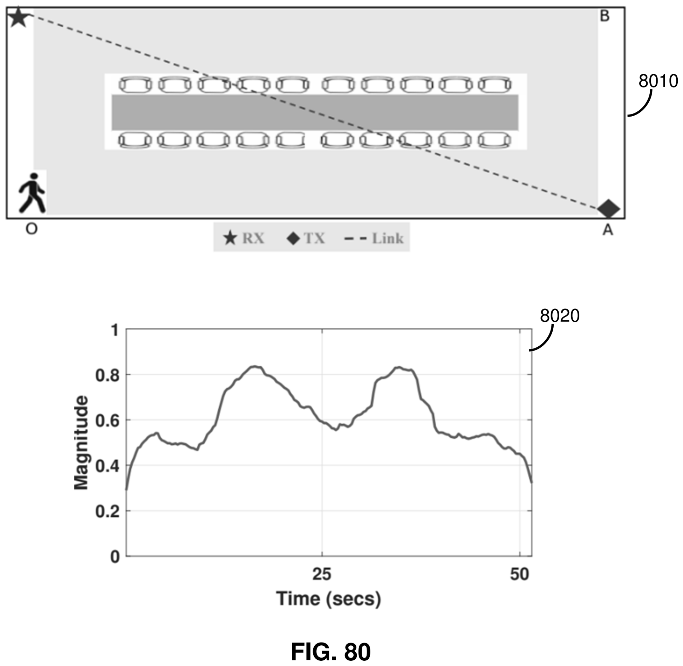

Based on the CSI propagation model, a moving human can be considered as a virtual transmitter. As this virtual transmitter approaches RX, the LOS signal between the virtual antenna and the RX becomes the dominant component of the propagation, with its power increasing while the power of the NLOS components rapidly decays. The dominance of the LOS components results in an increased space-frequency correlation, which measures the correlation of power responses across subcarriers. Conversely, as the virtual transmitter moves away from the RX, the primary LOS component's influence diminishes due to amplitude attenuation. Meanwhile, the amplitudes of the reflected and scattered signals relative to the direct path increase, which in turn leads to a decrease in space-frequency correlation. Therefore, the value of the correlation of power response of subcarriers can be utilized to indicate the distance between the moving human and the RX. FIG. 80 depicts a scenario 8010 where a tester walks from point O to A, then to B, returns to A, and finally back to O. It can be observed that the proximity metric 8020 depicted in FIG. 80 increases as the tester approaches A and decreases as the tester moves away.

Although the proximity metric can indicate whether a human is moving closer to or farther from the RX, it is unable to determine the specific location because it only assesses proximity, not precise positioning. To address this limitation, one can deploy multiple devices throughout the environment to ensure comprehensive coverage. Each device-pair contributes its own proximity metric. By aggregating these metrics, the system can synthesize a robust location signature that more accurately represents the spatial dynamics within the area. This integrated approach enhances the system's ability to pinpoint exact locations based on collective proximity metrics, offering a more detailed and accurate spatial analysis.

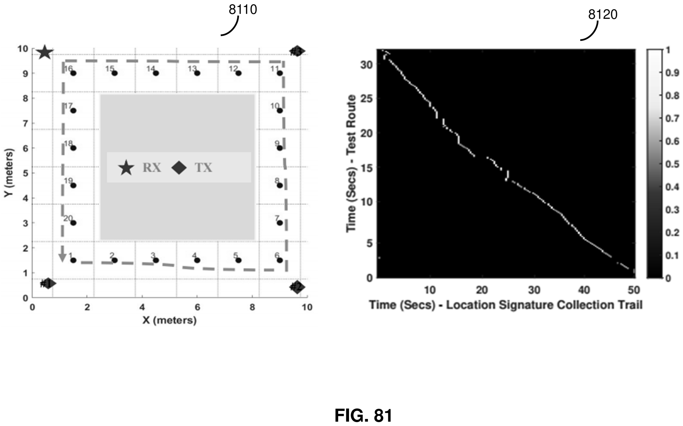

One can conduct experiments to verify the concept. FIG. 81 illustrates an example floor plan 8110 and corresponding location signature matching over time, according to some embodiments of the present disclosure. As a person approaches or moves away from a device, e.g. in a room having the floor plan 8110, the proximity metrics from all three TX-RX pairs dynamically capture location changes. To demonstrate its effectiveness, one can conduct a reversed, counterclockwise test route with a different tester at an increased speed of 1 m/s. The observation vector from each timestamp of the test route can be correlated with the location signature to identify the time index with the highest correlation. These points were then highlighted on a heatmap 8120, illustrated in FIG. 81. The results clearly show that the collective proximity metrics from multiple TX-RX pairs effectively reflect the motion location within a room, enabling accurate tracking of a person. Additionally, because the feature effectively characterizes motion and is insensitive to static subjects and environments, the system can significantly reduce the training overhead required by most existing methods.

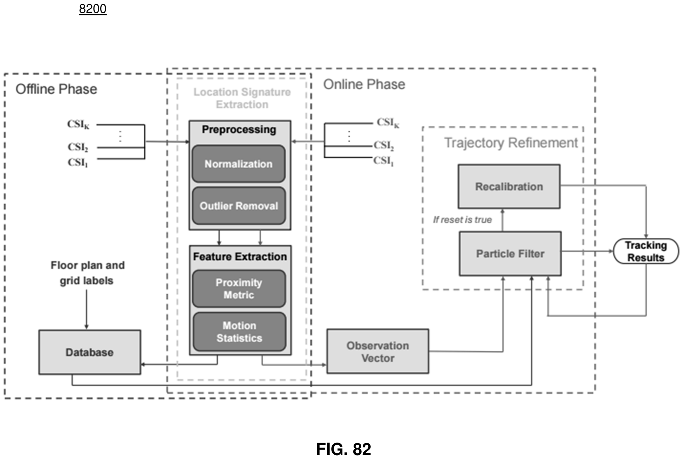

FIG. 82 illustrates an overview of a system 8200 for wireless tracking, according to some embodiments of the present disclosure. As discussed similarly to the system 100, the system 8200 operates in two phases: offline and online. In both phases, the location signature extraction module first preprocesses CSI streams from all transceiver pairs through normalization and outlier removal. It then extracts the motion-related features to build location signature from the preprocessed CSI. In the offline phase, these signatures are labeled with corresponding locations/grids to form the signature database. In the online phase, the signature database and the floor plan are utilized in the trajectory refinement module, which includes a particle filter and a recalibration module, to enhance tracking accuracy.

In some examples, the location signature creation process involves CSI preprocessing and feature extraction. The system 8200 can preprocess the CSI power response, i.e., $G(t, f) = |H(t, f)|^2$. The normalized power response of the $i^{th}$ subcarrier of the $k^{th}$ TX-RX pair, denoted as $\overline{G}_k(t, f_i))$, is expressed as

$$\bar{G}_k(t, f_i) = \frac{G_k(t, fi)}{\sqrt{\sum_{j=1}^{N_s} |G_k(t, f_j)|^2}},$$

where $N_s$ is the number of subcarriers.

In some examples, the proximity metric of the $k^{th}$ TX-RX pair can be computed as

$$\Theta_k = \frac{1}{N_s - 1} \sum_{i=1}^{N_s - 1} r_k(f_i, f_{i+1}),$$

$$r_k(f_i, f_{i+1}) = \frac{COV\{\bar{G}_k(t, f_i), \bar{G}_k(t, f_{i+1})\}}{\sqrt{var\{\bar{G}_k(t, f_i)\}}\sqrt{var\{\bar{G}_k(t, f_{i+1})\}}},$$

where $r_k(f_i, f_{i+1})$ is the correlation coefficient between the CSI power response of the $i^{th}$ and the i + $1^{th}$ subcarrier for the $k^{th}$ TX-RX pair.

Although the collective proximity metrics from all pairs can effectively characterize motion location, the distinctiveness of these measurements can sometimes be compromised by noise and external interference. In some examples, the system 8200 can further refine the location signature by integrating an additional statistical feature, motion statistics, based on a statistical Electromagnetic model that accounts for all multipath components indoors. The motion statistics for the $i^{th}$ subcarrier for the $k^{th}$ TX-RX pair is derived from the ACF of the CSI power response at a time lag $\tau = 1/F_s$, with $F_s$ being the sounding rate. That is,

$$\Phi_k(f_i) = \rho_k\left(\tau = \frac{1}{F_s}, f_i\right),$$

$$\rho_k(\tau, f_i) = \frac{COV\{\bar{G} + k(t, f_i), \bar{G}_k(t + \tau, f_i)\}}{\sqrt{var\{\bar{G}_k(t, f_i)\}}\sqrt{var\{\bar{G}_k(t + \tau, f_i)\}}},$$

where $COV$ and $var$ are the operator of covariance and vairance respectively, and $\rho_k(\tau, f_i)$ is the ACF of the power response of the $i^{th}$ subcarrier for $k^{th}$ TX-RX pair.

In some examples, in the absence of motion, $\Phi(f_i)$ is approximately zero, while $\Phi(f_i) > 0$ when motion is present. Moreover, the magnitude of $\Phi(f_i) > 0$ can also serve as an indicator of the motion's proximity to the device, reflecting the variation in motion values across different locations within the environment. This variation helps to pinpoint the motion's specific location relative to the device.

In some examples, the overall time-domain motion statistics $\Phi_j$ of the $j^{th}$ TX-RX pair can be defined by averaging across all subcarriers, smoothing transient noise and minor variations to provide a more consistent indicator of sustained motion within the environment.

For each grid, the system 8200 can compile a set of location signature by aggregating both proximity metrics and motion statistics from all TX-RX pairs. This set is designed to encompass at least two stride patterns within the grid, enhancing the diversity and robustness of the location signature captured. Specifically, for a setup with K TX-RX pairs, the location signature of the $i_{th}$ grid, $\mathcal{F}_{i^{th}}$, are as

$$\mathcal{F}_{i^{th}} = \left\{ \begin{matrix} [\Phi_{1,1}, \dots, \Phi_{K,1}, \Theta_{1,1}, \dots, \Theta_{K,1}]_{i'} \\ \vdots \\ [\Phi_{1,M}, \dots, \Phi_{K,M}, \Theta_{1,M}, \dots, \Theta_{K,M}]_{i} \end{matrix} \right\},$$

where M is the number of the fingerprints for the $i^{th}$ grid.

The motion statistics and the proximity metric can capture the user's movement along the route. Each TX-RX pair effectively indicates whether the user is approaching or moving away. Collectively, these pairs construct a location-specific signature that accurately reflects user movement.

In some examples, during the offline phase, these vectors are used to build a database of labeled signatures for all predetermined grids. In the online phase, the feature vectors (observation vectors) serve as the input to the trajectory refinement module for tracking.

In some embodiments, using only location signatures for position tracking can lead to erratic estimation jumps due to noise and other disturbances, which is not consistent with the expected continuous movement of individuals across adjacent grids. As a tester walks clockwise along the perimeter of the room, the estimated positions over time may be marked on the floor plan. There are abrupt jumps in the tracking results. This example highlights the erratic nature of the tracking results, where the estimated positions suddenly jump to non-adjacent grid points, illustrating a significant challenge in maintaining a smooth trajectory estimation. Therefore, to address these inaccuracies and ensure a more realistic tracking of human motion, the system 8200 incorporate a particle filter. This filter employs a motion model that reflects the natural progression through adjacent grids and utilizes the floor plan to determine accessible areas. By integrating these elements, the particle filter refines the tracking results, reducing the likelihood of sudden, unrealistic changes in estimated locations and enhancing overall tracking accuracy.

In some examples, the particle filter performs particle initialization, by distributing N particles within the grid point where the location signature most closely matches the observation vector when the person begins walking. Using a motion model, the position of the $i^{th}$ particle at time $t$, ( $x_t^i, y_t^i$ ) is updated as follows

$$x_t^i = x_{t-1}^i + (l_t + \delta^i)\cos(\eta_t^i)$$
$$y_t^i = y_{t-1}^i + (l_t + \delta^i)\sin(\eta_t^i),$$

where $\delta^i$ and $l_t$ is Gaussian random noise and the step size receptively. $\eta_t^i$ denotes the direction of the $i^{th}$ particle. The system 8200 can restrict $\eta_t^i$ to one of four directions to facilitate efficient computation and robust tracking. Any updated particle that hits a wall or obstacle will be eliminated.

In some examples, the particle filter performs particle weighting, where particle weights are updated by calculating the minimum distance between each particle's location signature and the observation vector. For example, if the $i^{th}$ particle is in grid j at time t, the weight can be computed as

$$w_t^i = \frac{e^{-d_i^2/2}}{\sum_k e^{-d_k^2/2}},$$

$$d_i^2 = \min_{k \in M} \sum_i^K (\widehat{\Phi}_{i,k} - \Phi_{i,k})^2 + (\widehat{\Theta}_{i,k} - \Theta_{i,k})^2$$

where $d_j$ is the minimum weighted distance between the observation, i.e., $\hat{\Phi}$ and $\hat{\Theta}$ and the observation vector for grid $j$.

In some examples, the particle filter performs resampling and position update, by using the classical sequential importance resampling approach to update the current particles, regenerating eliminated particles to prevent over-concentration. Next, the weighted positions of the particles are calculated and output as the estimated position.

During the particle weighting process, the system 8200 employs a temporal window to record the minimum distance between the location signature of each particle and the observation vector. This approach is strategically designed to effectively reduce displacement errors that might accumulate over time due to inaccuracies inherent in the motion model of the particle filter. In some examples, accumulated errors can be caused by the motion model. Starting at a time stamp, the estimated grid indices fluctuate between e.g. 9 and 11. This oscillation in the estimated positions can be attributed to the particle motion model within the tracking system.

In some embodiments, recalibration is utilized to manage these errors effectively by employing a temporal window that compares the current observation feature vector with the location signature. If they closely match, it strongly suggests that the current position is accurately represented by this grid. Consequently, the system can recalibrate by resetting the particles to this specific grid, enhancing the tracking accuracy and preventing the propagation of previous errors. Specifically, if the average minimum distance across this window exceeds a predefined threshold, it triggers a recalibration of the estimated position. In such cases, the estimated position is reset to the grid point where the minimum distance between the location signature of any particle and the observation vector is the smallest. This method ensures greater accuracy in position estimation by adapting to significant discrepancies that might arise due to noise or other factors affecting the measurements.

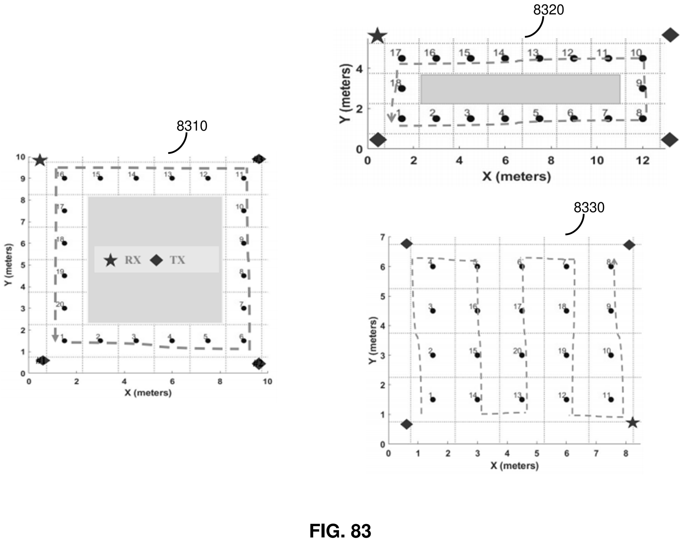

Various experiments can be performed to assess the performance of the disclosed system. In some examples, the disclosed system may be evaluated using commodity WiFi devices, serving as TX and RX. For example, the system can be operated at carrier frequency 5.18 GHz with a sounding rate of 30 Hz and a bandwidth of 40 MHz with 58 subcarriers. In some examples, experiments can be conducted in three different indoor environments, each with varying dimensions and featuring various appliances and furnishings. For example, the dimensions of the scenarios are 10.6m × 9.8m, 14m × 5m, and 7.1m × 8.2m, respectively. In each scenario, four devices (1 RX and 3 TXs) are positioned at room corners at standard desk height (0.6m to 1.2m). FIG. 83 shows the floor plans 8310, 8320, 8330 of the three rooms. Each room may be divided into 1.5m × 1.5m grids, a size selected to match approximately 2 normal walking strides, ensuring that the features captured are diverse enough to accurately represent each location. Scenarios 8310, 8320 feature typical meeting rooms with movement restricted to the perimeter, illustrating common spatial constraints. In contrast, scenario 8330 shows an empty room allowing unrestricted movement, making it ideal for evaluating complex navigation patterns, including zigzag movements.

During the location signature collection trails, one can collect data from a tester who is instructed to walk continuously at his/her normal walking pace following a predetermined route marked dashed lines. In some examples, the offline location signature trails can be conducted only once for each scenario.

Various metrics can be used to evaluate the system, e.g. Grid Localization Accuracy (GLA), defined as the ratio of correctly estimated testing cells to the total number of cell locations during the estimation phase, or Median Distance Error (MDE), which is the average distance between the center points of the estimated and actual grids. The results can show that the system performs well in terms of both metrics, even with the limited training resources of a single-shot location signature trial. This high performance highlights the effectiveness of the disclosed method's reliable proximity-based signature approach. Further, the results show that the disclosed system does not have specific bandwidth requirements. This is due to a fact that the utilized features primarily rely on the dominant LOS signal between the moving human and the RX. Since the LOS signal is less susceptible to multipath interference, the performance of the system is largely unaffected by bandwidth variations. In addition, the results can demonstrate that utilizing a combination of features (e.g. proximity metric, motion statistics, spatial feature) significantly enhances performance compared to using a single feature. This improvement is attributed to the increased distinctiveness of the location signature set.

As discussed above, a passive proximity-based indoor tracking system is disclosed to leverage advanced statistical techniques to enhance location accuracy. In some embodiments, the system lies in the use of proximity metrics combined with motion statistics through multiple TX-RX pairs, which together form a robust location signature feature set. This integration not only captures the distance level between the tracked individual and the receiver but also accounts for the dynamic nature of human movement. The system also incorporates a particle filter, which is vital for smoothing tracking trajectories. This filter uses temporal dependencies to ensure movement continuity and integrates floor plan constraints to correct drifts and errors from motion modeling and environmental fluctuations. Extensive experiments in various real-world scenarios have demonstrated the system's capability to maintain high accuracy and reliability, making it a promising solution for indoor tracking applications.

In some embodiments, the disclosed framework leverages environment-independent, model-based features across multiple domains (time, frequency, and space) to construct location signatures derived from Wi-Fi channel state information (CSI) from N devices distributed in the environment, enabling the tracking of users without any carried devices in indoor environments. Unlike traditional deep learning or machine learning approaches that directly train on raw CSI data for feature learning, the disclosed system leverages theoretically grounded features. This design significantly can reduce the training overhead and eliminate the need for a large, diverse dataset collected from multiple users with varying body sizes and walking patterns.

In some embodiments, the system employs a weighted distance-metric maximum-likelihood estimation process that aggregates likelihood information over a temporal window rather than a single observation, enabling more consistent and reliable association between user observations and stored location signatures for initial position estimation. The system also introduces a particle filter-based refinement approach designed to incorporate floor plan constraints and motion continuity, effectively mitigating abrupt and unrealistic position jumps to enhance the accuracy and smoothness of human motion trajectory estimation. The fusion of these model-based features enables the construction of environment-robust and discriminative location signatures from multiple distributed devices. The system performs weighted distance-metric maximum likelihood estimation for user-signature association. The system performs particle filter-based refinement integrating floor plan constraints and motion continuity.

In some embodiments, one can replace Wi-Fi CSI sensing with other wireless or non-radio modalities such as UWB, Bluetooth RSSI, infrared, acoustic, or vision-based sensing to generate spatial or motion-related signatures. Even within the Wi-Fi CSI domain, a system could derive different types of features that do not rely on the multi-domain model-based representation (spanning the time, frequency, and spatial domains, which correspond respectively to motion statistics, proximity features, and PCA-derived components from concatenated CSI across all antenna pairs). In some embodiments, the system could extract features only from one domain (e.g., temporal or spatial) or apply different aggregation schemes such as local per-device processing or centralized raw-data fusion, instead of multi-domain model-based fusion. In some embodiments, the weighted distance-metric maximum-likelihood estimation may be replaced with other matching or probabilistic approaches, such as k-nearest neighbor (k-NN) fingerprinting, Bayesian inference, neural regression, or graph-based matching, e.g. using Kalman filtering, trajectory optimization, or map-matching instead of a particle filter combined with floor plan and motion-continuity constraints. In some embodiments, a system can represent location information through alternative signatures, e.g., dynamic spectrograms, statistical channel features, or time-frequency templates rather than the model-based location signatures.

In some embodiments, while the system does not strictly require knowing the exact locations of the Wi-Fi devices, having this information is beneficial for the calibration phase. If devices are moved, the model may be retrained. However, if only some devices are moved, the system can still provide reasonable performance using the location signatures from the remaining, stationary devices, provided they still offer good environmental coverage.

In some embodiments, the system primarily focuses on human walking. But in other embodiments, it can be applied to tracking objects like a dog, a cat, or a robot, provided the movement generates a specific pattern. The concept can be applied to multiple people or multiple objects. Additionally, if furniture is moved in the room, the floor plan changes, and theoretically, the database should be updated to maintain accuracy.

In some embodiments, when three devices collect CSI, there are three sets of features including Proxy (PM), Motion Statistic (MS), and Special Feature (SF). For device calibration and feature estimation, discarding regression points that get the user tracking stuck.

In some embodiments, the present teaching discloses systems and methods for wireless tracking.

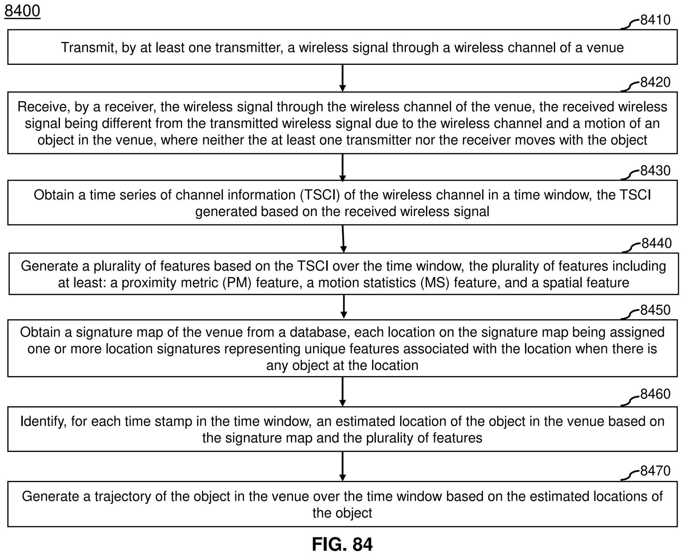

FIG. 84 illustrates a flow chart of an example method 8400 for wireless tracking, according to some embodiments of the present disclosure. In various embodiments, the method 8400 can be performed by any of the systems disclosed above. At operation 8410, a wireless signal is transmitted by at least one transmitter through a wireless channel of a venue. At operation 8420, the wireless signal is received, by a receiver, through the wireless channel of the venue. The received wireless signal differs from the transmitted wireless signal due to the wireless channel and a motion of an object in the venue. Neither the at least one transmitter nor the receiver moves with the object. At operation 8430, a time series of channel information (TSCI) of the wireless channel is obtained in a time window, The TSCI is generated based on the received wireless signal. At operation 8440, a plurality of features is generated based on the TSCI over the time window. The plurality of features includes at least: a proximity metric (PM) feature, a motion statistics (MS) feature, and a spatial feature. At operation 8450, a signature map of the venue is obtained from a database. Each location on the signature map is assigned one or more location signatures representing unique features associated with the location when there is any object at the location. At operation 8460, an estimated location of the object is identified in the venue, for each time stamp in the time window, based on the signature map and the plurality of features. At operation 8470, a trajectory of the object in the venue is generated over the time window based on the estimated locations of the object.

The following numbered clauses provide examples for wireless tracking.

Clause 3520_1. A system for wireless tracking, comprising: at least one transmitter configured to transmit a wireless signal through a wireless channel of a venue; a receiver configured to receive the wireless signal through the wireless channel of the venue, wherein the received wireless signal differs from the transmitted wireless signal due to the wireless channel and a motion of an object in the venue, wherein neither the at least one transmitter nor the receiver moves with the object; and a processor configured to: obtain a time series of channel information (TSCI) of the wireless channel in a time window, wherein the TSCI is generated based on the received wireless signal, generate a plurality of features based on the TSCI over the time window, wherein the plurality of features includes at least: a proximity metric (PM) feature, a motion statistics (MS) feature, and a spatial feature, obtain a signature map of the venue from a database, wherein each location on the signature map is assigned one or more location signatures representing unique features associated with the location when there is any object at the location, identify, for each time stamp in the time window, an estimated location of the object in the venue based on the signature map and the plurality of features, and generate a trajectory of the object in the venue over the time window based on the estimated locations of the object.

Clause 3520_2. The system of clause 3520_1, wherein the processor is configured to generate the plurality of features based at least partially by: computing a space-frequency correlation of channel information (CI) amplitudes of the TSCI across subcarriers over the time window; and generating the PM feature based on the space-frequency correlation for each time stamp in the time window, wherein the PM feature indicates a distance between the object and the receiver.

Clause 3520_3. The system of clause 3520_2, wherein the processor is configured to generate the plurality of features based at least partially by: computing a temporal autocorrelation of CI amplitudes of the TSCI over the time window; and generating the MS feature based on the temporal autocorrelation for each time stamp in the time window, wherein the MS feature indicates a motion continuity and a motion intensity of the object.

Clause 3520_4. The system of clause 3520_3, wherein the processor is configured to generate the plurality of features based at least partially by: performing a principal component analysis (PCA) on all CI of the TSCI to generate principal components; generating principal component data from the principal components based on at least one of: a ranking of the principal components, a weighted combination of some of the principal components, or a function of one or more of the principal components; and generating the spatial feature based on the principal component data for each time stamp in the time window, wherein the spatial feature indicates location related characteristics of the object.

Clause 3520_5. The system of clause 3520_4, wherein the processor is further configured to: during an offline phase of the system: collect the plurality of features during a tracking test in the venue; generate the signature map of the venue based at least partially by: for each corresponding location on the signature map, aggregating the plurality of features to generate a set of location signatures, and labeling the set of location signatures with the corresponding location; and store the signature map of the venue into the database before the TSCI is obtained.

Clause 3520_6. The system of clause 3520_5, wherein the processor is configured to identify the estimated location of the object in the venue based at least partially by: assigning a first weight to the PM feature; assigning a second weight to the MS feature; assigning a third weight to the spatial feature; computing a weighted combination of the PM feature, the MS feature, and the spatial feature based on their respectively assigned weights; and performing a temporal distance maximum likelihood estimation over the time window based on the weighted combination and the signature map, to determine an initial location index in the signature map associated with the estimated location of the object in the venue for each time stamp in the time window.

In some embodiments, the first weight is greater than the second weight and the third weight.

Clause 3520_7. The system of clause 3520_6, wherein the processor is configured to generate the trajectory of the object in the venue based at least partially by: generating an updated location index for a current time stamp in the time window, by refining the initial location index using a particle filter; performing a calibration phase of passive tracking, periodically or upon the object being stuck at a location for longer than a predetermined time period, to generate a calibrated location index for the current time stamp; and generating the trajectory of the object in the venue based on the updated location index and/or the calibrated location index for each time stamp in the time window.

Clause 3520_8. The system of clause 3520_7, wherein generating the updated location index for the current time stamp comprises: inputting the initial location index for each time stamp before the current time stamp in the time window into a linear motion model to generate a refined location index for the current time stamp based on an assumption of a continuous moving path of the object in the venue; and generating the updated location index for the current time stamp based on: the refined location index, the weighted combination of the plurality of features, and one or more floor plan constraints associated with the venue.

Clause 3520_9. The system of clause 3520_8, wherein performing the calibration phase of passive tracking comprises: determining that the object stops at a same location for longer than the predetermined time period based on the updated location index over the time window; determining that the object is in close proximity to a device among the at least one transmitter and the receiver for the current time stamp, with a confidence level higher than a predetermined threshold; generating the calibrated location index for the current time stamp based on the close proximity and the confidence level; and replacing the updated location index with the calibrated location index for the current time stamp.

Clause 3520_10. The system of clause 3520_9, wherein: the at least one transmitter includes a plurality of transmitters distributed in the venue; and the trajectory is generated independent of a quantity and locations of the plurality of transmitters.

Clause 3520_11. A method for wireless tracking, comprising: transmitting, by at least one transmitter, a wireless signal through a wireless channel of a venue; receiving, by a receiver, the wireless signal through the wireless channel of the venue, wherein the received wireless signal differs from the transmitted wireless signal due to the wireless channel and a motion of an object in the venue, wherein neither the at least one transmitter nor the receiver moves with the object; obtaining a time series of channel information (TSCI) of the wireless channel in a time window, wherein the TSCI is generated based on the received wireless signal; generating a plurality of features based on the TSCI over the time window, wherein the plurality of features includes at least: a proximity metric (PM) feature, a motion statistics (MS) feature, and a spatial feature; obtaining a signature map of the venue from a database, wherein each location on the signature map is assigned one or more location signatures representing unique features associated with the location when there is any object at the location; identifying, for each time stamp in the time window, an estimated location of the object in the venue based on the signature map and the plurality of features, and generating a trajectory of the object in the venue over the time window based on the estimated locations of the object.

Clause 3520_12. The method of clause 3520_11, wherein generating the plurality of features comprises: computing a space-frequency correlation of channel information (CI) amplitudes of the TSCI across subcarriers over the time window; and generating the PM feature based on the space-frequency correlation for each time stamp in the time window, wherein the PM feature indicates a distance between the object and the receiver.

Clause 3520_13. The method of clause 3520_12, wherein generating the plurality of features comprises: computing a temporal autocorrelation of CI amplitudes of the TSCI over the time window; and generating the MS feature based on the temporal autocorrelation for each time stamp in the time window, wherein the MS feature indicates a motion continuity and a motion intensity of the object.

Clause 3520_14. The method of clause 3520_13, wherein generating the plurality of features comprises: performing a principal component analysis (PCA) on all CI of the TSCI to generate principal components; generating principal component data from the principal components based on at least one of: a ranking of the principal components, a weighted combination of some of the principal components, or a function of one or more of the principal components; and generating the spatial feature based on the principal component data for each time stamp in the time window, wherein the spatial feature indicates location related characteristics of the object.

Clause 3520_15. The method of clause 3520_14, further comprising: during an offline phase: collecting the plurality of features during a tracking test in the venue; generating the signature map of the venue based at least partially by: for each corresponding location on the signature map, aggregating the plurality of features to generate a set of location signatures, and labeling the set of location signatures with the corresponding location; and storing the signature map of the venue into the database before the TSCI is obtained.

Clause 3520_16. The method of clause 3520_15, wherein identifying the estimated location of the object in the venue comprises: assigning a first weight to the PM feature; assigning a second weight to the MS feature; assigning a third weight to the spatial feature; computing a weighted combination of the PM feature, the MS feature, and the spatial feature based on their respectively assigned weights; and performing a temporal distance maximum likelihood estimation over the time window based on the weighted combination and the signature map, to determine an initial location index in the signature map associated with the estimated location of the object in the venue for each time stamp in the time window.

Clause 3520_17. The method of clause 3520_16, wherein generating the trajectory of the object in the venue comprises: generating an updated location index for a current time stamp in the time window, by refining the initial location index using a particle filter; performing a calibration phase of passive tracking, periodically or upon the object being stuck at a location for longer than a predetermined time period, to generate a calibrated location index for the current time stamp; and generating the trajectory of the object in the venue based on the updated location index and/or the calibrated location index for each time stamp in the time window.

Clause 3520_18. The method of clause 3520_17, wherein generating the updated location index for the current time stamp comprises: inputting the initial location index for each time stamp before the current time stamp in the time window into a linear motion model to generate a refined location index for the current time stamp based on an assumption of a continuous moving path of the object in the venue; and generating the updated location index for the current time stamp based on: the refined location index, the weighted combination of the plurality of features, and one or more floor plan constraints associated with the venue.

Clause 3520_19. The method of clause 3520_18, wherein performing the calibration phase of passive tracking comprises: determining that the object stops at a same location for longer than the predetermined time period based on the updated location index over the time window; determining that the object is in close proximity to a device among the at least one transmitter and the receiver for the current time stamp, with a confidence level higher than a predetermined threshold; generating the calibrated location index for the current time stamp based on the close proximity and the confidence level; and replacing the updated location index with the calibrated location index for the current time stamp.

Clause 3520_20. A device for wireless tracking, comprising: a receiver configured to receive a wireless signal from at least one transmitter through a wireless channel of a venue, wherein the received wireless signal differs from the transmitted wireless signal due to the wireless channel and a motion of an object in the venue, wherein neither the at least one transmitter nor the receiver moves with the object; and a processor configured to: obtain a time series of channel information (TSCI) of the wireless channel in a time window, wherein the TSCI is generated based on the received wireless signal, generate a plurality of features based on the TSCI over the time window, wherein the plurality of features includes at least: a proximity metric (PM) feature, a motion statistics (MS) feature, and a spatial feature, obtain a signature map of the venue from a database, wherein each location on the signature map is assigned one or more location signatures representing unique features associated with the location when there is any object at the location, identify, for each time stamp in the time window, an estimated location of the object in the venue based on the signature map and the plurality of features, and generate a trajectory of the object in the venue over the time window based on the estimated locations of the object.

In some embodiments, the present disclosure discloses a robust occupancy detection system using WiFi signals from IoT devices. In some embodiments, the system features an environment-independent neural network architecture with a shared neural network and a device order agnostic transformer block. Unlike many deep learning approaches, which do not generalize well to new environments as the input CSI highly depends on environmental changes, and therefore require additional resources to retrain their networks for every new environment, making it infeasible to use in real-world applications, the disclosed robust, environmentally independent occupancy detection system can operate based on environment-independent CSI features combined with a device order agnostic deep neural network and post-processing.

In some examples, the system may utilize already available IoT devices in homes, such as smart plugs, bulbs, hubs, and speakers, to collect CSI. Afterward, the CSI is passed through a stack of preprocessing layers, followed by the deep learning module that outputs present and non-present at every time stamp (e.g. at every second or every minute). The system design is invariant to the subject's location, orientation, and environmental changes. Moreover, the system can work with different numbers of devices with different types, bands, and carrier frequencies (e.g. 2.4 or 5 GHz) without losing any performance.

Designing a robust system based on deep learning for complex environmental settings presents several challenges. First, training and evaluating a model that generalizes to new environments require extensive data collection, as there are no publicly available datasets. One can collect data from different homes covering day-to-day activities and empty scenarios, which may induce another challenge: data imbalance. To address this issue, one can employ data augmentation methods unique to Wi-Fi modality, used to augment pre-processed CSIs with autocorrelation function. Combination of these two ensures environmental independence without requiring a large dataset to capture environmental diversity. Second, there is a significant diversity in devices, environments, and frequency bands. Environments can be apartments or houses, and devices may have different bandwidths and, therefore, different CSI dimensions. Additionally, users may have different number of devices without explicit ordering. To address these, one can first extract autocorrelation function from each CSI, followed by extracting independent features using a shared CNN network. This reduces computational overhead and ensures consistent feature maps from each device. The extracted features can then be fed into the transformer block, which uses an attention mechanism to weigh the importance of each device map without assuming any ordering. Further, the multilayer perceptron (MLP) layer can assign the class label based on the global context.

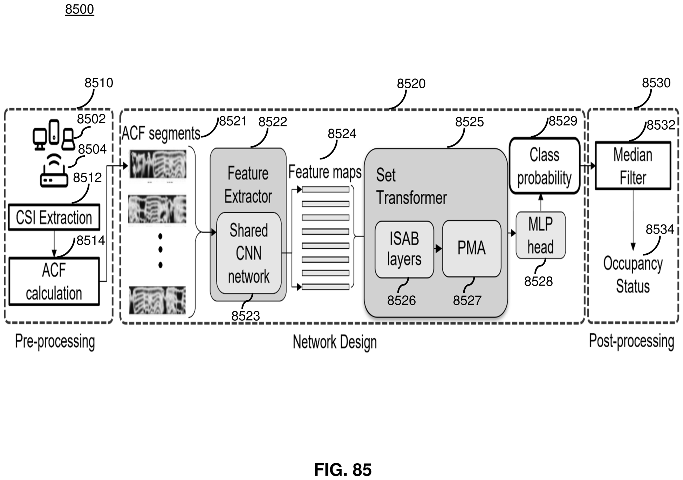

FIG. 85 illustrates an example framework of a system 8500 for wireless based occupancy detection, according to some embodiments of the present disclosure. As shown in FIG. 85, the system 8500 may include a pre-processing module 8510, a network design module 8520, and a post-processing module 8530. In the pre-processing module 8510, CSI extraction 8512 can be performed based on wireless signals transmitted from one or more IoT devices 8502 to a router 8504. In general, the CSI may be any channel information (e.g. CSI, CFR, CIR, etc.) extracted based on wireless signals transmitted from a transmitter to a receiver. In some embodiments, the transmitter may serve as a Bot (e.g. Type1 device), while the receiver may serve as an Origin (e.g. Type2 device). A Bot can transmit a wireless signal to the Origin in a venue (e.g. a house), to obtain channel information of a wireless multipath channel based on the wireless signal, where the channel information of the wireless multipath channel may be impacted by motion/presence of any object/user in the venue.

CSI captures comprehensive details of the environment and dynamic objects, including the human body. As a result, deep learning-based designs that use CSI as input could be environment-dependent and require pre-training before deployment in a new environment. In order to remove the influence on the environment, the system can calculate the environment-independent statistic autocorrelation function (ACF).

In some embodiments, an ACF calculation 8514 is performed in the pre-processing module 8510 based on the extracted CSI to generate ACF segments 8521. In some examples, there are N (which can be any positive integer) ACF segments, each corresponding to a respective IoT device or transmitter.

As shown in FIG. 85, the network design module 8520 includes a feature extractor 8522, a set transformer 8525 and an MLP head 8528. The feature extractor 8522 may include a shared Convolutional Neural Network (CNN) model 8523. Each ACF segment may be processed individually through the shared CNN model 8523. CNN network can extract compact feature embedding for each ACF. The shared CNN architecture is designed to reduce computational overhead by utilizing a single CNN model to extract features from N ACF segments. This approach can not only minimize the computational resources required by reducing number of parameters and enabling batch processing, but also ensure that the features extracted from all ACF segments are consistent. Additionally, this shared architecture can facilitate the integration of ACF segments from new devices without the need for retraining the model. This adaptability is particularly beneficial in dynamic environments where the number of IoT devices may vary over time. Inputting the N ACF segments 8521 into the shared CNN model 8523 can result in N feature maps 8524, where each of the N ACF segments 8521 is input into the shared CNN model 8523 individually and separate to generate a respective feature map of the N feature maps 8524.

In some embodiments, the set transformer 8525 may be used to aggregate per-device embedding extracted from the CNN network 8523 into an invariant global representation. Inputting the N feature maps 8524 together into the set transformer 8525 can generate an aggregate representation that is independent of a quantity and locations of the plurality of IoT devices 8502 or transmitters. The set transformer 8525 may include Induced Set Attention Blocks (ISAB) layers 8526 and a pooling multi-head attention (PMA) module 8527. The ISAB layers 8526 may model device interactions efficiently through learned induced points. In addition, the PMA 8527 can adaptively focus on the most relevant devices, combining a set of embedding elements into a fixed-size representation that can be passed to the classification MLP head 8528. The MLP head 8528 can estimate a class probability 8529 representing a likelihood that there is any user present in the venue.

In some embodiments, the set transformer is designed not to require knowledge of the devices' number, order or positions to determine occupancy. The system assumes that the user has placed a sufficient number of IoT devices to cover the whole venue. The lack of need for positioning information is due to the goal being general occupancy detection, not room-specific monitoring.

In some embodiments, the post-processing module 8530 includes a median filter 8532 which can be applied to the class probability 8529 to smooth out transient spikes which are considered noise or non-genuine occupancy events. The median filter 8532 may be configured to analyze the class probability 8529 over a time window to generate a smoothed class probability. After comparing the smoothed class probability with a threshold, the system 8500 can determine an occupancy status 8534 of the venue. For example, the system 8500 can detect presence of a user in the venue in accordance with a determination that the smoothed class probability is greater than the threshold. In some examples, the threshold is predetermined based on a receiver operating characteristic (ROC) curve that is generated based on detection rates and false alarm rates associated with various thresholds.

In some embodiments, the set transformer model is specifically designed to handle unordered and variable-sized sets. Applying this model to WiFi links and IoT devices is well-suited for occupancy detection using WiFi signals from exciting IoT devices, as each link provides an unordered view of the same environment, and the number of devices can vary from one house to another.

In some cases, data samples from large houses and apartments behave differently, with varying sensitivity levels. To model this behavior, the system can inject the domain information (whether the data is from a house or an apartment) into the set transformer as a conditioning token in the attention mechanism. The set transformer can learn slightly different behaviors depending on the environment type, to be more accurate on occupancy detection. This domain shift can enable few-shot adaptation or domain generalization without retraining any model (e.g. the feature extractor 8522 or the set transformer 8525).

In some embodiments, WiFi signals emitted from a transmitter can undergo multiple reflections and scatterings from various surfaces, including both static and dynamic objects. Information on such signal propagation is encapsulated in Channel State Information (CSI), which can be represented as $H(t,f) = \sum_{l=1}^{L} \alpha_l(t)e^{-j2\pi f \tau_l(t)}$ considering multipath effects. Here, $\alpha_l$ and $\tau_l$ are the complex amplitude and time delay of the 1-th multipath component, respectively. In practice, many WiFi-based sensing systems employ the CSI power response $G(t, f) = |H(t, f)|^2$ as the CSI phase suffers from imperfect synchronization errors.

CSI captures comprehensive details of the environment and dynamic objects, including the human body. As a result, deep learning-based designs that use CSI as input directly are environment-dependent and require pre-training before deployment in a new environment. In order to remove the influence on the environment, one can calculate the environment-independent statistic autocorrelation function (ACF).

In some examples, the ACF of the CSI power G(t,f) can be calculated as

$$\rho_G(\tau,f) = \frac{Cov[G(t,f),G(t+\tau,f)]}{Var[G(t,f)]}, \qquad\qquad (3818\_1)$$

where $\tau$ represents the time lag. In order to better extract the features by enhancing the signal-to-noise ratio, the system can use the Maximum Ratio Combining (MRC) approach to accumulate ACF across the top X (e.g. top 10) subcarriers.

In some examples, the ACF depends solely on the power of dynamic scatterers, effectively characterizing motion of objects in the surroundings and identifying periodic patterns such as breathing in the absence of motion. Therefore, ACF serves as a valuable feature that captures details about human presence through motion and breathing.

Although one can directly extract human presence by analyzing the ACF and calculating a statistic called motion statistic and thresholding it, several challenges arise in the presence of interference. It is difficult to establish a single threshold that can filter out neighboring motion while still capturing smaller movements. Additionally, subtle breathing movements can be easily corrupted, making it challenging to identify static humans, particularly during nighttime.

In some examples, the system can calculate the ACF as described in Eqn. (3818_1) and partition the data into 30-second segments to capture essential features related to human presence. Assuming one can use N IoT devices in the experimental setup, the system can obtain N ACF segments, each with dimensions $R^{TN} \times T$, where TN represents the number of time lags at each time instance, and T denotes the number of time instances in a segment.

In a practical example, one can utilize a maximum of 8 IoT devices connected to the router to collect CSI for occupancy detection. However, in some testing environments, the number of devices may be fewer than 8. To handle varying input sizes, one can fix the number of ACF segments to 8 and pad the rest with random noise when there are fewer than 8 devices.

In some cases, the dataset is highly imbalanced due to the limited amount of empty data, as people tend to spend most of their time at home, especially with remote and hybrid work schedules. To address this imbalance, the system can generate additional empty data by leveraging the spatial diversity of antenna locations. In an example device setup, each IoT device is equipped with 4 receiver (Rx) antennas. Instead of combining all the antennas using the MRC approach, the system can generate and use the ACF for each individual antenna link separately. This method can increase the amount of empty data by a factor of four, thereby enhancing the diversity of the dataset.

As discussed above, the disclosed neural network architecture may include a feature extractor and a transformer block. The feature extractor may use a shared CNN architecture, where each ACF segment is processed individually through the shared CNN model. In some examples, the shared CNN model may include three 2D convolutional layers with a kernel size of 5, followed by max-pooling layers. Non-linear activation functions ReLU may be applied after each convolution layer.

In some examples, the extracted 1D feature maps may then be fed into the transformer block. In some embodiments, the transformer block may have a different structure than that of the set transformer 8525. For example, based on a normal transformer, the system can remove positional embedding from the transformer, to make the system device agnostic and utilize single transformer block. The transformer block may add a classification token (cls token) to the feature maps before inputting the feature maps to a multi-had attention layer in the transformer block. The cls token may be a learnable embedding with the same dimensionality as the feature maps. The cls token is added to the transformer to aggregate all the information from the feature maps and make the prediction. The attention map of the transformer block can measure the importance of each feature map and assigns a weight based on that. This allows the network to perform the final classification tasks based on highly sensitive ACF maps. The attention heads may then be passed through a dense layer to get the final context vector, and only the context token from the context vector is passed through the MLP head to estimate the final probability pc.

The above discussed set transformer is specifically designed to handle device order invariance, e.g. independent of device number, order or positions. In contrast, when using a conventional transformer, the positional embedding part needs to be removed to achieve device order invariance.

In some embodiments, during post-processing, while applying a 0.5 threshold on the final probability pc is a straightforward approach to estimate occupancy, the system can explore various thresholds (ranging from 0 to 1) to obtain the detection and false alarm rates, thereby generating the receiver operating characteristic (ROC) curve. Further, the system can apply a median filter over the past time instances T to determine the current state. The median filter may be a sliding window-based median filter applied to smooth out the output further to reduce the spiky false detections and sudden miss detection.

In some embodiments, to evaluate the performance of the system, one can carry out extensive experiments with data collected over 30-60 days to train and validate the system. The dataset may include challenging data from compact apartments, with neighboring motions that introduce false alarms and low quality IoT devices that cause miss detections, particularly during sleep. The system can demonstrate a high detection rate and a low false alarms different dates in the same environment or an unseen test environment. In some embodiments, the ROC curves are generated from two different window sizes. Increasing the window size can lead to an improved ROC curve, characterized by a lower FPR and higher detection rate. The window size can be chosen with respect to the application (e.g. HVAC control can accommodate slightly longer delays), and the maximum delay in this evaluation may be less than 1 minute.

As discussed above, a novel WiFi-based occupancy detection system is disclosed to utilize IoT devices in houses. The disclosed system utilizes a neural network-based design with a shared CNN layer as the feature extractor followed by a transformer block. The experimental results show that the implemented system can achieve a high detection rate and a low false alarm rate for test data in an unseen environment, surpassing other approaches significantly, while being robust against different environments and devices.

In some embodiments, when having a large enough dataset that covers many houses/apartments, one can directly use CSI instead of extracting the ACF feature metric. To inject domain information into the model, one can use various ways, such as: appending a domain embedding for each device after the CNN layers using feature-wise linear modulation, or concatenating with the global pooled representation after the PMA layer.

In the field of occupancy detection, child presence detection (CPD) is a vital technology for vehicles to prevent heat-related fatalities or injuries by detecting the presence of a child left unattended. Regulatory agencies around the world are planning to mandate CPD systems in the near future. However, existing solutions have limitations in terms of accuracy, coverage, and additional device requirements. While WiFi-based solutions can overcome the limitations, existing approaches struggle to reliably distinguish between adult and child presence, leading to frequent false alarms, and are often sensitive to environmental variations. Earlier CPD solutions based on indirect sensing methods, such as pressure, weight, heat, and capacitive sensors cannot distinguish human presence from objects and offer limited coverage. Later, PIR sensors were introduced for CPD, detecting children's motion inside the car. However, PIR sensors are sensitive to temperature and environmental impacts and cannot detect children during sleep due to the lack of motion. In contrast to the above methods, vision-based solutions provide higher accuracy, but they require additional hardware, increasing the deployment cost and energy consumption, and their accuracy relies highly on lighting conditions and cannot work well under obstructions. On the other hand, mmWave-based methods have gained popularity due to their privacy-preserving capabilities and easy installation. Nevertheless, they face challenges such as limited coverage due to the field of view (FoV) of mmWave antennas and the lack of vehicles equipped with mmWave chipsets. Contrary to the above solutions, WiFi sensing provides more extensive coverage, better privacy, and easy installation with no additional cost, as many new cars already have in-car WiFi. This opens up new in-car sensing applications such as driver monitoring and identification, child presence detection, and in-car seat occupancy detection. But some WiFi based systems cannot differentiate between adult and child presence, often triggering unnecessary false alarms when an adult is inside the vehicle. Additionally, severe environmental conditions can further degrade detection performance and increase false alarms, reducing system reliability in challenging situations.

To tackle the aforementioned challenges, the present disclosure discloses a novel deep learning system, DeepCPD, is disclosed for accurate child presence detection in smart vehicles. DeepCPD utilizes an environment-independent feature-the auto-correlation function (ACF) derived from WiFi channel state information (CSI)-to capture human-related signatures while mitigating environmental distortions. A transformer-based architecture, followed by a multilayer perceptron (MLP), is employed to differentiate adults from children by modeling motion patterns and subtle body size differences. To address the limited availability of in-vehicle child and adult data, the system utilizes a two-stage learning strategy that significantly enhances model generalization.

DeepCPD is a robust, environment-independent neural network designed to detect child-only presence by effectively distinguishing it from adult and empty-seat scenarios. DeepCPD can reliably identify children inside a vehicle regardless of their state (awake or asleep), even in complex real-world environments such as busy parking lots and under severe weather conditions like heavy rain or strong winds. However, designing such a system based on deep learning for different environments presents several challenges.

First, training and evaluating a model that generalizes to any car model requires extensive data collection, but collecting real-world WiFi data, particularly involving children, is challenging. This limitation hampers the model's ability to generalize to unseen vehicles, often necessitating pre-training for each specific car model. To address this, one can collect a comprehensive dataset using diverse antenna configurations and generate synthetic data through data augmentation techniques such as link permutation and link mix, which are introduced based on data pattern analysis to replicate real-world conditions. Furthermore, the system has a two-stage training strategy that leverages WiFi data collected in residential environments to mitigate the scarcity of motion-specific data.

Second, WiFi sensing deep neural networks that rely on raw channel state information (CSI) inputs often fail to suppress environmental influences, resulting in poor generalization to unseen environments. Achieving robust generalization typically requires a large volume of diverse training data, which takes additional efforts. Moreover, these models are highly dependent on the specific chipset used to collect the CSI, as variations in CSI quality across different hardware can significantly affect performance. In some embodiments, the system can use the first-order statistics, the Auto-Correlation Function (ACF) of the CSI, as input to the deep neural network. The ACF emphasizes dynamic features related to human motion and breathing patterns while suppressing the effects of static reflections caused by the environment, thereby enabling the network to be both environment and seat-location independent. This approach also reduces dependency on specific hardware, enabling easier deployment in real-world scenarios.

Third, extracting features relevant to child-adult classification remains a significant challenge. While ACF may be used for distinguishing presence from non-presence, the features required to differentiate between children and adults are less apparent. However, differences in movement patterns-such as the smaller spatial reflections from children's bodies and the larger reflections from adults-can be leveraged through spatial analysis. Additionally, children tend to exhibit more abrupt and faster motions, which can be captured through temporal motion patterns. To extract these relevant features, the system can employ an encoder specifically designed to capture periodic behaviors and cross-subcarrier dependencies. In particular, the system can adopt the encoder architecture originally developed for time-series forecasting, due to its ability to model long-range dependencies effectively.

DeepCPD is a novel deep learning framework that leverages an environment-independent ACF representation to capture spatial-temporal patterns for distinguishing child-only presence from adult and empty-seat scenarios. In some examples, a comprehensive in-car WiFi dataset may be established by collecting data across 30 different car models, covering child presence, adult presence, and empty scenarios. In some examples, two synthetic data generation techniques, link permutation and link mix, are specifically designed to mimic real-world variations relevant to the task. In some examples, a two-stage training procedure is used to address in-car data scarcity, using WiFi data collected in residential environments and validating the transferability of a pre-trained encoder across domains. DeepCPD can maintain high accuracy even under unfavorable environmental conditions, and is capable of detecting child-only presence.

In some embodiments, the method for extracting domain-independent features covers the channel state modeling, auto-correlation function (ACF) computation, and the efficient design of model inputs.

Within the confines of a vehicle, rich multi-path propagation of WiFi signals can undergo reflection, scattering, and diffraction off various surfaces, including human bodies, seats, and the vehicle's structure, before reaching the receiver. This results in the superposition of numerous multi-path components (MPC) at the receiver. Taking this multi-path effect into account, the channel state information (CSI) estimated on a subcarrier on frequency $f$ at time t can be modeled as

$$H(t,f) = \sum_{l \in \Omega_m} a_l(t)e^{-j2\pi f \tau_l(t)} + n(t,f),$$

where $\Omega_m$ denotes the set of multipath components, $a_l(t)$ and $\tau_l(t)$ denote the complex amplitude and the propagation delay of the $l^{th}$ multipath component, and $n(t, f)$ represents the additive white Gaussian noise, with power of $\sigma^2(f)$.

Dynamic entities, such as humans, generate time-varying MPCs due to movement, while static objects contribute time-invariant MPCs. Notably, even stationary humans can induce time-varying MPCs, as WiFi signals are sensitive to the subtle movements caused by breathing. Consequently, the estimated CSI, $H(t, f)$, can be reformulated as

$$H(t,f) = \sum_{m \in \Omega_s} a_m(t)e^{-j2\pi f \tau_m(t)} + \sum_{n \in \Omega_d} a_n(t)e^{-j2\pi f \tau_n(t)} + n(t,f),$$

where $\Omega_s$ and $\Omega_d$ denote the time-invariant and time-variant multi-path components, respectively. $a_m(t)$, $a_n(t)$ are the complex amplitudes, $\tau_m$, $\tau_n$ are the time delay of the m and n-th MPC. Assuming that the time-invariant MPCs ($\Omega_s$) remain constant over time, the CSI can be approximated by

$$H(t,f) \approx H_s(f) + \sum_{n \in \Omega_d} a_n(t)e^{-j2\pi f \tau_n(t)} + n(t,f),$$

where $H_s(f)$ is the sum of all static MPCs. In practical applications, as the phase information usually becomes unreliable due to synchronization offsets, the power response of the CSI may be given by

$$G(t,f) = |H(t,f)|^2 = \mu(t,f) + \epsilon(t,f).$$

where $\mu(t, f)$ denotes the total power of received signal and $\varepsilon(t, f)$ denotes the measurement noise, which can be modeled as additive white Gaussian noise (AWGN) . Also, it can be assumed that $\mu(t, f)$ and $\varepsilon(t, f)$ are uncorrelated with each other.

According to electromagnetic wave theory, the auto-correlation function (ACF) of the CSI power, $\rho(\tau, f)$, is directly correlated with the power of dynamic scatterers, as follows:

$$\rho(\tau,f) = \frac{cov[G(t,f), G(t+\tau,f)]}{var[G(t,f)]} = \frac{E_d^2(f)}{E_d^2(f) + \sigma^2(f)}\rho_\mu(\tau,f) + \frac{\sigma^2(f)}{E_d^2(f) + \sigma^2(f)}\delta(\tau),$$

where $\tau$ is the time lag, $E_d^2(f)$ and $\sigma^2(f)$ reflects the power of dynamic scatters and the power of measurement noise, respectively. $\rho_\mu(\tau, f)$ is the ACF of $\mu(t, f)$ and $\delta(\tau)$ is the Dirac delta function.

In a dynamic environment, $E_d^2 > 0$, while in a static environment, $E_d^2 = 0$ as there are no dynamic scatters. Therefore, $lim_{\tau \to 0}\rho(\tau, f)$ is an excellent indicator for detecting motion. In practice, the direct measurement of the $lim_{\tau \to 0}\rho(\tau, f)$ is not feasible due to the limitation of sampling frequency $F_s$. Thus, it can be approximated as $lim_{\tau \to 0}\rho(\tau, f) \approx \rho(\tau = 1/F_s, f)$. Thus, motion statistics for the subcarrier $f$, $\psi_f$ can then be defined as,

$$\psi_f = \rho(\tau = 1/F_s, f).$$

The ACF can be further viewed as a periodic signal if there is no motion but breathing. One can define the channel gain $g(f) \triangleq \frac{E_d^2(f)}{E_d^2(f) + \sigma^2(f)}$ . Then for $\tau \neq 0$, one can write the ACF as,

$$\rho(\tau,f) = g(f)\rho_\mu(\tau,f).$$

With the existence of breathing, $\rho_\mu(\tau, f)$ exhibits a periodic pattern with peak values varying across each subcarrier $f$.

For a given WiFi link with $N_s$ subcarriers, one can calculate $N_s$ unique subcarriers with the length of $l$, where $l$ represents the number of time lags. The length $l$ is chosen to effectively capture human breathing patterns.

In some embodiments, one can analyze the CSI and ACF for three scenarios: an empty car, a child breathing and an adult breathing. Based on the CSI analysis for the empty car (a, d), adult presence (c, e), and child presence (b, f) across two car models: Model A (an SUV) and Model B (a sedan), the CSI patterns vary significantly even within the same class, making it challenging to train a generalized classification model. Furthermore, there is no significant difference between CSI data in the empty-car and the child-presence cases, as the child's breathing motion is subtle. Therefore, it is crucial to remove environmental influences and enhance the features to improve the system design.

To compute ACF from the most sensitive subcarrier $f$, the system can select the most sensitive subcarrier based on the motion statistic. ACF functions may serve as an environment-independent feature by suppressing static components and emphasizing dynamic features, which is valuable for developing a generalized model applicable across different vehicles. While model-based methods can capture some of these distinctions, motion-related ACF patterns can still appear similar across classes, making accurate classification difficult. In contrast, learning-based approaches can more effectively leverage the temporal and spatial characteristics of the ACF, allowing the network to distinguish subtle differences in body size and movement behaviors between children and adults.

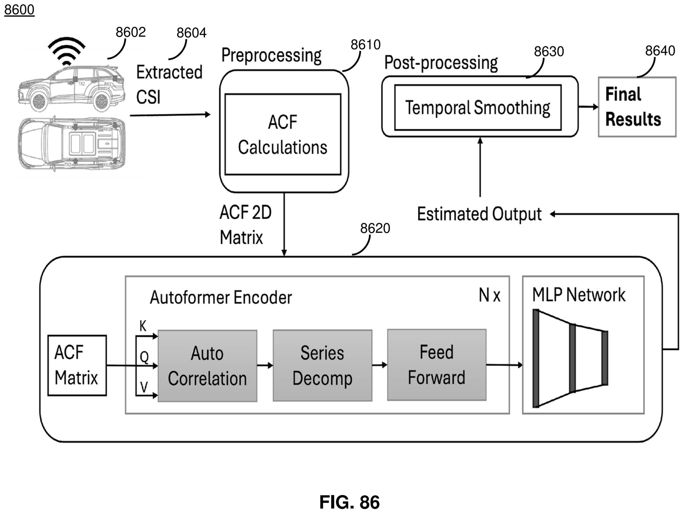

FIG. 86 illustrates an example system 8600 for child presence detection, according to some embodiments of the present disclosure. As depicted in FIG. 86, the system 8600 is structured into three primary stages. In the first stage 8610, the CSI time series 8604 extracted from a car 8602 can undergo pre-processing to extract an environment-independent autocorrelation function (ACF) feature matrix. In the second stage 8620, the extracted ACF matrices are fed into a disclosed neural network, which is trained to perform three-class classification: empty, child, and adult. In the final stage 8630, post-processing is applied to enhance the classification stability by performing temporal smoothing through window-based fusion over the observation period to generate the final results 8640.

During the pre-processing stage 8610, motion and respiratory patterns provide the most intuitive and discriminative features for distinguishing child-only presence from other scenarios, such as empty or adult cases. Generally, children's movements are faster and more abrupt than those of adults, and are associated with smaller body sizes. In addition, when subjects are relatively static, children's breathing rates are typically higher (approximately 20-30 breaths per minute) compared to adults. Therefore, motion and breathing features extracted from WiFi CSI offer strong cues for differentiating among the three classes: empty, child, and adult. However, relying solely on extracted motion statistics and breathing rates may discard other valuable information necessary for robust classification. In addition, noise in the ACF, introduced by environmental factors, can lead to inaccurate estimations. To address these challenges, the full ACF is used as the input feature to the network. The ACF inherently captures information related to both motion and respiratory dynamics. While weighted averaging of ACFs across subcarriers can enhance the signal-to-noise ratio (SNR) and improve the accuracy of motion and breathing rate estimation, such aggregation may eliminate important spatial information critical for distinguishing between children and adults.

In some embodiments, since each subcarrier captures reflections from distinct propagation paths and objects, their individual ACF responses contain rich spatial information that can be leveraged for improved child-adult classification. To preserve this diversity, the system can compute the ACF independently for each subcarrier. These ACFs are then stacked to form a two-dimensional matrix of size $l \times N_s$, where $N_s$ is the total number of subcarriers across all WiFi links, and $l$ is the number of time lags considered when calculating the ACF. The resulting $l \times N_s$ matrix serves as the input to the deep learning model.

The neural network stage 8620 may include two key stages. First, a transformer-based encoder is used to extract spatiotemporal representations from the input data. One can adopt an auto-former encoder originally designed for time series forecasting, leveraging its inherent decomposition mechanism and ability to model long-range dependencies. Second, an MLP network maps these representations to the final output, enhancing the extraction of discriminative features for classification.

The order of ACF lags contains useful information about signal periodicity and motion patterns, while the order of subcarriers reflects spatial-domain features, such as proximity to the antenna location. Therefore, positional encoding plays a crucial role in preserving these hierarchical structures. Without it, the encoder would treat ACF lags and subcarriers as unordered features, especially when the input sequence is divided into patches along the time (lag) and subcarrier dimensions. To address this, one can apply sinusoidal positional encoding across both dimensions, ensuring that each (lag, subcarrier) pair is uniquely encoded to maintain the structural relationships within the data.

The auto-former based encoder may include three main components: an auto-correlation-based attention block, a series decomposition block, and a feedforward network.

The auto-correlation-based attention block replaces the conventional self-attention mechanism used in standard transformer encoders, offering both higher efficiency and improved accuracy for time series analysis. This mechanism is particularly effective at extracting periodic patterns related to breathing and motion trends by modeling both subcarrier-local effects and cross-subcarrier dependencies.

One can assume an ACF of length $l$ extracted from $N_s$ subcarriers. In this case, the input X to the encoder layer has the shape $l \times N_s$. One can first project the input X into the query Q, key $K$, and value V spaces using learnable linear transformations. The system can use three separate linear layers to map the input as:

$$Q = X \cdot W_Q, \quad K = X \cdot W_K, \quad V = X \cdot W_V,$$

where $W_Q$, $W_K$, and $W_V$ are learnable weight matrices.

For the single-head case, the attention mechanism can be expressed as follows. First, one can compute the cross-correlation between Q and K efficiently using FFT operations:

$$R_{(Q,K)}(\tau) = IFFT(FFT(Q) \cdot FFT(K)^*),$$

where $(\cdot)^*$ denotes the complex conjugate of the signal. However, since the disclosed input ACF is a real-valued time series, the conjugate simplifies to taking the squared magnitude of the FFT components.

The resulting cross-correlation scores are used to aggregate the input. For each subcarrier, the system can select the k most correlated lags, $\tau_1, \ldots, \tau_k$ and circularly shift *(Roll)* the sequence V by these lags to aggregate the output as below:

$$S_{Q,K}(\tau_1), \ldots, S_{Q,K}(\tau_k) = SoftMax(R_{Q,K}(\tau_1), \ldots, \qquad R_{Q,K}(\tau_k)) \; Attention(Q, K, V) = \sum_{\tau_i \in top-k} S_{Q,K}(\tau_i) \cdot Roll(V, \tau_i).$$

where $R_{Q,K}(\tau_i)$ is the autocorrelation of lag $\tau_i$ between series Q and *K, Roll(V, $\tau_i$)* represents the operation of circular shift with time delay $\tau_i$ and *top - k* is the subset of time lags with top k correlations. Here, the system may directly aggregate the input based on the most correlated lags, preserving the temporal structure of the sequence.

In the multi-head version, the model may operate along the subcarrier dimension while preserving both subcarrier relationships and temporal periodicity. Each head i has its own learnable projection matrices, with the query, key, and value dimensions given by $Q^i, K^i, V^i \in R^{l \times \frac{N_S}{h}}$, where i $\in$ 1, ..., h and *h* is the number of heads. The multi-head attention output is computed by concatenating the outputs of each head and applying a final linear transformation as,

$$Multi - Head \; Attention = W_{out} \cdot Concat(head_1, \ldots, (head_h)$$

where *head$_i$ = Attention(Q$^i$, K$^i$, V$^i$).*

The series decomposition block in the encoder can separate the input into trend and seasonal components. This enhances feature quality by isolating periodic patterns from static or slowly varying noise. The seasonal components are analyzed in deeper layers, enabling the model to focus more effectively on finer periodic trends.

The spatiotemporal features extracted by the initial blocks are further processed within the feedforward block of the encoder, to integrate information across subcarriers. This block comprises two 1D convolutional layers, each followed by a Gaussian Error Linear Unit (GELU) activation function to introduce nonlinearity.

An MLP network in the neural network stage 8620 can further process the encoded feature vector to produce the final classification output. The MLP may comprise three fully connected layers, each followed by a ReLU activation function. These layers progressively compress the feature map into a low-dimensional representation mapped to three output values corresponding to the classes: Empty, Adult, and Child.

To mitigate sudden misdetections and false alarms caused by fluctuations between classes, the system can apply temporal smoothing, which leverages past predictions to reduce spurious spikes. These fluctuations often arise from noise interference in some data samples, leading the model to make abrupt and incorrect class transitions. As a post-processing step, the system can apply a moving average filter to the class probabilities using a sliding window. Although this method introduces a small amount of latency proportional to the window size, it offers a favorable trade-off by significantly improving prediction stability and overall system reliability.

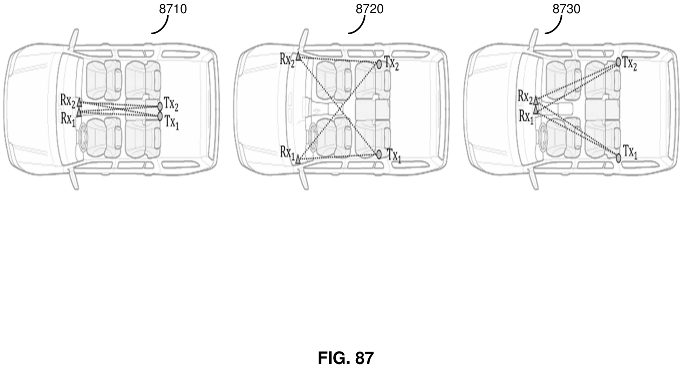

FIG. 87 illustrates example antenna configurations for child presence detection, according to some embodiments of the present disclosure. In a co-located setup 8710, both the transmit (Tx) and receive (Rx) antennas are co-located. The Rx can be placed in the front, and the Tx can be placed in the back, or vice versa. In a distributed setup 8720, the two Tx and two Rx antennas are placed in the four corners of the car, where the Rx antennas are placed in the two corners of the front dashboard and Tx antennas are near the two sides of the back seats. In a hybrid setup 8730, the Rx antennas are placed in a co-located manner, and the Tx antennas are placed in a distributed way. The position of Tx and Rx antennas can be interchanged.

In some embodiments, the deep learning network in the DeepCPD has a two-stage training. The amount of data from children is often limited. While one can simulate children's breathing behavior using a baby doll, real child motion data is scarce, and adult data is also somewhat limited. To address the challenge of limited in-car data, the system can adopt a two-stage training procedure designed to maximize the model's ability to distinguish subtle motion patterns.

In Stage 1, one can train the model using labeled data collected from indoor environments, such as houses and apartments, labeled as presence or non-presence, along with in-car data labeled as presence or empty. All adult and child data are grouped into a single class labeled as presence. This training focuses on learning basic motion and breathing features. To maintain consistency with in-vehicle conditions, the system can exclude walking data from the indoor datasets, as gait patterns are not typically observed inside vehicles. During this stage, the MLP network is adapted for binary classification (empty vs. presence) and trained using binary cross-entropy (BCE) loss with the Adam optimizer.

In Stage 2, the system can fine-tune the pre-trained encoder using a modified MLP head designed for a three-class classification task. The system can initially freeze the encoder layers and train only the modified MLP head. The system can then gradually unfreeze the encoder and employ discriminative learning rates. The pre-trained encoder employs a lower learning rate ($1 \times 10^{-5}$) to prevent catastrophic forgetting, while the MLP head utilizes a higher learning rate ($1 \times 10^{-3}$) to adapt efficiently to the three-class classification task. A step decay learning rate schedule is applied to ensure stable convergence. Additionally, the system can use a smaller batch size (32) in Stage 2 compared to Stage 1 to improve generalization. The system can employ cross-entropy loss with the Adam optimizer to jointly fine-tune the encoder and train the new MLP head. The updated MLP head outputs three probabilities corresponding to the classes: Empty, Adult, and Child. Through this fine-tuning process, the encoder learns to distinguish child-specific features from adult features more effectively.

To train a generalized neural network, a balanced and sufficiently large dataset is essential. While the two-stage training approach partially addresses the challenges of limited data, the system may still require a substantial amount of data for each scenario to fine-tune the model effectively. Traditional data augmentation techniques commonly used in computer vision, such as rotation, shifting, and scaling, are not applicable here, as preserving temporal information is critical. To overcome this, the system can utilize two data augmentation techniques specifically designed based on the analysis of data patterns.

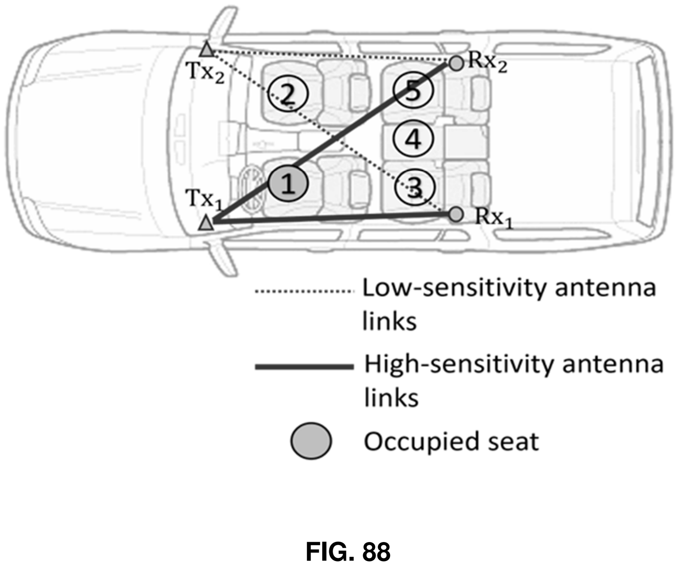

Here, one can analyze the ACF generated from a distributed antenna setup when the user occupies the driver's seat. With two transmit (Tx) and two receive (Rx) antennas, the system forms four distinct links, each producing a unique ACF. FIG. 88 shows antenna configuration and data collection setup to determine the ACF extracted from the most sensitive subcarrier by selecting the subcarrier with the highest motion statistics, for each link during a breathing scenario when the user is seated in seat 1. The links between Tx1-Rx1 and Tx1-Rx2 exhibit clear periodic patterns, as the user is positioned close to the Tx1 antenna.

Building on the observation that links involving the nearest antennas exhibit higher sensitivity, the system can leverage multi-antenna diversity (in this case, a 2×2 configuration with 2 Tx and 2 Rx antennas) to generate multiple versions of the data. By permuting the autocorrelation functions (ACFs) computed from each transmit-receive antenna pair, the system can create synthetic samples that simulate variations in user position. This approach effectively augments the dataset, mimicking how signals might behave if the user were sitting in a different position, even though the physical location is not changing. This approach helps prevent overfitting to a specific seat location and promotes generalization to unseen antenna configurations (i.e., the same setup with a different antenna ordering).

Inspired by the mix-up data augmentation technique, the system can utilize a method that combines samples representing the same activity (child motion) but captured in different environments, positions, or with different Tx-Rx configurations. Specifically, the system can create a synthetic data sample by merging links from two different samples: high-sensitivity links are taken from one sample, and low-sensitivity links from the other. Sensitivity is measured using the motion statistics feature.

Unlike conventional mix-up, where samples from different classes are blended, the system may only mix data within the same class. This approach generates new, diverse representations of the same activity, improving the network's ability to generalize to unseen locations (e.g., different car models) and device setups, thereby enhancing domain adaptation.

The performance of the DeepCPD system can be evaluated based on various evaluation metrics. The first metric is detection rate, or true positive rate (TPR), which measures the probability of correctly detecting the child's presence. The second metric is false alarm or false positive rate (FPR), which represents the probability of misidentifying an empty car as a child presence. The third metric is accuracy, which quantifies the overall correctness of the models' predictions, defined as the ratio of the number of correctly classified data points to the total number of input data. The fourth metric is $F1$ score which measures the balance between precision and recall, and is calculated as the harmonic mean of these two metrics as

$$F1 = 2 \cdot \frac{precision \cdot recall}{precision + recall},$$

where recall quantifies the likelihood of the system correctly identifying the target, and precision represents the ratio of true positive predictions to the total number of positive predictions made.

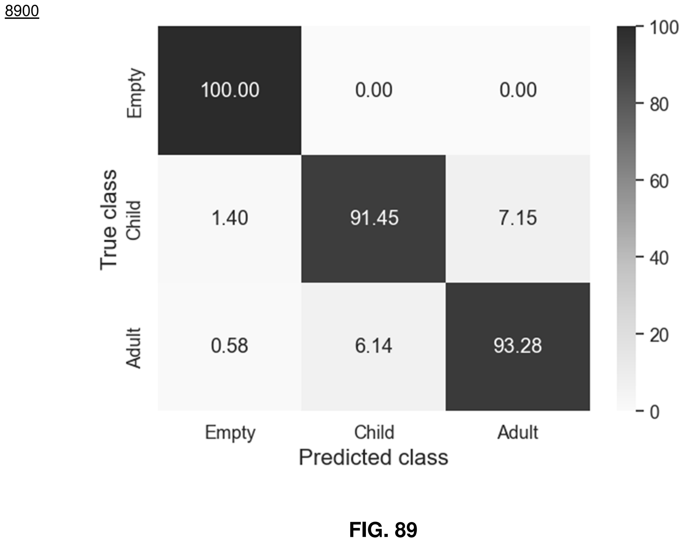

In some embodiments, the overall test confusion matrix 8900, illustrating the detection performance for each class, is shown in FIG. 89. As observed, the child detection accuracy is comparatively lower, due to older children's motion patterns resembling those of adults, leading to misclassification.

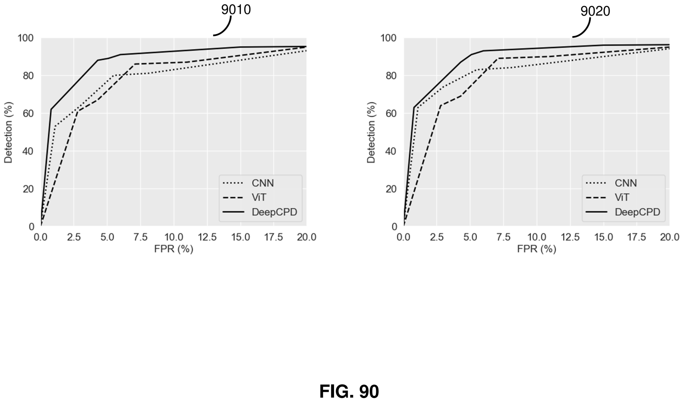

Comparing the validation and testing accuracy of DeepCPD against baseline models can demonstrate that the disclosed method consistently outperforms all baselines. FIG. 90 shows a comparison of the ROC curves for the child class using DeepCPD and two baseline models, CNN and ViT. The ROC curve 9010 is generated for unseen user in unseen environment, while the ROC curve 9020 is generated for seen user in unseen environment. As shown in FIG. 90, DeepCPD outperforms the baselines in both seen and unseen user scenarios. Furthermore, its performance remains consistent even with unseen subjects, demonstrating generalization capability across user variations. One can also evaluate impacts of child status, child's age, different antenna setups, coverage, input type (raw CSI, averaged ACF, or full subcarrier-wise ACF), series decomposition block, two-stage training, to the system.

In some embodiments, the system can use two data augmentation strategies that leverage antenna diversity and the data patterns observed in the separated antenna setup to enhance the network's generalization in unseen environments. Since sleeping children can already be detected with high accuracy without augmentation, one can focus on evaluating the effectiveness of these strategies in the more challenging awake scenario. For example, the link-mix augmentation method can notably improve differentiation between children and adults in the awake state.

In some embodiments, the system's real-time performance delay depends on the window size and the stride used in the sliding window. The maximum delay introduced by the sliding window is equal to the window size, while the average delay is slightly larger than half of the window size.

As discussed above, the present disclosure discloses a novel deep learning framework that leverages an environment-independent ACF representation to capture spatial-temporal patterns for distinguishing child-only presence from adult and empty-seat scenarios. The system can accurately detect a child's presence inside a car regardless of their state (sleeping or awake) and distinguish child presence from adults. The system utilizes an environment-independent feature ACF instead of using raw CSI. The two synthetic data generation techniques, link permutation and link mix, are specifically designed to mimic real-world variations relevant to the task. The system employs a two-stage training procedure to address in-car data scarcity, utilizing WiFi data collected in residential environments and validating the transferability of a pre-trained encoder across different domains.

In some embodiments, the model is applied to single-child occupant scenarios and multi-occupant scenarios only when a child is present with an adult. Due to the requirement of detecting a left-alone child, one can classify child-and-adult presence scenarios as the adult class.

In some embodiments, the network can be easily extended to handle scenarios of multiple children's occupancy or child-pet coexistence, provided that the training data capturing the scenario is available. Since the system can use ACFs extracted from all subcarriers as the network input, the ACFs inherently capture motion and breathing patterns. These patterns can be leveraged to detect multi-child occupancy and to extract distinctive features associated with pets, enabling the system to differentiate between child and pet presence.

Environmental factors inside and outside the car can affect the system's performance. Specifically, when a child is not moving much, subtle motion associated with breathing can be easily corrupted by some severe conditions. In addition, periodic environmental patterns can be mistaken for breathing-like signals, leading to false alarms. To ensure robustness, the system is trained on data collected under challenging conditions such as rain, strong winds, busy parking lots, and in-vehicle systems like air conditioning and music. The environmental factors only have a marginal impact on the system's performance, demonstrating the effectiveness of the disclosed system design for real-world scenarios.

In some examples, DeepCPD uses the ACF generated from all subcarriers as input to achieve the best performance. In some examples, instead of considering all the subcarriers, one can use a separate subcarrier selection mechanism before the neural network design. The system can select a fixed number of subcarriers based on various criteria such as: motion statistic-based selection (utilizing the motion statistic feature and selecting the top-k subcarriers with maximum motion stats), selecting less noisy subcarriers, learning-based subcarrier selection. One can utilize an MLP or CNN-based subcarrier selection block in the beginning and allow the network to learn highly sensitive subcarriers before extracting features. In some examples, a similar operation is performed inside the network. Using initial subcarrier selection can reduce the network complexity and allow the network to handle varying subcarrier lengths.

In some examples, DeepCPD uses two data augmentation techniques, namely link-permutation and link-mix. In link-mix, one combine links between two data samples within one class. The system can generalize the link-mix data augmentation as follows. First, the system performs link mix between two data samples by combining links between two classes. However, in contrast to link mix within the class, one can assign a new label to the data based on how the links are combined. For instance, the generated data after combining 2 links from class A with 2 links from class B will be labeled as (label A + label B) / 2. Then the system can perform weighted link mix, by combining links as:

$$\text{generated input} = w1 * (\text{links form class A}) + w2 * (\text{links from class B}) \text{ where } w1+w2 = 1,$$

$$\text{new label for generated data} = w1 * \text{label A} + w2 * \text{label B}.$$

In some embodiments, DeepCPD uses a two-stage training to handle limited child and adult data in-cars. Instead of two-stage training, one can also employ a self-supervised training mechanism to train the encoder. For example, the system can use contrastive training to train the encoder only with residential and in-car data. The system can use an encoder-decoder architecture and learn to predict the masked input using all the data. Then, the system can use the trained encoder above for the task. The system can also perform a cluster-based training by training the encoder to group data into clusters in an unsupervised manner, possibly to three clusters: motion, breathing, and empty.

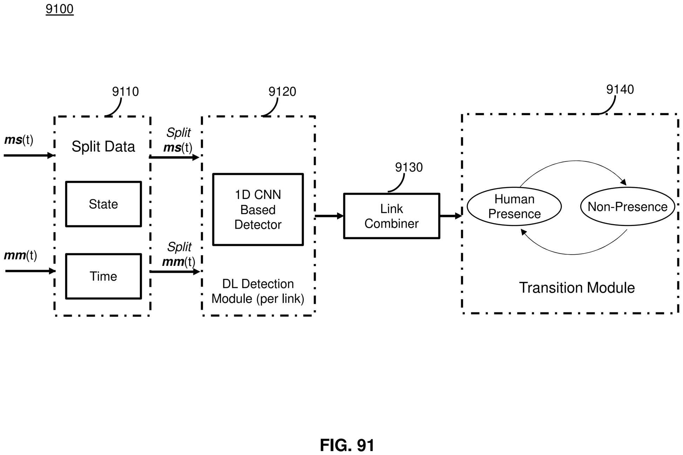

FIG. 91 illustrates an example system 9100 for occupancy detection based on deep learning, according to some embodiments of the present disclosure. As shown in FIG. 91, the system 9100 includes a split data module 9110, a deep learning detection module 9120, a link combiner 9130, and a transition module 9140.

In some embodiments, the split data module 9110 receives motion statistics data ms(t) and micromotion data mm(t) extracted for a time period, e.g. 24 hours, and splits the data according to state and time. For example, for each fixed time (24H, Day, night) and each state (inside, outside), the split data module 9110 splits data to a total of 6 sets of mm/ms.

The deep learning detection module 9120 may receive the split ms(t) and split mm(t), executes a deep learning model using these data, e.g. a 1D CNN based detector, on each link independently. The deep learning detection module 9120 can generate occupancy detection results for each link.

The link combiner 9130 may combine the detection results per link from the deep learning detection module 9120. In some examples, the combination is based on pick-max or logical OR. For example, so long as one link detects an occupancy, the venue is determined to be occupied. The venue is determined to be empty only if none of the links detects an occupancy. Other combination methods (e.g. majority rule, X% threshold, etc.) can be used without going beyond the scope of the disclosure. The link combiner 9130 can output a combined detection result to the transition module 9140. The transition module 9140 can generate and record transition states of the venue over time from human presence to non-presence, or vice versa, based on the combined detection result from the link combiner 9130.

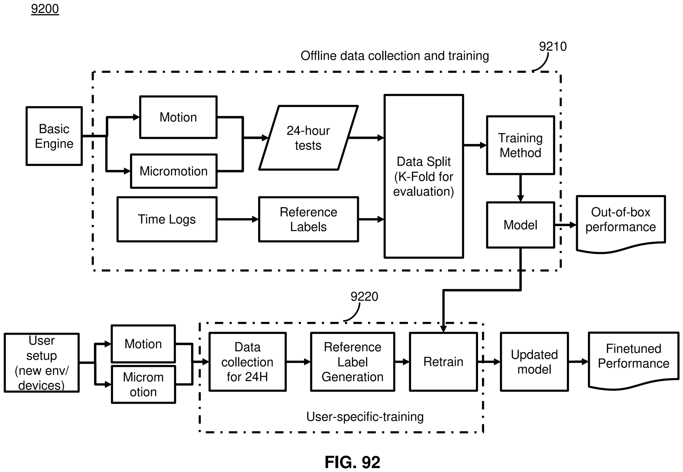

FIG. 92 illustrates an example process 9200 for training and re-training a deep learning model, according to some embodiments of the present disclosure. In some embodiments, the deep learning model may be a neural network used in the deep learning detection module 9120 of FIG. 91. As shown in FIG. 92, the process 9200 includes two stages, an offline data collection and training stage 9210 and a user-specific training stage 9220.

In some examples, during the offline data collection and training stage 9210, the motion data and micromotion data generated by a basic engine can be collected for 24 hours and split with reference labels and time logs to generate a first training dataset. The deep learning model may be trained based on the first training dataset offline. In the example of FIG. 91, different deep learning models may be trained offline for different links based on different training datasets. After the offline data collection and training stage 9210, each trained deep learning model may be stored before real-time CSI is obtained for occupancy detection.

In some examples, the user-specific training stage 9220 may be performed after a user setup, based on motion data and micromotion data collected after the user setup. The user setup may include: a new environment of the venue, adding or removing a transmitter in the venue, adding or removing a receiver in the venue, or a setup change to any transmitter or any receiver. For example, after collecting (and splitting) data for 24 hours, an automatic annotation method is performed in the user-specific training stage 9220 for user-specific reference label generation.

In some embodiments, the data captured may be sent to a cloud server, and the automatic annotation is performed on the cloud server. A local device can receive data from the cloud server afterwards. The outputs of the automatic annotation method may include a time window (e.g. one hour) of highly confident "motion/occupied" data, and a time window (e.g. one hour) of highly confident "empty" data. In some examples, the automatic annotation method can find one hour in a day with highest and lowest motion statistics on average, and label them with occupied and empty, respectively.

In some embodiments, the automatic annotation method may be performed locally on a local device. In some examples, the local device captures and stores all 24 hours of motion data and micromotion data, applies the automatic annotation method by looking at the stored data, and extracts the motion and micromotion data from the last 24 hours.

In some embodiments, the local device runs a real-time automatic annotation method. The local device can continuously keep the most confident 1-hour empty and motion data at an offline database. When a new 1-hour data is captured, it is stored and compared to the one on the offline database. If the new 1-hour data is more confident, the local device replaces the previously stored data with the new 1-hour data in the offline database.

In some embodiments, user feedback may be utilized for the automatic annotation method. If the user labels something as false positive, the device can label the previous/after K (e.g. 5-10) minutes with empty state. If the user labels it as false negative, the device can label previous/after K minutes with occupied state.

After the automatic annotation method, the annotated data is sent to the re-train module in the user-specific training stage 9220 for re-training the deep learning model. During the re-training, the new annotated data is used to re-train model parameters of the deep learning model. In some embodiments, the cloud server can perform the re-training, extract new model parameters, and push to the local device to update the deep learning model.

In some embodiments, the re-training procedure may be performed locally on the device. In some examples, the local device updates the model parameters on the local device, without need to push to the cloud.

In some examples, the re-training module may be replaced by one-shot learning or on-line learning on the local device, instead of training the model entirely from scratch. In some examples, some layer, e.g. first N layers, can be frozen during the re-training.

In some embodiments, the local device would push all the data to cloud. The cloud will run the model on the cloud, and send the detection results back to the user when needed. As such, all training and re-training can be done on the cloud, with user feedback incorporated as well.

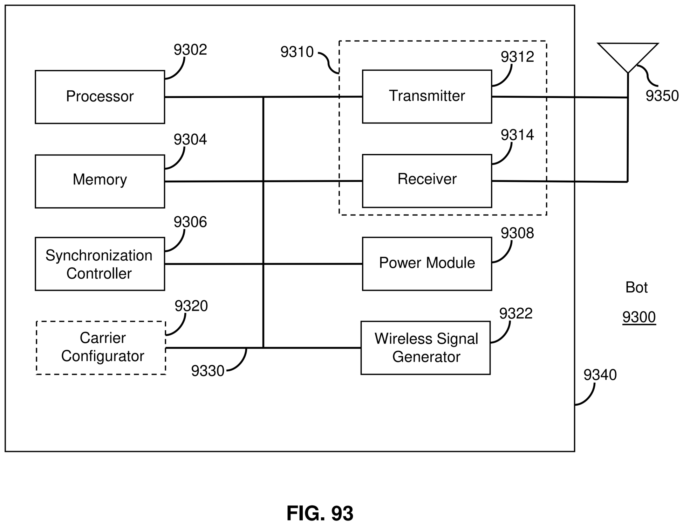

FIG. 93 illustrates an example block diagram of a first wireless device, e.g. a Bot 9300, of a system for wireless sensing, tracking, imaging and occupancy detection, according to one embodiment of the present teaching. The Bot 9300 is an example of a device that can be configured to implement the various methods described herein. As shown in FIG. 93, the Bot 9300 includes a housing 9340 containing a processor 9302, a memory 9304, a transceiver 9310 comprising a transmitter 9312 and receiver 9314, a synchronization controller 9306, a power module 9308, an optional carrier configurator 9320 and a wireless signal generator 9322.

In this embodiment, the processor 9302 controls the general operation of the Bot 9300 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 9304, which can include both read-only memory (ROM) and random access memory (RAM), can provide instructions and data to the processor 9302. A portion of the memory 9304 can also include non-volatile random access memory (NVRAM). The processor 9302 typically performs logical and arithmetic operations based on program instructions stored within the memory 9304. The instructions (a.k.a., software) stored in the memory 9304 can be executed by the processor 9302 to perform the methods described herein. The processor 9302 and the memory 9304 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 9310, which includes the transmitter 9312 and receiver 9314, allows the Bot 9300 to transmit and receive data to and from a remote device (e.g., an Origin or another Bot). An antenna 9350 is typically attached to the housing 9340 and electrically coupled to the transceiver 9310. In various embodiments, the Bot 9300 includes (not shown) multiple transmitters, multiple receivers, and multiple transceivers. In one embodiment, the antenna 9350 is replaced with a multi-antenna array 9350 that can form a plurality of beams each of which points in a distinct direction. The transmitter 9312 can be configured to wirelessly transmit signals having different types or functions, such signals being generated by the processor 9302. Similarly, the receiver 9314 is configured to receive wireless signals having different types or functions, and the processor 9302 is configured to process signals of a plurality of different types.

The Bot 9300 in this example may serve as a Bot or Type 1 device or sensing transmitter for wireless sensing, tracking, imaging and occupancy detection. For example, the wireless signal generator 9322 may generate and transmit, via the transmitter 9312, a wireless signal through a wireless multipath channel impacted by a motion of an object in the venue. The wireless signal carries information of the channel. Because the channel was impacted by the motion, the channel information includes motion information that can represent the motion of the object. As such, the motion can be indicated and detected based on the wireless signal. The generation of the wireless signal at the wireless signal generator 9322 may be based on a request for motion detection from another device, e.g. an Origin, or based on a system pre-configuration. That is, the Bot 9300 may or may not know that the wireless signal transmitted will be used to detect motion.

The synchronization controller 9306 in this example may be configured to control the operations of the Bot 9300 to be synchronized or un-synchronized with another device, e.g. an Origin or another Bot. In one embodiment, the synchronization controller 9306 may control the Bot 9300 to be synchronized with an Origin that receives the wireless signal transmitted by the Bot 9300. In another embodiment, the synchronization controller 9306 may control the Bot 9300 to transmit the wireless signal asynchronously with other Bots. In another embodiment, each of the Bot 9300 and other Bots may transmit the wireless signals individually and asynchronously.

The carrier configurator 9320 is an optional component in Bot 9300 to configure transmission resources, e.g. time and carrier, for transmitting the wireless signal generated by the wireless signal generator 9322. In one embodiment, each CI of the time series of CI has one or more components each corresponding to a carrier or sub-carrier of the transmission of the wireless signal. The detection of the motion may be based on motion detections on any one or any combination of the components.

The power module 9308 can include a power source such as one or more batteries, and a power regulator, to provide regulated power to each of the above-described modules in FIG. 93. In some embodiments, if the Bot 9300 is coupled to a dedicated external power source (e.g., a wall electrical outlet), the power module 9308 can include a transformer and a power regulator.

The various modules discussed above are coupled together by a bus system 9330. The bus system 9330 can include a data bus and, for example, a power bus, a control signal bus, and/or a status signal bus in addition to the data bus. It is understood that the modules of the Bot 9300 can be operatively coupled to one another using any suitable techniques and mediums.

Although a number of separate modules or components are illustrated in FIG. 93, persons of ordinary skill in the art will understand that one or more of the modules can be combined or commonly implemented. For example, the processor 9302 can implement not only the functionality described above with respect to the processor 9302, but also implement the functionality described above with respect to the wireless signal generator 9322. Conversely, each of the modules illustrated in FIG. 93 can be implemented using a plurality of separate components or elements.

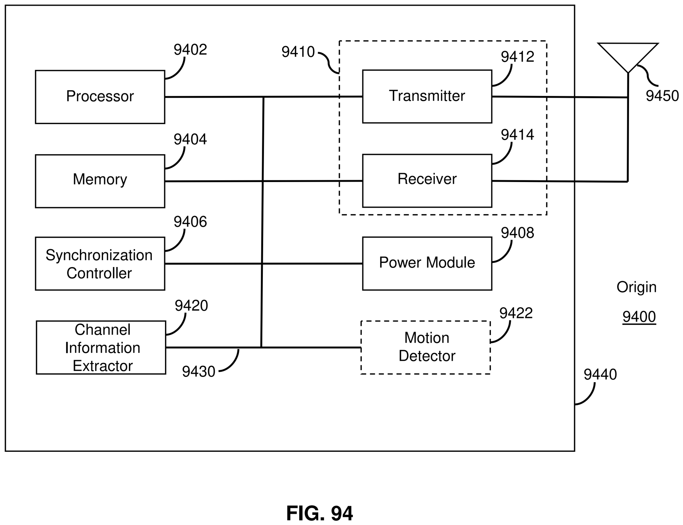

FIG. 94 illustrates an example block diagram of a second wireless device, e.g. an Origin 9400, of a system for wireless sensing, tracking, imaging and occupancy detection, according to one embodiment of the present teaching. The Origin 9400 is an example of a device that can be configured to implement the various methods described herein. The Origin 9400 in this example may in this example may serve as Origin or Type 2 device or sensing receiver for wireless sensing, tracking, imaging and occupancy detection. As shown in FIG. 94, the Origin 9400 includes a housing 9440 containing a processor 9402, a memory 9404, a transceiver 9410 comprising a transmitter 9412 and a receiver 9414, a power module 9408, a synchronization controller 9406, a channel information extractor 9420, and an optional motion detector 9422.

In this embodiment, the processor 9402, the memory 9404, the transceiver 9410 and the power module 9408 work similarly to the processor 9302, the memory 9304, the transceiver 9310 and the power module 9308 in the Bot 9300. An antenna 9450 or a multi-antenna array 9450 is typically attached to the housing 9440 and electrically coupled to the transceiver 9410.

The Origin 9400 may be a second wireless device that has a different type from that of the first wireless device (e.g. the Bot 900). In particular, the channel information extractor 9420 in the Origin 9400 is configured for receiving the wireless signal through the wireless multipath channel impacted by the motion of the object in the venue, and obtaining a time series of channel information (CI) of the wireless multipath channel based on the wireless signal. The channel information extractor 9420 may send the extracted CI to the optional motion detector 9422 or to a motion detector outside the Origin 9400 for detecting object motion in the venue.

The motion detector 9422 is an optional component in the Origin 9400. In one embodiment, it is within the Origin 9400 as shown in FIG. 94. In another embodiment, it is outside the Origin 9400 and in another device, which may be a Bot, another Origin, a cloud server, a fog server, a local server, and an edge server. The optional motion detector 9422 may be configured for detecting the motion of the object in the venue based on motion information related to the motion of the object. The motion information associated with the first and second wireless devices is computed based on the time series of CI by the motion detector 9422 or another motion detector outside the Origin 9400.

The synchronization controller 9406 in this example may be configured to control the operations of the Origin 9400 to be synchronized or un-synchronized with another device, e.g. a Bot, another Origin, or an independent motion detector. In one embodiment, the synchronization controller 9406 may control the Origin 9400 to be synchronized with a Bot that transmits a wireless signal. In another embodiment, the synchronization controller 9406 may control the Origin 9400 to receive the wireless signal asynchronously with other Origins. In another embodiment, each of the Origin 9400 and other Origins may receive the wireless signals individually and asynchronously. In one embodiment, the optional motion detector 9422 or a motion detector outside the Origin 9400 is configured for asynchronously computing respective heterogeneous motion information related to the motion of the object based on the respective time series of CI.

The various modules discussed above are coupled together by a bus system 9430. The bus system 9430 can include a data bus and, for example, a power bus, a control signal bus, and/or a status signal bus in addition to the data bus. It is understood that the modules of the Origin 9400 can be operatively coupled to one another using any suitable techniques and mediums.

Although a number of separate modules or components are illustrated in FIG. 94, persons of ordinary skill in the art will understand that one or more of the modules can be combined or commonly implemented. For example, the processor 9402 can implement not only the functionality described above with respect to the processor 9402, but also implement the functionality described above with respect to the channel information extractor 9420. Conversely, each of the modules illustrated in FIG. 94 can be implemented using a plurality of separate components or elements.

In one embodiment, in addition to the Bot 9300 and the Origin 9400, the system may also comprise: an assistance device, a third wireless device, e.g. another Bot, configured for transmitting an additional heterogeneous wireless signal through an additional wireless multipath channel impacted by the motion of the object in the venue, or a fourth wireless device, e.g. another Origin, that has a different type from that of the third wireless device. The fourth wireless device may be configured for: receiving the additional heterogeneous wireless signal through the additional wireless multipath channel impacted by the motion of the object in the venue, and obtaining a time series of additional channel information (CI) of the additional wireless multipath channel based on the additional heterogeneous wireless signal. The additional CI of the additional wireless multipath channel is associated with a different protocol or configuration from that associated with the CI of the wireless multipath channel. For example, the wireless multipath channel is associated with LTE, while the additional wireless multipath channel is associated with Wi-Fi. In this case, the optional motion detector 9422 or a motion detector outside the Origin 9400 is configured for detecting the motion of the object in the venue based on both the motion information associated with the first and second wireless devices and additional motion information associated with the third and fourth wireless devices computed by at least one of: an additional motion detector and the fourth wireless device based on the time series of additional CI.

In some embodiments, the present teaching discloses systems and methods for wireless based occupancy detection.

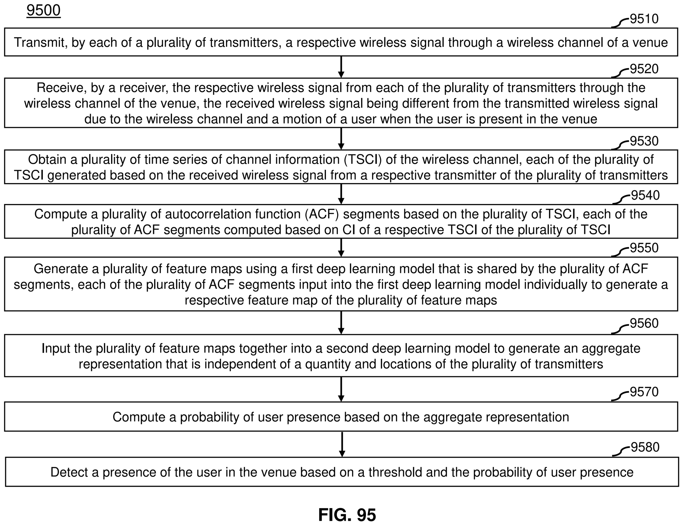

FIG. 95 illustrates a flow chart of an example method 9500 for wireless based occupancy detection, according to some embodiments of the present disclosure. In various embodiments, the method 9500 can be performed by any of the systems disclosed above. At operation 9510, a respective wireless signal is transmitted by each of a plurality of transmitters through a wireless channel of a venue. At operation 9520, the respective wireless signal is received by a receiver from each of the plurality of transmitters through the wireless channel of the venue, the received wireless signal being different from the transmitted wireless signal due to the wireless channel and a motion of a user when the user is present in the venue. At operation 9530, a plurality of time series of channel information (TSCI) of the wireless channel is obtained, each of the plurality of TSCI generated based on the received wireless signal from a respective transmitter of the plurality of transmitters. At operation 9540, a plurality of autocorrelation function (ACF) segments is computed based on the plurality of TSCI, each of the plurality of ACF segments computed based on CI of a respective TSCI of the plurality of TSCI. At operation 9550, a plurality of feature maps is generated using a first deep learning model that is shared by the plurality of ACF segments, each of the plurality of ACF segments input into the first deep learning model individually to generate a respective feature map of the plurality of feature maps. At operation 9560, the plurality of feature maps are input together into a second deep learning model to generate an aggregate representation that is independent of a quantity and locations of the plurality of transmitters. At operation 9570, a probability of user presence is computed based on the aggregate representation. At operation 9580, a presence of the user is detected in the venue based on a threshold and the probability of user presence.

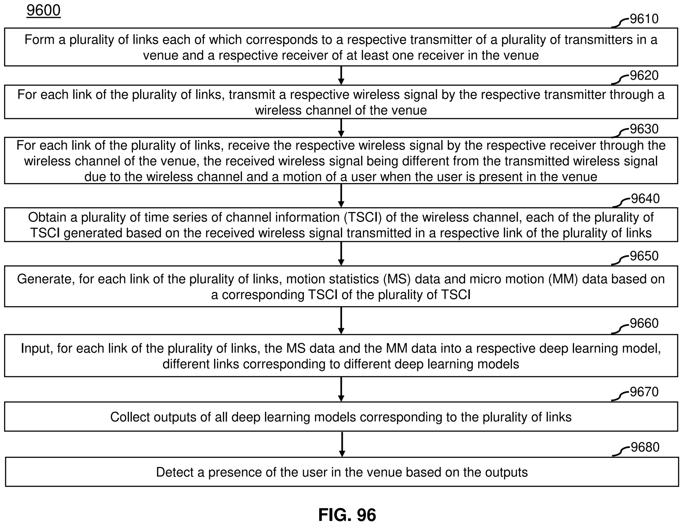

FIG. 96 illustrates a flow chart of another example method 9600 for wireless based occupancy detection, according to some embodiments of the present disclosure. In various embodiments, the method 9600 can be performed by any of the systems disclosed above. At operation 9610, a plurality of links is formed, each corresponding to a respective transmitter of a plurality of transmitters in a venue and a respective receiver of at least one receiver in the venue. At operation 9620, for each link of the plurality of links, a respective wireless signal is transmitted by the respective transmitter through a wireless channel of the venue. At operation 9630, for each link of the plurality of links, the respective wireless signal is received by the respective receiver through the wireless channel of the venue, the received wireless signal being different from the transmitted wireless signal due to the wireless channel and a motion of a user when the user is present in the venue. At operation 9640, a plurality of time series of channel information (TSCI) of the wireless channel is obtained, each of the plurality of TSCI generated based on the received wireless signal transmitted in a respective link of the plurality of links. At operation 9650, for each link of the plurality of links, motion statistics (MS) data and micro motion (MM) data are generated based on a corresponding TSCI of the plurality of TSCI. At operation 9660, for each link of the plurality of links, the MS data and the MM data are input into a respective deep learning model, different links corresponding to different deep learning models. At operation 9670, outputs of all deep learning models corresponding to the plurality of links are collected. At operation 9680, a presence of the user in the venue is detected based on the outputs.

The following numbered clauses provide examples for wireless based occupancy detection.

Clause 3818_1. A system for wireless based occupancy detection, comprising: a plurality of transmitters each of which is configured to transmit a respective wireless signal through a wireless channel of a venue; a receiver configured to receive the respective wireless signal from each of the plurality of transmitters through the wireless channel of the venue, wherein the received wireless signal differs from the transmitted wireless signal due to the wireless channel and a motion of a user when the user is present in the venue; and a processor configured to: obtain a plurality of time series of channel information (TSCI) of the wireless channel, wherein each of the plurality of TSCI is generated based on the received wireless signal from a respective transmitter of the plurality of transmitters, compute a plurality of autocorrelation function (ACF) segments based on the plurality of TSCI, wherein each of the plurality of ACF segments is computed based on CI of a respective TSCI of the plurality of TSCI, generate a plurality of feature maps using a first deep learning model that is shared by the plurality of ACF segments, wherein each of the plurality of ACF segments is input into the first deep learning model individually to generate a respective feature map of the plurality of feature maps, input the plurality of feature maps together into a second deep learning model to generate an aggregate representation that is independent of a quantity and locations of the plurality of transmitters, compute a probability of user presence based on the aggregate representation, and detect a presence of the user in the venue based on a threshold and the probability of user presence.

Clause 3818_2. The system of clause 3818_1, wherein the processor is configured to compute the plurality of ACF segments based at least partially by: computing a time series of ACF (TSACF) based on each TSCI of the plurality of TSCI using a sliding time window; and constructing an ACF segment for each TSCI based on the TSACF, wherein the ACF segment has two dimensions including: a first dimension representing a number of time instances in the sliding time window, and a second dimension representing a number of time lags at each time instance.

Clause 3818_3. The system of clause 3818_2, wherein: the first deep learning model is a convolutional neural network; the first deep learning model comprises a plurality of convolutional layers and at least one max-pooling layer; a non-linear activation function is applied after each of the plurality of convolutional layers; and the first deep learning model, once being trained based on ACF data, is adaptive to any number of transmitters and any number of TSCI.

Clause 3818_4. The system of clause 3818_3, wherein each feature map of the plurality of feature maps is a combination of at least: ACF features related to a moving motion of the user; ACF features related to a breathing motion of the user; ACF features related to a heartbeat motion of the user; and ACF features related to a gait pattern of the user.

Clause 3818_5. The system of clause 3818_4, wherein: the second deep learning model is trained based on a training dataset comprising sample ACF data and domain information representing an environment type associated with the venue; the second deep learning model learns presence related behaviors with different sensitivity levels depending on the environment type; and the environment type associated with the venue indicates at least one of: an ownership type, an intended purpose, a structure, a size, a usage type, or amenities associated with the venue.

Clause 3818_6. The system of clause 3818_5, wherein: the domain information is input into the second deep learning model as a conditioning token; and the second deep learning model is configured to compute attentions based on the conditioning token.

Clause 3818_7. The system of clause 3818_6, wherein: the domain information is input into the second deep learning model by appending a domain embedding for each feature map of the plurality of feature maps based on feature-wise linear modulation.

Clause 3818_8. The system of clause 3818_5, wherein: the domain information is input into the second deep learning model by concatenating the domain information with the aggregate representation.

Clause 3818_9. The system of clause 3818_5, wherein: the second deep learning model is a transformer, wherein positional embeddings corresponding to locations and orders of devices in the venue are removed from the transformer; and the second deep learning model comprises: a classification token which is a learnable embedding with a same dimensionality as each feature map and is configured to aggregate all information from the plurality of feature maps for presence detection, an attention map including attention heads configured to measure an importance of each feature map of the plurality of feature maps and assign a weight to the feature map based on the importance, and a dense layer configured to generate the aggregate representation based on a weighted combination of the plurality of feature maps output by the attention heads.

Clause 3818_10. The system of clause 3818_5, wherein: the second deep learning model is a set transformer, wherein the set transformer is designed to apply independent of the quantity and locations of the plurality of transmitters; and the second deep learning model comprises: a plurality of induced set attention block (ISAB) layers configured to learn device interactions through learned induced points based on attentions computed between the plurality of ISAB layers, and a pooling multi-head (PMA) attention layer configured to adaptively select most relevant transmitters from the plurality of transmitters and combine a set of embedding elements into the aggregate representation having a fixed size.

Clause 3818_11. The system of clause 3818_5, wherein the processor is configured to compute the probability of user presence based at least partially by: inputting the aggregate representation into a classifier to compute a class probability, wherein the class probability represents a likelihood that there is any user present in the venue.

Clause 3818_12. The system of clause 3818_11, wherein the processor is configured to detect the presence of the user based at least partially by: applying a median filter to the class probability to smooth out transient spikes which are considered noise or non-genuine occupancy events, wherein the median filter is configured to analyze the class probability over a time window to generate a smoothed class probability; comparing the smoothed class probability with the threshold, wherein the threshold is predetermined based on a receiver operating characteristic (ROC) curve that is generated based on detection rates and false alarm rates associated with various thresholds; and detecting the presence of the user in the venue in accordance with a determination that the smoothed class probability is greater than the threshold.

Clause 3818_13. The system of clause 3818_12, wherein: the user is one of: a human being, an animal, a living life, a robot, a moving tool, or a moving object controlled by artificial intelligence (AI).

Clause 3818_14. The system of clause 3818_13, wherein the processor is further configured to perform at least one of the following tasks based on a result of presence detection: an energy control task comprising a control of heating, ventilation, air conditioning, lighting, or another application to reduce energy consumption; and a security task comprising identifying, noticing, alerting, or alarming an unauthorized presence in the venue.

Clause 3818_15. A method for wireless based occupancy detection, comprising: transmitting, by each of a plurality of transmitters, a respective wireless signal through a wireless channel of a venue; receiving, by a receiver, the respective wireless signal from each of the plurality of transmitters through the wireless channel of the venue, wherein the received wireless signal differs from the transmitted wireless signal due to the wireless channel and a motion of a user when the user is present in the venue; obtaining a plurality of time series of channel information (TSCI) of the wireless channel, wherein each of the plurality of TSCI is generated based on the received wireless signal from a respective transmitter of the plurality of transmitters; computing a plurality of autocorrelation function (ACF) segments based on the plurality of TSCI, wherein each of the plurality of ACF segments is computed based on CI of a respective TSCI of the plurality of TSCI; generating a plurality of feature maps using a first deep learning model that is shared by the plurality of ACF segments, wherein each of the plurality of ACF segments is input into the first deep learning model individually to generate a respective feature map of the plurality of feature maps; inputting the plurality of feature maps together into a second deep learning model to generate an aggregate representation that is independent of a quantity and locations of the plurality of transmitters; computing a probability of user presence based on the aggregate representation; and detecting a presence of the user in the venue based on a threshold and the probability of user presence.

Clause 3818_16. The method of clause 3818_15, wherein: the first deep learning model is a convolutional neural network; the first deep learning model comprises a plurality of convolutional layers and at least one max-pooling layer; a non-linear activation function is applied after each of the plurality of convolutional layers; the first deep learning model, once being trained based on ACF data, is adaptive to any number of transmitters and any number of TSCI; the second deep learning model is trained based on a training dataset comprising sample ACF data and domain information representing an environment type associated with the venue; and the second deep learning model learns presence related behaviors with different sensitivity levels depending on the environment type.

Clause 3818_17. The method of clause 3818_16, wherein: the second deep learning model is a transformer, wherein positional embeddings corresponding to locations and orders of devices in the venue are removed from the transformer; and the second deep learning model comprises: a classification token which is a learnable embedding with a same dimensionality as each feature map and is configured to aggregate all information from the plurality of feature maps for presence detection, an attention map including attention heads configured to measure an importance of each feature map of the plurality of feature maps and assign a weight to the feature map based on the importance, and a dense layer configured to generate the aggregate representation based on a weighted combination of the plurality of feature maps output by the attention heads.

Clause 3818_18. The method of clause 3818_16, wherein: the second deep learning model is a set transformer, wherein the set transformer is designed to apply independent of the quantity and locations of the plurality of transmitters; and the second deep learning model comprises: a plurality of induced set attention block (ISAB) layers configured to learn device interactions through learned induced points based on attentions computed between the plurality of ISAB layers, and a pooling multi-head (PMA) attention layer configured to adaptively select most relevant transmitters from the plurality of transmitters and combine a set of embedding elements into the aggregate representation having a fixed size.

Clause 3818_19. The method of clause 3818_16, wherein: computing the probability of user presence comprises inputting the aggregate representation into a classifier to compute a class probability, wherein the class probability represents a likelihood that there is any user present in the venue; and detecting the presence of the user comprises: applying a median filter to the class probability to smooth out transient spikes which are considered noise or non-genuine occupancy events, wherein the median filter is configured to analyze the class probability over a time window to generate a smoothed class probability, comparing the smoothed class probability with the threshold, wherein the threshold is predetermined based on a receiver operating characteristic (ROC) curve that is generated based on detection rates and false alarm rates associated with various thresholds, and detecting the presence of the user in the venue in accordance with a determination that the smoothed class probability is greater than the threshold.

Clause 3818_20. A device for wireless based occupancy detection, comprising: a receiver configured to receive a respective wireless signal from each of a plurality of transmitters through a wireless channel of a venue, wherein the received wireless signal differs from the transmitted wireless signal due to the wireless channel and a motion of a user when the user is present in the venue; and a processor configured to: obtain a plurality of time series of channel information (TSCI) of the wireless channel, wherein each of the plurality of TSCI is generated based on the received wireless signal from a respective transmitter of the plurality of transmitters; compute a plurality of autocorrelation function (ACF) segments based on the plurality of TSCI, wherein each of the plurality of ACF segments is computed based on CI of a respective TSCI of the plurality of TSCI; generate a plurality of feature maps using a first deep learning model that is shared by the plurality of ACF segments, wherein each of the plurality of ACF segments is input into the first deep learning model individually to generate a respective feature map of the plurality of feature maps; input the plurality of feature maps together into a second deep learning model to generate an aggregate representation that is independent of a quantity and locations of the plurality of transmitters; compute a probability of user presence based on the aggregate representation; and detect a presence of the user in the venue based on a threshold and the probability of user presence.

The following numbered clauses provide examples for deep learning based occupancy detection.

Clause 3818_A1. A system for wireless based occupancy detection, comprising: a plurality of transmitters in a venue; at least one receiver in the venue, wherein: the plurality of transmitters and the at least one receiver form a plurality of links each of which corresponds to a respective transmitter of the plurality of transmitters and a respective receiver of the at least one receiver, for each link of the plurality of links, the respective transmitter is configured to transmit a respective wireless signal through a wireless channel of the venue, for each link of the plurality of links, the respective receiver is configured to receive the respective wireless signal through the wireless channel of the venue, wherein the received wireless signal differs from the transmitted wireless signal due to the wireless channel and a motion of a user when the user is present in the venue; and a processor configured to: obtain a plurality of time series of channel information (TSCI) of the wireless channel, wherein each of the plurality of TSCI is generated based on the received wireless signal transmitted in a respective link of the plurality of links, generate, for each link of the plurality of links, motion statistics (MS) data and micro motion (MM) data based on a corresponding TSCI of the plurality of TSCI, input, for each link of the plurality of links, the MS data and the MM data into a respective deep learning model, wherein different links correspond to different deep learning models, collect outputs of all deep learning models corresponding to the plurality of links, and detect a presence of the user in the venue based on the outputs.

Clause 3818_A2. The system of clause 3818_A1, wherein the processor is configured to generate, for each link of the plurality of links, the MS data and the MM data based at least partially by: generating the MS data based on the TSCI in the link and a state-time splitter, wherein each channel information (CI) of the TSCI comprises N1 CI components, wherein N1 is an integer greater than one; selecting N2 CI components from the N1 CI components of each CI adaptively for a time window based on a first analysis of the N1 CI components of each CI in the TSCI, wherein N2 is an integer less than or equal to N1; computing a MM statistics for the time window based on the N2 selected CI components of every CI in the TSCI and the first analysis; and generating the MM data based on the MM statistics and the state-time splitter.

Clause 3818_A3. The system of clause 3818_A2, wherein selecting the N2 CI components for the time window comprises: subdividing the time window into M sub-windows, wherein M is an integer greater than one, for each of the M sub-windows and for each of the N1 CI components, computing a respective first statistics associated with the respective CI component based on the respective CI component of each CI in the respective sub-window, and selecting the N2 CI components for the time window based on the N1*M first statistics, wherein a number of second statistics are computed for the time window based on the N1*M first statistics, wherein the MM statistics is computed for the time window based on the number of second statistics.

Clause 3818_A4. The system of clause 3818_A3, wherein the processor is further configured to: generate, for each link of the plurality of links, a first training dataset including split MS data and split MM data each of which is split into state data and time data; train the respective deep learning model corresponding to the link using the first training dataset; and store the trained deep learning model before the plurality of TSCI is obtained.

Clause 3818_A5. The system of clause 3818_A4, wherein the processor is further configured to: re-train, for at least one link of the plurality of links, at least one trained deep learning model corresponding to the at least one link before the plurality of TSCI is obtained, wherein the at least one trained deep learning model is re-trained in response to at least one of: a new environment of the venue, adding or removing a transmitter in the venue, adding or removing a receiver in the venue, or a setup change to any transmitter or any receiver.

Clause 3818_A6. The system of clause 3818_A5, wherein the processor is further configured to re-train the at least one trained deep learning model based at least partially by: generating a second training dataset including MS data and MM data; automatically generating annotated data for the second training dataset, wherein the annotated data includes annotations for training data in the second training dataset with a highest confidence in a time window among training data in all time windows, wherein the highest confidence is regarding an annotation of user presence or user empty for the venue; re-training model parameters of the at least one trained deep learning model using the second training dataset and the annotated data; and generating an updated deep learning model based on the re-trained model parameters.

Clause 3818_A7. The system of clause 3818_A6, wherein automatically generating the annotated data comprises: partitioning the MS data and the MM data in the second training dataset into a plurality of time windows after the MS data and the MM data in the second training dataset are collected for a time period covering the plurality of time windows; automatically generating annotations for the partitioned MS data and the partitioned MM data in each of the plurality of time windows, wherein each annotation is generated with a confidence score representing a confidence level regarding the annotation of user presence or user empty for the venue during a corresponding time window; and selecting a time window among the plurality of time windows, such that the partitioned MS data and the partitioned MM data in the selected time window have the highest confidence score among all data in the plurality of time windows.

Clause 3818_A8. The system of clause 3818_A6, wherein automatically generating the annotated data comprises: storing motion data including MS data and MM data in a database once the motion data is collected for a predetermined time window; automatically generating an annotation for the motion data in the predetermined time window, wherein the annotation is generated with a first confidence score representing a confidence level regarding the annotation of user presence or user empty for the venue during the predetermined time window; collecting new motion data for a new time window having a same length as the predetermined time window; generating a new annotation for the new motion data in the new time window, wherein the new annotation is generated with a second confidence score representing a confidence level regarding the new annotation of user presence or user empty for the venue during the new time window; comparing the first confidence score of the stored motion data with the second confidence score of the new motion data; replacing the motion data in the database with the new motion data in accordance with a determination that the second confidence score is greater than the first confidence score; and repeating the steps of collecting, generating, comparing, and replacing until motion data is collected for a predetermined time period.

Clause 3818_A9. The system of clause 3818_A6, wherein automatically generating the annotated data comprises: obtaining user feedback including at least one label each of which indicates false positive or false negative regarding an annotation of user presence or user empty for the venue; in response to a label indicating an annotation as false positive, annotating a preceding time window and/or a succeeding time window with a user empty state; and in response to a label indicating an annotation as false negative, annotating the preceding time window and/or the succeeding time window with a user presence state.

Clause 3818_A10. The system of clause 3818_A6, wherein: the re-training comprises re-training the at least one trained deep learning model based on at least one of: one-shot learning, on-line learning, or layer freezing.

Clause 3818_A11. The system of clause 3818_A10, wherein: each of the automatically generating and the re-training is performed on a cloud server or a local device in the venue.

Clause 3818_A12. The system of clause 3818_A11, wherein: the processor is configured to input the MS data and the MM data into a respective deep learning model based at least partially by inputting the MS data and the MM data into the updated deep learning model.

Clause 3818_A13. The system of clause 3818_A12, wherein the updated deep learning model is at least one of: a neural network, a transformer, or another artificial intelligence (AI) model.

Clause 3818_A14. A method for wireless based occupancy detection, comprising: forming a plurality of links each of which corresponds to a respective transmitter of a plurality of transmitters in a venue and a respective receiver of at least one receiver in the venue; for each link of the plurality of links, transmitting a respective wireless signal by the respective transmitter through a wireless channel of the venue; for each link of the plurality of links, receiving the respective wireless signal by the respective receiver through the wireless channel of the venue, wherein the received wireless signal differs from the transmitted wireless signal due to the wireless channel and a motion of a user when the user is present in the venue; obtaining a plurality of time series of channel information (TSCI) of the wireless channel, wherein each of the plurality of TSCI is generated based on the received wireless signal transmitted in a respective link of the plurality of links; generating, for each link of the plurality of links, motion statistics (MS) data and micro motion (MM) data based on a corresponding TSCI of the plurality of TSCI; inputting, for each link of the plurality of links, the MS data and the MM data into a respective deep learning model, wherein different links correspond to different deep learning models; collecting outputs of all deep learning models corresponding to the plurality of links; and detecting a presence of the user in the venue based on the outputs.

Clause 3818_A15. A device for wireless based occupancy detection, comprising a processor configured to: obtain a

plurality of time series of channel information (TSCI) of a wireless channel of a venue, wherein: a plurality of transmitters in the venue and at least one receiver in the venue form a plurality of links each of which corresponds to a respective transmitter of the plurality of transmitters and a respective receiver of the at least one receiver, for each link of the plurality of links, the respective transmitter is configured to transmit a respective wireless signal through the wireless channel of the venue, for each link of the plurality of links, the respective receiver is configured to receive the respective wireless signal through the wireless channel of the venue, wherein the received wireless signal differs from the transmitted wireless signal due to the wireless channel and a motion of a user when the user is present in the venue, and each of the plurality of TSCI is generated based on the received wireless signal transmitted in a respective link of the plurality of links; generate, for each link of the plurality of links, motion statistics (MS) data and micro motion (MM) data based on a corresponding TSCI of the plurality of TSCI; input, for each link of the plurality of links, the MS data and the MM data into a respective deep learning model, wherein different links correspond to different deep learning models; collect outputs of all deep learning models corresponding to the plurality of links; and detect a presence of the user in the venue based on the outputs.

The following numbered clauses provide examples for child presence detection.

Clause 3818_B1. A method for child presence detection, comprising: transmitting a wireless signal by at least one transmitting device through a wireless channel of a venue; receiving the wireless signal by at least one receiving device in the venue, wherein the received wireless signal differs from the transmitted wireless signal due to the wireless channel and a motion of a user when the user is present in the venue; obtaining a time series of channel information (TSCI) of the wireless channel based on the received wireless signal; computing an autocorrelation function (ACF) feature matrix of the TSCI; inputting the ACF feature matrix into a deep learning model to generate a model output, wherein the deep learning model is trained to perform a classification regarding a status of the venue into three classes: an empty class representing an empty status of the venue, a child class representing presence of a child in the venue, and an adult class representing presence of an adult in the venue; and based on the model output, determining whether there is any user present in the venue and whether a present user in the venue is a child or an adult.

Clause 3818_B2. The method of clause 3818_B1, wherein: the venue is at least one of: a vehicle, a house, a building, or a room; the at least one transmitting device includes a plurality of transmitting devices distributed in the venue; the at least one receiving device includes a plurality of receiving devices distributed in the venue; the plurality of transmitting devices and the plurality of receiving devices form a plurality of links each corresponding to a respective transmitting device of the plurality of transmitting devices and a respective receiving device of the plurality of receiving devices; and the TSCI is obtained based on wireless signals transmitted via the plurality of links.

Clause 3818_B3. The method of clause 3818_B2, wherein: the ACF feature matrix includes full ACF information of the TSCI; the ACF feature matrix includes ACF computed independently for each subcarrier; and the ACF feature matrix is a two-dimensional matrix having a first dimension representing a total number of subcarriers across the plurality of links, and a second dimension representing a total number of time lags considered when computing the ACF.

Clause 3818_B4. The method of clause 3818_B3, wherein the deep learning model comprises: a transformer-based encoder configured to extract spatiotemporal representations from the ACF feature matrix; and a multilayer perceptron (MLP) neural network configured to map the spatiotemporal representations to the model output.

Clause 3818_B5. The method of clause 3818_B4, wherein the transformer-based encoder comprises: an auto-correlation-based attention block configured to learn both subcarrier-local effects and cross-subcarrier dependencies based on cross-correlation scores using learnable linear transformations and Fourier transformations; a series decomposition block configured to separate data into trend components and seasonal components by isolating periodic patterns from static or slowly varying noise; and a feedforward network configured to integrate information across subcarriers using at least two one-dimensional convolutional layers, each followed by an activation function.

Clause 3818_B6. The method of clause 3818_B5, wherein: the MLP neural network comprises a plurality of fully connected layers, each followed by a rectified linear unit (ReLU) activation function; and the plurality of fully connected layers are configured to: compress the spatiotemporal representations into a low-dimensional representation having a lower dimension than the spatiotemporal representations, and map the low-dimensional representation to three class probabilities each corresponding to a respective one of the three classes: empty class, adult class, and child class.

Clause 3818_B7. The method of clause 3818_B6, further comprising: performing temporal smoothing by applying a moving average filter to the three class probabilities using a sliding window based on past predictions.

Clause 3818_B8. The method of clause 3818_B7, further comprising: training the deep learning model based on two stages, by: training, during a first stage, the deep learning model using labeled data collected from indoor environments to generate a pre-trained model, wherein all adult and child data are grouped into a single class labeled as presence; and tuning, during a second stage, the pre-trained model using a modified MLP head designed for a three-class classification task.

Clause 3818_B9. The method of clause 3818_B8, wherein: the modified MLP head has a higher learning rate compared to the pre-trained model; the modified MLP head is fed with a smaller batch size compared to the pre-trained model; and the tuning comprising: initially freezing layers of the pre-trained model while training only the modified MLP head; and gradually unfreezing the layers of the pre-trained model by employing discriminative learning rates.

Clause 3818_B10. The method of clause 3818_B9, wherein training the deep learning model comprising: collecting data using diverse antenna configurations; generating synthetic data based on link permutation and link mix between data samples by combining links between classes; generating a training dataset using the collected data and the synthetic data; and training the deep learning model using the training dataset.

Clause 3818_B11. A system for child presence detection, comprising: at least one transmitting device configured to transmit a wireless signal through a wireless channel of a venue; at least one receiving device configured to receive the wireless signal, wherein the received wireless signal differs from the transmitted wireless signal due to the wireless channel and a motion of a user when the user is present in the venue; and a processor configured to: obtain a time series of channel information (TSCI) of the wireless channel based on the received wireless signal, compute an autocorrelation function (ACF) feature matrix of the TSCI, input the ACF feature matrix into a deep learning model to generate a model output, wherein the deep learning model is trained to perform a classification regarding a status of the venue into three classes: an empty class representing an empty status of the venue, a child class representing presence of a child in the venue, and an adult class representing presence of an adult in the venue, and based on the model output, determine whether there is any user present in the venue and whether a present user in the venue is a child or an adult.

Clause 3818_B12. A device for child presence detection, comprising: a receiver configured to receive a wireless signal from at least one transmitting device through a wireless channel of a venue, wherein the received wireless signal differs from the transmitted wireless signal due to the wireless channel and a motion of a user when the user is present in the venue; and a processor configured to: obtain a time series of channel information (TSCI) of the wireless channel based on the received wireless signal, compute an autocorrelation function (ACF) feature matrix of the TSCI, input the ACF feature matrix into a deep learning model to generate a model output, wherein the deep learning model is trained to perform a classification regarding a status of the venue into three classes: an empty class representing an empty status of the venue, a child class representing presence of a child in the venue, and an adult class representing presence of an adult in the venue, and based on the model output, determine whether there is any user present in the venue and whether a present user in the venue is a child or an adult.

Indoor intrusion detection systems (IDS) play a critical role in security for both residential and commercial spaces. Existing IDS solutions either require dedicated and often expensive equipment deployment from professionals or suffer from annoyingly high false alarm rates (FARs) due to non-human motion. In some embodiments, GuardFi is disclosed, as a robust through-the-wall indoor IDS that mitigates the interference from non-human subjects using ubiquitous WiFi signals. GuardFi includes four key components: a robust signal pre-processing methods to extract environment-independent statistic, a ResNet model to extract features of indoor moving subjects, a Long Short-Term Memory-based state machine to incorporate temporal data for accurate intrusion detection, and few-shot learning to boost system performance on unseen motion sources. GuardFi is independent of the device location, subject's orientation, and environmental changes, enabling swift, efficient, and stable deployment in real-world environments. One can implement GuardFi using a single link of commodity WiFi devices and extensively evaluate GuardFi in six typical indoor environments with various sources of interference from pets, cleaning robots, fans, etc. The results reveal that GuardFi achieves a high intrusion detection accuracy with a low false alarm rate in unseen environments without model re-tuning, underscoring its robustness and potential for ubiquitous indoor security applications.

Intrusion detection systems (IDS), crucial for indoor security, have been developed using various modalities, e.g., camera, audio, and near-infrared sensors. However, each of them bears inherent limitations. Camera and audio-based systems, while accurately detecting intrusions, present significant privacy concerns. Near-infrared systems, better for privacy, require precise placement and are sensitive to environmental factors like temperature, resulting in a high false alarm (FA) rate and reducing user confidence. Additionally, both camera and near-infrared devices work primarily under Line-Of-Sight (LOS) conditions, thus limiting coverage, and necessitate supplementary equipment, making the setup process time-consuming and labor-intensive.

With the proliferation of Internet of Things (IoT) devices, WiFi has become pervasive, leading to innovative attempts at utilizing WiFi signals for indoor intrusion detection. In contrast to camera, sound, and near-infrared-based systems, WiFi-based IDSs offer superior privacy protection and extensive coverage, without the need for extra hardware installation. However, these WiFi-based systems often overlook the fact that disturbances in WiFi signals can be caused by not only humans but also common non-human subjects, such as pets, robotic vacuum cleaners, and household appliances like fans. The ability to discern between the movements of these non-human entities and human movements is paramount to the robustness and practicality of an indoor IDS. While some systems attempt to mitigate FAs from such non-human disturbances, they impose strict requirements on device placement and environmental conditions. In addition, they are mainly effective under LOS conditions, not accounting for the more common but challenging Non-Line-Of-Sight (NLOS) conditions.

In some embodiments, GuardFi is disclosed as the first deep-learning-powered indoor IDS using WiFi, enhanced by effective human and non-human subject differentiation. GuardFi can work with single-link commercial WiFi to detect human intrusions through walls, without requiring additional devices or being limited by environmental complexity, and can handle multi-user intrusions. GuardFi extracts motion characteristics that are independent of the environment, ensuring that the system performance is unaffected by variables such as device location, subject orientation, and environmental changes. Utilizing a neural network model for distinguishing between human and non-human entities, GuardFi effectively mitigates interference caused by non-human movements within the environment. By integrating current spatial information with historical temporal data, GuardFi provides a comprehensive assessment of potential intrusions. One can employ few-shot learning to enhance the system's ability to effectively filter never-before-seen non-human objects in new environments.

However, designing a robust indoor IDS with WiFi poses numerous challenges, three of which are highlighted here.

First, both human and non-human moving subjects within the environment influence the WiFi signal, making it particularly challenging to use single-link commercial WiFi to filter out non-human interference. Although human and non-human subjects of different sizes lead to different influences on the CSI when moving at the same location and are thus relatively easy to distinguish, non-human subjects can cause comparable interference as humans when they are closer to the WiFi device, are more difficult to be filtered and result in high FA. In some embodiments, one can tackle this issue by leveraging deep learning with the widely applied ResNet-18 model to effectively discern motion patterns of human and non-human subjects from data, thereby filtering out non-human movements.

Second, current WiFi-based deep learning networks exhibit significant dependence on the environment and subjects, rendering them ineffective when the environments or subjects change. Although a multitude of domain adaptation techniques has been employed to counteract environmental changes, these techniques require extensive model training within the new environment, necessitating significant user participation, which is both laborious and time-consuming. To tackle the environment-dependency issue, one can use the Augmented Autocorrelation Function (A-ACF) of the channel state information (CSI) as the disclosed network input. The extracted features using the A-ACF are environment-independent, ensuring that the trained network remains unaffected by environmental changes and can be readily deployed in new settings. Furthermore, for previously unseen non-human subjects within a new environment, one can adopt the few-shot learning technique that learns the characteristics of the new subjects with minimal data, bolstering the system robustness across diverse environments and various subjects.

Third, traditional classification-oriented neural networks predominantly focus on identifying the current subject in isolation, often overlooking temporal correlations between sequential detection results. Accurately determining the identity of the current subject by jointly considering both temporal information and the current motion patterns in the environment is challenging. Although most existing models incorporate signal correlations over time and account for these motion patterns in identification tasks, they typically neglect the temporal correlation of the identification results themselves. In some embodiments, one can design a state machine based on Long Short-Term Memory (LSTM) that leverages temporal correlations of motion patterns to enhance the identification accuracy.

GuardFi has been developed and extensively tested on commercial WiFi devices in unseen environments and against both seen and unseen subjects. It is shown to achieve a very high accuracy for identifying human, pets, robotic vacuum cleaners, and fans. As for intrusion detection, it demonstrates an impressive detection rate for human detection within 2.5 seconds on average, accompanied by a low FA, even with a challenging dataset containing data of large pets and multi-human simultaneous intrusion. The high recognition accuracy, low FA rate, being agnostic to environment changes, device position, subject orientation and moving direction under both LOS and NLOS conditions all underscore the disclosed system's robustness and practicality.

A robust WiFi-based IDS is disclosed to classify indoor moving subjects, mitigating the influence of non-human entities like pets and robots on intrusion detection and also ensuring accurate detection with multiple intruders. An environment-agnostic indoor motion source recognition method may be designed based on ResNet-18. The method leverages the A-ACF of CSI as the network input, effectively extracting features only related to subject motion/movements for real-time identification. Since these features are not tied to the environment, device location, or subject moving direction, GuardFi can be employed in new settings without additional training. An LSTM-based state machine is designed to leverage temporal correlations of motion patterns to correct identification outputs based on previous decisions, thereby enhancing accurate identification of the current subject in the environment. The system can use a few-shot learning approach to accommodate unknown subjects, allowing GuardFi to adapt to unfamiliar motion patterns from unknown subjects, further enhancing accuracy during practical application, reducing FAs, and amplifying GuardFi's generalization capabilities and scalability.

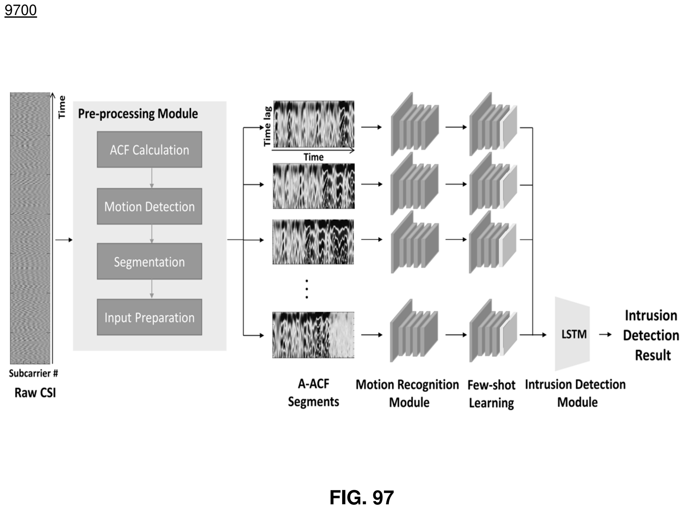

In some embodiments, FIG. 97 illustrates a workflow 9700 of the disclosed GuardFi. First, one can preprocess the WiFi signals by computing the A-ACF of the CSI. This allows the system to derive the statistical information encapsulating the influence of dynamic subjects on the propagated signal. During the preprocessing phase, one can segment the A-ACF fragments associated with motion based on the statistical characteristics of the A-ACF. Then, the A-ACF serves as the input of the motion recognition module (MRM) to identify the subject. In some embodiments, this module employs a neural network based on ResNet-18 to analyze the impact of various moving subjects - such as humans, pets, and robot cleaners- on the signal propagation, and extract their motion characteristics for identification purposes. Few-shot learning may be employed to adapt MRM to unseen types of interference when deployed in new environments. Ultimately, one can design an intrusion detection module (IDM) based on the LSTM network that leverages temporal correlations and current motion patterns in the environment to identify intrusion.

WiFi signals, originating from a transmitter, propagate through the environment by reflecting multiple times off various surfaces, including people and objects, before reaching the receiver. WiFi-based sensing systems operate by analyzing the influence of these entities on the propagation of WiFi signals, thereby detecting their movements and changes. CSI captures both the direct signal propagation and the effects of reflection, scattering, and attenuation during transmission. Consequently, it is commonly employed as input for WiFi-based sensing systems. CSI can be expressed as

$$H(t,f) = \sum_{l=1}^{L} a_l(t)exp(-j2\pi f \tau_l(t)),$$

where $a_l(t)$ and $\tau_l(t)$ denote the complex amplitude and propagation delay of the $l$-th multipath component (MPC), respectively, and L stands for the number of MPCs.

However, CSI embodies the cumulative impact of the environment on signal propagation. It incorporates not only the influence of dynamic entities but also the impact of static objects such as walls, furniture, and floors. As a result, WiFi sensing systems that utilize CSI as direct input are highly sensitive to environmental variations. They exhibit poor domain adaptation capabilities, necessitating data collection and retraining in diverse environments, which hinders their rapid deployment and use in new settings.

To separate the influences of static environments and dynamic entities on the signal, one can extract the A-ACF that exclusively captures the characteristics of dynamic subjects to serve as the network input. Specifically, one can begin by calculating the ACF of the power response $G(t, f)$ by

$$\rho_G(\tau,f) = \frac{cov[G(t,f),G(t+\tau,f)]}{cov[G(t,f),G(t,f)]} = \frac{\sigma_s^2(f)}{\sigma_s^2(f)+\sigma_n^2(f)}\rho_s(\tau,f) + \frac{\sigma_n^2(f)}{\sigma_s^2(f)+\sigma_n^2(f)}\delta(\tau),$$

where $\tau$ is the time lag. $\sigma_s^2(f)$ and $\sigma_n^2(f)$ are the variances of the propagated signal and noise, respectively, $\rho_s(\tau, f)$ is the ACF of the propagated signal, and $\delta(\tau)$ is the Dirac delta function. Next, one can employ a Maximum Ratio Combine (MRC) approach on the ACF. The aggregated ACF is estimated by:

$$\hat{\rho}_s(\tau) = \sum_{i=1}^{N_s} \rho_G\left(\tau = \frac{1}{F_s}, f_i\right) \rho_G(\tau, f_i),$$

where $N_s$ is the number of subcarriers and $F_s$ is the sampling frequency.

One can take the differential of aggregated ACF $\hat{\rho}_s(\tau)$ to amplify the speed information. Using $\Delta\rho(\tau)$ to denote $\frac{d\rho(\tau)}{\rho(\tau)}$, one can express the A-ACF as $\Delta\hat{\rho}_s(\tau)$.

As the A-ACF exclusively captures the dynamic features associated with subject movement, irrelevant to the environment or the subject's direction, the disclosed WiFi sensing system, utilizing A-ACF as input, is robust to variations in the environment and the positioning of subjects. This independence empowers the disclosed system to be rapidly and efficiently deployed in new environments.

Subsequently, one can derive the motion statistic via the ACF and utilize it to detect and segment motion-containing fragments. The motion statistic $\phi(f)$ for a subcarrier with frequency $f$ is defined as the ACF of the CSI $H(t, f)$ with a time lag of $\tau = 1/F_s$, where $F_s$ is the sounding rate. That is,

$$\phi(f) \triangleq \rho_H\left(\tau = \frac{1}{F_s}, f\right).$$

Motion statistics function as a reliable gauge of movement presence or lack thereof within a given environment. In a stationary environment, the motion statistic $\phi(f)$ is close to 0, whereas in dynamic environments with movement, $\phi(f) > 0$. One can partition the A-ACF fragments, detected with motion presence, into segments with a time length of $Ts$. In some embodiments, experimental results suggest to opt for $T = 5$ for each segment, a decision made to maintain system performance while also shortening real-time detection time and maximally conserving computational resources.

Motion Recognition Module (MRM)

After partitioning the A-ACF of the CSI into segments, one can use these segments as input for the disclosed model designed to distinguish between human and non-human subjects, as illustrated in FIG. 97. The size of an A-ACF input segment is $R^{N_t \times T}$, where $T$ denotes the number of time instances and $N_t$ represents the number of time lag in one instance. This matrix can be interpreted as a 2D spectral image or as an encoded time series. Modern deep neural networks have demonstrated impressive capabilities in feature extraction from both images and time series. Therefore, one can employ a deep neural network for WiFi-based human and non-human feature extraction.

However, due to the unique characteristics of the A-ACF spectrum, which differ from conventional images or time series, existing network architectures may not always yield satisfactory results in WiFi recognition tasks. In contrast to images that typically have three RGB channels, the A-ACF spectrum is limited to a single channel and has lower spatial resolution. Unlike standard encoded time series, the A-ACF function at each instant encapsulates the movement information of the subject at that specific moment, rather than embedding sequential information. Consequently, it is essential to evaluate various network architectures to identify an appropriate deep learning model that is optimally compatible with a WiFi sensing system employing the A-ACF spectrum as its input.

The time series of A-ACF vectors encapsulate critical information regarding the speed, volume size, and motion intensity of moving subjects in the environment. Different networks can extract information from distinct facets of the training data. One objective here is to identify the optimal deep neural network model and the corresponding architecture that can offer robust WiFi-based human and non-human recognition across diverse environments and subjects. one can have evaluated the performance of popular neural networks, including CNNs, RNNs and Transformers, in discerning between human and non-human subjects. Ultimately, one can selected the ResNet-18 model, which demonstrated consistent performance across a variety of environments and subjects and requires relatively fewer computational resources.

LSTM-based Intrusion Detector Module (IDM)

In the previous step, one can segment the WiFi signal and identify the moving subjects within each segment based on the characteristics of their A-ACF. However, this approach overlooks the temporal correlation amongst the A-ACF segments. The MRM does not consider the time dependency that exists between A-ACF segments. For instance, if a moving subject is detected and recognized in an environment, it is highly probable that the motion detected subsequently will be due to the same subject. By incorporating the historical information about subject detection in the environment, one can more accurately ascertain the presence of intrusions and filter out FAs triggered by animals.

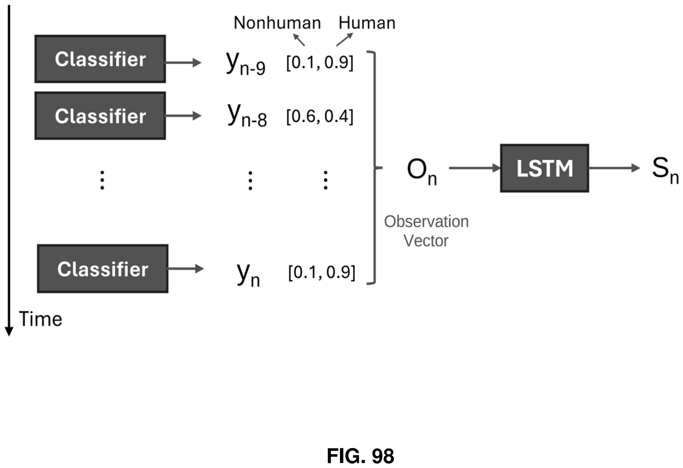

Inspired by the impressive performance of ConvLSTM in video classification and LSTM's effectiveness in time series signal classification, one can design a temporal information extractor based on LSTM, as depicted in FIG. 98. Its input comprises the probability values output by feature extractor from current and past A-ACF segments, while its output is a determination of the presence of an intrusion. An LSTM unit is composed of a cell with memory state $C_t$, an input gate $i_t$, an output gate and a forget gate. FIG. 98 illustrates the LSTM-based intrusion detector.

One can evaluate the performance of the LSTM-based intrusion detection module, demonstrating that it can substantially reduce the likelihood of FAs triggered by non-human subjects.

Few-shot Learning

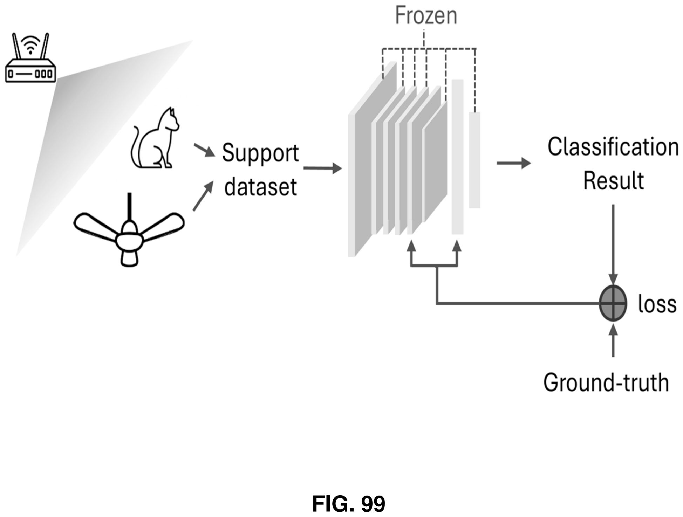

The A-ACF extraction method removes environmental factors, freeing the system from constraints related to environment. However, when applied in new settings, non-human subjects not seen in the training dataset may arise, such as fans operating in different modes or various pets. Deep learning-based models usually cannot guarantee high accuracy for unseen data patterns. To ensure the robustness of the disclosed system against unknown non-human subjects, one can employ a few-shot learning approach, enabling the model to quickly adapt to new motion patterns and thereby ensuring a low false alarm rate. To maintain minimal computational resource requirements and prevent the model from forgetting data distribution learned from the training dataset, one can only fine-tune the forth Res-block and fully connected layer of the neural network using 20 effective motion segments from each unseen subjects in new environments, without altering the feature extraction part of the ResNet-18. The specific operations are illustrated in FIG. 99.

As such, GuardFi is disclosed as a novel system leveraging single-link WiFi for precise indoor human intrusion detection, even through walls. Unlike many existing systems that struggle with non-human interference-induced FAs, GuardFi stands out with its advanced deep learning framework. In some embodiments, it integrates a ResNet-18-based feature extractor for distinguishing human from non-human motions and an LSTM-driven detector for historical data assimilation. Importantly, with A-ACF input, GuardFi can be versatile across various environments and orientations. Rigorous tests affirm its exceptional real-world performance and readiness for swift, hassle-free deployment in new settings.

As WiFi has become a ubiquitous medium for communication, its role in sensing applications has expanded. However, the current WiFi sensing applications are limited by their assumption that any detected motion signifies human activity, overlooking the potential impact of non-human subjects. Existing attempts to recognize the interference from non-human motion impose stringent requirements regarding device positioning, data quality, environmental complexity, and non-human subject categories. In some embodiments, a robust deep learning framework, SrcSense ("Source Sense"), is disclosed to recognize the motion source with WiFi signals through the wall. SrcSense extracts environment-independent features from single-link WiFi. One can investigate the performance of popular deep neural networks and explore the efficacy of transferring pre-trained models to WiFi sensing tasks. One can implement SrcSense and evaluate the performance in five real-world complex environments with commodity WiFi devices. In some embodiments, with a challenging dataset considering large pets, diverse human activities and multiple subjects coexisting cases, SrcSense achieves a high average validation accuracy across five distinct environments and a high average testing accuracy in unseen environments without further model training or parameter tuning. In some embodiments, by accumulating 20 seconds of WiFi data, SrcSense can achieve an elevated recognition accuracy with ResNet-50. These results underline the robustness of the disclosed approach and its readiness for integration into ubiquitous intelligent IoT systems and applications.

WiFi has become ubiquitous, serving as a principal mode of communication nearly everywhere. Beyond connectivity, WiFi Channel State Information (CSI) captures environmental details, enabling it to "visualize" subjects within an area and powering numerous sensing applications. Compared to cameras and millimeter-wave radar, WiFi offers broader coverage, operates under both line-of-sight (LOS) and non-line-of-sight (NLOS) conditions, and ensures superior privacy.

Despite these advantages, most WiFi sensing applications assume that any detected motion is due to human activity, overlooking non-human subjects. Distinguishing between human and non-human motion is challenging because both induce similar CSI variations. Yet, non-human elements like pets, robotic vacuums, and fans are prevalent in many settings. Accurate recognition of moving subjects in smart environments is vital for enhancing safety, energy efficiency, user interaction, and health monitoring. Differentiating humans from non-human subjects prevents false alarms in security systems, improves energy efficiency by shutting down unattended appliances, and allows IoT devices to adjust settings appropriately. In health monitoring, distinguishing pet from human movement ensures accurate insights. Therefore, developing robust intelligent sensing systems capable of identifying the source of motion is essential, especially in residential environments where humans, pets, and automated devices are prevalent.

Prior efforts to recognize the motion source using WiFi generally fall into two categories: traditional model-based and machine learning-based. Model-based methods offer good interpretability but require precise equipment placement and are less effective in complex environments. Machine learning-based methods, using extracted features, mitigate these limitations and have broader applicability while retaining interpretability. However, the performance of traditional machine learning models hinges on the efficacy of these manually designed features. Their performance is compromised when these features cannot be accurately derived from the data. In addition, models using traditional machine learning classifiers like Support Vector Machines (SVM) often underperform in scenarios where different classification categories are not distinctly separate, leading to significant overlaps in the feature space. These models also struggle with data that is not linearly separable.

In recent years, deep learning models have achieved remarkable success in fields such as image and speech processing, showcasing their potential to extract and classify features from high-complexity and high-dimensional data. This has sparked more works employing deep learning in the realm of WiFi sensing. However, these works often adopt a specific pre-existing network framework, leading to a dearth of exploration on the suitability of different models for WiFi sensing tasks. More importantly, most deep learning-based WiFi sensing systems are unable to mitigate the impact of environmental factors. Consequently, the trained networks often falter when transposed into new environments. Various strategies for domain adaptation require extensive user data and computational resources to retrain or tweak the model in a new environment.

In some embodiments, SrcSense("Source Sense") is designed as the first environment-independent deep learning-based framework to recognize motion sources with WiFi signals through the walls. Leveraging the pervasive WiFi signals, SrcSense can robustly identify the motion from a wide range of human and non-human subjects, including pets, cleaning robots, and electrical appliances non-intrusively in real-world complex environments, where the subjects can freely engage in a variety of activities without spatial constraints. SrcSense can handle complex situations such as individuals crawling or the simultaneous movement of multiple people. SrcSense is also independent of the subject's location and orientation, and invariant to environmental changes, eliminating users' effort for deployment into new environments and requiring minimal computational resources. SrcSense can further capitalize on models pre-trained with large datasets of other modalities to further enhance its performance.

However, achieving such a robust framework is nontrivial and entails critical challenges.

First, deep neural networks require extensive datasets for optimal performance, but collecting real-world WiFi data of non-human subjects without human interference is extremely difficult. Existing studies lack comprehensive datasets that include various non-human subjects like pets, cleaning robots, or fans. Moreover, existing research predominantly captures WiFi data of human movement in controlled laboratory settings, which do not reflect the complexity of real-world. This limitation hinders model generalization and poses a significant barrier to the practical application and scalability of WiFi sensing technologies. In some embodiments, one can collect WiFi CSI with commercial edge devices and utilize a robust motion statistic to automatically extract the data containing motion. The constructed dataset covers a wide range of humans, pets, cleaning robots, and fans in 5 typical real-world environments over a long time period.

Second, existing deep learning-based WiFi sensing works rely on raw CSI and cannot remove context information, leading to failure in new environments and necessitating retraining with a large amount of data, which is time-consuming and resource-intensive. While domain adaptation techniques can mitigate some of these demands, they still require user effort and are difficult to deploy on edge devices with limited computational capabilities. In some embodiments, the system can use a new statistic, the Amplified Auto-correlation Function (A-ACF) of CSI, as input to deep neural networks, making the model independent of environment, subject location, and orientation. This approach enables easy deployment in new settings without retraining or fine-tuning, minimizing user effort and computational demands.

Third, although deep learning models have excelled in computer vision and natural language processing tasks, their suitability for WiFi sensing, especially with the disclosed unique A-ACF input, remains unclear. Existing research often adopts specific models without tailored performance comparisons, hindering the understanding of which models are most appropriate for their WiFi sensing tasks. In some embodiments, one can conduct a comprehensive evaluation of ten different models, encompassing Feed-forward Neural Networks (FNN), Convolutional Neural Networks (CNN), Recurrent Neural Networks (RNN), and Vision Transformers, to assess their performance on the disclosed specific task.

Furthermore, due to the limited availability of WiFi data, enhancing the performance of networks based on restricted WiFi datasets is particularly challenging. Since the dimensional and temporal characteristics of WiFi data differ significantly from other modalities, it is not straightforward to transfer models trained on large datasets of other modalities to improve WiFi sensing performance. Different from existing deep learning-based WiFi sensing systems, SrcSense extracts the A-ACF from CSI, which shares similar dimensions and features with images. Consequently, one can employ transfer learning techniques to adapt models that have been pre-trained on extensive image datasets to WiFi sensing tasks, thereby further improving the performance of deep neural network models in WiFi sensing applications.

In some embodiments, one can implement SrcSense on commodity off-the-shelf (COTS) WiFi devices and conduct extensive experiments in 5 distinct real-world environments, including a townhouse, a single-family house, two apartments, and a typical office space. one can collect data from 13 humans, 11 pets, a cleaning robot and 3 fans over 6 months. Data may be collected under both LOS and NLOS conditions. Based on data from the past 5-second window, SrcSense achieves an average validation accuracy across 5 real-world complex scenarios for 4-class classification and a high average testing accuracy in unseen environments without model re-training or parameter tuning. It can be further improved with transfer learning to a high recognition accuracy. Using a longer window of 20 seconds, SrcSense demonstrates an elevated recognition accuracy with the ResNet-50 model. The superb accuracy and resilience not only establish SrcSense as a cutting-edge framework for robust motion source recognition in ubiquitous contexts but also revolutionize the way WiFi sensing is approached for intelligent systems in practical and complicated scenarios.

In some embodiments, the present disclosure discloses the first comprehensive WiFi dataset for human and non-human subjects' movement in the real-world context, e.g. by collecting WiFi data of 13 humans with diverse activities including walking, sneaking, running, and crawling, 11 pets including dogs and a cat engaging in daily activities, cleaning robots and three identical fans. A novel indoor motion source recognition framework is built with deep neural networks based on the disclosed environment-independent statistic A-ACF extracted from CSI. As A-ACF is independent of environmental conditions, subject location and orientation, SrcSense is immune to variations in the environment. Furthermore, one can compare the efficacy of classic deep neural networks in identifying motion sources in various environments using WiFi. The networks' performance is extensively evaluated under known and unknown environments, including situations with unseen subjects and multiple concurrent subjects in unseen settings. One can demonstrate the viability of transferring pre-trained models using a large image dataset to the WiFi sensing task.

A domain-resilient feature sculpting method is disclosed for WiFi-based sensing systems, including environment-invariant statistics extraction, motion segment detection and efficient model input design.

WiFi signals, originating from a transmitter, traverse the environment while reflecting multiple times off various surfaces, including people and subjects, before reaching the receiver. WiFi-based sensing systems detect the movements and changes within the environment by analyzing the influence of people and subjects on the propagation of WiFi signals. As CSI encapsulates the processes of reflection, scattering, and attenuation during such, it is commonly employed as the input for WiFi-based sensing systems. However, since CSI encompasses all WiFi signal paths including those affected by environmental elements like walls and furniture, existing CSI-based systems often fail to generalize across environments as variations in these static elements introduce noise, leading the model to learn irrelevant features. This restricts their practical use and broader applicability.

Inspired by the rich scattering multipath model, one can develop a method to extract statistical data directly related to motion sources from the CSI, enhancing the model's focus on motion-relevant information and reducing interference from environmental changes. In some embodiments, this approach not only improves the model's generalization capabilities, allowing it to operate effectively in new environments without additional training but also offers several benefits: it increases data efficiency by reducing the need for large datasets typically required to filter out static-object interference; improves interpretability with a mathematical method, which can further estimate physically interpretable characteristics such as speed and gait; and enhances scalability and flexibility, accommodating a wide range of data format, device types and machine learning models. Additionally, unlike other CSI preprocessing methods, the disclosed approach effectively processes both Line-of-Sight (LOS) and Non-Line-of-Sight (NLOS) conditions, enabling through-the-wall recognition and expanding system coverage significantly.

Due to the multipath effect, CSI is generally represented as a collection of radio propagation along different paths:

$$H(t,f) = \sum_{l=1}^{L} \alpha_l(t)e^{-j2\pi f\tau_l(t)}, \qquad (3818\_2)$$

where $\alpha_l$ is the multipath coefficient of the *l*-th component and $\tau_l$ is the associated propagation delay.

In practice, since the imperfect synchronization of the commercial WiFi devices often results in random noise in the CSI phase that is difficult to efficiently clean, researchers usually rely on the more reliable CSI amplitude, which can be measured through the power response $G(t, f)$ as

$$\begin{aligned} G(t,f) &\triangleq |\tilde{H}(t,f)|^2 \\ &\triangleq |H(t,f)|^2 + n(t,f) \end{aligned} \qquad (3818\_3)$$

where $n(t, f)$ is the additive white Gaussian noise (AWGN) with a power density of $\sigma_n^2(f)$ and is statistically independent of $|H(t, f)|^2$.

In indoor environments, rich scattering occurs due to both static and dynamic scatterers. Static scatterers comprise walls, floors, and stationary furniture, while dynamic scatterers include moving individuals or objects. The superposition principle of electromagnetic (EM) waves allows one to decompose CSI as follows:

$$H(t,f) = \sum_{i\in\Omega_s(t)} H_i(t,f) + \sum_{j\in\Omega_d(t)} H_j(t,f) + \varepsilon(t,f), \qquad (3818\_4)$$

where $\Omega_s(t)$ represents the set of static scatterers, $\Omega_d(t)$ corresponds to the set of dynamic scatterers. $H_i(t, f)$ and $H_j(t, f)$

represent the contributions of the *i*-th and *j*-th scatterers respectively. The noise term, $\varepsilon(t,f)$, is statistically independent of $H_i(t, f)$ and $H_j(t, f)$. Each scatterer acts as a "virtual transmitter", scattering its received EM waves around. The CSI represents the aggregate of the electric fields of all incoming EM waves.

Based on the rich scattering multipath model, $G(\tau, f)$ is a result of numerous multipath components adding up together in a complex way expressed in Eqn. (3818_2bookmark=id.4dulwux). One can express $|H(t, f)|^2$ in the following form:

$$|H(t,f)|^2 = g(f)s(t - \Delta t_f), \qquad\qquad (3818\_5)$$

where s(t) denotes the motion signal generated by the motion source, and $g(f)$ and $\Delta t_f$ stand for the gain and the random initial phase of the motion signal measured at the frequency *f*, respectively. Combining Eqn. (3818_3) and Eqn. (3818_5), the received signal at subcarrier with frequency *f* is expressed as

$$G(t,f) = g(f)s(t - \Delta t_f) + n(t,f),$$

The ACF of $G(t, f)$ can be derived as:

$$\rho_G(\tau,f) = \frac{cov[G(t,f),G(t+\tau,f)]}{cov[G(t,f),G(t,f)]} = \frac{g^2(f)}{g^2(f) + \sigma_n^2(f)}\rho_s(\tau) + \frac{\sigma_n^2(f)}{g^2(f) + \sigma_n^2(f)}\delta(\tau),$$

where $\tau$ is the time lag and $\delta(\cdot)$ is the Dirac delta function. $\rho_s(\tau)$ is the ACF of the motion signal. The normalized channel gain at frequency *f* is defined as $w(f) = \frac{g^2(f)}{g^2(f)+\sigma_n^2(f)}$ .

When $\tau \rightarrow 0$, one can have:

$$\lim_{\tau\to0}\rho_G = w(f)\lim_{\tau\to0}\rho_s(\tau).$$

Since the movement of the subject is continuous, one can have $lim_{\tau\to0}\rho_s(\tau) = 1$ and then $w(f) = lim_{\tau\to0}\rho_G$. When the sounding rate $F_s$ is high, one can estimate the channel gain by $w(f)$ by $\rho_G\left(\tau = \frac{1}{F_s}, f\right)$ .

The ACF, $\rho_G(\tau, f)$, can be further derived based on the statistical theory of EM waves as

$$\rho_G(\tau,f) = \frac{\sum_{i\in\Omega_d} g_i^2(f)}{\sum_{i\in\Omega_d} g_i^2(f) + \sigma_n^2(f)}J_0(kv_i\tau) + \frac{\sigma_n^2(f)}{\sum_{i\in\Omega_d} g_i^2(f) + \sigma_n^2(f)}\delta(\tau).$$

Here, $J_0(\cdot)$ is the Bessel function of the first kind, given by $J_0(x) = \frac{1}{2\pi}\int_0^{2\pi} exp(-jxcos(\theta))d\theta$ . $g_i(\cdot)$ denotes the channel gain of the MPC for the *i*-th scatter, and $k = \frac{2\pi}{\lambda}$ is the wave number where $\lambda$ is the wavelength.

Considering speeds of all scatters caused by the subject are approximated to be the same, and for $\tau \neq 0$, one can have

$$\rho_G(\tau,f) = g(f)J_0(kv_i\tau)$$

When all frequencies are considered, the $g(f)$ factor will be aggregated and disappear, and the $\rho_G(\tau)$ is independent of specific location and environment.

Based on the ACF, one can further extract the A-ACF by applying the Maximum Ratio Combine (MRC) and taking the first derivative. Employing MRC, one can combine all subcarriers to enhance the Signal-to-Noise Ratio (SNR) of the ACF, thereby accentuating the impact of the moving subject on the signal. The aggregated ACF is achieved by setting the optimal weight $k^*(f)$ to $\rho_G\left(\tau = \frac{1}{F_s}, f\right)$ and can be estimated by:

$$\hat{\rho}_A(\tau) = \sum_{i=1}^{N_s} k^*(f)\rho_G(\tau, f_i) = \sum_{i=1}^{N_s} \rho_G\left(\tau = \frac{1}{F_s}, f\right)\rho_G(\tau, f_i).$$

where $N_s$ is the total number of subcarriers.

In some embodiments, one can take the differential of aggregated ACF $\hat{\rho}_A(\tau)$ to amplify the speed information. Using $\Delta\rho(\tau)$ to denote $\frac{d\rho(\tau)}{\rho(\tau)}$, one can express the A-ACF as $\Delta\rho_A(\tau)$.

A test result may illustrate the CSI of different moving subjects: human movement (a, b), pet activity (c, d), and a robot vacuum cleaner operation (e, f). The first set (a, b, c) comes from environment A, while the second set (d, e, f) from environment B. The furniture in environment B was moved between each data collection session. It is evident that environmental factors dominate CSI variations, substantially overriding the effects of different moving subjects, making it hard to extract motion-related features. Therefore, it is crucial to eliminate the dependency of environmental contexts for WiFi sensing systems to extract intrinsic statistics only related to motion and further enhance accuracy and deployment feasibility.

In some embodiments, one can present the results after extracting A-ACF from the CSI data. In some embodiments, the motion characteristics of the same type of subject in different environments are similar. Meanwhile, the A-ACF patterns of different moving subjects show significant discrepancies, irrespective of whether they are in the same or different environments.

Additionally, one can compare the CSI and A-ACF of human walking at different locations and environments. one can collect two sessions of human walking data from two environments, including a typical office building, Scenario V, and a single-family house, Scenario III. one can collect data in Scenario V with two setups, setting #1 and #3. Based on test results, one can find that the CSI of different locations is different while the A-ACF is robust to location difference. One can also find that unlike CSI, the A-ACF of a human walking pattern is robust to environmental changes.

As the A-ACF encapsulates only the dynamic features associated with subject movement, devoid of any environmental or directional information of the subject, the disclosed WiFi sensing framework, utilizing A-ACF as input, is immune to variations in the environment and the positioning of subjects. SrcSense focuses on extracting the more intrinsic features correlated to the movement of subjects, disregarding aspects such as the subject's orientation, position, and the surrounding environment. This independence empowers SrcSense to be rapidly and efficiently deployed within new environments.

Subsequently, one can derive the robust motion statistic from the A-ACF and utilize it to detect and segment motion-containing CSI data fragments. For the power response $G(t, f)$, the robust motion statistic derived from its A-ACF at time t over subcarrier $f$ is defined as

$$\phi_G(f) \triangleq \rho_G\left(\tau = \frac{1}{F_s}, f\right),$$

where $F_s$ is the sounding rate.

In some embodiments, the robust motion statistics may serve as an effective tool for accurately detecting the presence or absence of movement within a specific environment. In a stationary environment, the robust motion statistic $\phi_G(f)$ is close to 0, whereas in dynamic environments with movement, $\phi_G(f) > 0$. Following this, one can partition the A-ACF into 5-second segments that are detected to encompass motion. The extracted A-ACF segment is a 2D (two-dimensional) matrix with size $R^{N \times T}$, where $N$ is the total number of time lags at each time instance, and $T$ is the number of time instances in a segment.

In some embodiments, in response to the varied model types, one can further transform the 2D A-ACF segment into inputs that align with respective models. This mainly includes the following four cases:

The first case is input for FNN. In feed-forward neural networks (FNNs), each sample is typically represented as a flattened, one-dimensional vector. The reason for this is that FNNs are designed to process each feature independently, without considering any inherent structure or correlation between features. Hence, the 2D A-ACF segment $R^{N \times T}$ is flattened into a 1D vector $R^{NT}$ to fit the input requirement of FNNs.

The second case is input for Image-based Models. Unlike FNNs, image-based models like convolutional neural networks (CNNs) are designed to handle multi-dimensional data particularly, such as images, while preserving spatial relationships between pixels or features. Thus, one can directly feed the 2D A-ACF segment into image-based models.

The third case is input for Language-based Models. Language-based models like recurrent neural networks (RNNs) are particularly suited to handle sequential data, where the order of inputs matters. They maintain a hidden state that can theoretically capture information about past elements in the sequence. Hence, the typical input for an RNN is a sequence. In this setup, the sequence of A-ACF vectors $R^N$ is fed into the network one at a time.

The fourth case is input for Transformer-based Models. Transformer-based models have been applied for both Natural Language Processing (NLP) tasks and vision tasks. For both kinds of tasks, the transformer models handle data in a similar sequential manner. For a 2D A-ACF segment, it is divided into P small patches $R^{h \times w}$. These patches are then flattened into a 1D vector $R^{hw}$. Positional embeddings are added to the vectors to provide information about the relative positions of patches in the original image.

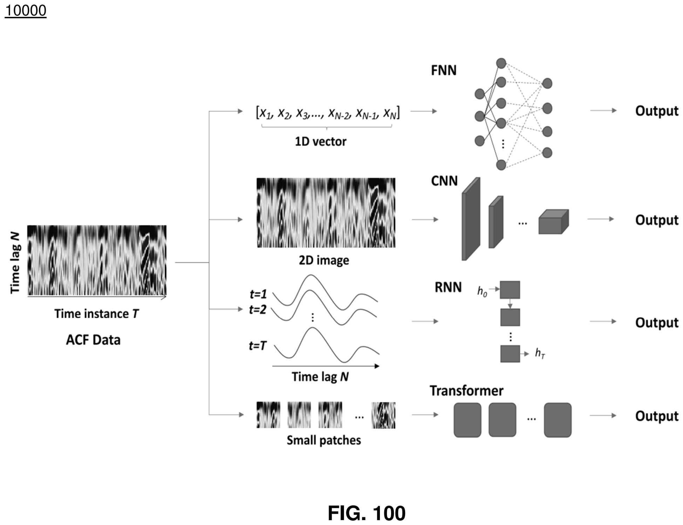

FIG. 100 provides an intuitive depiction of the process 10000 by which A-ACF data is integrated into these models.

The following gives an overview of deep learning models integrated with the Amplified Auto-correlation Function (A-ACF) for motion source recognition using WiFi signals. One can analyze the strengths and limitations of each model within the disclosed domain-resilient framework and discuss the application of transfer learning in this context.

In some embodiments, Feed-forward Neural Networks (FNNs), such as the Multilayer Perceptron (MLP), allow information to flow unidirectionally from input to output layers without loops. In the disclosed application, the MLP takes the flattened A-ACF as input and maps features into categorical outputs using nonlinear activation functions. While MLPs can model complex non-linear relationships, they do not explicitly capture spatial or temporal dependencies, making them less effective for modeling the spatiotemporal characteristics inherent in A-ACF data. Consequently, MLPs may be less suited for distinguishing between human and non-human motion sources using WiFi signals.

In some embodiments, Convolutional Neural Networks (CNNs) are adept at learning spatial hierarchies of features and are widely used in image processing tasks. By treating the A-ACF as a 2D image input, CNNs apply 2D convolutional kernels to extract spatial features that capture motion characteristics. This approach leverages parameter sharing to reduce the number of parameters, enhancing computational efficiency and mitigating overfitting risks. However, CNNs primarily focus on local patterns and may overlook long-range dependencies or global context in the data. one can evaluate the performance of CNN architectures such as LeNet, ResNet-18, ResNet-50, and ResNet-101 for classifying human and non-human motion sources using WiFi signals.

In some embodiments, Recurrent Neural Networks (RNNs) process sequential data by passing information across time steps, making them suitable for time series analysis. Advanced variants like Long Short-Term Memory (LSTM) and Gated Recurrent Units (GRU) address the limitations of standard RNNs in capturing long-range dependencies. One can model the A-ACF as a time series, allowing RNNs to capture temporal dependencies relevant to motion features. However, they may overlook instantaneous features associated with short-term motion. One can evaluate standard RNNs, LSTMs, and GRUs for WiFi-based motion source recognition.

In some embodiments, transformers utilize self-attention mechanisms and have achieved state-of-the-art results in natural language processing and computer vision tasks. Unlike RNNs, transformers process input data in parallel, enhancing efficiency and the ability to capture complex patterns. To effectively model the two-dimensional features of the A-ACF, one can employ the Vision Transformer (ViT). ViT processes the A-ACF by splitting it into fixed-size image patches, reshaping them into vectors, and adding positional embeddings. These embeddings are input to a transformer encoder composed of multi-head self-attention modules and feed-forward networks. The output is used by a classification head to predict human versus non-human motion sources.

In some embodiments, transfer learning is particularly useful when the target task has limited labeled data. It is a standard practice in deep learning, where models trained on large-scale image datasets are used for other vision tasks. Given the scarcity of labeled WiFi data, by transforming the raw WiFi signals into a 2D A-ACF image segment, one can aim to investigate the feasibility of leveraging pre-trained image models in WiFi sensing tasks. Utilizing A-ACF segment images as the input for the transfer learning network, one can transfer characteristics learned by deep neural networks from image data to the WiFi-based human and non-human motion identification task, to augment WiFi sensing performance. One can assess the efficacy of transferring a ResNet-18 model pre-trained on the ImageNet dataset to identify human and non-human motion based on WiFi signals, and compare this with the performance of the ResNet-18 model trained explicitly with WiFi signals. Furthermore, one can also examine the effect of fine-tuning different layers on the transfer performance.

As discussed above, SrcSense is a novel WiFi-based motion source recognition framework disclosed via signal-informed deep learning. In some embodiments, while prevailing intelligent systems grapple with interference stemming from non-human movements, SrcSense adeptly identifies a spectrum of non-human subjects, by leveraging a robust, environment-, location-, and direction-agnostic statistic, A-ACF, as the input of deep neural networks. Rigorous experiments conducted in diverse settings with an array of subjects scrutinize the performance of prominent deep learning models and the effectiveness of transfer learning. The disclosed evaluation results not only affirm the system's capability of motion source recognition with high accuracy in challenging scenarios but also offer insights into selecting appropriate deep learning models and transferring computer vision models for WiFi sensing tasks.

The following numbered clauses provide examples for wireless intrusion detection.

Clause 3818_C1. A system for wireless intrusion detection, comprising: a transmitter configured to transmit a wireless signal through a wireless channel of a venue; a receiver configured to receive the wireless signal through the wireless channel of the venue, wherein the received wireless signal differs from the transmitted wireless signal due to the wireless channel and a motion of an object when the object is in the venue; and a processor configured to: obtain a time series of channel information (TSCI) of the wireless channel based on the received wireless signal, compute a plurality of autocorrelation functions based on the TSCI, each autocorrelation function (ACF) computed based on CI of the TSCI in a sliding time window, generate rearranged ACF data based on the plurality of autocorrelation functions, extract motion features from the rearranged ACF data using a deep learning model, generate a classification result using a long short-term memory (LSTM) neural network based on the extracted motion features, and determine whether there is presence of an intrusion in the venue based on the classification result.

Clause 3818_C2. The system of clause 3818_C1, wherein the processor is configured to generate the rearranged ACF data based at least partially by: constructing at least one ACF vector, wherein each respective ACF vector is a vector associated with a respective ACF comprising multiple vector elements each associated with a respective time lag, each vector element being a value of the respective ACF evaluated at the respective time lag; and rearranging the at least one ACF vector into rearranged ACF data, wherein each ACF vector is a one-dimensional (1D) ACF-block.

Clause 3818_C3. The system of clause 3818_C2, wherein the processor is configured to generate the classification result based at least partially by: obtaining probability values generated from current and past rearranged ACF data based on the motion features; and inputting the probability values into the LSTM neural network.

Clause 3818_C4. The system of clause 3818_C3, wherein: the LSTM neural network comprises a plurality of LSTM units; and each of the plurality of LSTM units is a cell with a memory state, an input gate, an output gate and a forget gate.

Clause 3818_C5. The system of clause 3818_C4, wherein the processor is further configured to: generate a tuning dataset including motion segments from at least one unseen subject in a new environment; and fine-tune a residual block and a fully connected layer in the deep learning model using the tuning dataset based on few-shot learning to generate a tuned deep learning model.

Clause 3818_C6. The system of clause 3818_C5, wherein the processor is configured to generate the classification result based at least partially by: updating the motion features using the tuned deep learning model; and inputting the updated motion features into the LSTM neural network to generate the classification result.

Clause 3818_C7. A method for wireless intrusion detection, comprising: transmitting a wireless signal by a transmitter through a wireless channel of a venue; receiving the wireless signal by a receiver through the wireless channel of the venue, wherein the received wireless signal differs from the transmitted wireless signal due to the wireless channel and a motion of an object when the object is in the venue; obtaining a time series of channel information (TSCI) of the wireless channel based on the received wireless signal; computing a plurality of autocorrelation functions based on the TSCI, each autocorrelation function (ACF) computed based on CI of the TSCI in a sliding time window; generating rearranged ACF data based on the plurality of autocorrelation functions; extracting motion features from the rearranged ACF data using a deep learning model; generating a classification result using a long short-term memory (LSTM) neural network based on the extracted motion features; and determining whether there is presence of an intrusion in the venue based on the classification result.

Clause 3818_C8. A device for wireless intrusion detection, comprising: a receiver configured to receive a wireless signal from a transmitter through a wireless channel of a venue, wherein the received wireless signal differs from the transmitted wireless signal due to the wireless channel and a motion of an object when the object is in the venue; and a processor configured to: obtain a time series of channel information (TSCI) of the wireless channel based on the received wireless signal, compute a plurality of autocorrelation functions based on the TSCI, each autocorrelation function (ACF) computed based on CI of the TSCI in a sliding time window, generate rearranged ACF data based on the plurality of autocorrelation functions, extract motion features from the rearranged ACF data using a deep learning model, generate a classification result using a long short-term memory (LSTM) neural network based on the extracted motion features, and determine whether there is presence of an intrusion in the venue based on the classification result.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A method for wireless sensing, comprising:

   obtaining channel information (CI) data generated based on at least one wireless channel;
   generating a training dataset based on the CI data, wherein the training dataset comprises: a plurality of CI pairs, original CI data and a mask;
   training a foundation model using the training dataset at least in part by:

      determining a contrastive loss function based on a first similarity metric between CI data of each CI pair in the training dataset,
      determining a reconstruction loss function based on a second similarity metric between the original CI data and predicted CI data generated based on the mask,
      determining a total loss function based on an aggregate of the contrastive loss function and the reconstruction loss function, and
      determining model parameters of the foundation model to minimize the total loss function;

   training a plurality of task-specific models; and
   performing a plurality of wireless sensing tasks based on the foundation model and the plurality of task-specific models, wherein each of the plurality of task-specific models is used to perform a corresponding one of the plurality of wireless sensing tasks together with the foundation model.

2. The method of claim 1, wherein obtaining the CI data comprises:

   determining a plurality of device pairs in at least one venue, wherein each of the plurality of device pairs is formed by a transmitter and a receiver;
   for each of the plurality of device pairs:

      transmitting a wireless signal by the transmitter through a wireless channel,
      receiving the wireless signal by the receiver, wherein the received wireless signal differs from the transmitted wireless signal due to the wireless channel and any sensing event in the at least one venue,
      obtaining a time series of channel information (TSCI) of the wireless channel based on the received wireless signal; and

   obtaining the CI data based on all TSCI obtained for the plurality of device pairs.

3. The method of claim 1 or claim 2, wherein generating the training dataset comprises:

processing the CI data to generate preprocessed CI data according to a standardized format readable by the foundation model;

performing a data augmentation on preprocessed CI in the preprocessed CI data to generate augmented CI, wherein the plurality of CI pairs comprises:

a positive CI pair formed by a preprocessed CI and its associated augmented CI,
a positive CI pair formed by two preprocessed CI,
a positive CI pair formed by two augmented CI,
a negative CI pair formed by two CI obtained from two different wireless channels,
a negative CI pair formed by two CI obtained from two different venues,
a negative CI pair formed by two CI associated with two different sensing events.

4. The method of claim 3, wherein processing the CI data comprises:

selecting subcarriers for at least one CI in the CI data to generate a same number of subcarriers for all CI in the CI data according to the standardized format; and
resampling each CI in the CI data to a predetermined temporal rate according to the standardized format.

5. The method of claim 3 or claim 4, wherein performing the data augmentation comprises:

adding random noise to the preprocessed CI;
randomizing the selected subcarriers within a block;
performing a time scaling or a time warping on the preprocessed CI;
simulating at least one environmental parameter related to multi-path change or occlusion; and
normalizing amplitudes of the preprocessed CI to mitigate power variation.

6. The method of any previous claim, wherein determining the contrastive loss function comprises:

mapping each CI in the training dataset to a corresponding embedding point in an embedding space using the foundation model;
for each CI pair comprising two CI in the training dataset, generating a distance score between two embedding points corresponding to the two CI of the CI pair based on the first similarity metric, wherein:

the distance score is smaller when the CI pair is a positive CI pair,
the distance score is larger when the CI pair is a negative CI pair; and

determining the contrastive loss function based on the distance score.

7. The method of any previous claim, wherein determining the reconstruction loss function comprises:

generating masked CI data at least in part by applying the mask to the original CI data to remove at least one portion of the original CI data along a time dimension or a subcarrier dimension;
generating the predicted CI data based on the masked CI data using the foundation model;
generating an error function between the original CI data and the predicted CI data based on the second similarity metric; and
determining the reconstruction loss function based on the error function.

8. The method of any previous claim, wherein:

the aggregate of the contrastive loss function and the reconstruction loss function comprises a weighted combination of the contrastive loss function and the reconstruction loss function; and
weights used in the weighted combination are included in the model parameters of the foundation model and are adjusted during the training to minimize the total loss function through an iterative back propagation process.

9. The method of any previous claim, wherein training the plurality of task-specific models comprises at least one of:

freezing all model parameters of the foundation model during the training of the plurality of task-specific models;
fine-tuning all model parameters of the foundation model based on at least one task-specific prediction loss during the training of the plurality of task-specific models; or
during the training of the plurality of task-specific models:

freezing model parameters of an upstream layer of the foundation model, and
fine-tuning model parameters of a downstream layer of the foundation model, wherein each of the plurality of task-specific models is a downstream model compared to the foundation model.

10. The method of any previous claim, wherein performing the plurality of wireless sensing tasks comprises:

generating a feature map using the foundation model based on CI data collected in real-time; and
inputting the feature map to the plurality of task-specific models perform the plurality of wireless sensing tasks respectively.

11. The method of any previous claim, wherein performing the plurality of wireless sensing tasks comprises:

collecting real-time CI data from multiple wireless links for at least one task of the plurality of wireless sensing tasks; and
for each task of the at least one task:

generating, using the foundation model, a plurality of feature maps each based on real-time CI data collected from a corresponding one of the multiple wireless links,
generating a fused feature map at least in part by fusing the plurality of feature maps along a subcarrier dimension or according to an index of each of the multiple wireless links, and
inputting the fused feature map into a task-specific model corresponding to the task to generate a decision result for the task.

12. The method of any previous claim, wherein performing the plurality of wireless sensing tasks comprises:

collecting real-time CI data from multiple wireless links for at least one task of the plurality of wireless sensing tasks; and
for each task of the at least one task:

generating, using the foundation model, a plurality of feature maps each based on real-time CI data collected from a corresponding one of the multiple wireless links,
inputting each of the plurality of feature maps into a task-specific model corresponding to the task to generate a candidate decision result for the task, and
fusing all candidate decision results generated for the task based on a fusion model to generate a final decision result for the task.

13. The method of any previous claim, wherein:

the foundation model is trained based on self-supervised machine learning without labelled data;
each of the plurality of task-specific models is trained based on labelled data;
the training dataset is generated by a local device and transmitted from the local device to a cloud server;
the foundation model and the plurality of task-specific models are trained by the cloud server; and
performing the plurality of wireless sensing tasks comprises:

collecting and processing real-time CI data by at least one local device to generate processed real-time CI data,
determining, by the at least one local device, whether a triggering event happens based on the processed real-time CI data,
in accordance with a determination that the triggering event happens, transmitting an immediate past portion of the processed real-time CI data within an immediate past time period from the at least one local device to the cloud server, and
performing, by the cloud server, a wireless sensing task corresponding to the triggering event based on the immediate past portion of the processed real-time CI data using the foundation model and a task-specific model corresponding to the wireless sensing task.

**14.** A system for wireless sensing, comprising:

at least one local device configured to:

obtain channel information (CI) data generated based on at least one wireless channel,
generate a training dataset based on the CI data, wherein the training dataset comprises: a plurality of CI pairs, original CI data and a mask; and

a cloud server configured to:

train a foundation model using the training dataset at least in part by:

determining a contrastive loss function based on a first similarity metric between CI data of each CI pair in the training dataset,
determining a reconstruction loss function based on a second similarity metric between the original CI data and predicted CI data generated based on the mask,
determining a total loss function based on an aggregate of the contrastive loss function and the reconstruction loss function, and
determining model parameters of the foundation model to minimize the total loss function, and

train a plurality of task-specific models,

wherein the at least one local device and the cloud server are further configured to perform a plurality of wireless sensing tasks based on the foundation model and the plurality of task-specific models,
wherein each of the plurality of task-specific models is used to perform a corresponding one of the plurality of wireless sensing tasks together with the foundation model.

**15.** A device for wireless sensing, comprising:

at least one processor; and
at least one memory storing instructions, which when executed, cause the at least one processor to perform operations comprising:

obtaining channel information (CI) data generated based on at least one wireless channel,
generating a training dataset based on the CI data, wherein the training dataset comprises: a plurality of CI pairs, original CI data and a mask,
training a foundation model using the training dataset at least in part by:

determining a contrastive loss function based on a first similarity metric between CI data of each CI pair in the training dataset,
determining a reconstruction loss function based on a second similarity metric between the original CI data and predicted CI data generated based on the mask,
determining a total loss function based on an aggregate of the contrastive loss function and the reconstruction loss function, and
determining model parameters of the foundation model to minimize the total loss function, training a plurality of task-specific models, and

performing a plurality of wireless sensing tasks based on the foundation model and the plurality of task-specific models, wherein each of the plurality of task-specific models is used to perform a corresponding one of the plurality of wireless sensing tasks together with the foundation model.

100

**FIG. 1**

**FIG. 2**

<u>300</u>

**FIG. 3**

**FIG. 4**

**FIG. 5**

FIG. 6

700

Input ← - - - - - - - - - Ideally they
are identical - - - - - - - - → Reconstructed
input

710

720

730

740

750

X → Encoder → z → Decoder → X'

**FIG. 7**

800

| Input | | | | | 801 | Mask | 802 | Output | | | | | 803 |
|---|---|---|---|---|---|---|---|---|---|---|---|---|---|

| Input 801 | | | | |
|---|---|---|---|---|
| 0 | 0 | 0 | 0 | 0 |
| Value | Value | Value | Value | Value |
| Value | Value | Value | Value | Value |

Mask 802

| |
|---|
| 0 |
| 1 |
| 1 |

| Output 803 | | | | |
|---|---|---|---|---|
| 0 | 0 | 0 | 0 | 0 |
| Value2 | Value2 | Value2 | Value2 | Value2 |
| Value2 | Value2 | Value2 | Value2 | Value2 |

Loss is only calculated between the Value and the Value2

**FIG. 8**

900

910
Obtain channel information (CI) data generated based on at least one wireless channel

920
Generate a training dataset based on the CI data, the training dataset comprising: a plurality of CI pairs, original CI data and a mask

930
Train a foundation model using the training dataset:

932
Determine a contrastive loss function based on a first similarity metric between CI data of each CI pair in the training dataset

934
Determine a reconstruction loss function based on a second similarity metric between the original CI data and predicted CI data generated based on the mask

936
Determine a total loss function based on an aggregate of the contrastive loss function and the reconstruction loss function

938
Determine model parameters of the foundation model to minimize the total loss function

940
Train a plurality of task-specific models

950
Perform a plurality of wireless sensing tasks based on the foundation model and the plurality of task-specific models, each of the plurality of task-specific models being used to perform a corresponding one of the plurality of wireless sensing tasks together with the foundation model

**FIG. 9**

**FIG. 10**

**FIG. 11**

1200

| Obtain a radio signal that is transmitted from a Type 1 device to a Type 2 device through a wireless channel of a venue, the received radio signal differs from the transmitted radio signal due to the wireless channel impacted by a target motion of an object in the venue | 1202 |

↓

| Obtain a time series of channel information (TSCI) of the wireless channel based on the received radio signal | 1204 |

↓

| Capture an auxiliary signal in the venue by a sensor, where the auxiliary signal is not a radio signal and is impacted by the target motion of the object | 1206 |

↓

| Obtain a time series of auxiliary samples (TSAS) based on the captured auxiliary signal | 1208 |

↓

| Compute a radio-based motion information (RMI) based on the TSCI | 1210 |

↓

| Compute an aux-based motion information (AMI) based on the TSAS | 1212 |

↓

| Monitor the target motion jointly based on the RMI and AMI | 1214 |

**FIG. 12**

**FIG. 13**

**EP 4 745 613 A1**

**FIG. 14**

237

<u>1500</u>

| Communicatively couple a particular device with a first device through a first wireless channel based on a first protocol using a first radio of the particular device | 1502 |

| Communicatively couple the particular device with a second device through a second wireless channel based on a second protocol using a second radio of the particular device | 1504 |

| Perform a pairwise sub-task by the particular device and the second device based on a wireless signal communicated between the particular device and the second device through the second wireless channel using the second radio of the particular device | 1506 |

| Obtain by the particular device a pairwise sensing analytics computed based on a time series of channel information (TSCI) of the second wireless channel extracted from the wireless signal | 1508 |

| Compute a combined sensing analytics by the particular device based on the pairwise sensing analytics | 1510 |

| Transmit the combined sensing analytics by the particular device to the first device through the first wireless channel using the first radio of the particular device | 1512 |

| Perform a wireless sensing task based on the combined sensing analytics | 1514 |

**FIG. 15**

FIG. 16

1700

| Obtain wireless signals each transmitted from a respective Type 1 device to a respective Type 2 device through a respective wireless channel in a same venue, where the wireless channels are impacted by a motion of an object in the venue | 1702 |

| Obtain a plurality of time series of channel information (TSCI) of the wireless channels in the venue, where each TSCI is obtained based on a respective one of the wireless signals | 1704 |

| Compute a plurality of time series of motion statistics (TSMS) associated with the motion of the object, where each TSMS is computed based on at least one respective TSCI | 1706 |

| Compute a mapping function for each TSMS based on a respective characteristics of the TSMS | 1708 |

| Process each TSMS with the respective mapping function | 1710 |

| Present the plurality of processed TSMS on a presentation device of a user | 1712 |

**FIG. 17**

<u>1800</u>

```
┌─────────────────────────────────────────────────────────────────┐
│ Configure an access-point (AP) device of a wireless network      │ ⟋ 1802
│ based on a wireless protocol by a first particular client device │
│ of the wireless network to perform a sensing-by-proxy            │
│ (SBP) procedure selectively                                      │
└─────────────────────────────────────────────────────────────────┘
                              │
                              ▼
┌─────────────────────────────────────────────────────────────────┐
│ Configure the first particular client device as a SBP-initiator  │ ⟋ 1804
│ device for the SBP procedure                                     │
└─────────────────────────────────────────────────────────────────┘
                              │
                              ▼
┌─────────────────────────────────────────────────────────────────┐
│ Configure the AP device as a SBP-responder device for the SBP    │ ⟋ 1806
│ procedure                                                        │
└─────────────────────────────────────────────────────────────────┘
                              │
                              ▼
┌─────────────────────────────────────────────────────────────────┐
│ Perform the SBP procedure selectively by the AP device based on  │ ⟋ 1808
│ the wireless protocol by configuring, on behalf of the first     │
│ particular client device, a number of second particular client   │
│ devices of the wireless network to perform a wireless sensing    │
│ procedure, where the AP device functions as a sensing-initiator  │
│ device and all the second particular client devices function as  │
│ sensing-responder devices in the wireless sensing procedure      │
└─────────────────────────────────────────────────────────────────┘
```

**FIG. 18**

**FIG. 19**

2000

Group a set of heterogeneous wireless devices in a venue into multiple wireless networks including: a first wireless network associated with a first set of network settings, and a second wireless network associated with a second set of network settings different from the first set of network settings, the set of heterogeneous wireless devices comprising: a first device in the first wireless network, a second device in the second wireless network, and a first particular device configured to operate in the first wireless network associated with the first set of network settings — 2010

Obtain the second set of network settings by the first particular device — 2020

Inform the first device in the first wireless network of the second set of network settings, by the first particular device under the first set of network settings — 2030

Transmit an inter-network wireless signal by the first device to the second device through an inter-network wireless channel under the second set of network settings — 2040

(A)

**FIG. 20**

2100

```
                                              ( A )
                                               │
                                               ▼
┌──────────────┐            ┌──────────────────────────────────────┐
│              │            │ Obtain a raw sensing measurement of  │ ⟋ 2110
│              │            │ the an inter-network wireless channel│
│              │            │ based on the inter-network wireless  │
│              │            │ signal                               │
│              │            └──────────────────────────────────────┘
│              │                           │
│              │                           ▼
│  ⟋2102       │            ┌──────────────────────────────────────┐
│ ┌──────────┐ │            │ Compute a pairwise sensing result    │ ⟋ 2120
│ │Optional  │ │            │ based on the raw sensing measurement │
│ │Intra     │ │            └──────────────────────────────────────┘
│ │Network   │ │                           │
│ │Sounding  │ │                           ▼
│ └──────────┘ │            ┌──────────────────────────────────────┐
│       └──────┼──────────▶ │ Compute a combined sensing result    │ ⟋ 2130
│              │            │ based on the pairwise sensing result │
└──────────────┘            └──────────────────────────────────────┘
                                           │
                                           ▼
                            ┌──────────────────────────────────────┐
                            │ Perform a wireless sensing task based │ ⟋ 2140
                            │ on the combined sensing result        │
                            └──────────────────────────────────────┘
```

**FIG. 21**

2200

| | |
|---|---|
| Associate a plurality of Type1 devices in a venue with a Type2 device in the venue, the Type2 device having a plurality of coded addresses each of which is associated with a respective Type1 device | 2210 |
| Transmit, by the Type2 device, a plurality of time series of wireless trigger signals through a wireless channel in the venue to the plurality of Type1 devices to trigger wireless sounding, where each respective time series of wireless trigger signals is transmitted to a respective Type1 device with a coded address of the Type2 device associated with the respective Type1 device, where the coded address is embedded as a source address in each wireless trigger signal of the respective time series of wireless trigger signals | 2220 |
| Transmit, by each Type1 device in response to each respective wireless trigger signal, a respective wireless sounding signal to the Type2 device with a respective associated coded address of the Type2 device, wherein the respective associated coded address is embedded as a destination address in the wireless sounding signal | 2230 |
| Receive, by the Type2 device, a plurality of wireless sounding signals from the plurality of Type1 devices addressed to any of the coded addresses of the Type2 device | 2240 |

B

**FIG. 22A**

B

For each received wireless sounding signal: — 2250

Obtain, by a processor of the Type2 device, a respective channel information (CI) of the wireless channel in the venue based on the received wireless sounding signal — 2252

Compare, by the processor, a received coded address of the Type2 device embedded as a destination address in the received wireless sounding signal with the plurality of coded addresses stored in a database — 2254

Identify, by the processor, a respective Type1 device, whose associated stored coded address of the Type2 device matching the received coded address, as an originating device of the received wireless sounding signal and the respective CI — 2256

Assemble, by the processor, a plurality of time series of CI (TSCI) associated with the plurality of Type1 devices, wherein each TSCI associated with a respective Type1 device comprises all CI originated from the respective Type1 device — 2260

Perform, by the processor, a wireless sensing task based on the plurality of TSCI associated with the plurality of Type1 devices — 2270

**FIG. 22B**

**FIG. 23**

2400

**FIG. 24**

**FIG. 25A**

**FIG. 25B**

**FIG. 26A**

FIG. 26B

2700
2710
Receive a wireless signal transmitted by a transmitter through a wireless multipath channel of the venue, where the received wireless signal differs from the transmitted wireless signal due to the wireless multipath channel and a motion of an object in the venue

2720
Obtain a time series of channel information (TSCI) of the wireless multipath channel based on the received wireless signal, where each channel information (CI) comprises N1 CI components (CIC)

2730
For each respective CI having N1 CIC of the TSCI, compute a respective enhanced CI (ECI) having N2 CIC:

2732
Compute a transformation of the N1 CIC of the respective CI in a first domain to a respective transformed CI (TCI) with N2 transformed CIC (TCIC) in a second domain, wherein N1<=N2

2734
Select a respective number, N3, of TCIC of the TCI, wherein N3<=N2 for any N3, wherein N1, N2 and N3 are all positive integers

2736
Compute an emphasized TCI (ETCI) having N2 TCIC by emphasizing the respective N3 selected TCIC of the TCI in the second domain

2738
Compute an inverse transformation of the ETCI from the second domain to the first domain to obtain the respective ECI with N2 CIC, wherein the inverse transformation is an inverse of the transformation

2740
Compute a motion information (MI) based on the ECI of the TSCI

2750
Perform a sensing task based on the MI

**FIG. 27**

2800

FIG. 28

2900

2910

Identify a respective particular TCIC of the respective CI with a dominant characteristics among the multiple TCIC of the respective CI

2920

Perform a search for the respective particular TCIC of the respective CI among the TCIC of the respective CI within a search range of TCIC indices (the search range of TCIC indices may comprise a neighborhood around another TCIC index associated with an additional particular TCIC, if available)

2930

Select the respective number of selected TCIC for the respective CI as a number of neighboring TCIC of the respective particular TCIC

**FIG. 29**

3000

3010

Emphasize each of the respective N3 selected TCIC of the TCI in the second domain by scaling with a respective scaling factor greater than or equal to one, or adding a respective non-negative offset

3020

De-emphasize each of the respective remaining N2-N3 un-selected TCIC of the TCI in the second domain by scaling with a respective scaling factor less than or equal to one, or adding a respective non-positive offset

**FIG. 30**

FIG. 31A

A

3102

Compute a joint MI based on all of the combined MI

3103

Perform the sensing task based on the joint MI, the number of combined MI, and any individual MI

3104

Compute a location associated with the object and the motion of the object based on any of: any TSCI, enhanced CI of any TSCI, the joint MI, the number of combined MI and any individual MI, where the location is computed based on any of: support vector machine (SVM), kernel-based SVM, neural network (NN), deep neural network (DN), convolutional NN (CNN), recurrent NN (RNN), long short-term memory network (LSTM), deep belief network (DBN), denoising autoencoder (DAE), generative adversarial network (GAN), transformer, neural radiance field, radial basis function network, multilayer perceptron (MLP), or self organizing map (SOM)

**FIG. 31B**

3200

FIG. 32

3300

3310

Obtain more than one TSCI of the wireless multipath channel based on the received wireless signal, each TSCI associated with a respective spatial diversity associated with a respective antenna link between the transmitter and the receiver

3320

Compute a spatially-diverse vector by concatenating respective N2 CIC of multiple contemporaneous enhanced CI of the more than one TSCI

3330

Process the spatially-diverse vector by one of: principal component analysis (PCA), eigen-decomposition, singular value decomposition (SVD), or independent component analysis (ICA)

3340

Compute a significant vector and an associated characteristic value based on the processing

3350

Compute the spatial-domain analytics by computing a variational characteristics of the significant vector or the characteristic value, where the variational characteristics comprise at least one of: variance, standard deviation, dispersion, divergence, absolute deviation, range, total variation, total deviation, spread, entropy, regularity measure, or variance-to-mean ratio

**FIG. 33**

**FIG. 34**

**FIG. 35**

**FIG. 36**

---

**Algorithm 1** Algorithm for ID-CAM generation.

1: $I_o \rightarrow$ d-ACF input of size $R \times C$.
2: $D \sim \mathcal{N}(\mu, \sigma) \rightarrow$ 2D distortion mask of size $m_h \times m_w$, where $1 \leq m_h \leq R, 1 \leq m_w \leq C$.
3: $\Omega = \{(a, b), a \in \{1, 2, ..., R\}, b \in \{1, 2, ..., C\}\}$.
4: $p_{fo} \rightarrow$ output fall probability with input $I_o$.
5: $N \rightarrow$ Number of iterations.
6: **for** $i = 1 : N$ **do**
7:     $\theta \rightarrow$ random selection from $\{1, 2, 3, 4, 5\}$.
8:     $I_i = I_o$ (copy of $I_o$), $C_i \rightarrow$ zeros of size $R \times C$.
9:     $\phi = \{(\alpha_j, \beta_j) \in \Omega, j = 1, 2, ..\theta\}$ {random selection}
10:     **for** $j = 1 : \theta$ **do**
11:         $I_i[\alpha_j : \alpha_j + m_h, \beta_j : \beta_j + m_w] = D$.
12:     **end for**
13:     $p_{fi} \rightarrow$ output fall probability with input $I_i$.
14:     $p_{di} = p_{fo} - p_{fi}$.
15:     **for** $j = 1 : \theta$ **do**
16:         $C_i[\alpha_j : \alpha_j + m_h, \beta_j : \beta_j + m_w] = p_{di}$
17:     **end for**
18: **end for**
19: $ID - CAM(I_o) = \frac{1}{N} \sum_{i=1}^{N} C_i$.

---

**FIG. 37**

<u>3800</u>

3810

In a probing phase of a system:

3811

Obtain a plurality of raw measurement data by a sensing device of the system

3812

Process the plurality of raw measurement data by a processor of the system to construct a plurality of input data for a classifier

3813

Perform a classification by the processor using the classifier by inputting each of the plurality of input data to the classifier

3814

Compute a plurality of output analytics by the classifier based on the plurality of input data, each output analytics computed by the classifier based on a respective input data

3815

Map the plurality of output analytics to a plurality of mapped outcome, each output analytics mapped to a respective mapped outcome

3816

Identify at least one reference input data each associated with a reference output analytics and a reference mapped outcome, each reference input data being one of the plurality of input data for which a respective reference outcome is available and is different from the reference mapped outcome

3817

Generate zero, one or more selected perturbed input data for each reference input data for the classifier

3820

In a re-training phase of the system: re-train the classifier based on each of the zero, one or more selected perturbed input data and the associated reference outcome

## FIG. 38

3900 ⌐3910

For each reference input data for the classifier: ⌐3911

Construct a respective plurality of perturbed input data for the classifier by perturbing the reference input data, each perturbed input data constructed based on a respective perturbation of the reference input data

⌐3912

Perform the classification using the classifier by inputting each of the plurality of perturbed input data to the classifier

⌐3913

Compute a respective plurality of perturbed output analytics by the classifier based on the plurality of perturbed input data, each perturbed output analytics computed by the classifier based on a respective perturbed input data

⌐3914

Map the plurality of perturbed output analytics to a plurality of perturbed mapped outcome, each perturbed output analytics mapped to a respective perturbed mapped outcome

⌐3915

Compare each perturbed mapped outcome with the reference outcome associated with the reference input data which is different from the reference mapped outcome

⌐3916

When at least one perturbed mapped outcome deviates from the reference mapped outcome such that it is the same as the reference outcome, select at least one selected perturbed input data each being one of the respective plurality of perturbed input data associated with one of the at least one perturbed mapped outcome as selected perturbed input data for re-training the classifier

**FIG. 39**

4000

4010

For a particular reference input data for the classifier in the probing phase:

4012

Construct a number of perturbed input data by perturbing the particular reference input data with an increasing degree of perturbation

4014

select a particular selected perturbed input data from the number of perturbed input data, where the particular selected perturbed input data has a minimum degree of perturbation to the particular reference input data such that the associated perturbed mapped outcome is the same as a particular reference outcome associated with the particular reference input data

**FIG. 40**

4100

| 4110 |
| --- |
| For a reference input data for the classifier in the probing phase: select, based on a particular selected perturbed input data, at least one supplementary selected perturbed input data that is in a neighborhood of the particular selected perturbed input data |

| 4120 |
| --- |
| In the re-training phase: re-train the classifier further based on the at least one supplementary selected perturbed input data |

**FIG. 41**

4200

4210

Construct each input data for the classifier as a k-dimensional (k-D) matrix

4220

Construct each perturbed input data as a k-dimensional matrix with a same size as the input data

**FIG. 42**

4300

4310

For each reference input data comprising a set of components, construct each perturbed input data for the classifier based on the reference input data:

4312

Mark a respective subset of the components of the reference input data to generate a respective subset of marked components

4314

Modify the respective subset of marked components of the reference input data to construct the respective perturbed input data

**FIG. 43**

4400

4410

Modify a respective marked component of the reference input data by at least one of:

4412

Replace the respective marked component by zero

4414

Scale a magnitude of the respective marked component

4416

Add an additive distortion to the respective marked component

**FIG. 44**

4500

4510

Modify a respective marked component of the reference input data by at least one of:

4512

Add an additive noise to the respective marked component

4514

Add an additive distortion scaled by a scaling factor to the respective marked component, the additive distortion being associated with a perturbation type and the scaling factor being associated with a perturbation size

**FIG. 45**

4600

```
                                                                                    4610
┌─────────────────────────────────────────────────────────────────────────────────┐
│                                                                                   │
│              Randomly select a component of the reference input data              │
│                                                                                   │
└─────────────────────────────────────────────────────────────────────────────────┘
                                          │
                                          ▼
                                                                                    4620
┌─────────────────────────────────────────────────────────────────────────────────┐
│   Select a respective number of neighboring components in the reference input     │
│   data near the randomly selected component to be included in the respective      │
│   subset of marked components                                                     │
└─────────────────────────────────────────────────────────────────────────────────┘
```

**FIG. 46**

4700

4710

4720

**FIG. 47**

FIG. 48

**FIG. 49**

**FIG. 50A**

**FIG. 50B**

**FIG. 50C**

<u>5100</u>

5102
Transmit a wireless signal by a transmitting device through a wireless channel in a vehicle

5104
Receive the wireless signal by a receiving device in the vehicle, where the received wireless signal differs from the transmitted wireless signal due to the wireless channel and a motion of a user in the vehicle

5106
Obtain a time series of channel information (TSCI) of the wireless channel based on the received wireless signal

5108
Compute a motion statistics (MS) based on N5 channel information (CI) of the TSCI in a time period

5110
Detect the motion of the user in the time period by comparing the motion statistics with a first threshold, where the motion of the user is detected when the motion statistics exceed the first threshold

5112
For each of N9 sliding time windows in the time period, compute a respective 1-dimensional (1D) transform of CI of the TSCI in the sliding time window associated with a respective time stamp

5114
Construct a 2-dimensional (2D) transform matrix by assembling and concatenating the N9 1D transforms as columns of the 2D transform matrix in an increasing order of the associated time stamps

5116
Detect a number of horizontal streaks of the 2D transform matrix

A

**FIG. 51A**

5100

Ⓐ

5118

Detect a breathing motion of the user in the time period based on the number of detected horizontal streaks of the 2D transform matrix and an associated criterion

5120

Compute an oscillation confidence score (CS), a dynamic time warping (DTW) CS and a peak CS based on the 2D transform matrix

5122

Compute a combined CS (CCS) as a first aggregate of the oscillation CS, the DTW CS and the peak CS

5124

Compute a final confidence score (FCS) as a moving second aggregate of the CCS and a number of temporally adjacent CCS associated with adjacent time periods of the time period

5126

Reject any detection of the breathing motion in the time period when the FCS is less than a second threshold

5128

Detect a presence of the user in the time period when: (a) the motion of the user is detected or (b) the breathing motion of the user is detected and not rejected

5130

When the presence of the user is detected, determine whether the user is a child or an adult based on the TSCI and a classifier, where the classifier comprises: a convolutional neural network (CNN) followed by a fully-connected network (FCN) with input data including (1) a first plurality of 2D input matrices constructed from magnitudes of the TSCI alone without phases and (2) a second plurality of 2D input matrices constructed from phases of the TSCI alone without magnitudes

**FIG. 51B**

5200

5210

Compute an oscillation confidence score (CS) by:

5212

Computing an oscillation rate (OR) in a transform domain by counting zero-crossings of the columns of the 2D transform matrix

5214

Using a first mapping function to map the OR to the oscillation CS

5220

Compute a dynamic time warping (DTW) CS by:

5222

Computing a DTW cost by applying DTW to the columns of the 2D transform matrix

5224

Using a second mapping function to map the DTW cost to the DTW CS

5230

Compute a peak CS by:

5232

Computing a streak count of the number of detected horizontal streaks of the 2D transform matrix

5234

Using a third mapping function to map the streak count to the peak CS

**FIG. 52**

<u>5300</u>

┌─ 5310
Find local maxima in each of the columns of the 2D transform matrix

┌─ 5320
Conditionally connect the local maxima horizontally to form horizontal or near-horizontal streaks, where a first local maximum of a first column and a second local maximum of a second column adjacent to the first column are connected to form a horizontal or near-horizontal streak when the two conditions are met:

┌─ 5322
An absolute difference between a first transform index of the first local maximum and a second transform index of the second local maximum is less than a third threshold

┌─ 5324
Both values of the first local maximum of the 1D transform in the first column and the second local maximum of the 1D transform in the second column are greater than a fourth threshold

**FIG. 53**

5400

5410

For each respective horizontal streak of the number of horizontal streaks of the 2D transform matrix:

5412

Compute a representative magnitude, the representative magnitude being a fourth aggregate of magnitudes of transform values along the respective horizontal streak

5414

Identify a representative transform index associated with the representative magnitude, the representative transform index being a fifth aggregate of transform indices of transform values along the respective horizontal streak

5420

Compute a minimum transform index among the number of representative transform indices

5430

Compare the minimum representative transform index with an acceptable range, where the breathing motion of the user is detected when the minimum representative transform index is within the acceptable range and when the representative magnitude associated with the minimum representative transform index is greater than a fifth threshold

B

**FIG. 54A**

5400

B

5440

Compute a streak length associated with each horizontal streak of the 2D transform matrix by counting an amount of values in the horizontal streak

5450

Remove a horizontal streak if its associated streak length is less than a seventh threshold

5460

Compute a greatest common factor (GCF) of the number of remaining representative transform indices

5470

Compare the GCF to the acceptable range, where: the breathing motion of the user is detected when the GCF is within the acceptable range and when each representative magnitude is greater than a sixth threshold,

**FIG. 54B**

5500

5510

Subtract from each 1D transform, which is a respective column of the 2D transform matrix, a respective mean of the 1D transform to generate a respective mean-subtracted 1D transform, where the mean of the 1D transform is a moving weighted average of the 1D transform in the transform domain

5520

Compute N9 per-column zero-crossing counts based on the 2D transform matrix, each per-column zero-crossing count being an amount of zero-crossings of a respective mean-subtracted 1D transform

5530

Compute the oscillation rate in the transform domain as a sixth aggregate of the N9 per-column zero-crossing counts, where any aggregate comprises at least one of: an average, a weighted average, a percentile, a median (50-percentile), a minimum (0-percentile), a maximum (100-percentile), a lower quartile (25-percentile), an upper quartile (75-percentile), a trimmed mean, an A1-to-A2 trimmed mean which is an average of all percentile from A1-percentile to A2-percentile, a 0-to-A2 trimmed mean, a A1-to-100 trimmed mean, a 30-to-70 trimmed mean, a 20-to-45 trimmed mean, a 60-to-90 trimmed mean, a 25-to-50 trimmed mean, a 50-to-75 trimmed mean, a 0-to-25 trimmed mean, a 75-to-100 trimmed mean, an arithmetic mean, a geometric mean, or a harmonic mean

**FIG. 55**

5600

5610

Compare each of the N9 columns of the 2D transform matrix, which are the N9 1D transform, with a reference vector, which is a reference 1D transform obtained by applying 1D transform to training CI of a training TSCI in a training phase

5620

Compute N9 per-column DTW costs associated with the N9 columns of the 2D transform matrix, each per-column DTW cost computed by applying DTW between a respective column of the 2D transform matrix and the reference vector

5630

Compute the DTW cost as a seventh aggregate of the N9 per-column DTW costs, where: the number of temporally adjacent CCS used to compute the FCS comprises: one, two, three or more immediate past CCS, and all of the oscillation CS, the DTW CS, the peak CS, the CCS and the FCS take values from a same range of real numbers from L1 to L2

**FIG. 56**

<u>5700</u>

5710

Obtain N1 TSCI based on the received wireless signal, where: the transmitting device has N7 transmit antennas, the receiving device has N8 receive antennas, N1=N7*N8, each of the N1 TSCI is associated with a respective one of the N7 transmit antennas and a respective one of the N8 receive antennas, each CI of any TSCI comprises N4 CI components (CIC)

5720

Construct N1 2D matrices, each having N4xN5 elements, as the first plurality of 2D input matrices to the CNN in the time period, where: each of the N1 2D matrices is associated with a respective one of the N1 TSCI, each of the N4xN5 elements of each of the N1 2D matrices is a magnitude of a respective one of the N4 CIC of a respective one of the N5 CI of a respective TSCI in the time period

5730

Compute N6 2D matrices, each having N4xN5 elements, as the second plurality of 2D input matrices to the CNN based on phase differences between corresponding pairs of CIC in pairs of TSCI in the time period, where: each of the N6 2D matrices is associated with a respective one of N6 pairs of TSCI selected from the N1 TSCI, each of the N4xN5 elements of each of the N6 2D matrices is the phase difference of a pair of CIC from two different TSCI, which is a difference of phases of a respective one of the N4 CIC of a respective one of the N5 CI of a respective pair of TSCI in the time period

**FIG. 57**

5800

5810

Feed (N1+N6) 2D matrices, each having N4xN5 elements, as a plurality of input 2D matrices to a first layer of the CNN

5820

For each of N2 convolutional layers of the CNN associated with multiple respective 2D convolution filters:

5822

For each of the multiple respective 2D convolution filters:

5824

Apply the respective 2D convolution filter to each of the plurality of input 2D matrices to generate a set of per-filter output 2D matrices

5826

Down-sample each of the set of per-filter output 2D matrices, based on max-pooling and a down-sampling factor

5828

Feed the multiple sets of down-sampled per-filter output 2D matrices associated with the multiple respective 2D convolutional filters as a plurality of input 2D matrices to a next convolutional layer of the CNN

Ⓒ

**FIG. 58A**

5800

C

5830

Flatten and concatenate the multiple sets of down-sampled per-filter output 2D matrices of a last layer of the CNN to form a 1D output vector

5840

Feed the 1D output vector as input to a first layer of the FCN, where the FCN comprises N3 fully-connected layers

5850

Generate a number of output probability scores by the FCN, one for each class of output, where: the number of output probability scores comprise: a child-present output probability score for a "child present" class, and an adult-present output probability score for an "adult present" class, and the presence of a child being the user when: the child-present output probability score is greater than the adult-present output probability score and greater than an eighth threshold

**FIG. 58B**

5900

| | 5902 |
|---|---|
| Transmit a wireless signal by a transmitting device through a wireless channel in a venue | |

| | 5904 |
|---|---|
| Receive the wireless signal by a receiving device in the venue, where the received wireless signal differs from the transmitted wireless signal due to the wireless channel and a motion of a user in the venue | |

| | 5906 |
|---|---|
| Obtain a time series of channel information (TSCI) of the wireless channel based on the received wireless signal | |

| | 5908 |
|---|---|
| Compute a motion statistics (MS) based on N5 channel information (CI) of the TSCI in a time period | |

| | 5910 |
|---|---|
| Detect the motion of the user in the time period by comparing the motion statistics with a first threshold, where the motion of user is detected in the time period when the motion statistics exceeds the first threshold | |

| | 5912 |
|---|---|
| Segment the time period into a plurality of time fragments | |

(D)

**FIG. 59A**

5900

D

For each of N9 sliding time windows in each time fragment, compute a respective 1-dimensional (1D) K-point transform of CI of the TSCI in the sliding time window associated with a respective time stamp ⌐5914

Construct a 2-dimensional (2D) transform matrix of size KxN9 for each time fragment based on the N9 1D K-point transform ⌐5916

Input the 2D transform matrix for each time fragment into an intrusion detection network ⌐5918

Use the intrusion detection network to detect human action and nonhuman action in the time fragment based on the 2D transform matrix ⌐5920

**FIG. 59B**

6000

| 6002 |
| --- |
| Input the 2D transform matrix to the CNN |

↓

| 6004 |
| --- |
| Compute by the CNN multiple features of the 2D transform matrix based on the 2D transform matrix |

↓

| 6006 |
| --- |
| Output the multiple features of the 2D transform matrix by the CNN as intermediate output of the intrusion detection network |

↓

| 6008 |
| --- |
| Rearrange the multiple features of the 2D transform matrix output by the CNN based on an input format of the RNN |

↓

| 6010 |
| --- |
| Input the multiple rearranged features of the 2D transform matrix to the RNN |

↓

| 6012 |
| --- |
| Compute and output at least one output by the RNN based on the multiple rearranged features of the 2D transform matrix |

**FIG. 60**

6100

6102

Compute and output an output score for each output class by the RNN

6104

Output by the RNN a "human-present" output score for an "human present" output class and a "nonhuman-present" output score for a "nonhuman present" output class, where human presence is detected in the time period when human-present output score is greater than the nonhuman-present output score

6106

Output by the RNN a "user-absent" output score for a "user-absent" output class, where any human presence in the time period is rejected when user-absent output score is greater than the human–present output score

6108

Detect a presence of an intruder in the time period when (a) user motion is detected, and (b) human presence is detected and not rejected

6110

Detect an absence of an intruder in the time period when (a) user motion is not detected, or (b) nonhuman presence is detected, or (c) human presence is detected but rejected

**FIG. 61**

**FIG. 62**

**FIG. 63**

**FIG. 64**

6500

**FIG. 65**

6600

6610

Assemble a k1-dimensional (k1-D) imaging matrix by a processor based on arranging and concatenating a plurality of k2-dimensional (k2-D) input imaging matrices

6620

Encode the k1-D imaging matrix by an encoder, which is a k1-D encoding neural network, to generate a (k1+k3)-D first intermediate matrix

6630

Generate a (k2+k3)-D second intermediate matrix based on the (k1+k3)-D first intermediate matrix

6640

Decode the (k2+k3)-D second intermediate matrix by a decoder, which is a k2-D decoding neural network, to generate a k2-D output imaging matrix, where at least one skip connection is between the encoder and the decoder, and an imaging resolution of the k2-D output imaging matrix is greater than the imaging resolution of any one of the plurality of k2-D input imaging matrices

**FIG. 66**

6700
6710

Determine a (k1+k3)-D expanded matrix by adding k3 expanded dimensions to k1 original dimensions of the k1-D imaging matrix, where a size of the (k1+k3)-D expanded matrix is 1 in each of the k3 expanded dimensions, the encoder comprises L1 layers, each associated with multiple convolution filters, the (k1+k3)-D expanded matrix is a (k1+k3)-D layer-1 input matrix to a layer 1 of the encoder, the first layer of the L1 layers of the encoder

6720

For each n between 1 and L1:

6722

For each respective convolution filter of the convolution filters associated with layer n of the encoder:

Filter a (k1+k3)-D layer-n input matrix with the respective convolution filter to generate a respective (k1+k3)-D layer-n per-filter output matrix
6724

Down-sample the respective (k1+k3)-D layer-n per-filter output matrix in at least one of the k1 original dimensions with max-pooling
6726

6728

Concatenate all of the (k1+k3)-D layer-n per-filter output matrices to form a (k1+k3)-D layer-n output matrix which is also a layer-(n+1) input matrix, where: a size of the layer-n output matrix in each of the k1 original dimensions is smaller than or equal to a size of a corresponding original dimension of the layer-n input matrix, a size of the layer-n output matrix in each of the k3 expanded dimensions is greater than or equal to a size of a corresponding expanded dimension of the layer-n input matrix, the (k1+k3)-D first intermediate matrix is the layer-(L1) output matrix, and a size of the (k1+k3)-D first intermediate matrix is 1 in each of the k1 original dimensions

**FIG. 67**

6800

6810

Remove (k1-k2) of the k1 original dimensions of the (k1+k3)-D first intermediate matrix to generate the (k2+k3)-D second intermediate matrix, where: the decoder comprises L2 layers, each associated with multiple de-convolution filters, the (k2+k3)-D second intermediate matrix is a (k2+k3)-D layer-(L1+1) input matrix to a layer 1 of the decoder, the first layer of the L2 layers of the decoder

6820

For each m between 1 and L2:

6822

Up-sample a (k2+k3)-D layer-(L1+m) input matrix in at least one of the remaining k2 original dimensions to generate a (k2+k3)-D layer-(L1+m) up-sampled input matrix

6824

For each respective de-convolution filter of the multiple de-convolution filters associated with layer m of the decoder, filter the (k2+k3)-D layer-(L1+m) up-sampled input matrix with the respective de-convolution filter to generate a respective (k2+k3)-D layer-(L1+m) per-filter output matrix

6826

Combine and concatenate all of the (k2+k3)-D layer-(L1+m) per-filter output matrices to form a (k2+k3)-D layer-(L1+m) output matrix which is also a layer-(L1+m+1) input matrix, where: a size of the layer-(L1+m) output matrix in each of the remaining k2 original dimensions is greater than or equal to a size of a corresponding original dimension of the layer-(L1+m) input matrix, a size of the layer-(L1+m) output matrix in each of the k3 expanded dimensions is less than or equal to a size of a corresponding expanded dimension of the layer-(L1+m) input matrix

6830

Remove the k3 expanded dimensions of the layer-(L1+L2) output matrix to generate the k2-D output imaging matrix

**FIG. 68**

6900

6910

Process a m1-n1 skip connection, which is a skip connection between layer m1 of the encoder and layer n1 of the decoder, with 1<=m1<=L1, 1<=n1<=L2, where the m1-n1 skip connection is processed based on:

6912

Adjusting the (k1+k3)-D layer-(m1) output matrix of the encoder to generate a (k2+k3)-D adjusted layer-(m1) output matrix of the encoder, where the (k2+k3)-D adjusted layer-(m1) output matrix has a same dimension and a same size as the (k2+k3)-D layer-(L1+n1) output matrix of the decoder

6914

Computing a temporary output matrix as a weighted average of the (k2+k3)-D adjusted layer-(m1) output matrix of the encoder and the (k2+k3)-D layer-(L1+n1) output matrix of the decoder

6916

Replacing the (k2+k3)-D layer-(L1+n1+1) input matrix of the decoder by the temporary output matrix

**FIG. 69**

7000

| 7002 |
| --- |
| Transmit a time series of wireless sounding signals by a transmitting device with a first system configuration of the transmitting device and a first placement of the transmitting device in a venue |

| 7004 |
| --- |
| Receive the time series of wireless sounding signals by a receiving device with a second system configuration of the receiving device and a second placement of the receiving device through a wireless channel of the venue, where each received wireless sounding signal differs from the transmitted wireless sounding signal due to the wireless channel and a motion of an object in the venue |

| 7006 |
| --- |
| Obtain a time series of channel information (TSCI) by the receiving device based on the time series of received wireless sounding signals |

| 7008 |
| --- |
| Compute a task-specific CI-quality score associated with a quality of the TSCI in relation to a wireless sensing task based on the TSCI |

| 7010 |
| --- |
| Perform a task-specific qualification test of the TSCI based on the task-specific CI-quality score to qualify or disqualify the TSCI obtained from a wireless link between the transmitting device and the receiving device for the wireless sensing task |

| 7012 |
| --- |
| When the TSCI is qualified, perform the wireless sensing task based on the qualified TSCI |

**FIG. 70**

7100

7102

When no TSCI is qualified, adjust the first system configuration of the transmitting device, the first placement of the transmitting device in the venue, the second system configuration of the receiving device, and the second placement of the receiving device in the venue based on the CI-quality score of all disqualified TSCI

7104

Transmit a second wireless sounding signal by the transmitting device with the adjusted first system configuration and the adjusted first placement of the transmitting device

7106

Receive the second wireless sounding signal by the receiving device with the adjusted second system configuration and the adjusted second placement of the receiving device through the wireless channel of the venue, where the received wireless sounding signal differs from the transmitted wireless sounding signal due to the wireless channel and the motion of the object in the venue

7108

Obtain a second TSCI by the receiving device based on the received second wireless sounding signal

(A)

**FIG. 71A**

7100

(A)

┌─────────────────────────────────────────────────────────────────────────────┐ 7110
│ Compute a second task-specific CI-quality score associated with the quality of the second TSCI in relation to the │
│ wireless sensing task based on the second TSCI │
└─────────────────────────────────────────────────────────────────────────────┘

┌─────────────────────────────────────────────────────────────────────────────┐ 7112
│ Perform the task-specific qualification test of the second TSCI based on the second task-specific CI-quality score │
│ to qualify or disqualify the second TSCI for the wireless sensing task │
└─────────────────────────────────────────────────────────────────────────────┘

┌─────────────────────────────────────────────────────────────────────────────┐ 7114
│ When the second TSCI is not qualified, repeat the iterative adjustment and task-specific qualification until a │
│ qualified second TSCI is obtained or a time out is reached │
└─────────────────────────────────────────────────────────────────────────────┘

┌─────────────────────────────────────────────────────────────────────────────┐ 7116
│ When the second TSCI is qualified, perform the wireless sensing task based on the qualified second TSCI │
└─────────────────────────────────────────────────────────────────────────────┘

**FIG. 71B**

7200

7202

Compute a plurality of instantaneous inter-CI durations in a sliding time window based on the TSCI, each inter-CI duration being computed by subtracting time stamps of a respective pair of temporally adjacent CI of the TSCI in the sliding time window

7204

Compute an effective sounding rate (ESR) for the sliding time window based on the plurality of instantaneous inter-CI durations, by computing one of the following: a first aggregate of an inverse of instantaneous inter-CI duration, where the inverse of instantaneous inter-CI duration is an instantaneous rate; or an inverse of a second aggregate of the plurality of instantaneous inter-CI durations

7206

Compare the ESR with a task-specific reference sounding rate of the wireless sensing task, where the time series of wireless sounding signals are configured to be transmitted by the transmitting device at uniform time intervals at the task-specific reference sounding rate

7208

Compute a task-specific CI-timing rate score for the wireless sensing task based on the ESR and the task-specific reference sounding rate of the wireless sensing task

**FIG. 72**

<u>7300</u>

7310

Compute a CI-timing variation based on the plurality of instantaneous inter-CI durations for the sliding time window, where the CI-timing variation comprise an effective variation (EV)

7312

Compute a first CI-timing variation as an EV of the instantaneous inter-CI durations

7314

Compute a second CI-timing variation as an EV of the instantaneous rate, where the instantaneous rate is an inverse of the instantaneous inter-CI duration

7316

Compute a third CI-timing variation as a task-specific deviation of instantaneous rate from the task-specific reference sounding rate which is a monotonic non-decreasing function of the absolute difference between the instantaneous rate and the reference sounding rate, where the instantaneous rate is an inverse of the instantaneous inter-CI duration

7318

Compute a fourth CI-timing variation as a task-specific deviation of instantaneous inter-CI duration from a task-specific reference inter-CI duration which is a monotonic non-decreasing function of the absolute difference between the instantaneous inter-CI duration and the task-specific reference inter-CI duration, where the reference inter-CI duration is an inverse of the reference sounding rate

7320

Compute a CI-timing regularity score for the wireless sensing task based on the CI-timing variation

**FIG. 73**

7400

┌─────────────────────────────────────────────────────────────────────────────┐ 7402
│ Compute a first plurality of CI-timing variations based on the plurality of   │
│ instantaneous inter-CI durations for the sliding time window                  │
└─────────────────────────────────────────────────────────────────────────────┘

┌─────────────────────────────────────────────────────────────────────────────┐ 7404
│ Compute another CI-timing variation as an aggregate of the first plurality of │
│ CI-timing variations                                                          │
└─────────────────────────────────────────────────────────────────────────────┘

┌─────────────────────────────────────────────────────────────────────────────┐ 7406
│ Compute a second plurality of CI-timing variations based on a number of       │
│ concurrent sliding time windows each with respective durations, each CI-timing│
│ variation computed based on a respective concurrent sliding time window with  │
│ respective duration                                                           │
└─────────────────────────────────────────────────────────────────────────────┘

┌─────────────────────────────────────────────────────────────────────────────┐ 7408
│ Compute another CI-timing variation as an aggregate of the second plurality of│
│ CI-timing variations, where: the number of concurrent sliding time windows    │
│ share a common time stamp, the another CI-timing variation is associated with │
│ the common time stamp, and at least two concurrent sliding time windows have  │
│ different durations                                                           │
└─────────────────────────────────────────────────────────────────────────────┘

**FIG. 74**

7500

Compute a CI-amplitude variation as an EV of a magnitude of each CI of the TSCI in the sliding time window, where: each CI comprises N1 components, each CI is represented as a vector with the N1 components, the magnitude of each CI is a function of an L-k norm of the vector of the CI, with k being a positive integer ⌐7502

Compute a CI-amplitude regularity score based on the CI-amplitude variation ⌐7504

Cluster the CI of the TSCI in the N1-D vector space to obtain a set of clusters ⌐7506

Identify the largest cluster with a largest cluster size among the set of clusters ⌐7508

Identify the second largest cluster with a second largest cluster size among the set of clusters ⌐7510

Compute a CI-amplitude clustering feature as a quotient of the cluster size of the second largest cluster over the cluster size of the largest cluster ⌐7512

Compute a CI-amplitude clustering score based on the CI-amplitude clustering feature ⌐7514

Compute a CI-amplitude score as an aggregate of the CI-amplitude regularity score and the CI-amplitude clustering score ⌐7516

**FIG. 75**

**FIG. 76**

7700

Position Estimator

MS queue — $\alpha$

PF queue — $\beta$

SF queue — $\gamma$

features

Temporal Distance Maximum Likelihood Estimation

Weighted feature distance likelihood

Location index

Location signatures

**FIG. 77**

7800

FIG. 78

7900

**FIG. 79**

FIG. 80

8110

8120

**FIG. 81**

8200

**FIG. 82**

**FIG. 83**

8400

8410
┌─────────────────────────────────────────────────────────────────────────┐
│ Transmit, by at least one transmitter, a wireless signal through a wireless channel of a venue │
└─────────────────────────────────────────────────────────────────────────┘

8420
┌─────────────────────────────────────────────────────────────────────────┐
│ Receive, by a receiver, the wireless signal through the wireless channel of the venue, the received wireless │
│ signal being different from the transmitted wireless signal due to the wireless channel and a motion of an │
│ object in the venue, where neither the at least one transmitter nor the receiver moves with the object │
└─────────────────────────────────────────────────────────────────────────┘

8430
┌─────────────────────────────────────────────────────────────────────────┐
│ Obtain a time series of channel information (TSCI) of the wireless channel in a time window, the TSCI │
│ generated based on the received wireless signal │
└─────────────────────────────────────────────────────────────────────────┘

8440
┌─────────────────────────────────────────────────────────────────────────┐
│ Generate a plurality of features based on the TSCI over the time window, the plurality of features including │
│ at least: a proximity metric (PM) feature, a motion statistics (MS) feature, and a spatial feature │
└─────────────────────────────────────────────────────────────────────────┘

8450
┌─────────────────────────────────────────────────────────────────────────┐
│ Obtain a signature map of the venue from a database, each location on the signature map being assigned │
│ one or more location signatures representing unique features associated with the location when there is │
│ any object at the location │
└─────────────────────────────────────────────────────────────────────────┘

8460
┌─────────────────────────────────────────────────────────────────────────┐
│ Identify, for each time stamp in the time window, an estimated location of the object in the venue based on │
│ the signature map and the plurality of features │
└─────────────────────────────────────────────────────────────────────────┘

8470
┌─────────────────────────────────────────────────────────────────────────┐
│ Generate a trajectory of the object in the venue over the time window based on the estimated locations of │
│ the object │
└─────────────────────────────────────────────────────────────────────────┘

**FIG. 84**

**FIG. 85**

**FIG. 86**

8710    8720    8730

**FIG. 87**

FIG. 88

FIG. 89

FIG. 90

9100

9110 9120 9140

$ms$(t) → | Split Data | *Split* $ms$(t) → | DL Detection Module (per link) | → | Link Combiner | → | Transition Module |

| State |

$mm$(t) → | Time | *Split* $mm$(t) →

9130

1D CNN Based Detector

Link Combiner

Human Presence    Non-Presence

Transition Module

**FIG. 91**

9200

Offline data collection and training

9210

FIG. 92

**FIG. 93**

**FIG. 94**

9500
                                                                                    ⌐9510
| Transmit, by each of a plurality of transmitters, a respective wireless signal through a wireless channel of a venue |

                                                                                    ⌐9520
| Receive, by a receiver, the respective wireless signal from each of the plurality of transmitters through the wireless channel of the venue, the received wireless signal being different from the transmitted wireless signal due to the wireless channel and a motion of a user when the user is present in the venue |

                                                                                    ⌐9530
| Obtain a plurality of time series of channel information (TSCI) of the wireless channel, each of the plurality of TSCI generated based on the received wireless signal from a respective transmitter of the plurality of transmitters |

                                                                                    ⌐9540
| Compute a plurality of autocorrelation function (ACF) segments based on the plurality of TSCI, each of the plurality of ACF segments computed based on CI of a respective TSCI of the plurality of TSCI |

                                                                                    ⌐9550
| Generate a plurality of feature maps using a first deep learning model that is shared by the plurality of ACF segments, each of the plurality of ACF segments input into the first deep learning model individually to generate a respective feature map of the plurality of feature maps |

                                                                                    ⌐9560
| Input the plurality of feature maps together into a second deep learning model to generate an aggregate representation that is independent of a quantity and locations of the plurality of transmitters |

                                                                                    ⌐9570
| Compute a probability of user presence based on the aggregate representation |

                                                                                    ⌐9580
| Detect a presence of the user in the venue based on a threshold and the probability of user presence |

**FIG. 95**

<u>9600</u>

9610
Form a plurality of links each of which corresponds to a respective transmitter of a plurality of transmitters in a venue and a respective receiver of at least one receiver in the venue

9620
For each link of the plurality of links, transmit a respective wireless signal by the respective transmitter through a wireless channel of the venue

9630
For each link of the plurality of links, receive the respective wireless signal by the respective receiver through the wireless channel of the venue, the received wireless signal being different from the transmitted wireless signal due to the wireless channel and a motion of a user when the user is present in the venue

9640
Obtain a plurality of time series of channel information (TSCI) of the wireless channel, each of the plurality of TSCI generated based on the received wireless signal transmitted in a respective link of the plurality of links

9650
Generate, for each link of the plurality of links, motion statistics (MS) data and micro motion (MM) data based on a corresponding TSCI of the plurality of TSCI

9660
Input, for each link of the plurality of links, the MS data and the MM data into a respective deep learning model, different links corresponding to different deep learning models

9670
Collect outputs of all deep learning models corresponding to the plurality of links

9680
Detect a presence of the user in the venue based on the outputs

**FIG. 96**

9700

**FIG. 97**

EP 4 745 613 A1

**FIG. 98**

331

**FIG. 99**

10000

**FIG. 100**

Europäisches
Patentamt

European
Patent Office

Office européen
des brevets

# EUROPEAN SEARCH REPORT

**Application Number**

EP 25 21 6473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | STYLIANOS E. TREVLAKIS ET AL: "Localization as a key enabler of 6G wireless systems: A comprehensive survey and an outlook", ARXIV.ORG CORNELL UNIVERSITY LIBRARY, 201 OLIN LIBRARY CORNELL UNIVERSITY ITHACA, NY 14853, 4 February 2023 (2023-02-04), XP091434553, * page 17, paragraph IV.F * * page 35, left-hand column, paragraph VII.B.7) - right-hand column * | 1,2,6-10 | INV. G01S7/00 G01S13/76 G01S13/82 |
| Y | TIAGO BARROS ET AL: "Place recognition survey: An update on deep learning approaches", ARXIV.ORG CORNELL UNIVERSITY LIBRARY, 201 OLIN LIBRARY CORNELL UNIVERSITY ITHACA, NY 14853, 22 June 2021 (2021-06-22), XP081992162, * abstract * * paragraph [0001] * * paragraph [IV.B.1]; figure 6 * | 1,6-10 | |
| Y | LI BING ET AL: "Two-Stream Convolution Augmented Transformer for Human Activity Recognition", PROCEEDINGS OF THE AAAI CONFERENCE ON ARTIFICIAL INTELLIGENCE, vol. 35, no. 1, 18 May 2021 (2021-05-18), pages 286-293, XP093385946, ISSN: 2159-5399, DOI: 10.1609/aaai.v35i1.16103 * abstract * * page 288; figure 2 * | 2 | |

TECHNICAL FIELDS SEARCHED (IPC)

G01S

-/--

The present search report has been drawn up for all claims

| Place of search | Date of completion of the search | Examiner |
|---|---|---|
| Munich | 9 April 2026 | Cortona, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

**Application Number**

EP 25 21 6473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHENG BIYUN ET AL:  "CDFi: Cross-Domain Action Recognition Using WiFi Signals", IEEE TRANSACTIONS ON MOBILE COMPUTING. IEEE SERVICE CENTER, LOS ALAMITOS, CA., US, vol. 23, no. 8, 2 January 2024 (2024-01-02), pages 8463-8477, XP011974570, ISSN: 1536-1233, DOI: 10.1109/TMC.2023.3348939 [retrieved on 2024-01-02] * abstract * | 1-15 | |

TECHNICAL FIELDS
SEARCHED        (IPC)

The present search report has been drawn up for all claims

| Place of search | Date of completion of the search | Examiner |
|---|---|---|
| Munich | 9 April 2026 | Cortona, Anna |

page 2 of 2